(19) **Europäisches Patentamt / European Patent Office / Office européen des brevets**

(11) **EP 3 739 356 A1**

(12) **EUROPEAN PATENT APPLICATION**

(43) Date of publication:
**18.11.2020 Bulletin 2020/47**

(51) Int Cl.:
*G01S 7/41* (2006.01)  *G01S 13/62* (2006.01)
*G01S 13/66* (2006.01)  *G08B 13/24* (2006.01)
*G08B 21/04* (2006.01)  *G01S 13/46* (2006.01)

(21) Application number: **20174194.9**

(22) Date of filing: **12.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 12.05.2019 US 201962846686 P
12.05.2019 US 201962846688 P
18.05.2019 US 201962849853 P
28.06.2019 US 201962868782 P
22.02.2020 US 202062980206 P
22.02.2020 US 202016798337
22.02.2020 US 202016798343
10.05.2020 US 202016870996
10.05.2020 US 202016871000
10.05.2020 US 202016871004
10.05.2020 US 202016871006

(71) Applicant: **Origin Wireless, Inc.**
**Greenbelt, MD 20770 (US)**

(72) Inventors:
• WU, Chenshu
  Greenbelt, MD Maryland 20770 (US)
• ZHANG, Feng
  Greenbelt, MD Maryland 20770 (US)
• WANG, Beibei
  Clarksville, MD Maryland 21029 (US)
• FAN, Yusen
  Greenbelt, MD Maryland 20770 (US)
• LIU, K.J. Ray
  Potomac, MD Maryland 20854 (US)
• AU, Oscar Chim-Lim
  San Jose, CA California 95136 (US)
• WANG, Fengyu
  College Park, MD Maryland 20740 (US)
• REGANI, Sai Deepika
  Hyattsville, MD Maryland 20783 (US)
• BUGOS, Dan
  Washington, DC District of Columbia 20010 (US)
• SHIH, Chun-Chia Jack
  Hanover, MD Maryland 21076 (US)

(74) Representative: **Boult Wade Tennant LLP**
**Salisbury Square House**
**8 Salisbury Square**
**London EC4Y 8AP (GB)**

(54) **METHOD, APPARATUS, AND SYSTEM FOR WIRELESS TRACKING, SCANNING AND MONITORING**

(57)    Methods, apparatus and systems for wireless tracking with graph-based particle filtering are described. A described wireless monitoring system comprises a transmitter transmitting a series of probe signals, a receiver, and a processor. The receiver is configured for: receiving the series of probe signals modulated by the wireless multipath channel and an object moving in a venue, and obtaining a time series of channel information (TSCI) of the wireless multipath channel from the series of probe signals. The processor is configured for: monitoring a motion of the object relative to a map based on the TSCI, determining an incremental distance travelled by the object in an incremental time period based on the TSCI, and computing a next location of the object at a next time in the map based on at least one of: a current location of the object at a current time, the incremental distance, and a direction of the motion during the incremental time period.

FIG. 1

**Description**

**CROSS-REFERENCE TO RELATED APPLICATIONS**

The present application hereby incorporates by reference the entirety of the disclosures of, and claims priority to, each of the following cases:

(a) U.S. Provisional Patent application 62/846,686, entitled "METHOD, APPARATUS, AND SYSTEM FOR WIRELESS INERTIAL MEASUREMENT", filed on May 12, 2019,
(b) U.S. Provisional Patent application 62/980,206, entitled "METHOD, APPARATUS, AND SYSTEM FOR WIRELESS SENSING", filed on February 22, 2020,
(c) U.S. Provisional Patent application 62/849,853, entitled "METHOD, APPARATUS, AND SYSTEM FOR WIRELESS ARTIFICIAL INTELLIGENT IN SMART CAR", filed on May 18, 2019,
(d) U.S. Provisional Patent application 62/846,688, entitled "METHOD, APPARATUS, AND SYSTEM FOR PROCESSING AND PRESENTING LIFE LOG BASED ON A WIRELESS SIGNAL", filed on May 12, 2019,
(e) U.S. Provisional Patent application 62/868,782, entitled "METHOD, APPARATUS, AND SYSTEM FOR VITAL SIGNS MONITORING USING HIGH FREQUENCY WIRELESS SIGNALS", filed on June 28, 2019,
(f) U.S. Patent application 16/798,337, entitled "METHOD, APPARATUS, AND SYSTEM FOR WIRELESS OBJECT SCANNING", filed February 22, 2020,
(g) U.S. Patent application 16/798,343, entitled "METHOD, APPARATUS, AND SYSTEM FOR WIRELESS OBJECT TRACKING", filed February 22, 2020,
(h) U.S. Patent application 16/870,996, entitled "METHOD, APPARATUS, AND SYSTEM FOR WIRELESS INERTIAL MEASUREMENT", filed May 10, 2020,
(i) U.S. Patent application 16/871,000, entitled "METHOD, APPARATUS, AND SYSTEM FOR WIRELESS TRACKING WITH GRAPH-BASED PARTICLE FILTERING", filed May 10, 2020,
(j) U.S. Patent application 16/871,004, entitled "METHOD, APPARATUS, AND SYSTEM FOR PEOPLE COUNTING AND RECOGNITION BASED ON RHYTHMIC MOTION MONITORING", filed May 10, 2020,
(k) U.S. Patent application 16/871,006, entitled "METHOD, APPARATUS, AND SYSTEM FOR VITAL SIGNS MONITORING USING HIGH FREQUENCY WIRELESS SIGNALS", filed May 10, 2020.

**TECHNICAL FIELD**

The present teaching generally relates to wireless object tracking and scanning, and wireless vital signs monitoring. More specifically, the present teaching relates to accurately tracking moving distance, heading direction, rotating angle, scanning objects, monitoring breathing rate, counting number of people, and identifying people based on wireless channel information in a rich-scattering environment.

**BACKGROUND**

Motion measurements are essential inputs for a range of applications such as robot navigation, indoor tracking, and mobile gaming, etc., and have been widely used in robots, drones, automotive, unmanned vehicles, various consumer electronics, and pretty much anything that moves. The mainstream technology has been using Inertial Measurement Units (IMUs) for motion tracking. The rise in demand of accurate and robust motion tracking, coupled with an increase in smart device production, has been driving the IMU market, which is projected to grow from $15.71 billion in 2016 to $21.74 billion by 2022. An improvement to motion measurements will profoundly impact a number of systems and applications.

Precise and robust motion measurement is non-trivial. The prevalent IMUs realized by sensors, e.g. accelerometers that measure linear acceleration, gyroscopes that calculate angular velocity, and magnetometers that report orientation, are well known to suffer from significant errors and drifts. For example, an accelerometer is hardly capable of measuring moving distance due to the noisy readings; a magnetometer does not report heading direction and is easily distorted by surrounding environments; while a gyroscope experiences considerable drifts introduced by integration especially in a long run. These limitations prevent many applications that require accurate motion processing, such as indoor tracking, virtual reality, and motion sensing games.

In recent years, radio signals are used to localize and track targets. But these systems can only track locations while suffering from significant common limitations that prohibit ubiquitous accurate inertial measurements. First, these systems all require one or more precisely installed APs (Access Points), as well as accurate information about their locations and/or orientations. A small error in the APs' geometry information will lead to large location errors. Second, these systems can only determine one or two of multiple motion parameters from successive location estimates. They do not directly measure multiple motion parameters, and cannot track in-place angular motion. Third, these systems face accuracy limitations dictated by frequency bandwidth, antenna amount, and synchronization errors on commercial off-the-shelf (COTS) WiFi, and degenerate or even fail in complex Non-Line-Of-Sight (NLOS) scenarios.

Wireless imaging based on radio frequency (RF) signals is a long-standing, challenging problem in the evolving community of wireless sensing. Given the ubiquity of wireless fidelity (WiFi), it is of particular interest to enable imaging using WiFi reflection signals, i.e., creating images of humans and objects without attaching any radio source to the target. It would enable pervasive human and object sensing with rich contexts, not only the location but also silhouette/shape, size, pose, etc., for new applications such as interactive gaming, pose estimation, exercise assessment, human recognition, etc., all in a privacy-preserving, lightweight and cost-effective way.

Despite advances in reusing WiFi devices for wireless sensing, such as activity sensing, gesture recognition, vital sign monitoring, etc., RF imaging faces significant challenges and remains unsolved. Prior works related to RF imaging on WiFi bands can track human motion and activities, map large obstacles, and detect malicious objects. But they require specialized hardware with large antennas unavailable on commodity radios or suffer from poor imaging quality. For example, when using WiFi radios with multiple antennas for object imaging, an existing system is inherently limited by WiFi signals at 2.4GHz/5GHz, and/or requires multiple specialized frequency-modulated continuous wave (FMCW) radars with relatively large arrays. Generally, the imaging capability of 2.4GHz/5GHz WiFi is fundamentally limited by narrow bandwidth, small antenna number, and large wavelength. While existing millimeter-wave (mmWave) systems can offer imaging with large lens radars and dedicated circuits, they are all specialized radars and not suitable for ubiquitous applications.

Over the past decade, indoor localization systems shift from an active device-based theme to a passive device-free manner, i.e. to localize and track a user without requiring her/him to carry or wear any device. Passive indoor localization can enable a wide range of applications that demand ubiquitous tracking of users' locations while not favoring/allowing a user to carry or wear a device. For example, it allows a smart television (TV) to localize users and intelligently rotate the viewing angle or turn on/off when users are coming/leaving. It would also enable an energy-efficient building to localize and count the occupants and adjust the heating and lighting accordingly. It can be used in a smart home to control the Internet of Things (IoT) devices in response to the users' locations. All of these applications would become more practical and attractive in natural indoor settings when multi-person localization is enabled.

Existing works focus on single target tracking and fail in the presence of multiple persons, mainly because the reflected signals from all targets as well as other objects in the environment are superimposed together. In addition, these works mainly focus on the tracking of a moving target and need cumbersome calibration to localize static objects. To achieve multi-person localization, many of past proposals resort to a dense deployment of many devices and/or prior training. Alternatively, a specialized hardware is built with many antennas in a quite large form factor. One existing system needs multiple receivers and assumes the knowledge of the number of persons. For all of these systems, the resolvability to disentangle the weak signals reflected off multiple targets is fundamentally limited by the antenna number and the system bandwidth.

Continuous monitoring of respiration as well as heart rate is critical for early detection and prevention of potentially fatal diseases. Current solutions usually require users to wear dedicated devices such as wrist-worn sensors or chest straps, which require to contact human body during the monitoring, making them less convenient and comfortable. With the rapid development of Internet of Things (IoT), wireless sensing has received increasing attention in recent years because of the ubiquitous deployment of wireless devices. It has been proved that the presence of human will affect wireless signal propagation, enabling the functionality of wirelessly monitoring human subjects by analyzing the electromagnetic (EM) wave.

Recent works of wireless human vital signs detection leverage the existing communication infrastructure (e.g. WiFi) to provide a pervasive, user-friendly and affordable solution for health status monitoring. Over the past decade, great efforts have been put into designing and testing different architectures for robust vital sign monitoring using off-the-shelf WiFi devices. However, due to the relative low carrier frequency of WiFi systems, the antenna number of 2.4/5GHz WiFi is small, rendering a low spatial resolution. Besides, the narrow bandwidth of WiFi systems results in a coarse range resolution (7.5 meters with bandwidth 20MHz). Therefore, when there are multiple users present, the received radio frequency (RF) signals are reflected by the multiple users and it is hard to extract the vital signs for each of them. Thus, most of works assume there is only one single person, or the breathing rates of different users are distinct. Moreover, since the RF signal is reflected by multiple scatters, the embedded heartbeat signal has extremely low signal-to-noise ratio (SNR). As such, it is extremely difficult, if possible, to use commodity WiFi to estimate the heart rate.

Human-centric sensing via wireless radio frequency (RF) has attracted an increasing interest for a range of Internet of Things (IoT) applications. Demands of accurate and passive awareness of the environment surge for many applications. For instance, a smart home can adjust the light and ventilation system based on occupancy level to improve energy efficiency. People recognition in smart homes enables user authentication for home security and privacy protection. Besides understanding the environment, monitoring the status of human in the environment also has received great attention, and respiration/breathing rate, serving as a significant vital sign, has been an important topic for RF sensing.

Compared with conventional methods that use dedicated sensors to monitor breathing rates, RF sensing provides contact-free solutions. The RF-based solutions can be classified into two categories, i.e., radar-based methods and WiFi-based methods. For radar-based methods, previous works have shown the potential of using millimeter wave (mmWave) or ultra-wideband (UWB) to monitor respiration rate as well as heart rate. Although these systems can achieve high accuracy, dedicated devices hinder their deployment. WiFi-based methods, on the contrary, can be easily deployed and have been studied in the past decade. Received signal strength (RSS) measured by a WiFi device has been used to measure the chest movement during breathing. However, the accuracy of respiration rate estimation degrades when the test subjects do not hold the device. Fine-grained channel state information (CSI) is more sensitive to the environment changes, which has been utilized to capture minute movements caused by respiration. However, due to the omni-directional propagation and narrow bandwidth of commonly used 2.4/5GHz WiFi, the received signal can be reflected from multiple humans in an indoor space. This makes it difficult to extract the vital signs of multiple humans from the reflected signal. Most of the existing works assume that there is only one person in the observation area or assume the respiration rates of different people are distinct and the number of people is known in advance.

## SUMMARY

The present teaching generally relates wireless tracking system. More specifically, the present teaching relates to accurately tracking moving distance, heading direction, and rotating angle based on wireless channel information in a rich-scattering environment. The present teaching also relates to measuring multiple parameters of object motions, namely moving distance, heading direction, and rotating angle in a rich-scattering environment, e.g. an indoor environment or urban metropolitan area, enclosed environment, underground environment, etc. The present teaching also relates to accurately tracking breathing/respiration rate of human being, and heart rate variability (HRV) based on wireless channel information in a rich-scattering environment.

In one embodiment, a wireless monitoring system is described. The wireless monitoring system comprises: a transmitter, a receiver, and a processor. The transmitter is configured for transmitting a series of probe signals in a venue through a wireless multipath channel. The receiver is configured for: receiving, through the wireless multipath channel between the transmitter and the receiver, the series of probe signals modulated by the wireless multipath channel and an object moving in the venue, and obtaining a time series of channel information (TSCI) of the wireless multipath channel from the series of probe signals modulated by the wireless multipath channel and the object. The processor is configured for: monitoring a motion of the object relative to a map based on the TSCI, determining an incremental distance travelled by the object in an incremental time period based on the TSCI, and computing a next location of the object at a next time in the map based on at least one of: a current location of the object at a current time, the incremental distance, and a direction of the motion during the incremental time period. According to various embodiments, the processor is physically coupled to at least one of the transmitter and the receiver.

In another embodiment, a method, implemented by a processor, a memory communicatively coupled with the processor, and a set of instructions stored in the memory to be executed by the processor, is described. The method comprises: obtaining a time series of channel information (TSCI) of a wireless multipath channel in a venue, wherein: the TSCI is extracted from a series of probe signals transmitted from a transmitter to a receiver through the wireless multipath channel, the series of probe signals are modulated by the wireless multipath channel and an object moving in the venue; monitoring a motion of the object relative to a map based on the TSCI; determining an incremental distance travelled by the object in an incremental time period based on the TSCI; and computing a next location of the object at a next time in the map based on at least one of: a current location of the object at a current time, the incremental distance, and a direction of the motion during the incremental time period.

In a different embodiment, a wireless monitoring system is described. The wireless monitoring system comprises: a transmitter, a plurality of heterogeneous receivers, and a processor. The transmitter is configured for transmitting a series of probe signals in a venue through a wireless multipath channel. Each of the plurality of heterogeneous receivers is configured for: receiving, through the wireless multipath channel, the series of probe signals modulated by the wireless multipath channel and a plurality of objects moving in the venue, and obtaining a time series of channel information (TSCI) of the wireless multipath channel from the series of probe signals modulated by the wireless multipath channel and the plurality of objects. The processor is configured for: monitoring motions of the plurality of objects relative to a map based on the TSCIs obtained by the plurality of heterogeneous receivers, determining a respective incremental distance travelled by each object in a respective incremental time period based on a respective TSCI, and computing a respective next location of the object at a respective next time in the map based on at least one of: a respective current location of the object at a respective current time, the respective incremental distance, and a respective direction of the respective motion of the object during the respective incremental time period. According to various embodiments, the processor is physically coupled to at least one of: the transmitter and the plurality of heterogeneous receivers.

In one embodiment, an object tracking system is described. The object tracking system comprises: a transmitter, a receiver, and a processor. The transmitter is configured for transmitting a wireless signal through a wireless multipath channel. The receiver is configured for: receiving the wireless signal through the wireless multipath channel, and extracting a plurality of time series of channel information (TSCI) of the wireless multipath channel from the wireless signal. Each of the plurality of TSCI is associated with an antenna of the transmitter and an antenna of the receiver. One of the transmitter and the receiver is a stationary device. The other one of the transmitter and the receiver is a moving device moving with an object. The processor is configured for: determining that a first channel information (CI) at a first time of a first TSCI associated with a first antenna of the moving device matches a second CI at a second time of a second TSCI associated with a second antenna of the moving device, wherein both the first TSCI and the second TSCI are associated with a particular antenna of the stationary device; computing at least one movement parameter of the moving device based on at least one of: the plurality of TSCI, a configuration of antennas of the moving device, a configuration of at least one antenna of the stationary device, a time difference between the first time and the second time, and a distance between the first antenna and the second antenna; computing a spatial-temporal information (STI) of the moving device based on at least one of: the at least one movement parameter, the first time, the second time, the configuration of antennas of the moving device, the configuration of at least one antenna of the stationary device, a past STI, and a past movement parameter, wherein at least one of the movement parameter and the STI is related to a current movement of the moving device; and tracking the object and the moving device based on the STI.

In another embodiment, a method, implemented by a processor, a memory communicatively coupled with the processor, and a set of instructions stored in the memory to be executed by the processor, is described. The method comprises: obtaining a plurality of time series of channel information (TSCI) of a wireless multipath channel, wherein: the plurality of TSCI are extracted from a wireless signal transmitted from a first wireless device to a second wireless device through the wireless multipath channel, each of the plurality of TSCI is associated with an antenna of the first wireless device and an antenna of the second wireless device, one of the first wireless device and the second wireless device is a stationary device, the other one of the first wireless device and the second wireless device is a moving device moving with an object; determining that a first channel information (CI) at a first time of a first TSCI associated with a first antenna of the moving device matches a second CI at a second time of a second TSCI associated with a second antenna of the moving device, wherein both the first TSCI and the second TSCI are associated with a same antenna of the stationary device; computing at least one movement parameter of the moving device based on at least one of: the plurality of TSCI, a configuration of antennas of the moving device, a configuration of at least one antenna of the stationary device, a time difference between the first time and the second time, and a distance between the first antenna and the second antenna; computing a spatial-temporal information (STI) of the moving device based on at least one of: the at least one movement parameter, the first time, the second time, the configuration of antennas of the moving device, the configuration of at least one antenna of the stationary device, a past STI, and a past movement parameter, wherein at least one of the movement parameter and the STI is related to a current movement of the moving device; and tracking at least one of the object and the moving device based on the STI.

In a different embodiment, an object tracking system is described. The object tracking system comprises: a transmitter, and a receiver that comprises a processor, a memory communicatively coupled with the processor, and a set of instructions stored in the memory to be executed by the processor. The transmitter is configured for transmitting a wireless signal through a wireless multipath channel. The receiver is configured for: receiving the wireless signal through the wireless multipath channel, extracting a plurality of time series of channel information (TSCI) of the wireless multipath channel from the wireless signal; wherein: each of the plurality of TSCI is associated with an antenna of the transmitter and an antenna of the receiver, one of the transmitter and the receiver is stationary, the other one of the transmitter and the receiver is a moving device moving with an object; determining that a first channel information (CI) at a first time of a first TSCI associated with a first antenna of the moving device matches a second CI at a second time of a second TSCI associated with a second antenna of the moving device, wherein both the first TSCI and the second TSCI are associated with a particular antenna of the stationary device; computing at least one movement parameter of the moving device based on at least one of: the plurality of TSCI, a configuration of antennas of the moving device, a configuration of at least one antenna of the stationary device, a time difference between the first time and the second time, and a distance between the first antenna and the second antenna; computing a spatial-temporal information (STI) of the moving device based on at least one of: the at least one movement parameter, the first time, the second time, the configuration of antennas of the moving device, the configuration of at least one antenna of the stationary device, a past STI, and a past movement parameter, wherein at least one of the movement parameter and the STI is related to a current movement of the moving device; and tracking at least one of the object and the moving device based on the STI.

In one embodiment, the present teaching relates to a super-resolution imaging system serving as a millimeter-wave camera on commodity 60GHz WiFi devices. A novel super-resolution imaging algorithm is proposed based on multiple signal classification (MUSIC) with joint transmitter smoothing. Experiments show that the disclosed system achieves remarkable imaging performance for both humans and everyday objects, comparable to that of dedicated depth sensors like Kinect, and can image a person behind a thin drywall.

In one embodiment, a wireless scanning system is described. The wireless scanning system comprises: a transmitter, a receiver, and a processor. The transmitter is configured for transmitting a first wireless signal using a

# EP 3 739 356 A1

plurality of transmit antennas towards an object in a venue through a wireless multipath channel of the venue. The receiver is configured for: receiving a second wireless signal using a plurality of receive antennas through the wireless multipath channel between the transmitter and the receiver. The second wireless signal differs from the first wireless signal due to the wireless multipath channel and a modulation of the first wireless signal by the object. The processor is configured for obtaining a set of channel information (CI) of the wireless multipath channel based on the second wireless signal received by the receiver, and computing an imaging of the object based on the set of CI. Each CI in the set is associated with a respective one of the plurality of transmit antennas and a respective one of the plurality of receive antennas. According to various embodiments, the processor is physically coupled to at least one of the transmitter and the receiver.

In another embodiment, a described apparatus for wireless scanning is in a venue where a transmitter and a receiver are located. The described apparatus comprises: a processor and at least one of the transmitter and the receiver. The transmitter is configured for transmitting a first wireless signal using a plurality of transmit antennas towards an object in a venue through a wireless multipath channel of the venue. The receiver is configured for receiving a second wireless signal using a plurality of receive antennas through the wireless multipath channel between the transmitter and the receiver. The second wireless signal differs from the first wireless signal due to the wireless multipath channel and a modulation of the first wireless signal by the object. The processor is configured for: obtaining a set of channel information (CI) of the wireless multipath channel based on the second wireless signal, wherein each CI in the set is associated with a respective one of the plurality of transmit antennas and a respective one of the plurality of receive antennas; and computing an imaging of the object based on the set of CI.

In one embodiment, the apparatus includes the receiver but not the transmitter. The receiver receives the second wireless signal and extracts the CI, e.g. a channel state information (CSI), for performing the object scanning. In another embodiment, the apparatus includes the transmitter but not the receiver. The CSI is extracted by the receiver and obtained by the processor for object scanning. In still another embodiment, the apparatus includes the transmitter but not the receiver. The CSI is extracted at the receiver that sends the CSI to the transmitter. The object scanning is performed at the transmitter.

In a different embodiment, a method, implemented by a processor, a memory communicatively coupled with the processor, and a set of instructions stored in the memory to be executed by the processor, is described. The method comprises: obtaining a set of channel information (CI) of a wireless multipath channel of a venue, wherein: a transmitter transmits a first wireless signal using a plurality of transmit antennas towards an object in a venue through the wireless multipath channel of the venue, a receiver receives a second wireless signal using a plurality of receive antennas through the wireless multipath channel and computes the set of CI of the wireless multipath channel based on the second wireless signal, and the second wireless signal differs from the first wireless signal due to the wireless multipath channel and a modulation of the first wireless signal by the object; and computing an imaging of the object based on the set of CI.

In one embodiment, the present teaching relates to a multi-person localization and tracking system using a single 802.11ad device. A high spatial resolution is achieved by performing digital beamforming on the antenna array of the 60 GHz chipsets. A multi-object detection algorithm and a robust clustering technique are utilized to locate and count multiple users. The disclosed system also recovers the moving trajectories by a continuous tracking algorithm. According to one embodiment, experiments on commodity off-the-shelf (COTS) 802.11ad radios demonstrate that the disclosed system achieves a median location error of 9.9 cm and 19.7 cm for dynamic and static targets respectively, with a people counting error $\leq 1$ for 97.8% of the time.

In one embodiment, a wireless tracking system is described. The wireless tracking system comprises: a transmitter, a receiver, and a processor. The transmitter is configured for transmitting a first wireless signal using a plurality of transmit antennas towards at least one object in a venue through a wireless multipath channel of the venue. The receiver is configured for: receiving a second wireless signal using a plurality of receive antennas through the wireless multipath channel between the transmitter and the receiver. The second wireless signal differs from the first wireless signal due to the wireless multipath channel and a modulation of the first wireless signal by the at least one object. The processor is configured for obtaining a set of channel information (CI) of the wireless multipath channel based on the second wireless signal received by the receiver, and tracking the at least one object simultaneously based on the set of CI. Each CI in the set is associated with a respective one of the plurality of transmit antennas and a respective one of the plurality of receive antennas. According to various embodiments, the processor is physically coupled to at least one of the transmitter and the receiver.

In another embodiment, a described apparatus for wireless tracking is in a venue where a transmitter and a receiver are located. The described apparatus comprises: a processor and at least one of the transmitter and the receiver. The transmitter is configured for transmitting a first wireless signal using a plurality of transmit antennas towards at least one object in the venue through a wireless multipath channel of the venue. The receiver is configured for receiving a second wireless signal using a plurality of receive antennas through the wireless multipath channel between the transmitter and the receiver. The second wireless signal differs from the first wireless signal due to the wireless multipath channel and a modulation of the first wireless signal by the at least one object. The processor is configured for: obtaining a set of channel information (CI) of the wireless multipath channel based on the second wireless signal, wherein each CI in the set is associated with a respective one of the plurality of transmit antennas and a respective one of the plurality of receive antennas; and tracking the at least one object simultaneously based on the set of CI.

In one embodiment, the apparatus includes the receiver but not the transmitter. The receiver receives the second wireless signal and extracts the CI, e.g. a channel state information (CSI), for performing the object tracking. In another embodiment, the apparatus includes the transmitter but not the receiver. The CSI is extracted by the receiver and obtained by the processor for object tracking. In still another embodiment, the apparatus includes the transmitter but not the receiver. The CSI is extracted at the receiver that sends the CSI to the transmitter. The object tracking is performed at the transmitter.

In a different embodiment, a method, implemented by a processor, a memory communicatively coupled with the processor, and a set of instructions stored in the memory to be executed by the processor, is described. The method comprises: obtaining a set of channel information (CI) of a wireless multipath channel of a venue, wherein: a transmitter transmits a first wireless signal using a plurality of transmit antennas towards at least one object in a venue through the wireless multipath channel of the venue, a receiver receives a second wireless signal using a plurality of receive antennas through the wireless multipath channel and computes the set of CI of the wireless multipath channel based on the second wireless signal, and the second wireless signal differs from the first wireless signal due to the wireless multipath channel and a modulation of the first wireless signal by the at least one object; and tracking the at least one object simultaneously based on the set of CI.

In one embodiment, a wireless monitoring system is described. The wireless monitoring system comprises: a transmitter, a receiver, and a processor. The transmitter is configured for transmitting, using N1 transmit antennas, a wireless signal through a wireless multipath channel of a venue, while a first object in the venue is having a first repetitive motion. The receiver is configured for: receiving, using N2 receive antennas, the wireless signal through the wireless multipath channel, and extracting a plurality of time series of channel information (TSCI) of the wireless multipath channel from the wireless signal. N1 and N2 are positive integers. Each of the plurality of TSCI is associated with a transmit antenna of the transmitter and a receive antenna of the receiver. The processor is configured for: computing a first information of the first repetitive motion based on the plurality of TSCI, and monitoring the first repetitive motion of the first object based on the first information.

In another embodiment, a method, implemented by a processor, a memory communicatively coupled with the processor, and a set of instructions stored in the memory to be executed by the processor, is described. The method comprises: transmitting, using N1 transmit antennas of a first heterogeneous wireless device, a wireless signal through a wireless multipath channel of a venue, while an object in the venue is having a repetitive motion; receiving, using N2 receive antennas of a second heterogeneous wireless device, the wireless signal through the wireless multipath channel; obtaining a plurality of time series of channel information (TSCI) of the wireless multipath channel from the wireless signal, wherein: N1 and N2 are positive integers, and each of the plurality of TSCI is associated with a transmit antenna of the first heterogeneous wireless device and a receive antenna of the second heterogeneous wireless device; computing a timing information of the repetitive motion based on the plurality of TSCI; and monitoring the repetitive motion of the object based on the timing information.

In a different embodiment, a wireless monitoring system is described. The wireless monitoring system comprises: a plurality of pairs of transmitters and receivers in a venue, and processor. For each pair of the plurality of pairs: a respective transmitter of the pair is configured for asynchronously transmitting a respective wireless signal through a wireless multipath channel, while a first object in the venue is having a first repetitive motion, and a respective receiver of the pair is configured for asynchronously receiving the respective wireless signal through the wireless multipath channel, and extracting a respective time series of channel information (TSCI) of the wireless multipath channel from the respective wireless signal. The transmitter and the receiver of a first pair of the plurality of pairs are collocated at a same location in the venue. The transmitter and the receiver of a second pair of the plurality of pairs are positioned at two different locations in the venue. A plurality of TSCI is obtained by the receivers of the plurality of pairs. The processor is configured for: computing a first information of the first repetitive motion based on the plurality of TSCI, and monitoring the first repetitive motion of the first object based on the first information.

The present teaching also relates to monitor breathing rate, count number of people, and identify people in a rich-scattering environment, e.g. an indoor environment or urban metropolitan area, enclosed environment, a car, etc. In one embodiment, the present teaching relates to accurately identify and recognize the driver based on wireless channel information, monitor driver's and passengers' breathing rate, count number of passengers, and detect presence of unattended children in a rich-scattering environment, e.g. an indoor environment or urban metropolitan area, enclosed environment, a car, etc.

In one embodiment, a system for rhythmic motion monitoring is described. The system comprises: a transmitter, a receiver, and a processor. The transmitter is configured for transmitting a wireless signal through a wireless multipath channel that is impacted by a rhythmic motion of an object in a venue. The receiver is configured for: receiving the wireless signal through the wireless multipath channel, and extracting N1 time series of channel information (TSCI) of the wireless multipath channel from the wireless signal modulated by the wireless multipath channel that is impacted by the rhythmic motion of the object, wherein each of the N1 TSCI is associated with an antenna of the transmitter and an antenna of the receiver. The processor is configured for: decomposing each of the N1 TSCI into N2 time series of channel information components (TSCIC), wherein a channel information component (CIC) of each of the N2 TSCIC at a time comprises a respective component of a channel information (CI) of the TSCI at the time, monitoring the rhythmic motion of the object based on at least one of: the N1*N2 TSCIC and the N1 TSCI, wherein N1 and N2 are positive integers, and triggering a response action based on the monitoring of the rhythmic motion of the object.

In another embodiment, a method, implemented by a processor, a memory communicatively coupled with the processor, and a set of instructions stored in the memory to be executed by the processor, is described. The method comprises: obtaining N1 time series of channel information (TSCI) of a wireless multipath channel that is impacted by a rhythmic motion of an object in a venue, wherein the N1 TSCI is extracted from a wireless signal transmitted from a transmitter to a receiver through the wireless multipath channel, wherein each of the N1 TSCI is associated with an antenna of the transmitter and an antenna of the receiver; decomposing each of the N1 TSCI into N2 time series of channel information components (TSCIC), wherein a channel information component (CIC) of each of the N2 TSCIC at a time comprises a respective component of a channel information (CI) of the TSCI at the time, wherein N1 and N2 are positive integers; monitoring the rhythmic motion of the object based on at least one of: the N1*N2 TSCIC and the N1 TSCI; and triggering a response action based on the monitoring of the rhythmic motion of the object.

In a different embodiment, an apparatus is disclosed for rhythmic motion monitoring in a venue where a transmitter and a receiver are located. The apparatus comprises: at least one of the transmitter and the receiver, and a processor. The transmitter is configured for transmitting a wireless signal through a wireless multipath channel that is impacted by a rhythmic motion of an object in the venue. The receiver is configured for receiving the wireless signal through the wireless multipath channel, and extracting N1 time series of channel information (TSCI) of the wireless multipath channel from the wireless signal modulated by the wireless multipath channel that is impacted by the rhythmic motion of the object. Each of the N1 TSCI is associated with an antenna of the transmitter and an antenna of the receiver. The processor is configured for: decomposing each of the N1 TSCI into N2 time series of channel information components (TSCIC), wherein a channel information component (CIC) of each of the N2 TSCIC at a time comprises a respective component of a channel information (CI) of the TSCI at the time, monitoring the rhythmic motion of the object based on at least one of: the N1*N2 TSCIC and the N1 TSCI, wherein N1 and N2 are positive integers, and triggering a response action based on the monitoring of the rhythmic motion of the object.

Other concepts relate to software for implementing the present teaching on wireless rhythmic motion monitoring, object tracking and scanning, monitoring breathing rate, counting number of people, and identifying people, in a rich-scattering environment. Additional novel features will be set forth in part in the description which follows, and in part will become apparent to those skilled in the art upon examination of the following and the accompanying drawings or may be learned by production or operation of the examples. The novel features of the present teachings may be realized and attained by practice or use of various aspects of the methodologies, instrumentalities and combinations set forth in the detailed examples discussed below.

**BRIEF DESCRIPTION OF DRAWINGS**

The methods, systems, and/or devices described herein are further described in terms of exemplary embodiments. These exemplary embodiments are described in detail with reference to the drawings. These embodiments are non-limiting exemplary embodiments, in which like reference numerals represent similar structures throughout the several views of the drawings.

FIG. 1 illustrates an overall architecture of an indoor tracking system, according to some embodiments of the present disclosure.

FIG. 2 illustrates an exemplary antenna alignment, according to some embodiments of the present disclosure.

FIG. 3A illustrates an example for estimating time delays from a TRRS matrix, where the maximum TRRSs only appear at a single time point when one antenna presents at a location where the other antenna was Δt time ago with super resolution, according to some embodiments of the present disclosure.

FIG. 3B illustrates an example for estimating time delays from a TRRS matrix for a straight moving trajectory of a three-antenna array, according to some embodiments of the present disclosure.

FIG. 3C illustrates an example for estimating time delays from a TRRS matrix, where the TRRS decreases when the device does not move along the antenna array line, yet evident peaks still exist for deviation angles within 15 degree thus allowing speed estimation, according to some embodiments of the present disclosure.

FIGs. 4A-4B illustrate exemplary graph-based map representations, according to some embodiments of the present disclosure.

FIG. 5 illustrates DTL examples, according to some embodiments of the present disclosure.

FIG. 6 shows an exemplary comparison of two distance estimation methods, according to some embodiments of the present disclosure.

FIG. 7 shows an exemplary performance of Antenna Alignment distance estimation method with respect to different antenna pairs, according to some embodiments of the present disclosure.

FIG. 8 shows an exemplary performance of Antenna Alignment distance estimation method with respect to different antenna separations, according to some embodiments of the present disclosure.

FIG. 9 shows an overall tracking accuracy performance of distance estimation methods, according to some embodiments of the present disclosure.

FIG. 10 shows a flowchart of a map-augmented tracking method, according to some embodiments of the present disclosure.

FIG. 11 illustrates different step patterns resulted from different subjects, speeds, and sensor placements, with each figure showing the acceleration series of 4 steps (two stride cycles), according to some embodiments of the present disclosure.

FIG. 12 illustrates an example of a Finite State Machine (FSM) for step detection, according to some embodiments of the present disclosure.

FIGs. 13A-13C illustrate examples of an inertial-based step counting and radio-based distance estimation, according to some embodiments of the present disclosure.

FIG. 14 illustrates virtual antenna alignment, according to some embodiments of the present disclosure.

FIG. 15 illustrates an exemplary setting of 6-element circular array, which can be built by placing together the antennas of two commodity WiFi radios, for 2-dimentional measurement, according to some embodiments of the present disclosure.

FIGs. 16A-16C illustrate an example of antenna arrays, where a linear, triangular, and quadrangular array produces at most 2, 6, and 12 tractable directions, respectively, according to some embodiments of the present disclosure.

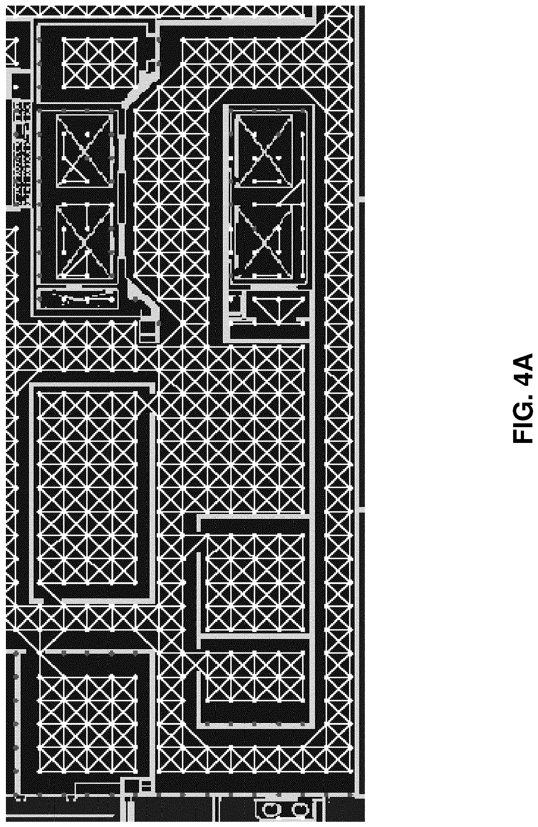

FIGs. 4A-4B illustrate the spatial resolution of time reversal resonating strength (TRRS), according to some embodiments of the present disclosure.

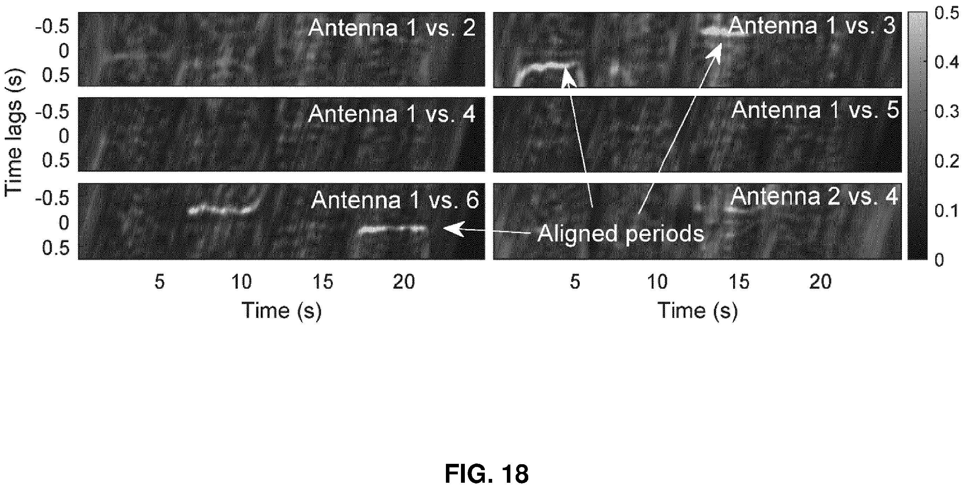

FIG. 18 illustrates exemplary experimental results of alignment matrices of a square-shape trajectory, according to some embodiments of the present disclosure.

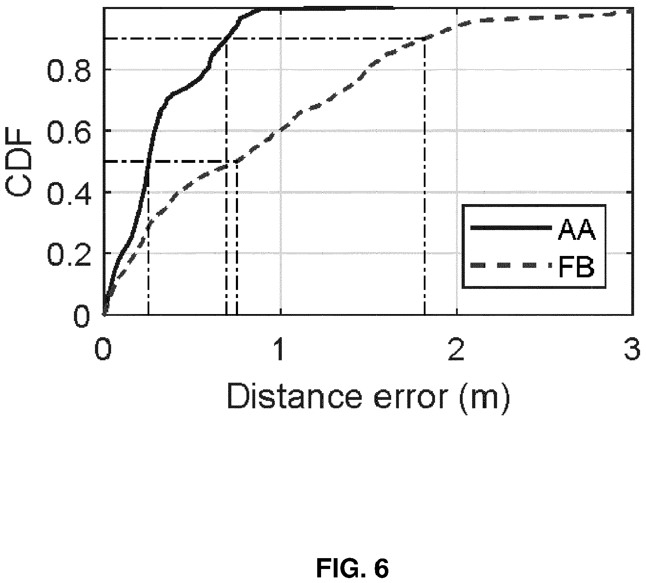

FIGs. 6A-6B illustrate exemplary antenna alignment in case of deviation retracing, according to some embodiments of the present disclosure.

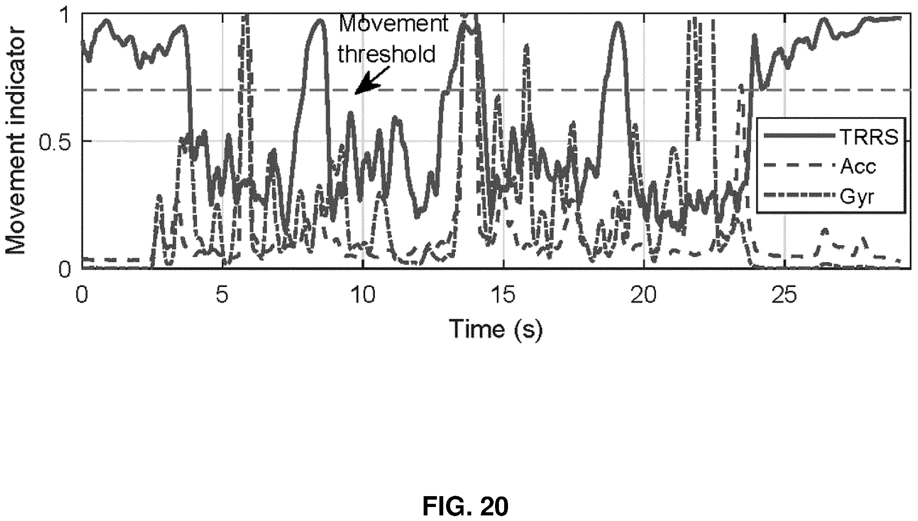

FIG. 20 illustrates exemplary experimental results of movement detection, according to some embodiments of the present disclosure.

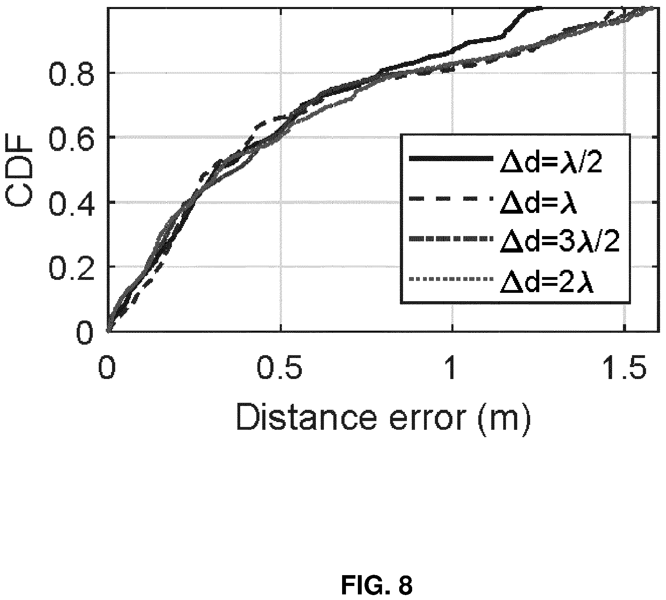

FIGs. 8A-8B illustrate exemplary experimental results of peak tracking, where alignment peaks are accurately and robustly tracked regardless of measurement noises and imperfect retracing, according to some embodiments of the present disclosure.

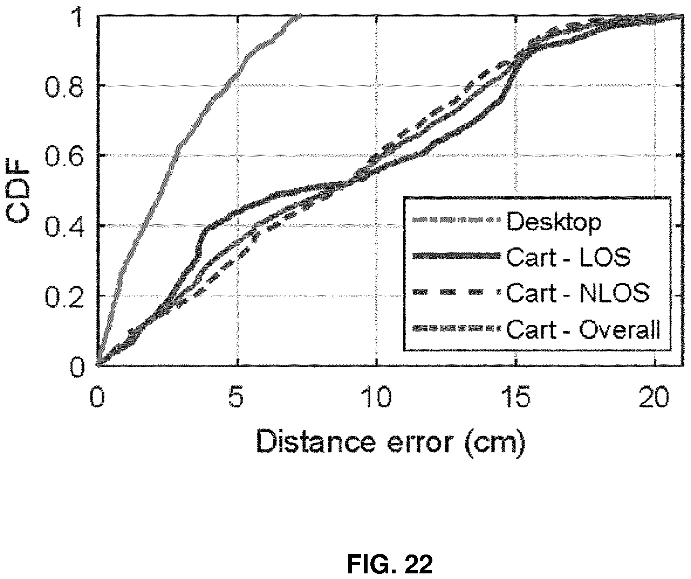

FIG. 22 illustrates exemplary experimental results of an accuracy of moving distance estimation, according to some embodiments of the present disclosure.

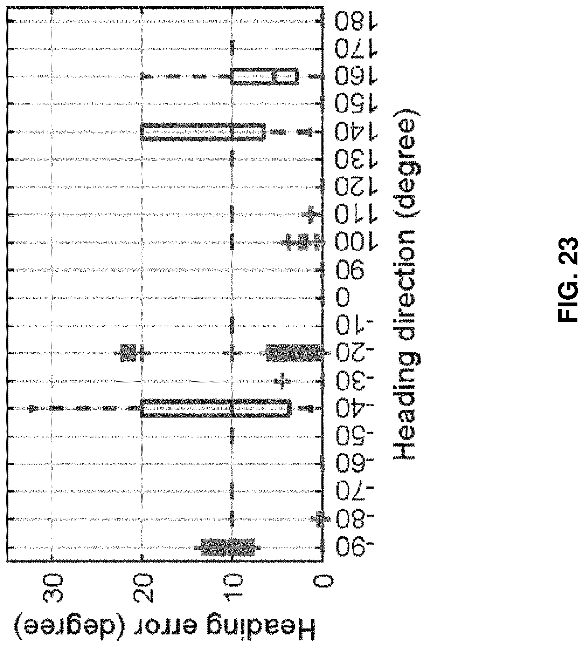

FIG. 23 illustrates exemplary experimental results of the estimated heading errors with respect to different heading directions, according to some embodiments of the present disclosure.

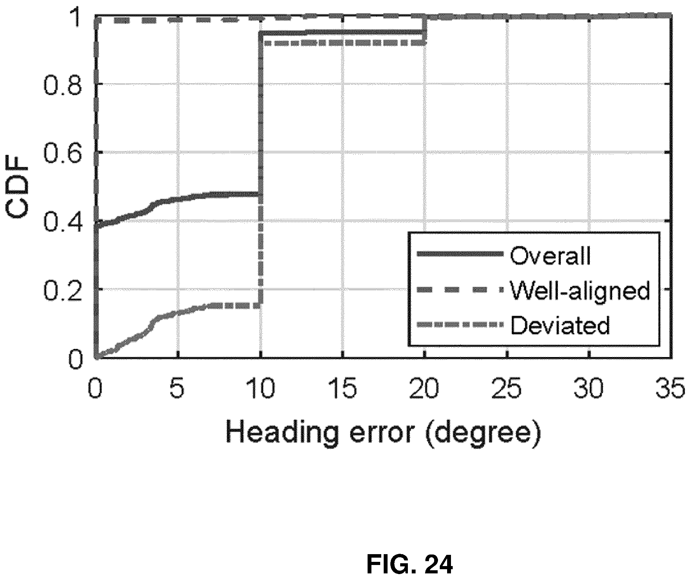

FIG. 24 illustrates exemplary experimental results of the cumulative distribution function of the heading errors, according to some embodiments of the present disclosure.

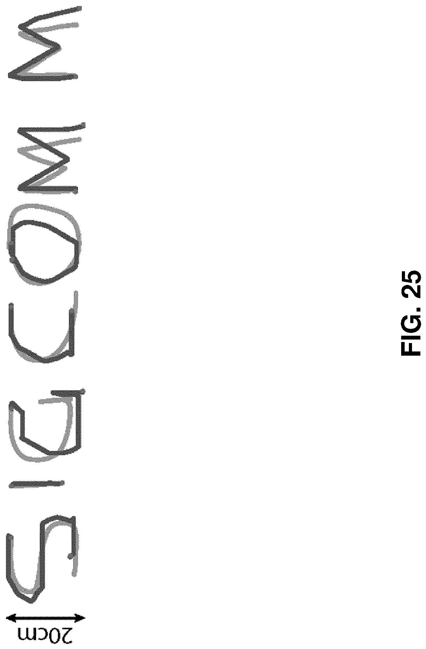

FIG. 25 illustrates exemplary handwriting characters recognized using RIM, according to some embodiments of the present disclosure.

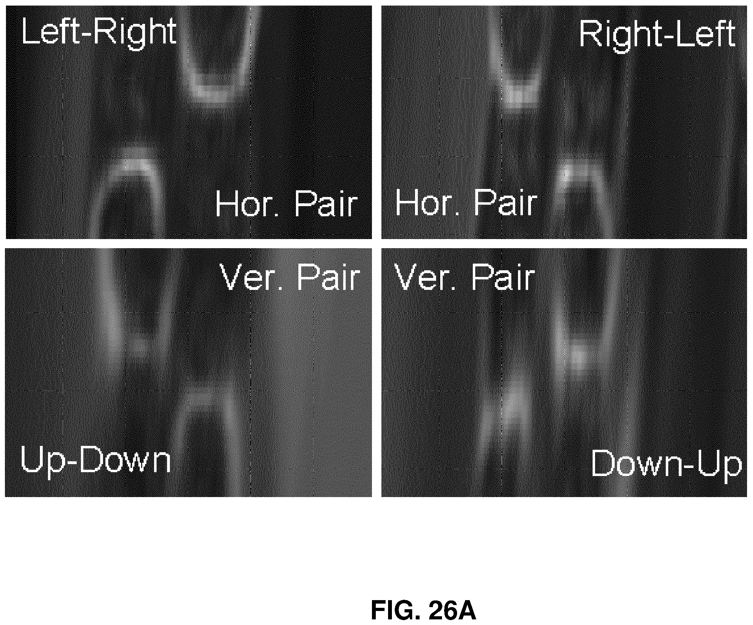

FIGs. 26A-26B illustrate exemplary experimental results of gesture recognition, according to some embodiments of the present disclosure.

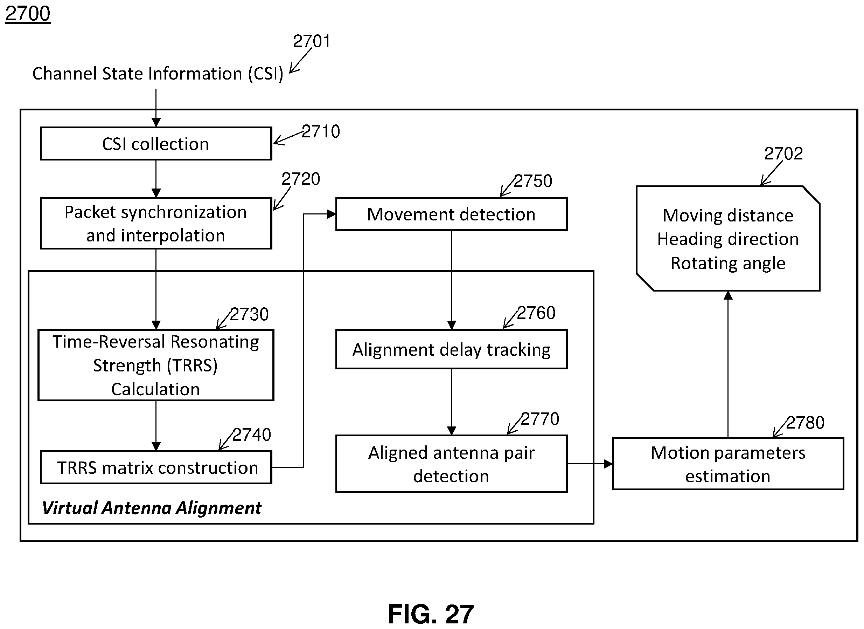

FIG. 27 shows a flowchart of a method for measuring multiple parameters of object motions, according to some embodiments of the present disclosure.

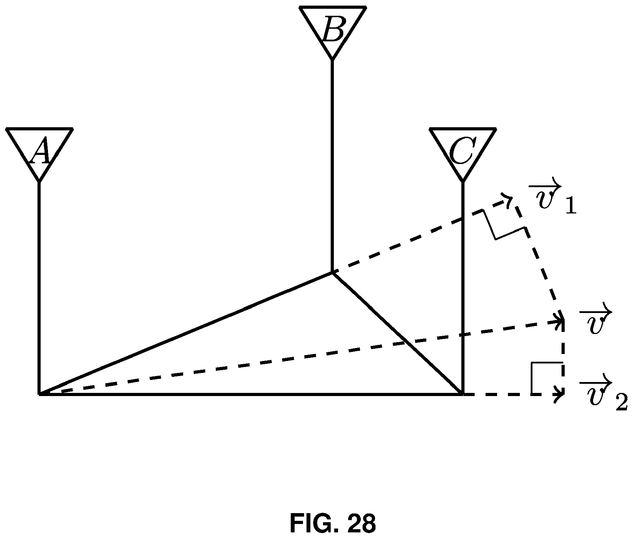

FIG. 28 illustrates an exemplary RF based inertial measure unit configuration with 3 antennas, according to some embodiments of the present disclosure.

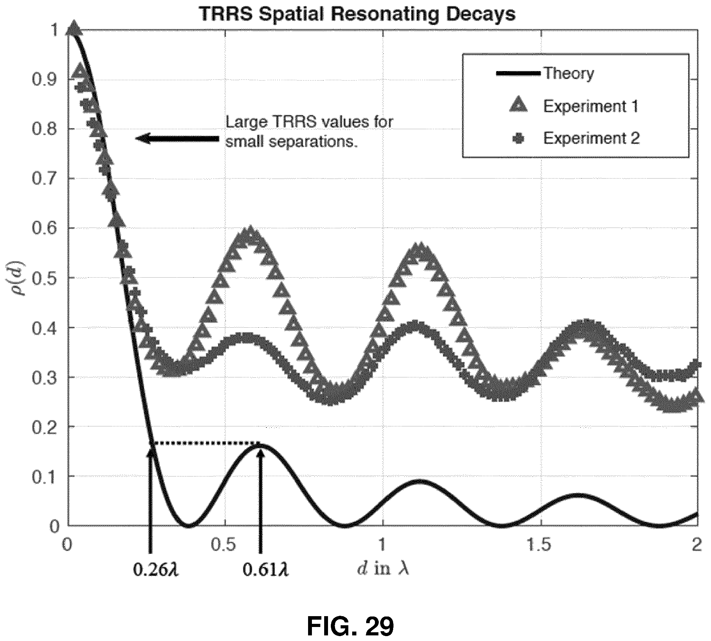

FIG. 29 illustrates an exemplary TRRS spatial decay, according to some embodiments of the present disclosure.

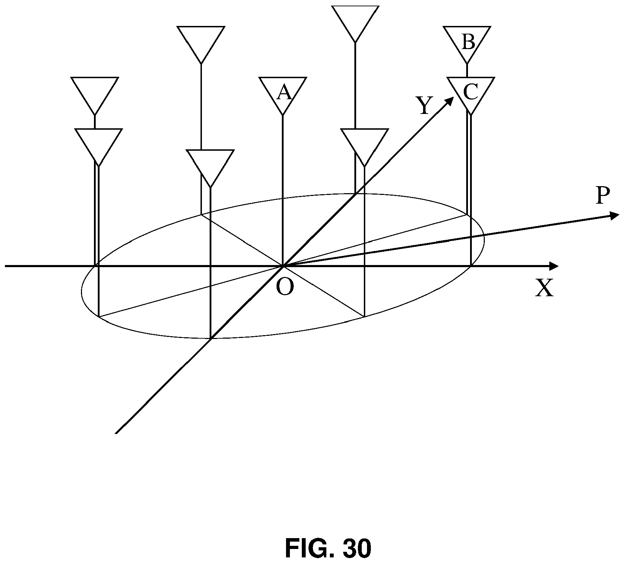

FIG. 30 illustrates an exemplary octagon antenna array for direction measurement, according to some embodiments of the present disclosure.

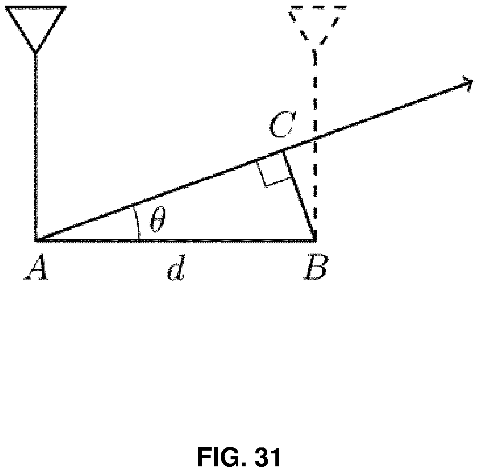

FIG. 31 illustrates an exemplary antenna moving trace, according to some embodiments of the present disclosure.

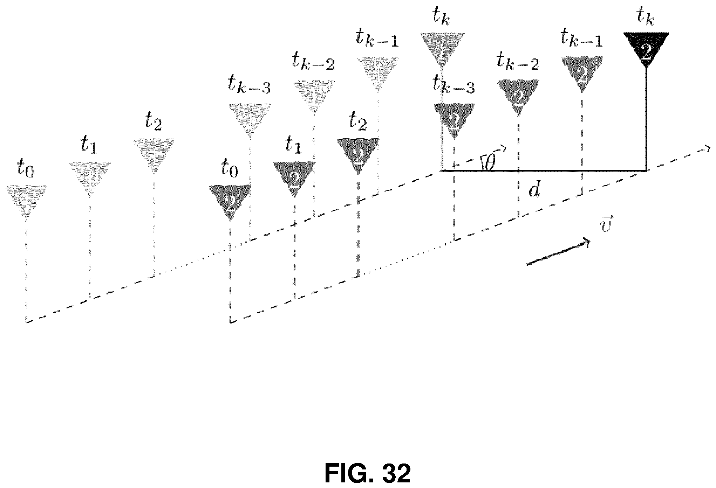

FIG. 32 illustrates another exemplary antenna moving trace, according to some embodiments of the present disclosure.

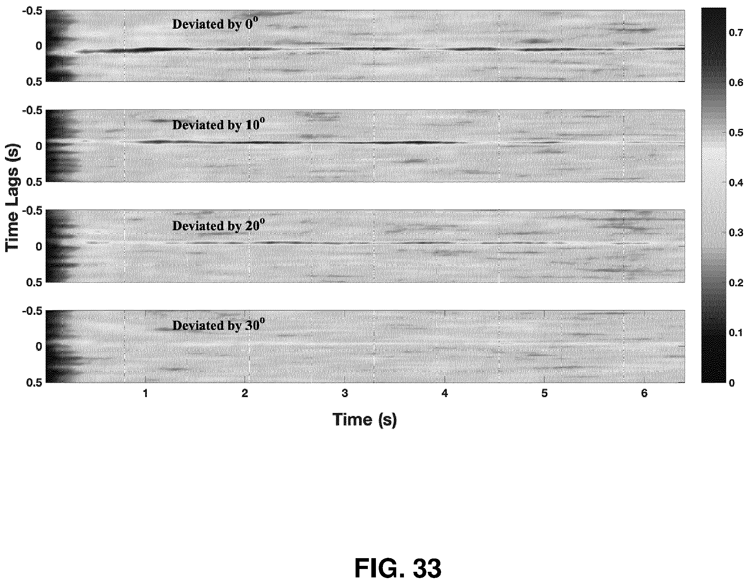

FIG. 33 illustrates an exemplary deviation, according to some embodiments of the present disclosure.

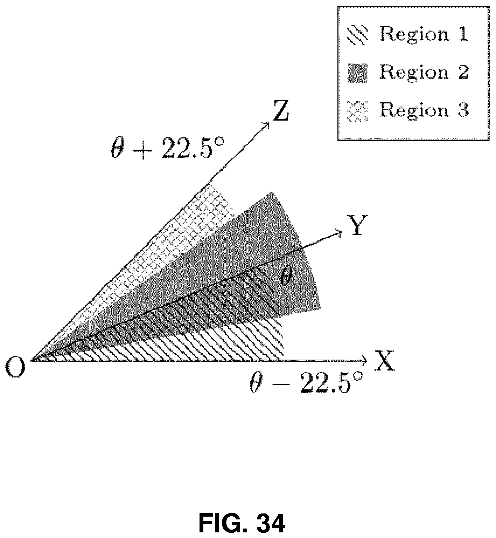

FIG. 34 illustrates an exemplary angle range, according to some embodiments of the present disclosure.

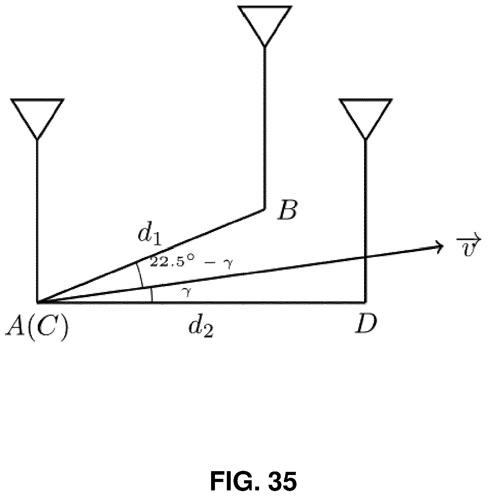

FIG. 35 illustrates an exemplary first case direction estimate, according to some embodiments of the present disclosure.

**EP 3 739 356 A1**

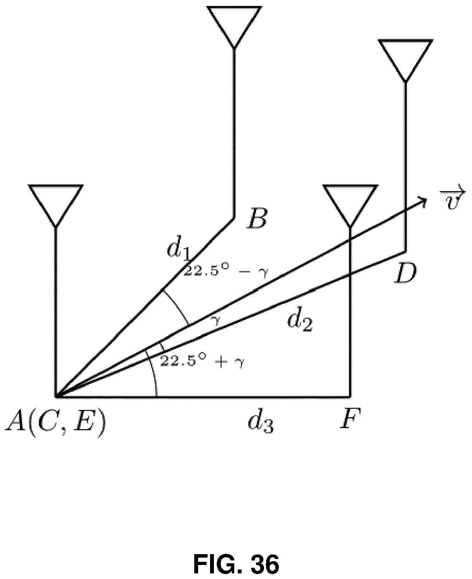

FIG. 36 illustrates an exemplary second case direction estimate, according to some embodiments of the present disclosure.

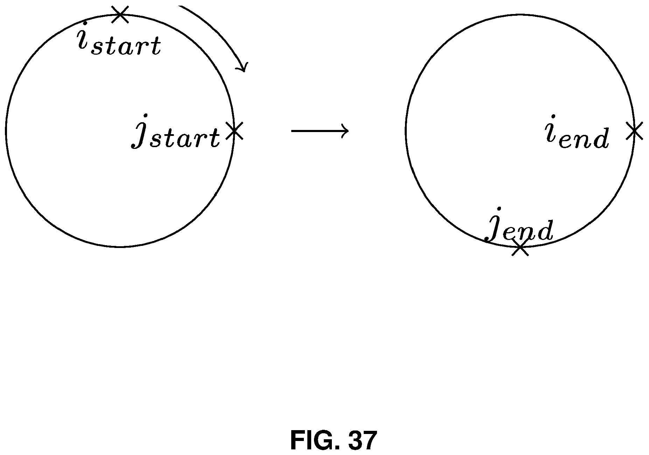

FIG. 37 illustrates an exemplary in-place rotation aligned antenna pairs, where the antenna i rotates to a location closest to the initial position of antenna j, according to some embodiments of the present disclosure.

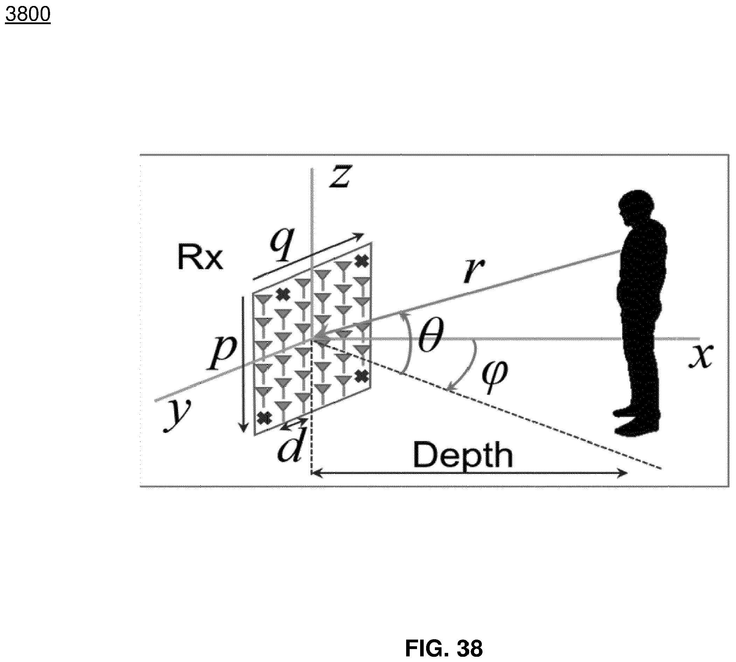

FIG. 38 illustrates an exemplary coordinate system for wireless object scanning, according to some embodiments of the present teaching.

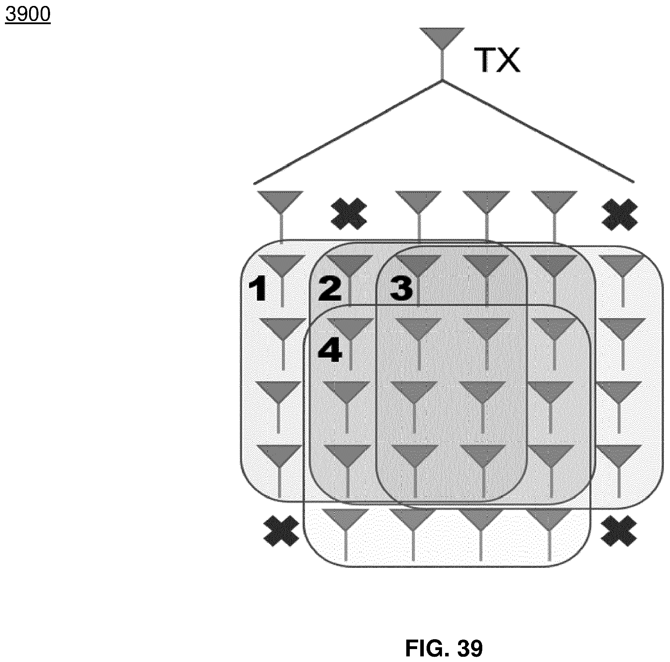

FIG. 39 illustrates an example of spatial smoothing, according to some embodiments of the present teaching.

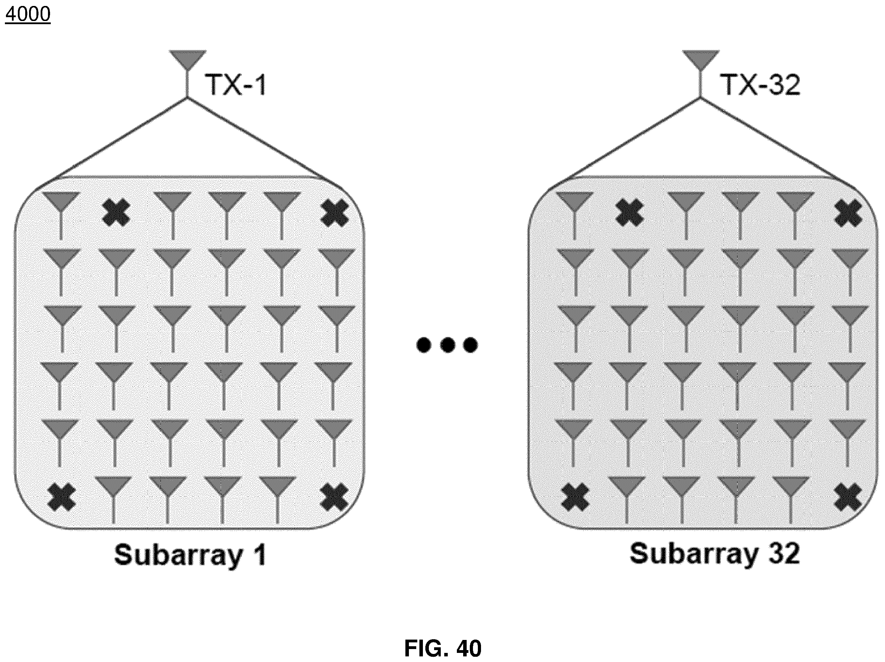

FIG. 40 illustrates an example of joint transmitter smoothing, according to some embodiments of the present teaching.

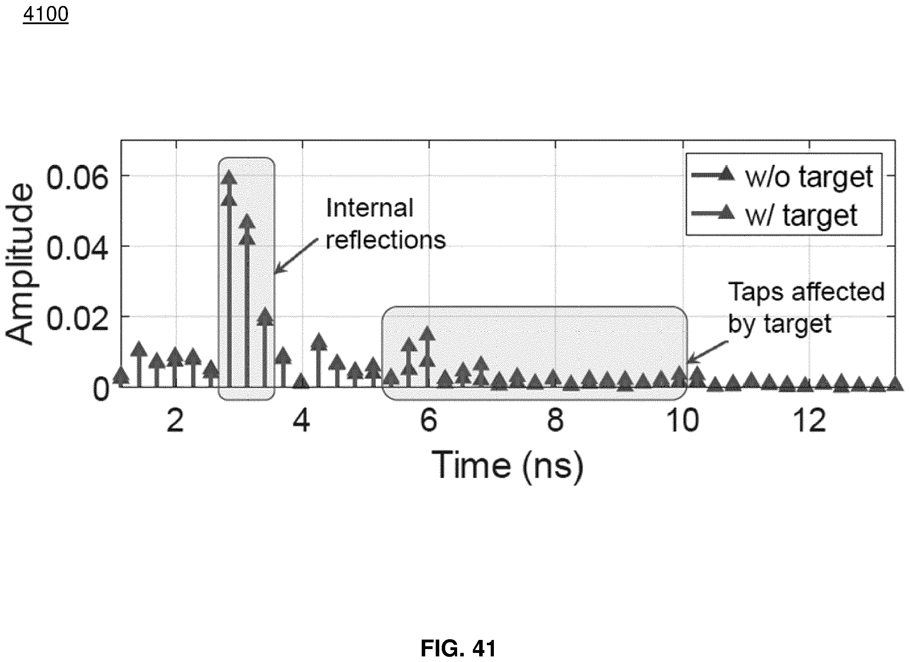

FIG. 41 illustrates exemplary channel impulse response (CIR) performances, according to some embodiments of the present teaching.

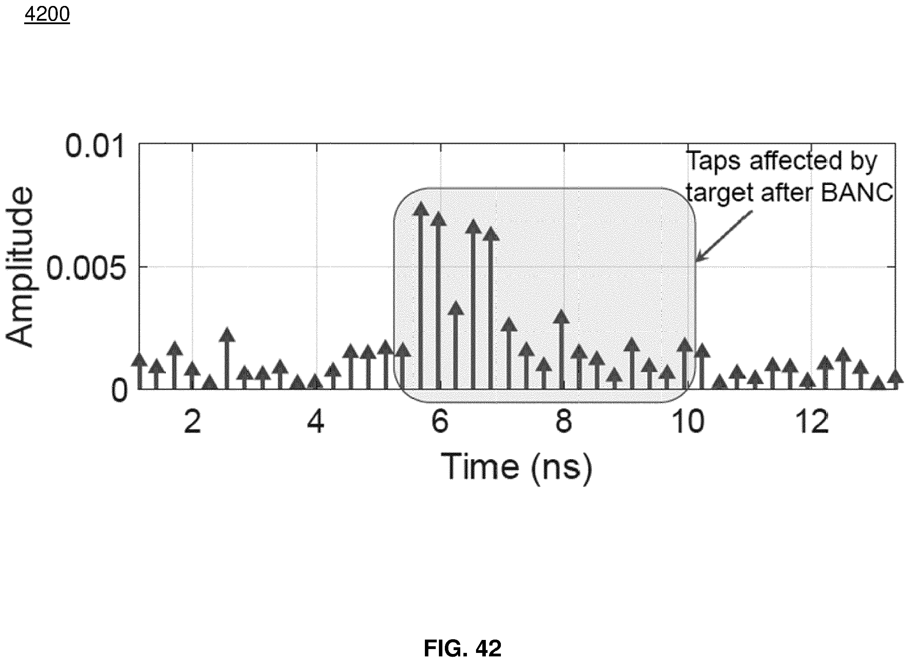

FIG. 42 illustrates an exemplary CIR obtained after background and noise cancellation, according to some embodiments of the present teaching.

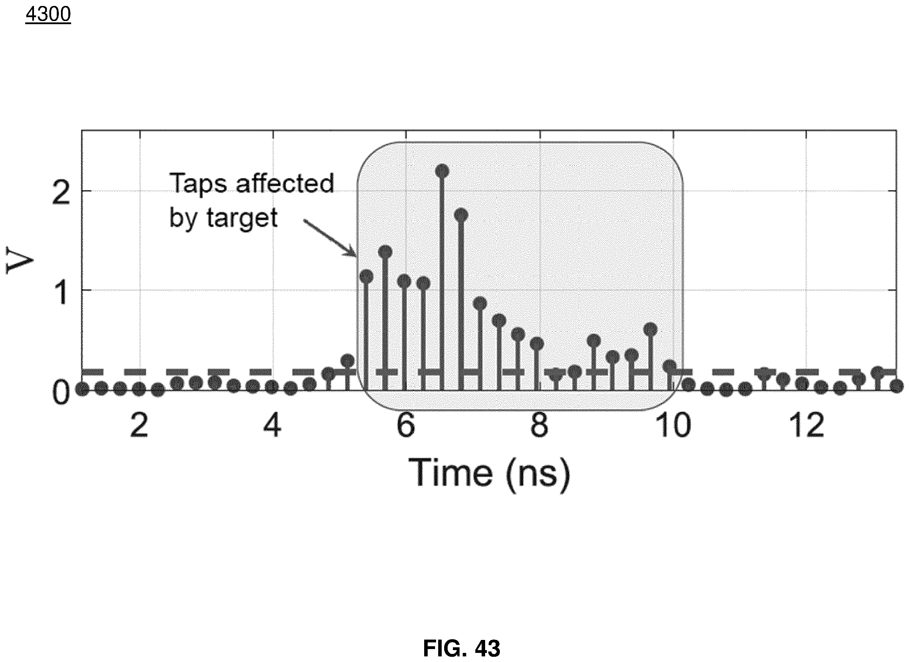

FIG. 43 illustrates an exemplary detection of range of interest (RoI), according to some embodiments of the present teaching.

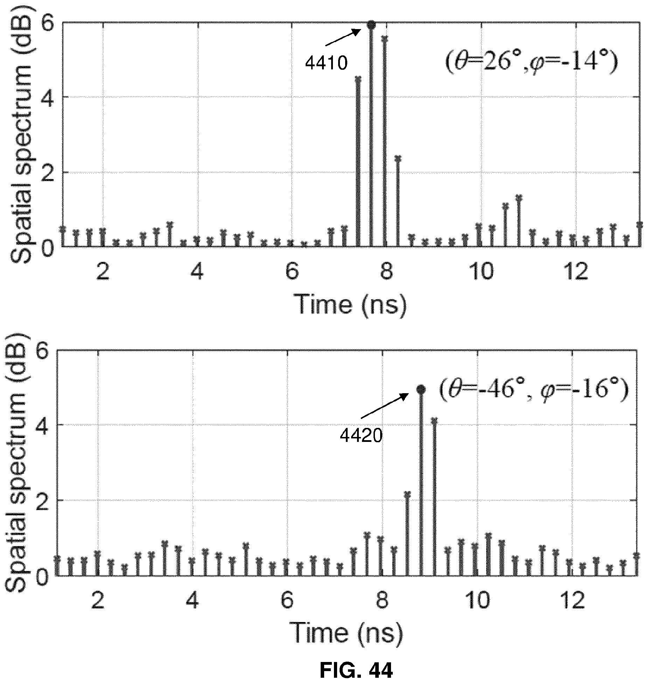

FIG. 44 illustrates examples of spatial spectrums for different directions, according to some embodiments of the present teaching.

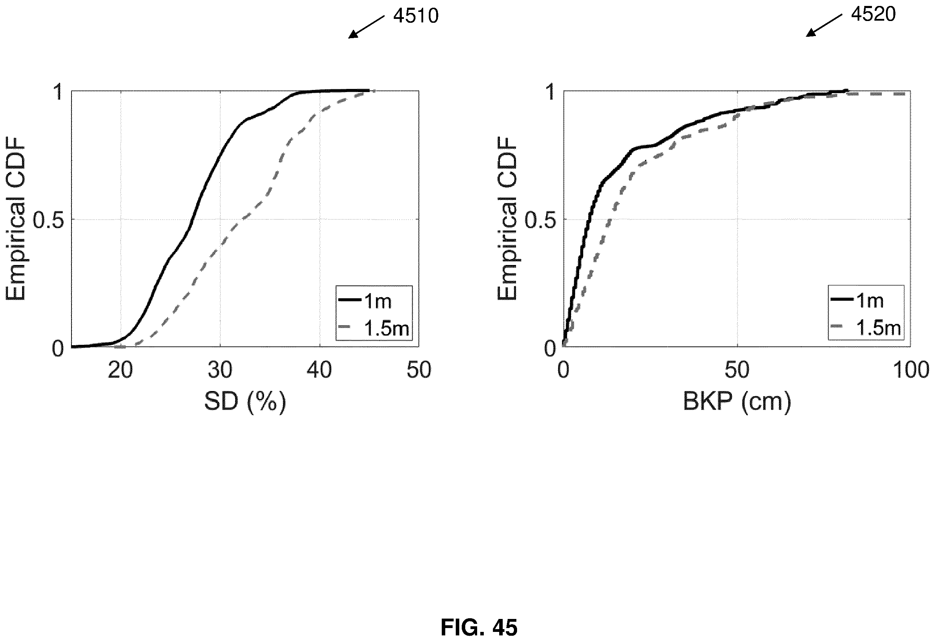

FIG. 45 illustrates exemplary system performances of human imaging, according to some embodiments of the present teaching.

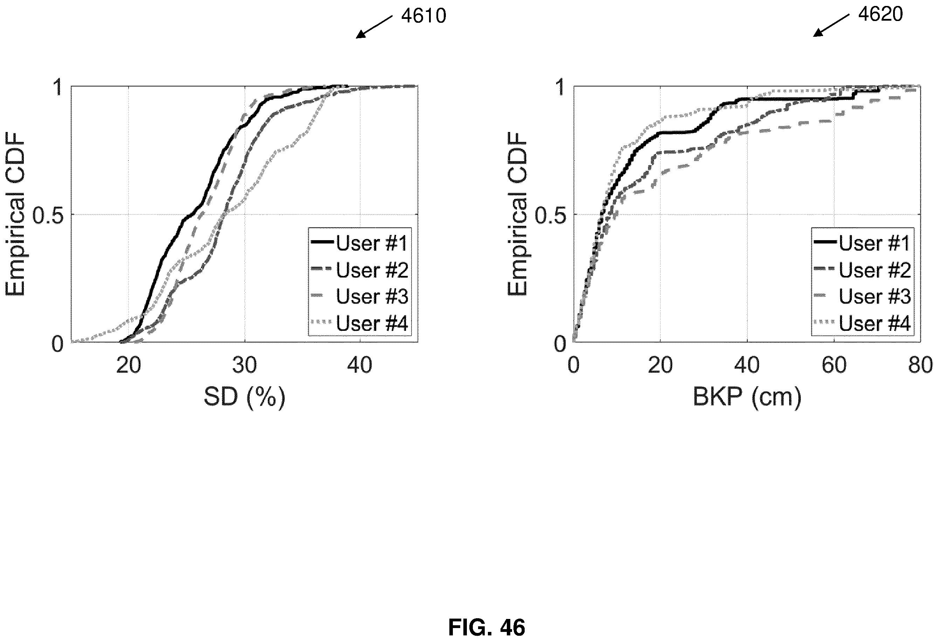

FIG. 46 illustrates exemplary system performances for different users, according to some embodiments of the present teaching.

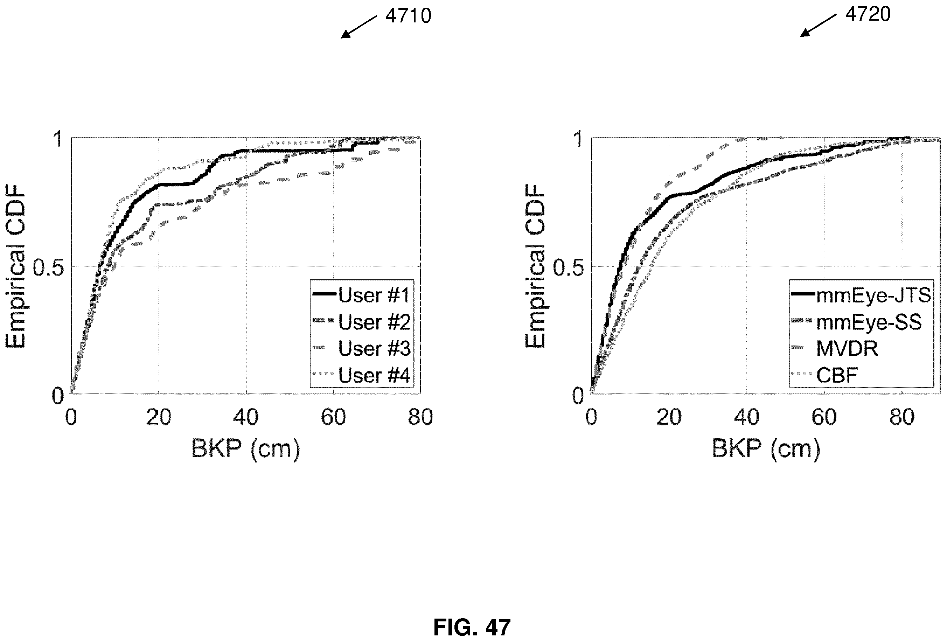

FIG. 47 illustrates exemplary system performance comparison among different spatial spectrum estimators, according to some embodiments of the present teaching.

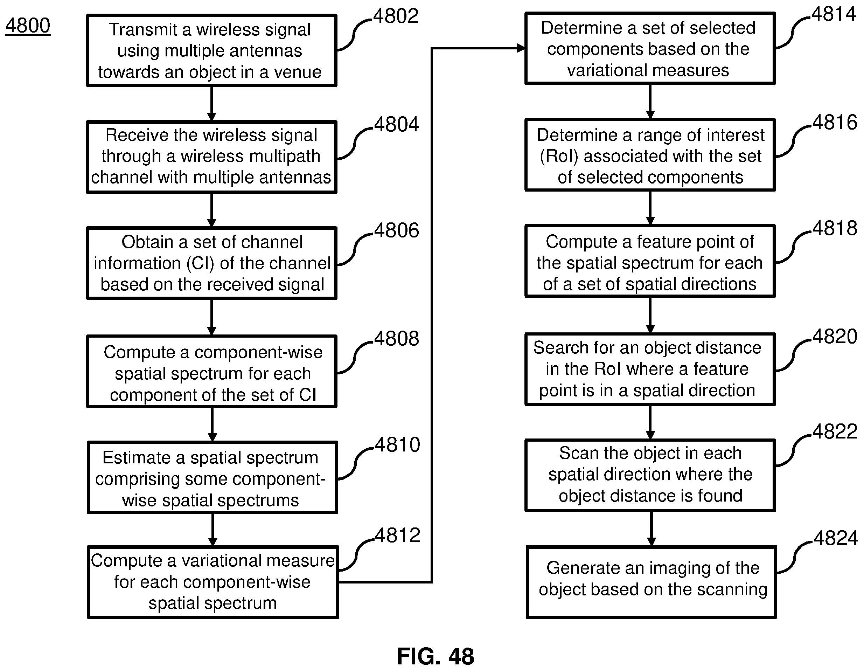

FIG. 48 illustrates a flow chart of an exemplary method for wireless object scanning, according to some embodiments of the present teaching.

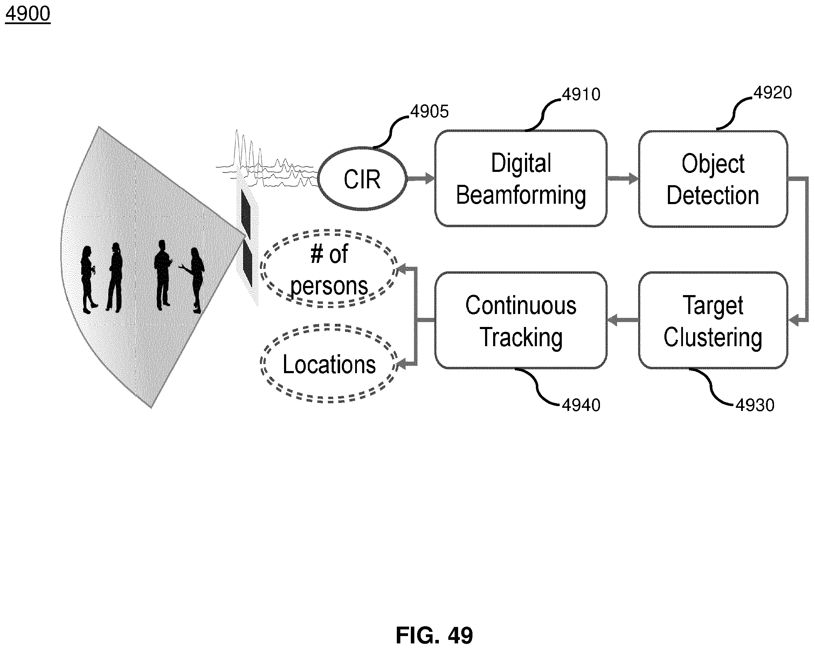

FIG. 49 illustrates an exemplary system for wireless object tracking, according to some embodiments of the present teaching.

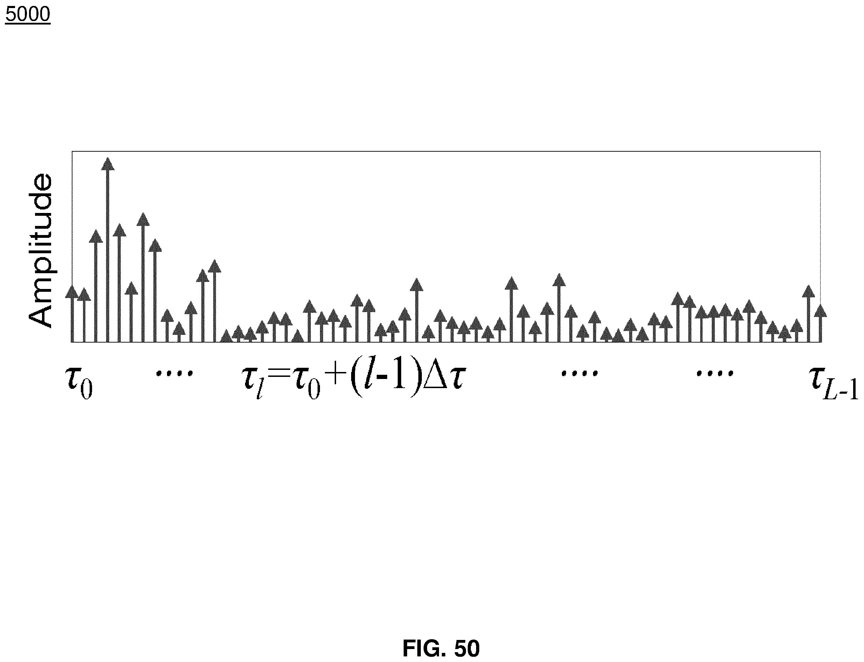

FIG. 50 illustrates an exemplary measured channel impulse response (CIR), according to some embodiments of the present teaching.

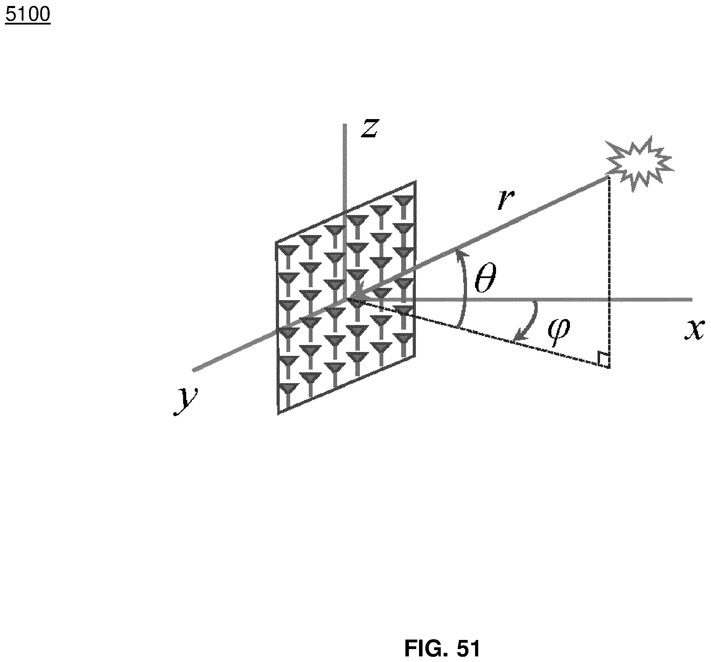

FIG. 51 illustrates an exemplary coordinate system, according to some embodiments of the present teaching.

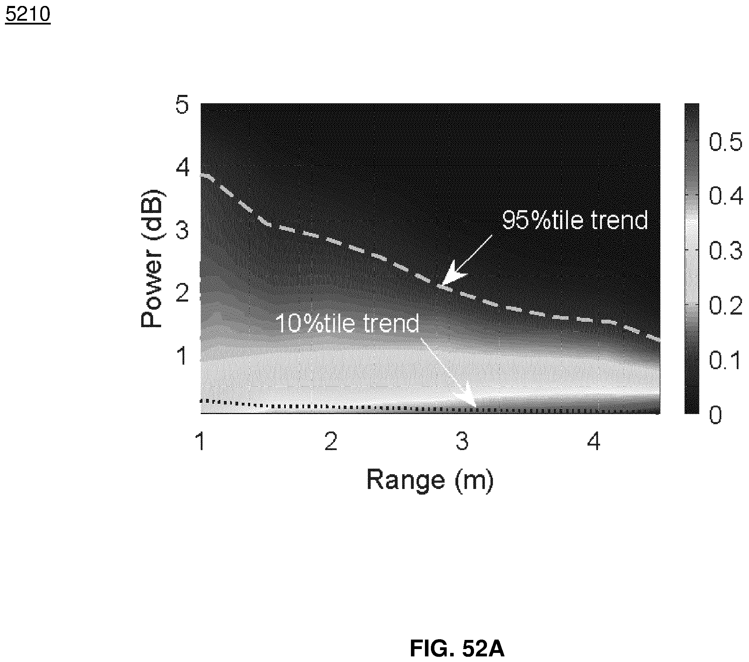

FIGs. 52A-52C illustrate measurement results of the near-far effect and the effects of weighted resampling, according to some embodiments of the present teaching.

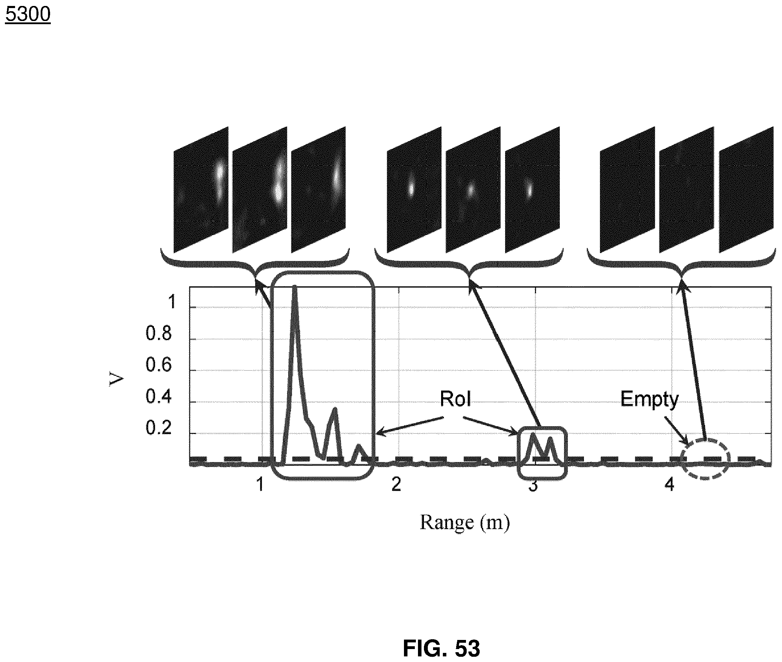

FIG. 53 illustrates an exemplary metric for detection of range of interest (RoI), where two subjects stand in front of a device, according to some embodiments of the present teaching.

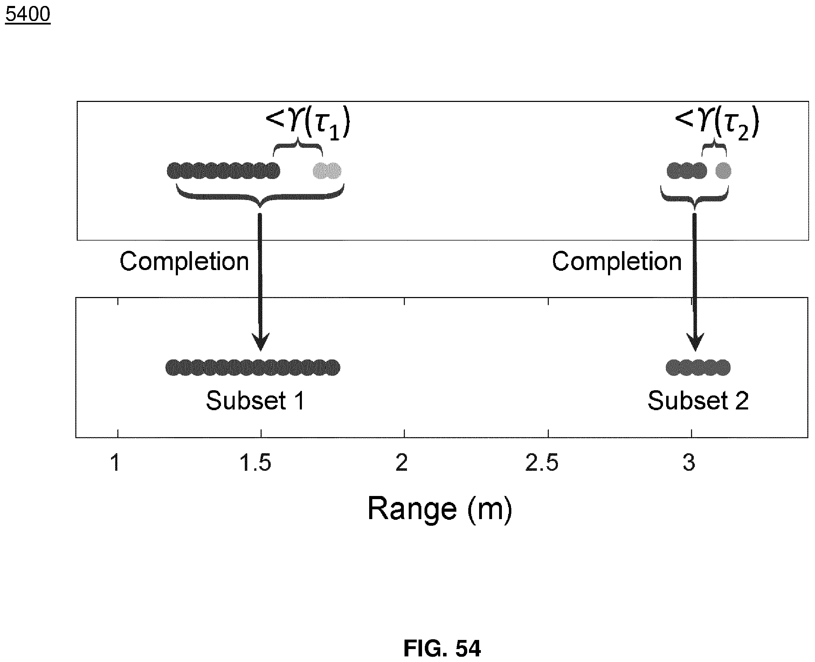

FIG. 54 illustrates an exemplary completed RoI, according to some embodiments of the present teaching.

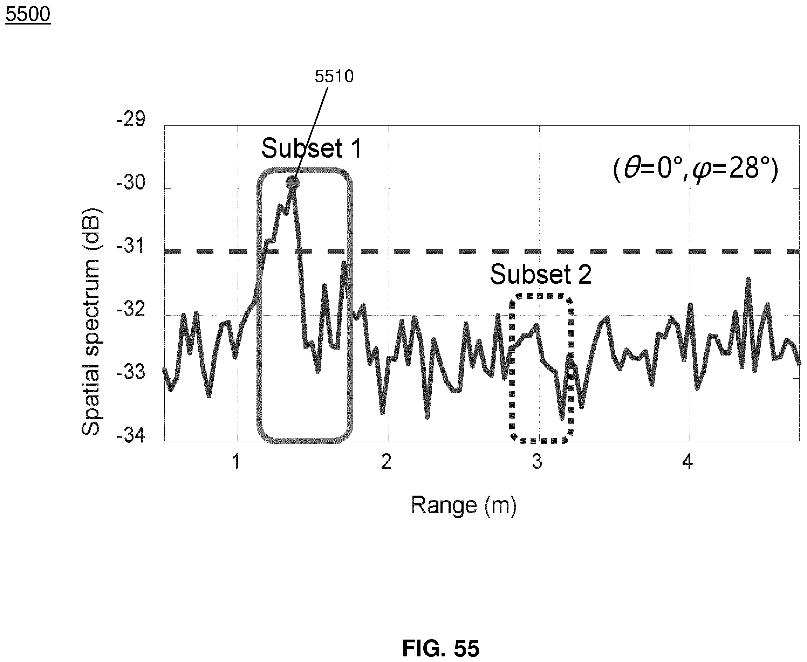

FIG. 55 illustrates an exemplary spatial spectrum in a specific direction, according to some embodiments of the present teaching.

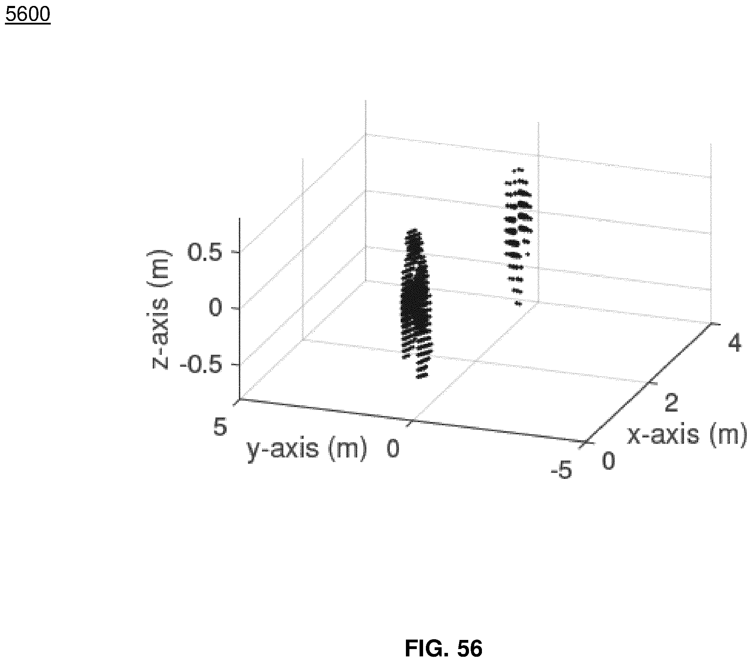

FIG. 56 illustrates exemplary 3D information of two subjects extracted from the spatial spectrum, according to some embodiments of the present teaching.

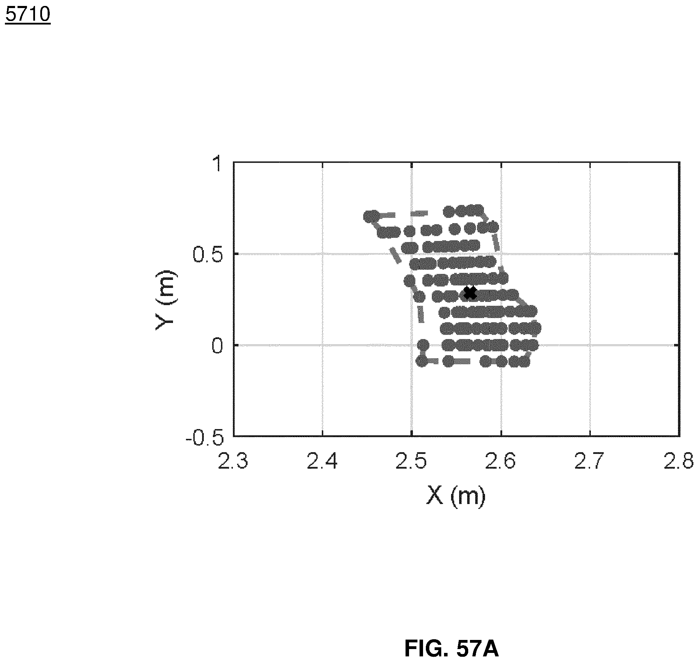

FIGs. 57A-57C illustrate exemplary robust clustering, according to some embodiments of the present teaching, according to some embodiments of the present teaching.

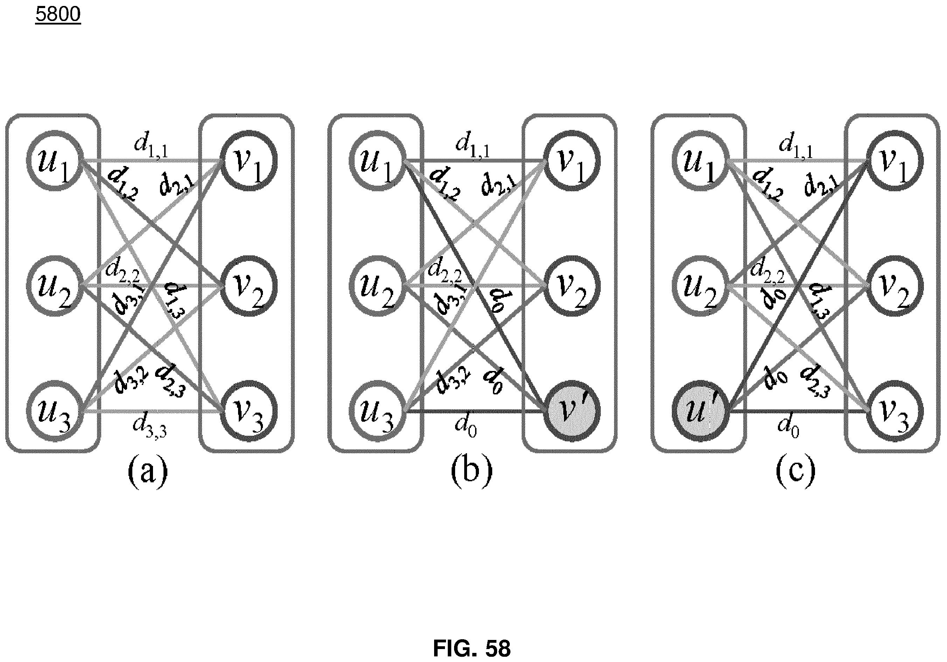

FIG. 58 illustrates exemplary weighted bipartite graph matchings, according to some embodiments of the present teaching.

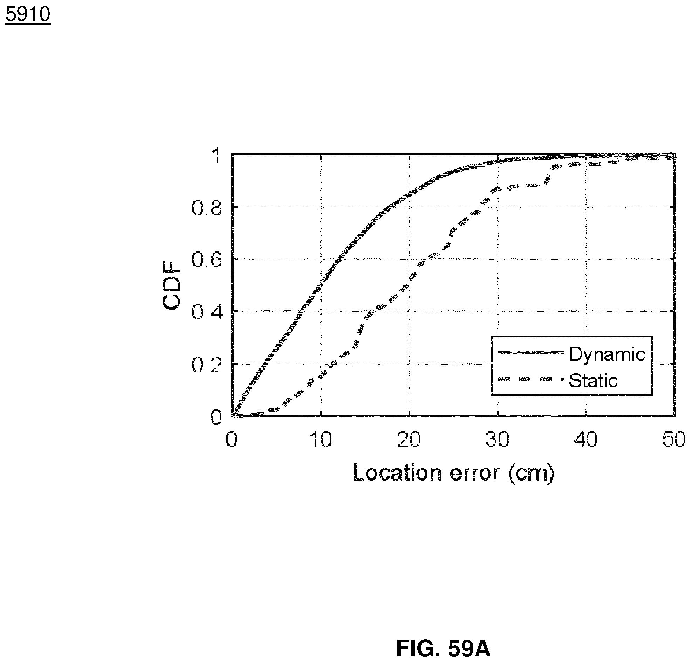

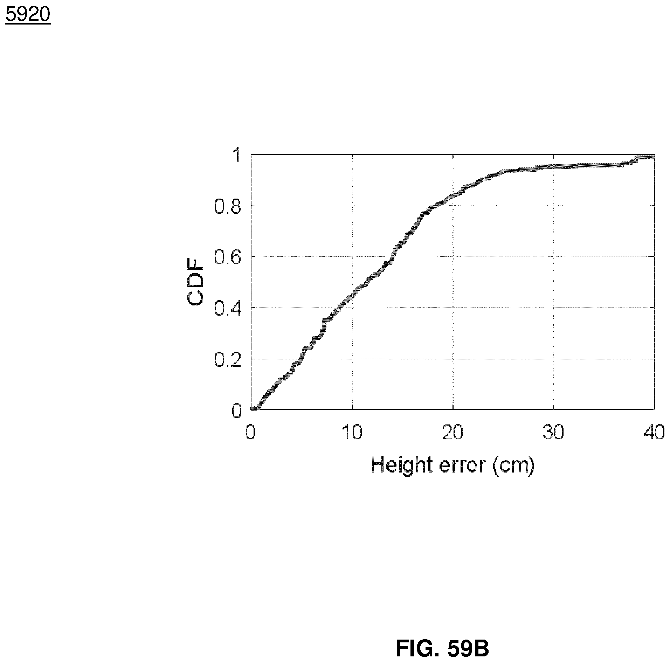

FIGs. 59A and 59B illustrate exemplary location and height estimations, according to some embodiments of the present teaching.

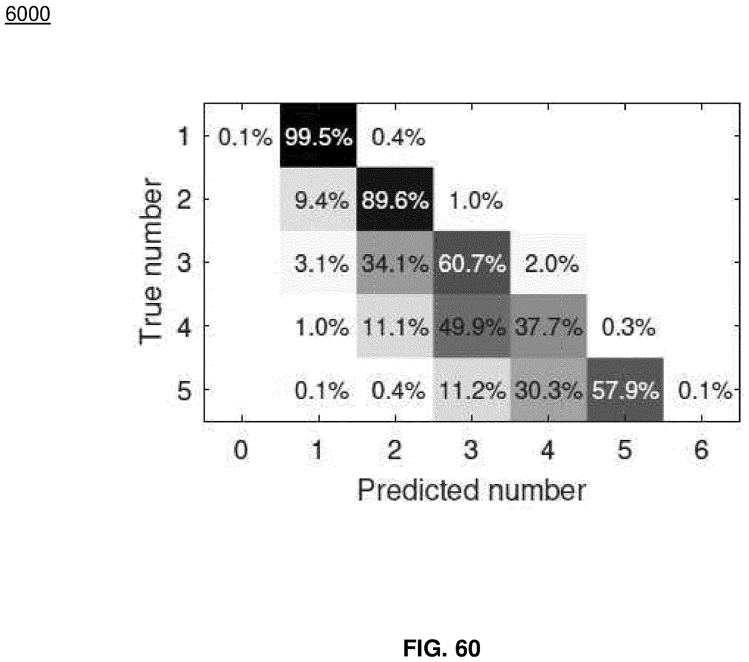

FIG. 60 illustrates an exemplary estimation the number of users presented in the area of interests, according to some embodiments of the present teaching.

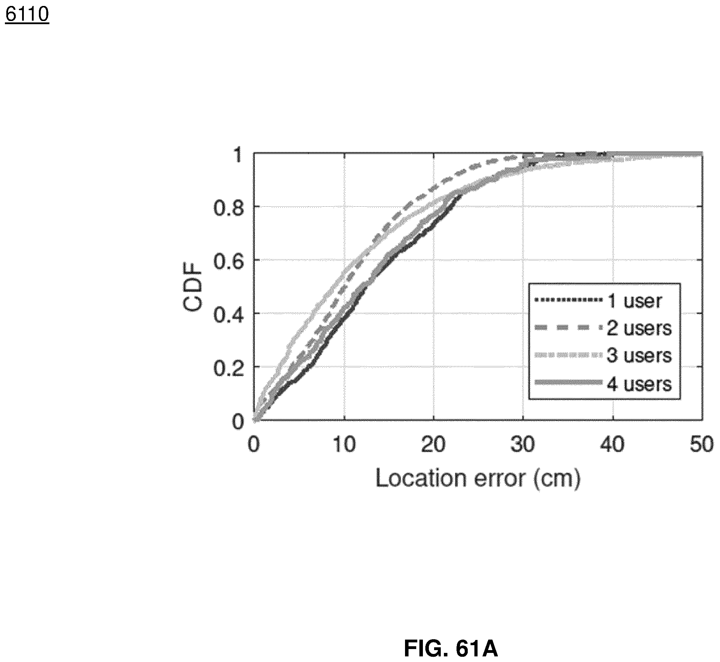

FIGs. 61A-61C illustrate an exemplary multi-person tracking performance, according to some embodiments of the present teaching.

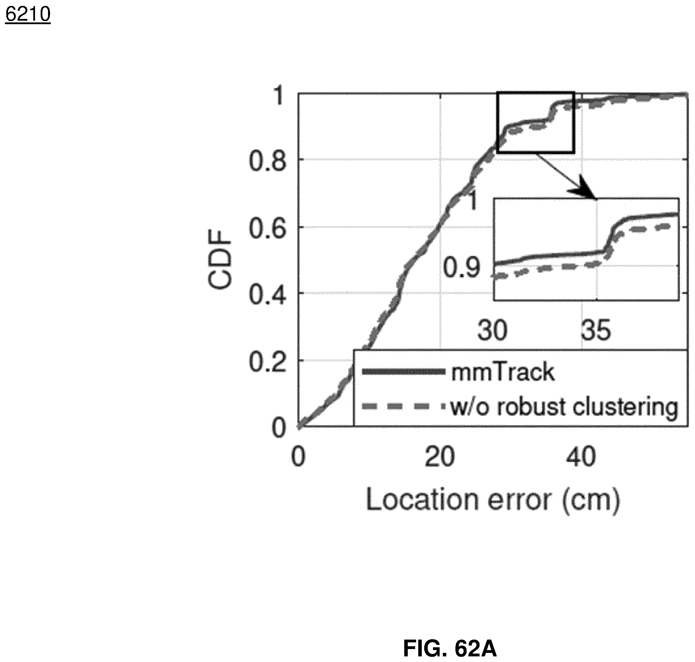

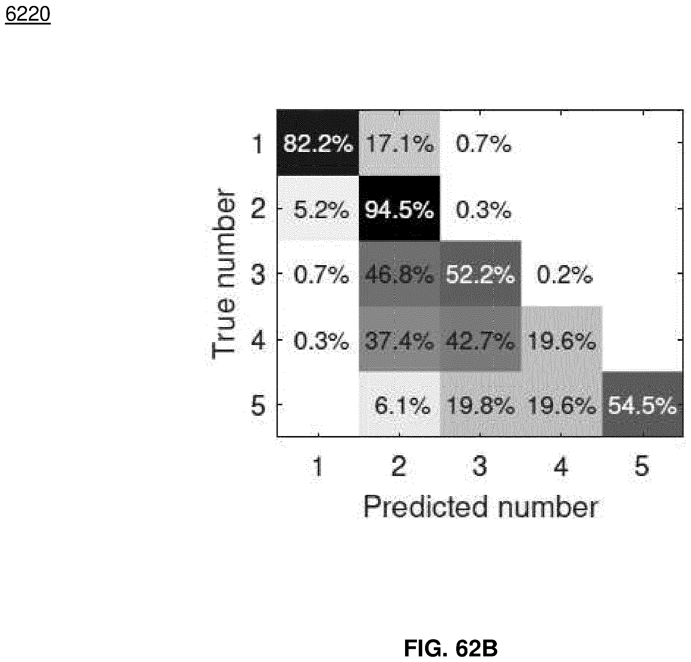

FIGs. 62A and 62B illustrate benefits of robust clustering, according to some embodiments of the present teaching.

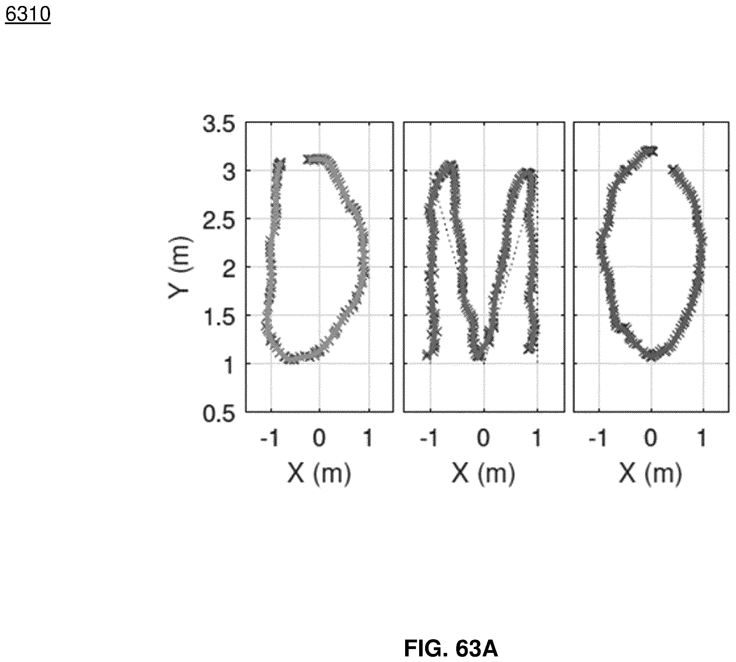

FIGs. 63A-63G illustrate exemplary wireless tracking results, according to some embodiments of the present teaching.

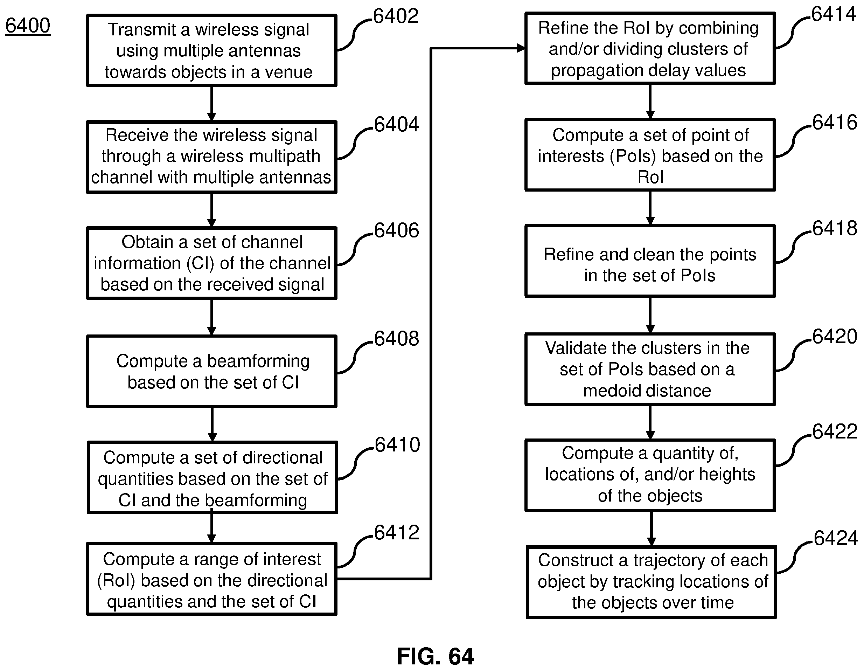

FIG. 64 illustrates a flow chart of an exemplary method for wireless object tracking, according to some embodiments of the present teaching.

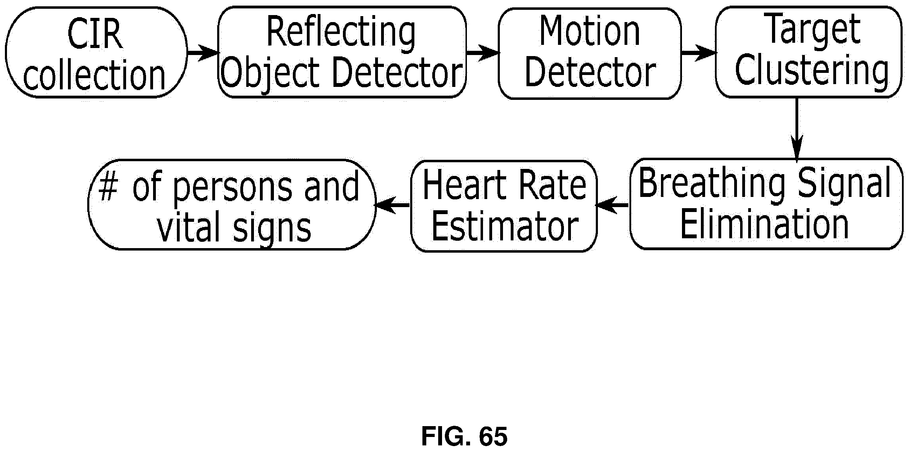

FIG. 65 illustrates a processing flow of the disclosed system, according to some embodiments of the present disclosure.

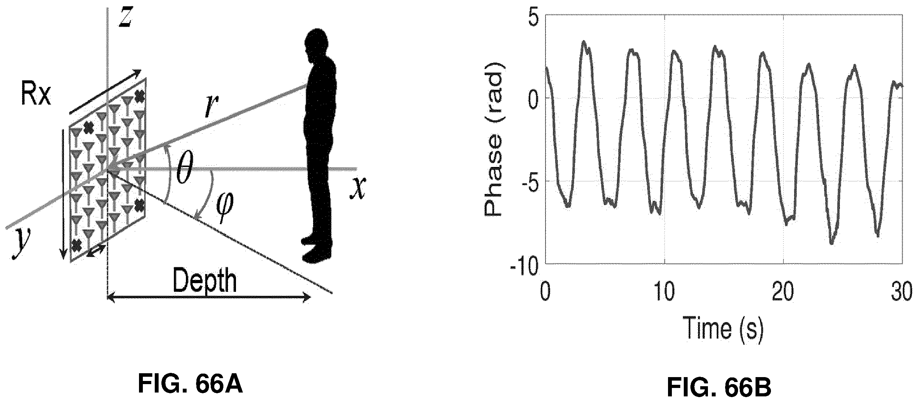

FIG. 66A illustrates the coordinate of the disclosed system, according to some embodiments of the present disclosure.

FIG. 66B illustrates a typical phase signal for the tap containing vital signs, according to some embodiments of the present disclosure.

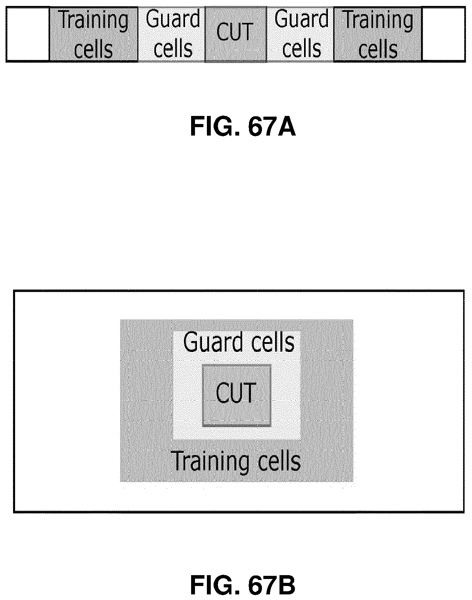

FIG. 67A illustrates a one-dimension (ID) constant false alarm rate (CFAR) window used in range dimension for reflecting subject detection, according to some embodiments of the present disclosure.

FIG. 67B illustrates a two-dimension (2D) constant false alarm rate (CFAR) window used in angle dimension for reflecting subject detection, according to some embodiments of the present disclosure.

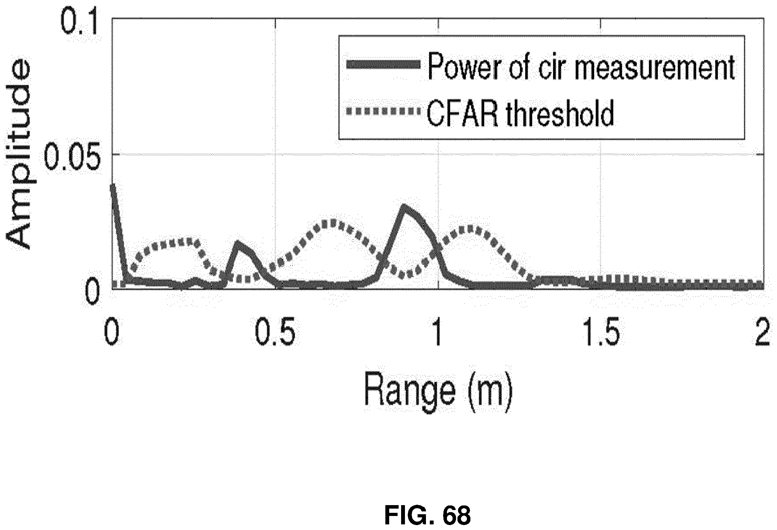

FIG. 68 illustrates an example of 1D-CFAR for reflecting object detection, according to some embodiments of the present disclosure.

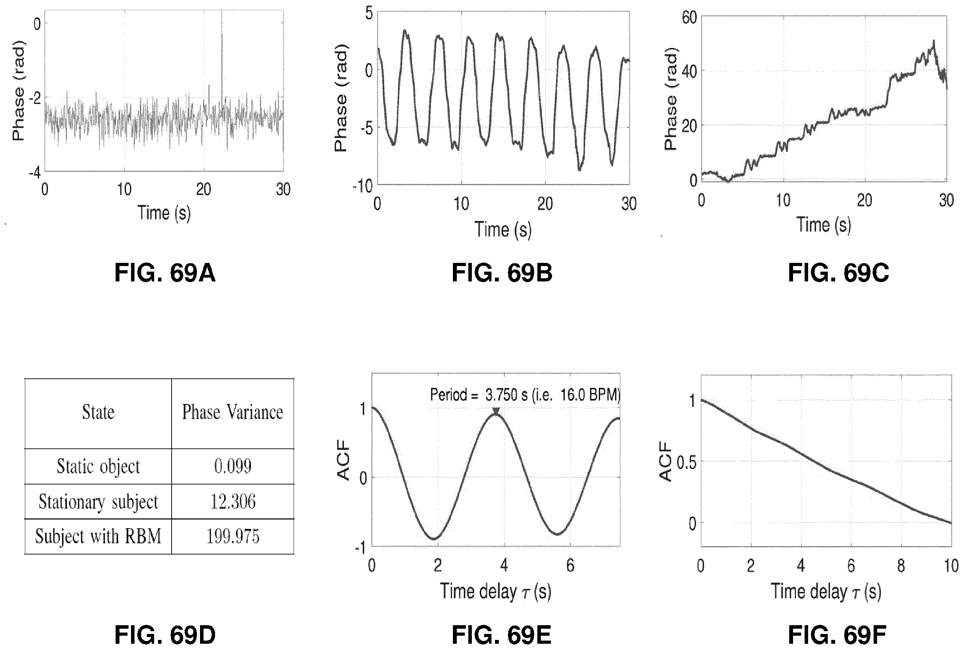

FIGs. 69A-69F illustrate exemplary phases for target detection, according to some embodiments of the present disclosure.

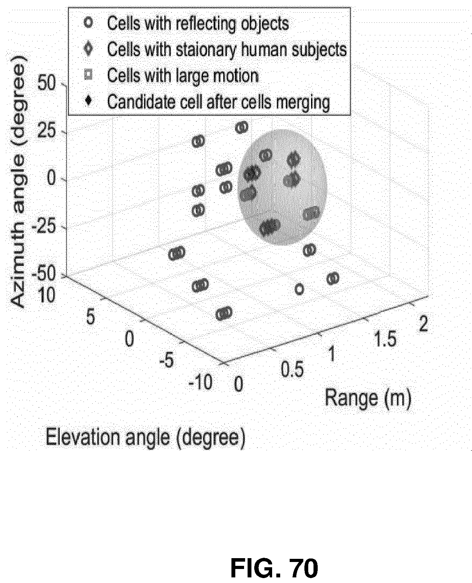

FIG. 70 illustrates an example of cell merging, according to some embodiments of the present disclosure.

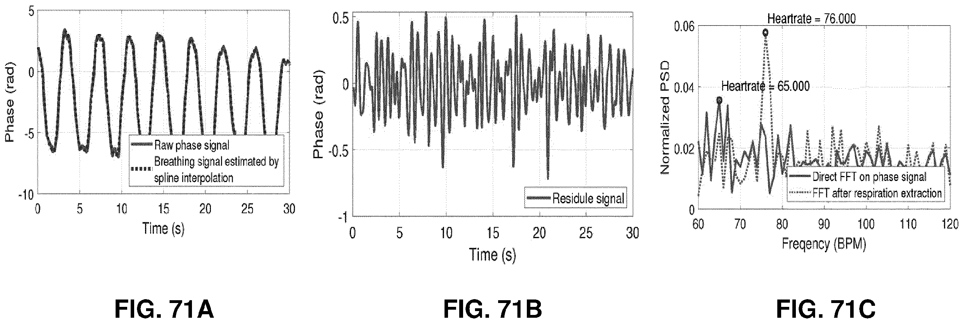

FIGs. 71A-71C illustrate exemplary effects of breathing interference elimination, according to some embodiments of the present disclosure.

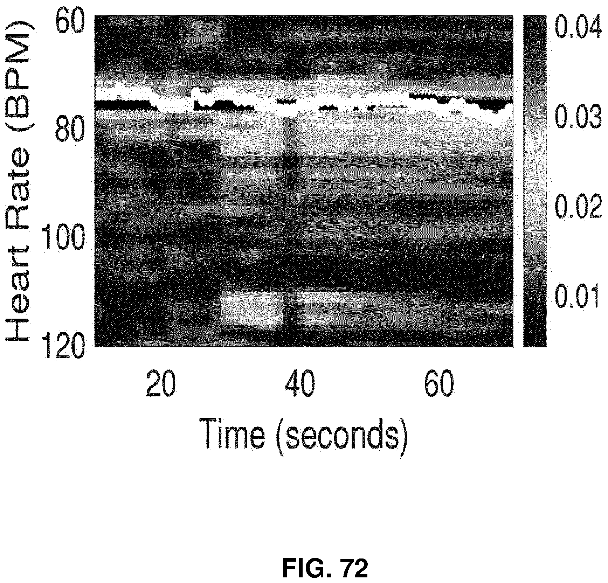

FIG. 72 illustrates estimated results by dynamic programming, according to some embodiments of the present disclosure.

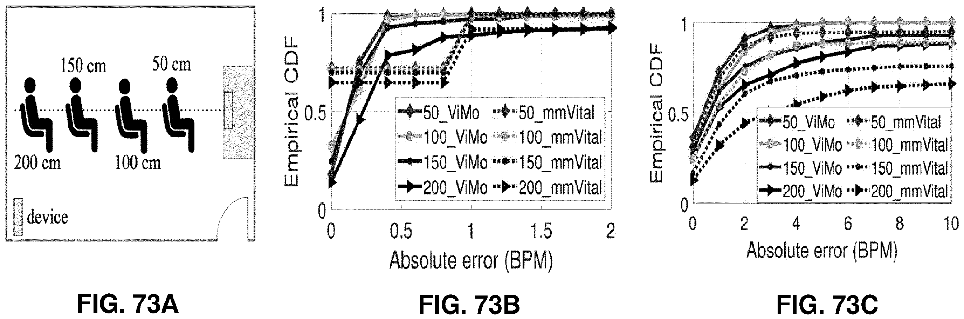

FIGs. 73A-73C illustrate an experiment setup and result for the impact of distance, according to some embodiments of the present disclosure.

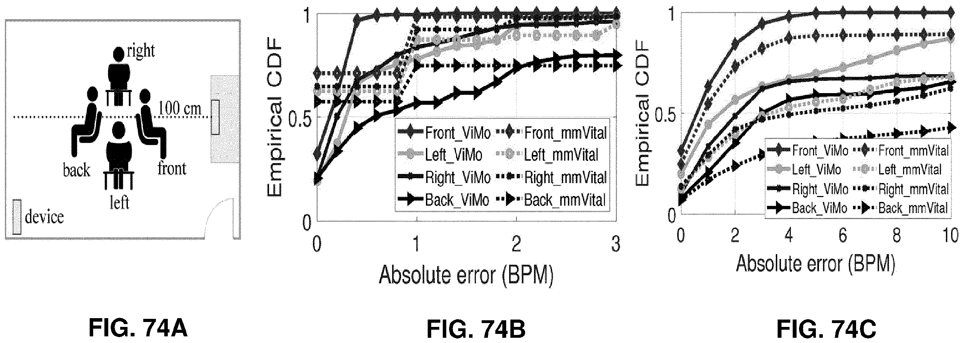

FIGs. 74A-74C illustrate an experiment setup and result for the impact of orientation, according to some embodiments of the present disclosure.

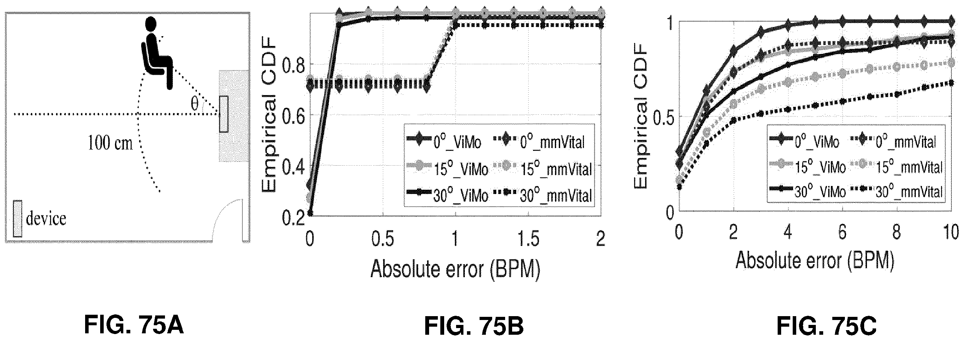

FIGs. 75A-75C illustrate an experiment setup and result for the impact of incident angle, according to some embodiments of the present disclosure.

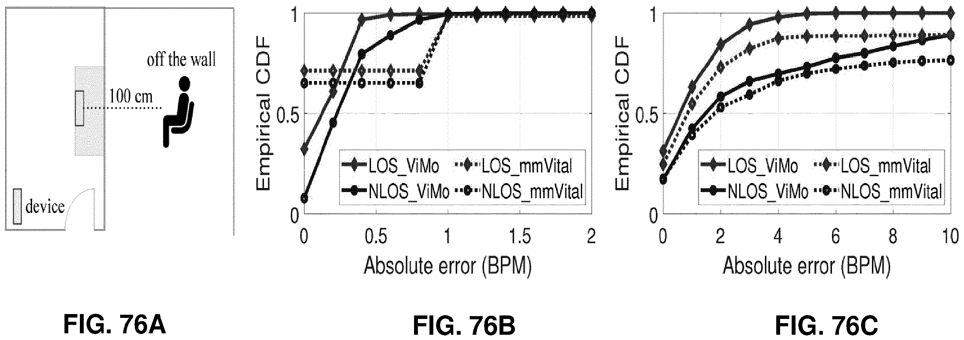

FIGs. 76A-76C illustrate an experiment setup and result for the impact of blockage, according to some embodiments of the present disclosure.

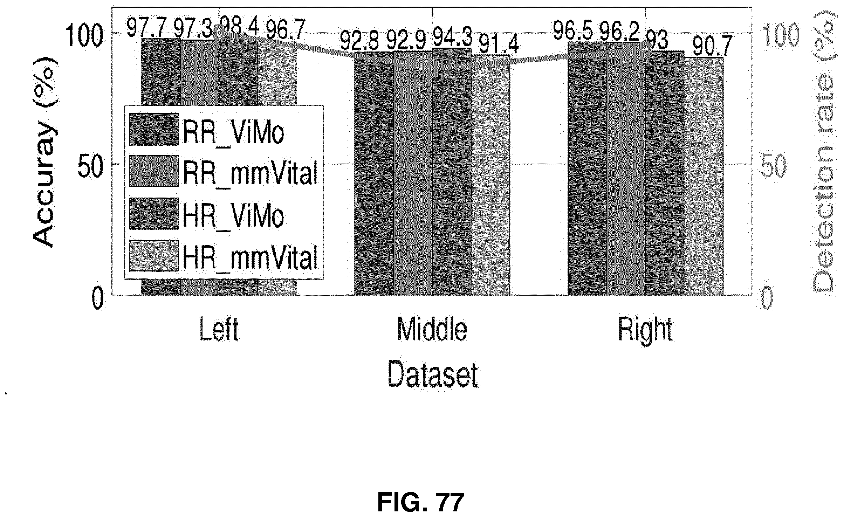

FIG. 77 illustrates an exemplary detection rate and estimation accuracy for a 3-user case, according to some embodiments of the present disclosure.

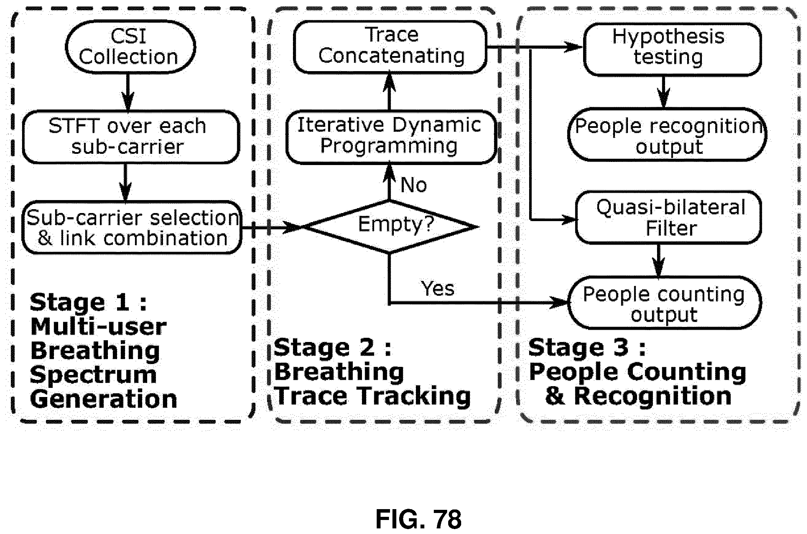

FIG. 78 illustrates an exemplary an exemplary processing flow of the system, according to various embodiments of the present teaching.

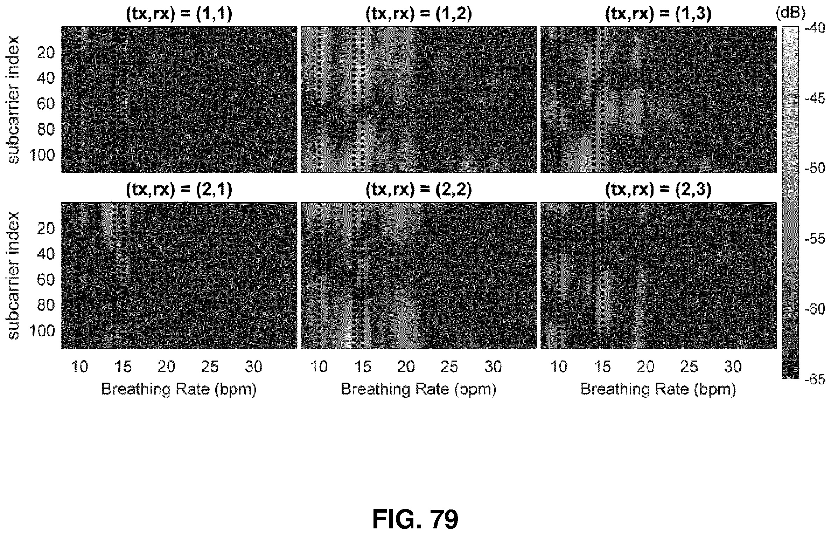

FIG. 79 illustrates an exemplary power spectrum density of the CIR amplitude of 6 links with a scenario that 3 people sit in car with breathing rate [10 14 15] bpm, according to various embodiments of the present teaching.

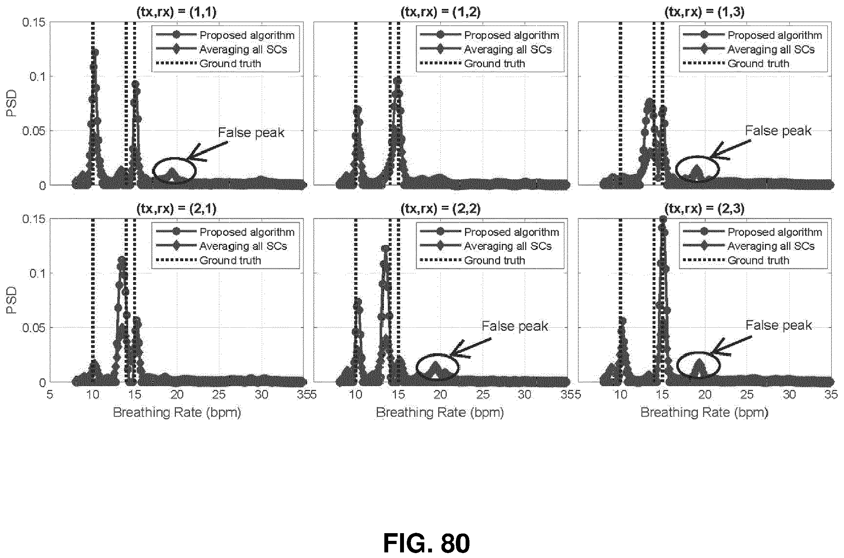

FIG. 80 illustrates an exemplary normalized power spectrum density of different links after subcarrier (SC) combination with a scenario that 3 people sit in car with breathing rate [10 14 15] bpm, according to various embodiments of the present teaching.

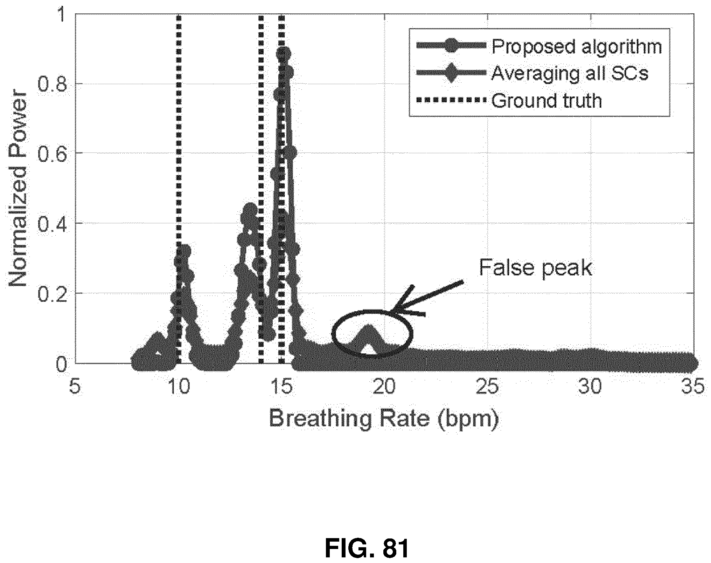

FIG. 81 illustrates an exemplary power spectrum density after link combination when 3 people sit in car with breathing rate [10 14 15] bpm, according to various embodiments of the present teaching.

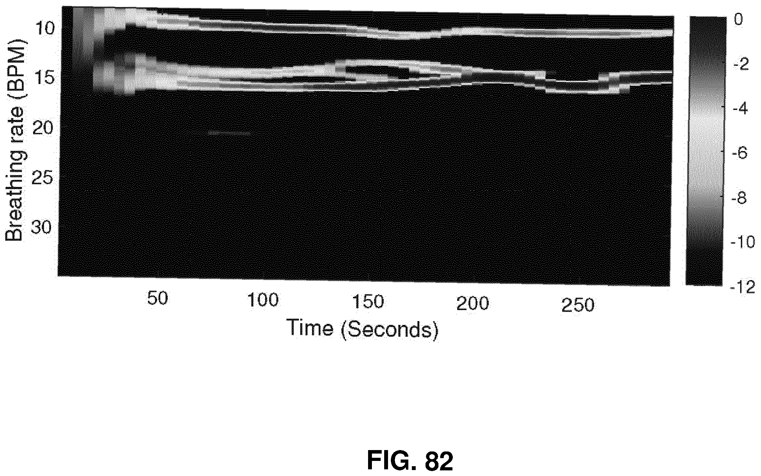

FIG. 82 illustrates an exemplary spectrum after link combination with a scenario that 3 people sit in car doing natural breathing and their average breathing rate are [10 14 15] bpm, according to various embodiments of the present teaching.

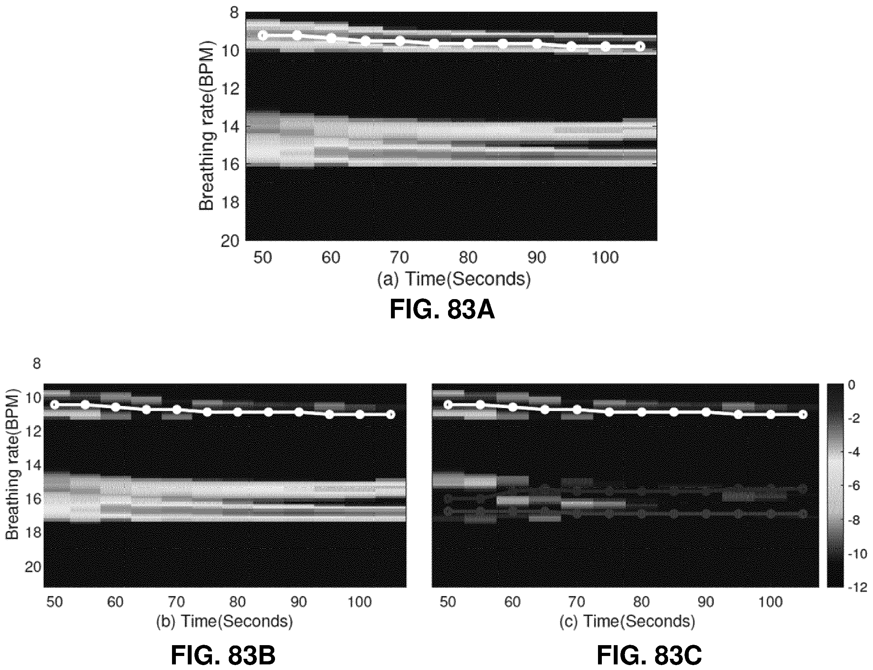

FIGs. 83A-83C illustrate an exemplary procedure of iterative dynamic programming (IDP), according to various embodiments of the present teaching.

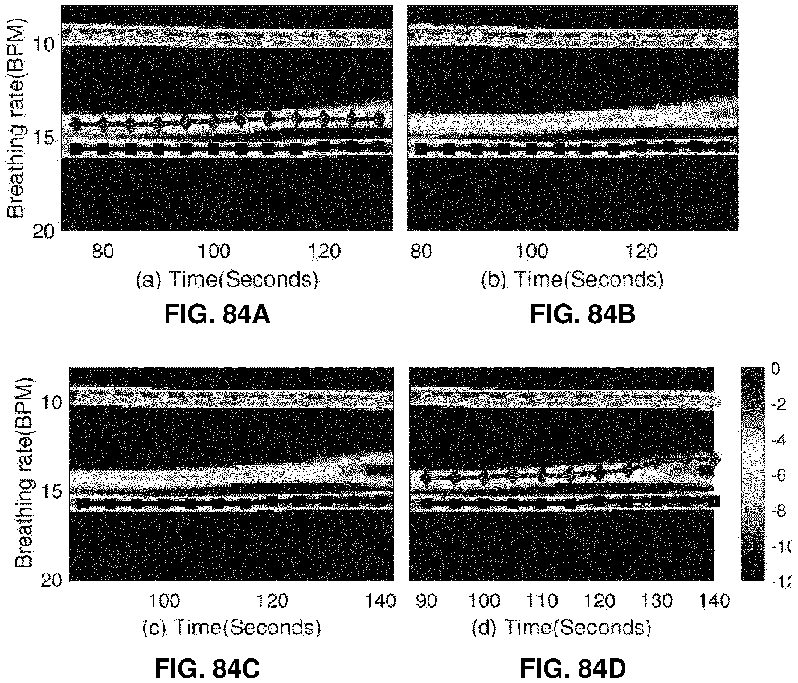

FIGs. 84A-84D illustrate exemplary traces found by IDP in four adjacent time windows, according to various embodiments of the present teaching.

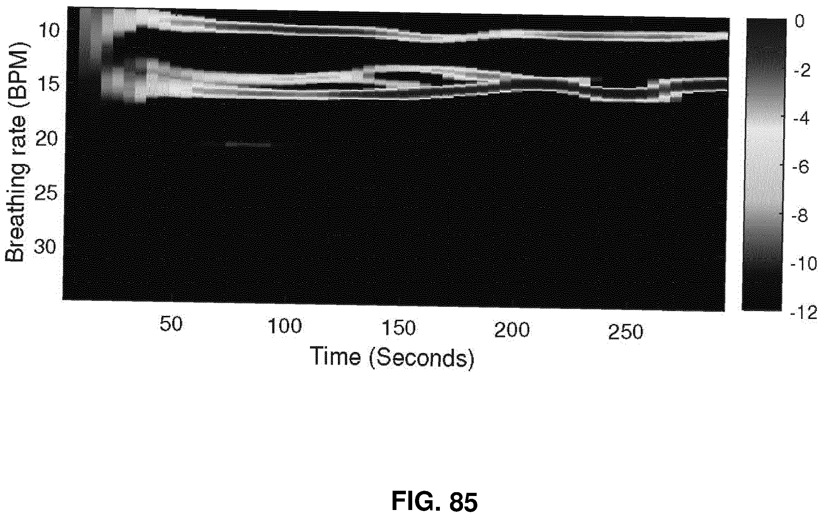

FIG. 85 illustrates an exemplary trace concatenation result of windows corresponding to FIGs. 84A-84D, according to various embodiments of the present teaching.

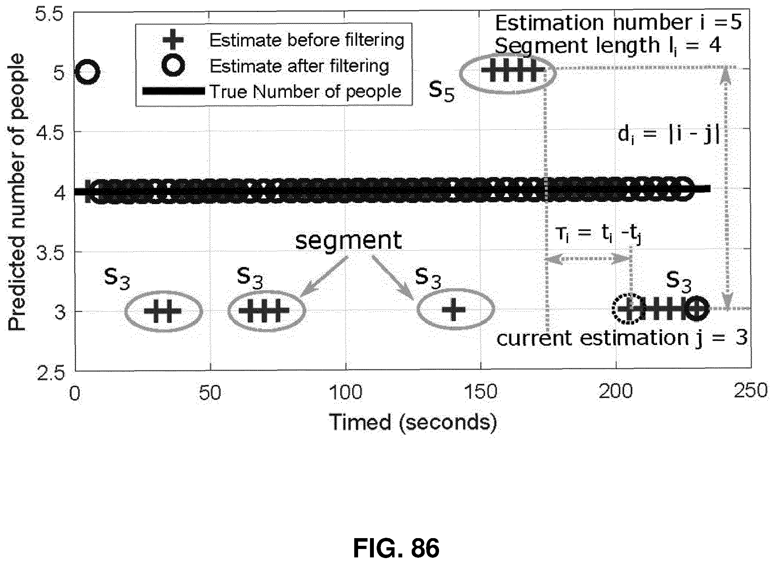

FIG. 86 illustrates an exemplary effect of quasi-bilateral filter in people counting, according to various embodiments of the present teaching.

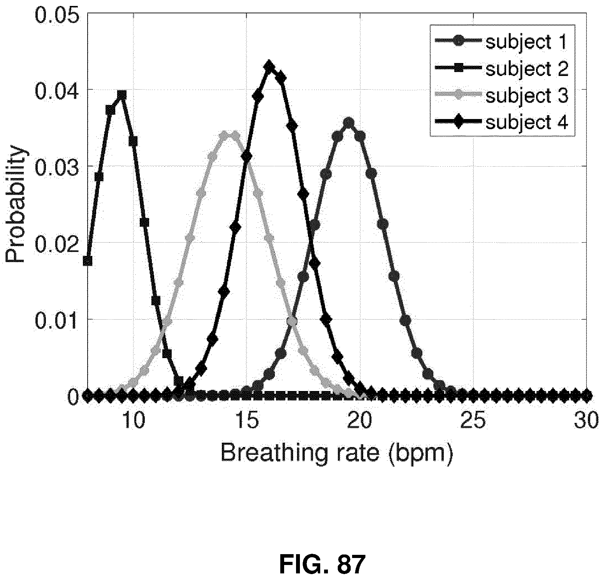

FIG. 87 illustrates an exemplary estimated probability density function (PDF) of 4 testing subjects for people recognition, according to various embodiments of the present teaching.

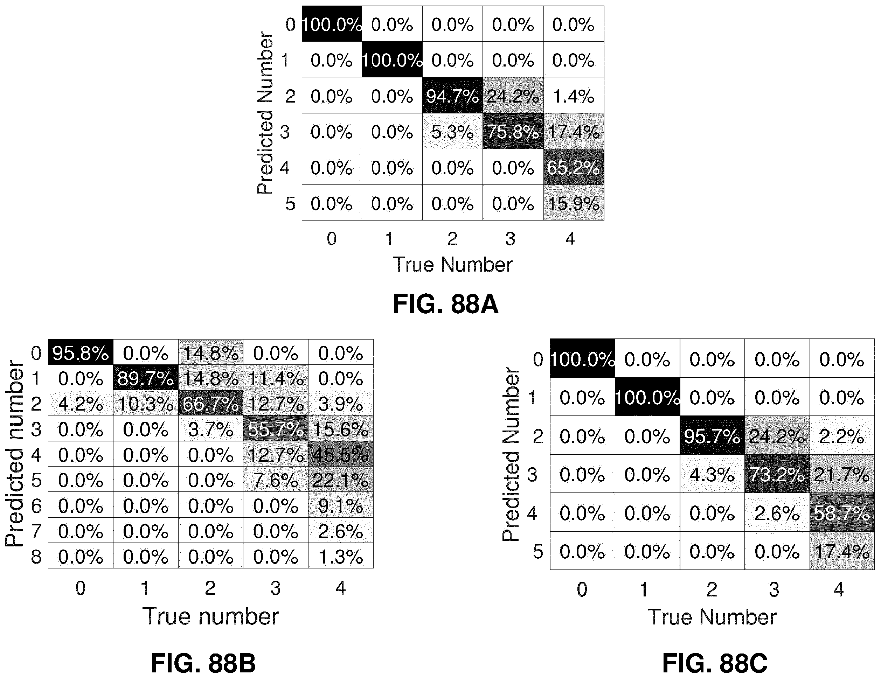

FIG. 88A illustrates an exemplary confusion matrix of a disclosed system for people counting in a lab, according to various embodiments of the present teaching.

FIG. 88B illustrates an exemplary confusion matrix of another system for people counting in a lab, according to various embodiments of the present teaching.

FIG. 88C illustrates an exemplary confusion matrix of a disclosed system without quasi-bilateral filter enabled for people counting in a lab, according to various embodiments of the present teaching.

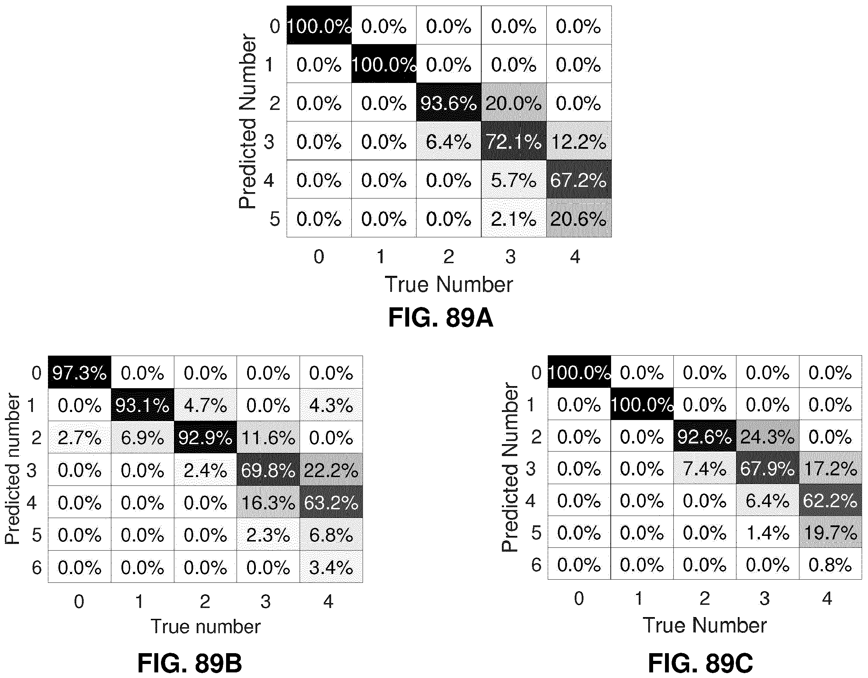

FIG. 89A illustrates an exemplary confusion matrix of a disclosed system for people counting in a car, according to various embodiments of the present teaching.

FIG. 89B illustrates an exemplary confusion matrix of another system for people counting in a car, according to various embodiments of the present teaching.

FIG. 89C illustrates an exemplary confusion matrix of a disclosed system without quasi-bilateral filter enabled for people counting in a car, according to various embodiments of the present teaching.

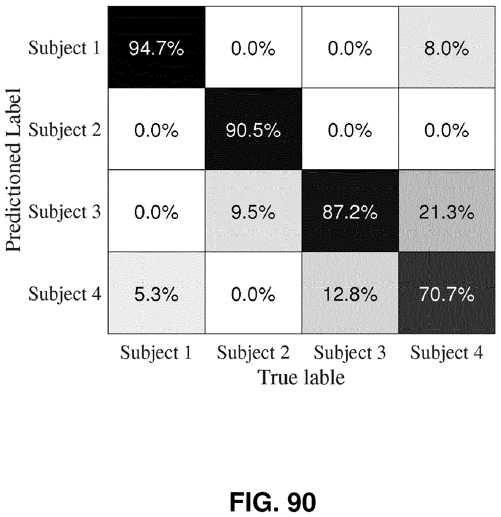

FIG. 90 illustrates an exemplary confusion matrix of people recognition in a smart home scenario, according to various embodiments of the present teaching.

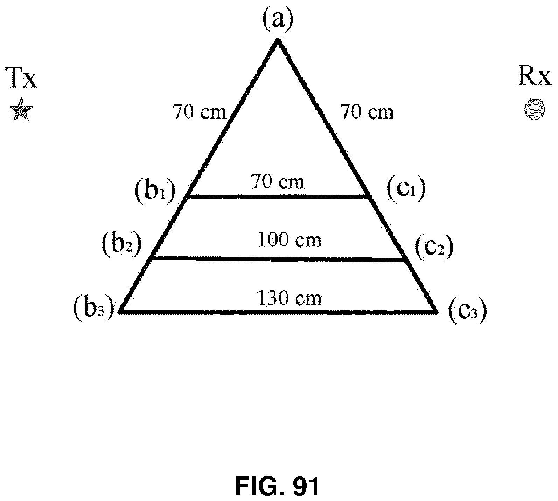

FIG. 91 illustrates an experiment setup for resolution investigation, where 3 users sit at different spatial separations and with different breathing frequency separations, according to various embodiments of the present teaching.

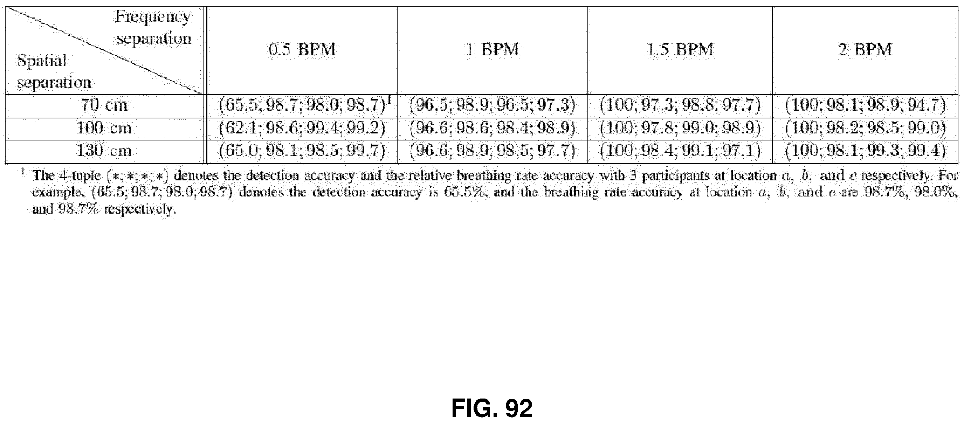

FIG. 92 illustrates an exemplary set of experiment results, according to various embodiments of the present teaching.

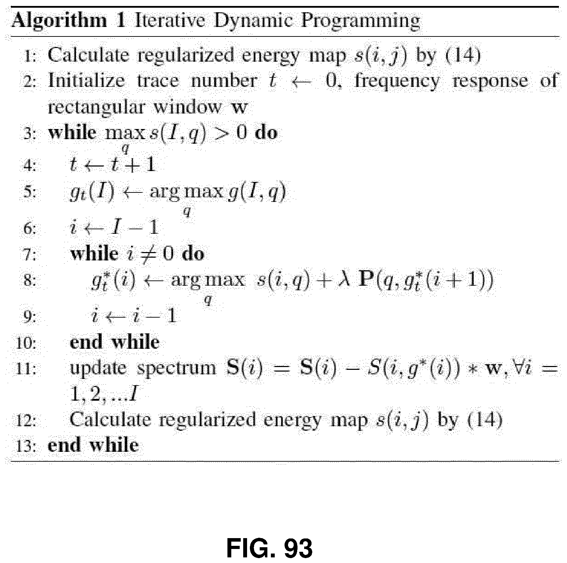

FIG. 93 illustrates an exemplary iterative dynamic programming algorithm, according to various embodiments of the present teaching.

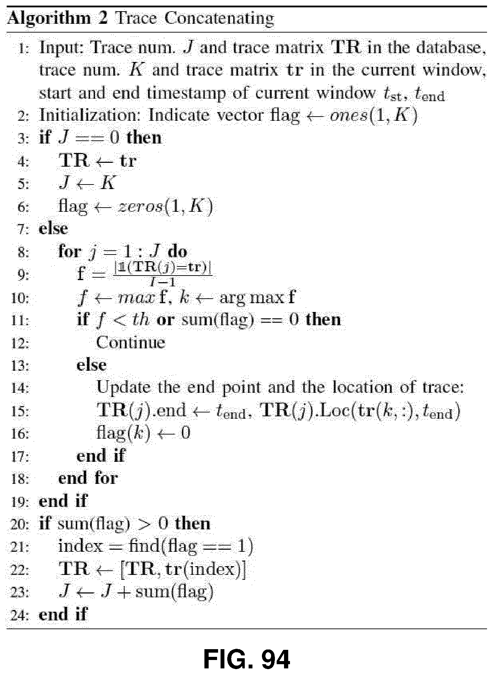

FIG. 94 illustrates an exemplary trace concatenating algorithm, according to various embodiments of the present teaching.

## DETAILED DESCRIPTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

In one embodiment, the present teaching discloses a method, apparatus, device, system, and/or software (method/apparatus/device/system/software) of a wireless monitoring system. A time series of channel information (CI) of a wireless multipath channel (channel) may be obtained (e.g. dynamically) using a processor, a memory communicatively coupled with the processor and a set of instructions stored in the memory. The time series of CI (TSCI) may be extracted from a wireless signal (signal) transmitted between a Type 1 heterogeneous wireless device (e.g. wireless transmitter, TX) and a Type 2 heterogeneous wireless device (e.g. wireless receiver, RX) in a venue through the channel. The channel may be impacted by an expression (e.g. motion, movement, expression, and/or change in position/pose/shape/expression) of an object in the venue. A characteristics and/or a spatial-temporal information (STI, e.g. motion information) of the object and/or of the motion of the object may be monitored based on the TSCI. A task may be performed based on the characteristics and/or STI. A presentation associated with the task may be generated in a user-interface (UI) on a device of a user. The TSCI may be a wireless signal stream. The TSCI or each CI may be preprocessed. A device may be a station (STA). The symbol "A/B" means "A and/or B" in the present teaching.

The expression may comprise placement, placement of moveable parts, location, position, orientation, identifiable place, region, spatial coordinate, presentation, state, static expression, size, length, width, height, angle, scale, shape, curve, surface, area, volume, pose, posture, manifestation, body language, dynamic expression, motion, motion sequence, gesture, extension, contraction, distortion, deformation, body expression (e.g. head, face, eye, mouth, tongue, hair, voice, neck, limbs, arm, hand, leg, foot, muscle, moveable parts), surface expression (e.g. shape, texture, material, color, electromagnetic (EM) characteristics, visual pattern, wetness, reflectance, translucency, flexibility), material property (e.g. living tissue, hair, fabric, metal, wood, leather, plastic, artificial material, solid, liquid, gas, temperature), movement, activity, behavior, change of expression, and/or some combination.

The wireless signal may comprise: transmitted/received signal, EM radiation, RF signal/transmission, signal in licensed/unlicensed /ISM band, bandlimited signal, baseband signal, wireless/mobile/cellular communication signal, wireless/mobile/cellular network signal, mesh signal, light signal/communication, downlink/uplink signal, unicast/multicast/broadcast signal, standard (e.g. WLAN, WWAN, WPAN, WBAN, international, national, industry, defacto, IEEE, IEEE 802, 802.11/15/16, WiFi, 802.11n/ac/ax/be, 3G/4G/LTE/5G/6G/7G/8G, 3GPP, Bluetooth, BLE, Zigbee, RFID, UWB, WiMax) compliant signal, protocol signal, standard frame, beacon/pilot/probe/enquiry/acknowledgement/handshake/synchronization signal, management/control/data frame, management/control/data signal, standardized wireless/cellular communication protocol, reference signal, source signal, motion probe/detection/sensing signal, and/or series of signals. The wireless signal may comprise a line-of-sight (LOS), and/or a non-LOS component (or path/link). Each CI may be extracted/generated/computed/sensed at a layer (e.g. PHY/MAC layer in OSI model) of Type 2 device and may be obtained by an application (e.g. software, firmware, driver, app, wireless monitoring software/system).

The wireless multipath channel may comprise: a communication channel, analog frequency channel (e.g. with analog carrier frequency near 700/800/900MHz, 1.8/1.8/2.4/3/5/6/27/60 GHz), coded channel (e.g. in CDMA), and/or channel of a wireless network/system (e.g. WLAN, WiFi, mesh, LTE, 4G/5G, Bluetooth, Zigbee, UWB, RFID, microwave). It may comprise more than one channel. The channels may be consecutive (e.g. with adjacent/overlapping bands) or non-consecutive channels (e.g. non-overlapping WiFi channels, one at 2.4GHz and one at 5GHz).

The TSCI may be extracted from the wireless signal at a layer of the Type 2 device (e.g. a layer of OSI reference model, physical layer, data link layer, logical link control layer, media access control (MAC) layer, network layer, transport layer, session layer, presentation layer, application layer, TCP/IP layer, internet layer, link layer). The TSCI may be extracted from a derived signal (e.g. baseband signal, motion detection signal, motion sensing signal) derived from the wireless signal (e.g. RF signal). It may be (wireless) measurements sensed by the communication protocol (e.g. standardized protocol) using existing mechanism (e.g. wireless/cellular communication standard/network, 3G/LTE/4G/5G/6G/7G/8G, WiFi, IEEE 802.11/15/16). The derived signal may comprise a packet with at least one of: a preamble, a header and a payload (e.g. for data/control/management in wireless links/networks). The TSCI may be extracted from a probe signal (e.g. training sequence, STF, LTF, L-STF, L-LTF, L-SIG, HE-STF, HE-LTF, HE-SIG-A, HE-SIG-B, CEF) in the packet. A motion detection/sensing signal may be recognized/identified base on the probe signal. The packet may be a standard-compliant protocol frame, management frame, control frame, data frame, sounding frame, excitation frame, illumination frame, null data frame, beacon frame, pilot frame, probe frame, request frame, response frame, association frame, reassociation frame, disassociation frame, authentication frame, action frame, report frame, poll frame, announcement frame, extension frame, enquiry frame, acknowledgement frame, RTS frame, CTS frame, QoS frame, CF-Poll frame, CF-Ack frame, block acknowledgement frame, reference frame, training frame, and/or synchronization frame.

The packet may comprise a control data and/or a motion detection probe. A data (e.g. ID/parameters/ characteristics/ settings/ control signal/command/instruction/ notification/ broadcasting-related information of the Type 1 device) may be obtained from the payload. The wireless signal may be transmitted by the Type 1 device. It may be received by the Type 2 device. A database (e.g. in local server, hub device, cloud server, storage network) may be used to store the TSCI, characteristics, STI, signatures, patterns, behaviors, trends, parameters, analytics, output responses, identification information, user information, device information, channel information, venue (e.g. map, environmental model, network, proximity devices/networks) information, task information, class/category information, presentation (e.g. UI) information, and/or other information.

The Type 1/Type 2 device may comprise at least one of: electronics, circuitry, transmitter (TX)/receiver (RX)/transceiver, RF interface, "Origin Satellite"/"Tracker Bot", unicast/multicast/broadcasting device, wireless source device, source/destination device, wireless node, hub device, target device, motion detection device, sensor device, remote/wireless sensor device, wireless communication device, wireless-enabled device, standard compliant device, and/or receiver. The Type 1 (or Type 2) device may be heterogeneous because, when there are more than one instances of Type 1 (or Type 2) device, they may have different circuitry, enclosure, structure, purpose, auxiliary functionality, chip/IC, processor, memory, software, firmware, network connectivity, antenna, brand, model, appearance, form, shape, color, material, and/or specification. The Type 1/Type 2 device may comprise: access point, router, mesh router, internet-of-things (IoT) device, wireless terminal, one or more radio/RF subsystem/wireless interface (e.g. 2.4GHz radio, 5GHz radio, front haul radio, backhaul radio), modem, RF front end, RF/radio chip or integrated circuit (IC).

At least one of: Type 1 device, Type 2 device, a link between them, the object, the characteristics, the STI, the monitoring of the motion, and the task may be associated with an identification (ID) such as UUID. The Type 1/Type 2/another device may obtain/store/retrieve/ access/preprocess/condition/process/analyze/monitor/apply the TSCI. The Type 1 and Type 2 devices may communicate network traffic in another channel (e.g. Ethernet, HDMI, USB, Bluetooth, BLE, WiFi, LTE, other network, the wireless multipath channel) in parallel to the wireless signal. The Type 2 device may passively observe/monitor/receive the wireless signal from the Type 1 device in the wireless multipath channel without establishing connection (e.g. association/authentication) with, or requesting service from, the Type 1 device.

The transmitter (i.e. Type 1 device) may function as (play role of) receiver (i.e. Type 2 device) temporarily, sporadically, continuously, repeatedly, interchangeably, alternately, simultaneously, concurrently, and/or contemporaneously; and vice versa. A device may function as Type 1 device (transmitter) and/or Type 2 device (receiver) temporarily, sporadically, continuously, repeatedly, simultaneously, concurrently, and/or contemporaneously. There may be multiple wireless nodes each being Type 1 (TX) and/or Type 2 (RX) device. A TSCI may be obtained between every two nodes when they exchange/communicate wireless signals. The characteristics and/or STI of the object may be monitored individually based on a TSCI, or jointly based on two or more (e.g. all) TSCI. The motion of the object may be monitored actively (in that Type 1 device, Type 2 device, or both, are wearable of/associated with the object) and/or passively (in that both Type 1 and Type 2 devices are not wearable of/associated with the object). It may be passive because the object may not be associated with the Type 1 device and/or the Type 2 device. The object (e.g. user, an automated guided vehicle or AGV) may not need to carry/install any wearables/fixtures (i.e. the Type 1 device and the Type 2 device are not wearable/attached devices that the object needs to carry in order perform the task). It may be active because the object may be associated with either the Type 1 device and/or the Type 2 device. The object may carry (or installed) a wearable/a fixture (e.g. the Type 1 device, the Type 2 device, a device communicatively coupled with either the Type 1 device or the Type 2 device).

The presentation may be visual, audio, image, video, animation, graphical presentation, text, etc. A computation of the task may be performed by a processor (or logic unit) of the Type 1 device, a processor (or logic unit) of an IC of the Type 1 device, a processor (or logic unit) of the Type 2 device, a processor of an IC of the Type 2 device, a local server, a cloud server, a data analysis subsystem, a signal analysis subsystem, and/or another processor. The task may be performed with/without reference to a wireless fingerprint or a baseline (e.g. collected, processed, computed, transmitted and/or stored in a training phase/survey/current survey/previous survey/recent survey/initial wireless survey, a passive fingerprint), a training, a profile, a trained profile, a static profile, a survey, an initial wireless survey, an initial setup, an installation, a re-training, an updating and a reset.

The Type 1 device (TX device) may comprise at least one heterogeneous wireless transmitter. The Type 2 device (RX device) may comprise at least one heterogeneous wireless receiver. The Type 1 device and the Type 2 device may be collocated. The Type 1 device and the Type 2 device may be the same device. Any device may have a data processing unit/apparatus, a computing unit/system, a network unit/system, a processor (e.g. logic unit), a memory communicatively coupled with the processor, and a set of instructions stored in the memory to be executed by the processor. Some processors, memories and sets of instructions may be coordinated. There may be multiple Type 1 devices interacting (e.g. communicating, exchange signal/control/notification/other data) with the same Type 2 device (or multiple Type 2 devices), and/or there may be multiple Type 2 devices interacting with the same Type 1 device. The multiple Type 1 devices/Type 2 devices may be synchronized and/or asynchronous, with same/different window width/size and/or time shift, same/different synchronized start time, synchronized end time, etc. Wireless signals sent by the multiple Type 1 devices may be sporadic, temporary, continuous, repeated, synchronous, simultaneous, concurrent, and/or contemporaneous. The multiple Type 1 devices/Type 2 devices may operate independently and/or collaboratively. A Type 1 and/or Type 2 device may have/comprise/be heterogeneous hardware circuitry (e.g. a heterogeneous chip or a heterogeneous IC capable of generating/receiving the wireless signal, extracting CI from received signal, or making the CI available). They may be communicatively coupled to same or different servers (e.g. cloud server, edge server, local server, hub device).

Operation of one device may be based on operation, state, internal state, storage, processor, memory output, physical location, computing resources, network of another device. Difference devices may communicate directly, and/or via another device/server/hub device/cloud server. The devices may be associated with one or more users, with associated settings. The settings may be chosen once, pre-programmed, and/or changed (e.g. adjusted, varied, modified)/varied over time. There may be additional steps in the method. The steps and/or the additional steps of the method may be performed in the order shown or in another order. Any steps may be performed in parallel, iterated, or otherwise repeated or performed in another manner. A user may be human, adult, older adult, man, woman, juvenile, child, baby, pet, animal, creature, machine, computer module/software, etc.

In the case of one or multiple Type 1 devices interacting with one or multiple Type 2 devices, any processing (e.g. time domain, frequency domain) may be different for different devices. The processing may be based on locations, orientation, direction, roles, user-related characteristics, settings, configurations, available resources, available bandwidth, network connection, hardware, software, processor, co-processor, memory, battery life, available power, antennas, antenna types, directional/unidirectional characteristics of the antenna, power setting, and/or other parameters/characteristics of the devices.

The wireless receiver (e.g. Type 2 device) may receive the signal and/or another signal from the wireless transmitter (e.g. Type 1 device). The wireless receiver may receive another signal from another wireless transmitter (e.g. a second Type 1 device). The wireless transmitter may transmit the signal and/or another signal to another wireless receiver (e.g. a second Type 2 device). The wireless transmitter, wireless receiver, another wireless receiver and/or another wireless transmitter may be moving with the object and/or another object. The another object may be tracked.

The Type 1 and/or Type 2 device may be capable of wirelessly coupling with at least two Type 2 and/or Type 1 devices. The Type 1 device may be caused/controlled to switch/establish wireless coupling (e.g. association, authentication) from the Type 2 device to a second Type 2 device at another location in the venue. Similarly, the Type 2 device may be caused/controlled to switch/establish wireless coupling from the Type 1 device to a second Type 1 device at yet another location in the venue. The switching may be controlled by a server (or a hub device), the processor, the Type 1 device, the Type 2 device, and/or another device. The radio used before and after switching may be different. A second wireless signal (second signal) may be caused to be transmitted between the Type 1 device and the second Type 2 device (or between the Type 2 device and the second Type 1 device) through the channel. A second TSCI of the channel extracted from the second signal may be obtained. The second signal may be the first signal. The characteristics, STI and/or another quantity of the object may be monitored based on the second TSCI. The Type 1 device and the Type 2 device may be the same. The characteristics, STI and/or another quantity with different time stamps may form a waveform. The waveform may be displayed in the presentation.

The wireless signal and/or another signal may have data embedded. The wireless signal may be a series of probe signals (e.g. a repeated transmission of probe signals, a re-use of one or more probe signals). The probe signals may change/vary over time. A probe signal may be a standard compliant signal, protocol signal, standardized wireless protocol signal, control signal, data signal, wireless communication network signal, cellular network signal, WiFi signal, LTE/5G/6G/7G signal, reference signal, beacon signal, motion detection signal, and/or motion sensing signal. A probe signal may be formatted according to a wireless network standard (e.g. WiFi), a cellular network standard (e.g.

LTE/5G/6G), or another standard. A probe signal may comprise a packet with a header and a payload. A probe signal may have data embedded. The payload may comprise data. A probe signal may be replaced by a data signal. The probe signal may be embedded in a data signal. The wireless receiver, wireless transmitter, another wireless receiver and/or another wireless transmitter may be associated with at least one processor, memory communicatively coupled with respective processor, and/or respective set of instructions stored in the memory which when executed cause the processor to perform any and/or all steps needed to determine the STI (e.g. motion information), initial STI, initial time, direction, instantaneous location, instantaneous angle, and/or speed, of the object. The processor, the memory and/or the set of instructions may be associated with the Type 1 device, one of the at least one Type 2 device, the object, a device associated with the object, another device associated with the venue, a cloud server, a hub device, and/or another server.

The Type 1 device may transmit the signal in a broadcasting manner to at least one Type 2 device(s) through the channel in the venue. The signal is transmitted without the Type 1 device establishing wireless connection (e.g. association, authentication) with any Type 2 device, and without any Type 2 device requesting services from the Type 1 device. The Type 1 device may transmit to a particular media access control (MAC) address common for more than one Type 2 devices. Each Type 2 device may adjust its MAC address to the particular MAC address. The particular MAC address may be associated with the venue. The association may be recorded in an association table of an Association Server (e.g. hub device). The venue may be identified by the Type 1 device, a Type 2 device and/or another device based on the particular MAC address, the series of probe signals, and/or the at least one TSCI extracted from the probe signals. For example, a Type 2 device may be moved to a new location in the venue (e.g. from another venue). The Type 1 device may be newly set up in the venue such that the Type 1 and Type 2 devices are not aware of each other. During set up, the Type 1 device may be instructed/guided/ caused/ controlled (e.g. using dummy receiver, using hardware pin setting/connection, using stored setting, using local setting, using remote setting, using downloaded setting, using hub device, or using server) to send the series of probe signals to the particular MAC address. Upon power up, the Type 2 device may scan for probe signals according to a table of MAC addresses (e.g. stored in a designated source, server, hub device, cloud server) that may be used for broadcasting at different locations (e.g. different MAC address used for different venue such as house, office, enclosure, floor, multi-storey building, store, airport, mall, stadium, hall, station, subway, lot, area, zone, region, district, city, country, continent). When the Type 2 device detects the probe signals sent to the particular MAC address, the Type 2 device can use the table to identify the venue based on the MAC address. A location of a Type 2 device in the venue may be computed based on the particular MAC address, the series of probe signals, and/or the at least one TSCI obtained by the Type 2 device from the probe signals. The computing may be performed by the Type 2 device. The particular MAC address may be changed (e.g. adjusted, varied, modified) over time. It may be changed according to a time table, rule, policy, mode, condition, situation and/or change. The particular MAC address may be selected based on availability of the MAC address, a pre-selected list, collision pattern, traffic pattern, data traffic between the Type 1 device and another device, effective bandwidth, random selection, and/or a MAC address switching plan. The particular MAC address may be the MAC address of a second wireless device (e.g. a dummy receiver, or a receiver that serves as a dummy receiver).

The Type 1 device may transmit the probe signals in a channel selected from a set of channels. At least one CI of the selected channel may be obtained by a respective Type 2 device from the probe signal transmitted in the selected channel. The selected channel may be changed (e.g. adjusted, varied, modified) over time. The change may be according to a time table, rule, policy, mode, condition, situation, and/or change. The selected channel may be selected based on availability of channels, random selection, a pre-selected list, co-channel interference, inter-channel interference, channel traffic pattern, data traffic between the Type 1 device and another device, effective bandwidth associated with channels, security criterion, channel switching plan, a criterion, a quality criterion, a signal quality condition, and/or consideration.

The particular MAC address and/or an information of the selected channel may be communicated between the Type 1 device and a server (e.g. hub device) through a network. The particular MAC address and/or the information of the selected channel may also be communicated between a Type 2 device and a server (e.g. hub device) through another network. The Type 2 device may communicate the particular MAC address and/or the information of the selected channel to another Type 2 device (e.g. via mesh network, Bluetooth, WiFi, NFC, ZigBee, etc.). The particular MAC address and/or selected channel may be chosen by a server (e.g. hub device). The particular MAC address and/or selected channel may be signaled in an announcement channel by the Type 1 device, the Type 2 device and/or a server (e.g. hub device). Before being communicated, any information may be pre-processed.

Wireless connection (e.g. association, authentication) between the Type 1 device and another wireless device may be established (e.g. using a signal handshake). The Type 1 device may send a first handshake signal (e.g. sounding frame, probe signal, request-to-send RTS) to the another device. The another device may reply by sending a second handshake signal (e.g. a command, or a clear-to-send CTS) to the Type 1 device, triggering the Type 1 device to transmit the signal (e.g. series of probe signals) in the broadcasting manner to multiple Type 2 devices without establishing connection with any Type 2 device. The second handshake signals may be a response or an acknowledge (e.g. ACK) to the first handshake signal. The second handshake signal may contain a data with information of the venue, and/or the Type 1 device. The another device may be a dummy device with a purpose (e.g. primary purpose, secondary purpose) to establish the wireless connection with the Type 1 device, to receive the first signal, and/or to send the second signal. The another device may be physically attached to the Type 1 device.

In another example, the another device may send a third handshake signal to the Type 1 device triggering the Type 1 device to broadcast the signal (e.g. series of probe signals) to multiple Type 2 devices without establishing connection (e.g. association, authentication) with any Type 2 device. The Type 1 device may reply to the third special signal by transmitting a fourth handshake signal to the another device. The another device may be used to trigger more than one Type 1 devices to broadcast. The triggering may be sequential, partially sequential, partially parallel, or fully parallel. The another device may have more than one wireless circuitries to trigger multiple transmitters in parallel. Parallel trigger may also be achieved using at least one yet another device to perform the triggering (similar to what as the another device does) in parallel to the another device. The another device may not communicate (or suspend communication) with the Type 1 device after establishing connection with the Type 1 device. Suspended communication may be resumed. The another device may enter an inactive mode, hibernation mode, sleep mode, stand-by mode, low-power mode, OFF mode and/or power-down mode, after establishing the connection with the Type 1 device. The another device may have the particular MAC address so that the Type 1 device sends the signal to the particular MAC address. The Type 1 device and/or the another device may be controlled and/or coordinated by a first processor associated with the Type 1 device, a second processor associated with the another device, a third processor associated with a designated source and/or a fourth processor associated with another device. The first and second processors may coordinate with each other.

A first series of probe signals may be transmitted by a first antenna of the Type 1 device to at least one first Type 2 device through a first channel in a first venue. A second series of probe signals may be transmitted by a second antenna of the Type 1 device to at least one second Type 2 device through a second channel in a second venue. The first series and the second series may/may not be different. The at least one first Type 2 device may/may not be different from the at least one second Type 2 device. The first and/or second series of probe signals may be broadcasted without connection (e.g. association, authentication) established between the Type 1 device and any Type 2 device. The first and second antennas may be same/different. The two venues may have different sizes, shape, multipath characteristics. The first and second venues may overlap. The respective immediate areas around the first and second antennas may overlap. The first and second channels may be same/different. For example, the first one may be WiFi while the second may be LTE. Or, both may be WiFi, but the first one may be 2.4GHz WiFi and the second may be 5GHz WiFi. Or, both may be 2.4GHz WiFi, but have different channel numbers, SSID names, and/or WiFi settings.

Each Type 2 device may obtain at least one TSCI from the respective series of probe signals, the CI being of the respective channel between the Type 2 device and the Type 1 device. Some first Type 2 device(s) and some second Type 2 device(s) may be the same. The first and second series of probe signals may be synchronous/asynchronous. A probe signal may be transmitted with data or replaced by a data signal. The first and second antennas may be the same. The first series of probe signals may be transmitted at a first rate (e.g. 30Hz). The second series of probe signals may be transmitted at a second rate (e.g. 200Hz). The first and second rates may be same/different. The first and/or second rate may be changed (e.g. adjusted, varied, modified) over time. The change may be according to a time table, rule, policy, mode, condition, situation, and/or change. Any rate may be changed (e.g. adjusted, varied, modified) over time. The first and/or second series of probe signals may be transmitted to a first MAC address and/or second MAC address respectively. The two MAC addresses may be same/different. The first series of probe signals may be transmitted in a first channel. The second series of probe signals may be transmitted in a second channel. The two channels may be same/different. The first or second MAC address, first or second channel may be changed over time. Any change may be according to a time table, rule, policy, mode, condition, situation, and/or change.

The Type 1 device and another device may be controlled and/or coordinated, physically attached, or may be of/in/of a common device. They may be controlled by/connected to a common data processor, or may be connected to a common bus interconnect/ network/ LAN/ Bluetooth network/ NFC network/ BLE network/ wired network/ wireless network/ mesh network/ mobile network/ cloud. They may share a common memory, or be associated with a common user, user device, profile, account, identity (ID), identifier, household, house, physical address, location, geographic coordinate, IP subnet, SSID, home device, office device, and/or manufacturing device. Each Type 1 device may be a signal source of a set of respective Type 2 devices (i.e. it sends a respective signal (e.g. respective series of probe signals) to the set of respective Type 2 devices). Each respective Type 2 device chooses the Type 1 device from among all Type 1 devices as its signal source. Each Type 2 device may choose asynchronously. At least one TSCI may be obtained by each respective Type 2 device from the respective series of probe signals from the Type 1 device, the CI being of the channel between the Type 2 device and the Type 1 device. The respective Type 2 device chooses the Type 1 device from among all Type 1 devices as its signal source based on identity (ID) or identifier of Type 1/Type 2 device, task to be performed, past signal source, history (e.g. of past signal source, Type 1 device, another Type 1 device, respective Type 2 receiver, and/or another Type 2 receiver), threshold for switching signal source, and/or information of a user, account, access info, parameter, characteristics, and/or signal strength (e.g. associated with the Type 1 device and/or the respective Type 2 receiver). Initially, the Type 1 device may be signal source of a set of initial respective Type 2 devices (i.e. the Type 1 device sends a respective signal (series of probe signals) to the set of initial respective Type 2 devices) at an initial time. Each initial respective Type 2 device chooses the Type 1 device from among all Type 1 devices as its signal source.

The signal source (Type 1 device) of a particular Type 2 device may be changed (e.g. adjusted, varied, modified) when (1) time interval between two adjacent probe signals (e.g. between current probe signal and immediate past probe signal, or between next probe signal and current probe signal) received from current signal source of the Type 2 device exceeds a first threshold; (2) signal strength associated with current signal source of the Type 2 device is below a second threshold; (3) a processed signal strength associated with current signal source of the Type 2 device is below a third threshold, the signal strength processed with low pass filter, band pass filter, median filter, moving average filter, weighted averaging filter, linear filter and/or non-linear filter; and/or (4) signal strength (or processed signal strength) associated with current signal source of the Type 2 device is below a fourth threshold for a significant percentage of a recent time window (e.g. 70%, 80%, 90%). The percentage may exceed a fifth threshold. The first, second, third, fourth and/or fifth thresholds may be time varying.

Condition (1) may occur when the Type 1 device and the Type 2 device become progressively far away from each other, such that some probe signal from the Type 1 device becomes too weak and is not received by the Type 2 device. Conditions (2)-(4) may occur when the two devices become far from each other such that the signal strength becomes very weak.

The signal source of the Type 2 device may not change if other Type 1 devices have signal strength weaker than a factor (e.g. 1, 1.1, 1.2, or 1.5) of the current signal source. If the signal source is changed (e.g. adjusted, varied, modified), the new signal source may take effect at a near future time (e.g. the respective next time). The new signal source may be the Type 1 device with strongest signal strength, and/or processed signal strength. The current and new signal source may be same/different.

A list of available Type 1 devices may be initialized and maintained by each Type 2 device. The list may be updated by examining signal strength and/or processed signal strength associated with the respective set of Type 1 devices. A Type 2 device may choose between a first series of probe signals from a first Type 1 device and a second series of probe signals from a second Type 1 device based on: respective probe signal rate, MAC addresses, channels, characteristics/properties/ states, task to be performed by the Type 2 device, signal strength of first and second series, and/or another consideration.

The series of probe signals may be transmitted at a regular rate (e.g. 100 Hz). The series of probe signals may be scheduled at a regular interval (e.g. 0.01s for 100 Hz), but each probe signal may experience small time perturbation, perhaps due to timing requirement, timing control, network control, handshaking, message passing, collision avoidance, carrier sensing, congestion, availability of resources, and/or another consideration. The rate may be changed (e.g. adjusted, varied, modified). The change may be according to a time table (e.g. changed once every hour), rule, policy, mode, condition and/or change (e.g. changed whenever some event occur). For example, the rate may normally be 100Hz, but changed to 1000Hz in demanding situations, and to 1Hz in low power/standby situation. The probe signals may be sent in burst.

The probe signal rate may change based on a task performed by the Type 1 device or Type 2 device (e.g. a task may need 100 Hz normally and 1000 Hz momentarily for 20 seconds). In one example, the transmitters (Type 1 devices), receivers (Type 2 device), and associated tasks may be associated adaptively (and/or dynamically) to classes (e.g. classes that are: low-priority, high-priority, emergency, critical, regular, privileged, non-subscription, subscription, paying, and/or non-paying). A rate (of a transmitter) may be adjusted for the sake of some class (e.g. high priority class). When the need of that class changes, the rate may be changed (e.g. adjusted, varied, modified). When a receiver has critically low power, the rate may be reduced to reduce power consumption of the receiver to respond to the probe signals. In one example, probe signals may be used to transfer power wirelessly to a receiver (Type 2 device), and the rate may be adjusted to control the amount of power transferred to the receiver.

The rate may be changed by (or based on): a server (e.g. hub device), the Type 1 device and/or the Type 2 device. Control signals may be communicated between them. The server may monitor, track, forecast and/or anticipate the needs of the Type 2 device and/or the tasks performed by the Type 2 device, and may control the Type 1 device to change the rate. The server may make scheduled changes to the rate according to a time table. The server may detect an emergency situation and change the rate immediately. The server may detect a developing condition and adjust the rate gradually. The characteristics and/or STI (e.g. motion information) may be monitored individually based on a TSCI associated with a particular Type 1 device and a particular Type 2 device, and/or monitored jointly based on any TSCI associated with the particular Type 1 device and any Type 2 device, and/or monitored jointly based on any TSCI associated with the particular Type 2 device and any Type 1 device, and/or monitored globally based on any TSCI associated with any Type 1 device and any Type 2 device. Any joint monitoring may be associated with: a user, user account, profile, household, map of venue, environmental model of the venue, and/or user history, etc.

A first channel between a Type 1 device and a Type 2 device may be different from a second channel between another Type 1 device and another Type 2 device. The two channels may be associated with different frequency bands, bandwidth, carrier frequency, modulation, wireless standards, coding, encryption, payload characteristics, networks, network ID, SSID, network characteristics, network settings, and/or network parameters, etc. The two channels may be associated with different kinds of wireless system (e.g. two of the following: WiFi, LTE, LTE-A, LTE-U, 2.5G, 3G, 3.5G, 4G, beyond 4G, 5G, 6G, 7G, a cellular network standard, UMTS, 3GPP, GSM, EDGE, TDMA, FDMA, CDMA, WCDMA, TD-SCDMA, 802.11 system, 802.15 system, 802.16 system, mesh network, Zigbee, NFC, WiMax, Bluetooth, BLE, RFID, UWB, microwave system, radar like system). For example, one is WiFi and the other is LTE. The two channels may be associated with similar kinds of wireless system, but in different network. For example, the first channel may be associated with a WiFi network named "Pizza and Pizza" in the 2.4GHz band with a bandwidth of 20MHz while the second may be associated with a WiFi network with SSID of "StarBud hotspot" in the 5GHz band with a bandwidth of 40MHz. The two channels may be different channels in same network (e.g. the "StarBud hotspot" network).

In one embodiment, a wireless monitoring system may comprise training a classifier of multiple events in a venue based on training TSCI associated with the multiple events. A CI or TSCI associated with an event may be considered/may comprise a wireless sample/characteristics/fingerprint associated with the event (and/or the venue, the environment, the object, the motion of the object, a state/ emotional state/ mental state/ condition/ stage/ gesture/ gait/ action/ movement/ activity/ daily activity/ history/ event of the object, etc.). For each of the multiple known events happening in the venue in a respective training (e.g. surveying, wireless survey, initial wireless survey) time period associated with the known event, a respective training wireless signal (e.g. a respective series of training probe signals) may be transmitted by an antenna of a first Type 1 heterogeneous wireless device using a processor, a memory and a set of instructions of the first Type 1 device to at least one first Type 2 heterogeneous wireless device through a wireless multipath channel in the venue in the respective training time period.

At least one respective time series of training CI (training TSCI) may be obtained asynchronously by each of the at least one first Type 2 device from the (respective) training signal. The CI may be CI of the channel between the first Type 2 device and the first Type 1 device in the training time period associated with the known event. The at least one training TSCI may be preprocessed. The training may be a wireless survey (e.g. during installation of Type 1 device and/or Type 2 device).

For a current event happening in the venue in a current time period, a current wireless signal (e.g. a series of current probe signals) may be transmitted by an antenna of a second Type 1 heterogeneous wireless device using a processor, a memory and a set of instructions of the second Type 1 device to at least one second Type 2 heterogeneous wireless device through the channel in the venue in the current time period associated with the current event. At least one time series of current CI (current TSCI) may be obtained asynchronously by each of the at least one second Type 2 device from the current signal (e.g. the series of current probe signals). The CI may be CI of the channel between the second Type 2 device and the second Type 1 device in the current time period associated with the current event. The at least one current TSCI may be preprocessed.

The classifier may be applied to classify at least one current TSCI obtained from the series of current probe signals by the at least one second Type 2 device, to classify at least one portion of a particular current TSCI, and/or to classify a combination of the at least one portion of the particular current TSCI and another portion of another TSCI. The classifier may partition TSCI (or the characteristics/STI or other analytics or output responses) into clusters and associate the clusters to specific events/ objects/ subjects/ locations/ movements/ activities. Labels/tags may be generated for the clusters. The clusters may be stored and retrieved. The classifier may be applied to associate the current TSCI (or characteristics/STI or the other analytics/output response, perhaps associated with a current event) with: a cluster, a known/specific event, a class/ category/ group/ grouping/ list/ cluster/ set of known events/subjects/locations/movements/activities, an unknown event, a class/ category/ group/ grouping/ list/ cluster/ set of unknown events/subjects/locations/movements/activities, and/or another event/subject/location/movement/activity/ class/ category/ group/ grouping/ list/ cluster/ set. Each TSCI may comprise at least one CI each associated with a respective timestamp. Two TSCI associated with two Type 2 devices may be different with different: starting time, duration, stopping time, amount of CI, sampling frequency, sampling period. Their CI may have different features. The first and second Type 1 devices may be at same location in the venue. They may be the same device. The at least one second Type 2 device (or their locations) may be a permutation of the at least one first Type 2 device (or their locations). A particular second Type 2 device and a particular first Type 2 device may be the same device. A subset of the first Type 2 device and a subset of the second Type 2 device may be the same. The at least one second Type 2 device and/or a subset of the at least one second Type 2 device may be a subset of the at least one first Type 2 device. The at least one first Type 2 device and/or a subset of the at least one first Type 2 device may be a permutation of a subset of the at least one second Type 2 device. The at least one second Type 2 device and/or a subset of the at least one second Type 2 device may be a permutation of a subset of the at least one first Type 2 device. The at least one second Type 2 device and/or a subset of the at least one second Type 2 device may be at same respective location as a subset of the at least one first Type 2 device. The at least one first Type 2 device and/or a subset of the at least one first Type 2 device may be at same respective location as a subset of the at least one second Type 2 device.

The antenna of the Type 1 device and the antenna of the second Type 1 device may be at same location in the venue. Antenna(s) of the at least one second Type 2 device and/or antenna(s) of a subset of the at least one second Type 2 device may be at same respective location as respective antenna(s) of a subset of the at least one first Type 2 device. Antenna(s) of the at least one first Type 2 device and/or antenna(s) of a subset of the at least one first Type 2 device may be at same respective location(s) as respective antenna(s) of a subset of the at least one second Type 2 device.

A first section of a first time duration of the first TSCI and a second section of a second time duration of the second section of the second TSCI may be aligned. A map between items of the first section and items of the second section may be computed. The first section may comprise a first segment (e.g. subset) of the first TSCI with a first starting /ending time, and/or another segment (e.g. subset) of a processed first TSCI. The processed first TSCI may be the first TSCI processed by a first operation. The second section may comprise a second segment (e.g. subset) of the second TSCI with a second starting time and a second ending time, and another segment (e.g. subset) of a processed second TSCI. The processed second TSCI may be the second TSCI processed by a second operation. The first operation and/or the second operation may comprise: subsampling, re-sampling, interpolation, filtering, transformation, feature extraction, pre-processing, and/or another operation.

A first item of the first section may be mapped to a second item of the second section. The first item of the first section may also be mapped to another item of the second section. Another item of the first section may also be mapped to the second item of the second section. The mapping may be one-to-one, one-to-many, many-to-one, many-to-many. At least one function of at least one of: the first item of the first section of the first TSCI, another item of the first TSCI, timestamp of the first item, time difference of the first item, time differential of the first item, neighboring timestamp of the first item, another timestamp associated with the first item, the second item of the second section of the second TSCI, another item of the second TSCI, timestamp of the second item, time difference of the second item, time differential of the second item, neighboring timestamp of the second item, and another timestamp associated with the second item, may satisfy at least one constraint.

One constraint may be that a difference between the timestamp of the first item and the timestamp of the second item may be upper-bounded by an adaptive (and/or dynamically adjusted) upper threshold and lower-bounded by an adaptive lower threshold.

The first section may be the entire first TSCI. The second section may be the entire second TSCI. The first time duration may be equal to the second time duration. A section of a time duration of a TSCI may be determined adaptively (and/or dynamically). A tentative section of the TSCI may be computed. A starting time and an ending time of a section (e.g. the tentative section, the section) may be determined. The section may be determined by removing a beginning portion and an ending portion of the tentative section. A beginning portion of a tentative section may be determined as follows. Iteratively, items of the tentative section with increasing timestamp may be considered as a current item, one item at a time.

In each iteration, at least one activity measure/index may be computed and/or considered. The at least one activity measure may be associated with at least one of: the current item associated with a current timestamp, past items of the tentative section with timestamps not larger than the current timestamp, and/or future items of the tentative section with timestamps not smaller than the current timestamp. The current item may be added to the beginning portion of the tentative section if at least one criterion (e.g. quality criterion, signal quality condition) associated with the at least one activity measure is satisfied.

The at least one criterion associated with the activity measure may comprise at least one of: (a) the activity measure is smaller than an adaptive (e.g. dynamically adjusted) upper threshold, (b) the activity measure is larger than an adaptive lower threshold, (c) the activity measure is smaller than an adaptive upper threshold consecutively for at least a predetermined amount of consecutive timestamps, (d) the activity measure is larger than an adaptive lower threshold consecutively for at least another predetermined amount of consecutive timestamps, (e) the activity measure is smaller than an adaptive upper threshold consecutively for at least a predetermined percentage of the predetermined amount of consecutive timestamps, (f) the activity measure is larger than an adaptive lower threshold consecutively for at least another predetermined percentage of the another predetermined amount of consecutive timestamps, (g) another activity measure associated with another timestamp associated with the current timestamp is smaller than another adaptive upper threshold and larger than another adaptive lower threshold, (h) at least one activity measure associated with at least one respective timestamp associated with the current timestamp is smaller than respective upper threshold and larger than respective lower threshold, (i) percentage of timestamps with associated activity measure smaller than respective upper threshold and larger than respective lower threshold in a set of timestamps associated with the current timestamp exceeds a threshold, and (j) another criterion (e.g. a quality criterion, signal quality condition).

An activity measure/index associated with an item at time T1 may comprise at least one of: (1) a first function of the item at time T1 and an item at time T1-D1, wherein D1 is a pre-determined positive quantity (e.g. a constant time offset), (2) a second function of the item at time T1 and an item at time T1+D1, (3) a third function of the item at time T1 and an item at time T2, wherein T2 is a pre-determined quantity (e.g. a fixed initial reference time; T2 may be changed (e.g. adjusted, varied, modified) over time; T2 may be updated periodically; T2 may be the beginning of a time period and T1 may be a sliding time in the time period), and (4) a fourth function of the item at time T1 and another item.

At least one of: the first function, the second function, the third function, and/or the fourth function may be a function (e.g. $F(X, Y, ...)$) with at least two arguments: X and Y. The two arguments may be scalars. The function (e.g. F) may be a function of at least one of: $X$, $Y$, $(X-Y)$, $(Y-X)$, $abs(X-Y)$, $X^a$, $Y^b$, $abs(X^a - Y^b)$, $(X-Y)^a$, $(X/Y)$, $(X+a)/(Y+b)$, $(X^a/Y^b)$, and $((X/Y)^a-b)$, wherein a and b are may be some predetermined quantities. For example, the function may simply be $abs(X-Y)$, or $(X-Y)^2$, $(X-Y)^4$. The function may be a robust function. For example, the function may be $(X-Y)^2$ when $abs(X-Y)$ is less than a threshold T, and $(X-Y)+a$ when $abs(X-Y)$ is larger than T. Alternatively, the function may be a constant when $abs(X-Y)$ is larger than T. The function may also be bounded by a slowly increasing function when $abs(X-y)$ is larger than T, so that outliers cannot severely affect the result. Another example of the function may be $(abs(X/Y)-a)$, where $a=1$. In this way, if $X=Y$ (i.e. no change or no activity), the function will give a value of 0. If X is larger than Y, $(X/Y)$ will be larger than 1 (assuming X and Y are positive) and the function will be positive. And if X is less than Y, $(X/Y)$ will be smaller than 1 and the function will be negative. In another example, both arguments X and Y may be n-tuples such that $X=(x\_1, x\_2, ..., x\_n)$ and $Y=(y\_1, y\_2, ..., y\_n)$. The function may be a function of at least one of: $x\_i$, $y\_i$, $(x\_i - y\_i)$, $(y\_i- x\_i)$, $abs(x\_i - y\_i)$, $x\_i\, ^a$, $y\_i\, ^b$, $abs(x\_i\, ^a - y\_i\, ^b)$, $(x\_i - y\_i)^a$, $(x\_i/y\_i)$, $(x\_i+a)/(y\_i+b)$, $(x\_i\, ^a/\, y\_i\, ^b)$, and $((x\_i\, /\, y\_i)^a-b)$, wherein i is a component index of the n-tuple X and Y, and $1<=i<=n$. E.g. component index of $x\_1$ is $i=1$, component index of $x\_2$ is $i=2$. The function may comprise a component-by-component summation of another function of at least one of the following: $x\_i$, $y\_i$, $(x\_i - y\_i)$, $(y\_i- x\_i)$, $abs(x\_i - y\_i)$, $x\_i\, ^a$, $y\_i\, ^b$, $abs(x\_i\, ^a - y\_i\, ^b)$, $(x\_i - y\_i)^a$, $(x\_i/y\_i)$, $(x\_i+a)/(y\_i+b)$, $(x\_i\, ^a/\, y\_i\, ^b)$, and $((x\_i\, /\, y\_i)^a-b)$, wherein i is the component index of the n-tuple X and Y. For example, the function may be in a form of $sum\_\{i=1\}^n\, (abs(x\_i/y\_i)-1)/n$, or $sum\_\{i=1\}^n\, w\_i*(abs(x\_i/y\_i)-1)$, where $w\_i$ is some weight for component i.

The map may be computed using dynamic time warping (DTW). The DTW may comprise a constraint on at least one of: the map, the items of the first TSCI, the items of the second TSCI, the first time duration, the second time duration, the first section, and/or the second section. Suppose in the map, the $i^{th}$ domain item is mapped to the $j^{th}$ range item. The constraint may be on admissible combination of i and j (constraint on relationship between i and j). Mismatch cost between a first section of a first time duration of a first TSCI and a second section of a second time duration of a second TSCI may be computed.

The first section and the second section may be aligned such that a map comprising more than one links may be established between first items of the first TSCI and second items of the second TSCI. With each link, one of the first items with a first timestamp may be associated with one of the second items with a second timestamp. A mismatch cost between the aligned first section and the aligned second section may be computed. The mismatch cost may comprise a function of: an item-wise cost between a first item and a second item associated by a particular link of the map, and a link-wise cost associated with the particular link of the map.

The aligned first section and the aligned second section may be represented respectively as a first vector and a second vector of same vector length. The mismatch cost may comprise at least one of: an inner product, inner-product-like quantity, quantity based on correlation, correlation indicator, quantity based on covariance, discriminating score, distance, Euclidean distance, absolute distance, Lk distance (e.g. L1, L2, ...), weighted distance, distance-like quantity and/or another similarity value, between the first vector and the second vector. The mismatch cost may be normalized by the respective vector length.

A parameter derived from the mismatch cost between the first section of the first time duration of the first TSCI and the second section of the second time duration of the second TSCI may be modeled with a statistical distribution. At least one of: a scale parameter, location parameter and/or another parameter, of the statistical distribution may be estimated. The first section of the first time duration of the first TSCI may be a sliding section of the first TSCI. The second section of the second time duration of the second TSCI may be a sliding section of the second TSCI. A first sliding window may be applied to the first TSCI and a corresponding second sliding window may be applied to the second TSCI. The first sliding window of the first TSCI and the corresponding second sliding window of the second TSCI may be aligned.

Mismatch cost between the aligned first sliding window of the first TSCI and the corresponding aligned second sliding window of the second TSCI may be computed. The current event may be associated with at least one of: the known event, the unknown event and/or the another event, based on the mismatch cost.

The classifier may be applied to at least one of: each first section of the first time duration of the first TSCI, and/or each second section of the second time duration of the second TSCI, to obtain at least one tentative classification results. Each tentative classification result may be associated with a respective first section and a respective second section.

The current event may be associated with at least one of: the known event, the unknown event, a class/category/ group/ grouping/list/ set of unknown events, and/or the another event, based on the mismatch cost. The current event may be associated with at least one of: the known event, the unknown event and/or the another event, based on a largest number of tentative classification results in more than one sections of the first TSCI and corresponding more than sections of the second TSCI. For example, the current event may be associated with a particular known event if the mismatch cost points to the particular known event for N consecutive times (e.g. N=10). In another example, the current event may be associated with a particular known event if the percentage of mismatch cost within the immediate past N consecutive N pointing to the particular known event exceeds a certain threshold (e.g. >80%). In another example, the current event may be associated with a known event that achieves smallest mismatch cost for the most times within a time period. The current event may be associated with a known event that achieves smallest overall mismatch cost, which is a weighted average of at least one mismatch cost associated with the at least one first sections. The current event may be associated with a particular known event that achieves smallest of another overall cost. The current event may be associated with the "unknown event" if none of the known events achieve mismatch cost lower than a first threshold T1 in a sufficient percentage of the at least one first section. The current event may also be associated with the "unknown event" if none of the events achieve an overall mismatch cost lower than a second threshold T2. The current event may be associated with at least one of: the known event, the unknown event and/or the another event, based on the mismatch cost and additional mismatch cost associated with at least one additional section of the first TSCI and at least one additional section of the second TSCI. The known events may comprise at least one of: a door closed event, door open event, window closed event, window open event, multi-state event, on-state event, off-state event, intermediate state event, continuous state event, discrete state event, human-present event, human-absent event, sign-of-life-present event, and/or a sign-of-life-absent event.

A projection for each CI may be trained using a dimension reduction method based on the training TSCI. The dimension reduction method may comprise at least one of: principal component analysis (PCA), PCA with different kernel, independent component analysis (ICA), Fisher linear discriminant, vector quantization, supervised learning, unsupervised learning, self-organizing maps, auto-encoder, neural network, deep neural network, and/or another method. The projection may be applied to at least one of: the training TSCI associated with the at least one event, and/or the current TSCI, for the classifier. The classifier of the at least one event may be trained based on the projection and the training TSCI associated with the at least one event. The at least one current TSCI may be classified/categorized based on the projection and the current TSCI. The projection may be re-trained using at least one of: the dimension reduction method, and another dimension reduction method, based on at least one of: the training TSCI, at least one current TSCI before retraining the projection, and/or additional training TSCI. The another dimension reduction method may comprise at least one of: principal component analysis (PCA), PCA with different kernels, independent component analysis (ICA), Fisher linear discriminant, vector quantization, supervised learning, unsupervised learning, self-organizing maps, auto-encoder, neural network, deep neural network, and/or yet another method. The classifier of the at least one event may be re-trained based on at least one of: the re-trained projection, the training TSCI associated with the at least one events, and/or at least one current TSCI. The at least one current TSCI may be classified based on: the re-trained projection, the re-trained classifier, and/or the current TSCI.

Each CI may comprise a vector of complex values. Each complex value may be preprocessed to give the magnitude of the complex value. Each CI may be preprocessed to give a vector of non-negative real numbers comprising the magnitude of corresponding complex values. Each training TSCI may be weighted in the training of the projection. The projection may comprise more than one projected components. The projection may comprise at least one most significant projected component. The projection may comprise at least one projected component that may be beneficial for the classifier.

The channel information (CI) may be associated with/may comprise signal strength, signal amplitude, signal phase, spectral power measurement, modem parameters (e.g. used in relation to modulation/ demodulation in digital communication systems such as WiFi, 4G/LTE), dynamic beamforming information, transfer function components, radio state (e.g. used in digital communication systems to decode digital data, baseband processing state, RF processing state, etc.), measurable variables, sensed data, coarse-grained/ fine-grained information of a layer (e.g. physical layer, data link layer, MAC layer, etc.), digital setting, gain setting, RF filter setting, RF front end switch setting, DC offset setting, DC correction setting, IQ compensation setting, effect(s) on the wireless signal by the environment (e.g. venue) during propagation, transformation of an input signal (the wireless signal transmitted by the Type 1 device) to an output signal (the wireless signal received by the Type 2 device), a stable behavior of the environment, a state profile, wireless channel measurements, received signal strength indicator (RSSI), channel state information (CSI), channel impulse response (CIR), channel frequency response (CFR), characteristics of frequency components (e.g. subcarriers) in a bandwidth, channel characteristics, channel filter response, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another channel information. Each CI may be associated with a time stamp, and/or an arrival time. A CSI can be used to equalize/undo/ minimize/reduce the multipath channel effect (of the transmission channel) to demodulate a signal similar to the one transmitted by the transmitter through the multipath channel. The CI may be associated with information associated with a frequency band, frequency signature, frequency phase, frequency amplitude, frequency trend, frequency characteristics, frequency-like characteristics, time domain element, frequency domain element, time-frequency domain element, orthogonal decomposition characteristics, and/or non-orthogonal decomposition characteristics of the signal through the channel. The TSCI may be a stream of wireless signals (e.g. CI).

The CI may be preprocessed, processed, postprocessed, stored (e.g. in local memory, portable/mobile memory, removable memory, storage network, cloud memory, in a volatile manner, in a non-volatile manner), retrieved, transmitted and/or received. One or more modem parameters and/or radio state parameters may be held constant. The modem parameters may be applied to a radio subsystem. The modem parameters may represent a radio state. A motion detection signal (e.g. baseband signal, and/or packet decoded/demodulated from the baseband signal, etc.) may be obtained by processing (e.g. down-converting) the first wireless signal (e.g. RF/WiFi/LTE/5G signal) by the radio subsystem using the radio state represented by the stored modem parameters. The modem parameters/radio state may be updated (e.g. using previous modem parameters or previous radio state). Both the previous and updated modem parameters/radio states may be applied in the radio subsystem in the digital communication system. Both the previous and updated modem parameters/radio states may be compared/ analyzed/ processed/ monitored in the task.

The channel information may also be modem parameters (e.g. stored or freshly computed) used to process the wireless signal. The wireless signal may comprise a plurality of probe signals. The same modem parameters may be used to process more than one probe signals. The same modem parameters may also be used to process more than one wireless signals. The modem parameters may comprise parameters that indicate settings or an overall configuration for the operation of a radio subsystem or a baseband subsystem of a wireless sensor device (or both). The modem parameters may include one or more of: a gain setting, an RF filter setting, an RF front end switch setting, a DC offset setting, or an IQ compensation setting for a radio subsystem, or a digital DC correction setting, a digital gain setting, and/or a digital filtering setting (e.g. for a baseband subsystem). The CI may also be associated with information associated with a time period, time signature, timestamp, time amplitude, time phase, time trend, and/or time characteristics of the signal. The CI may be associated with information associated with a time-frequency partition, signature, amplitude, phase, trend, and/or characteristics of the signal. The CI may be associated with a decomposition of the signal. The CI may be associated with information associated with a direction, angle of arrival (AoA), angle of a directional antenna, and/or a phase of the signal through the channel. The CI may be associated with attenuation patterns of the signal through the channel. Each CI may be associated with a Type 1 device and a Type 2 device. Each CI may be associated with an antenna of the Type 1 device and an antenna of the Type 2 device.

The CI may be obtained from a communication hardware (e.g. of Type 2 device, or Type 1 device) that is capable of providing the CI. The communication hardware may be a WiFi-capable chip/IC (integrated circuit), chip compliant with a 802.11 or 802.16 or another wireless/radio standard, next generation WiFi-capable chip, LTE-capable chip, 5G-capable chip, 6G/7G/8G-capable chip, Bluetooth-enabled chip, NFC (near field communication)-enabled chip, BLE (Bluetooth low power)-enabled chip, UWB chip, another communication chip (e.g. Zigbee, WiMax, mesh network), etc. The communication hardware computes the CI and stores the CI in a buffer memory and make the CI available for extraction. The CI may comprise data and/or at least one matrices related to channel state information (CSI). The at least one matrices may be used for channel equalization, and/or beam forming, etc. The channel may be associated with a venue. The attenuation may be due to signal propagation in the venue, signal propagating/reflection/ refraction/ diffraction through/at/around air (e.g. air of venue), refraction medium/reflection surface such as wall, doors, furniture, obstacles and/or barriers, etc. The attenuation may be due to reflection at surfaces and obstacles (e.g. reflection surface, obstacle) such as floor, ceiling, furniture, fixtures, objects, people, pets, etc. Each CI may be associated with a timestamp. Each CI may comprise N1 components (e.g. N1 frequency domain components in CFR, N1 time domain components in CIR, or N1 decomposition components). Each component may be associated with a component index. Each component may be a real, imaginary, or complex quantity, magnitude, phase, flag, and/or set. Each CI may comprise a vector or matrix of complex numbers, a set of mixed quantities, and/or a multi-dimensional collection of at least one complex numbers.

Components of a TSCI associated with a particular component index may form a respective component time series associated with the respective index. A TSCI may be divided into N1 component time series. Each respective component time series is associated with a respective component index. The characteristics/STI of the motion of the object may be monitored based on the component time series. In one example, one or more ranges of CI components (e.g. one range being from component 11 to component 23, a second range being from component 44 to component 50, and a third range having only one component) may be selected based on some criteria/cost function/signal quality metric (e.g. based on signal-to-noise ratio, and/or interference level) for further processing.

A component-wise characteristic of a component-feature time series of a TSCI may be computed. The component-wise characteristics may be a scalar (e.g. energy) or a function with a domain and a range (e.g. an autocorrelation function, transform, inverse transform). The characteristics/STI of the motion of the object may be monitored based on the component-wise characteristics. A total characteristics (e.g. aggregate characteristics) of the TSCI may be computed based on the component-wise characteristics of each component time series of the TSCI. The total characteristics may be a weighted average of the component-wise characteristics. The characteristics/STI of the motion of the object may be monitored based on the total characteristics. An aggregate quantity may be a weighted average of individual quantities.

The Type 1 device and Type 2 device may support WiFi, WiMax, 3G/beyond 3G, 4G/beyond 4G, LTE, LTE-A, 5G, 6G, 7G, Bluetooth, NFC, BLE, Zigbee, UWB, UMTS, 3GPP, GSM, EDGE, TDMA, FDMA, CDMA, WCDMA, TD-SCDMA, mesh network, proprietary wireless system, IEEE 802.11 standard, 802.15 standard, 802.16 standard, 3GPP standard, and/or another wireless system.

A common wireless system and/or a common wireless channel may be shared by the Type 1 transceiver and/or the at least one Type 2 transceiver. The at least one Type 2 transceiver may transmit respective signal contemporaneously (or: asynchronously, synchronously, sporadically, continuously, repeatedly, concurrently, simultaneously and/or temporarily) using the common wireless system and/or the common wireless channel. The Type 1 transceiver may transmit a signal to the at least one Type 2 transceiver using the common wireless system and/or the common wireless channel.

Each Type 1 device and Type 2 device may have at least one transmitting/receiving antenna. Each CI may be associated with one of the transmitting antenna of the Type 1 device and one of the receiving antenna of the Type 2 device. Each pair of a transmitting antenna and a receiving antenna may be associated with a link, a path, a communication path, signal hardware path, etc. For example, if the Type 1 device has M (e.g. 3) transmitting antennas, and the Type 2 device has N (e.g. 2) receiving antennas, there may be MxN (e.g. 3x2=6) links or paths. Each link or path may be associated with a TSCI.

The at least one TSCI may correspond to various antenna pairs between the Type 1 device and the Type 2 device. The Type 1 device may have at least one antenna. The Type 2 device may also have at least one antenna. Each TSCI may be associated with an antenna of the Type 1 device and an antenna of the Type 2 device. Averaging or weighted averaging over antenna links may be performed. The averaging or weighted averaging may be over the at least one TSCI. The averaging may optionally be performed on a subset of the at least one TSCI corresponding to a subset of the antenna pairs.

Timestamps of CI of a portion of a TSCI may be irregular and may be corrected so that corrected timestamps of time-corrected CI may be uniformly spaced in time. In the case of multiple Type 1 devices and/or multiple Type 2 devices, the corrected timestamp may be with respect to the same or different clock. An original timestamp associated with each of the CI may be determined. The original timestamp may not be uniformly spaced in time. Original timestamps of all CI of the particular portion of the particular TSCI in the current sliding time window may be corrected so that corrected timestamps of time-corrected CI may be uniformly spaced in time.

The characteristics and/or STI (e.g. motion information) may comprise: location, location coordinate, change in location, position (e.g. initial position, new position), position on map, height, horizontal location, vertical location, distance, displacement, speed, acceleration, rotational speed, rotational acceleration, direction, angle of motion, azimuth, direction of motion, rotation, path, deformation, transformation, shrinking, expanding, gait, gait cycle, head motion, repeated motion, periodic motion, pseudo-periodic motion, impulsive motion, sudden motion, fall-down motion, transient motion, behavior, transient behavior, period of motion, frequency of motion, time trend, temporal profile, temporal characteristics, occurrence, change, temporal change, change of CI, change in frequency, change in timing, change of gait cycle, timing, starting time, initiating time, ending time, duration, history of motion, motion type, motion classification, frequency, frequency spectrum, frequency characteristics, presence, absence, proximity, approaching, receding, identity/identifier of the object, composition of the object, head motion rate, head motion direction, mouth-related rate, eye-related rate, breathing rate, heart rate, tidal volume, depth of breath, inhale time, exhale time, inhale time to exhale time ratio, airflow rate, heart heat-to-beat interval, heart rate variability, hand motion rate, hand motion direction, leg motion, body motion, walking rate, hand motion rate, positional characteristics, characteristics associated with movement (e.g. change in position/location) of the object, tool motion, machine motion, complex motion, and/or combination of multiple motions, event, signal statistics, signal dynamics, anomaly, motion statistics, motion parameter, indication of motion detection, motion magnitude, motion phase, similarity score, distance score, Euclidean distance, weighted distance, $L\_1$ norm, $L\_2$ norm, $L\_k$ norm for $k>2$, statistical distance, correlation, correlation indicator, auto-correlation, covariance, auto-covariance, cross-covariance, inner product, outer product, motion signal transformation, motion feature, presence of motion, absence of motion, motion localization, motion identification, motion recognition, presence of object, absence of object, entrance of object, exit of object, a change of object, motion cycle, motion count, gait cycle, motion rhythm, deformation motion, gesture, handwriting, head motion, mouth motion, heart motion ,internal organ motion, motion trend, size, length, area, volume, capacity, shape, form, tag, starting/initiating location, ending location, starting/initiating quantity, ending quantity, event, fall-down event, security event, accident event, home event, office event, factory event, warehouse event, manufacturing event, assembly line event, maintenance event, car-related event, navigation event, tracking event, door event, door-open event, door-close event, window event, window-open event, window-close event, repeatable event, one-time event, consumed quantity, unconsumed quantity, state, physical state, health state, well-being state, emotional state, mental state, another event, analytics, output responses, and/or another information. The characteristics and/or STI may be computed/monitored based on a feature computed from a CI or a TSCI (e.g. feature computation/extraction). A static segment or profile (and/or a dynamic segment/profile) may be identified /computed/analyzed/ monitored/ extracted/ obtained/ marked/ presented/ indicated/ highlighted/ stored/ communicated based on an analysis of the feature. The analysis may comprise a motion detection/movement assessment/presence detection. Computational workload may be shared among the Type 1 device, the Type 2 device and another processor.

The Type 1 device and/or Type 2 device may be a local device. The local device may be: a smart phone, smart device, TV, sound bar, set-top box, access point, router, repeater, wireless signal repeater/extender, remote control, speaker, fan, refrigerator, microwave, oven, coffee machine, hot water pot, utensil, table, chair, light, lamp, door lock, camera, microphone, motion sensor, security device, fire hydrant, garage door, switch, power adapter, computer, dongle, computer peripheral, electronic pad, sofa, tile, accessory, home device, vehicle device, office device, building device, manufacturing device, watch, glasses, clock, television, oven, air-conditioner, accessory, utility, appliance, smart machine, smart vehicle, internet-of-thing (IoT) device, internet-enabled device, computer, portable computer, tablet, smart house, smart office, smart building, smart parking lot, smart system, and/or another device.

Each Type 1 device may be associated with a respective identifier (e.g. ID). Each Type 2 device may also be associated with a respective identify (ID). The ID may comprise: numeral, combination of text and numbers, name, password, account, account ID, web link, web address, index to some information, and/or another ID. The ID may be assigned. The ID may be assigned by hardware (e.g. hardwired, via dongle and/or other hardware), software and/or firmware. The ID may be stored (e.g. in database, in memory, in server (e.g. hub device), in the cloud, stored locally, stored remotely, stored permanently, stored temporarily) and may be retrieved. The ID may be associated with at least one record, account, user, household, address, phone number, social security number, customer number, another ID, another identifier, timestamp, and/or collection of data. The ID and/or part of the ID of a Type 1 device may be made available to a Type 2 device. The ID may be used for registration, initialization, communication, identification, verification, detection, recognition, authentication, access control, cloud access, networking, social networking, logging, recording, cataloging, classification, tagging, association, pairing, transaction, electronic transaction, and/or intellectual property control, by the Type 1 device and/or the Type 2 device.

The object may be person, user, subject, passenger, child, older person, baby, sleeping baby, baby in vehicle, patient, worker, high-value worker, expert, specialist, waiter, customer in mall, traveler in airport/ train station/ bus terminal/ shipping terminals, staff/worker/customer service personnel in factory/ mall/ supermarket/ office/ workplace, serviceman in sewage/air ventilation system/lift well, lifts in lift wells, elevator, inmate, people to be tracked/ monitored, animal, plant, living object, pet, dog, cat, smart phone, phone accessory, computer, tablet, portable computer, dongle, computing accessory, networked devices, WiFi devices, IoT devices, smart watch, smart glasses, smart devices, speaker, keys, smart key, wallet, purse, handbag, backpack, goods, cargo, luggage, equipment, motor, machine, air conditioner, fan, air conditioning equipment, light fixture, moveable light, television, camera, audio and/or video equipment, stationary, surveillance equipment, parts, signage, tool, cart, ticket, parking ticket, toll ticket, airplane ticket, credit card, plastic card, access card, food packaging, utensil, table, chair, cleaning equipment/tool, vehicle, car, cars in parking facilities, merchandise in warehouse/ store/ supermarket/ distribution center, boat, bicycle, airplane, drone, remote control car/plane/ boat, robot, manufacturing device, assembly line, material/unfinished part/robot/wagon/ transports on factory floor, object to be tracked in airport/shopping mart/supermarket, non-object, absence of an object, presence of an object, object with form, object with changing form, object with no form, mass of fluid, mass of liquid, mass of gas/smoke, fire, flame, electromagnetic (EM) source, EM medium, and/or another object. The object itself may be communicatively coupled with some network, such as WiFi, MiFi, 3G/ 4G/ LTE/ 5G/ 6G/ 7G, Bluetooth, NFC, BLE, WiMax, Zigbee, UMTS, 3GPP, GSM, EDGE, TDMA, FDMA, CDMA, WCDMA, TD-SCDMA, mesh network, adhoc network, and/or other network. The object itself may be bulky with AC power supply, but is moved during installation, cleaning, maintenance, renovation, etc. It may also be installed in moveable platform such as lift, pad, movable, platform, elevator, conveyor belt, robot, drone, forklift, car, boat, vehicle, etc. The object may have multiple parts, each part with different movement (e.g. change in position/location). For example, the object may be a person walking forward. While walking, his left hand and right hand may move in different direction, with different instantaneous speed, acceleration, motion, etc.

The wireless transmitter (e.g. Type 1 device), the wireless receiver (e.g. Type 2 device), another wireless transmitter and/or another wireless receiver may move with the object and/or another object (e.g. in prior movement, current movement and/or future movement. They may be communicatively coupled to one or more nearby device. They may transmit TSCI and/or information associated with the TSCI to the nearby device, and/or each other. They may be with the nearby device. The wireless transmitter and/or the wireless receiver may be part of a small (e.g. coin-size, cigarette box size, or even smaller), light-weight portable device. The portable device may be wirelessly coupled with a nearby device.

The nearby device may be smart phone, iPhone, Android phone, smart device, smart appliance, smart vehicle, smart gadget, smart TV, smart refrigerator, smart speaker, smart watch, smart glasses, smart pad, iPad, computer, wearable computer, notebook computer, gateway. The nearby device may be connected to a cloud server, local server (e.g. hub device) and/or other server via internet, wired internet connection and/or wireless internet connection. The nearby device may be portable. The portable device, the nearby device, a local server (e.g. hub device) and/or a cloud server may share the computation and/or storage for a task (e.g. obtain TSCI, determine characteristics/STI of the object associated with the movement (e.g. change in position/location) of the object, computation of time series of power (e.g.

signal strength) information, determining/computing the particular function, searching for local extremum, classification, identifying particular value of time offset, de-noising, processing, simplification, cleaning, wireless smart sensing task, extract CI from signal, switching, segmentation, estimate trajectory/path/track, process the map, processing trajectory/path/track based on environment models/constraints/limitations, correction, corrective adjustment, adjustment, map-based (or model-based) correction, detecting error, checking for boundary hitting, thresholding) and information (e.g. TSCI). The nearby device may/ may not move with the object. The nearby device may be portable/ not portable/ moveable/ non-moveable. The nearby device may use battery power, solar power, AC power and/or other power source. The nearby device may have replaceable/non-replaceable battery, and/or rechargeable/non-rechargeable battery. The nearby device may be similar to the object. The nearby device may have identical (and/or similar) hardware and/or software to the object. The nearby device may be a smart device, network enabled device, device with connection to WiFi/ 3G/ 4G/ 5G/ 6G/ Zigbee/ Bluetooth/ NFC/ UMTS/ 3GPP/ GSM/ EDGE/ TDMA/ FDMA/ CDMA/ WCDMA/ TD-SCDMA/ adhoc network/ other network, smart speaker, smart watch, smart clock, smart appliance, smart machine, smart equipment, smart tool, smart vehicle, internet-of-thing (IoT) device, internet-enabled device, computer, portable computer, tablet, and another device. The nearby device and/or at least one processor associated with the wireless receiver, the wireless transmitter, the another wireless receiver, the another wireless transmitter and/or a cloud server (in the cloud) may determine the initial STI of the object. Two or more of them may determine the initial spatial-temporal info jointly. Two or more of them may share intermediate information in the determination of the initial STI (e.g. initial position).

In one example, the wireless transmitter (e.g. Type 1 device, or Tracker Bot) may move with the object. The wireless transmitter may send the signal to the wireless receiver (e.g. Type 2 device, or Origin Register) or determining the initial STI (e.g. initial position) of the object. The wireless transmitter may also send the signal and/or another signal to another wireless receiver (e.g. another Type 2 device, or another Origin Register) for the monitoring of the motion (spatial-temporal info) of the object. The wireless receiver may also receive the signal and/or another signal from the wireless transmitter and/or the another wireless transmitter for monitoring the motion of the object. The location of the wireless receiver and/or the another wireless receiver may be known. In another example, the wireless receiver (e.g. Type 2 device, or Tracker Bot) may move with the object. The wireless receiver may receive the signal transmitted from the wireless transmitter (e.g. Type 1 device, or Origin Register) for determining the initial spatial-temporal info (e.g. initial position) of the object. The wireless receiver may also receive the signal and/or another signal from another wireless transmitter (e.g. another Type 1 device, or another Origin Register) for the monitoring of the current motion (e.g. spatial-temporal info) of the object. The wireless transmitter may also transmit the signal and/or another signal to the wireless receiver and/or the another wireless receiver (e.g. another Type 2 device, or another Tracker Bot) for monitoring the motion of the object. The location of the wireless transmitter and/or the another wireless transmitter may be known.

The venue may be a space such as a sensing area, room, house, office, property, workplace, hallway, walkway, lift, lift well, escalator, elevator, sewage system, air ventilations system, staircase, gathering area, duct, air duct, pipe, tube, enclosed space, enclosed structure, semi-enclosed structure, enclosed area, area with at least one wall, plant, machine, engine, structure with wood, structure with glass, structure with metal, structure with walls, structure with doors, structure with gaps, structure with reflection surface, structure with fluid, building, roof top, store, factory, assembly line, hotel room, museum, classroom, school, university, government building, warehouse, garage, mall, airport, train station, bus terminal, hub, transportation hub, shipping terminal, government facility, public facility, school, university, entertainment facility, recreational facility, hospital, pediatric/neonatal wards, seniors home, elderly care facility, geriatric facility, community center, stadium, playground, park, field, sports facility, swimming facility, track and/or field, basketball court, tennis court, soccer stadium, baseball stadium, gymnasium, hall, garage, shopping mart, mall, supermarket, manufacturing facility, parking facility, construction site, mining facility, transportation facility, highway, road, valley, forest, wood, terrain, landscape, den, patio, land, path, amusement park, urban area, rural area, suburban area, metropolitan area, garden, square, plaza, music hall, downtown facility, over-air facility, semi-open facility, closed area, train platform, train station, distribution center, warehouse, store, distribution center, storage facility, underground facility, space (e.g. above ground, outer-space) facility, floating facility, cavern, tunnel facility, indoor facility, open-air facility, outdoor facility with some walls/ doors/ reflective barriers, open facility, semi-open facility, car, truck, bus, van, container, ship/boat, submersible, train, tram, airplane, vehicle, mobile home, cave, tunnel, pipe, channel, metropolitan area, downtown area with relatively tall buildings, valley, well, duct, pathway, gas line, oil line, water pipe, network of interconnecting pathways/alleys/roads/tubes/cavities/ caves/pipe-like structure/air space/fluid space, human body, animal body, body cavity, organ, bone, teeth, soft tissue, hard tissue, rigid tissue, non-rigid tissue, blood/body fluid vessel, windpipe, air duct, den, etc. The venue may be indoor space, outdoor space, The venue may include both the inside and outside of the space. For example, the venue may include both the inside of a building and the outside of the building. For example, the venue can be a building that has one floor or multiple floors, and a portion of the building can be underground. The shape of the building can be, e.g., round, square, rectangular, triangle, or irregular-shaped. These are merely examples. The disclosure can be used to detect events in other types of venue or spaces.

The wireless transmitter (e.g. Type 1 device) and/or the wireless receiver (e.g. Type 2 device) may be embedded in a portable device (e.g. a module, or a device with the module) that may move with the object (e.g. in prior movement and/or current movement). The portable device may be communicatively coupled with the object using a wired connection (e.g. through USB, microUSB, Firewire, HDMI, serial port, parallel port, and other connectors) and/or a connection (e.g. Bluetooth, Bluetooth Low Energy (BLE), WiFi, LTE, NFC, ZigBee). The portable device may be a lightweight device. The portable may be powered by battery, rechargeable battery and/or AC power. The portable device may be very small (e.g. at sub-millimeter scale and/or sub-centimeter scale), and/or small (e.g. coin-size, card-size, pocket-size, or larger). The portable device may be large, sizable, and/or bulky (e.g. heavy machinery to be installed). The portable device may be a WiFi hotspot, access point, mobile WiFi (MiFi), dongle with USB/micro USB/ Firewire/ other connector, smartphone, portable computer, computer, tablet, smart device, internet-of-thing (IoT) device, WiFi-enabled device, LTE-enabled device, a smart watch, smart glass, smart mirror, smart antenna, smart battery, smart light, smart pen, smart ring, smart door, smart window, smart clock, small battery, smart wallet, smart belt, smart handbag, smart clothing/garment, smart ornament, smart packaging, smart paper/ book/ magazine/ poster/ printed matter/ signage/ display/ lighted system/ lighting system, smart key/ tool, smart bracelet/ chain/ necklace/ wearable/ accessory, smart pad/ cushion, smart tile/ block/ brick/ building material/ other material, smart garbage can/ waste container, smart food carriage/ storage, smart ball/ racket, smart chair/ sofa/ bed, smart shoe/ footwear/ carpet/ mat/ shoe rack, smart glove/ hand wear/ ring/ hand ware, smart hat/ headwear/ makeup/ sticker/ tattoo, smart mirror, smart toy, smart pill, smart utensil, smart bottle/food container, smart tool, smart device, IoT device, WiFi enabled device, network enabled device, 3G/4G/5G/6G enabled device, UMTS devices, 3GPP devices, GSM devices, EDGE devices, TDMA devices, FDMA devices, CDMA devices, WCDMA devices, TD-SCDMA devices, embeddable device, implantable device, air conditioner, refrigerator, heater, furnace, furniture, oven, cooking device, television/ set-top box (STB)/ DVD player/ audio player/ video player/ remote control, hi-fi, audio device, speaker, lamp/ light, wall, door, window, roof, roof tile/ shingle/ structure/ attic structure/ device/ feature/ installation/ fixtures, lawn mower/ garden tools/ yard tools/ mechanics tools/ garage tools/, garbage can/ container, 20-ft/40-ft container, storage container, factory/ manufacturing/ production device, repair tools, fluid container, machine, machinery to be installed, vehicle, cart, wagon, warehouse vehicle, car, bicycle, motorcycle, boat, vessel, airplane, basket/ box/ bag/ bucket/ container, smart plate/ cup/ bowl/ pot/ mat/ utensils/ kitchen tools/ kitchen devices/ kitchen accessories/ cabinets/ tables/ chairs/ tiles/ lights/ water pipes/ taps/ gas range/ oven/ dishwashing machine/ etc. The portable device may have a battery that may be replaceable, irreplaceable, rechargeable, and/or non-rechargeable. The portable device may be wirelessly charged. The portable device may be a smart payment card. The portable device may be a payment card used in parking lots, highways, entertainment parks, or other venues/facilities that need payment. The portable device may have an identity (ID)/identifier as described above.

An event may be monitored based on the TSCI. The event may be an object related event, such as fall-down of the object (e.g. an person and/or a sick person), rotation, hesitation, pause, impact (e.g. a person hitting a sandbag, door, window, bed, chair, table, desk, cabinet, box, another person, animal, bird, fly, table, chair, ball, bowling ball, tennis ball, football, soccer ball, baseball, basketball, volley ball), two-body action (e.g. a person letting go a balloon, catching a fish, molding a clay, writing a paper, person typing on a computer), car moving in a garage, person carrying a smart phone and walking around an airport/mall/government building/office/etc., autonomous moveable object/machine moving around (e.g. vacuum cleaner, utility vehicle, car, drone, self-driving car). The task or the wireless smart sensing task may comprise: object detection, presence detection, proximity detection, object recognition, activity recognition, object verification, object counting, daily activity monitoring, well-being monitoring, vital sign monitoring, health condition monitoring, baby monitoring, elderly monitoring, sleep monitoring, sleep stage monitoring, walking monitoring, exercise monitoring, tool detection, tool recognition, tool verification, patient detection, patient monitoring, patient verification, machine detection, machine recognition, machine verification, human detection, human recognition, human verification, baby detection, baby recognition, baby verification, human breathing detection, human breathing recognition, human breathing estimation, human breathing verification, human heart beat detection, human heart beat recognition, human heart beat estimation, human heart beat verification, fall-down detection, fall-down recognition, fall-down estimation, fall-down verification, emotion detection, emotion recognition, emotion estimation, emotion verification, motion detection, motion degree estimation, motion recognition, motion estimation, motion verification, periodic motion detection, periodic motion recognition, periodic motion estimation, periodic motion verification, repeated motion detection, repeated motion recognition, repeated motion estimation, repeated motion verification, stationary motion detection, stationary motion recognition, stationary motion estimation, stationary motion verification, cyclo-stationary motion detection, cyclo-stationary motion recognition, cyclo-stationary motion estimation, cyclo-stationary motion verification, transient motion detection, transient motion recognition, transient motion estimation, transient motion verification, trend detection, trend recognition, trend estimation, trend verification, breathing detection, breathing recognition, breathing estimation, breathing estimation, human biometrics detection, human biometric recognition, human biometrics estimation, human biometrics verification, environment informatics detection, environment informatics recognition, environment informatics estimation, environment informatics verification, gait detection, gait recognition, gait estimation, gait verification, gesture detection, gesture recognition, gesture estimation, gesture verification, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, sudden motion detection, fall-down detection, danger detection, life-threat detection, regular motion detection, stationary motion detection, cyclo-stationary motion detection, intrusion detection, suspicious motion detection, security, safety monitoring, navigation, guidance, map-based processing, map-based correction, model-based processing/correction, irregularity detection, locationing, room sensing, tracking, multiple object tracking, indoor tracking, indoor position, indoor navigation, energy management, power transfer, wireless power transfer, object counting, car tracking in parking garage, activating a device/system (e.g. security system, access system, alarm, siren, speaker, television, entertaining system, camera, heater/air-conditioning (HVAC) system, ventilation system, lighting system, gaming system, coffee machine, cooking device, cleaning device, housekeeping device), geometry estimation, augmented reality, wireless communication, data communication, signal broadcasting, networking, coordination, administration, encryption, protection, cloud computing, other processing and/or other task. The task may be performed by the Type 1 device, the Type 2 device, another Type 1 device, another Type 2 device, a nearby device, a local server (e.g. hub device), edge server, a cloud server, and/or another device. The task may be based on TSCI between any pair of Type 1 device and Type 2 device. A Type 2 device may be a Type 1 device, and vice versa. A Type 2 device may play/perform the role (e.g. functionality) of Type 1 device temporarily, continuously, sporadically, simultaneously, and/or contemporaneously, and vice versa. A first part of the task may comprise at least one of: preprocessing, processing, signal conditioning, signal processing, post-processing, processing sporadically/ continuously/ simultaneously/ contemporaneously/ dynamically/ adaptive/ on-demand/ as-needed, calibrating, denoising, feature extraction, coding, encryption, transformation, mapping, motion detection, motion estimation, motion change detection, motion pattern detection, motion pattern estimation, motion pattern recognition, vital sign detection, vital sign estimation, vital sign recognition, periodic motion detection, periodic motion estimation, repeated motion detection/estimation, breathing rate detection, breathing rate estimation, breathing pattern detection, breathing pattern estimation, breathing pattern recognition, heart beat detection, heart beat estimation, heart pattern detection, heart pattern estimation, heart pattern recognition, gesture detection, gesture estimation, gesture recognition, speed detection, speed estimation, object locationing, object tracking, navigation, acceleration estimation, acceleration detection, fall-down detection, change detection, intruder (and/or illegal action) detection, baby detection, baby monitoring, patient monitoring, object recognition, wireless power transfer, and/or wireless charging.

A second part of the task may comprise at least one of: a smart home task, smart office task, smart building task, smart factory task (e.g. manufacturing using a machine or an assembly line), smart internet-of-thing (IoT) task, smart system task, smart home operation, smart office operation, smart building operation, smart manufacturing operation (e.g. moving supplies/parts/raw material to a machine/an assembly line), IoT operation, smart system operation, turning on a light, turning off the light, controlling the light in at least one of: a room, region, and/or the venue, playing a sound clip, playing the sound clip in at least one of: the room, the region, and/or the venue, playing the sound clip of at least one of: a welcome, greeting, farewell, first message, and/or a second message associated with the first part of the task, turning on an appliance, turning off the appliance, controlling the appliance in at least one of: the room, the region, and/or the venue, turning on an electrical system, turning off the electrical system, controlling the electrical system in at least one of: the room, the region, and/or the venue, turning on a security system, turning off the security system, controlling the security system in at least one of: the room, the region, and/or the venue, turning on a mechanical system, turning off a mechanical system, controlling the mechanical system in at least one of: the room, the region, and/or the venue, and/or controlling at least one of: an air conditioning system, heating system, ventilation system, lighting system, heating device, stove, entertainment system, door, fence, window, garage, computer system, networked device, networked system, home appliance, office equipment, lighting device, robot (e.g. robotic arm), smart vehicle, smart machine, assembly line, smart device, internet-of-thing (IoT) device, smart home device, and/or a smart office device.

The task may include: detect a user returning home, detect a user leaving home, detect a user moving from one room to another, detect/control/lock/unlock/open/ close/partially open a window/door/garage door/blind/curtain/panel/solar panel/sun shade, detect a pet, detect/monitor a user doing something (e.g. sleeping on sofa, sleeping in bedroom, running on treadmill, cooking, sitting on sofa, watching TV, eating in kitchen, eating in dining room, going upstairs/downstairs, going outside/coming back, in the rest room), monitor/detect location of a user/pet, do something (e.g. send a message, notify/report to someone) automatically upon detection, do something for the user automatically upon detecting the user, turn on/off/dim a light, turn on/off music/radio/home entertainment system, turn on/off/adjust/control TV/HiFi/set-top-box (STB)/ home entertainment system/smart speaker/smart device, turn on/off/adjust air conditioning system, turn on/off/adjust ventilation system, turn on/off/adjust heating system, adjust/control curtains/light shades, turn on/off/wake a computer, turn on/off/pre-heat/control coffee machine/hot water pot, turn on/off/control/preheat cooker/oven/microwave oven/another cooking device, check/adjust temperature, check weather forecast, check telephone message box, check mail, do a system check, control/adjust a system, check/control/arm/disarm security system/baby monitor, check/control refrigerator, give a report (e.g. through a speaker such as Google home, Amazon Echo, on a display/screen, via a webpage/email/messaging system/notification system).

For example, when a user arrives home in his car, the task may be to, automatically, detect the user or his car approaching, open the garage door upon detection, turn on the driveway/garage light as the user approaches the garage, turn on air conditioner/ heater/ fan, etc. As the user enters the house, the task may be to, automatically, turn on the entrance light, turn off driveway/garage light, play a greeting message to welcome the user, turn on the music, turn on the radio and tuning to the user's favorite radio news channel, open the curtain/blind, monitor the user's mood, adjust the lighting and sound environment according to the user's mood or the current/imminent event (e.g. do romantic lighting and music because the user is scheduled to eat dinner with girlfriend in 1 hour) on the user's daily calendar, warm the food in microwave that the user prepared in the morning, do a diagnostic check of all systems in the house, check weather forecast for tomorrow's work, check news of interest to the user, check user's calendar and to-do list and play reminder, check telephone answer system/messaging system/email and give a verbal report using dialog system/speech synthesis, remind (e.g. using audible tool such as speakers/HiFi/ speech synthesis/sound/voice/ music/song/sound field/ background sound field/ dialog system, using visual tool such as TV/entertainment system/ computer/ notebook/smart pad/display/light/color/ brightness/patterns/symbols, using haptic tool/virtual reality tool/gesture/ tool, using a smart device/appliance/material/furniture/ fixture, using web tool/server/ hub device/cloud server/fog server/edge server/home network/mesh network, using messaging tool/notification tool/communication tool/scheduling tool/email, using user interface/GUI, using scent/smell/ fragrance/taste, using neural tool/nervous system tool, using a combination) the user of his mother's birthday and to call her, prepare a report, and give the report (e.g. using a tool for reminding as discussed above). The task may turn on the air conditioner/heater/ventilation system in advance, or adjust temperature setting of smart thermostat in advance, etc. As the user moves from the entrance to the living room, the task may be to turn on the living room light, open the living room curtain, open the window, turn off the entrance light behind the user, turn on the TV and set-top box, set TV to the user's favorite channel, adjust an appliance according to the user's preference and conditions/states (e.g. adjust lighting and choose/play music to build a romantic atmosphere), etc.

Another example may be: When the user wakes up in the morning, the task may be to detect the user moving around in the bedroom, open the blind/curtain, open the window, turn off the alarm clock, adjust indoor temperature from night-time temperature profile to day-time temperature profile, turn on the bedroom light, turn on the restroom light as the user approaches the restroom, check radio or streaming channel and play morning news, turn on the coffee machine and preheat the water, turn off security system, etc. When the user walks from bedroom to kitchen, the task may be to turn on the kitchen and hallway lights, turn off the bedroom and restroom lights, move the music/message/reminder from the bedroom to the kitchen, turn on the kitchen TV, change TV to morning news channel, lower the kitchen blind and open the kitchen window to bring in fresh air, unlock backdoor for the user to check the backyard, adjust temperature setting for the kitchen, etc. Another example may be: When the user leaves home for work, the task may be to detect the user leaving, play a farewell and/or have-a-good-day message, open/close garage door, turn on/off garage light and driveway light, turn off/dim lights to save energy (just in case the user forgets), close/lock all windows/doors (just in case the user forgets), turn off appliance (especially stove, oven, microwave oven), turn on/arm the home security system to guard the home against any intruder, adjust air conditioning/heating/ventilation systems to "away-from-home" profile to save energy, send alerts/reports/updates to the user's smart phone, etc.

A motion may comprise at least one of: a no-motion, resting motion, non-moving motion, movement, change in position/location, deterministic motion, transient motion, fall-down motion, repeating motion, periodic motion, pseudo-periodic motion, periodic/repeated motion associated with breathing, periodic/repeated motion associated with heartbeat, periodic/repeated motion associated with living object, periodic/repeated motion associated with machine, periodic/repeated motion associated with man-made object, periodic/repeated motion associated with nature, complex motion with transient element and periodic element, repetitive motion, non-deterministic motion, probabilistic motion, chaotic motion, random motion, complex motion with non-deterministic element and deterministic element, stationary random motion, pseudo-stationary random motion, cyclo-stationary random motion, non-stationary random motion, stationary random motion with periodic autocorrelation function (ACF), random motion with periodic ACF for period of time, random motion that is pseudo-stationary for a period of time, random motion of which an instantaneous ACF has a pseudo-periodic/repeating element for a period of time, machine motion, mechanical motion, vehicle motion, drone motion, air-related motion, wind-related motion, weather-related motion, water-related motion, fluid-related motion, ground-related motion, change in electro-magnetic characteristics, sub-surface motion, seismic motion, plant motion, animal motion, human motion, normal motion, abnormal motion, dangerous motion, warning motion, suspicious motion, rain, fire, flood, tsunami, explosion, collision, imminent collision, human body motion, head motion, facial motion, eye motion, mouth motion, tongue motion, neck motion, finger motion, hand motion, arm motion, shoulder motion, body motion, chest motion, abdominal motion, hip motion, leg motion, foot motion, body joint motion, knee motion, elbow motion, upper body motion, lower body motion, skin motion, below-skin motion, subcutaneous tissue motion, blood vessel motion, intravenous motion, organ motion, heart motion, lung motion, stomach motion, intestine motion, bowel motion, eating motion, breathing motion, facial expression, eye expression, mouth expression, talking motion, singing motion, eating motion, gesture, hand gesture, arm gesture, keystroke, typing stroke, user-interface gesture, man-machine interaction, gait, dancing movement, coordinated movement, and/or coordinated body movement.

The heterogeneous IC of the Type 1 device and/or any Type 2 receiver may comprise low-noise amplifier (LNA), power amplifier, transmit-receive switch, media access controller, baseband radio, 2.4 GHz radio, 3.65 GHz radio, 4.9 GHz radio, 5 GHz radio, 5.9GHz radio, below 6GHz radio, below 60 GHz radio and/or another radio. The heterogeneous IC may comprise a processor, a memory communicatively coupled with the processor, and a set of instructions stored in the memory to be executed by the processor. The IC and/or any processor may comprise at least one of: general purpose processor, special purpose processor, microprocessor, multi-processor, multi-core processor, parallel processor, CISC processor, RISC processor, microcontroller, central processing unit (CPU), graphical processor unit (GPU), digital signal processor (DSP), application specific integrated circuit (ASIC), field programmable gate array (FPGA), embedded processor (e.g. ARM), logic circuit, other programmable logic device, discrete logic, and/or a combination. The heterogeneous IC may support broadband network, wireless network, mobile network, mesh network, cellular network, wireless local area network (WLAN), wide area network (WAN), and metropolitan area network (MAN), WLAN standard, WiFi, LTE, LTE-A, LTE-U, 802.11 standard, 802.11a, 802.11b, 802.11g, 802.11n, 802.11ac, 802.11ad, 802.11af, 802,11ah, 802.11ax, 802.11ay, mesh network standard, 802.15 standard, 802.16 standard, cellular network standard, 3G, 3.5G, 4G, beyond 4G, 4.5G, 5G, 6G, 7G, 8G, 9G, UMTS, 3GPP, GSM, EDGE, TDMA, FDMA, CDMA, WCDMA, TD-SCDMA, Bluetooth, Bluetooth Low-Energy (BLE), NFC, Zigbee, WiMax, and/or another wireless network protocol.

The processor may comprise general purpose processor, special purpose processor, microprocessor, microcontroller, embedded processor, digital signal processor, central processing unit (CPU), graphical processing unit (GPU), multi-processor, multi-core processor, and/or processor with graphics capability, and/or a combination. The memory may be volatile, non-volatile, random access memory (RAM), Read Only Memory (ROM), Electrically Programmable ROM (EPROM), Electrically Erasable Programmable ROM (EEPROM), hard disk, flash memory, CD-ROM, DVD-ROM, magnetic storage, optical storage, organic storage, storage system, storage network, network storage, cloud storage, edge storage, local storage, external storage, internal storage, or other form of non-transitory storage medium known in the art. The set of instructions (machine executable code) corresponding to the method steps may be embodied directly in hardware, in software, in firmware, or in combinations thereof. The set of instructions may be embedded, pre-loaded, loaded upon boot up, loaded on the fly, loaded on demand, pre-installed, installed, and/or downloaded.

The presentation may be a presentation in an audio-visual way (e.g. using combination of visual, graphics, text, symbols, color, shades, video, animation, sound, speech, audio, etc.), graphical way (e.g. using GUI, animation, video), textual way (e.g. webpage with text, message, animated text), symbolic way (e.g. emoticon, signs, hand gesture), or mechanical way (e.g. vibration, actuator movement, haptics, etc.).

Computational workload associated with the method is shared among the processor, the Type 1 heterogeneous wireless device, the Type 2 heterogeneous wireless device, a local server (e.g. hub device), a cloud server, and another processor.

An operation, pre-processing, processing and/or postprocessing may be applied to data (e.g. TSCI, autocorrelation, features of TSCI). An operation may be preprocessing, processing and/or postprocessing. The preprocessing, processing and/or postprocessing may be an operation. An operation may comprise preprocessing, processing, postprocessing, scaling, computing a confidence factor, computing a line-of-sight (LOS) quantity, computing a non-LOS (NLOS) quantity, a quantity comprising LOS and NLOS, computing a single link (e.g. path, communication path, link between a transmitting antenna and a receiving antenna) quantity, computing a quantity comprising multiple links, computing a function of the operands, filtering, linear filtering, nonlinear filtering, folding, grouping, energy computation, lowpass filtering, bandpass filtering, highpass filtering, median filtering, rank filtering, quartile filtering, percentile filtering, mode filtering, finite impulse response (FIR) filtering, infinite impulse response (IIR) filtering, moving average (MA) filtering, autoregressive (AR) filtering, autoregressive moving averaging (ARMA) filtering, selective filtering, adaptive filtering, interpolation, decimation, subsampling, upsampling, resampling, time correction, time base correction, phase correction, magnitude correction, phase cleaning, magnitude cleaning, matched filtering, enhancement, restoration, denoising, smoothing, signal conditioning, enhancement, restoration, spectral analysis, linear transform, nonlinear transform, inverse transform, frequency transform, inverse frequency transform, Fourier transform (FT), discrete time FT (DTFT), discrete FT (DFT), fast FT (FFT), wavelet transform, Laplace transform, Hilbert transform, Hadamard transform, trigonometric transform, sine transform, cosine transform, DCT, power-of-2 transform, sparse transform, graph-based transform, graph signal processing, fast transform, a transform combined with zero padding, cyclic padding, padding, zero padding, feature extraction, decomposition, projection, orthogonal projection, non-orthogonal projection, over-complete projection, eigen-decomposition, singular value decomposition (SVD), principle component analysis (PCA), independent component analysis (ICA), grouping, sorting, thresholding, soft thresholding, hard thresholding, clipping, soft clipping, first derivative, second order derivative, high order derivative, convolution, multiplication, division, addition, subtraction, integration, maximization, minimization, least mean square error, recursive least square, constrained least square, batch least square, least absolute error, least mean square deviation, least absolute deviation, local maximization, local minimization, optimization of a cost function, neural network, recognition, labeling, training, clustering, machine learning, supervised learning, unsupervised learning, semi-supervised learning, comparison with another TSCI, similarity score computation, quantization, vector quantization, matching pursuit, compression, encryption, coding, storing, transmitting, normalization, temporal normalization, frequency domain normalization, classification, clustering, labeling, tagging, learning, detection, estimation, learning network, mapping, remapping, expansion, storing, retrieving, transmitting, receiving, representing, merging, combining, splitting, tracking, monitoring, matched filtering, Kalman filtering, particle filter, intrapolation, extrapolation, histogram estimation, importance sampling, Monte Carlo sampling, compressive sensing, representing, merging, combining, splitting, scrambling, error protection, forward error correction, doing nothing, time varying processing, conditioning averaging, weighted averaging, arithmetic mean, geometric mean, harmonic mean, averaging over selected frequency, averaging over antenna links, logical operation, permutation, combination, sorting, AND, OR, XOR, union, intersection, vector addition, vector subtraction, vector multiplication, vector division, inverse, norm, distance, and/or another operation. The operation may be the preprocessing, processing, and/or post-processing. Operations may be applied jointly on multiple time series or functions.

The function (e.g. function of operands) may comprise: scalar function, vector function, discrete function, continuous function, polynomial function, characteristics, feature, magnitude, phase, exponential function, logarithmic function, trigonometric function, transcendental function, logical function, linear function, algebraic function, nonlinear function, piecewise linear function, real function, complex function, vector-valued function, inverse function, derivative of function, integration of function, circular function, function of another function, one-to-one function, one-to-many function, many-to-one function, many-to-many function, zero crossing, absolute function, indicator function, mean, mode, median, range, statistics, histogram, variance, standard deviation, measure of variation, spread, dispersion, deviation, divergence, range, interquartile range, total variation, absolute deviation, total deviation, arithmetic mean, geometric mean, harmonic mean, trimmed mean, percentile, square, cube, root, power, sine, cosine, tangent, cotangent, secant, cosecant, elliptical function, parabolic function, hyperbolic function, game function, zeta function, absolute value, thresholding, limiting function, floor function, rounding function, sign function, quantization, piecewise constant function, composite function, function of function, time function processed with an operation (e.g. filtering), probabilistic function, stochastic function, random function, ergodic function, stationary function, deterministic function, periodic function, repeated function, transformation, frequency transform, inverse frequency transform, discrete time transform, Laplace transform, Hilbert transform, sine transform, cosine transform, triangular transform, wavelet transform, integer transform, power-of-2 transform, sparse transform, projection, decomposition, principle component analysis (PCA), independent component analysis (ICA), neural network, feature extraction, moving function, function of moving window of neighboring items of time series, filtering function, convolution, mean function, histogram, variance/standard deviation function, statistical function, short-time transform, discrete transform, discrete Fourier transform, discrete cosine transform, discrete sine transform, Hadamard transform, eigen-decomposition, eigenvalue, singular value decomposition (SVD), singular value, orthogonal decomposition, matching pursuit, sparse transform, sparse approximation, any decomposition, graph-based processing, graph-based transform, graph signal processing, classification, identifying a class/group/category, labeling, learning, machine learning, detection, estimation, feature extraction, learning network, feature extraction, denoising, signal enhancement, coding, encryption, mapping, remapping, vector quantization, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, first order derivative, high order derivative, integration, zero crossing, smoothing, median filtering, mode filtering, sampling, random sampling, resampling function, downsampling, down-converting, upsampling, up-converting, interpolation, extrapolation, importance sampling, Monte Carlo sampling, compressive sensing, statistics, short term statistics, long term statistics, autocorrelation function, cross correlation, moment generating function, time averaging, weighted averaging, special function, Bessel function, error function, complementary error function, Beta function, Gamma function, integral function, Gaussian function, Poisson function, etc. Machine learning, training, discriminative training, deep learning, neural network, continuous time processing, distributed computing, distributed storage, acceleration using GPU/DSP/coprocessor/multicore/multiprocessing may be applied to a step (or each step) of this disclosure.

A frequency transform may include Fourier transform, Laplace transform, Hadamard transform, Hilbert transform, sine transform, cosine transform, triangular transform, wavelet transform, integer transform, power-of-2 transform, combined zero padding and transform, Fourier transform with zero padding, and/or another transform. Fast versions and/or approximated versions of the transform may be performed. The transform may be performed using floating point, and/or fixed point arithmetic.

An inverse frequency transform may include inverse Fourier transform, inverse Laplace transform, inverse Hadamard transform, inverse Hilbert transform, inverse sine transform, inverse cosine transform, inverse triangular transform, inverse wavelet transform, inverse integer transform, inverse power-of-2 transform, combined zero padding and transform, inverse Fourier transform with zero padding, and/or another transform. Fast versions and/or approximated versions of the transform may be performed. The transform may be performed using floating point, and/or fixed point arithmetic.

A quantity/feature from a TSCI may be computed. The quantity may comprise statistic of at least one of: motion, location, map coordinate, height, speed, acceleration, movement angle, rotation, size, volume, time trend, pattern, one-time pattern, repeating pattern, evolving pattern, time pattern, mutually excluding patterns, related/correlated patterns, cause-and-effect, correlation, short-term/long-term correlation, tendency, inclination, statistics, typical behavior, atypical behavior, time trend, time profile, periodic motion, repeated motion, repetition, tendency, change, abrupt change, gradual change, frequency, transient, breathing, gait, action, event, suspicious event, dangerous event, alarming event, warning, belief, proximity, collision, power, signal, signal power, signal strength, signal intensity, received signal strength indicator (RSSI), signal amplitude, signal phase, signal frequency component, signal frequency band component, channel state information (CSI), map, time, frequency, time-frequency, decomposition, orthogonal decomposition, non-orthogonal decomposition, tracking, breathing, heart beat, statistical parameters, cardiopulmonary statistics/analytics (e.g. output responses), daily activity statistics/analytics, chronic disease statistics/analytics, medical statistics/analytics, an early (or instantaneous or contemporaneous or delayed) indication/suggestion/sign/indicator/verifier/ detection/symptom of a disease/condition/ situation, biometric, baby, patient, machine, device, temperature, vehicle, parking lot, venue, lift, elevator, spatial, road, fluid flow, home, room, office, house, building, warehouse, storage, system, ventilation, fan, pipe, duct, people, human, car, boat, truck, airplane, drone, downtown, crowd, impulsive event, cyclo-stationary, environment, vibration, material, surface, 3-dimensional, 2-dimensional, local, global, presence, and/or another measurable quantity/variable.

Sliding time window may have time varying window width. It may be smaller at the beginning to enable fast acquisition and may increase over time to a steady-state size. The steady-state size may be related to the frequency, repeated motion, transient motion, and/or STI to be monitored. Even in steady state, the window size may be adaptively (and/or dynamically) changed (e.g. adjusted, varied, modified) based on battery life, power consumption, available computing power, change in amount of targets, the nature of motion to be monitored, etc.

The time shift between two sliding time windows at adjacent time instance may be constant/variable/locally adaptive/dynamically adjusted over time. When shorter time shift is used, the update of any monitoring may be more frequent which may be used for fast changing situations, object motions, and/or objects. Longer time shift may be used for slower situations, object motions, and/or objects. The window width/size and/or time shift may be changed (e.g. adjusted, varied, modified) upon a user request/choice. The time shift may be changed automatically (e.g. as controlled by processor/ computer/server/hub device/cloud server) and/or adaptively (and/or dynamically).

At least one characteristics (e.g. characteristic value, or characteristic point) of a function (e.g. auto-correlation function, auto-covariance function, cross-correlation function, cross-covariance function, power spectral density, time function, frequency domain function, frequency transform) may be determined (e.g. by an object tracking server, the processor, the Type 1 heterogeneous device, the Type 2 heterogeneous device, and/or another device). The at least one characteristics of the function may include: a maximum, minimum, extremum, local maximum, local minimum, local extremum, local extremum with positive time offset, first local extremum with positive time offset, $n$^th local extremum with positive time offset, local extremum with negative time offset, first local extremum with negative time offset, $n$^th local extremum with negative time offset, constrained maximum, constrained minimum, constrained extremum, significant maximum, significant minimum, significant extremum, slope, derivative, higher order derivative, maximum slope, minimum slope, local maximum slope, local maximum slope with positive time offset, local minimum slope, constrained maximum slope, constrained minimum slope, maximum higher order derivative, minimum higher order derivative, constrained higher order derivative, zero-crossing, zero crossing with positive time offset, $n$^th zero crossing with positive time offset, zero crossing with negative time offset, $n$^th zero crossing with negative time offset, constrained zero-crossing, zero-crossing of slope, zero-crossing of higher order derivative, and/or another characteristics. At least one argument of the function associated with the at least one characteristics of the function may be identified. Some quantity (e.g. spatial-temporal information of the object) may be determined based on the at least one argument of the function.

A characteristics (e.g. characteristics of motion of an object in the venue) may comprise at least one of: an instantaneous characteristics, short-term characteristics, repetitive characteristics, recurring characteristics, history, incremental characteristics, changing characteristics, deviational characteristics, phase, magnitude, degree, time characteristics, frequency characteristics, time-frequency characteristics, decomposition characteristics, orthogonal decomposition characteristics, non-orthogonal decomposition characteristics, deterministic characteristics, probabilistic characteristics, stochastic characteristics, autocorrelation function (ACF), mean, variance, standard deviation, measure of variation, spread, dispersion, deviation, divergence, range, interquartile range, total variation, absolute deviation, total deviation, statistics, duration, timing, trend, periodic characteristics, repetition characteristics, long-term characteristics, historical characteristics, average characteristics, current characteristics, past characteristics, future characteristics, predicted characteristics, location, distance, height, speed, direction, velocity, acceleration, change of the acceleration, angle, angular speed, angular velocity, angular acceleration of the object, change of the angular acceleration, orientation of the object, angular of rotation, deformation of the object, shape of the object, change of shape of the object, change of size of the object, change of structure of the object, and/or change of characteristics of the object.

At least one local maximum and at least one local minimum of the function may be identified. At least one local signal-to-noise-ratio-like (SNR-like) parameter may be computed for each pair of adjacent local maximum and local minimum. The SNR-like parameter may be a function (e.g. linear, log, exponential function, monotonic function) of a fraction of a quantity (e.g. power, magnitude) of the local maximum over the same quantity of the local minimum. It may also be the function of a difference between the quantity of the local maximum and the same quantity of the local minimum. Significant local peaks may be identified or selected. Each significant local peak may be a local maximum with SNR-like parameter greater than a threshold T1 and/or a local maximum with amplitude greater than a threshold T2. The at least one local minimum and the at least one local minimum in the frequency domain may be identified/computed using a persistence-based approach.

A set of selected significant local peaks may be selected from the set of identified significant local peaks based on a selection criterion (e.g. a quality criterion, a signal quality condition). The characteristics/STI of the object may be computed based on the set of selected significant local peaks and frequency values associated with the set of selected significant local peaks. In one example, the selection criterion may always correspond to select the strongest peaks in a range. While the strongest peaks may be selected, the unselected peaks may still be significant (rather strong).

Unselected significant peaks may be stored and/or monitored as "reserved" peaks for use in future selection in future sliding time windows. As an example, there may be a particular peak (at a particular frequency) appearing consistently over time. Initially, it may be significant but not selected (as other peaks may be stronger). But in later time, the peak may become stronger and more dominant and may be selected. When it became "selected", it may be back-traced in time and made "selected" in the earlier time when it was significant but not selected. In such case, the back-traced peak may replace a previously selected peak in an early time. The replaced peak may be the relatively weakest, or a peak that appear in isolation in time (i.e. appearing only briefly in time).

In another example, the selection criterion may not correspond to select the strongest peaks in the range. Instead, it may consider not only the "strength" of the peak, but the "trace" of the peak - peaks that may have happened in the past, especially those peaks that have been identified for a long time. For example, if a finite state machine (FSM) is used, it may select the peak(s) based on the state of the FSM. Decision thresholds may be computed adaptively (and/or dynamically) based on the state of the FSM.

A similarity score and/or component similarity score may be computed (e.g. by a server (e.g. hub device), the processor, the Type 1 device, the Type 2 device, a local server, a cloud server, and/or another device) based on a pair of temporally adjacent CI of a TSCI. The pair may come from the same sliding window or two different sliding windows. The similarity score may also be based on a pair of, temporally adjacent or not so adjacent, CI from two different TSCI. The similarity score and/or component similar score may be/comprise: time reversal resonating strength (TRRS), correlation, cross-correlation, auto-correlation, correlation indicator, covariance, cross-covariance, auto-covariance, inner product of two vectors, distance score, norm, metric, quality metric, signal quality condition, statistical characteristics, discrimination score, neural network, deep learning network, machine learning, training, discrimination, weighted averaging, preprocessing, denoising, signal conditioning, filtering, time correction, timing compensation, phase offset compensation, transformation, component-wise operation, feature extraction, finite state machine, and/or another score. The characteristics and/or STI may be determined/computed based on the similarity score.

Any threshold may be pre-determined, adaptively (and/or dynamically) determined and/or determined by a finite state machine. The adaptive determination may be based on time, space, location, antenna, path, link, state, battery life, remaining battery life, available power, available computational resources, available network bandwidth, etc.

A threshold to be applied to a test statistics to differentiate two events (or two conditions, or two situations, or two states), A and B, may be determined. Data (e.g. CI, channel state information (CSI), power parameter) may be collected under A and/or under B in a training situation. The test statistics may be computed based on the data. Distributions of the test statistics under A may be compared with distributions of the test statistics under B (reference distribution), and the threshold may be chosen according to some criteria. The criteria may comprise: maximum likelihood (ML), maximum aposterior probability (MAP), discriminative training, minimum Type 1 error for a given Type 2 error, minimum Type 2 error for a given Type 1 error, and/or other criteria (e.g. a quality criterion, signal quality condition). The threshold may be adjusted to achieve different sensitivity to the A, B and/or another event/condition/situation/state. The threshold adjustment may be automatic, semi-automatic and/or manual. The threshold adjustment may be applied once, sometimes, often, periodically, repeatedly, occasionally, sporadically, and/or on demand. The threshold adjustment may be adaptive (and/or dynamically adjusted). The threshold adjustment may depend on the object, object movement/location/ direction/action, object characteristics/ STI/size/ property/trait/habit/behavior, the venue, feature/ fixture/ furniture/barrier/ material/ machine/living thing/thing/object/boundary/ surface/ medium that is in/at/of the venue, map, constraint of the map (or environmental model), the event/state/ situation/condition, time, timing, duration, current state, past history, user, and/or a personal preference, etc.

A stopping criterion (or skipping or bypassing or blocking or pausing or passing or rejecting criterion) of an iterative algorithm may be that change of a current parameter (e.g. offset value) in the updating in an iteration is less than a threshold. The threshold may be 0.5, 1, 1.5, 2, or another number. The threshold may be adaptive (and/or dynamically adjusted). It may change as the iteration progresses. For the offset value, the adaptive threshold may be determined based on the task, particular value of the first time, the current time offset value, the regression window, the regression analysis, the regression function, the regression error, the convexity of the regression function, and/or an iteration number.

The local extremum may be determined as the corresponding extremum of the regression function in the regression window. The local extremum may be determined based on a set of time offset values in the regression window and a set of associated regression function values. Each of the set of associated regression function values associated with the set of time offset values may be within a range from the corresponding extremum of the regression function in the regression window.

The searching for a local extremum may comprise robust search, minimization, maximization, optimization, statistical optimization, dual optimization, constraint optimization, convex optimization, global optimization, local optimization an energy minimization, linear regression, quadratic regression, higher order regression, linear programming, nonlinear programming, stochastic programming, combinatorial optimization, constraint programming, constraint satisfaction, calculus of variations, optimal control, dynamic programming, mathematical programming, multi-objective optimization, multi-modal optimization, disjunctive programming, space mapping, infinite-dimensional optimization, heuristics, metaheuristics, convex programming, semidefinite programming, conic programming, cone programming, integer programming, quadratic programming, fractional programming, numerical analysis, simplex algorithm, iterative method, gradient descent, subgradient method, coordinate descent, conjugate gradient method, Newton's algorithm, sequential quadratic programming, interior point method, ellipsoid method, reduced gradient method, quasi-Newton method, simultaneous perturbation stochastic approximation, interpolation method, pattern search method, line search, non-differentiable optimization, genetic algorithm, evolutionary algorithm, dynamic relaxation, hill climbing, particle swarm optimization, gravitation search algorithm, simulated annealing, memetic algorithm, differential evolution, dynamic relaxation, stochastic tunneling, Tabu search, reactive search optimization, curve fitting, least square, simulation based optimization, variational calculus, and/or variant. The search for local extremum may be associated with an objective function, loss function, cost function, utility function, fitness function, energy function, and/or an energy function.

Regression may be performed using regression function to fit sampled data (e.g. CI, feature of CI, component of CI) or another function (e.g. autocorrelation function) in a regression window. In at least one iteration, a length of the regression window and/or a location of the regression window may change. The regression function may be linear function, quadratic function, cubic function, polynomial function, and/or another function. The regression analysis may minimize at least one of: error, aggregate error, component error, error in projection domain, error in selected axes, error in selected orthogonal axes, absolute error, square error, absolute deviation, square deviation, higher order error (e.g. third order, fourth order), robust error (e.g. square error for smaller error magnitude and absolute error for larger error magnitude, or first kind of error for smaller error magnitude and second kind of error for larger error magnitude), another error, weighted sum (or weighted mean) of absolute/square error (e.g. for wireless transmitter with multiple antennas and wireless receiver with multiple antennas, each pair of transmitter antenna and receiver antenna form a link), mean absolute error, mean square error, mean absolute deviation, and/or mean square deviation. Error associated with different links may have different weights. One possibility is that some links and/or some components with larger noise or lower signal quality metric may have smaller or bigger weight.), weighted sum of square error, weighted sum of higher order error, weighted sum of robust error, weighted sum of the another error, absolute cost, square cost, higher order cost, robust cost, another cost, weighted sum of absolute cost, weighted sum of square cost, weighted sum of higher order cost, weighted sum of robust cost, and/or weighted sum of another cost. The regression error determined may be an absolute error, square error, higher order error, robust error, yet another error, weighted sum of absolute error, weighted sum of square error, weighted sum of higher order error, weighted sum of robust error, and/or weighted sum of the yet another error.

The time offset associated with maximum regression error (or minimum regression error) of the regression function with respect to the particular function in the regression window may become the updated current time offset in the iteration.

A local extremum may be searched based on a quantity comprising a difference of two different errors (e.g. a difference between absolute error and square error). Each of the two different errors may comprise an absolute error, square error, higher order error, robust error, another error, weighted sum of absolute error, weighted sum of square error, weighted sum of higher order error, weighted sum of robust error, and/or weighted sum of the another error.

The quantity may be compared with a reference data or a reference distribution, such as an F-distribution, central F-distribution, another statistical distribution, threshold, threshold associated with probability/histogram, threshold associated with probability/histogram of finding false peak, threshold associated with the F-distribution, threshold associated the central F-distribution, and/or threshold associated with the another statistical distribution.

The regression window may be determined based on at least one of: the movement (e.g. change in position/location) of the object, quantity associated with the object, the at least one characteristics and/or STI of the object associated with the movement of the object, estimated location of the local extremum, noise characteristics, estimated noise characteristics, signal quality metric, F-distribution, central F-distribution, another statistical distribution, threshold, preset threshold, threshold associated with probability/histogram, threshold associated with desired probability, threshold associated with probability of finding false peak, threshold associated with the F-distribution, threshold associated the central F-distribution, threshold associated with the another statistical distribution, condition that quantity at the window center is largest within the regression window, condition that the quantity at the window center is largest within the regression window, condition that there is only one of the local extremum of the particular function for the particular value of the first time in the regression window, another regression window, and/or another condition.

The width of the regression window may be determined based on the particular local extremum to be searched. The local extremum may comprise first local maximum, second local maximum, higher order local maximum, first local maximum with positive time offset value, second local maximum with positive time offset value, higher local maximum with positive time offset value, first local maximum with negative time offset value, second local maximum with negative time offset value, higher local maximum with negative time offset value, first local minimum, second local minimum, higher local minimum, first local minimum with positive time offset value, second local minimum with positive time offset value, higher local minimum with positive time offset value, first local minimum with negative time offset value, second local minimum with negative time offset value, higher local minimum with negative time offset value, first local extremum, second local extremum, higher local extremum, first local extremum with positive time offset value, second local extremum with positive time offset value, higher local extremum with positive time offset value, first local extremum with negative time offset value, second local extremum with negative time offset value, and/or higher local extremum with negative time offset value.

A current parameter (e.g. time offset value) may be initialized based on a target value, target profile, trend, past trend, current trend, target speed, speed profile, target speed profile, past speed trend, the motion or movement (e.g. change in position/location) of the object, at least one characteristics and/or STI of the object associated with the movement of object, positional quantity of the object, initial speed of the object associated with the movement of the object, predefined value, initial width of the regression window, time duration, value based on carrier frequency of the signal, value based on subcarrier frequency of the signal, bandwidth of the signal, amount of antennas associated with the channel, noise characteristics, signal h metric, and/or an adaptive (and/or dynamically adjusted) value. The current time offset may be at the center, on the left side, on the right side, and/or at another fixed relative location, of the regression window.

In the presentation, information may be displayed with a map (or environmental model) of the venue. The information may comprise: location, zone, region, area, coverage area, corrected location, approximate location, location with respect to (w.r.t.) a map of the venue, location w.r.t. a segmentation of the venue, direction, path, path w.r.t. the map and/or the segmentation, trace (e.g. location within a time window such as the past 5 seconds, or past 10 seconds; the time window duration may be adjusted adaptively (and/or dynamically); the time window duration may be adaptively (and/or dynamically) adjusted w.r.t. speed, acceleration, etc.), history of a path, approximate regions/zones along a path, history/ summary of past locations, history of past locations of interest, frequently-visited areas, customer traffic, crowd distribution, crowd behavior, crowd control information, speed, acceleration, motion statistics, breathing rate, heart rate, presence/absence of motion, presence/absence of people or pets or object, presence/absence of vital sign, gesture, gesture control (control of devices using gesture), location-based gesture control, information of a location-based operation, identity (ID) or identifier of the respect object (e.g. pet, person, self-guided machine/device, vehicle, drone, car, boat, bicycle, self-guided vehicle, machine with fan, air-conditioner, TV, machine with movable part), identification of a user (e.g. person), information of the user, location/speed/acceleration/direction/motion/gesture/gesture control/ motion trace of the user, ID or identifier of the user, activity of the user, state of the user, sleeping/resting characteristics of the user, emotional state of the user, vital sign of the user, environment information of the venue, weather information of the venue, earthquake, explosion, storm, rain, fire, temperature, collision, impact, vibration, event, door-open event, door-close event, window-open event, window-close event, fall-down event, burning event, freezing event, water-related event, wind-related event, air-movement event, accident event, pseudo-periodic event (e.g. running on treadmill, jumping up and down, skipping rope, somersault, etc.), repeated event, crowd event, vehicle event, gesture of the user (e.g. hand gesture, arm gesture, foot gesture, leg gesture, body gesture, head gesture, face gesture, mouth gesture, eye gesture, etc.). The location may be 2-dimensional (e.g. with 2D coordinates), 3-dimensional (e.g. with 3D coordinates). The location may be relative (e.g. w.r.t. a map or environmental model) or relational (e.g. halfway between point A and point B, around a corner, up the stairs, on top of table, at the ceiling, on the floor, on a sofa, close to point A, a distance R from point A, within a radius of R from point A, etc.). The location may be expressed in rectangular coordinate, polar coordinate, and/or another representation.

The information (e.g. location) may be marked with at least one symbol. The symbol may be time varying. The symbol may be flashing and/or pulsating with or without changing color/intensity. The size may change over time. The orientation of the symbol may change over time. The symbol may be a number that reflects an instantaneous quantity (e.g. vital sign/ breathing rate/heart rate/gesture/state/status/action/motion of a user, temperature, network traffic, network connectivity, status of a device/machine, remaining power of a device, status of the device, etc.). The rate of change, the size, the orientation, the color, the intensity and/or the symbol may reflect the respective motion. The information may be presented visually and/or described verbally (e.g. using prerecorded voice, or voice synthesis). The information may be described in text. The information may also be presented in a mechanical way (e.g. an animated gadget, a movement of a movable part).

The user-interface (UI) device may be a smart phone (e.g. iPhone, Android phone), tablet (e.g. iPad), laptop (e.g. notebook computer), personal computer (PC), device with graphical user interface (GUI), smart speaker, device with voice/audio/speaker capability, virtual reality (VR) device, augmented reality (AR) device, smart car, display in the car, voice assistant, voice assistant in a car, etc. The map (or environmental model) may be 2-dimensional, 3-dimensional and/or higher-dimensional. (e.g. a time varying 2D/3D map/environmental model) Walls, windows, doors, entrances, exits, forbidden areas may be marked on the map or the model. The map may comprise floor plan of a facility. The map or model may have one or more layers (overlays). The map/model may be a maintenance map/model comprising water pipes, gas pipes, wiring, cabling, air ducts, crawl-space, ceiling layout, and/or underground layout. The venue may be segmented/subdivided/zoned/grouped into multiple zones/ regions/geographic regions/ sectors/ sections/ territories/ districts/ precincts/ localities/ neighborhoods/ areas/ stretches/expanse such as bedroom, living room, storage room, walkway, kitchen, dining room, foyer, garage, first floor, second floor, rest room, offices, conference room, reception area, various office areas, various warehouse regions, various facility areas, etc. The segments/regions/areas may be presented in a map/model. Different regions may be color-coded. Different regions may be presented with a characteristic (e.g. color, brightness, color intensity, texture, animation, flashing, flashing rate, etc.). Logical segmentation of the venue may be done using the at least one heterogeneous Type 2 device, or a server (e.g. hub device), or a cloud server, etc.

Here is an example of the disclosed system, apparatus, and method. Stephen and his family want to install the disclosed wireless motion detection system to detect motion in their 2000 sqft two-storey town house in Seattle, Washington. Because his house has two storeys, Stephen decided to use one Type 2 device (named A) and two Type 1 devices (named B and C) in the ground floor. His ground floor has predominantly three rooms: kitchen, dining room and living room arranged in a straight line, with the dining room in the middle. The kitchen and the living rooms are on opposite end of the house. He put the Type 2 device (A) in the dining room, and put one Type 1 device (B) in the kitchen and the other Type 1 device (C) in the living room. With this placement of the devices, he is practically partitioning the ground floor into 3 zones (dining room, living room and kitchen) using the motion detection system. When motion is detected by the AB pair and the AC pair, the system would analyze the motion information and associate the motion with one of the 3 zones.

When Stephen and his family go out on weekends (e.g. to go for a camp during a long weekend), Stephen would use a mobile phone app (e.g. Android phone app or iPhone app) to turn on the motion detection system. When the system detects motion, a warning signal is sent to Stephen (e.g. an SMS text message, an email, a push message to the mobile phone app, etc.). If Stephen pays a monthly fee (e.g. $10/month), a service company (e.g. security company) will receive the warning signal through wired network (e.g. broadband) or wireless network (e.g. home WiFi, LTE, 3G, 2.5G, etc.) and perform a security procedure for Stephen (e.g. call him to verify any problem, send someone to check on the house, contact the police on behalf of Stephen, etc.). Stephen loves his aging mother and cares about her well-being when she is alone in the house. When the mother is alone in the house while the rest of the family is out (e.g. go to work, or shopping, or go on vacation), Stephen would turn on the motion detection system using his mobile app to ensure the mother is ok. He then uses the mobile app to monitor his mother's movement in the house. When Stephen uses the mobile app to see that the mother is moving around the house among the 3 regions, according to her daily routine, Stephen knows that his mother is doing ok. Stephen is thankful that the motion detection system can help him monitor his mother's well-being while he is away from the house.

On a typical day, the mother would wake up at around 7 AM. She would cook her breakfast in the kitchen for about 20 minutes. Then she would eat the breakfast in the dining room for about 30 minutes. Then she would do her daily exercise in the living room, before sitting down on the sofa in the living room to watch her favorite TV show. The motion detection system enables Stephen to see the timing of the movement in each of the 3 regions of the house. When the motion agrees with the daily routine, Stephen knows roughly that the mother should be doing fine. But when the motion pattern appears abnormal (e.g. there is no motion until 10 AM, or she stayed in the kitchen for too long, or she remains motionless for too long, etc.), Stephen suspects something is wrong and would call the mother to check on her. Stephen may even get someone (e.g. a family member, a neighbor, a paid personnel, a friend, a social worker, a service provider) to check on his mother.

At some time, Stephen feels like repositioning the Type 2 device. He simply unplugs the device from the original AC power plug and plug it into another AC power plug. He is happy that the wireless motion detection system is plug-and-play and the repositioning does not affect the operation of the system. Upon powering up, it works right away. Sometime later, Stephen is convinced that our wireless motion detection system can really detect motion with very high accuracy and very low alarm, and he really can use the mobile app to monitor the motion in the ground floor. He decides to install a similar setup (i.e. one Type 2 device and two Type 1 devices) in the second floor to monitor the bedrooms in the second floor. Once again, he finds that the system set up is extremely easy as he simply needs to plug the Type 2 device and the Type 1 devices into the AC power plug in the second floor. No special installation is needed. And he can use the same mobile app to monitor motion in the ground floor and the second floor. Each Type 2 device in the ground floor/second floor can interact with all the Type 1 devices in both the ground floor and the second floor. Stephen is happy to see that, as he doubles his investment in the Type 1 and Type 2 devices, he has more than double the capability of the combined systems.

According to various embodiments, each CI (CI) may comprise at least one of: channel state information (CSI), frequency domain CSI, frequency representation of CSI, frequency domain CSI associated with at least one sub-band, time domain CSI, CSI in domain, channel response, estimated channel response, channel impulse response (CIR), channel frequency response (CFR), channel characteristics, channel filter response, CSI of the wireless multipath channel, information of the wireless multipath channel, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another CI. In one embodiment, the disclosed system has hardware components (e.g. wireless transmitter/receiver with antenna, analog circuitry, power supply, processor, memory) and corresponding software components. According to various embodiments of the present teaching, the disclosed system includes Bot (referred to as a Type 1 device) and Origin (referred to as a Type 2 device) for vital sign detection and monitoring. Each device comprises a transceiver, a processor and a memory.

The disclosed system can be applied in many cases. In one example, the Type 1 device (transmitter) may be a small WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. In one example, the Type 2 (receiver) may be a WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. The Type 1 device and Type 2 devices may be placed in/near a conference room to count people. The Type 1 device and Type 2 devices may be in a well-being monitoring system for older adults to monitor their daily activities and any sign of symptoms (e.g. dementia, Alzheimer's disease). The Type 1 device and Type 2 device may be used in baby monitors to monitor the vital signs (breathing) of a living baby. The Type 1 device and Type 2 devices may be placed in bedrooms to monitor quality of sleep and any sleep apnea. The Type 1 device and Type 2 devices may be placed in cars to monitor well-being of passengers and driver, detect any sleeping of driver and detect any babies left in a car. The Type 1 device and Type 2 devices may be used in logistics to prevent human trafficking by monitoring any human hidden in trucks and containers. The Type 1 device and Type 2 devices may be deployed by emergency service at disaster area to search for trapped victims in debris. The Type 1 device and Type 2 devices may be deployed in an area to detect breathing of any intruders. There are numerous applications of wireless breathing monitoring without wearables.

Hardware modules may be constructed to contain the Type 1 transceiver and/or the Type 2 transceiver. The hardware modules may be sold to/used by variable brands to design, build and sell final commercial products. Products using the disclosed system and/or method may be home/office security products, sleep monitoring products, WiFi products, mesh products, TV, STB, entertainment system, HiFi, speaker, home appliance, lamps, stoves, oven, microwave oven, table, chair, bed, shelves, tools, utensils, torches, vacuum cleaner, smoke detector, sofa, piano, fan, door, window, door/window handle, locks, smoke detectors, car accessories, computing devices, office devices, air conditioner, heater, pipes, connectors, surveillance camera, access point, computing devices, mobile devices, LTE devices, 3G/4G/5G/6G devices, UMTS devices, 3GPP devices, GSM devices, EDGE devices, TDMA devices, FDMA devices, CDMA devices, WCDMA devices, TD-SCDMA devices, gaming devices, eyeglasses, glass panels, VR goggles, necklace, watch, waist band, belt, wallet, pen, hat, wearables, implantable device, tags, parking tickets, smart phones, etc.

The summary may comprise: analytics, output response, selected time window, subsampling, transform, and/or projection. The presenting may comprise presenting at least one of: monthly/weekly/daily view, simplified/detailed view, cross-sectional view, small/large form-factor view, color-coded view, comparative view, summary view, animation, web view, voice announcement, and another presentation related to the periodic/repetition characteristics of the repeating motion.

A Type 1/Type 2 device may be an antenna, a device with antenna, a device with a housing (e.g. for radio, antenna, data/signal processing unit, wireless IC, circuits), device that has interface to attach/connect to/link antenna, device that is interfaced to/attached to/connected to/linked to another device/system/computer/phone/network/data aggregator, device with a user interface(UI)/graphical UI/display, device with wireless transceiver, device with wireless transmitter, device with wireless receiver, internet-of-thing (IoT) device, device with wireless network, device with both wired networking and wireless networking capability, device with wireless integrated circuit (IC), Wi-Fi device, device with Wi-Fi chip (e.g. 802.11a/b/g/n/ac/ax standard compliant), Wi-Fi access point (AP), Wi-Fi client, Wi-Fi router, Wi-Fi repeater, Wi-Fi hub, Wi-Fi mesh network router/hub/AP, wireless mesh network router, adhoc network device, wireless mesh network device, mobile device (e.g. 2G/2.5G/3G/3.5G/4G/LTE/ 5G/6G/7G, UMTS, 3GPP, GSM, EDGE, TDMA, FDMA, CDMA, WCDMA, TD-SCDMA), cellular device, base station, mobile network base station, mobile network hub, mobile network compatible device, LTE device, device with LTE module, mobile module (e.g. circuit board with mobile-enabling chip (IC) such as Wi-Fi chip, LTE chip, BLE chip), Wi-Fi chip (IC), LTE chip, BLE chip, device with mobile module, smart phone, companion device (e.g. dongle, attachment, plugin) for smart phones, dedicated device, plug-in device, AC-powered device, battery-powered device, device with processor/memory/set of instructions, smart device/gadget/items: clock, stationary, pen, user-interface, paper, mat, camera, television (TV), set-top-box, microphone, speaker, refrigerator, oven, machine, phone, wallet, furniture, door, window, ceiling, floor, wall, table, chair, bed, nightstand, air-conditioner, heater, pipe, duct, cable, carpet, decoration, gadget, USB device, plug, dongle, lamp/light, tile, ornament, bottle, vehicle, car, AGV, drone, robot, laptop, tablet, computer, harddisk, network card, instrument, racket, ball, shoe, wearable, clothing, glasses, hat, necklace, food, pill, small device that moves in the body of creature (e.g. in blood vessels, in lymph fluid, digestive system), and/or another device. The Type 1 device and/or Type 2 device may be communicatively coupled with: the internet, another device with access to internet (e.g. smart phone), cloud server (e.g. hub device), edge server, local server, and/or storage. The Type 1 device and/or the Type 2 device may operate with local control, can be controlled by another device via a wired/wireless connection, can operate automatically, or can be controlled by a central system that is remote (e.g. away from home).

In one embodiment, a Type B device may be a transceiver that may perform as both Origin (a Type 2 device, a Rx device) and Bot (a Type 1 device, a Tx device), i.e., a Type B device may be both Type 1 (Tx) and Type 2 (Rx) devices (e.g. simultaneously or alternately), for example, mesh devices, a mesh router, etc. In one embodiment, a Type A device may be a transceiver that may only function as Bot (a Tx device), i.e., Type 1 device only or Tx only, e.g., simple IoT devices. It may have the capability of Origin (Type 2 device, Rx device), but somehow it is functioning only as Bot in the embodiment. All the Type A and Type B devices form a tree structure. The root may be a Type B device with network (e.g. internet) access. For example, it may be connected to broadband service through a wired connection (e.g. Ethernet, cable modem, ADSL/HDSL modem) connection or a wireless connection (e.g. LTE, 3G/4G/5G, WiFi, Bluetooth, microwave link, satellite link, etc.). In one embodiment, all the Type A devices are leaf node. Each Type B device may be the root node, non-leaf node, or leaf node.

In one example, Peter has enjoyed using GPS-based mapping-navigation software (GPS app) on his smartphone as he travels around US, and predominantly New York metropolitan area where he lives. The GPS app allows him to go to any new places (by entering the destination into the app) without getting lost. The GPS app allows him to see his position on a map as he moves, whether by car or on foot. And it can give him real-time traffic information so that he can get to his destination in the shortest time, or without paying toll, or without going onto highway. It can reroute when he makes the wrong turn.

However, the GPS app does not work in many of his favorite indoor places in New York that Peter often goes, including shopping mall, sports stadium, hospital (to see grandpa who is sick) and New York JFK airport. Peter has been hoping that someone would come up with a good indoor mapping-navigation software that works well both outdoor and indoor.

Peter is delighted to learn that the Origin Wireless (OW) has partner with a telecommunication company to provide several indoor locationing/tracking/ navigation solutions. He quickly downloads the software package and installs the OW client app on the mobile device. He learns that recently the telecommunication company has deployed OW beacon software on numerous WiFi routers (e.g. Type 1 heterogeneous wireless device, stationary) of the telecommunication company deployed extensively around major US cities (including New York) and indeed everywhere in the US. The OW beacon software successfully turn the WiFi routers of the telecommunication company into beacon devices to send GPS-like navigational WiFi beacon signals to mobile devices (e.g. Type 2 heterogeneous wireless device, with processor, memory and a set of instructions) everywhere in the US. When Peter is in a shopping mall, the OW client app controls Peter's mobile device to pick up the navigational WiFi beacon signals from a nearby WiFi router of the telecommunication company in the mall, and to compute the current location spatial-temporal information (STI) using the disclosed method and system herein. With the updated location, the OW client app connects to a server through a network (Internet) to update the map as Peter moves.

Peter likes the OW client app because it often provides coupons of nearby stores, shopping hints, current sale items, daily specials, and many locations of interest (e.g. rest room, water fountain, restaurants, food courts, cinemas, mall exits). With the click of a button, the stores in the mall are labelled in a GUI. When he clicks into the ABC Restaurant he wants to visit, he can see many relevant information such as store hours, waiting time, and other information such as promotions, reviews and ratings. He can enter himself into a queue for a table of 2. He can even browse the menu and choose the dishes to order while waiting at the parking lot for his girlfriend to arrive. When he clicks a map icon, a navigational path is immediately generated that would guide Peter to the restaurant in the shortest time, avoiding the rush hour crowd and the closed-off area due to renovation. He especially like that the OW client app can use GPS to navigate outdoor and transition seamlessly to use the OW system to navigate indoor. It is going to be a perfect dating night.

The present disclosure introduces EasiTrack, an indoor tracking system that achieves decimeter accuracy using a single commodity WiFi Access Point (AP) and can be deployed at scale with almost zero costs. EasiTrack makes two key technical contributions: First, it incorporates algorithms that can accurately infer a target's moving distance using the RF signals received by itself. Second, EasiTrack devises a map-augmented tracking algorithm that outputs fine-grained locations by jointly leveraging the distance estimates and an indoor map that is ubiquitously available nowadays. The present teaching discloses a fully functional real-time system centering around a satellite-like architecture, which enables EasiTrack to support any number of clients. One can have deployed EasiTrack in different scenarios (including offices, hotels, museums, and manufacturing facilities) to track both humans and machines. The results reveal that EasiTrack achieves a median 0.58 m and 90% tile 1.33 m location accuracy in both LOS and NLOS scenarios and supports a large coverage of 50 m×50 m using a single AP. It is also verified that EasiTrack can be easily deployed at many buildings with little cost.

Indoor location systems using commodity off-the-shelf (COTS) WiFi are among the most promising solutions for ubiquitous tracking thanks to the wide availability of already deployed WiFi infrastructure. They should ideally satisfy the following four requirements:

• Low(Zero)-cost: They should be easy to install and deploy with low or ideally zero efforts. Ideally, they should be able to locate a mobile device using a single arbitrarily installed AP (even without knowing any of its information like location and orientation), without requiring any hardware changes at either side.
• Scalable: The systems should be scalable in two folds: They should transfer to a large number of different buildings, and should support large populations of concurrent mobile devices, just as GPS does, both with negligible costs.
• Large coverage: The systems should cover a large area, be it close or at distance, having Line-Of-Sight (LOS) or behind multiple walls to the AP, with consistently high accuracy.
• Accurate: They should be able to provide sub-meter accuracy, as demanded by many applications. Such accuracy is needed to enable in-building navigation, for example, directing a customer to a product in the store or a robot to a work station.

If the above requirements are all satisfied, one can imagine indoor location system becomes a ubiquitous "indoor GPS" that is made available anywhere having WiFi signals and for any device with a commodity WiFi chip.

No existing technology satisfies all these requirements. Recent techniques based on Angle of Arrival (AoA) or Time of Flight (ToF) could yield sub-meter median accuracy. However, they usually require large bandwidth (for ToF) and many phased antennas (for AoA) for good performance, both of which are limited on COTS WiFi. Moreover, they all require precise installation of multiple APs (to obtain their reference locations and orientations). Fingerprint-based approaches are neither accurate enough nor cost efficient due to expensive prior training. Other technologies combining with inertial sensors are deployable but have limited accuracy. The latest released 802.11mc supports round-trip time measurements, but does not offer sub-meter resolution either, and still needs multiple APs for multilateration.

The present teaching discloses EasiTrack, an indoor tracking system that meets all the four requirements above. EasiTrack achieves sub-meter accuracy in both LOS and Non-LOS (NLOS) scenarios using a single AP, without knowing its location. It can be easily deployed at scale, with no extra inputs but a digital floorplan of the area of interests, which would be needed anyway for most location-based services and is ubiquitously available. EasiTrack's architecture centers around a satellite-like design, which supports a number of concurrent clients without affecting the channel capacity, and preserves privacy since a client never needs to announce its presence but only passively listens to the AP.

When a client moves, EasiTrack first estimates the moving distance from its measured Channel State Information (CSI) and infers the moving direction from the built-in inertial sensors. It then employs a novel map-augmented tracking algorithm to incorporate distance and orientation estimates, which outputs fine-grained locations. Specifically, EasiTrack advances the state-of-the-art in tracking in two distinct ways:

(1) Distance estimation by leveraging multipaths: EasiTrack first contributes a super-resolution distance estimation algorithm, which accurately estimates the incremental displacement of a moving radio merely by the CSI measured by itself. The disclosed unique insight is that, when an array translates, two of its antennas may traverse through the same location in the space, one preceded by the other with a certain time delay, during which the array will have traveled for exactly a distance equal to the antenna separation. As such, one can design algorithms to continuously track the time delays by using rich multipaths indoors as distinctive location profiles. The moving speeds can be calculated by dividing the antenna separation by the time delays, and the moving distance can accordingly be derived by integrating speeds over time. The algorithm is demonstrated to be highly accurate, yet only suitable for relatively constrained movements, such as shopping carts, robots, and automated guided vehicles (AGVs). To enable Easi-Track for free human tracking as well, one can further incorporate a recent approach developed in that infers moving distances for unconstrained motions from CSI. Then one can design a universal architecture that allows switching the two approaches for different scenarios. By truly leveraging multipaths, instead of resolving and combating them as previous works, EasiTrack's distance estimation is location independent, working under both LOS and NLOS conditions.

(2) Map-augmented location tracking: While the distance estimation is rather accurate, it does not ensure sub-meter tracking accuracy when coupled with orientations obtained by inertial sensors, which suffer from significant accumulative errors. EasiTrack employs indoor maps to cope with these uncertainties. Imagine that Google Maps improves GPS accuracy using outdoor road maps to place a car on the correct road. Similarly, indoor maps impose geometric constraints to a target's in-building movements. For example, a user does not penetrate a wall.

This observation leads to design a map-augmented algorithm for accurate indoor tracking. The disclosed algorithm models indoor map as a weighted graph and feeds it into a novel graph-based particle filter (GPF), which jointly handles distance and orientation errors and outputs accurate locations. The graph-based model enables EasiTrack to use a small number of particles (e.g., 50), thereby making it run in real-time even on resource-limited devices. Also, the disclosed GPF requires merely information on accessible and inaccessible areas from the map, which can be directly extracted from a plain floorplan image. It does not need any structured knowledge, such as corridors, crossings, doors, or rooms, etc. Thus, EasiTrack can easily scale to many buildings with little cost.

A fully functional real-time system of EasiTrack is built, including hardware prototype using commodity WiFi chipsets, and software sets. To comprehensively evaluate the accuracy and deployment simplicity, one can have deployed EasiTrack in diverse environments to track both humans and machines, including three office buildings, one museum, one hotel, and two manufacturing facilities. The disclosed key results reveal the following: 1) EasiTrack achieves a median 0.58 m and 90%tile 1.33 m location error for tracking objects, and a median 0.70 m and 90%tile 1.97 m error for tracking humans, in both LOS and NLOS conditions with a single AP. 2) It is almost zero cost to deploy EasiTrack in a new building. Provided the map, the AP can be set up in minutes at any location that provides coverage. 3) EasiTrack can provide a large tracking coverage comparable to the AP's signal coverage. In the disclosed deployment, it can track over a 50 m×50 m area with one AP.

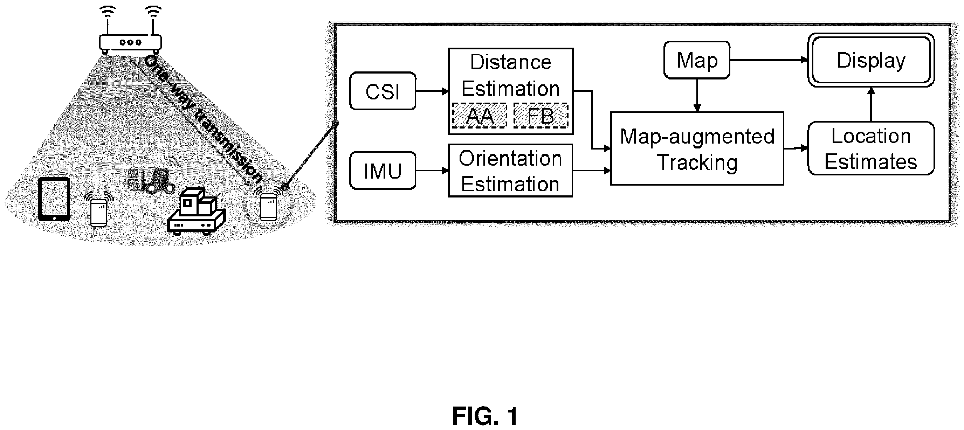

The disclosed EasiTrack is an indoor tracking system that achieves sub-meter accuracy, scales to massive buildings with (almost) zero costs. EasiTrack also contributes a CSI-based distance estimation algorithm and a map-augmented tracking algorithm, each could separately benefit existing techniques. FIG. 1 shows an overall architecture where EasiTrack passively collects CSI from one AP and records inertial sensors built in mobile clients. It first calculates the moving distance from CSI by leveraging rich multipaths, and orientation from IMU. Then it fuses the two types of estimates to continuously track, in combination with an indoor map. By this architecture, EasiTrack works like an "indoor GPS" (but without the need of multiple "satellites") that supports large populations of clients. FIG. 1 depicts an overview of EasiTrack's architecture. The left part illustrates the satellite-like protocol of EasiTrack. In an example usage scenario, a client, which could be a mobile, wearable, robot, automated guided vehicle (AGV), or any other electronic equipped with a WiFi radio and inertial sensors (IMU), passively listens to an AP and measures CSI from the incoming packets. The client also reads its built-in inertial sensors. EasiTrack's core engine, running on the client, infers the moving distance and orientation from the measurements and incorporates them together to track the client's continuous locations. The AP is simple: It does nothing but periodically sending signals that could be detected by the clients. Such simple-core, complex-edge architecture design provides significant benefits: 1) Scalable: It allows concurrent positioning of a large population of clients, without affecting the channel capacity; 2) Privacy: It preserves user privacy because the client does not need to send out any signal which may expose its presence, thereby preventing others from sniffing its location; 3) Flexible: The clients could perform different tracking algorithms as needed, all under the same environments. The right part of FIG. 1 shows EasiTrack's work flow on a mobile client. There are two key modules: Distance Estimation and Map-Augmented Tracking.

Distance estimation: EasiTrack involves two distinct approaches, namely Antenna Alignment (AA) and Focusing Ball (FB), to estimate the moving distance traversed by the user. Both approaches leverage the rich multipaths to estimate moving distances, yet are applicable in different tracking scenarios: AA is highly accurate and is suitable for tracking of objects like shopping carts, robots, and industrial AGVs with relatively constrained motions; while FB is less accurate compared to AA, yet it is more generic and superior for unconstrained human tracking. In EasiTrack, the two approaches can switch as needed on the fly.

Map-augmented tracking: EasiTrack tracks a user's location by fusing the moving distance estimated from CSI and the moving direction measured by inertial sensors. Although the logic flow is similar to conventional dead-reckoning, the present teaching discloses a novel design that incorporates indoor maps for precise tracking in a scalable way. EasiTrack takes the indoor map as input and transforms it into a weighted graph. The output graph is then fed into a novel Graph-based Particle Filter (GPF), which leverages the geometric constraints imposed by the map and jointly learns the accurate 2D location and orientation of a target when it moves. The location estimates are then displayed to users together with the map. Since the disclosed GPF only uses an ordinary indoor map (e.g., an image of the floorplan), it can easily scale to massive buildings with few costs.

Precise estimation of moving distance of a device has been a major bottleneck in indoor tracking and inertial sensing. Previously, IMUs have been widely exploited in the way of multiplying step count by stride lengths. This category of approaches, however, are well known to yield huge errors since stride lengths are difficult to estimate and vary significantly over time and subjects. This present teaching discloses two different approaches that can estimate incremental displacement of a moving device by leveraging rich multipaths indoors.

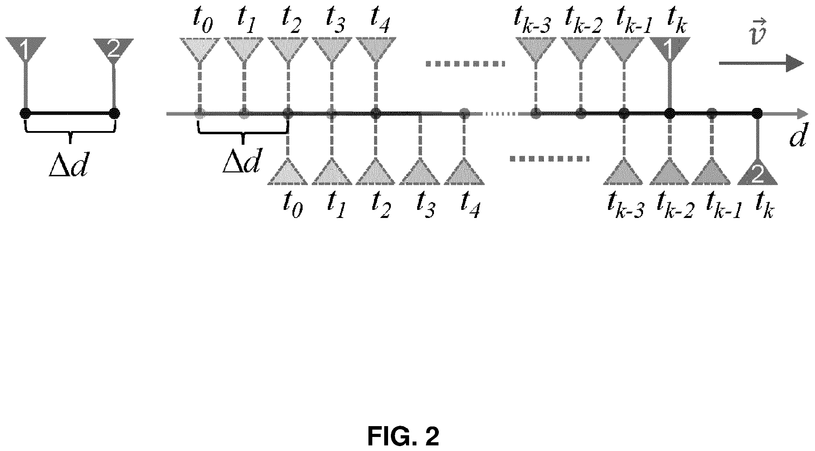

The core idea of AA-based distance estimation is shown below. Consider that a two-antenna array is moving along the line joining themselves (the line is called the antenna array line). FIG. 2 illustrates an exemplary antenna alignment, according to some embodiments of the present disclosure. When the array moves, after a displacement of $\Delta d$, antenna 1 will arrive at t_2 at a location where antenna 2 was at t_0. Thus the moving speed can be derived as $\Delta d/(t\_2-t\_0)$. Similarly, the instantaneous speeds can be estimated for every time point after that, and becomes $\Delta d/(t\_k-t\_{(k-2)})$ for current moment t_k. For ease of display, antenna 2 is plotted upside down.

As shown in FIG. 2, when the radio moves, one antenna will immediately follow the trajectory of the other. In other words, the two antennas travel through the same spatial locations and thus observe similar (ideally identical) CSI series, one after the other, with certain time delays $\Delta t$. Evidently, during $\Delta t$, the array has traveled for a distance of $\Delta d$, which equals to the antenna separation. $\Delta d$ is fixed and known for a given array. Thus if one can estimate the precise time delay $\Delta t$, one will obtain the accurate speed estimate as $v=\Delta d/\Delta t$. By continuously estimating $\Delta t$, the real-time speeds along the whole trajectory could be derived. Then the moving distance is directly estimated as $d = \int_0^T v_t dt,$ where $T$ is the total traveling time.

The above intuition directly leads to a novel mechanism, named antenna alignment, for moving distance estimation. The key is to determine the accurate time delay $\Delta t$, namely the time difference when an antenna arrives at a location traversed by the other antenna (i.e., the two antennas are "aligned"). Due to rich multipaths indoors, the CSI measured at one location could serve as a distinct location profile. Then the task is equivalent to identifying the precise time difference when one antenna observes the most similar channel measurements with the other. In the following, one can first introduce a similarity metric for CSI and then present an approach to precisely infer the time delays.

Time-reversal resonating strength: EasiTrack employs a similarity metric, the time-reversal resonating strength (TRRS), for two CSI $H_1$ and $H_2$ calculated as follows:

$$\eta(H_1, H_2) = \frac{|H_1^H H_2|^2}{\langle H_1, H_1 \rangle \langle H_2, H_2 \rangle}, \qquad (1)$$

where $^{*H}$ denotes the conjugate transpose. Evidently, $\eta(H_1, H_2) \in [0,1]$, and it achieves 1 if and only if $H_1 = \alpha H_2$ where $\alpha \neq 0$ is any complex scaling factor. If $H_1$ and $H_2$ are both normalized, then the TRRS becomes the square of their inner product, i.e., $\eta(H_1, H_2) = |H_1^H H_2|^2$. Albeit $\eta$ expresses in unsophisticated form, it serves as an effective measure and has been used for fingerprinting at centimeter accuracy. Time reversal is a physical phenomenon that the energy of a transmitted signal will be focused in both space and time domains when combined with its time-reversed and conjugated counterpart. TRRS was first defined in terms of Channel Impulse Response for location distinction. One can adapt to the equivalent form for Channel Frequency Responses.

To make it more discriminative and robust, one can exploit spatial diversity from multiple transmit antennas. Denote the CSI measured on the $i$th receive antenna at time $t$ as $H_i(t) = \{H_{i,1}(t), H_{i,2}(t), \cdots, H_{i,S}(t)\}$, where $H_{i,k}(t)$ is the CSI between the $i$th receive antenna and the $k$th transmit antenna and $S$ is the transmit antenna count. Then the TRRS between the CSI measured by the $i$th and $j$th receive antennas becomes

$$\bar{\eta}(H_i(t_i), H_j(t_j)) = \frac{1}{S} \sum_{k=1}^{S} \eta(H_{i,k}(t_i), H_{j,k}(t_j)). \qquad (2)$$

By taking the average, one can gain larger effective bandwidth from multiple transmit antennas for a more reliable similarity measure, but circumvent the need of synchronizing the CSI among them.

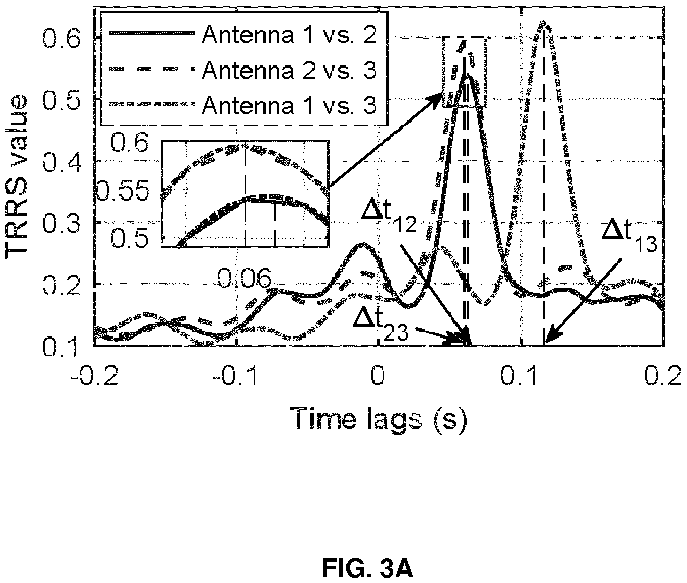

Time delay estimation mechanism: To pinpoint the precise time delay when two antennas $i$ and $j$ are spatially aligned, one can perform a local mapping between the CSI snapshot of antenna i at time $t$, denoted as $H_i(t)$, against those of antenna $j$ measured within a time window of $2l$, denoted as $[H_j(t - l), \cdots, H_j(t), \cdots, H_j(t + l)]$. Ideally, only one specific measurement $H_j(t + \Delta t)$ would produce a very large maximum similarity, indicating that antenna $i$ and $j$ observe the same channel (at the same location), with a time difference of $\Delta t$. FIG. 3A shows an example of the TRRS trend $[\eta(H_i(t), H_j(t + k)), k = -l, \cdots, l]$. As seen, one can identify the time delay by looking for the maximum TRRS peak. Formally, one can have

$$\Delta t = \left| \arg\max_{k \in \{-l, \cdots, l\}} \bar{\eta}(H_i(t), H_j(t + k)) \right|. \qquad (3)$$

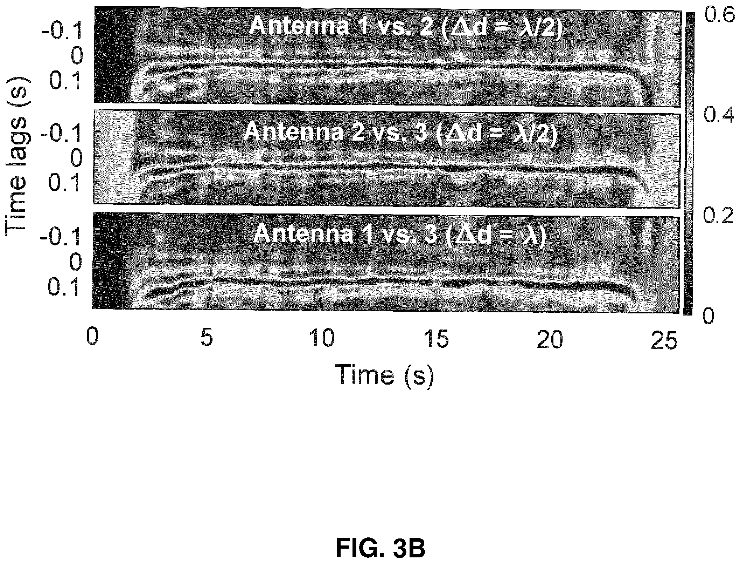

In practice, two techniques are further employed to enhance the time delay estimation accuracy: First, as shown in FIG. 3A, one can conduct a regression around the TRRS peak area to find a finer-grained time lag, which breaks down the resolution limit by sampling rates. Second, instead of looking at an individual time point, one can consider a TRRS matrix over time (as shown in FIG. 3B), where each column indicates the TRRS trend (as in FIG. 3A) for that specific time point. Based on the TRRS matrix, one can employ dynamic programming to robustly find the continuous TRRS peaks over time.

Although AA involves CSI mapping, it does not need any prior training and is immune to environmental dynamics because the mapping is done in a transient window. In addition, different from fingerprinting that needs to find a best match over all records, EasiTrack is only interested in the relative TRRS trend over a short time window, which allows a higher resolution at sub-centimeter level (FIG. 3A).

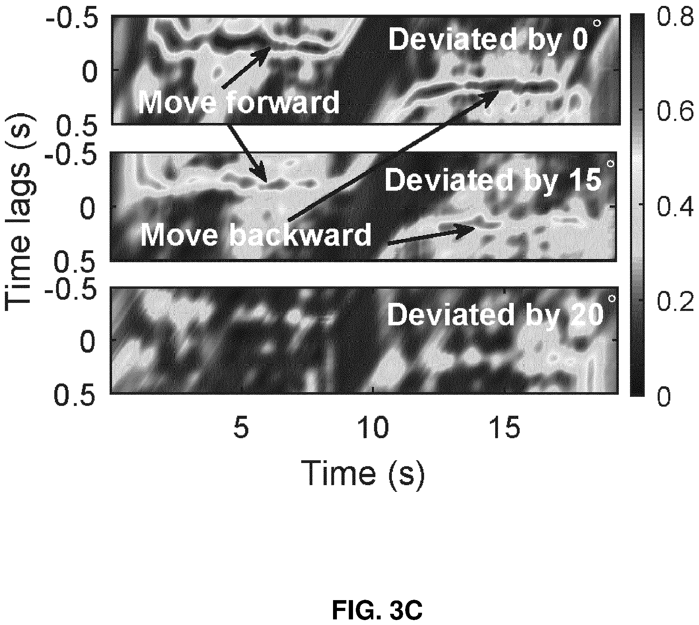

Handling practical movements: In principle, to estimate distance by AA, the target needs to move along the antenna array line, which is impractical to force. Fortunately, the constraint is relaxed in EasiTrack because, again, the relative TRRS trend rather than the absolute TRRS values is considered. FIG. 3C shows an example of the TRRS matrix under different deviation angles. As seen therein, if the deviation angle is small, there still exist evident similarity peaks, yet with slightly decreased peak values, which do not affect distance estimation. According to the disclosed experimental measurements, EasiTrack can tolerate a deviation of up to about 15°, when the adjacent antenna separation is 4 cm. This is a crucial feature for practical applications with which one can estimate the moving distance of a target without requiring it to move strictly along the antenna array line, underpinning realistic tracking of targets like robots, AGVs, shopping carts, etc.

AA is unsuitable for human tracking since it is impractical to ask a person carry a device and move it along a line during natural walking. To estimate moving distance for pedestrians, one can incorporate a recently developed method based on focusing ball effect in, where a critical statistical property of indoor RF signal propagation is discovered and modeled: The spatial distribution of multipath profiles, represented by CSI, is subject to a determinate function of spatial separation. This underlies an opportunity to reversely infer the moving distance from the distribution of CSI, whenever the device moves. One can briefly review the main results below and refer readers for more details in.

Consider the TRRS in Eqn. (2) for two CSI measured by the same receive antenna i at two locations $L\_0$ and $L$, denoted as $H\_i(t;L\_0)$ and $H\_i(t;L)$. One can have:

$$\eta(H_i(t;L_0), H_i(t;L)) \approx J_0^2\left(\frac{2\pi}{\lambda}d\right), \tag{4}$$

where $\lambda$ is the wavelength, $d$ is the distance between $L_0$ and $L$, and $J_0(x)$ is the zeroth-order Bessel function of the first kind. From Eqn. (4), one can estimate the moving distance by calculating the TRRS distribution for one CSI and the subsequent measurements on the receiver.

Comparing with AA, the accuracy of FB for distance estimation will be lower because the TRRS measurements may slightly deviate the theoretical distribution in practice due to non-uniformity of multipath distribution. The FB method is superior in its independence of moving directions and locations, since the property arises from the nature of numerous indoor multipaths. As a result, it is favorable for human tracking and employed in EasiTrack for this purpose. A key feature of both approaches is that, different from prior systems that attempt to resolve and combat multipaths for tracking, EasiTrack distinctively leverages numerous multipaths together: the more multipaths there are, the better performance it achieves. As a result, one can estimate distances independently from many factors, including location, orientation, environment, etc.

In addition to moving distance, EasiTrack also needs the moving direction to continuously track a target. EasiTrack utilizes the ubiquitous inertial sensors and follows standard operations to derive orientation information. In particular, one can mainly employ the gyroscope to measure the turning angles and accumulate the measurements to infer the current heading direction. Aiming at 2D movements, one can project the gyroscope readings based on the device's local coordinate system onto the gravity direction, which can be inferred from the accelerometer before the device starts moving. By such, the device can be in any position and does not need to be placed horizontally.

Inertial sensors are also leveraged to detect movements, and further determine if the target is making a turn or not, which will be used later in tracking. Intuitively, the locations can be directly calculated by integrating the consecutive measurements of moving distance and orientation, in a manner similar to dead-reckoning. This approach, however, suffers from significant errors due to the erroneous orientation measured by inertial sensors. In EasiTrack, indoor maps are incorporated to achieve precise tracking with coarse-grained orientation and distance observations. Two opportunities inspire the disclosed design: First, indoor maps impose effective geometric constraints to target's movements. Second, digital maps are nowadays ubiquitously available. In particular, industry efforts have been carried out to calibrate indoor maps for public places. Research advances have also promoted automatic generation of digital maps via mobile crowdsourcing.

While road maps are used to correct GPS errors, the present teaching leverages indoor maps in a lightweight and scalable way. Specifically, one can devise a graph-based particle filter based on a novel graph-based representation of indoor map. The graphical representation before diving deep into the disclosed GPF is shown in the following.

One can take standard indoor map, in the form of a plain image, as input. This does not request structured information, e.g., the knowledge of walls, corridors, and rooms, which is difficult to obtain from the map. Instead, one can merely extract access information that tells whether a location (a pixel) is accessible or not. Hence, the map can be, for example, a simple image with a specific color indicating inaccessible pixels (e.g., black walls), the most typical form for indoor maps.

Map discretization: To reduce the computation complexity and achieve real-time tracking, one can transform the map into a weighted graph. One may first sample the space (i.e., map) by a set of uniformly distributed points with a certain grid size s, each point becoming a vertex. Every vertex could be accessible or inaccessible, depending on its location on the map (i.e., pixel in the image). Then one may add edges between a vertex and each of its adjacent vertexes, if the edge does not intersect any obstacles. Each edge is weighted by its physical distance between two vertexes (which is either s or $\sqrt{2}s$ under grid sampling). By doing such, one may build a weighted graph G=(V,E), as shown in FIG. 4A. The sampling density s trades off the grid resolution and the number of vertexes. To target at sub-meter accuracy, s should be below 1 m and adapts to different maps. FIGs. 35A-35B illustrate exemplary graph-based map representations, according to some embodiments of the present disclosure. For clarity, only a partial map is displayed.

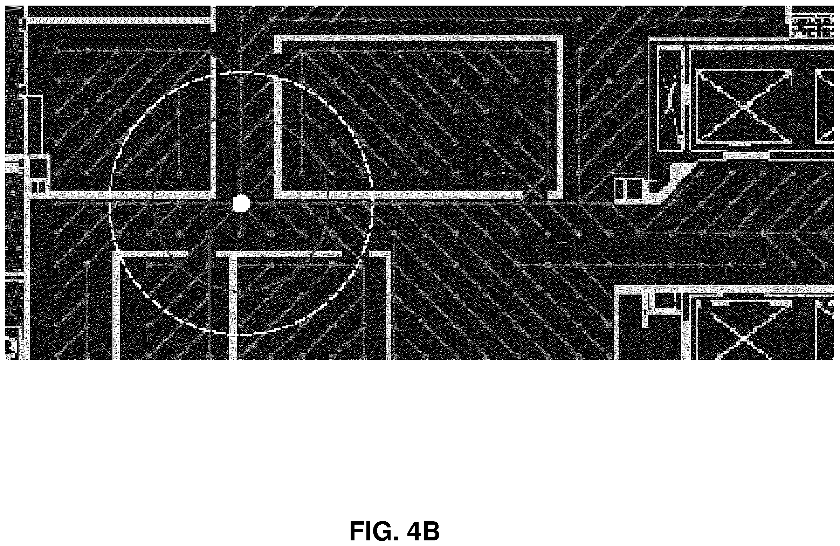

Reachability matrix: Once having transformed a map into a weighted graph, one can extract the intrinsic geometric properties by generating a reachability matrix M to represent the pair-wise reachable distances of |V| vertexes. Each element m_ij of the matrix denotes the reachable distance between vertexes V_i and V_j, which is defined as their shortest path distance. m_ij will become an infinite value if there does not exist an unobstructed path between V_i and V_j. FIG. 4B illustrates an example of reachability for one vertex, which basically shows all the shortest paths starting from it to all other vertexes.

The reachable distance is different from the Euclidean distance, but rather the walking distance between two locations. In fact, the reachable distance is usually larger than the Euclidean distance, because the straight line joining two locations is frequently blocked indoors. To avoid too huge size of M in case of large tracking areas, in practice one may ignore too distant vertex pairs and make M a rather sparse matrix. For example, only elements m_ij≤10 m will be stored.

How to design and implement an augmented particle filter by leveraging the graphical map is shown below with the pre-processed results. One may employ $N$ particles, X = $(X^{(1)}, X^{(2)}, \cdots, X^{(N)})$, with a three dimensional joint probability distribution. Each particle is represented as $\mathbf{X}^{(i)} = (x^{(i)}, y^{(i)}, \theta^{(i)})$, where $(x^{(i)}, y^{(i)})$ denotes its 2D location and $\theta^{(i)}$ is the orientation of the $i$th particle. Particle Movement: For the motion measurement $(\Delta d_t, \theta_t)$ at time t, the $i$th particle is updated as

$$x_t^{(i)} = x_{t-1}^{(i)} + \left(\Delta d_t + \delta^{(i)}\right) cos\left(\theta_t + \alpha^{(i)}\right), y_t^{(i)} = y_{t-1}^{(i)} + (\Delta d_t + \delta^{(i)})sin(\theta_t + \alpha^{(i)}) \qquad (5)$$

where $\delta^{(i)}$ and $\alpha^{(i)}$ are the Gaussian random noises added to the moving distance and orientation measurements, respectively.

Particle Weighting: Initially, each particle gets an equal weight of $w_0^{(i)} = 1/N$. At every step, particles undergo two weighting assignment: 1) Any particle that hits any inaccessible area (typically the walls) during a move will "die" and gets eliminated; 2) All other particles survive and will be weighted based on the *distance-to-live* (DTL) defined as below.

The key idea to determine a particle's weight, without the help of any additional measurements from extra signal sources, is that a particle should get a larger weight if it is more likely to survive for a longer distance before it is going to hit some obstacles, and otherwise a smaller weight. This insight directly leads to the specification of DTL.

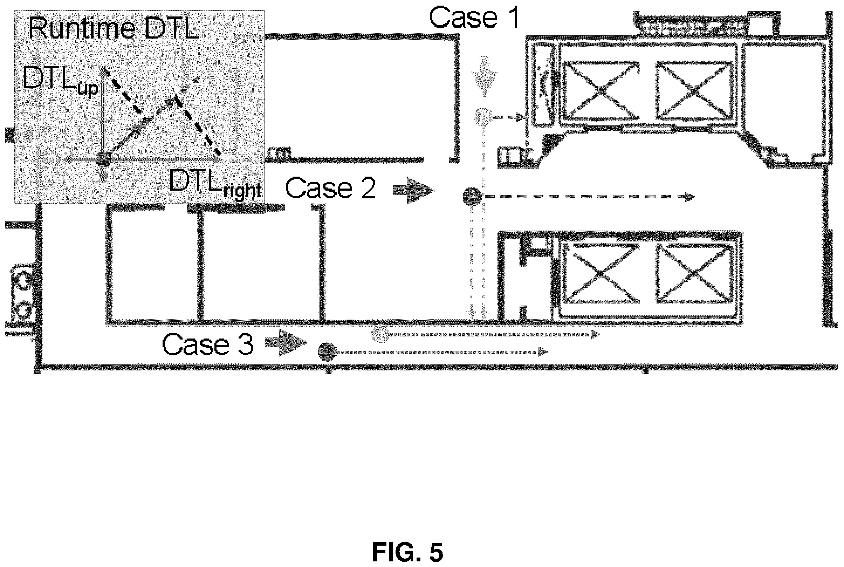

FIG. 5 illustrates DTL examples, according to some embodiments of the present disclosure. In case 1, the particle in light shadow has larger DTL than the one in dark shadow. In case 2, when the particles are moving towards right, the dark one gets larger weight. In case 3, both particles hold very large DTLs, which are thus forced to a fixed max-DTL value. In runtime, the DTL is approximated from the pre-calculated DTLs along four basic directions. As shown in FIG. 5, the DTL for a particle is calculated as the maximum accessible distance from the particle position along the particle moving direction. In case of very long corridors, one may set a maximum DTL to avoid overlarge values (Case 3 in FIG. 5).

In principle, the DTL needs to be calculated for every particle at every step, which is, however, too costly. In the disclosed GPF, one may devise an efficient approximation. During the pre-processing stage, one may additionally calculate the DTLs in four basic directions (i.e., left, right, up, and down) in advance. Then the DTL along a certain direction θ can be accordingly calculated as the sum of the projection of the DTLs along the two closest basic directions (e.g., right and up for the example in FIG. 5) on the current moving direction. Albeit the resulted DTLs are not necessarily equal to the exact DTLs by definition, one may demonstrate in real system that such approximation is effective and efficient. The main reason behind is that only the relative ranking of particle weights, rather than the absolute values, matter in the GPF. The above operation retains similar weight ranking as the exact DTLs, yet significantly reduces the runtime complexity.

Resampling: The disclosed GPF implements a novel approach for resampling. It first resamples N_live particles from the importance distribution, interpreted by particle weights $\{w_t^{(i)} | i = 1, 2, \cdots, N_{live}\}$, by following classical sequential importance resampling approach. Here N_live denotes the number of surviving particles during the current step. However, for each dead (thus eliminated) particle, one may choose to regenerate, instead of resampling, a new particle to avoid sample impoverishment problem (particles being over concentrated).

As shown in FIG. 4B, one may consider a certain neighboring area centered at the target's current location for regeneration. Supposing the target is currently at (x_t,y_t) closest to vertex V_t, one may first gather all of its reachable vertexes V_j with a reachable distance m_tj≤r and calculate each of their DTLs based on the current moving direction. Then one may perform importance sampling to draw N-N_live new particles among these candidate locations, using their DTLs as importance distribution. As shown in FIG. 4B, the regeneration radius r dynamically increases (white circle) when the target is detected to be turning and decreases otherwise (green circle).

Target location estimation: Finally, at each step, one may estimate the target's location using information of all the particles. Intuitively, the target location can be determined as the weighted centroid of all particles' locations. However, the centroid may be an inaccessible location or the line joining it to the current location may intersect a wall. Therefore, in EasiTrack, one may resort to a similar concept of *medoid.* In general, a medoid is a representative within a data set whose average dissimilarity to all the objects in the set is minimal. Compared with centroid, using medoid ensures that the resulted target location is always valid. Formally, the target location is estimated as the location of particle $\mathbf{X}_t^{(p^{\hat{a}})}$, where

$$p^{\hat{a}} = \operatorname*{arg\,min}_{i \in \{1, \cdots, N_{live}\}} \sum_{j=1}^{N_{live}} \frac{\phi(\mathbf{X}_t^{(i)}, \mathbf{X}_t^{(j)})}{w_t^{(j)}} ï¼Œ \tag{6}$$

where $\phi(\mathbf{X}_t^{(i)}, \mathbf{X}_t^{(j)})$ denotes the Euclidean distance between the two particles' locations. Then the series of location estimates are smoothed and displayed to users.

Gyroscope is known to suffer from significant accumulative errors. As reported by a latest work, the error can accumulate to above 50° after 2 minutes of running. According to the disclosed experimental experience, it could produce over 30° errors for a single 90° natural turning. These considerable errors in orientation, if not calibrated, will lead to significant location errors that even the GPF fails to correct because all particles will be guided to move in wrong directions.

To eliminate the accumulative errors, one may devise a technique to automatically reset the orientation opportunistically. The key observation is that, when the target is moving along a roughly straight path but not making a turn, the moving trajectory during this non-turning period offers a useful hint to infer the current heading direction. EasiTrack leverages these hints and performs opportunistic moving direction recalibration. Specifically, once such a non-turning segment is detected, one may reset the current moving direction by estimating the center line direction of the straight segment. For common behaviors, the target is moving straight rather than turning most of the time. Thus one can employ the reset operation quite frequently. By continuous recalibration, the accumulative direction errors will be effectively mitigated, even over very long running.

As EasiTrack only measures moving distances and directions, it needs a global location to initiate. Technically, the particle filter is capable of determining the initial location by initializing uniformly over all possible locations. However, it is only feasible with a huge number of particles, which is computationally prohibited in practice especially for very large tracking areas. Moreover, the particles only progressively converge after a long time, and sometimes do not converge.

Considering a real application and system, a promising alternative is to leverage the last-seen GPS signals at building entrances, as well as to request manual inputs from end users. One can mainly use user manual inputs in current EasiTrack system, since the primary goal is to demonstrate the disclosed distance estimation and map enhancement techniques. Although these technologies may not offer initial location at high accuracy, the caused errors will later be overcome by the disclosed GPF. For implementation, one can build a fully functional real-time system of EasiTrack, which involves many implementation details.

CSI denoising: CSI measured on COTS WiFi contains phase offsets, such as carrier frequency offset (CFO), sampling frequency offset (SFO), and symbol timing offset (STO), in addition to initial phase offset caused by the phase locked loops. EasiTrack is immune to the annoying initial phase distortions, which can only be manually calibrated previously, e.g. by taking the absolute value in Eqn. (1). One can calibrate the other linear offsets by using the phase cleaning approach.

Integrating multiple receive antennas: The disclosed AA method may need a minimum of two antennas as an array. In the disclosed implementation, the WiFi chipsets have three antennas. To fully utilize them, one can arrange them in a uniformly spaced linear array. Then one can treat the 1st and 2nd antennas as a pair, and the 2nd and the 3rd as another pair, and integrate the results together. The FB method works with a single antenna, yet one can also fuse the TRRS of all receive antennas to facilitate distance estimation.

Movement detection: One can employ inertial sensors to determine whether the target is moving. Only when the device is detected to move will EasiTrack estimate the moving distance. To mitigate the interference of irrelevant movement (e.g., hand motions) in human tracking, one can additionally apply a mask to detect if a user is walking or not by detecting steps using IMU.

Tracking in very large areas: EasiTrack uses a single AP to achieve ubiquitous tracking with a remarkable coverage. Technically, it works in any place covered by the AP, regardless of LOS or NLOS conditions. In practice, one single AP may not be sufficient to fully cover a very large tracking area. In such situation, multiple APs are required to provide full coverage. Accordingly, EasiTrack needs to handle handover between different APs when the client roams about the space, although it always uses only one AP at one time for tracking. One can use a straight-forward RSS-based handover scheme in the disclosed implementation for this purpose.

Map pre-processing: EasiTrack needs merely information on accessible and inaccessible areas from the ordinary images of indoor floorplans. This information could be automatically recognized by pixel colors. For example, the walls may be marked in darker colors while open spaces are black and white (or vice versa). However, depending on the quality of the obtained map image, there might be some interferences (e.g., texts, dimensions, etc.) that affect automatic recognition. To cope with that, one may manually pre-process the map to highlight all the obstacles (mainly walls) with a specific color. In one embodiment, it takes about 10 minutes for one who knows basic operations of Photoshop to process a typical map.

One can evaluate the disclosed system in real world scenarios using COTS WiFi. One can then deploy EasiTrack in 5 different buildings to evaluate human and cart tracking and 2 industry manufacturing facilities to test AGV tracking.

Methods: One can first evaluate the accuracy and impacting factors of the disclosed distance estimation method, AA, and compare with FB. To do so, one can put the EasiTracker on a cart and move it roughly along a straight line. One can evaluate different traces of about 10 m long and perform both AA and FB on the collected CSI respectively. One can set up a camera to capture the ground truth moving distances.

Overall accuracy: FIG. 6 compares the overall performance of AA and FB on moving distance estimation. As seen, AA achieves a remarkable median error of about 0.25 m and 90% tile error of 0.69 m, while FB yields 0.75 m and 1.82 m errors, respectively. Although the performance gains of AA come at the cost of relatively constrained movements, AA opens up a wide range of exciting opportunities due to the high accuracy, especially for tracking machines and objects like AGVs, shopping carts, robots, etc. Several factors that may impact AA's performance are studied. The impacting factors of FB method have been extensively studied. Thus one may only evaluate the overall tracking performance when incorporating it in EasiTrack.

Sampling rate: Certain sampling rates will be needed by EasiTrack to ensure enough resolution in distance estimation; otherwise the peak resolution (recall FIG. 3A) is limited. The results show that a sampling rate of 200 Hz, which one can use in EasiTrack, is adequate for normal speeds up to 2 m/s.

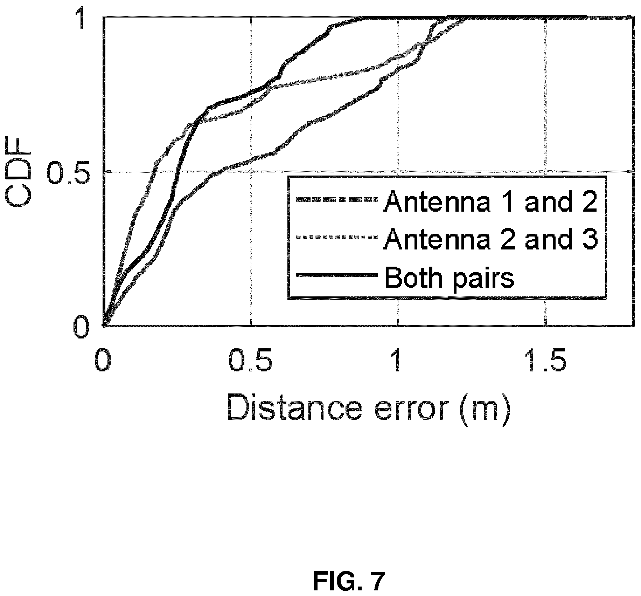

Antenna diversity and separation: FIG. 7 shows the diversity of antenna pairs. One can test different combinations of the three antennas available on the disclosed device as well as fuse two pairs together. As seen, AA produces consistently high performance using different antenna pairs and improves when combining multiple pairs. One can also examine different antenna separations, ranging from $\lambda/2$, $\lambda$, $3\lambda/2$ to $2\lambda$. As shown in FIG. 8, different separations only see negligible differences. Yet as a rule of thumb, the separation should be larger than $\lambda/2$; otherwise coupling effects will come into play.

Methods: Now one can study the tracking performance of EasiTrack system. One can deploy the system in one floor of a typical office building. There are rooms separated by dry walls, concrete pillars, and elevators inside the floor. One can place the AP in the middle of the building to provide good coverage. The AP may work on 153 channels. There are normal WiFi traffics on the same and adjacent channels. During experiments, there are people working around.

For AA-based EasiTrack (EasiTrack -AA), one can place the device on a cart and push it around. While for FB-based (EasiTrack -FB), one can ask a human to hold the device in hand and walk naturally. To study the quantitative location errors, one can mark a set of checkpoints at a density of about every two meters. The ground truth is record when a user passes by a checkpoint. Then one can employ several users to walk (or push a cart) around different areas. Multiple users can be tracked in the same time, regardless that they are testing EasiTrack-AA or EasiTrack-FB. Due to budget constraints, one can build three tracking kits (each including a Galileo Gen2 board and a Surface Pro), although EasiTrack can support any amount. The results are then categorized to evaluate the two methods respectively.

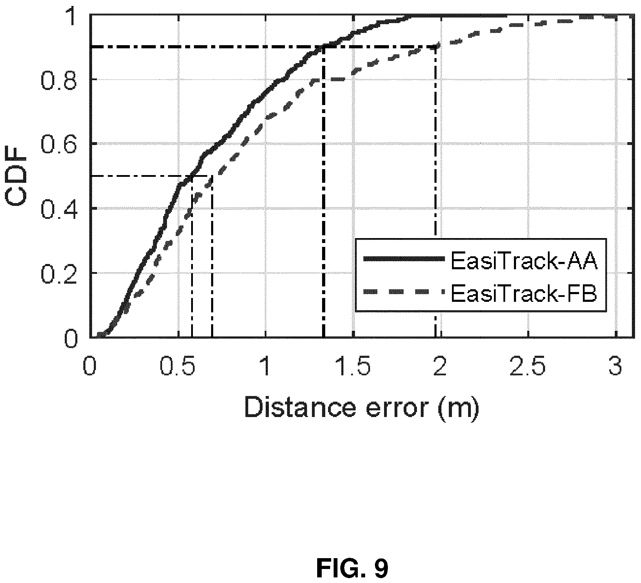

Overall performance: FIG. 9 shows that both EasiTrack-AA and EasiTrack-FB achieve sub-meter median accuracy. Specifically, EasiTrack-AA yields a median 0.58 m and 90% tile 1.33 m error respectively for cart tracking. Surprisingly, EasiTrack-FB achieves only slightly worse performance for human tracking with a median error of about 0.70 m, and a 90% tile error of 1.97 m. Compared to the distance estimation accuracy in FIG. 6, the overall tracking accuracy of EasiTrack-AA is slightly lower, which is mainly limited by orientation errors arising from sensors. In contrast, the accuracy of EasiTrack-FB improves a lot, contributed by the disclosed GPF, which effectively corrects location errors with a map.

Impacts of particle number: A unique feature of EasiTrack is that it achieves great performance using a small number of particles, thanks to the graph-based model. One can investigate how the performance would change with respect to particle amounts. One can thus evaluate the performance with particle numbers ranging from 20 to 800. EasiTrack achieves considerable performance with only 100 particles. The results show that EasiTrack requires orders of magnitude less particles than existing approaches. In one embodiment, 20 particles may be too few and may lead to very large tail errors, especially for EasiTrack -FB. In practice, a minimum of 50 particles is recommended.

Impact of errors in initial location: As the disclosed current implementation uses manual inputs for initial location, it is interesting to examine how sensitive it is to the uncertainties in initial location. One can add random errors to the start point, from 0.5 m to 2 m, and evaluate the traces with the erroneous initial locations. The disclosed GPF responsively overcomes these errors and maintains similar performance, which only slightly degrades to a median 0.73 m and 90% tile 1.56 m error for EasiTrack-AA when there are 2 m errors in initial locations. In other words, EasiTrack does not rely on precise initial locations to start. Instead, it only needs a coarse-grained input, which again could be provided by the user, opportunistic GPS, or other available anchors.

Benefits of direction reset: One can individually study the benefits of direction reset module. To do so, one can rerun all the traces offline by disabling the direction reset feature, and compare the results. It turns out that large errors are remarkably reduced for EasiTrack-FB, with a 90% tile error of 3.1 m to 1.7 m, by automatic direction reset, which eliminates large accumulative direction errors caused by sensors. For EasiTrack-AA, it achieves marginal accuracy gains. The reason is that direction error is less significant than human walking when placing the device on a cart. When direction errors accumulate, direction set will take effect.

Coverage: The disclosed benchmark evaluation demonstrates EasiTrack's tracking coverage in a typical office of 36 m×22 m. To stress the disclosed system to show the coverage limit, one can test tracking in a large building of about 100 m×35 m with many concrete walls and pillars, where one AP is not sufficient to cover the entire floor and thereby one can test tracking with handover between two APs. One can place two APs at two diagonal corners of the building; each roughly covers half of the tracking areas. The results validate that EasiTrack roams smoothly between the two APs and achieves similar high accuracy under either AP's coverage, as well as in the overlapping areas (middle corridors), thereby allowing it to track in very large areas simply by setting up additional APs.

To verify the tracking accuracy and deployment simplicity of EasiTrack, one can carry out real-world deployment at multiple sites with two different scenarios considered: human tracking and AGV tracking. Both cases have shown good tracking performance. EasiTrack runs in real-time without perceivable delays to end users. One may be interested in the system complexity introduced by different modules, especially distance estimation and the GPF. It is verified that EasiTrack can run in real-time even on small embedded devices.

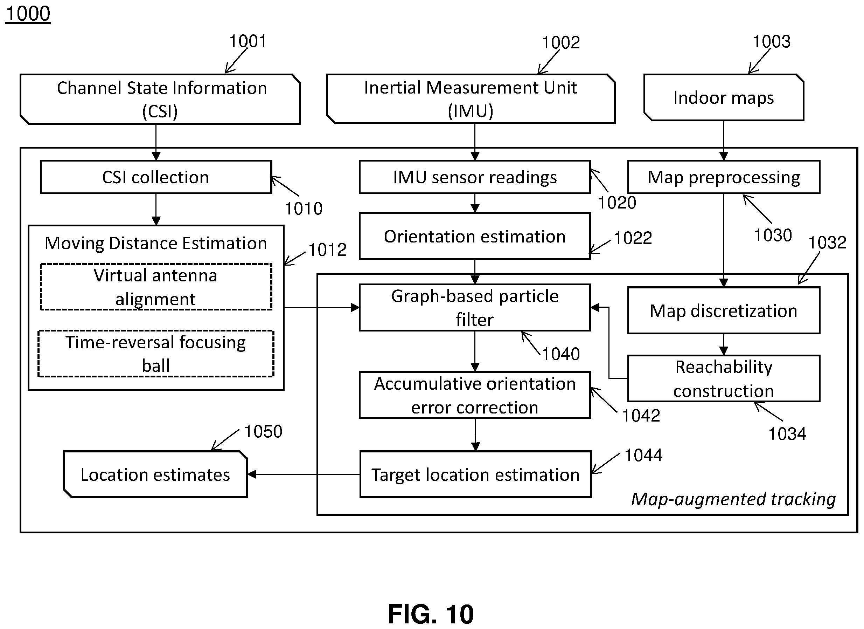

FIG. 10 shows a flowchart of a map-augmented tracking method 1000, according to some embodiments of the present disclosure. As shown in FIG. 10, a CSI collection 1010 is performed by collecting CSI 1001, e.g. of a wireless multipath channel. The collected CSI is used to estimate a moving distance at operation 1012, which may be based on a virtual antenna alignment (AA) method or a time-reversal focusing ball (FB) method as discussed above. The moving distance estimation result is provided to a graph-based particle filter 1040.

In addition, readings are obtained at operation 1020 from an IMU sensor 1002. An orientation estimation 1022 is performed based on these readings, and the orientation estimation result is provided to the graph-based particle filter 1040.

Further, a processing of indoor maps 1003 are performed at operation 1030; and the processed map information is used to perform a map discretization 1032. Then, a reachability construction 1034 is performed to generate a result provided to the graph-based particle filter 1040.

After the graph-based particle filter 1040, an accumulative orientation error correction 1042 is performed and target location estimation 1044 is performed to generate location estimates 1050 of the target object. As such, a movement of the target object is tracked or monitored by a map-augmented tracking technology. According to various embodiments, the order of some operations in FIG. 10 may be exchanged.

The present teaching discloses a ubiquitous indoor tracking system that achieves sub-meter accuracy in both LOS and NLOS scenarios using a single unknown AP and scales to massive buildings and end clients with almost zero cost. The present teaching also discloses a map-augmented probabilistic tracking algorithm based on a graph-based particle filter that fuses indoor maps with CSI-based distance and IMU-based direction information.

The present teaching discloses EasiTrack, an indoor location system that achieves sub-meter accuracy using a single AP and scales to many buildings with almost zero costs, making it a promising solution for ubiquitous indoor tracking. The present teaching discloses an approach for CSI-based moving distance estimation and a map-augmented tracking algorithm. One can deploy and verify the system in different buildings and facilities to track humans and machines.

In various embodiments of the present teaching, wireless tracking may be performed according the following clauses.

Clause A1: A method/apparatus/system of a wireless monitoring system, comprising: transmitting a series of probe signals by an antenna of a first wireless device using a processor, a memory and a set of instructions to at least one heterogeneous target wireless receiver through a wireless multipath channel in a venue, obtaining asynchronously by each of the at least one heterogeneous target wireless receiver at least one time series of channel information (CI time series) from the series of probe signals, the channel information (CI) being of the wireless multipath channel between the heterogeneous target wireless receiver and the first wireless device, monitoring iteratively asynchronously a respective motion associated with a respective object relative to a respective map based on respective at least one CI time series obtained from the series of probe signals by respective heterogeneous target wireless receiver, determining iteratively a respective incremental distance ($\Delta D$) travelled by the respective object in a respective incremental time period ($\Delta T$) based on the respective at least one CI time series, and computing iteratively a respective next location of the respective object at a respective next time (T1) in the respective map based on at least one of: a respective current location of the respective object at a respective current time (T2), the respective incremental distance ($\Delta D$), and a respective direction (theta) of the respective motion during the respective incremental time period.

Clause A2: The method/apparatus/system of the wireless monitoring system of clause A1: wherein a particular motion of a particular object is being monitored based on CI time series obtained by more than one heterogeneous target wireless receivers.

Clause A3: The method/apparatus/system of the wireless monitoring system of clause A1: wherein more than one respective motions associated with more than one respective objects are monitored relative to a particular map.

Clause A4: The method/apparatus/system of the wireless monitoring system of clause A1: wherein the respective incremental time period ($\Delta T$) is time difference between two respective probe signals of the series of probe signals.

Clause A5: The method/apparatus/system of the wireless monitoring system of clause A1: wherein the respective direction (theta) of the respective motion during the respective incremental time period is a respective function of at least one of: the respective direction of the respective motion at the respective current time (T2), the respective direction of the respective motion at the respective next time (T1) and the respective direction of the respective motion at another time.

Clause A6: The method/apparatus/system of the wireless monitoring system of clause A1, further comprising: computing the respective next location of the respective object at the respective next time in the respective map using particle filter.

Clause A7: The method/apparatus/system of the wireless monitoring system of clause A1, further comprising: initializing a respective initial number of respective initial candidate locations of the respective object at a respective initial time (T0), computing iteratively a first dynamic number (N1) of respective first candidate locations of the respective object at the next time based on a second dynamic number (N2) of respective second candidate locations of the respective object at the current time, computing the respective next location of the respective object at the respective next time based on at least one of: the first dynamic number of respective first candidate locations at the respective next time, and the second dynamic number of respective second candidate locations at the respective current time.

Clause A8: The method/apparatus/system of the wireless monitoring system of clause A7: wherein the respective object moves during the respective incremental time period in a respective region represented by the respective multi-dimensional map, wherein the respective multi-dimensional map is represented as a respective multi-dimensional array A, such that reachability of each location of the respective region is represented by corresponding array element a which is a logical value between 0 and 1, wherein the location is unreachable and forbidden if the array element a=0, wherein the location is fully reachable if a=1, wherein the location is partially reachable, if 0<a<1, wherein each of the respective next location, the respective current location, the first dynamic number of respective first candidate locations, and the second dynamic number of respective second candidate locations, is a point in the respective region and is represented as a corresponding array element a, with a>0, wherein the respective direction of the respective motion of the respective object at any respective location is locally represented as one of a number of allowable directions.

Clause A9: The method/apparatus/system of the wireless monitoring system of clause A8, further comprising: computing the first dynamic number (N1) of weights each associated with a respective first candidate location, each weight being a function of at least one of: the respective current location, the respective first candidate location, a corresponding respective second candidate location associated with the respective first candidate location, the respective direction of the respective motion, and a distance between the respective first candidate location and the first unreachable array element a in the respective direction, and computing the respective next location of the respective object based on the first dynamic number of respective first candidate locations, and the associated first dynamic number of weights.

Clause A10: The method/apparatus/system of the wireless monitoring system of clause A9: wherein each weight is a monotonic non-decreasing function of the distance between the respective first candidate location and the first unreachable array element a in the respective direction.

Clause A11: The method/apparatus/system of the wireless monitoring system of clause A9: wherein each weight is a bounded function of the distance between the respective first candidate location and the first unreachable array element a in the respective direction..

Clause A12: The method/apparatus/system of the wireless monitoring system of clause A9, further comprising: computing the respective next location of the respective object as a weighted average of the first dynamic number of respective first candidate locations.

Clause A13: The method/apparatus/system of the wireless monitoring system of clause A9, further comprising: computing the respective next location of the respective object as one of the respective first candidate location.

Clause A14: The method/apparatus/system of the wireless monitoring system of clause A9, further comprising: normalizing the weights.

Clause A15: The method/apparatus/system of the wireless monitoring system of clause A9, further comprising: computing weighted cost of each respective first candidate location with respect to the rest of the first dynamic number of respective first candidate locations, wherein the weighted cost is a weighted sum of pairwise distance between the respective first candidate location and each of the rest of the respective first candidate locations, wherein the weights are normalized, and choosing the respective next location of the respective object as the respective first candidate location with minimum weighted cost.

Clause A16: The method/apparatus/system of the wireless monitoring system of clause A8: wherein the multidimensional map is 2-dimensional, wherein the array A is a 2-dimensional array, wherein each array element a has two indices.

Clause A17: The method/apparatus/system of the wireless monitoring system of clause A8: wherein the multidimensional map is 3-dimensional, wherein the array A is a 3-dimensional array, wherein each array element a has 3 indices.

Clause A18: The method/apparatus/system of the wireless monitoring system of clause A8, further comprising: computing a predicted value for each of the second candidate location of the respective object based on at least one of: the second candidate location, the respective incremental distance ($\Delta D$), and the respective incremental time period ($\Delta T$), if the predicted value of the second candidate location is fully reachable with associated array element a=1, creating a first candidate location of the respective object based on the predicted value of the second candidate location, if the predicted value of the second candidate location is forbidden with associated array element a=0, labeling the second candidate location as "rejected" without creating any first candidate location, and if the predicted value of the second candidate location is partially reachable with associated array element 0<a<1, generating a random number between 0 and 1, and creating a first candidate location of the respective object based on the predicted value of the second candidate location if the random number is less than a.

Clause A19: The method/apparatus/system of the wireless monitoring system of clause A18, further comprising: if the amount of first candidate locations is smaller than a threshold, creating a new first candidate location of the respective object probabilistically taking on the predicted values of second candidate locations that are not rejected, with a probability distribution based on at least one of: weights associated with the predicted values, weights associated with the second candidate locations, array elements of the multi-dimensional array A associated with the predicted values, array elements of the multi-dimensional array A associated with the second candidate locations, and another probability distribution.

Clause A20: The method/apparatus/system of the wireless monitoring system of clause A18, further comprising: if the amount of first candidate locations is smaller than a threshold, creating a new first candidate location of the respective object probabilistically taking on the second candidate locations that are not rejected, with a probability based on weights associated with the predicted values of the second candidate locations that are not rejected.

Clause A21: The method/apparatus/system of the wireless monitoring system of clause A18, further comprising: if the amount of first candidate locations is smaller than a threshold, computing a tentative next location based on the amount of first candidate locations and creating a new first candidate location of the respective object probabilistically in a neighborhood of the tentative next location based on a probability distribution.

Clause A22: The method/apparatus/system of the wireless monitoring system of clause A18, further comprising: if the amount of first candidate locations is smaller than a threshold, creating a new first candidate location of the respective object probabilistically as a predictor of a location sampled in a neighborhood of the respective current location based on a probability distribution.

Clause A23: The method/apparatus/system of the wireless monitoring system of clause A22: wherein the neighborhood comprises at least one of the second candidate locations that are not rejected.

Clause A24: The method/apparatus/system of the wireless monitoring system of clause A22: wherein the probability distribution is a weighted sum of a set of probability density function (pdf), each centered at one of the second candidate locations that are not rejected.

Clause A25: The method/apparatus/system of the wireless monitoring system of clause A24: wherein at least two of the set of pdf are a common pdf.

Clause A26: The method/apparatus/system of the wireless monitoring system of clause A24: wherein the weight of each pdf associated with a second candidate location in the weighted sum is a function of the array element associated with the second candidate location.

Clause A27: The method/apparatus/system of the wireless monitoring system of clause A1, further comprising: maintaining a dynamic number of respective candidate locations at any time, changing the dynamic number of respective candidate locations by at least one of: initializing at least one respective candidate location, updating at least one respective candidate location, adding at least one respective candidate location, pausing at least one respective candidate location, stopping at least one respective candidate location, resuming at least one paused respective candidate location, reinitializing at least one stopped respective candidate location, and removing at least one respective candidate location, and computing the respective next location of the respective object at the respective next time based on at least one of: the dynamic number of respective candidate locations at the respective next time, and the dynamic number of respective candidate locations at another time.

Clause A28: The method/apparatus/system of the wireless monitoring system of clause A27: wherein the dynamic number of respective candidate locations is bounded by an upper limit at the respective current time.

Clause A29: The method/apparatus/system of the wireless monitoring system of clause A27: wherein the dynamic number of respective candidate locations may be bounded by a lower limit at some time.

Clause A30: The method/apparatus/system of the wireless monitoring system of clause A27, further comprising: adding at least one candidate location if the dynamic number of respective candidate locations is lower than a lower limit.

Clause A31: A method, implemented by a processor, a memory communicatively coupled with the processor, and a set of instructions stored in the memory to be executed by the processor, comprising: obtaining a plurality of time series of channel information (TSCI) of a wireless multipath channel, wherein: the plurality of TSCI are extracted from a wireless signal transmitted from a first wireless device to a second wireless device through the wireless multipath channel, each of the plurality of TSCI is associated with an antenna of the first wireless device and an antenna of the second wireless device, one of the first wireless device and the second wireless device is a stationary device, the other one of the first wireless device and the second wireless device is a moving device moving with an object, the moving device comprises at least two antennas; determining that a first channel information (CI) at a first time of a first TSCI associated with a first antenna of the moving device matches a second CI at a second time of a second TSCI associated with a second antenna of the moving device, wherein both the first TSCI and the second TSCI are associated with a particular antenna of the stationary device; computing at least one movement parameter of the moving device based on at least one of: the plurality of TSCI, a configuration of antennas of the moving device, a configuration of at least one antenna of the stationary device, a time difference between the first time and the second time, and a distance between the first antenna and the second antenna; computing a spatial-temporal information (STI) of the moving device based on at least one of: the at least one movement parameter, the first time, the second time, the configuration of antennas of the moving device, the configuration of at least one antenna of the stationary device, a past STI, and a past movement parameter, wherein at least one of the movement parameter and the STI is related to a current movement of the moving device; and tracking the object and the moving device based on the STI.

Clause A32: The method of clause A31, wherein: at least one of the movement parameter and the STI comprises at least one of: a location, a horizontal location, a vertical location, a length, an area, a volume, a capacity, a direction, an angle, a distance, a displacement, a speed, a velocity, an acceleration, a rotational speed, a rotational acceleration, a gait cycle, a presence, a motion type, a motion classification, a motion characteristics, a sudden motion, a transient motion, a periodic motion, a period of the periodic motion, a frequency of the periodic motion, a transient motion, a time trend, a timing, a timestamp, a time period, a time window, a sliding time window, a history, a frequency trend, a spatial-temporal trend, a spatial-temporal change, and an event; and tracking the object and the moving device comprises at least one of: determining a map location of the object, tracking the location of the object, tracking another motion analytics of the object, guiding movement of the object along a trajectory, guiding the movement of the object to avoid an obstacle, tracking motion of the object, tracking behavior of the object, object behavior identification, detecting the motion of the object, detecting a vital sign of the object, detecting a periodic motion associated with the object, detecting breathing of the object, detecting heartbeat of the object, detecting an event associated with the current movement, detecting a fall-down movement of the object, presenting the location of the object, presenting a history of the location of the object, and displaying the location of the object graphically.

Clause A33: The method of clause A31, further comprising: determining that a third CI at a third time of a third TSCI associated with a third antenna of the moving device matches a fourth CI at a fourth time of a fourth TSCI associated with a fourth antenna of the moving device, wherein both the third TSCI and the fourth TSCI are associated with another particular antenna of the stationary device; computing a probability model for a movement parameter based on at least one of: the matching between the first CI and the second CI, the matching between the third CI and the fourth CI, and another matching between another two CI; and computing the at least one movement parameter of the moving device stochastically based on at least one of: the probability model, the plurality of TSCI, the configuration of antennas of the moving device, the configuration of antennas of the stationary device, a time difference between the first time and the second time, a time difference between the third time and the fourth time, a distance between the first antenna and the second antenna, and a distance between the third antenna and the fourth antenna, wherein the STI of the moving device is computed based on at least one of: the at least one movement parameter, the first time, the second time, the third time, the fourth time, the configuration of antennas of the stationary device, the configuration of antennas of the moving device, a past STI, and a past movement parameter.

Clause A34: The method of clause A31, further comprising: computing a probability model for the at least one movement parameter; computing the at least one movement parameter of the moving device stochastically based on the probability model; and computing the STI of the moving device stochastically based on the at least one stochastically computed movement parameter.

Clause A35: The method of clause A31, further comprising: computing a probability model for the at least one movement parameter; computing the at least one movement parameter of the moving device stochastically based on the probability model; computing a number of candidate STIs of the moving device stochastically, wherein each candidate STI is computed based on a stochastically computed movement parameter; and computing the STI based on an aggregate of the candidate STIs.

Example: Stride length estimation

Stride length estimation has various applications, ranging from pedestrian tracking to individual healthcare. It is usually achieved by inertial sensing, which, however, suffers from large errors due to the noisy readings on the low-cost commodity sensors and unconstrained human walking. Different from prior methods that explore inertial sensors only, the present teaching discloses a fused radio and inertial sensing design that estimates fine-grained stride length. The disclosed approach incorporates recent advances in WiFi sensing that underpins walking distance estimation at centimeter accuracy from radio signals. Then a novel step detection algorithm is disclosed using inertial sensor readings, which not only counts steps but also reports the time information of every detected step. The algorithm then fuses the time-annotated distance estimates and steps to derive the stride length. The evaluation on a large public dataset shows that the step counting algorithm yields an error of 3%. Furthermore, experiments on commodity hardware with eight users demonstrate an error of about 2 cm in stride length estimation.

Inertial sensing has been an inexpensive and convenient solution to many mobile applications, such as pedestrian dead-reckoning (PDR) and gait analysis, among many others. It has been employed to support clinical diagnostics to quantify and treat gait impairments, a symptom of may neurological or musculoskeletal diseases that may result in shuffling steps or reduced step length. On the other hand, PDR using low-cost inertial measurement units (IMUs) has been widely studied to offer alternative positioning when GPS is not available. It integrates the moving distance, typically estimated as the number of steps multiplying the step length, and heading information to provide continuous locations.

Despite extensive research, one of the most crucial components that are still open to inertial sensing is accurate estimation of stride length, a critical stride-by-stride parameter to both gait analysis and PDR. Many algorithms have been disclosed for step detection, such as zero-crossing, peak detection, and autocorrelation. Stride length estimation, however, is more complicated due to the noisy readings on cheap sensors, varying walking patterns among individuals and over time. Early solutions adopt over-simplified linear/non-linear models that suffer from errors. The majority of prior algorithms perform double integration of acceleration over time, which requires zero-velocity update points for reinitialization and is vulnerable to the noisy sensor data and motion interference. Recent works build neural networks to learn stride length, which, however, requires a large amount of data for training. Other modalities are also employed for stride length estimation, including camera systems, pressure sensors, etc. These systems, however, are less convenient and usually much more expensive than inertial sensors.

Nowadays, most mobile devices are equipped with inertial sensors as well as multi-antenna WiFi radios. This disclosure leverages this opportunity and consider to integrate the emerging radio sensing with traditional inertial sensing to achieve precise stride length estimation. The idea is to estimate the walking distance from radio signals while the corresponding steps taken from the IMU data. One can employ the virtual antenna alignment approach and implement it for mobile environments using a commodity WiFi card with two or three antennas. A user simply needs to walk freely with the radio in hand, and the walking distance will be estimated from the measured series of Channel State Information (CSI) of the received WiFi signals. One can first introduce a novel time-domain algorithm for step detection based on a finite state machine, which not only counts steps but also reports accurate starting and ending time of each detected step. Many existing approaches fail to obtain such time-annotated steps. Then the stride length can be estimated by dividing the moving distance by the corresponding number of walking cycles during the same period.

The experiments to validate the effectiveness of the algorithm include two parts. First, one can examine the step detection on a large public dataset. The dataset contains the time series of IMU data measured on smartphones in typical, unconstrained use while walking. The evaluation on this dataset shows that the step counting algorithm achieves remarkable performance with error rates less than 5% for 90% of all the traces, outperforming 9 different approaches. In addition to the accurate step counting, the disclosed algorithm also outputs time information of every single step.

Then to evaluate the performance of stride estimation, one can implement and experiment with the disclosed algorithm on commodity hardware. Eight users are asked to walk normally while holding the device in hand. Both CSI and sensor data are collected during their walking. Notably, the stride length is estimated with a median error of around 2 cm.

There are many algorithms developed for step detection using inertial sensors. Conventional methods usually focus on counting how many steps have been taken given a sequence of accelerometer readings. To obtain precise stride length, one may need not only the step number but also the exact starting and ending time of each step so that one can later calculate the precise moving distance during the specific stride period via radio signals.

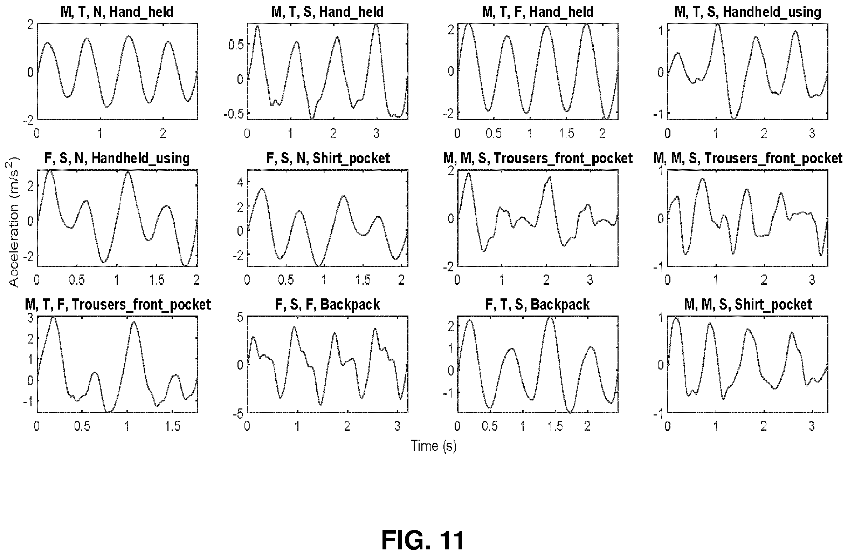

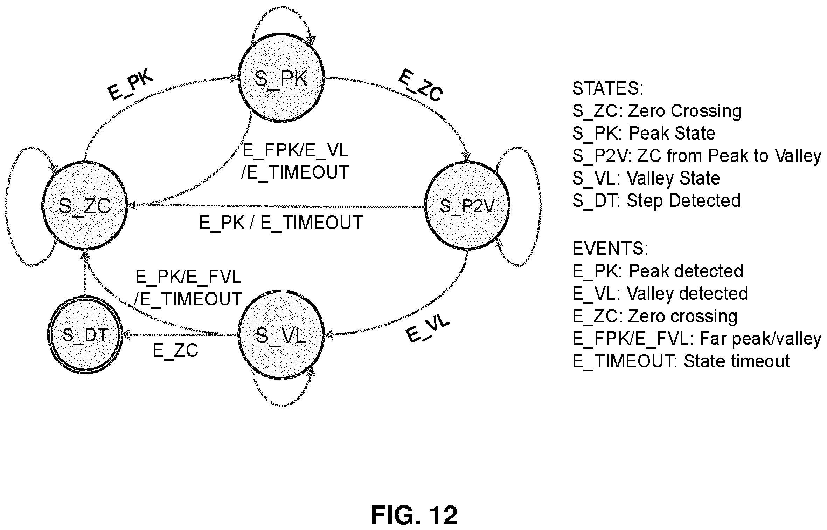

To achieve step detection with accurate timing information, the present teaching discloses a time-domain approach based on a Finite State Machine (FSM). The key insight is that a normal human walking cycle, albeit varying over individuals and speeds, submits to a typical template viewed from the inertial data. A stride cycle includes two phases: the stance and swing phases, which can be further decomposed into seven stages. The stance phase starts with the initial heel contact of one foot and ends when the same foot's toe leaves off the ground. The swing phase follows immediately with the action of the leg swinging forward and lasts until next heel contact. Intuitively, a stride cycle includes two steps, and the stride length is accordingly defined. In one embodiment, one does not differentiate two consecutive steps and thus calculates the step length as stride length, which is, on average, half of the commonly defined stride length. Ideally, during a step, the acceleration induced by walking motion will first increase to a large value; then decreases down to negative values, and finally returns to approximately zero. A typical and ideal acceleration change during a step is shown by the first figure in FIG. 11, while the other figures show how the patterns vary over different individuals, walking speeds, and sensor placements. Each figure in FIG. 11 is named in the format as Gender (M: Male, F: Female), Height (T: 180cm-189cm, M: 170cm-179cm, S: 150cm - 169cm), Speed (N: Normal, F: Fast, S: Slow), Placement. FSM design based on an in-depth understanding of the walking cycle, one can elaborate on an advanced FSM to characterize the acceleration transitions for step detection. As shown in FIG. 12, the FSM contains five different states:

- S_ZC: The initial and default state when a zero-crossing is detected;
- S_PK: The state when the acceleration tops a peak;
- S_P2V: The state that a zero-crossing occurs when the acceleration decreases from the peak to a potential valley;
- S_VL: The state at an acceleration valley;
- S_DT: The state that a step is claimed.

To determine the state transition, one can define six basic events, which are all identifiable from the inertial sensor data.

- E_PK: A peak is detected;
- E_VL: A valley is detected;
- E_ZC: A zero-crossing is observed;
- E_FPK: A "far" peak is detected after a previous E_PK event without any intermediate events, but with a large time difference exceeding a threshold;
- E_FVL: A valley similarly defined as E_FPK;
- E_TIMEOUT: A timeout event will trigger if the FSM stays on one state for too long.

The first three events characterize the key properties of acceleration patterns during walking, while the latter three are derived from the first three coupling with time information to combat noises and non-walking motion interference.

By default, the algorithm stays on its current state until an event occurs, depending on which it will either transit to another state or remains unchanged. Each state only transits upon the specific events as marked in FIG. 12. All the states except for the default S_ZC is associated with a timeout event. State S_DT will return to S_ZC with any new data arriving. E_FPK and E_FVL are introduced to handle the cases of two consecutive peaks or valleys caused by noisy sensor readings and user motion interference. For example, if a subsequent peak is too close to a former one, the algorithm will treat it as distortion during walking and keep the same state; otherwise, it is more like random motion, and the state is reset to S_ZC.

The design of the algorithm achieves many strong sides. For each detected step, the algorithm outputs the timing information of the detected step: The time point of the corresponding S_ZC is the starting time, while the time it enters S_DT implies the ending time. The algorithm is efficient, with only a few states. It decomposes the relatively noisy sensor readings as several essential events, which can be identified without relying on many subject-dependent parameters, such that it does not heavily rely on the absolute accelerations.

Sensor data processing: The raw sensor data are processed into a series of events-of-interests as inputs for the above FSM. A key challenge here, however, is that the ideal acceleration pattern of a step will greatly vary over different walking patterns and device locations (e.g., hand-held, in the pocket, or the backpack, etc.). Moreover, the sensor data is noisy and could drift over time. FIG. 11 illustrates several different patterns of the walking cycles, including normal, distorted, or biased ones.

To handle various sensor patterns, one can perform a series of preprocessing steps. The accelerometer reports 3D sensor values along its x-axis, y-axis, and z-axis for every sample, denoted as $a = (a_x, a_y, a_z)$. The reported accelerations are in the device frame (rather than the earth's frame) and contain both motion-induced and gravity-forced components. One may need to compensate for gravity and transform the accelerations into the earth's reference frame. Fortunately, modern IMUs have done an excellent job in extracting the gravity component as a fusion sensor (usually named as gravity sensor) based on the accelerometer and gyroscope or magnetometer, which reports a gravity vector $g = (g_x, g_y, g_z)$. Thus, one can easily obtain the magnitude of the projected acceleration free of sensor orientation as:

$$a = \frac{a \cdot g}{||g||}. \tag{7}$$

Given a time series of the acceleration magnitude, denoted as $A = [a(t_1), a(t_2), \cdots, a(t_M)]$ where $a(t_i)$ is the reading at time $t_i$, one can further detrend the gravity and potential sensor drifting by removing the moving average trend. Since one may not need to process the data online for stride length estimation, one can employ a relatively long window of 2 s to calculate the moving average. Afterward, one can further smooth the detrended data with a window of 0.25 s.

Then one can perform zero-crossing and peak detection to identify all the events-of-interests from the data series (valley detection is done in the same way as peak detection by multiplying the data by -1). The processing results in a time series of events, denoted as $E = [e(t_1), e(t_2), \cdots, e(t_Q)]$ where $e(t_i) \in \{E\_PK, E\_VL, E\_ZC\}$ is the event occurs at time $t_i$. The events are sparse over the time series A since typically there are three E_ZC, one E_PK, and one E_VL within a standard step. This event series is then fed into the FSM for step detection. The other three events, i.e., E_FPK, E_FVL, E_TIMEOUT, are detected inside the FSM by examining timestamps of two consecutive E_PK, E_VL and the duration of the state itself, respectively. For example, an E_FPK occurs if $e(t_{i-1}) = e(t_i) = E\_PK$ and $|t_i - t_{i-1}| > th_{max\_gap}$, where $th_{max\_gap}$ indicates a threshold that can be determined by human walking behavior.

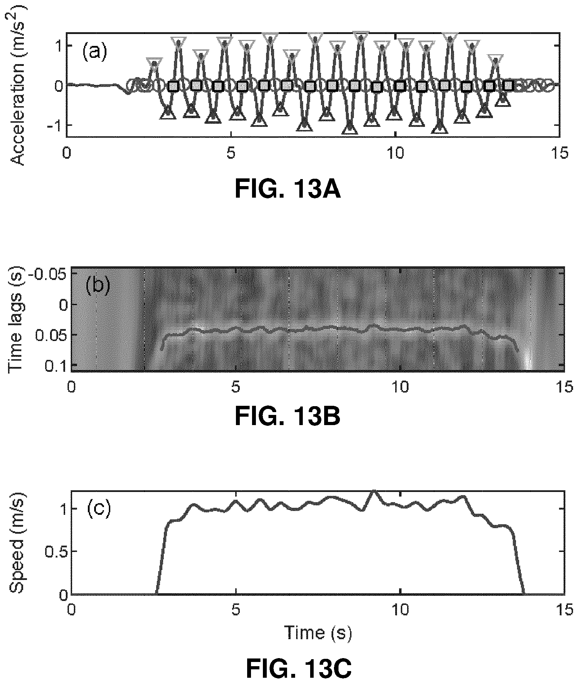

By involving events (that is, specific relative patterns in the acceleration series) rather than absolute acceleration thresholds, the disclosed FSM is more generalized and robust to different walking patterns and sensor locations. FIG. 13A shows an example of the step detection results, which counts every step precisely with timing information.

Walking Distance Estimation with WiFi: To accurately estimate the walking distance at the centimeter level, one can utilize the idea of the virtual antenna alignment approach.

Take a two-antenna line array as an example. When the array moves along the line joining them, there will be one antenna following the trajectory of the other. The particular moving speed determines the time delay for the following antenna to hit the same location the other has traveled (i.e., the two antennas are virtually aligned) and thus observe the same (similar) multipath profiles. The time delay can be estimated by

$$\Delta t(t) = |\arg\max_{k \in \{-l, \cdots, l\}} \eta(H_i(t), H_j(t+k))|, \tag{8}$$

where $H_i(t)$ is the CSI measurement at time $t$, $l$ specifies the search window $[t - l, t + l]$, and $\eta$ is the Time-Reversal Resonating Strength (TRRS) calculated as

$$\eta(H_i, H_j) = \frac{|H_i^H H_j|^2}{\langle H_i, H_i \rangle \langle H_j, H_j \rangle}, \tag{9}$$

where $(\cdot)^H$ denotes the conjugate transpose. With $\Delta t$, the array's moving speed can be immediately derived as

$$v(t) = \frac{\Delta d}{\Delta t(t)}, \tag{10}$$

where $\Delta d$ is the corresponding antenna separation known in advance. And the moving distance is thus calculated:

$$d = \int_0^T v(t)dt, \qquad (11)$$

where T is the time duration of moving.

Considering the scenario of stride length estimation, the user needs to hold the device in hand to increase the chance of virtual antenna alignment while walking. The virtual antenna alignment can tolerate a deviation angle of 15 ° gracefully during moving. This is a critical property that makes it applicable to hand-held mobile scenarios: Even during walking, a cooperative user can hold the device relatively stably with little chance of producing significant deviation beyond 15 °. As shown in FIG. 13B and 13C, the walking speeds can be accurately tracked when a user is normally walking while holding the WiFi device in hand.

FIG. 13 shows an example of the steps detected by inertial sensing and walking distance (speed) estimated by WiFi-based sensing. In FIG. 13A, the squares denote the detected steps, triangles denote peaks and valleys, and circles indicate zero-crossing points. FIG. 13B shows TRRS matrix with identified antenna alignment delays (line). FIG. 13C shows estimated speeds.

More generally, given a walking trace, suppose one has detected a series of N steps S = [$s_1$, $s_2$, $\cdots$, $s_N$], each step $s_i$ starting at time $t_{i-1}$ and ending at time $t_i$, and have estimated the corresponding instantaneous speed series V = [v(t), t = 1,2, $\cdots$, T]. It is then straightforward to derive the average stride length L as

$$L = \frac{\int_0^T v(t)dt}{N}. \qquad (12)$$

The estimation can be improved to be more robust to different lengths of the walking traces and/or varying stride lengths during a walking instance. Particularly, one can additionally calculate the stride length by using only the first k steps with k ranging from 1 to N:

$$L^k = \frac{\int_0^{t_k} v(t)dt}{k}, k = 1,2,\cdots,N. \qquad (13)$$

Then one can take the median value as the estimate, i.e., L = $Med_K(L^k)$.

With the instantaneous speed estimation and the fine-grained step detection, one can even calculate the step-by-step stride lengths, rather than merely the average value. Specifically, the stride length for the ith step can be obtained as the moving distance within that step: $L_i = \int_{t_{i-1}}^{t_i} v(t)dt$. Such fine-grained data would be useful for analyzing the variations of one's walking.

The fused radio and inertial sensing method contributes a distinct novel solution to the stride length estimation problem. It is immune to the noisy sensor readings, and the accumulative errors clung to the double integration approach. It is insensitive to sensor orientation and placement locations. And most importantly, it achieves high accuracy attributed by the precise step detection mechanism and the fine-grained distance estimation.

In one embodiment, human walking involves swinging motion (e.g. of two legs) with two alternate steps: (a) moving (e.g. swinging) one movable limb (e.g. left leg), and then (b) moving (swinging) another movable limb (e.g. right leg). A swinging motion is basically a repeating (or periodic) motion cycle with several observable phases. Acceleration (magnitude) may be used to track the series of strides as the user walks. A stride may be characterized by 4 states: standby, maximum (positive) acceleration, transition to zero acceleration, and then minimum (negative) acceleration, and back to standby. Other repeating motion of interest include: periodic motions of which each "cycle" has observable amount of peaks (local max) and valleys (local min). If the motion statistics (e.g. acceleration) has zero mean, a simplest motion cycle has the sequence of: zero, maximum, zero, minimum, and back to zero. Or, alternative, zero, minimum, zero, maximum, zero. If the motion statistics does not have zero mean (e.g. acceleration with slow drifting), mean can be subtracted and then the motion cycle may have the sequence of: zero, max, zero, min, zero. Alternatively, the non-zero motion statistics may have the sequence of: mean, above-mean maximum, mean, below-mean minimum, mean. Nowadays, smart phones have inertia measure unit (IMU) which can give acceleration. The acceleration can be converted from device frame (or device coordinate system, which changes relative to the earth due to human motion) to earth frame (or earth coordinate system), with compensation for acceleration due to gravity. In one embodiment, an algorithm may be described as below.

In a first step: use inertial sensor input to construct finite state machine (FSM). This includes the following. (a) IMU obtains device frame acceleration. (b) IMU converts device frame acceleration to earth frame acceleration, with compensation for gravity, (c) The device obtains earth frame acceleration and computes acceleration magnitude (which is very noise and has drifting problem). (d) The device preprocesses the acceleration magnitude by removing the moving average (i.e. subtract local mean, or mean subtraction) to address the drifting problem. The mean removal is done in two stages: first stage using 2-second time window for moving average, and second stage using 0.25-second time window. The 2-stage mean subtraction is equivalent to some 1-stage lowpass filtering. (e) The device analyzes acceleration magnitude to find "acceleration peak", "acceleration zero crossing", and "acceleration valley". Peak detection algorithm is used to detect "peak" and applied again to negated signal to detect "valley". Typically one "peak", one "valley" and three "zero" in a stride cycle. Note that "zero" is detected 3 times: in state a (standby), in state c (zero crossing) and in state e (end of stride cycle/standby). (f) Sometimes error condition may occur. Thus "far peak" condition is detected if current "peak" is detected directly after previous "peak", with no "zero" or "valley" or "standby", and the time between current peak and previous peak is greater than a threshold. (g) Similarly, "far valley" condition is detected if current "valley" is detected directly after previous "valley", with no "zero" or "peak" or, and the time between current peak and previous peak is greater than a threshold. (h) Another error condition is no state transition for a long time. "timeout" is FSM stays in one state for too long. (i) Other error condition is "valley" observed after "peak" with "zero". Or, "peak" observed after "zero". Or, "peak" after "valley" without "standby".

In a second step: compute timing of each of the 4 or 5 states (state a and state e are essentially the same state, except that state e declares "complete stride cycle detected") of Stride cycle based on IMU data, which includes the following. (a) initial/standby state, (which transition to state b if "peak" is observed); (b) acceleration peak, (which transition to state c if "zero" is observed, or state a if error occurs); (c) zero-crossing of acceleration (from positive to negative), (which transit to state d if "valley" is observed, or state a if error occurs); (d) Acceleration valley or min, (which transition to state e if "zero" is observe, or to state a if error occurs); (e) detect a complete stride cycle (which transition to state a automatically).

In a third step: use WiFi CSI to estimate distance/speed/acceleration using methods: (1) antenna matching, or (2) focusing ball, or (3) WiSpeed, or a combination of them. One can optionally use angle input (e.g. computed using CSI, or input from IMU).

In a fourth step: compute the instantaneous stride length based on the states and the timing of the states from the IMU data analysis and the distance/speed/acceleration from WiFi CSI analysis. Compute another statistics (e.g. average, median, mode, trimmed mean, weighted average, time-weighted average, variability measure, variance, standard deviation, variation measure, absolute variation, total variation, average variation, square variation, mean square variation, deviation measure, divergence, divergence measure, range, interquartile range, dispersion, diversion, moving average, moving median, moving mode, historical stride length, long term statistics, short term statistics, histogram, etc.).

Clause B1: A method/apparatus/system of a rhythmic motion monitoring system, comprising: obtaining a time series of channel information (CI) of a wireless multipath channel of a venue using a processor, a memory communicatively coupled with the processor and a set of instructions stored in the memory, wherein the time series of CI (TSCI) is extracted from a wireless signal transmitted between a Type 1 heterogeneous wireless device (wireless transmitter) and a Type 2 heterogeneous wireless device (wireless receiver) in the venue through the wireless multipath channel, wherein the wireless multipath channel is impacted by a rhythmic motion of an object in the venue; monitoring the rhythmic motion of the object jointly based on a time series of sensing information (TSSI) obtained from a sensor moving with the object and the TSCI; and triggering a response action based on the monitoring of the rhythmic motion of the object.

Clause B2: The method/apparatus/system of the rhythmic motion monitoring system of clause B1: wherein the rhythmic motion comprises at least one of: a walking motion, gait, marching motion, pacing motion, running motion, galloping action, troting action, body motion, leg motion, hand motion, finger motion, trunk motion, torso motion, head motion, repeated motion, complex repeated motion, robotic motion, mechanic motion, wind-induced motion, curtain motion, current-induced motion, fluid motion, vibration, earthquake, tremor, shaking motion, quivering motion, trembling motion, musical motion, dancing motion, oscillation, regular motion, periodic motion, breathing motion, heartbeat motion, palpitating motion, relaxation oscillation, increasing motion, decreasing motion, expanding motion, contracting motion, pulsating motion, pumping motion, pounding motion, thudding motion, throbbing motion, hammering motion, alternating motion, coordinated motion, combination of multiple repeated motion, modulated motion, mixed motion, composite motion with at least one underlying rhythm, motion coupled to another rhythmic motion of another object, transient motion with rhythmic details, fall-down motion, collision, impact, and a motion coupled to a rhythm.

Clause B3: The method/apparatus/system of the rhythmic motion monitoring system of clause B1: wherein a sensing information (SI) comprises at least one of: acceleration, 3-axis acceleration, acceleration magnitude, angular rate, 3-axis angular rate, inclination, 3-axis inclination, orientation, 3-axis orientation, force information, light information, heat information, temperature, and another sensing information; wherein a channel information (CI) comprises at least one of: channel state information (CSI), channel impulse response (CIR), channel frequency response (CFR), magnitude of at least one of: CSI, CIR and CFR, phase of at least one of; CSI, CIR and CFR, component of at least one of: CSI, CIR and CFR, signal strength, signal amplitude, spectral power measurement, modem parameters, dynamic beamforming information, transfer function components, radio state, measurable variables, sensed data, coarse-grained information of a layer, fine-grained information of a layer, and another channel information; wherein the layer comprises at least one of: physical layer, MAC layer, data link layer, network layer, transport layer, session layer, presentation layer, application layer, network interface, internet, TCP, UDP, IP, Ethernet, and another layer.

Clause B4: The method/apparatus/system of the rhythmic motion monitoring system of clause B1, further comprising: computing a time series of intermediate quantity (IQ) based on the TSCI; computing a time series of second intermediate quantity (SIQ) based on the TSSI, wherein the time series of IQ (TSIQ) and the time series of SIQ (TSSIQ) are asynchronous; and monitoring the rhythmic motion of the object based on the TSIQ and the TSSIQ.

Clause B5: The method/apparatus/system of the rhythmic motion monitoring system of clause B4: wherein at least one of an intermediate quantity (IQ) and a second intermediate quantity (SIQ) to comprise at least one of: a state associated with a cycle of the rhythmic motion, an event associated with the cycle of the rhythmic motion, a state of a finite state machine (FSM) associated with cycles of the rhythmic motion, an event associated with a state transition of the FSM, a rhythmic detail of the cycle of the rhythmic motion, an in-cycle detail of the cycle of the rhythmic motion, a timing of at least one of: state, event, rhythmic detail, and in-cycle detail associated with the cycle, a time stamp, a starting time, an ending time, a time code, a timing, a time period, a time duration, a frequency, a period, a cycle, a rhythm, a pace, a count, an indicator, an occurrence, a state, a set, a distance, a displacement, a direction, a speed, a velocity, an acceleration, an angular distance, an angular speed, an angular acceleration, a change of location, a change of direction, a change of speed, a change of acceleration, a proximity, a presence, an absence, an appearance, a disappearance, a location, a statistics, a motion statistics, a breathing statistics, a distance statistics, a speed statistics, an acceleration statistics, a metric, an 1_k distance metric, an 1_0 distance metric, an 1_1 distance metric, an absolute distance metric, an 1_2 distance metric, a Euclidean distance metric, an 1_infinity distance metric, a path, a volume, a mass, a surface area, a shape, a posture, an energy, a trend, a time sequence, a label, a tag, a class, a category, a time profile, a time quantity, a frequency quantity, a transient quantity, an incremental quantity, an instantaneous quantity, an averaged quantity, a locally averaged quantity, a filtered quantity, a quantity change, a repeating quantity, an event, a recognized event, a recognized motion sequence, a gesture, a hand gesture, a finger gesture, a wrist gesture, an elbow gesture, an arm gesture, a shoulder gesture, a head gesture, a facial gesture, a neck gesture, a waist gesture, a leg gesture, a foot gesture, a maximum, a minimum, a constrained maximum, a constrained minimum, a local maximum, a local minimum, a first local maximum, a first local minimum, a k-th local maximum, a k-th local minimum, an average, a weighted average, a percentile, a mean, a median, a mode, a trimmed mean, a conditional mean, a conditional statistics, an ordered statistics, a variance, a skewness, a kurtosis, a moment, a high order moment, a cumulant, a correlation, a covariance, a co-skewness, a co-kurtosis, a first order statistics, a second order statistics, a third order statistics, a high order statistics, a robust quantity, an argument associated with another quantity, a feature of a CI, a complex component of a CI, a magnitude of the complex component, a phase of the complex component, a function of the complex component of the CI, a polynomial of the magnitude of the complex component, a square of the magnitude of the complex component, a time series of the feature of CI, an autocorrelation function of the feature of CI, a function of another quantity, and the another quantity.

Clause B6: The method/apparatus/system of the rhythmic motion monitoring system of clause B4, further comprising: computing an autocorrelation function (ACF) associated with a time stamp based on the TSCI; computing an IQ associated with the time stamp based on the ACF.

Clause B7: The method/apparatus/system of the rhythmic motion monitoring system of clause B6, further comprising: computing the IQ based on at least one of: a local maximum, first local max, second local max, third local max, local minimum, first local min, second local min, third local min, zero-crossing, first zero, second zero, third zero, of the ACF.

Clause B8: The method/apparatus/system of the rhythmic motion monitoring system of clause B4, further comprising: computing a similarity score between a first CI of the TSCI at a first time and a second CI of the TSCI at a second time; comparing the similarity score against a reference function; determining that the value of the reference function at a particular argument is equal to the similarity score; computing the IQ based on the similarity score, the reference function, the particular argument, and a time difference between the first time and the second time.

Clause B9: The method/apparatus/system of the rhythmic motion monitoring system of clause B4, further comprising: wherein the IQ comprises at least one of: a distance, speed, acceleration, angular displacement, and heading direction of the rhythmic motion of the object; wherein the wireless signal is transmitted by M antennas of the Type1 device and received by N antennas of the Type2 device; obtaining more than one TSCI of the wireless multipath channel extracted from the wireless signal, wherein each TSCI associated with an antenna of the Type1 device and an antenna of the Type2 device; wherein at least one of: the Type1 device and the Type2 device, is a stationary device; wherein the other one of: the Type1 device and the Type2 device, is a moving device moving with the object; determining that a first CI at a first time of a first TSCI associated with a first antenna of the moving device matches a second CI at a second time of a second TSCI associated with a second antenna of the moving device, wherein both the first TSCI and the second TSCI are associated with the same antenna of the stationary device; computing the IQ based on at least one of: the more than one TSCI, a configuration of antennas of the moving device, a configuration of at least one antenna of the stationary device, a time difference between the first time and the second time, and a distance between the first antenna and the second antenna.

Clause B10: The method/apparatus/system of the rhythmic motion monitoring system of clause B4, further comprising: determining a finite state machine (FSM) associated with the rhythmic motion, wherein the FSM comprises: at least two states associated with the rhythmic motion, and state transitions among the at least two states each triggered by at least one state-transition event associated with the rhythmic motion; analyzing the TSSI in relation to the FSM; detecting a time series of detected events based on the analysis of the TSSI, wherein each detected event is one of the at least one state-transition event associated with the FSM, wherein each detected event is associated with an event time, wherein the TSSIQ comprises at least one of: the time series of detected events, the associated event times, and the resulting states according to the FSM; monitoring the rhythmic motion of the object based on the TSSIQ, the time series of detected events, the associated event times, and the resulting states according to the FSM.

Clause B11: The method/apparatus/system of the rhythmic motion monitoring system of clause B10, further comprising: identifying a complete cycle of rhythmic motion with associated starting time and ending time based on the analysis of the TSSI; monitoring the rhythmic motion of the object based on the identified complete cycle.

Clause B12: The method/apparatus/system of the rhythmic motion monitoring system of clause B11, further comprising: wherein a logical sequence of state transitions is associated with the complete cycle of the rhythmic motion of the object; detecting the logical sequence of state transitions based on at least one of: the analysis of the TSSI and an analysis of the time series of detected events; identifying the complete cycle of the rhythmic motion based on the detected logical sequence of state transitions.

Clause B13: The method/apparatus/system of the rhythmic motion monitoring system of clause B11, further comprising: wherein a logical sequence of states is associated with the complete cycle of the rhythmic motion of the object; detecting the logical sequence of states based on at least one of: the analysis of the TSSI and an analysis of the time series of detected events; identifying the complete cycle of the rhythmic motion based on the detected logical sequence of states.

Clause B14: The method/apparatus/system of the rhythmic motion monitoring system of clause B10, further comprising: identifying a partial cycle of rhythmic motion with associated starting time and ending time based on the analysis of the TSSI; monitoring the rhythmic motion of the object based on the identified partial cycle.

Clause B15: The method/apparatus/system of the rhythmic motion monitoring system of clause B14, further comprising: wherein a logical sequence of state transitions is associated with the partial cycle of the rhythmic motion of the object; detecting the logical sequence of state transitions based on at least one of: the analysis of the TSSI and an analysis of the time series of detected events; identifying the partial cycle of the rhythmic motion based on the detected logical sequence of state transitions.

Clause B16: The method/apparatus/system of the rhythmic motion monitoring system of clause B14, further comprising: wherein a logical sequence of states is associated with the partial cycle of the rhythmic motion of the object; detecting the logical sequence of states based on at least one of: the analysis of the TSSI and an analysis of the time series of detected events; identifying the partial cycle of the rhythmic motion based on the detected logical sequence of states.

Clause B17: The method/apparatus/system of the rhythmic motion monitoring system of clause B10: wherein the at least two states comprise at least one of the following states: initial, last, standby, default, error, reset, start, stop, time-out, cycle-start, cycle-end, full-cycle-detected, first-half-cycle-detected, second-half-cycle-detected, middle-half-cycle-detected, first-quarter-cycle-detected, second-quarter-cycle-detected, third-quarter-cycle-detected, fourth-quarter-cycle-detected, partial-cycle-detected, local-maximum (local-max), positive-local-max, high-local-max, medium-local-max, low-local-max, first-local-max, second-local-max, third-local-max, Nth-local-max, local-minimum (local-min), negative-local-min, deep-local-min, medium-local-min, shallow-low-min, first-local-min, second-local-min, third-local-min, Nth-local-min, zero-crossing (zero), steep-zero, medium-zero, gentle-zero, initial-zero, first-zero, second-zero, third-zero, Nth-zero, last-zero, positive-to-negative-zero, steep-positive-to-negative-zero, medium-positive-to-negative-zero, gentle-positive-to-negative-zero, negative-to-positive-zero, steep-negative-to-positive-zero, medium-negative-to-positive-zero, gentle-negative-to-positive zero, mean-crossing (meanC), steep-meanC, medium-meanC, gentle-meanC, initial-meanC, first-meanC, second-meanC, third-meanC, Nth-meanC, last-meanC, positive-to-negative-meanC, steep-positive-to-negative-meanC, medium-positive-to-negative-meanC, gentle-positive-to-negative-meanC, negative-to-positive meanC, steep-negative-to-positive-meanC, medium-negative-to-positive-meanC, gentle-negative-to-positive meanC, "peak", high-peak, medium-peak, low-peak, first-peak, second-peak, third-peak state, Nth-peak, "valley", deep-valley, medium-valley, shallow-valley, first-valley, second-valley, third-valley, Nth-valley, peak-to-valley, steep-peak-to-valley, medium-peak-to-valley, gentle-peak-to-valley, peak-to-valley-zero, peak-to-valley-meanC, valley-to-peak, steep-valley-to-peak, medium-valley-to-peak, gentle-valley-to-peak, valley-to-peak-zero, valley-to-peak-meanC, acceleration-peak, acceleration-valley, acceleration-peak-to-valley, acceleration-valley-to-peak, acceleration-local-max, acceleration-local-min, acceleration-zero, acceleration-positive-to-negative-zero, acceleration-negative-to-positive-zero, acceleration-meanC, acceleration-positive-to-negative-meanC, acceleration-negative-to-positive-meanC, stride-stance-phase, stride-foot-on-ground, double-support, initial-contact, loading-response, single-support, mid-stance, terminal stance, stride-swing-phase, stride-foot-in-air, pre-swing, initial swing, mid-swing, terminal-swing, breathing-inhale, breathing-exhale, breathing-inhale-to-exhale, breathing-exhale-to-inhale, heartbeat-P-wave, heartbeat-Q-wave, heartbeat-R-wave, heartbeat-S-wave, heartbeat-T-wave, heartbeat-PR-interval, heartbeat-QRS-complex, heartbeat-ST-segment, and another state.

Clause B18: The method/apparatus/system of the rhythmic motion monitoring system of clause B10: wherein the state transitions comprise at least one of the following actions: starting in at least one of: a start state, initial state, cycle-start state, standby state, and default state, ending in at least one of:a stop state, last state, cycle-end-state, standby-state, default-state, error-state, reset state, time-out state and any state, remaining in a same state, transitioning to at least one next state in a normal cycle, transitioning to at least one of: a cycle-detected state, half-cycle-detected state, quarter-cycle-detected and partial-cycle-detected state, in the normal cycle, and transitioning to at least one of: a start state, initial state, cycle-start state, standby state, default state, reset-state, error state, stop state, time-out state, and cycle-end state, in at least one of: an erroneous cycle and an abnormal cycle.

Clause B19: The method/apparatus/system of the rhythmic motion monitoring system of clause B10, further comprising: computing a time series of features (TSF) based on the TSSI, wherein the at least one state-transition event comprise at least one of the following events: at least one of: peak-detected, high-peak-detected, medium-peak-detected, low-peak-detected, first-peak-detected, second-peak-detected, third-peak-detected, and Nth-peak-detected, based on at least one of: a detection of local maxima (peaks) of the TSF associated with the TSSI at respective event times, a counting of the local maxima, and a thresholding of an amplitude of each local maximum, at least one of: valley-detected, deep-valley-detected, medium-valley-detected, shallow-valley-detected, first-valley-detected, second-valley-detected, third-valley-detected, and Nth-valley-detected, based on at least one of: a detection of local minima (valleys) of the TSF at respective event times, a counting of the local minima, and a thresholding of an amplitude of each local minimum, at least one of: peak-to-valley-detected, steep-peak-to-valley-detected, medium-peak-to-valley-detected, gentle-peak-to-valley-detected, peak-to-valley-zero-detected, and peak-to-valley-meanC-detected, based on at least one of: a detection of zero-crossings (zeros) of the TSF at respective event times, a counting of the zero-crossings, a thresholding of a derivative at each zero-crossing, a detection of second zero-crossings of a mean-subtracted TSF at respective event times, a counting of the second zero-crossings, and another thresholding of another derivative at each second zero-crossing, at least one of: valley-to-peak-detected, steep-valley-to-peak-detected, medium-valley-to-peak-detected, gentle-valley-to-peak-detected, valley-to-peak-zero-detected, and valley-to-peak-meanC-detected, based on at least one of: a detection of zero-crossings (zeros) of the TSF at respective event times, a counting of the zero-crossings, a thresholding of a derivative at each zero-crossing, a detection of second zero-crossings of the mean-subtracted TSF at respective event times, a counting of the second zero-crossings, and another thresholding of another derivative at each second zero-crossing, local-max-detected, positive-local-max-detected, high-local-max-detected, medium-local-max-detected, low-local-max-detected, first-local-max-detected, second-local-max-detected, third-local-max-detected, Nth-local-max-detected, based on at least one of: a detection of local maxima (peaks) of the TSF at respective event times, a counting of the local maxima, and a thresholding of an amplitude at each local maximum, local-min-detected, negative-local-min-detected, deep-local-min-detected, medium-local-min-detected, shallow-low-min-detected, first-local-min-detected, second-local-min-detected, third-local-min-detected, Nth-local-min-detected, based on at least one of: a detection of local minima (valleys) of the TSF at respective event times, a counting of the local minima, and a thresholding of an amplitude at each local minimum, zero-crossing-detected (zero-detected), steep-zero-detected, medium-zero-detected, gentle-zero-detected, initial-zero-detected, first-zero-detected, second-zero-detected, third-zero-detected, Nth-zero-detected, last-zero-detected, based on at least one of: a detection of zero-crossings (zeros) of the TSF at respective event times, a counting of the zero-crossings, and a thresholding of a derivative at each zero-crossing, mean-crossing-detected (meanC-detected), steep-meanC-detected, medium-meanC-detected, gentle-meanC-detected, initial-meanC-detected, first-meanC-detected, second-meanC-detected, third-meanC-detected, Nth-meanC-detected, last-meanC-detected, based on at least one of: a detection of zero-crossings of the mean-subtrated TSF at respective event times, a counting of the zero-crossings, and a thresholding of a derivative at each zero-crossing, time-out-detected based on a state-dependent thresholding of a state duration, error-detected based on a detection of an error, peak-peak-error-detected based on a detection of two consecutive peaks with time difference exceeding a first threshold without any in-between detected valley or detected zero, peak-valley-error-detected based on a detection of valley after a peak with time difference exceeding a second threshold without any in-between detected zero, zero-zero-error-detected based on a detection of two consecutive zero-crossings with time difference exceeding a third threshold without any in-between detected peak or detected valley, zero-peak-error-detected based on a detection of a peak after zero with time difference exceeding a fourth threshold without any in-between detected valley or detected zero, zero-valley-error-detected based on a detection of a valley after zero with time difference exceeding a fifth threshold without any in-between detected peak or detected zero, valley-valley-error-detected based on a detection of two consecutive valleys with time difference exceeding a sixth threshold without any in-between detected peak or detected zero, valley-peak-error-detected based on a detection of a peak after a valley with time difference exceeding a seventh threshold without any in-between detected zero, and another event.

Clause B20: The method/apparatus/system of the rhythmic motion monitoring system of clause B19: wherein each feature of the TSF is computed based on a respective SI of the TSSI.

Clause B21: The method/apparatus/system of the rhythmic motion monitoring system of clause B19: wherein each SI comprises a 3-axis acceleration of the sensor moving with the object, the 3-axis acceleration being associated with the rhythmic motion of the object; wherein each feature of the TSF is computed based on a magnitude of a respective 3-axis acceleration of a respective SI.

Clause B22: The method/apparatus/system of the rhythmic motion monitoring system of clause B10, further comprising: analyzing the time series of detected events, the associated event times and the resulting states according to the FSM; monitoring the rhythmic motion of the object based on the analysis.

Clause B23: The method/apparatus/system of the rhythmic motion monitoring system of clause B10, further comprising: computing an analytics of the rhythmic motion based on at least one of: the TSCI, the TSSI, the TSIQ, the TSSIQ, the time series of detected events, event times associated detected events, at least one complete cycle of the rhythmic motion and at least one partial cycle of the rhythmic motion.

Clause B24: The method/apparatus/system of the rhythmic motion monitoring system of clause B23, further comprising: identifying a cycle end-time associated with a full-cycle-detected event associated with the FSM and the TSSIQ; identifying a cycle start-time associated with an immediate past full-cycle-detected event associated with the FSM and the TSSIQ; computing a cycle-wise analytics based on a time window of the TSIQ, the time window spanning from the cycle start-time to the cycle end-time.

Clause B25: The method/apparatus/system of the rhythmic motion monitoring system of clause B23, further comprising: identifying an N-cycle end-time associated with a full-cycle-detected event associated with the FSM and the FSSIQ, wherein N is an integer greater than zero; identifying an N-cycle start-time associated with an N-th past full-cycle-detected event associated with the FSM and the FSSIQ; computing an N-cycle-wise analytics based on a time window of the TSIQ, the time window spanning from the N-cycle start-time to the N-cycle end-time.

Clause B26: The method/apparatus/system of the rhythmic motion monitoring system of clause B24 or clause B25, further comprising: replacing the time window by a replacement time window computed based on at least one of: TSCI and TSIQ, wherein an end-time of the replacement time window is a current time; computing a duration of the replacement time window based on a local characteristics of an autocorrelation function (ACF) associated with TSIQ, wherein the local characteristics comprises at least one of: local maximum, local minimum, zero crossing, local maximum of a derivation of IQ, local minimum of the derivative, and zero crossing of the derivative, computing a start-time of the replacement window based on the duration and the end-time.

Clause B27: The method/apparatus/system of the rhythmic motion monitoring system of clause B26, further comprising: monitoring the rhythmic motion of the object based solely on TSCI, without the TSSI.

Clause B28: The method/apparatus/system of the rhythmic motion monitoring system of clause B23: wherein the analytics comprises at least one of: at least one of: a feature, state, status, event, condition, count, statistics, location, position, region, spatial coordinate, orientation, direction, heading direction, bearing, angle, placement, deformation, distortion, contraction, expansion, gesture, expression, presentation, manifestation, material, material property, shape, texture, material, color, electromagnetic characteristics, visual pattern, wetness, reflectance, translucency, flexibility, surface, pose, body language, sign, gesture, handwriting, motion type, motion classification, motion characteristics, motion attribute, activity, behavior, length, width, height, area, volume, size, scale, speed, acceleration, time, timing, period, frequency, measurable quantity, instantaneous quantity, recent quantity, past quantity, future quantity, predicted quantity, in-cycle quantity, inter-state quantity, and statistics, associated with at least one of: a cycle, cycle of the rhythmic motion, half-cycle, quarter-cycle, partial cycle, two-cycle, double cycle, four-cycle, quad-cycle, N-cycle, gait cycle, stride, step, 2-step stride, 4-step stride, N-step stride, at least one of: a function, function of function, composite function, stridewise function associated with a stride, stepwise function associated with a step in N-step stride, function of quantities with even indices, function of quantities with odd indices, function of quantities with any indices, function of quantities of first wavefront of indices in N-step stride (1, N+1, 2N+1, 3N+1, ...), function of phase 1 quantities in N-step stride, function of quantities of second wavefront of indices in N-step stride (2, N+2, 2N+2, 3N+2, ...), function of phase 2 quantities in N-step stride, function of quantities of k-th wavefront of indices in N-step stride (k, N+k, 2N+k, 3N+k, ...), function of phase k quantities in N-step stride, harmonic ratio (HR), ratio of sum of amplitude of even harmonics of Fourier transform to sum of amplitude of odd harmonics of Fourier transform, composite function of a function of even harmonics of a transform and another function of odd harmonics of the transform, harmonic feature, odd-even symmetry, odd-even asymmetry, addition, subtraction, multiplication, division, derivative, integration, summation, transform, transformation, filtering, convolution, smoothing, decomposition, projection, mean subtraction, thresholding, quantization, vector quantization, normalization, indicator function, time scaling, mapping, recognition, detection, clustering, classification, time, timing, instantaneous value, mean, average, weighted average, arithmetic mean, geometric mean, harmonic mean, trimmed mean, moving average, short-term average, long-term average, historical average, median, percentile, mode, histogram, statistics, count, variability measure, variation measure, regularity measure, similarity measure, range, interquartile range, spread, variance, standard deviation, variability, deviation, divergence, dispersion, total variation, absolute deviation, total deviation, distance, metric, norm, maximum (max), minimum (min), local max, first max, second max, Nth max, local min, first min, second min, Nth min, optimization, constrained optimization, statistics, recurrent plot (RP), RP feature, at least one of: recurrent rate, determinism, entropy, and average diagonal line of RP, generalized RP (GRP), GRP feature, history, trend, weighted statistics, trimmed statistics, moving statistics, autocorrelation function (ACF), autocovariance function, cross correlation, cross covariance, grouping, count, combination, indicator, index, label, attribute, association, prediction, regularity measure, repeatability, spontaneity, and another quantity, associated with any of the above, an identification of at least one of: the object, the rhythmic motion, and a state of the object, and another analytics.

Clause B29: The method/apparatus/system of the rhythmic motion monitoring system of clause B23, further comprising: computing the analytics of the rhythmic motion based on at least one of the following operations: filtering, linear filtering, lowpass/bandpass/highpass filtering, mean filtering, mean subtraction, mean removal, FIR/IIR filtering, convolution, matched filtering, Kalman filtering, MA/ARMA filtering, nonlinear filtering, median filtering, mode filtering, rank filtering, quartile filtering, percentile filtering, selective filtering, adaptive filtering, denoising, particle filtering, multi-stage filtering, nonlinear mapping, companding, folding, grouping, sorting, thresholding, soft thresholding, hard thresholding, clipping, soft clipping, interpolation, decimation, subsampling, upsampling, resampling, time correction, timebase correction, phase/magnitude correction or cleaning, enhancement, denoising, smoothing, signal conditioning, feature extraction , magnitude/phase/energy extraction, spectral analysis, linear transform, nonlinear transform, inverse transform, frequency transform, Fourier transform (FT), discrete time FT (DTFT), discrete FT (DFT), fast FT (FFT), wavelet transform, cosine transform, DCT, power-of-2 transform, sparse transform, graph-based transform, graph signal processing, fast transform, zero padding, decomposition, projection, orthogonal projection, non-orthogonal projection, over-complete projection, eigen-decomposition, singular value decomposition (SVD), principle component analysis (PCA), independent component analysis (ICA), first order derivative, second order derivative, higher order derivative, integration, summation, averaging, maximization, minimization, least mean square error, recursive least square, constrainted least square, batch least square, least absolute error, least mean square deviation, least absolute deviation, local maximization, local minimization, optimization of a cost function, neural network, recognition, labeling, training, clustering, machine learning, supervised/unsupervised/semi-supervised learning, comparison with another TSCI, similarity score computation, quantization, vector quantization, matching pursuit, compression, encryption, coding, storing, transmitting, normalization, temporal normalization, frequency domain normalization, classification, tagging, learning, detection, estimation, learning network, mapping, remapping, expansion, storing, retrieving, transmitting, receiving, representing, merging, combining, splitting, tracking, monitoring, intrapolation, extrapolation, histogram estimation, importance sampling, Monte Carlo sampling, compressive sensing, representing, merging, combining, splitting, scrambling, error protection, forward error correction, decision feedback, doing nothing, addition, subtraction, multiplication, division, time varying processing, conditioning averaging, weighted averaging, arithmetic mean, geometric mean, harmonic mean, averaging over selected frequency, averaging over antenna links, logical operation, permutation, combination, sorting, AND, OR, XOR, union, intersection, vector addition, vector subtraction, vector multiplication, vector division, inverse, norm, distance, and another operation.

Clause B30: The method/apparatus/system of the rhythmic motion monitoring system of clause B23, further comprising: computing a time series of the analytics of the rhythmic motion based on at least one of: the TSCI, the TSSI, the TSIQ, the TSSIQ, the time series of detected events, event times associated detected events, at least one complete cycle of the rhythmic motion and at least one partial cycle of the rhythmic motion.

Clause B31: The method/apparatus/system of the rhythmic motion monitoring system of clause B30, further comprising: identifying a particular analytics at a particular time as at least one of: questionable, erroneous, noisy, prone-to-error, and unreliable; generating a generated analytics as a replacement for the particular analytics at the particular time based on at least one of: an interpolation of temporally neighboring analytics, an interpolation of temporally neighboring IQ, and an interpolation of temporally neighboring CI.

Clause B32: The method/apparatus/system of the rhythmic motion monitoring system of clause B4, further comprising: preprocessing at least one of: the TSCI, TSIQ, TSSI, and TSSIQ, wherein the preprocessing comprises at least one of: filtering, linear filtering, lowpass/bandpass/highpass filtering, mean subtraction, mean removal, FIR/IIR filtering, convolution, matched filtering, Kalman filtering, MA/ARMA filtering, nonlinear filtering, median filtering, mode filtering, rank filtering, quartile filtering, percentile filtering, selective filtering, adaptive filtering, denoising, particle filtering, multi-stage filtering, nonlinear mapping, companding, folding, grouping, sorting, thresholding, soft thresholding, hard thresholding, clipping, soft clipping, interpolation, decimation, subsampling, upsampling, resampling, time correction, timebase correction, phase/magnitude correction or cleaning, enhancement, denoising, smoothing, signal conditioning, feature extraction , magnitude/phase/energy extraction, spectral analysis, linear transform, non-linear transform, inverse transform, frequency transform, Fourier transform (FT), discrete time FT (DTFT), discrete FT (DFT), fast FT (FFT), wavelet transform, cosine transform, DCT, power-of-2 transform, sparse transform, graph-based transform, graph signal processing, fast transform, zero padding, decomposition, projection, orthogonal projection, non-orthogonal projection, over-complete projection, eigen-decomposition, singular value decomposition (SVD), principle component analysis (PCA), independent component analysis (ICA), first order derivative, second order derivative, higher order derivative, integration, summation, maximization, minimization, least mean square error, recursive least square, constrainted least square, batch least square, least absolute error, least mean square deviation, least absolute deviation, local maximization, local minimization, optimization of a cost function, neural network, recognition, labeling, training, clustering, machine learning, supervised/unsupervised/semi-supervised learning, comparison with another TSCI, similarity score computation, quantization, vector quantization, matching pursuit, compression, encryption, coding, storing, transmitting, normalization, temporal normalization, frequency domain normalization, classification, clustering, labeling, tagging, learning, detection, estimation, learning network, mapping, remapping, expansion, storing, retrieving, transmitting, receiving, representing, merging, combining, splitting, tracking, monitoring, intrapolation, extrapolation, histogram estimation, importance sampling, Monte Carlo sampling, compressive sensing, representing, merging, combining, splitting, scrambling, error protection, forward error correction, decision feedback, doing nothing, addition, subtraction, multiplication, division, time varying processing, conditioning averaging, weighted averaging, arithmetic mean, geometric mean, harmonic mean, averaging over selected frequency, averaging over antenna links, logical operation, permutation, combination, sorting, AND, OR, XOR, union, intersection, vector addition, vector subtraction, vector multiplication, vector division, inverse, norm, distance, and another operation.

Clause B33: The method/apparatus/system of the rhythmic motion monitoring system of clause B1, further comprising: wherein each SI comprises a 3-axis acceleration of the sensor moving with the object, the 3-axis acceleration being associated with the rhythmic motion of the object; computing a time series of features (TSF) based on the TSSI, each feature being an acceleration magnitude based on the 3-axis acceleration of respective SI; monitoring the rhythmic motion of the object based on the TSF.

Clause B34: The method/apparatus/system of the rhythmic motion monitoring system of clause B4, further comprising: wherein each SI comprises a 3-axis acceleration of the sensor moving with the object, the 3-axis acceleration being associated with the rhythmic motion of the object; computing a time series of features (TSF) based on the TSSI, each feature being an acceleration magnitude based on the 3-axis acceleration of respective SI; computing the TSSIQ based on the TSF.

Clause B35: The method/apparatus/system of the rhythmic motion monitoring system of clause B10, further comprising: wherein each SI comprises a 3-axis acceleration of the sensor moving with the object, the 3-axis acceleration being associated with the rhythmic motion of the object; computing a time series of features (TSF) based on the TSSI, each feature being an acceleration magnitude based on the 3-axis acceleration of respective SI; computing the series of detected events based on the TSF.

Clause B36: The method/apparatus/system of the rhythmic motion monitoring system of clause B1: wherein the response action comprises at least one of: storing an analytics computed based on the TSSI and TSCI and associated time stamp, communicating the analytics and the associated time stamp to at least one of: a server and a user device, generating a presentation based on the analytics, controlling a device, turn on a device, turn off a device, activating a functionality of the device, adjusting a controllable parameter of the device or the function, personalize the functionality, customizing the device, checking for related information, search for the related information, presenting the related information, notifying a user, signaling a condition, navigating a user, and another action.

Clause B37: The method/apparatus/system of the rhythmic motion monitoring system of clause B1: monitoring the rhythmic motion jointly based on at least one of: another TSCI extracted from another wireless signal transmitted between another Type1 heterogeneous wireless device and another Type 2 heterogeneous wireless device in the venue through another wireless multipath channel impacted by the rhythmic motion of the object in the venue, and another time series of another intermediate quantity computed based on the another TSCI.

Clause B38: The method/apparatus/system of the rhythmic motion monitoring system of clause B37: wherein the another Type 1 device is the Type 1 device; wherein the another wireless signal is the wireless signal.

Clause B39: The method/apparatus/system of the rhythmic motion monitoring system of clause B37: wherein the another Type 2 device is the Type 2 device.

Clause B40: The method/apparatus/system of the rhythmic motion monitoring system of clause B1: wherein at least one of: the Type1 device and the Type2 device, is a stationary device, wherein the other one of: the Type1 device and the Type2 device, is a moving device moving with the object.

The present teaching discloses an RF-based Inertial Measurement (RIM) system that measures multiple parameters of object motions, namely moving distance, heading direction, and rotating angle. In one embodiment, a RIM system, or RIM, can turn standard commercial off-the-shelf (COTS) WiFi radios into precise Inertial Measurement Units (IMUs), without support from additional infrastructure or external sensors. RIM does not require large bandwidth, many phased antennas, or multiple APs as reference anchors, nor does it need a priori calibration or fingerprinting of the environment. It has minimal requirements of mere antennas available on COTS WiFi receivers, in addition to a single arbitrarily placed AP as a transmitter, without knowing the AP's location or orientation. RIM measures the Channel State Information (CSI) of packets transmitted by the AP, without any other support from it. In contrast to many prior indoor tracking proposals that are flawed in Non-Line-Of-Sight (NLOS), RIM works anywhere the AP signal reaches, through Line-Of-Sight (LOS) or through multiple walls.

In one embodiment, RIM enables inertial measurement purely based on RF signals, turning COTS WiFi radios into accurate IMUs. Specifically, it aims at measuring three dimensions of motion parameters as traditional IMUs do, yet at a much finer precision: A) Moving distance: the translation distance the target has moved, which is usually coarsely sensed by accelerometer by step counting; B) Heading direction: the moving direction, which is very difficult for conventional sensors to measure and thus usually assumed as the device orientation reported by magnetometer; and C) Rotating angle: the angle of angular rotation, typically measured by gyroscope.

RIM estimates all these parameters for 2D motions in a universal scheme termed as virtual antenna retracing and boosts the precision by a novel approach for super-resolution virtual antenna alignment. Then one can strive to enable RIM COTS WiFi, delivering a comprehensive system for accurate and robust inertial measurement.

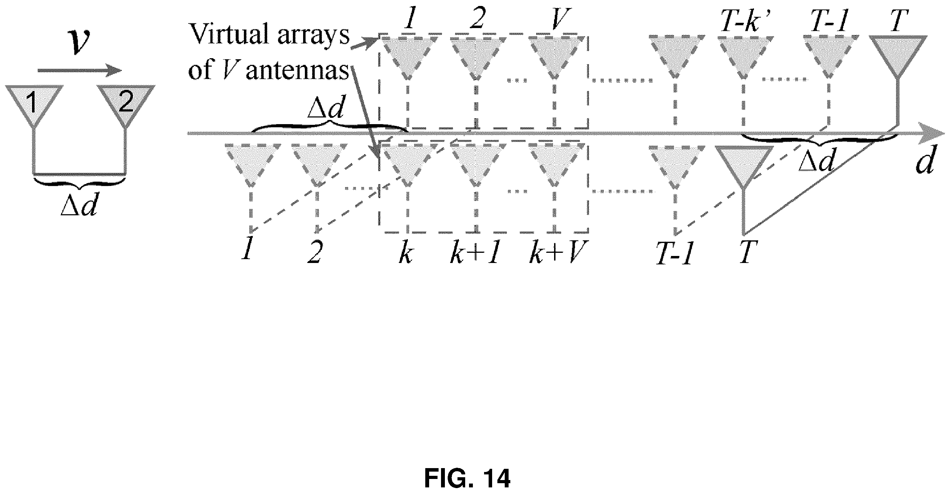

RIM leverages an unseen opportunity with MIMO WiFi radios present in most smart hardware. As shown in FIG. 14, when the antenna array moves, Antenna #1 will retrace the locations where Antenna #2 has traveled and will be spatially aligned with a virtual antenna when and only when it arrives at the particular location where Antenna #2 generated that virtual antenna $\Delta t$ time ago. The moving speed can thus be estimated as $v=\Delta d/\Delta t$, according to some embodiments of the present disclosure.

In general, when an antenna array moves, one antenna may retrace the trajectory of another and observe the same channel when and only when it arrives at a location traveled by the preceding antenna, allowing for a possibility of "self-tracing" of the array at micro and transient scale. This observation leads to the design of RIM, structured around three components, which thwarts the conventional burdensome "outside-in" tracking solutions and enables precise motion measurement in a ubiquitous "inside-out" system.

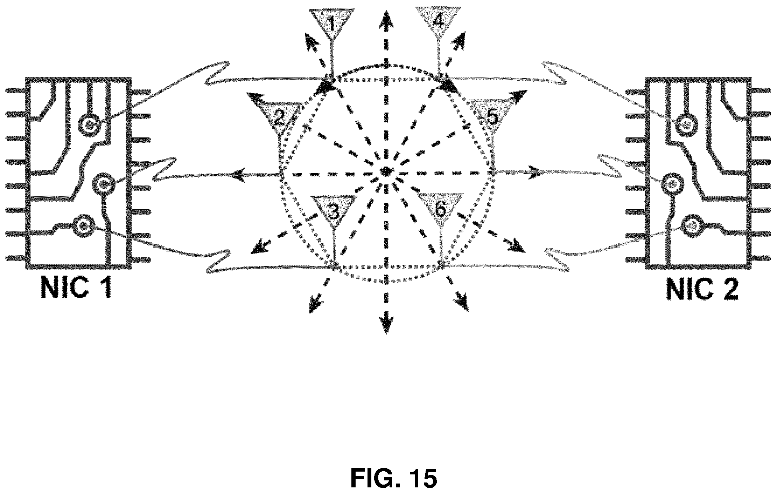

As a first component, spatial-temporal virtual antenna retracing may be performed. Take the two-antenna array as shown in FIG. 14 as an intuitive example. When the array moves, each antenna captures a channel snapshot at every point along its trajectory as if it sets up a virtual antenna there. The antenna travels later (i.e., the following antenna, Antenna #1 in this example) will retrace every location the preceding antenna (Antenna #2) has traveled. From the time offset the following antenna takes to be spatially aligned with (i.e., arrive at the location of) a virtual antenna that the preceding antenna emulated, one can estimate the moving speed by dividing the travel distance by the time offset. Here the travel distance is identical to the antenna separation, which is known and fixed independent of how they move. Extending to 2-dimentional (2D) antenna arrays (e.g., a circular array as in FIG. 15, one can track the speed along multiple directions designated by different pairs of antennas. That is, one can measure the moving distance and heading direction using a 2D array. The main challenge, however, is to detect the spatial alignment of two virtual antennas with high precision.

As a second component, a super-resolution virtual antenna alignment may be performed. The key insight behind highly accurate antenna alignment is that signals received at different locations undergo diverse reflecting paths and delays, resulting in a unique multipath profile for each location (virtual antenna). Achieving super-resolution alignment is non-trivial because: 1) channel measurements on COTS WiFi are considerably noisy, 2) there is only one single measurement associated with one virtual antenna, and 3) it is performed upon measurements from different antennas with hardware heterogeneity. In RIM, one can achieve sub-centimeter resolution virtual antenna alignment by three folds. First, one can leverage the physics of time-reversal focusing effects in electromagnetic waves and employ an effective metric to distinguish two channel snapshots, which significantly improve location distinction. Second, although a single measurement may not be robustly distinctive, the alignment can be boosted by leveraging a number of virtual antennas, forming a virtual massive array. Yet different from some previous works using virtual arrays for Synthetic Aperture Radar, there is no need for any information on how the virtual antennas are located in space. Third, one can just focus on potential alignment within a short period (e.g., 0.5 seconds) over a small space (e.g., centimeters), for which the channel is unlikely to be changed.

As a third component, a precise motion reckoning may be performed. Built upon virtual antenna retracing and alignment, one can devise a novel algorithm to: 1) accurately and robustly pinpoint the temporal delays when two antennas are spatially aligned, 2) reliably determine which pair of antennas, among others, are aligned at a specific time, and 3) systematically integrate all information together to output moving distance, heading direction, and rotating angle if there is any.

A) Spatial-Temporal Virtual Antenna Alignment - Virtual Antenna Retracing. The key idea to turn a WiFi radio into an IMU lies in a novel scheme for local motion tracking, named spatial-temporal virtual antenna retracing (STAR). It will be illustrated that how STAR enables measuring linear and angular motion, first in 1-dimentional (1D) and then 2-dimentional (2D) cases.

A.1) 1D case: Recall the simplest scenario of a two-antenna array in 1D case, as shown in FIG. 14. When two antennas are moving along the line formed by themselves, one antenna will lead the trajectory while another immediately follows its "footprints". Whichever antenna will take a snapshot of a location it passed through by recording the CSI observations, as if it sets up a virtual antenna there. Since the two antennas are moving along the same trace, one after another, the following antenna will continuously encounter the virtual phantoms of the leading one. Considering time $t_k$ in FIG. 14, the blue following antenna arrives at the location where the green leading antenna traveled through at time $t_1$. By examining the arriving time difference $\Delta t = t_k - t_1$, one can derive the antenna array's traveling speed v = $\Delta d/\Delta t$, where the traveling distance during this time offset is known a priori as the separation distance $\Delta d$ between the two antennas. Then by continuously aligning the following antenna with the leading antenna's "footprints", one can obtain the real-time speeds along the whole trajectory. The moving direction is the orientation of the ray formed by the two aligned antennas. In one word, the key to estimate motion distance and orientation is to determine: (1) whether or not two antennas are aligned, and (2) if yes, what the time delay $\Delta t$ is.

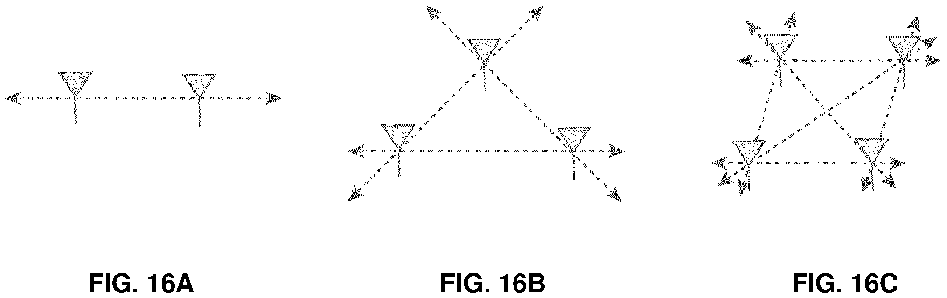

A.2) 2D case: To measure distance and orientation in 2D space, one can resort to 2D arrays of antennas. Similar to the 1D case, each pair of antennas enables distance measurement for the two directions of the line formed by them. Therefore, multiple pairs offer multiple directions in which one can measure moving distances. FIG. 16A to FIG. 16C illustrate several examples of antenna arrays. As shown in FIG. 16A, a two-element array (or any linear array) only supports two directions in a line. With three antennas arranged in a triangle shown in FIG. 16B, one can track motion along three lines, each with two moving directions. By adding one more antenna to form a quadrangle shown in FIG. 16C, one can obtain 6 antenna pairs, providing at most 12 directions.

Ideally, m antennas will form m × (m - 1)/2 lines in 2D space, each corresponding to a pair of antennas, yielding m × (m - 1) supported directions that lead to an orientation resolution of 2π/ (m × (m - 1)). Practically, the resolution will be lower since some pairs may be parallel with each other and the corresponding directions become the same. For example, a square array of 4 antennas only has 8 directions, while ideally a quadrangular array supports 12 directions (FIG. 16C). Fortunately, those parallel antenna pairs can be leveraged for augmented alignment to facilitate distance and angle measurement.

The angle of rotation for angular motion is derived in a different way from the heading direction. For linear motion in a specific direction, only several pairs (at most 3 in the hexagonal case) of antennas would be aligned. Differently, in presence of rotation, every adjacent pair will be aligned at the same time since all of them move along the same circle. As a consequence, one can sense rotation by detecting concurrent alignment between all adjacent antennas, and further calculate the rotating angle.

A.3) Hexagonal array: In principle, the more antennas are available, the finer distance and orientation resolution one can have. Considering that most COTS WiFi radios are equipped with 3 antennas, one can prototype RIM with a hexagonal array built from two COTS WiFi cards, as shown in FIG. 15. Such an array provides 12 different directions in total and thus an orientation resolution of 30°. For each possible direction, there will be at least two pairs of antennas being aligned, making the measurements more robust.

The hexagonal design does not require cumbersome phase synchronization across multiple antennas or between the two WiFi NICs (Network Interface Cards). RIM applies to different antenna arrays, especially the upcoming WiFi chipsets with more antennas and shorter wavelengths, which will immediately offer a better resolution in both distance and orientation.

B) Spatial-Temporal Virtual Antenna Alignment - Super-resolution Virtual Antenna Alignment: To put the idea of STAR into practice is a highly challenging task that requires accurately pinpointing a space-time point that two virtual antennas are aligned with each other, at sub-centimeter precision. This task significantly differs from traditional fingerprint matching. In particular, previous fingerprinting: (1) needs a priori calibration, (2) requires CSI to be unique over the whole space and stable over a long time, and (3) usually accumulates a number of training samples. In contrast, RIM requires no calibration and consumes only channel measurements in a narrow space (e.g., a few centimeters) and in a transient period (e.g., within 0.5 second). In addition, RIM needs to align two individual antennas, each with only one single channel measurement and expects the largest similarity in their measurements (meaning that the two antennas are best aligned) to be only observed by the measurements recorded by the two antennas at the same space location, with a millimeter-level resolution.

In RIM, one can introduce two techniques to achieve sub-centimeter resolution: (1) a similarity measure, i.e., Time-Reversal Resonating Strength (TRRS), for channel samples inspired by the time-reversal focusing effects; and (2) an approach to exploit a large number of virtual antennas as a virtual massive array for alignment. In the following, a primer is presented on time-reversal focusing effect, followed by the definition of TRRS and then the enhancement by virtual massive antennas.

B.1) Time-reversal focusing effects: Time reversal is a physical phenomenon that the energy of the transmitted signal will be focused in both space and time domains when combined with its time-reversed and conjugated counterpart. It has been applied to and experimentally verified in the fields of ultrasonic, acoustics, light, and electromagnetism. Time reversal relies on two basic assumptions of channel reciprocity and stationarity, which both hold in the scenarios here since only typical indoor channel measurements are considered within an instantaneous time window (e.g., 0.5 seconds). To put it in the context of WiFi channel, the received CSI, when combined with its time-reversed and conjugated counterpart, will add coherently at the intended location but incoherently at any unintended location, creating a spatial focusing effect as has been analyzed in. This explains, fundamentally, why multipath profiles can underpin high-resolution location distinction. Inspired by it, the present teaching introduces TRRS, a metric that quantifies the time-reversal focusing effect, as the similarity measure for CSI as follows.

B.2) Time-reversal resonating strength: The TRRS between two Channel Impulse Responses (CIRs) h1 and h2 is defined as

$$\kappa(\boldsymbol{h}_1, \boldsymbol{h}_2) = \frac{(max_i|(\boldsymbol{h}_1 * \boldsymbol{g}_2)[i]|)^2}{<\boldsymbol{h}_1, \boldsymbol{h}_1><\boldsymbol{g}_2, \boldsymbol{g}_2>} \tag{14}$$

where * denotes linear convolution, (x,y) is the inner product between vector x and y, and $g_2$ is the time-reversed and conjugated version of $\boldsymbol{h}_2$, i.e.,$\boldsymbol{g}_2$ [k] = $\boldsymbol{h}_2$[T - 1 - k], k = 0, ... , T - 1 .

In practice, the frequency domain Channel Frequency Response (CFR) is more often used. Equivalently, the TRRS in Eqn. (14) can be expressed for two CFRs H1 and H2 as:

$$\kappa(H_1, H_2) = \frac{|H_1^H H_2|^2}{\langle H_1, H_1 \rangle \langle H_2, H_2 \rangle}, \tag{15}$$

If $H_1$ and $H_2$ are both normalized, then the TRRS becomes simply the square of their inner product, i.e., $\kappa(H_1, H_2) = |H_1^H H_2|^2$. Obviously, $\kappa(H_1, H_2) \in [0,1]$, and $\kappa(H_1, H_2) = 1$ if and only if $H_1 = cH_2$ where $c \neq 0$, is any complex scaling factor. While previously many heuristic metrics were used to compare CSI, the TRRS exploits the physical time-reversal focusing effects in an uncomplicated form.

CSI measured on COTS WiFi contains phase offsets, including carrier frequency offset (CFO), sampling frequency offset (SFO), and symbol timing offset (STO) due to unsynchronized transmitters and receivers, in addition to initial phase offset caused by the phase locked loops. As can be seen from Eqn. (15), the impact of the annoying initial phase distortion, which could only be calibrated by manual calibration previously, is completely eliminated by taking the absolute value. One can calibrate the other linear offsets by using a sanitation approach.

Time-reversal focusing effects will be intensified with larger bandwidths. To facilitate the robustness and uniqueness of TRRS, one can exploit spatial diversity attributed by multiple transmit antennas to gain larger effective bandwidth. Specifically, suppose there are N antennas on the AP. The CSI measured on the i-th receive antenna at time t is $H_i(t) = \{H_{i,1}(t), H_{i,2}(t), ... , H_{i,N}(t)\}$ where $H_{i,k}(t)$ is the CSI between the i-th receive antenna and the kth transmit antenna. One can then take the average TRRS of the i-th and j-th receive antenna as:

$$\kappa\left(H_i(t_i), H_j(t_j)\right) = \frac{1}{N} \sum_{k=1}^{N} \kappa\left(H_{i,k}(t_i), H_{j,k}(t_j)\right) \tag{16}$$

By the above definition, one can avoid the need of synchronizing two antennas, but instead take the average of their individually calculated TRRS values.

B.3) Virtual massive antennas: Mainstream APs only have a few antennas, limiting the resolution and robustness of the average TRRS in Eqn. (16) to measurement noise. To boost super-resolution alignment, the present teaching discloses to leverage a number of virtual antennas emulated by the sequence of channel snapshots recorded by a moving antenna, forming a virtual massive antenna array whose size is the number of channel snapshots. As shown in FIG. 14, one can extend the multipath profile of an antenna i at time t from a single snapshot $H_i(t)$ to a sequence of samples $P_i(t) = [H_i(t + k), k = -\frac{V}{2}, ..., \frac{V}{2}]$ where $H_i(t + k)$, indicates the channel measurement emulating the virtual antenna set up by antenna i at time t+k, and V is the number of virtual antennas.

Accordingly, one can calculate the TRRS with V virtual massive antennas as

$$\kappa\left(P_i(t_i), P_j(t_j)\right) = \frac{1}{V} \sum_{k=-\frac{V}{2}}^{\frac{V}{2}} \kappa\left(H_i(t_i + k), H_j(t_j + k)\right) \qquad (17)$$

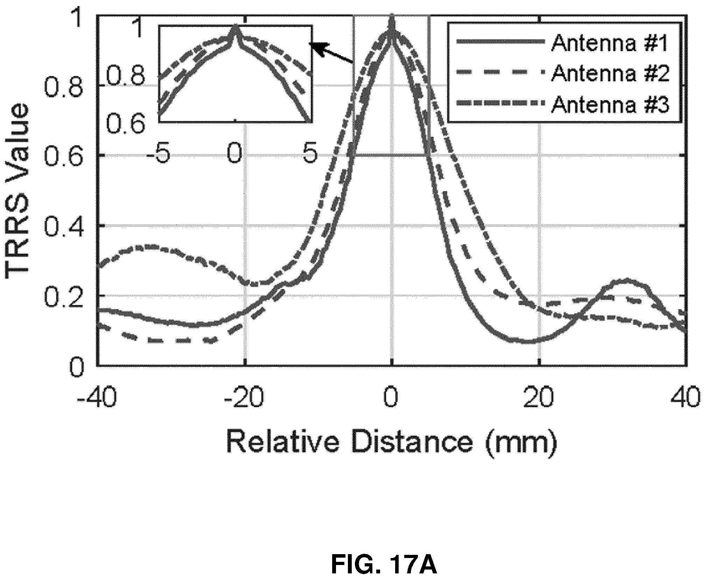

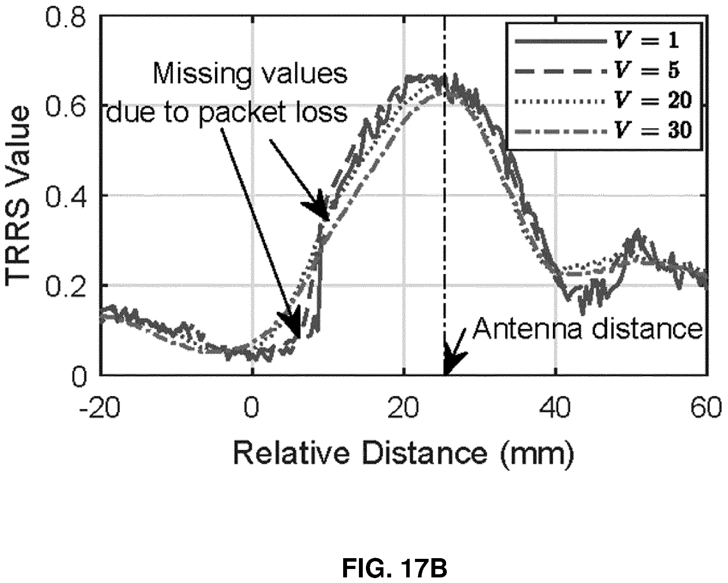

where $H_i(t_i - k)$ and $H_j(t_j - k)$ denote the respective virtual antenna placed at certain space location by the i-th and j-th antenna at time $t_i - k$ and $t_j - k$. By using the virtual massive antennas, one can largely boost the effective bandwidth of the multipath profile and thus enhance the time-reversal focusing effect, or equivalently, attain highly precise antenna alignment. As shown in FIG. 17A and FIG. 17B, the TRRS touches the maximum only when two antennas are closest with each other (precisely aligned) and drops even when they are separated by several millimeters. According to FIG. 17A, three antennas are moving at a constant speed and the TRRS for each antenna with respect to itself is calculated. As seen, the TRRS drops immediately (significantly by up to 0.3) when the antenna moves for a few millimeters, and monotonously decreases within a range of about 1 cm. According to FIG. 17B, the spatial decay holds for cross-antenna TRRS, especially with virtual massive antennas, although the absolute values decrease.

B.4) TRRS matrix: To pinpoint the precise temporal delay when two antennas i and j are spatially aligned, one can match the multipath profile of antenna i against those of antenna j throughout a sliding window. Consider a window of length 2W, the TRRS vector is calculated as $G_{ij}(t) = [\kappa(P_i(t), P_j(t - l)), l = -W, \cdots, W]^T$ where $l$ denotes the time lags. Thus if the antennas move for a period of T, one can obtain a TRRS matrix

$$G_{ij} = \left[G_{ij}(t_1), G_{ij}(t_2), ..., G_{ij}(t_T)\right]. \qquad (18)$$

In RIM, one can calculate such TRRS matrix for every pair of antennas as shown in FIG. 18. Then motion parameters are then estimated by identifying the aligned pairs from the TRRS matrices and continuously estimating the time delays, and accordingly the moving speed. According to FIG. 18, the aligned pairs of the hexagonal array are 1 vs. 3 followed by 1 vs. 6, and then again 3 vs. 1, 6 vs. 1 in turn, according to some embodiments of the present disclosure. Other pairs in parallel with one of the above are not shown.

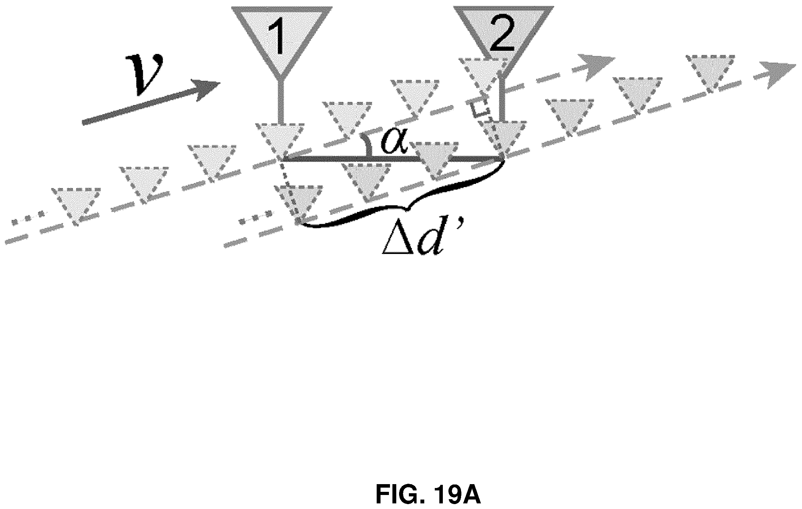

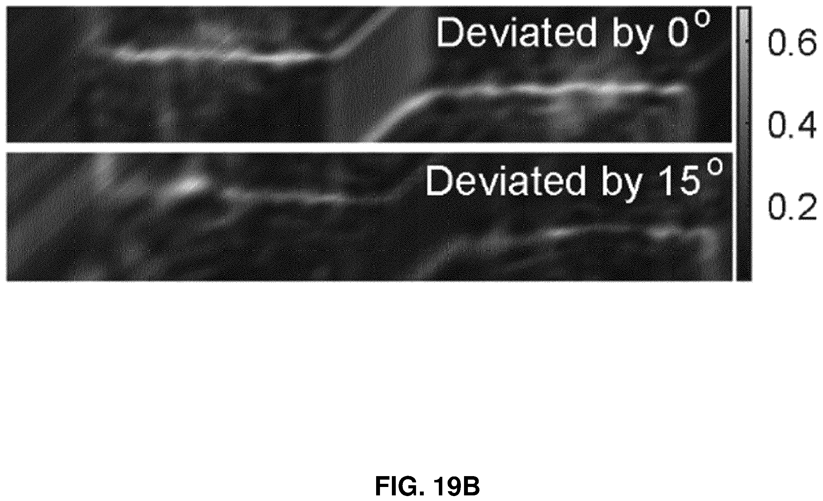

B.6) Deviated retracing: The above discussion assumed that the antenna array is moving along a certain direction in which at least two antennas will be perfectly aligned with each other. In practice, the device may be swinging in directions slightly deviated from the exact aligned line, as shown in FIG. 19A, where the array is moving along a direction that deviates an angle of $\alpha$ from their aligned direction, i.e., the horizontal line. But noticeable TRRS peak still exists, albeit weaker, for two antennas that are close enough yet not exactly aligned in case of deviation angles. Hence virtual antenna alignment is still feasible since one may only focus on the relative TRRS peaks within a window instead of the absolute values, circumventing the impacts of reduced TRRS values due to deviated retracing. In particular, as shown in FIG. 19B, RIM can tolerate up to 15° deviation, which suffices to cover the complete 2D plane with 6-element circular array.

As shown in FIG. 19A, in case of deviation, the "deviated" antenna separation becomes $\Delta d' = \Delta d\cos\alpha$. Since there is no knowledge about the deviation angle $\alpha$ in advance, one can directly let $\Delta d' \approx \Delta d$ in RIM, leading to an overestimated factor of $1/\cos\alpha$ in distance estimation. In terms of the 6-element circular array, the overestimated error will be 1.20% in average, assuming the moving directions are uniformly distributed in [0°,360°], and reaches the worst of 3.53% when the deviation angle $\alpha$=15°, which is tolerable in practice. The deviation angle may be resolvable by quantitatively comparing the reduced TRRS to the expected value of perfect alignment

Measuring Motion: The millimeter resolution antenna alignment underpins inertial estimation in centimeter accuracy in practice. To measure motions, one can first examine whether movement exists. If yes, one can then attempt to obtain the aligned trends of each antenna pair, and accordingly determine when and which pairs are well aligned. From the aligned antenna pairs, one can derive the distance, heading direction, and angle of rotation if there is any.

Detecting Movement: One can detect antenna movement from TRRS with the virtual massive antennas, since TRRS is highly sensitive to arbitrary location changes. For movement detection, one may only need to examine the TRRS for one single antenna based on its own measurements. Specifically, one can calculate $\kappa(P_i(t), P_i(t - l_{mv}))$, the TRRS between the current measurement and the one $l_{mv}$ seconds ago, where $l_{mv}$ is the time lag chosen as a conservative period during which location would change by at least millimeters if motion happens. For example, if the antenna is moving at 1 m/s, a time lag of 0.01 second would expect a movement of 1 cm. FIG. 20 illustrates an example of a stop-and-go trace, where RIM is more robust than accelerometer (Acc) and gyroscope (Gyr) that both fail to detect the three transient stops during movements. Evidently, there is a clear gap between the TRRSs for movement and non-movement. Thus one can apply a threshold to detect movement, as indicated by the horizontal dashed line in FIG. 20.

Tracking Alignment Delay: Given an alignment matrix, one may need to identify the TRRS peaks of interests that indicate the time lags of antenna alignment. For an ideal case, one can pinpoint the time lags corresponding to the maximum values in each column of the TRRS matrix as the retracing delays. In practice, however, the maximum values could deviate from the true delays due to measurement noise, packet loss, or wagging movements, etc., and thus an approach is needed to robustly track the peak sequence corresponding to the alignment delays. To this end, the present teaching discloses a novel algorithm based on dynamic programming, which has been used to solve pitch tracking problems in signal processing. When applying in the disclosed case, however, it still needs elaborate design.

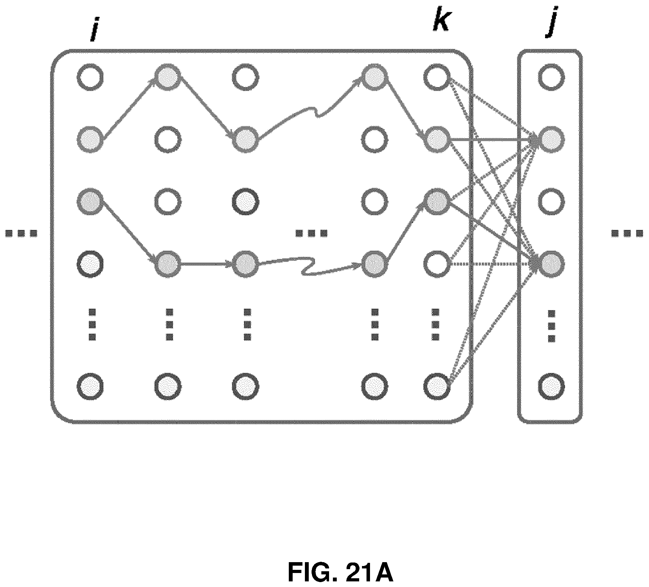

For clarity, one can simplify the notation of the TRRS matrix G for two antennas from time $t_1$ to $t_T$ as Q = $[q_i]$ where $\boldsymbol{q}_i = q_{il}$, $i \in [1, T]$, $l \in [1, W]$. As shown in FIG. 21A, now suppose one wants to search the best path of the TRRS peaks from time point $t_i$ to $t_j$, denoted as $\boldsymbol{q}_i \rightarrow \boldsymbol{q}_j$. Define a score of the optimal path $\boldsymbol{q}_i \rightarrow \boldsymbol{q}_j$ that ends at point $q_{jn}$ as S($\boldsymbol{q}_i \rightarrow q_{jn}$). A disclosed approach is to search all W possible candidate paths $\boldsymbol{q}_i \rightarrow q_{jn}$ that end at time lags n E [1, W] and then select the best one among all. Suppose all the optimal paths from $t_i$ to $t_k$ are available, each ending at point $q_{kl}$, $l \in [1, W]$, and the optimal paths from $t_k$ to $t_j$ each starting at $q_{kl}$ and all ending at $q_{jn}$, then one can have

$$S\left(\boldsymbol{q}_i \rightarrow q_{jn}\right) = \max_{l \in [1,W]} \{S(\boldsymbol{q}_i \rightarrow q_{kl}) + S(q_{kl} \rightarrow q_{jn})\} \tag{19}$$

which stands for the score of the optimal path from $\boldsymbol{q}_i \rightarrow q_{jn}$ since S($\boldsymbol{q}_i \rightarrow q_{kl}$) and $S(q_{kl} \rightarrow q_{jn})$ are both the scores of the respective optimal paths. When k = j - 1, the score of the peak transition between subsequent columns $q_{kl}$ and $q_{jn}$ is calculated as

$$S\left(q_{kl} \rightarrow q_{jn}\right) = e_{kl} + e_{ln} + \omega C(q_{kl}, q_{jn}) \tag{20}$$

where $e_{kl}$ and $e_{ln}$ are the TRRS value at $q_{kl}$ and $q_{jn}$ respectively. $C(q_{kl}, q_{jn})$ is the cost for stepping from $q_{kl}$ to $q_{jn}$ and is simply defined as $C(q_{kl}, q_{jn}) = ||l - n||/ L$. $\omega$ is a negative weighting factor for the cost. The designation of the cost function punishes jumpy peaks. The rationale is that in general cases the moving speed (thus the aligned delays) will not fluctuate too much within successive measurements.

Once having the scores for paths $\boldsymbol{q}_i \rightarrow q_{jn}$ for any n E [1,W], the best path from $\boldsymbol{q}_i$ to $\boldsymbol{q}j$ can be found as $q_i \rightarrow q_{jn*}$, where

$$n^* = arg \max_{n \in [1,W]} \{S\left(\boldsymbol{q}_i \rightarrow q_{jn}\right)\} \tag{21}$$

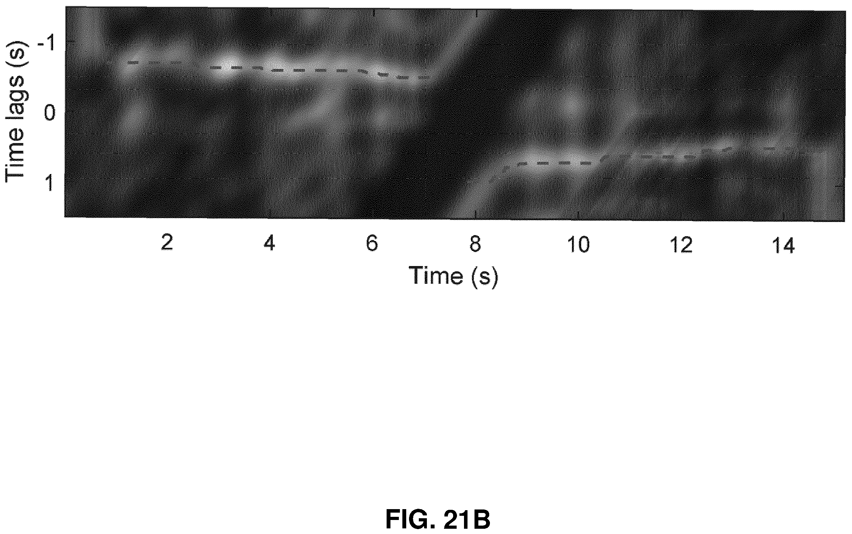

The entire path of peaks can then be easily identified by tracing back the previous steps from $q_{jn*}$ until the starting point $t_i$. FIG. 21B depicts an example of the peak tracking results for a back-and-forth movement including two periods of alignment.

In principle, the above peak tracking should be performed on every pair. Two steps are taken to optimize the complexity: (1) Antenna pairs that are very unlikely to be aligned are skipped; (2) In the implementation with 6-element array, one can facilitate it by averaging the alignment matrix of parallel isometric antenna pairs (e.g., antenna pairs (1, 4) and (3, 6), (2, 4) and (3, 5) as in FIG. 15) and conduct peak tracking on the averaged matrix, which is augmented since the two pairs have the same alignment delays.

C) Detecting Aligned Pair: For the sake of robustness, one can detect aligned antenna pairs in two steps, a pre-check before peak tracking, and a post-check after that.

C.1) Pre-detection: In practice, one can perform a pre-detection operation to preclude the unaligned pairs before peak tracking. In particular, for a specific period, one can consider only antenna pairs that experience prominent peaks most of the time as prospective candidates, and exclude the others that are unlikely aligned. The peak tracking is then only employed on the selected candidate pairs.

C.2) Post-detection: After peak tracking, one can obtain a path of identified peaks for each pair. One can then further examine the extracted paths, accounting for the continuity, TRRS values, smoothness, and orientations they indicate, to ultimately confirm the most likely aligned pairs.

D) Putting All Together: Suppose the i-th and j-th antennas are detected to be aligned at time t, with a separation distance of $\Delta d_{ij}$ and an alignment delay of $\Delta I_{ij}(t)$. Then one can measure the following results:

D.1) Moving distance: The moving speed v(t) at time t is derived as v(t) = $\Delta d_{ij}/\Delta I_{ij}(t)$. The moving distance can then be simply derived by integrating the instantaneous speed over time, i.e., $d(t) = \int_0^t v(\tau)d\tau$.

D.2) Heading direction: It is straightforward to obtain the moving direction when one can know the aligned antenna pairs. Specifically, $\theta(t)$ is assigned as the direction of the ray pointing from antenna i to antenna j if $\Delta I_{ij}(t) \geq 0$, and the opposite direction if $\Delta I_{ij}(t) < 0$.

D.3) Rotating angle: At a certain moment, if every adjacent pair of antennas is aligned simultaneously, then a rotation occurs. For a very short window, one can assume that the rotation happens in place. The angle of rotation is estimated from the rotated distance of each antenna as $\Delta\theta$ = R/r, where r denotes the radius of the circular array and R is the arc length estimated by the rotating distance. In the case of in-place rotation, one can estimate an individual speed from each pair of adjacent antennas. Thus one can use the average speed for rotating distance calculation. The effective antenna separation for rotation becomes $\frac{\pi}{3}\Delta d$, the arc length one antenna needs to travel to hit another. The above estimates are all smoothed and then integrated to recover the relative moving trajectory.

Packet synchronization and interpolation: RIM does not require phase synchronization among antennas. Due to potential packet loss, however, it is needed to synchronize CSI measurements (i.e., packets) on two NICs for cross-antenna mapping (and only needed for the implementation using two commercial NICs). In RIM, one can accomplish this by letting the AP broadcast packets, using it as a coarse external clock. In particular, two packets with the same sequence number are synchronized, since they are from the same broadcast packet on the AP and thus received simultaneously, ignoring the insignificant propagation delay. In case of packet loss, a null CSI is inserted.

RIM's packet synchronization is completely different from the requirements of precise phase synchronization of previous works which utilize phased array antennas for geometrical channel measurements. Instead, one may merely need packet-level synchronization, which could be skipped in the near future as one NIC will come with more antennas, e.g., 60GHz chipsets.

Minimum initial motion: There is a minimum requirement on the initial moving distance or rotating angle below which RIM cannot measure the motion. The minimum moving distance is, intuitively, the separation distance $\Delta$d between the two antennas. From the moment of starting moving, only after a translation of at least $\Delta$d will a following antenna "hit" the leading antenna, for the first time. In practice, to reimburse this "blind" period, the estimated distance will be compensated by $\Delta$d. After moving for $\Delta$d, RIM further waits for a period of 2W to calculate TRRS matrix, which is negligible with sufficiently high sampling rates.

Such minimum requirements on initial motion is different from RIM's motion resolution. Once two antennas are aligned for the first time, RIM will continuously and precisely track motion thereafter.

One may conduct experiments in an office environment to evaluate RIM, including system performance analysis and application study. One can deploy a single AP to cover the experimental areas of more than 1000 m$^2$. To demonstrate RIM's advantages in through-the-walls measurements, by default the AP is placed at the farthest location #0, a corner of the floor. One can conduct motion measurements at different locations over the floorplan (except for some areas where one may not have access), covering areas both near to, and far away (as far as 40 meters) from the AP. During the experiments, the AP keeps broadcasting packets at 200Hz on a 40MHz channel in the 5GHz band.

To obtain ground truth, one can set up a camera-based tracking system. Specifically, the target may be marked with high contrast color and tracked by the cameras. The motion trace is first calculated in the pixel frames and then converted to 2D world coordinates. The outputs are synchronized with RIM's estimates by the initial point when the target starts moving and are pairwise compared subsequently. There might be slight time offsets, which do not favor the evaluation.

Micro Benchmarks: One can now evaluate the overall performance in estimating moving distance, heading direction, and rotating angle, and study how various factors impact the accuracy. Unless otherwise stated, the device is moving at a speed of about 1 m/s, and the lengths of traces for analysis all exceed 10 meters.

Accuracy of moving distance: To fully understand RIM's centimeter accuracy in moving distance estimation, one can use a 3-antenna linear array present in COTS WiFi and move it roughly along lines in two scenarios: 1) Desktop:

one can move the array on a desk surface for traces around 1 m; 2) Cart: one can put the array on a cart and push it straight forward by more than 10 meters in different areas. As shown in FIG. 22, RIM achieves a median error of 2.3 cm for the more stable, thus better aligned, desktop moving. For the less controlled cart movement, it yields 8.4 cm median error. Specifically, it yields 7.3 cm median accuracy in LOS scenarios and, more importantly, a similar accuracy of 8.6 cm in complex NLOS conditions. The 90% tile and maximum errors are under 15 cm and 21 cm, respectively. Results using accelerometer are not included because it easily produces errors of tens of meters. No existing system can achieve comparable performance under similar settings (i.e., NLOS over a large area using a single unknown AP).

Accuracy of heading direction: One can study RIM direction measurement accuracy by moving the hexagonal array in diverse directions. In particular, one can traverse a 90° range with an increase step of 10°, together with each of their opposite directions. For each direction, one can move the device for about 1 meter and examine the heading direction estimation errors. As depicted in FIG. 23, RIM identifies the closest heading direction that it can resolve for most cases, except for a few outliers (e.g., in direction -40° and -20°). FIG. 24 further integrates the results for all directions, which shows that >90% of heading errors are within 10°, with an overall average accuracy of 6.1°. Most of the estimates are either correct without any error (e.g., well-aligned directions) or with 10° errors (e.g., deviated directions), because RIM resolves a set of discrete directions that are integral multiples of 30°. One may further demonstrate RIM's heading estimation performance for free movements in real applications. Again, magnetometer is not compared because it cannot address heading direction.

Coverage and impacts of AP locations: RIM works anywhere the AP signals can reach. To study whether AP location affects its performance, one can place the AP at different locations, and perform distance measurements in the middle open spaces. RIM achieves consistently high median accuracy of less than 10 cm for any AP location, being close as LOS or far away through multiple walls and pillars. The best-ever coverage allows RIM to work wherever there are WiFi signals.

Impact of accumulative distance: Inertial sensors are known to suffer from accumulative errors over long trajectories. It is interesting to examine how RIM performs with respect to different movement lengths. Thus one can move for about 10 m for multiple times and calculate the tracking errors during trace progressing. As shown in FIG. 31, the median errors in moving distance vary from about 3 cm to 14 cm, which do not necessarily accumulate over long distances. The performance gains attribute to RIM's high precision in speed estimation, which does not drift over time.

Impact of sample rate: Sufficient sampling rate is required to achieve high accuracy in RIM. Thus one can downsample the CSI from 200Hz down to 20Hz and rerun the distance tracking. The results are integrated in FIG. 29. As expected, the distance tracking accuracy increases with higher sampling rates. For a moving speed of 1 m/s, a sampling rate of 20Hz or 40Hz is not enough, which results in about a displacement of 5 cm per sample. To ensure sub-centimeter displacement within one sample, at least 100 Hz is needed for a speed of 1 m/s. A higher sampling rate will further improve the accuracy, yet the improvement would be marginal compared to the computation overhead incurred. In FIG. 29, the solid line shows the Bessel function curve in theory; the other two lines are from experiments. The peak locations of the experiment agree well with the theory. The separation distance of the first peak is at $0.61\lambda$, and TRRS value is large for small separations.

Impact of virtual antenna number: Using virtual massive antennas is a key to boost RIM's resolution. Thus one can study how the number of virtual antennas impact accuracy. As shown in FIG. 30, one can increase the virtual antenna number V from 1 to 100 and calculate the distance errors. The results show the median accuracy decreases from about 30 cm to 10 cm when V increases from 1 to 5, and further reduces to 6.6 cm when V = 100. In practice, a number larger than 30 should suffice for a sampling rate of 200Hz, and should be larger for higher sampling rate and smaller for lower.

Robustness to environmental dynamics: Building upon spatial multipath profiles, it is interesting to see if RIM is immune to common environmental dynamics, e.g., walking humans. For experiments, there are always at least two persons doing the experiments, in addition to others performing normal activities around the environment. Imagine when a user moves the device (e.g., pushing a cart), both his/her body and the cart are moving closely to the receiver, altering the multipath distributions. Yet the above results show robustness to these kinds of dynamics. The reasons are two-fold. 1) There are a number of multipaths indoors, coming from different directions. As a walking human will only change part of them, the TRRS behavior underpinning RIM still holds. 2) RIM does not rely on absolute TRRS, which may vary with environmental dynamics.

System complexity: The main computation burden lies in the calculation of TRRS. For every sample, RIM needs to calculate TRRS over a window of 2W, leading to m $\times$ (m - 1) $\times$ W values in total for an array of m antennas. Since the MATLAB code is not optimized for speed, one can measure the C++ system on Surface Pro, which is equipped with Intel Core i7 4650U and 8.0G RAM. RIM's core modules run in real-time, using around 6% of CPU and about 10M of RAM

RIM has a range of potential applications in indoor tracking, handwriting, gesture control, movement detection, VR headset tracking, drone tracking, etc. One can evaluate RIM with three application scenarios as below.

1) Desktop Handwriting: With RIM precision in motion tracking, it supports handwriting on a whiteboard or desk. To show a proof-of-concept scenario, one can ask a user to move the antenna array by freely writing some letters on a desk surface. FIG. 25 depicts some examples of the recovered letters, with comparison to the ground truths captured by camera system. As seen, RIM reconstructs not only relatively straight segments but also curved strokes in different directions, resulting in recognizable letters. Albeit currently the antenna array may be too large to act as a "pen", one can demonstrate the disclosed technology will directly shape it for writing when smaller antennas with shorter wavelengths become ubiquitous in the near future.

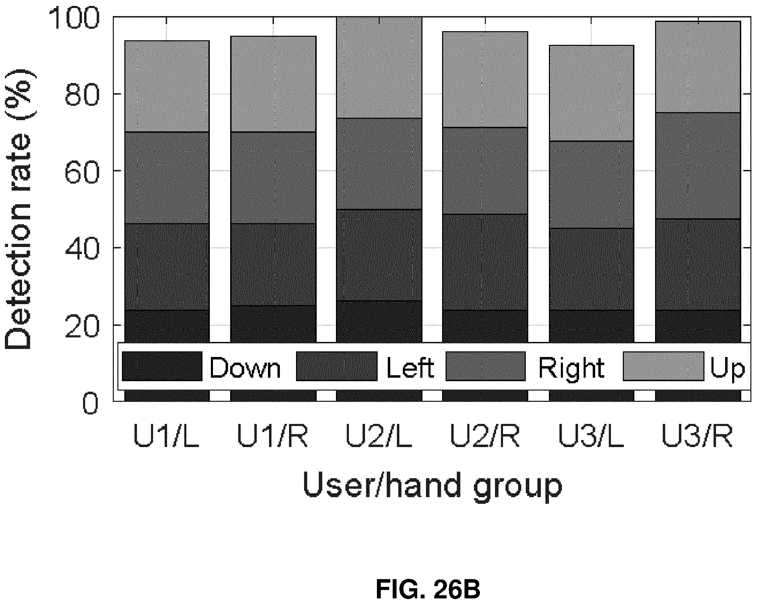

2) Gesture Recognition: One can demonstrate a gesture control application by integrating RIM as a pointer-like unit. To make it compact, one can use one WiFi NIC with three small chip antennas arranged in an "L" shape. The experiments involve three users, each performing four different gestures (moving towards left/right/up/down and then back) for 20 times with their left and right hand, respectively. In total, one can collect 480 actions for testing. As shown in FIG. 26A, different gestures produce distinct patterns in alignment matrices on certain antenna pairs. RIM observes a speed in one direction in which the user's hand moves towards, immediately followed by a speed in the opposite direction when the hand moves back, from a specific pair of antenna depending on the moving direction. One can use this information to detect and identify a gesture. FIG. 26B illustrates the recognition results of detection rates for three users with their left/right hands. Since all detected gestures are all correctly recognized, one can only plot the detection rates. As shown, RIM has an average detection accuracy of 96.25% for different gestures and users, with 23 miss detections (4.79%) and 5 false triggers (1.04%) over the total 480 tests. The false trigger rate is less than the miss detection rate, which is also favored in practical cases because one can simply repeat the gesture for miss detection while false trigger is annoying. Moreover, the performance is consistently high across different users and actions, and left/right hands. The results demonstrate promising gesture capability to be integrated in, e.g., a presentation pointer.

3) Indoor Tracking: One can particularly implement two different cases to extensively demonstrate RIM's capability for indoor tracking. During the tracking test, the AP is placed at location #0.

3.1) Pure RIM indoor tracking: One can first deploy RIM with a hexagonal array as a sole tracking system over the whole floorplan. The antenna array is put on a cart, which is pushed by a user along different specific traces. To particularly show RIM in the case of sideway movements (i.e., changing heading direction without turning), which are common in industrial Automated Guided Vehicles (AGVs), one can directly move the cart sideway, instead of making a turn, in this experiment. The trajectories are accurately tracked, even for very long traces over large areas. Conventional inertial sensors, gyroscope, and magnetometer, fail to capture such direction changes because there is no turning, meaning that the device orientation keeps the same although the heading direction has changed.

3.2) RIM with inertial sensors: RIM has superior advantages in moving distance estimation, even with only three antennas. To fully reveal its potential with COTS WiFi devices with only one NIC, one can implement a real-time system by integrating RIM's distance measurement with direction information reported by gyroscope. Specifically, one can use one Galileo Gen2 board equipped with one WiFi NIC of three chip antennas and the BNO055 sensor unit. The CSI collection and pre-processing are running on Galileo Gen2 while and RIM's algorithms are performed on a Surface Pro. One can also develop a GUI to display the tracking results.

One may test the integrated tracking system by putting the device on a cart and pushing it throughout the whole floor, as the way a customer pushes a shopping cart in a mall, or a smart home robot moves around. While the distances measured by RIM is highly accurate, the direction information obtained by inertial sensors may suffer from large errors. To put it into a practical system, one can further implement a particle filter (PF) to leverage the geometric constraints provided by the digital floorplan to handle direction errors caused by inertial sensors. The result, with particle filter based enhancement, gracefully reconstructs the real trajectory. Relying on only one single AP with unknown information, the encouraging results demonstrate the great potential of RIM enabling ubiquitous and accurate indoor tracking system especially for robots and objects, a long-standing challenging problem that has attracted numerous research efforts.

The disclosed RIM, a precise inertial measurement system estimates centimeter moving distance, heading direction, and rotating angle using commercial WiFi radios. It works over a large multipath rich area wherever is covered by a single unknown AP that is arbitrarily placed, without support of additional infrastructure or sensors. By doing so, RIM opens up WiFi-based motion sensing to new applications demanding accurate and reliable motion measurements, such as robot monitoring, VR tracking, mobile gaming, etc.

FIG. 27 shows a flowchart of a method 2700 for measuring multiple parameters of object motions, according to some embodiments of the present disclosure. As shown in FIG. 27, a CSI collection 2710 is performed by collecting CSI 2701, e.g. of a wireless multipath channel. Then a packet synchronization and interpolation is performed at operation 2720. The collected CSI is used to calculate a TRRS at operation 2730. A TRRS matrix is constructed at operation 2740. A movement detection 2750 is performed based on the TRRS matrix. Then an alignment delay tracking is performed at operation 2760; and an aligned antenna pair detection is performed at operation 2770. Motion parameters are measured or estimated at operation 2780 to generate estimates of motion parameters 2702, e.g. moving distance, heading direction, rotating angle, etc. As such, parameters related to a detected motion of an object can be measured based on a virtual antenna alignment technology. According to various embodiments, the order of some operations in FIG. 27 may be exchanged.

In a first example, an RF-based inertial measurement can utilize a technique of virtual antenna alignment (VAA) to infer moving speed, direction, and rotating angle. Albeit high precision has been achieved for moving speed, the resolutions in moving direction and rotating angle are not yet optimized. In the following, one can boost the accuracy in moving direction and rotating angle estimation by making use of multiple speed estimates along different aligned antenna pairs. Combining the speed estimates with the known and fixed geometric relations of the antenna array, one can design a novel moving direction estimation algorithm that has continuous resolution with high accuracy. As a simple illustration shown in FIG. 28, the moving direction of the antenna array is close to the directions of $\overrightarrow{AB}$ and $\overrightarrow{AC}$ so that antenna pairs AB and AC are roughly aligned, from which the velocities $\overrightarrow{v_1}$ and $\overrightarrow{v_2}$ can be estimated using VAA. The moving direction of the device's overall velocity $\overrightarrow{v}$ can be derived from the geometric constraints between $\overrightarrow{AB}$ and $\overrightarrow{AC}$.

To ensure the existence of aligned antenna pairs for any heading direction, a novel 2D antenna array can be designed. The spatial decay property of the time reversal resonating strength (TRRS) is used to guide the design of the 2D antenna array. Based on the spatial decay curve of the TRRS, the antenna pairs that are close to each other before and after the rotation can be inferred from the highest TRRS values. Then, according to the antenna array geometry, the in-place rotation angle can be calculated at a high accuracy without drifting errors.

Experiments in a floor of busy office space, under strong NLOS environment with rich multipaths, verify the accuracy of the disclosed algorithms: the median error for moving direction estimation is 6.9°, which outperforms the accelerometer counterpart. The mean error for rotation angle estimation is 16.6°, which is comparable with the gyroscope, and much better in the long run without drifting errors. The promising performance and low cost make the disclosed direction finding method suitable for applications that need accurate direction information.

Given two CSIs $H_1$ and $H_2$, the time reversal resonating strength (TRRS) is defined as:

$$\rho(H_1, H_2) = \frac{|\langle H_1, H_2 \rangle|^2}{|H_1|^2 |H_2|^2}, \tag{22}$$

where $\langle \mathbf{x}, \mathbf{y} \rangle$ denotes the inner product of comlex vectors $\mathbf{x}$ and $\mathbf{y}$, and $|\cdot|$ is the magnitude operator. Notice that $\rho(H_1, H_2) \in [0,1]$, and it achieves 1 if and only if $H_1 = cH_2$, where c is a non-zero complex scaling factor. Thus, TRRS can be used as a similarity metric between CSIs.

For two CSIs $H_1$ and $H_2$ measured at a separating distance d, their TRRS can be approximated as a determinate function:

$$\rho(H_1, H_2) \approx J_0^2 \left( \frac{2\pi}{\lambda} d \right), \tag{23}$$

where $J_0(x)$ is the zeroth-order Bessel function of the first kind, and $\lambda$ is the wavelength. The theoretical and measured TRRS spatial decay curves are shown in FIG. 29. Due to the asymmetric normalized energy distribution of MPCs in certain directions, the actual TRRS is a superposition of $J_0^2 \left( \frac{2\pi}{\lambda} d \right)$ and some unknown function. Nevertheless, the damping pattern (locations of local minima and local maxima) agrees well with the theoretical Bessel function result. Hence, the moving speed can be calculated from dividing the identified first peak position by the corresponding time lag

Based on the TRRS spatial decay curve, a novel moving direction estimation algorithm is disclosed. To better illustrate the disclosed algorithm, one can first introduce a method to identify the nearest location of a moving antenna to a given position (whose CSI is known). Then, a two-dimensional antenna array is designed for the purpose of super-resolution moving direction estimation, and a mechanism for selecting best aligned antenna pairs is given. Finally, making use of the geometric relations of the antenna array, the disclosed high accuracy indoor object moving direction estimation algorithm is explained in detail.

A two dimensional circular antenna array, where one additional antenna is at the center, and the reference coordinate system are shown in FIG. 30. With the number of antennas on the periphery being $n_{per}$, the circumferential angle between adjacent peripheral antennas is $\alpha = 180°/n_{per}$.

For the moving direction estimation, denote the moving direction as OP. There are several pairs of antennas whose traces are close to each other, which are denoted as aligned antenna pairs, where 3 antennas A, B, C are taken for illustration.

Denote the CSIs measured by those antennas at time t as $H_A(t)$, $H_B(t)$ and $H_C(t)$. For the CSIs collected at the same time, the corresponding separations between antenna AB, and antenna AC are both the radius, which is chosen as half the wavelength. From the TRRS spatial decay curve in FIG. 29, the TRRS values $\rho(H_A(t), H_B(t))$ and $\rho(H_A(t),$

$H_C(t)$) are small. In one embodiment, antenna A keeps moving and collecting CSIs along the heading direction $\overrightarrow{OP}$. At time $t + \delta_{AB}$, the antenna A is closest to the location of antenna B at time t, thus $\rho(H_A(t + \delta_{AB}), H_B(t))$ yields a large value. Similarly, one can obtain a large value for $\rho(H_A(t + \delta_{AC}), H_C(t))$. From the large TRRS values, one can infer that the moving direction is close to the directions indicated by $\overrightarrow{AB}$ and AC. Hence, by identifying antenna pairs with high TRRS values, the rough heading direction is determined by the selected antenna pairs. The details are revealed below for finding the correct antenna pairs.

Furthermore, utilizing the time antenna A takes to reach the closest locations to antenna B and antenna C, namely $\delta_{AB}$ and $\delta_{AC}$, one can refine the direction estimation together with the geometry of the 2D antenna array, which will be explained later.

For the in-place rotation angle estimation, assume the antenna array rotates about $\alpha$ clockwise. There are several pairs of antennas whose ending locations are close to the starting locations. Taking antennas B and C as an example, the ending location of antenna B is close to the starting location of antenna C, thus the TRRS between them should yield a large value. For different rotation angles, the pairs of antennas with high TRRS values will vary accordingly. By calculating the TRRS values between the CSIs collected at the beginning and after rotating, the rotation angle can be estimated using the high TRRS values and the geometric relations of the antenna array.

As illustrated in FIG. 31, the moving antenna, of which the initial location is A, moves along the trace $\overleftarrow{AC}$ . The reference location is B, whose CSI $H_B$ is measured by another antenna in advance. The distance between A and B is d, and the angle $\angle BAC$ is $\theta$. Let $H_A(t)$ denote the CSIs measured by the moving antenna, and time $t = 0$ be the moment it starts moving.

From a geometric point of view, the nearest point on the moving trace to the reference location is the projection of *B* onto the moving trace, namely the point C. To identify this closest location using CSI measurements, it is best to have CSIs at closest locations exhibit highest level of similarity, i.e., largest TRRS. If this is the case, the CSI at point *C, $H_C$*, can be directly inferred from the largest TRRS:

$$H_C = arg\ max_{H_A(t)}\rho(H_A(t), H_B),\qquad(24)$$

and the time instance at the nearest location can be extracted from $H_C$ accordingly.

From the theoretical TRRS spatial decay curve, however, the nearest geometric location does not always imply highest level of similarity in CSIs. To make such an implication holds, there is a constraint on the initial distance *d* and the angle $\theta$. The principle is that the TRRS at the nearest location should be higher than that of the first peak at $0.61\lambda$, which means, equivalently, the closest distance must be less than $0.26\lambda$:

$$dsin(\theta) < 0.26\lambda \qquad(25)$$

For $d = \lambda/2$, $\theta$ should be less than 31°. Eqn. (25) serves as a guidance on designing the two-dimensional antenna array in the following.

Before introducing the two-dimensional antenna array, a linear array composed of two antennas with a separating distance *d* is studied first. Assume the array is moving with a deviation angle $\theta$ relative to its orientation, as shown in FIG. 32. Let the CSIs of the two antennas measured along the way be $H_1(t_i)$ and $H_2(t_i)$, where $i = 0,1,2,..., k$ represents the sampling index. From the previous discussion, if the deviation angle $\theta$ is small enough, the largest TRRS should map to the nearest location to a reference point. In other words, given the reference location as the position of antenna 2 at time $t_i$, the time delay antenna 1 takes from time $t_i$ to the closest location can be calculated as:

$$\Delta t = arg\ max_{\Delta t}\rho(H_1(t_i + \Delta t), H_2(t_i)),\qquad(26)$$

where $\Delta t$ can be a negative value (if antenna 2 is moving towards antenna 1).

If the antenna separation *d* and deviation angle $\theta$ are known, the moving distance *l* can be derived from the geometric relation: *l = dcos(θ)*, as illustrated in FIG. 31. Making use of the corresponding time delay $\Delta t$, the velocity *v* is further obtained by:

$$v = \frac{dcos(\theta)}{\Delta t},\qquad(27)$$

which is important for the direction estimation below.

**EP 3 739 356 A1**

To find out the time delay $\Delta t$, a TRRS vector $\mathbf{g}(t_i)$ is calculated through a window of length $2W + 1$ centered at $t_i$:

$$\mathbf{g}(t_i) = [\rho(H_1(t_{i+j}), H_2(t_i)), j = -W, \ldots, W]^T, \qquad (28)$$

where $T$ denotes the transpose operator. The window length is decided by the antenna separation, moving speed and the sampling rate. If the speed is too slow, the peak index would lie out of the $W = 50$ window length; if the speed is too fast, the peak index would be 0. In general, $\frac{1}{samplingRate} < \frac{d}{v} < \frac{W}{samplingRate}$, where d denotes the antenna separation.

To find out the time delay at every time index, a TRRS matrix $G$ is formed by concatenating the TRRS vectors:

$$G = [\mathbf{g}(t_1), \mathbf{g}(t_2), \ldots, \mathbf{g}(t_T)]. \qquad (29)$$

Then, the time delay vector d$(G)$ can be calculated as:

$$\mathbf{d}(G) = [arg\ max\mathbf{g}(t_i) - W, i = 1,2,\ldots,T]^T, \qquad (30)$$

and the $i^{th}$ element $d(G, i)$ is the time lag at time $t_i$.

FIG. 33 shows the TRRS matrices for deviation angles 0°, 10°, 20° and 30°, of which the data is collected using two antennas $\frac{\lambda}{2}$ away from each other. From Eqn. (25), the deviation angle should be less than 31° to yield a maximum TRRS at the nearest location, which means a peak at each column of the TRRS matrices. Clear peak traces across time exist for deviation angles 0°, 10° and 20°. For 30°, however, the peak trace is hard to find because of the asymmetric energy distribution of MPCs and noise.

Based on both the theoretical and experimental results, a two-dimensional antenna array is designed for the purpose of high accuracy, super resolution moving direction estimation. The designed antenna array is shown in FIG. 30, where eight antennas are uniformly placed on a circle with a radius of half the wavelength, and one antenna is placed at the center.

The circumferential angle between adjacent peripheral antennas is denoted as $\alpha$ = 22.5°. The reasons behind the design are the following. 1) To measure the moving direction and the rotation angle in [0°, 360°), a circular array is chosen because of the symmetric geometry. 2) For the purpose of high resolution, an octagon array is used based on the peak traces result of TRRS matrices demonstrated in FIG. 33. Consider the directions formed by all the antenna pairs in the array, which are from 0° to 360° with an increment of $\alpha$ = 22.5°. As shown in FIG. 33, clear peak traces can be observed in the TRRS matrices with a deviation around 20°. Thus, for any arbitrary moving direction, the best aligned antenna pair can be identified, yielding a high resolution of $\alpha$ = 22.5°. 3) For the purpose of super resolution and high accuracy, one additional antenna is introduced to leverage the geometric relations of the array. By placing one antenna at the center, it is guaranteed to have at least two aligned pairs of antennas, forming different directions, for any moving direction. Thus, the continuous resolution of moving direction can be achieved by utilizing the speed estimates and geometry of the aligned pairs, which will be explained below.

The aligned antenna pairs are those whose orientations are close to the moving direction. By correctly detecting best aligned antenna pairs, the moving direction can be inferred in the vicinity of the directions formed by best aligned antennas. The TRRS matrix is utilized for this purpose: the clearer the peak trace is, the better the alignment of antennas will be. To determine clear peak traces, a peak trace score of a TRRS matrix G is defined as:

$$s(G) = e(G) - \alpha\sigma(G), \qquad (31)$$

where $e(G)$ is the averaged energy of the peak trace:

$$e(G) = \frac{1}{T}\sum_{i=1}^{T} \max(\mathbf{g}(t_i)), \qquad (32)$$

and $\sigma(G)$ is the standard deviation of the time lags in the peak trace:

$$\sigma(G) = \sqrt{\frac{\sum_{i=1}^{T}(d(G,i)-\overline{\mathbf{d}}(G))^2}{T-1}} \tag{33}$$

$\overline{\mathbf{d}}(G)$ is the mean of the time delay vector:

$$\overline{\mathbf{d}}(G) = \frac{1}{T}\sum_{i=1}^{T} d(G,i) \tag{34}$$

$\alpha > 0$ is a scaling factor weighting the importance between energy and coherence of a peak trace.

Making use of the score $s(G)$, the best aligned antenna pairs are selected with highest scores. Denote $a(G)$ as the direction corresponding to the TRRS matrix G. Different antenna pairs may have the same orientation and form the same direction, thus one can further define the score of a given direction $\phi$ as the maximum one:

$$s(\phi) = \max_{a(G)=\phi} s(G) \tag{35}$$

Estimating the moving direction includes two steps: 1. Determine a rough angle range based on best aligned antenna pairs; 2. Estimate the direction within the range using geometric relations to achieve super resolution and high accuracy.

For the angle range estimation, FIG. 34 is used as an illustration. Assume that $\overleftarrow{OY}$ represents the direction $\theta$ formed by the best aligned antenna pair, i.e., the antenna pair with highest score of their TRRS matrix: $\theta = arg\ max_{\phi}s(\phi)$. The true moving direction should be close to this direction. Three candidate regions are divided: $[\theta$ - 22.5°, $\theta]$, $[\theta$ - 15°, $\theta$ + 15°] and $[\theta, \theta$ + 22.5°], as shown in the figure. It seems if the score of the direction $\overleftarrow{OX}$, $s(\theta$ - 22.5°), is much higher than that of the direction $\overleftarrow{OZ}$, $s(\theta$ + 22.5°), the true moving direction should be closer to OX, and vice versa. For the case where $s(\theta$ - 22.5°) is similar to $s(\theta$ + 22.5°), the true direction is likely to lie in the middle. Translating the intuition into implementation, the following ratios are calculated:

$$\beta_1 = \frac{\frac{s(\theta)+s(\theta-22.5°)}{2}-s(\theta+22.5°)}{s(\theta)-s(\theta-22.5°)}$$
$$\beta_2 = \frac{\frac{s(\theta)+s(\theta+22.5°)}{2}-s(\theta-22.5°)}{s(\theta)-s(\theta+22.5°)} \tag{36}$$

Then, they are compared with a positive threshold $\beta$, respectively. If $\beta_1 > \beta$, $s(\theta$ + 22.5°) is too small to be chosen, and the estimated range is Region 1. Similarly, if $\beta_2 > \beta$, Region 3 is selected as the angle range. If neither of the conditions holds, the true moving direction most likely resides in Region 2.

After the rough range estimation, a finer direction estimation can be achieved utilizing the geometric relations and time delays of peak traces in the selected TRRS matrices. There are two cases: (1) Only two different (adjacent) directions have clear peak traces (high scores) in the corresponding TRRS matrices, referring to Region 1 and 3 in FIG. 34. (2) Three different (contiguous) directions with clear peak traces in the TRRS matrices can be found, as the Region 2 in FIG. 34.

For the first case, let antenna pairs *AB* and *CD* be the best aligned pairs for the two adjacent directions, as shown in FIG. 35. Denote the distance between *AB* as $d_1$ and the distance between *CD* as $d_2$. The moving direction is the direction pointed by the arrow, which lies in the 22.5° angle range. The deviation of the moving direction from $\overrightarrow{CD}$ is $\gamma$, thus the angle between the moving direction and $\overleftarrow{AB}$ is 22.5° - $\gamma$. Referring to Eqn. (27), the velocities calculated using *AB* and *CD* are:

$$v_1 = \frac{d_1 cos(22.5°-\gamma)}{\Delta t_1}$$
$$v_2 = \frac{d_2 cos(\gamma)}{\Delta t_2} \tag{37}$$

where $\Delta t_1$ and $\Delta t_2$ are the time delays of peak traces in the TRRS matrices of *AB* and *CD*, respectively. Since the size of the antenna array is very small, at the scale of wavelength (5.17cm for $f_0$ = 5.8GHz), the moving speed cannot vary much in such a short distance:

$$
\begin{aligned}
v_1 &\approx v_2 \\
\frac{d_1\cos(22.5°-\gamma)}{\Delta t_1} &\approx \frac{d_2\cos(\gamma)}{\Delta t_2} \\
\gamma &\approx \tan^{-1}\left(\frac{\frac{d_2\Delta t_1}{d_1\Delta t_2}-\cos22.5°}{\sin22.5°}\right)
\end{aligned}
\tag{38}
$$

Then, the estimate of $\gamma$ is calculated as:

$$
\hat{\gamma} = \tan^{-1}\left(\frac{\frac{d_2\Delta t_1}{d_1\Delta t_2}-\cos22.5°}{\sin22.5°}\right)
\tag{39}
$$

For the second case, the geometric relations are demonstrated in FIG. 36, with the meaning explained in FIG. 35. Similar to the first case, the velocities can be estimated using each pair of antennas:

$$
\begin{aligned}
v_1 &= \frac{d_1\cos(22.5°-\gamma)}{\Delta t_1} \\
v_2 &= \frac{d_2\cos(\gamma)}{\Delta t_2} \\
v_3 &= \frac{d_3\cos(22.5°+\gamma)}{\Delta t_3}
\end{aligned}
\tag{40}
$$

The estimated $\gamma$ is calculated as:

$$
\begin{aligned}
\hat{\gamma} &= \arg\min_\gamma \ (v_1-v_2)^2 + (v_3-v_2)^2 \\
\hat{\gamma} &= \tan^{-1}\left(\frac{\frac{d_2\Delta t_3}{d_3\Delta t_2}-\frac{d_2\Delta t_1}{d_1\Delta t_2}}{2\sin22.5°}\right)
\end{aligned}
\tag{41}
$$

Summarizing the above discussion, the detailed moving direction estimation algorithm is described in Algorithm 1 below.

Algorithm 1: Moving Direction Estimation

Input:

{G} : set of TRRS matrices for all pairs of antennas;

a(G): direction of the antenna pair with TRRS matrix G;

η: positive scaling factor;

β: positive threshold

Output:

θ: estimated moving direction

Procedure:

1: for G ∈ {G}  do          // Initialization

2:   φ = a(G)

3:   s(φ) = −∞

4: $s_{max}$ = −∞

5: for G ∈ {G} do          // calculating scores on each direction

6:    $s(G) = e(G) - \eta\sigma(G)$

7:    $\phi = a(G)$

8:    if $s(G) > s(\phi)$ then

9:     $s(\phi) = s(G)$

10:    $a(\phi) = a(G)$

11: $\theta = a(\arg\max_G s(G))$

12: calculate ratios $\beta_1$ and $\beta_2$    // angle range estimation

13: if $\beta_1 > \beta$ then      // $[\theta - \alpha, \theta]$

14:   calculate $\hat{\gamma}$ according to Eqn. (39)

15:    return $\theta - \alpha + \hat{\gamma}$

16: else if $\beta_2 > \beta$ then     // $[\theta, \theta + \alpha]$

17:   calculate $\hat{\gamma}$ according to Eqn. (39)

18:    return $\theta + \hat{\gamma}$

19: else            // $[\theta - \frac{2}{3}\alpha, \theta + \frac{2}{3}\alpha]$

20:   calculate $\hat{\gamma}$ according to Eqn. (41)

21:    return $\theta + \hat{\gamma}$

Similar to the moving direction, the TRRS value may also be used for determining the in-place rotation angle. The rationale behind the algorithm is that if antenna i on the periphery rotates to a position closest to the starting location of antenna j on the periphery, as shown in FIG. 37, it is expected that the TRRS between those two CSI measurements ($i_{end}$, $j_{start}$) yields a high value, which can be used to infer the rotation angle.

More precisely, let $H_i(t_1)$ denote the CSI measurement of antenna j at time $t_1$, and $H_i(t_2)$ be the CSI measured by antenna i at time $t_2$, where both the antenna i and j are on the periphery. To estimate the rotation angle from $t_1$ to $t_2$, one needs to correctly identify the aligned pairs of antennas between $t_1$ and $t_2$. The TRRS values between all pairs of antennas on the periphery are calculated as below:

$$\rho_{ij} = \rho(H_i(t_2), H_j(t_1)). \qquad (42)$$

Denote the rotation angle from antenna i to antenna j as $a_{ij}$. Notice that for different pairs of antennas, they may have the same rotation angle. For example, the rotation angle is $2\alpha$ for all the adjacent antenna pairs. Thus, the TRRS values for antenna pairs with same rotation angle can be averaged to suppress noise as follows:

$$\rho_a = \frac{1}{n}\Sigma_{a_{ij}=a}\, \rho(H_i(t_2), H_j(t_1)), \qquad (43)$$

where $\rho_a$ denotes the averaged TRRS value for rotation angle a, and n represents the number of antenna pairs with a rotation angle of a. Following Eqn. (43), the rotation angle is estimated as the one with maximum TRRS value:

$$\hat{a} = \arg\max_a \rho_a. \qquad (44)$$

In an example, the disclosed RIM system can be used on a virtual reality (VR) device or an augmented reality (AR) device to track a motion of a user's head based on WiFi-based motion sensing, while the user is wearing the VR or AR device. As such, the scenario the user can see or experience via the VR or AR device will change in accordance with the motion of the user's head. The motion tracking may include estimating a direction of the motion, an angular speed of the motion, and/or an orientation of the head, etc. In other examples, a similar motion tracking may be applied based on the disclosed system to monitor a motion of: a head, arm, leg, or hand of a user playing a mobile game; a robot operating in a factory or a restaurant; a head, arm, leg, or hand of a user in a smart car; and/or a monitoring device attached to a patient.

In various embodiments of the present teaching, wireless inertial measuring may be performed according to the following clauses.

Clause 1: A method/apparatus/software/system of an object tracking system, comprising: obtaining a plurality of time series of channel information (CI) of a wireless multipath channel using a processor, a memory communicatively coupled with the processor and a set of instructions stored in the memory, each time series of CI (TSCI) associated with a pair of transmitting antenna and receiving antenna, wherein the plurality of TSCI are extracted from a wireless signal transmitted between a Type 1 heterogeneous wireless device (wireless transmitter) with at least one transmitting antenna and a Type 2 heterogeneous wireless device (wireless receiver) with at least one receiving antenna through the wireless multipath channel, wherein each TSCI is associated with an antenna of the Type 1 device and an antenna of the Type 2 device, wherein one of the Type 1 device and the Type 2 device is stationary and the other one is moving with an object, wherein the moving device moves comprises: at least two antennas with known configuration and known distances; determining that a first CI at a first time of a first TSCI associated with a first antenna of the moving device matches a second CI at a second time of a second TSCI associated with a second antenna of the moving device, wherein both the first TSCI and the second TSCI are associated with a particular antenna of the stationary device, computing at least one movement parameter of the moving device based on at least one of: the plurality of TSCI, the configuration of antennas of the moving device, the configuration of antennas of the stationary device, time difference between the first time and the second time, and distance between the first antenna and the second antenna; computing a spatial-temporal information (STI) of the moving device based on at least one of: the at least one movement parameter, the first time, the second time, the configuration of antennas of the stationary device, the configuration of antennas of the moving device, a past STI, and a past movement parameter, wherein at least one of the movement parameter and the STI is related to a current movement of the moving device and comprises at least one of: a location, a horizontal location, a vertical location, a length, an area, a volume, a capacity, a direction, an angle, a distance, a displacement, a speed, a velocity, an acceleration, a rotational speed, a rotational acceleration, a gait cycle, a presence, a motion type, a motion classification, a motion characteristics, a sudden motion, a transient motion, a periodic motion, a period of the periodic motion, a frequency of the periodic motion, a transient motion, a time trend, a timing, a timestamp, a time period, a time window, a sliding time window, a history, a frequency trend, a spatial-temporal trend, a spatial-temporal change, and an event; tracking the object and the moving device based on the STI, wherein tracking the object and the moving device comprises at least one of: determining a map location of the object, tracking the location of the object, tracking another motion analytics of the object, guiding movement of the object along a trajectory, guiding the movement of the object to avoid an obstacle, tracking motion of the object, tracking behavior of the object, object behavior identification, detecting the motion of the object, detecting a vital sign of the object, detecting a periodic motion associated with the object, detecting breathing of the object, detecting heartbeat of the object, detecting an event associated with the current movement, detecting a fall-down movement of the object, presenting the location of the object, presenting a history of the location of the object, and displaying the location of the object graphically.

In one embodiment, object moving straight between first time and second time (i.e. no direction change); first CI is a current CI at current time, and second CI is a previous CI at previous time; movement parameter is a distance travelled between first time and second time, and/or angle between antenna axis and moving direction (antenna axis means an axis connecting first antenna and second antenna of moving device).

Clause 2: The method/apparatus/software/system of the object tracking system of clause 1: wherein the Type 1 device is stationary and the Type 2 device is moving.

Clause 3: The method/apparatus/software/system of the object tracking system of clause 2: wherein the wireless signal is received by a second Type 2 heterogeneous wireless device; wherein the second Type 2 device is moving and is configured to: extract at least one second TSCI from the wireless signal, each TSCI being associated with an antenna of the Type 1 device and an antenna of the second Type 2 device, and compute the STI of the second Type 2 device based on the at least one second TSCI.

Clause 4: The method/apparatus/software/system of the object tracking system of clause 2: wherein a sounding rate associated with the plurality of TSCI and the Type 2 device is different from a second sounding rate associated with the at least one second TSCI and the second Type 2 device.

Clause 5: The method/apparatus/software/system of the object tracking system of clause 2: wherein the STI of the Type 2 device is shared to the second Type 2 device.

Clause 6: The method/apparatus/software/system of the object tracking system of clause 2: wherein the STI of the second Type 2 device is shared to the Type 2 device.

Clause 7: The method/apparatus/software/system of the object tracking system of clause 2: wherein the movement of the Type 2 device and the movement of the second Type 2 device are coordinated.

Clause 8: The method/apparatus/software/system of the object tracking system of clause 1: wherein the Type 2 device is stationary and the Type 1 device is moving.

Clause 9: The method/apparatus/software/system of the object tracking system of clause 8: wherein a second wireless signal is transmitted by a second Type 1 heterogeneous wireless device; wherein the second Type 1 device is moving and is configured to send the second wireless signal asynchronously with respect to the first wireless signal; wherein the Type 2 device is configured to: extract at least one second TSCI from the second wireless signal, each TSCI being associated with an antenna of the second Type 1 device and an antenna of the Type 2 device, and compute a second STI of the second Type 1 device based on the at least one second TSCI.

Clause 10: The method/apparatus/software/system of the object tracking system of clause 9: wherein a sounding rate associated with the wireless signal is different from a second sound rate associated with the second wireless signal.

Clause 11: The method/apparatus/software/system of the object tracking system of clause 9: wherein a sounding rate associated with the wireless signal is similar to the second sound rate associated with the second wireless signal.

Clause 12: The method/apparatus/software/system of the object tracking system of clause 9: wherein the Type 1 device and the second Type 1 device are coordinated in the transmission of the wireless signal and the second wireless signal.

Clause 13: The method/apparatus/software/system of the object tracking system of clause 9: wherein the STI of the Type 1 device is shared to the second Type 1 device.

Clause 14: The method/apparatus/software/system of the object tracking system of clause 9: wherein the STI of the second Type 1 device is shared to the Type 1 device.

Clause 15: The method/apparatus/software/system of the object tracking system of clause 9: wherein the movement of the Type 1 device and the movement of the second Type 1 device are coordinated.

Clause 16: The method/apparatus/software/system of the object tracking system of clause 1: wherein some of the at least two antennas of the moving device are configured in at least one of: a 1-dimensional (1-D) configuration, a straight line, a straight line with uneven spacing, more than one straight lines, a curve, more than one curves, a 2-dimensional (2-D) configuration, a circle, a triangle, a rectangle, a pentagon, a hexagon, a heptagon, an octagon, a polygon, a lattice, an array, a 2-D shape, concentric 2-D shapes with varying size, layers of 2-D shapes, a 3-dimensional (3-D) configuration, a sphere, a cube, a rectangular cube, a constellation, concentric 3-D shapes with varying size, layers of 3-D shapes, an adjustable configuration, and a time varying configuration.

Clause 17: The method/apparatus/software/system of the object tracking system of clause 16: wherein an antenna is positioned at the center of at least one of: a 1-D configuration, a 2-D configuration, and a 3-D configuration.

Clause 18: The method/apparatus/software/system of the object tracking system of clause 1: wherein some antennas of the moving device are configured to have a spacing based on a frequency of the wireless signal.

Clause 19: The method/apparatus/software/system of the object tracking system of clause 1: wherein some antennas of the moving device are configured to have a spacing based on a target movement parameter.

Clause 20: The method/apparatus/software/system of the object tracking system of clause 1: wherein the first CI at the first time is determined to be matched to the second CI at the second time if at least one of: a similarity score between the first CI and the second CI is larger than a threshold, the second time is within a time window associated with the first time and the configuration of the antennas of the moving device, and the similarity score is not smaller than similarity score between the first CI and any CI in any of the TSCI within the time window.

Clause 21: The method/apparatus/software/system of the object tracking system of clause 1, further comprises: determining the first CI at the first time to be matched to the second CI at the second time comprises by: computing a plurality of similarity scores between the first CI and each of a plurality CI of the second TSCI in a time period associated with the first time, determining a maximum similarity score based on the plurality of similarity scores, determining that the maximum similarity score is greater than a threshold, identifying the second CI to be the CI of the second TSCI associated with the maximum, and identifying the second time to be the time associated with the second CI.

Clause 22: The method/apparatus/software/system of the object tracking system of clause 21: wherein the maximum similarity score is determined based on a filtering of the plurality of similarity scores.

Clause 23: The method/apparatus/software/system of the object tracking system of clause 21: wherein the maximum similarity score is determined based on a filtering of the plurality of similarity scores and a history of past similarity scores.

Clause 24: The method/apparatus/software/system of the object tracking system of clause 21: wherein the maximum similarity score is determined by applying dynamic programming to the plurality of similarity scores and a history of past similarity scores.

Clause 25: The method/apparatus/software/system of the object tracking system of clause 21: wherein the movement parameter comprises an angle; wherein the angle is based on an angular bearing between the first antenna and the second antenna.

Clause 26: The method/apparatus/software/system of the object tracking system of clause 21: wherein the movement parameter comprises an angle; wherein the angle is based on at least one of: an angular bearing of the first antenna with respect to the second antenna, and an angular bearing of the second antenna with respect to the first antenna.

Clause 27: The method/apparatus/software/system of the object tracking system of clause 21: wherein the movement parameter comprises an angle; wherein the angle is based on at least one of: an angular bearing between two antennas in the configuration of the antennas of the moving device.

Clause 28: The method/apparatus/software/system of the object tracking system of clause 21: wherein the movement parameter comprises an angle; wherein the angle is based on the configuration of the antennas of the moving device.

Clause 29: The method/apparatus/software/system of the object tracking system of clause 21: wherein the movement parameter comprises an angle; wherein the angle is computed based on the maximum similarity score.

Clause 30: The method/apparatus/software/system of the object tracking system of clause 21: wherein the movement parameter comprises a distance; wherein the distance is computed based on the maximum similarity score.

Clause 31: The method/apparatus/software/system of the object tracking system of clause 21: wherein the movement parameter comprises an angle and a distance; wherein the angle is computed based on at least one of: the maximum similarity score, the distance, the configuration of the antennas of the moving device, the time difference between the first time and the second time, and the distance between the first antenna and the second antenna; wherein the distance is computed based on at least one of: the maximum similarity score, the angle, the configuration of the antennas of the moving device, the time difference between the first time and the second time, and the distance between the first antenna and the second antenna.

Clause 32: The method/apparatus/software/system of the object tracking system of clause 1, further comprising: determining the first CI at a first time of a first TSCI to be matched to the second CI at the second time of the second TSCI by: for each of the plurality of TSCI other than the first TSCI as candidate second TSCI, computing a plurality of similarity scores between the first CI and each of a plurality CI of the respective candidate second TSCI in a respective time period associated with the first time, wherein the time period is associated with the candidate second TSCI, and determining a respective maximum similarity score based on the plurality of similarity scores, determining an overall maximum similarity score among the maximum similarity scores associated with the plurality of TSCI other than the first TSCI, determining that the overall maximum similarity score is greater than a threshold, identifying the second TSCI to be the candidate second TSCI associated with the overall maximum similarity score, identifying the second CI to be the CI of the second TSCI associated with the maximum, and identifying the second time to be the time associated with the second CI.

Clause 33: The method/apparatus/software/system of the object tracking system of clause 32: wherein the respective maximum similarity score is determined based on a filtering of the plurality of similarity scores.

Clause 34: The method/apparatus/software/system of the object tracking system of clause 32: wherein the respective maximum similarity score is determined based on a filtering of the plurality of similarity scores and a history of past similarity scores.

Clause 35: The method/apparatus/software/system of the object tracking system of clause 32: wherein the respective maximum similarity score is determined by applying dynamic programming to the plurality of similarity scores and a history of past similarity scores.

Clause 36: The method/apparatus/software/system of the object tracking system of clause 32, further comprising: determining a number of the plurality of TSCI other than the first TSCI as unlikely candidate second TSCI, and skipping the unlikely candidate second TSCI as candidate second TSCI such that similarity scores with respect to the first CI are not computed for any CI of the unlikely candidate second TSCI.

Clause 37: The method/apparatus/software/system of the object tracking system of clause 1, further comprising: determining the first CI at a first time of a first TSCI to be matched to the second CI at the second time of the second TSCI by: for each of the plurality of TSCI as a candidate first TSCI: for each of the plurality of TSCI other than the candidate first TSCI as a candidate second TSCI: computing a plurality of similarity scores between the CI of the candidate first TSCI at the first time and each of a plurality CI of the candidate second TSCI in a respective time period associated with the first time and the candidate second TSCI, and determining a respective maximum similarity score based on the plurality of similarity scores, and determine a candidate overall maximum similarity score associated with the candidate first TSCI based on the maximum similarity scores; determining an overall maximum similarity score among all the candidate overall maximum similarity scores; determining that the overall maximum similarity score is greater than a threshold; identifying the first TSCI to be the candidate first TSCI associated with the overall maximum similar score; identifying the second TSCI to be the other TSCI associated with the overall maximum similarity score; identifying the second CI to be the CI of the second TSCI associated with the maximum; and identifying the second time to be the time associated with the second CI.

Clause 38: The method/apparatus/software/system of the object tracking system of clause 37: wherein the respective maximum similarity score is determined based on a filtering of the plurality of similarity scores.

Clause 39: The method/apparatus/software/system of the object tracking system of clause 37: wherein the respective maximum similarity score is determined based on a filtering of the plurality of similarity scores and a history of past similarity scores.

Clause 40: The method/apparatus/software/system of the object tracking system of clause 37: wherein the respective maximum similarity score is determined by applying dynamic programming to the plurality of similarity scores and a history of past similarity scores.

Clause 41: The method/apparatus/software/system of the object tracking system of clause 37, further comprising: for each of the plurality of TSCI as a candidate first TSCI: determining a number of the plurality of TSCI other than the candidate first TSCI as unlikely candidate second TSCI, and skipping the unlikely candidate second TSCI as candidate second TSCI such that similarity scores with respect to the CI of the candidate first TSCI at the first time are not computed for any CI of the unlikely candidate second TSCI.

Clause 42: The method/apparatus/software/system of the object tracking system of clause 1, further comprising: determining that a third CI at a third time of a third TSCI associated with a third antenna of the moving device matches a fourth CI at a fourth time of a fourth TSCI associated with a fourth antenna of the moving device, wherein both the third TSCI and the fourth TSCI are associated with another particular antenna of the stationary device; computing the at least one movement parameter of the moving device based on at least one of: the plurality of TSCI, the configuration of antennas of the moving device, the configuration of antennas of the stationary device, time difference between the first time and the second time, time difference between the third time and the fourth time, distance between the first antenna and the second antenna, and distance between the third antenna and the fourth antenna; and computing a spatial-temporal information (STI) of the moving device based on at least one of: the at least one movement parameter, the first time, the second time, the third time, the fourth time, the configuration of antennas of the stationary device, the configuration of antennas of the moving device, a past STI, and a past movement parameter.

Clause 43: The method/apparatus/software/system of the object tracking system of clause 42: wherein the third time is equal to the first time.

Clause 44: The method/apparatus/software/system of the object tracking system of clause 42, further comprising: computing a candidate STI based on a movement parameter computed based on the matching of the first CI and the second CI; computing another candidate STI based on another movement parameter computed based on the matching of the third CI and the fourth CI; computing the STI by aggregating the candidate STI.

Clause 45: The method/apparatus/software/system of the object tracking system of clause 1, further comprising: determining that a third CI at a third time of a third TSCI associated with a third antenna of the moving device matches a fourth CI at a fourth time of a fourth TSCI associated with a fourth antenna of the moving device, wherein both the third TSCI and the fourth TSCI are associated with another particular antenna of the stationary device; computing a probability model for a movement parameter based on at least one of: the matching between the first CI and the second CI, the matching between the third CI and the fourth CI, and another matching between another two CI, computing the at least one movement parameter of the moving device stochastically based on at least one of: the probability model, the plurality of TSCI, the configuration of antennas of the moving device, the configuration of antennas of the stationary device, time difference between the first time and the second time, time difference between the third time and the fourth time, distance between the first antenna and the second antenna, and distance between the third antenna and the fourth antenna; and computing a spatial-temporal information (STI) of the moving device based on at least one of: the at least one movement parameter, the first time, the second time, the third time, the fourth time, the configuration of antennas of the stationary device, the configuration of antennas of the moving device, a past STI, and a past movement parameter.

Clause 46: The method/apparatus/software/system of the object tracking system of clause 1, further comprising: computing a probability model for the at least one movement parameter; computing the at least one movement parameter of the moving device stochastically based on the probability model; and computing the STI of the moving device stochastically based on the at least one stochastically computed movement parameter.

Clause 47: The method/apparatus/software/system of the object tracking system of clause 1, further comprising: computing a probability model for the at least one movement parameter; computing the at least one movement parameter of the moving device stochastically based on the probability model; compute a number of candidate STI of the moving device stochastically, each candidate STI computed based on a stochastically computed movement parameter; computing the STI as an aggregate of the candidate STI.

Clause 48: The method/apparatus/software/system of the object tracking system of clause 1: wherein the movement parameter comprises a distance and the STI comprises a location; wherein the location is computed based on a past location and the distance.

Clause 49: The method/apparatus/software/system of the object tracking system of clause 1: wherein the STI is computed based on an input from a sensor associated with the moving device.

Clause 50: The method/apparatus/software/system of the object tracking system of clause 1: wherein the movement parameter comprises a distance and an angle; wherein the STI comprises a location; wherein the location is computed based on a past location, the distance and the angle.

Clause 51: The method/apparatus/software/system of the object tracking system of clause 1: wherein the movement parameter comprises a distance; wherein the STI comprises a speed; wherein the speed is computed based on the distance and the time difference between the first time and the second time.

Clause 52: The method/apparatus/software/system of the object tracking system of clause 51: wherein the movement parameter comprises a distance; wherein a speed is computed based on the distance and the time difference between the first time and the second time; wherein the STI comprises an acceleration; wherein the acceleration is computed based on the speed, the time difference, and a past speed computed based on a past distance and a past time difference.

Clause 53: The method/apparatus/software/system of the object tracking system of clause 1: wherein the movement parameter comprises an angle; wherein the STI comprises a direction; wherein the direction is computed based on a past direction and the angle.

Clause 54: The method/apparatus/software/system of the object tracking system of clause 1: wherein a trajectory is computed based on the STI and a history of the STI.

55: The method/apparatus/software/system of the object tracking system of clause 1: wherein tracking the object and the moving device comprises displaying a trajectory of the moving device.

Clause 56: The method/apparatus/software/system of the object tracking system of clause 1, further comprising: determining that a straight line connecting the first antenna and the second antenna of the moving device is parallel to a straight line connecting a third antenna and a fourth antenna of the moving device; determining that a third CI at a third time of a third TSCI associated with the third antenna matches a fourth CI at a fourth time of a fourth TSCI associated with the fourth antenna, wherein both the third TSCI and the fourth TSCI are associated with another particular antenna of the stationary device; computing at least one movement parameter of the moving device based on at least one of: the plurality of TSCI, the configuration of antennas of the moving device, the configuration of antennas of the stationary device, time difference between the first time and the second time, time difference between the third time and the fourth time, distance between the first antenna and the second antenna, and distance between the third antenna and the fourth antenna; and computing a spatial-temporal information (STI) of the moving device based on at least one of: the at least one movement parameter, the first time, the second time, the third time, the fourth time, the configuration of antennas of the stationary device, the configuration of antennas of the moving device, a past STI, and a past movement parameter.

Clause 57: The method/apparatus/software/system of the object tracking system of clause 56, further comprising: computing a candidate STI based on a movement parameter computed based on the matching of the first CI and the second CI; computing another candidate STI based on another movement parameter computed based on the matching of the third CI and the fourth CI; computing the STI by aggregating the candidate STI.

Clause 58: The method/apparatus/software/system of the object tracking system of clause 1, further comprising: determining that a straight line connecting the first antenna and the second antenna of the moving device is parallel to a straight line connecting a third antenna and a fourth antenna of the moving device; determining jointly that the first CI at the first time matches the second CI at the second time, and a third CI at the first time of a third TSCI associated with the third antenna matches a fourth CI at a fourth time of a fourth TSCI associated with the fourth antenna, wherein both the third TSCI and the fourth TSCI are associated with another particular antenna of the stationary device; computing the at least one movement parameter of the moving device based on at least one of: the plurality of TSCI, the configuration of antennas of the moving device, the configuration of antennas of the stationary device, time difference between the first time and the second time, time difference between the first time and the fourth time, distance between the first antenna and the second antenna, and distance between the third antenna and the fourth antenna; and computing a spatial-temporal information (STI) of the moving device based on at least one of: the at least one movement parameter, the first time, the second time, the fourth time, the configuration of antennas of the stationary device, the configuration of antennas of the moving device, a past STI, and a past movement parameter.

Clause 59: The method/apparatus/software/system of the object tracking system of clause 58, further comprising: computing a candidate STI based on a movement parameter computed based on the matching of the first CI and the second CI; computing another candidate STI based on another movement parameter computed based on the matching of the third CI and the fourth CI; computing the STI by aggregating the candidate STI.

Clause 60: The method/apparatus/software/system of the object tracking system of clause 1, further comprising: preprocessing the TSCI.

Clause 61: The method/apparatus/software/system of the object tracking system of clause 1, further comprising: transmitting at least one of: a movement parameter, and the STI to the Type 1 device.

Clause 62: The method/apparatus/software/system of the object tracking system of clause 1, further comprising: transmitting at least one of: a movement parameter, and the STI to a server.

Clause 63: The method/apparatus/software/system of the object tracking system of clause 1, further comprising: obtaining at least one of: the past STI and the past movement parameter, from a sensor communicatively coupled with the processor and memory, wherein the sensor comprises at least one of: BLE, RFID, GPS, a passive infrared (PIR) sensor, a light sensor, a radar-based sensor, a radio-based sensor, a WiFi-based sensor, an LTE-based sensor, a 5G sensor, a beyond-5G sensor, an optical-based sensor, and another locationing sensor.

Clause 64: The method/apparatus/software/system of the object tracking system of clause 1, further comprising:

sending digital data with the wireless signal.

Clause 65: The method/apparatus/software/system of the object tracking system of clause 1, further comprising: communicating wireless network traffic in the wireless multipath channel and transmitting the wireless signal between the Type 1 device and the Type 2 device in parallel.

Clause 66: The method/apparatus/software/system of the object tracking system of clause 1, further comprising: switching the wireless multipath channel when a signal quality metric is below a threshold.

Clause 67: The method/apparatus/software/system of the object tracking system of clause 1, further comprising: sending meta data with the wireless signal.

Clause 68: The method/apparatus/software/system of the object tracking system of clause 1, further comprising: obtaining the plurality of TSCI from a wireless integrated circuit (IC).

Clause 69: The method/apparatus/software/system of the object tracking system of clause 1, further comprising: obtaining the plurality of TSCI from a wireless integrated circuit (IC); accessing the internet using another wireless IC.

Clause 70: The method/apparatus/software/system of the object tracking system of clause 1, further comprising: obtaining the plurality of TSCI from a radio of a wireless integrated circuit (IC); accessing the internet using another radio of the wireless IC.

Clause 71: The method/apparatus/software/system of the object tracking system of clause 1, wherein: the channel information comprises at least one of: channel state information (CSI), received signal power, compressed CSI, uncompressed CSI, radio state, modem parameters, channel impulse response (CIR), channel frequency response (CFR), the effect of the environment on the wireless signal, magnetic response, and phase response.

Clause 72: The method/apparatus/software/system of the object tracking system of clause 1, further comprising: skipping a CI of a TSCI when a signal quality metric is below a threshold.

Clause 73: The method/apparatus/software/system of the object tracking system of clause 1: wherein the wireless signal is transmitted according to at least one common wireless standard; wherein the at least one common wireless standard to comprise at least one of: WiFi, LTE, LTE-A, LTE-U, 2.5G, 3G, 3.5G, 4G, beyond 4G, 5G, 6G, 7G, 8G, a 802.11 standard, a 802.15 standard, a 802.16 standard, 802.11a/b/n/ac/ax/ay/az, mesh network, Zigbee, WiMax, BlueTooth, BLE, RFID, UWB, a microwave system, and a radar like system.

Clause 74: The method/apparatus/software/system of the object tracking system of clause 1: wherein the wireless signal is transmitted according to a WiFi standard; wherein the wireless signal is transmitted in a WiFi channel with a bandwidth allowable by the WiFi standard.

Clause 75: The method/apparatus/software/system of the object tracking system of clause 1, further comprising: wherein the Type 1 device is stationary and the Type 2 device is moving; wherein there are multiple Type 1 devices in a venue; determining that signal quality associated with the Type 1 device is below a threshold, determining that signal quality associated with the another Type 1 device is above another threshold, configuring the Type 2 device to: switch from the Type 1 device with a low signal quality to another Type 1 device with a high signal quality, stop to receive the wireless signal from the Type 1 device, start to receive another wireless signal from the another Type 1 device, and obtain the rest of the plurality of TSCI by extracting CI from the another wireless signal instead of the wireless signal.

Clause 76: The method/apparatus/software/system of the object tracking system of clause 1, further comprising: wherein the Type 1 device is moving and the Type 2 device is stationary; wherein there are multiple Type 2 devices in a venue; determining that signal quality associated with the Type 2 device is below a threshold; determining that signal quality associated with the another Type 2 device is above another threshold; configuring the Type 2 device to stop: receiving the wireless signal from the Type 1 device, extracting the plurality of TSCI from the wireless signal, determining the matching of CI of first TSCI and CI of second TSCI, computing the at least one movement parameter of the moving device, and computing the STI of the moving device; configuring the another Type 2 device to start: receiving the wireless signal from the Type 1 device, extracting the rest of the plurality of TSCI from the wireless signal, determining the matching of CI of first TSCI and CI of second TSCI, computing the at least one movement parameter of the moving device, and computing the STI of the moving device.

RF imaging is a dream that has been pursued for years yet not achieved in the evolving wireless sensing. The existing solutions on WiFi bands, however, either require specialized hardware with large antenna arrays or suffer from poor resolution due to fundamental limits in bandwidth, the number of antennas, and the carrier frequency of 2.4GHz/5GHz WiFi. The present teaching provides a new opportunity in the increasingly popular 60GHz WiFi, which overcomes such limits. In one embodiment, a super-resolution imaging system, called "mmEye", is presented as a millimeter-wave camera by reusing a single commodity 60GHz WiFi radios. The key challenge arises from the extremely small aperture (antenna size), e.g., < 2cm, which physically limits the spatial resolution. The present teaching also provides a super-resolution imaging algorithm that breaks the resolution limits by leveraging all available information at both Tx/Rx sides. Based on the MUSIC algorithm, a novel technique of joint transmitter smoothing is proposed to jointly use the transmit and receive arrays to boost the spatial resolution, while not sacrificing the aperture of the antenna array. Based on this algorithm, a functional system is built on commodity 60GHz WiFi chipsets. The mmEye system has been evaluated on different persons and objects under various settings. Results show that it achieves a median silhouette (shape) difference of 27.2% and a median boundary keypoint precision of 7.6cm, and it can image a person even through a thin drywall. The visual results show comparable quality to that of commercial products like Kinect, making for the first-time super-resolution imaging available on the commodity 60GHz WiFi devices.

While some existing system needs dedicated hardware (e.g., RFID reader and UWB radios) and needs to deploy devices on both sides of the target, a disclosed system in the present teaching reuses the commodity 60GHz WiFi. Some existing camera-based solutions require RGB-depth cameras like Kinect sensors and camera arrays, and depend on lighting conditions and are privacy-sensitive. In contrast, a disclosed system in the present teaching aims to enable a depth "camera" by reusing a commodity available networking device, which works without any light and preserves privacy.

In the present teaching, the disclosed super-resolution RF imaging system (mmEye) serves as a millimeter-wave "camera" using a single commodity 60GHz WiFi device, by leveraging the 60GHz networking radio with its unexplored radar sensing capability. It can image both humans, either moving or stationary with different poses, and objects of various shapes, sizes, and materials. It can even image through a thin drywall, despite the high attenuation of 60GHz signals.

Even with the radar operations, however, enabling imaging on commodity 60GHz WiFi radio entails great challenges. For example, due to networking, the device is not calibrated as well as and thus not as stable as conventional radar, resulting in fluctuating signal responses. Additionally, reflection signals may be frequently missed due to the inherent high attenuation and directionality of 60GHz signals. The biggest challenge, however, is to achieve high imaging accuracy with the compact 60GHz array with a small aperture, a key factor that determines the imaging resolution. In general, the imaging resolution of a radar system is defined by resolution $\propto$ wavelength $\times$ distance/aperture, which is about 28cm at 1m distance for an experimental device with an antenna array size of 1.8cm $\times$ 1.8cm. Prior works attempt to extend the effective aperture by synthetic array radar (SAR), which, however, requires receiver movements and is highly sensitive to the moving trajectory tracking error. The impact of the trajectory error becomes particularly noticeable when the error is greater than the wavelength, which is likely to occur for 60GHz signals with a wavelength of 5mm.

Differently, the disclosed system mmEye devises a super-resolution algorithm to break through the resolution limited by the physical aperture and enable precise imaging on commodity 60GHz radio. The proposed algorithm achieves a super resolution through a novel joint transmitter smoothing technique.

In one embodiment, instead of using the on-chip analog beamforming, the disclosed system performs digital beamforming on the received signals, which yields a much higher spatial resolution. The analog beamforming built-in the radio usually only provides coarse beam resolution (e.g., 3dB beamwidth of 15° for an exemplary device). The disclosed system can boost the spatial resolution by using the MUSIC algorithm. The disclosed system can perform MUSIC over each spherical surface of different azimuths and elevations at every specific range, estimating the spatial spectrum of the signals reflected off the target at that range. The spatial spectrum, along with the accurate range information offered by the 60GHz radio, will together reconstruct an image of the target. MUSIC can be used for imaging since the signals are sparse on each spherical surface. However, it is not directly applicable since it suffers from the rank deficiency issue, i.e., the rank of the correlation matrix of the signal space is smaller than the number of actual incoming signals.

To overcome the rank deficiency problem, one can employ spatial smoothing in 2D space, a technique to split the receive array into several overlapped subarrays that reuse the same steering vectors. By adding one more subarray, the rank of the correlation matrix of signals increases by 1 with probability 1. In addition to the spatial subarrays, the disclosed system mmEye utilizes the time diversity of consecutive measurements to estimate the correlation matrix. The synthesized spatial and temporal smoothing effectively solves the rank deficiency issue and significantly reduces the variance of the spatial spectrum estimation by MUSIC.

Spatial smoothing on the receive array further reduces the small antenna array size, i.e., the effective aperture, thereby degrading the imaging precision. To increase the rank without loss in aperture, a novel 2D spatial smoothing is proposed to jointly reuse the transmit array and the receive array, termed as joint transmitter smoothing. Specifically, rather than dividing the receive array into subarrays, one can reuse the entire receive array for each individual transmit antenna as a subarray. Given a case of 32 Tx elements, one can immediately obtain 32 subarrays, offering a guaranteed rank of 32, which is adequate for the sparse reflection signals, while retaining the scarce aperture unimpaired. Since the subarray size is as big as the whole receive array, the imaging resolution is maximized. Besides the improvement on the spatial resolution, the joint transmitter smoothing scheme also alleviates the specularity problem for RF imaging, where the signals reflected off the target may not be captured due to the inherent high attenuation and directionality of the mmWave signals, by utilizing the transmit diversity.

Based on the super-resolution algorithm, one can design and implement a functional system of mmEye with additional components on the background and noise cancellation and adaptive target detection, etc. In one embodiment, one can prototype the mmEye on commodity 60GHz networking chipset attached with an additional array and perform experiments with different subjects, locations, and postures. The results demonstrate that mmEye achieves accurate imaging results comparable to a Kinect depth sensor, with a median silhouette (shape) difference of 27.2% and a median boundary keypoint precision of 7.6 cm at the range of 1 meter. With the encouraging performance on a single networking device, one can believe mmEye takes an important step towards a ubiquitous millimeter-wave "camera" and the first step towards dual roles of networking and radar sensing for commodity 60GHz WiFi radios.

The disclosed system mmEye leverages sparsity of the reflection signals and applies MUSIC with a novel joint transmitter smoothing technique, which will also benefit and inspire future sensing research on millimeter-wave radios. The present teaching also provides a fully functional imaging system with multiple components including background and noise cancellation, target detection, etc. The system achieves comparable imaging with commercial products like Kinect using a single 60GHz networking device in a much smaller size, underlying pervasive imaging for various applications such as VR gaming, pose estimation, etc.

The 60GHz WiFi technology, a.k.a. WiGig, with the established IEEE 802.11ad/ay standards and low-cost commercial chipsets, is becoming the mainstream in wireless devices to enable high rate networking and rich user experience. Different from the 2.4GHz/5GHz WiFi that faces fundamental limitations in imaging, 60GHz WiFi offers unique advantages for RF imaging. While the common 2.4GHz and 5GHz WiFi devices have only 2 to 3 antennas and 20MHz/40MHz bandwidths, 60GHz WiFi radios offer many-antenna phased arrays in compact forms and large bandwidths centered at high-frequency band of 60GHz. These properties translate into several superior features for sensing. For example, the large phased array enables highly directional beamforming with good spatial resolution; the large bandwidth offers high ranging accuracy; the high carrier frequency leads to more predictable signal propagation that is immune to the multipath effects, a huge challenge for 2.4GHz/5GHz WiFi. In addition, the carrier wavelength is 5mm, over 10× shorter than 5GHz WiFi, which means the required antenna aperture can be 10× smaller to achieve the same imaging resolution.

Additionally, one can observe two trends that further promote 60GHz WiFi as an attractive solution for ubiquitous sensing and imaging. First, 60GHz networking chipsets is going to support an additional role of radar-like processing, without hardware changes except for merely one extra antenna array for full-duplex radios, allowing rapid and precise phase measurement with synchronized, co-located Tx and Rx. Second, the commercial 60GHz WiFi, already used in consumer-grade routers, is becoming relatively inexpensive with increasing market adoption and will soon be available on mobile devices. Pioneer works on 60GHz radios mainly utilize amplitude information and employ mechanical horn antennas to emulate beam steering. Great potentials in the steerable phased arrays and the dual radar mode of 60GHz WiFi remains largely underexploited.

In one embodiment, one can use commodity Qualcomm 802.11ad chipsets. To enable full-duplex radar operation, an extra array is attached to the chipset to form co-located and synchronized Tx and Rx. In practice, the dual networking and radar role can be achieved by rapid switching in time, since the radar sensing only requires minimal time. Under the networking mode, the extra array simply provides additional spatial diversity. The Tx transmits pulses of a known sequence, which, after reflection on surrounding targets, are received and correlated on the Rx side to estimate Channel Impulse Response (CIR) with precise amplitude and phase information.

Suppose $N$ elements in the Tx array and $M$ elements in the Rx array. The CIR between the $n$-th transmit antenna and the $m$-th receive antenna $h_{m,n}(\tau)$ at time slot $t$ can be expressed as

$$h_{m,n}(\tau,t) = \sum_{l=0}^{L-1} a_{m,n}^l(t)\delta(\tau - \tau_l(t)), \qquad (45)$$

where $\delta(\cdot)$ is the Delta function, $L$ is the number of the total CIR taps, and $a_{m,n}^l$ and $\tau_l$ denote the complex amplitude and the propagation delay of the $l$-th tap, respectively. To simplify the notations in the following, one can omit the dependence on the measurement time $t$ if not mentioned. The time resolution $\Delta\tau$ of the measured CIR is determined by the bandwidth $B$ of the transmitted signal, i.e., $\Delta\tau = 1/B$. Then, $\tau_l$ can be expressed as $\tau_l = \tau_0 + (l - 1)\Delta\tau$, where $\tau_0$ denotes the time of arrival of the first tap. At each time slot, mmEye captures $M \times N \times L$ complex values, i.e., $h_{m,n}(\tau_l)$, where m = 1, ⋯, M, n = 1, ⋯ ,N, and l = 0, ⋯ , L - 1. The 3D information of the target being imaged can be thus inferred from these measurements.

FIG. 38 illustrates an exemplary device setup and coordinate system 3800 for wireless object scanning, according to some embodiments of the present teaching. In FIG. 38, $\theta$ and $\phi$ denote the elevation and azimuth respectively, and $r$ denotes the range from the device to the reflector. As shown in FIG. 38, an experimental device has 32 elements assembled in a 6 × 6 layout for both Tx and Rx (i.e., N = M = 32) and operates at 60GHz center frequency with a 3.52GHz bandwidth. Antennas are missing at four locations that are preserved for other purposes like power port, as shown in FIG. 38. The measured CIR thus offers a propagation delay resolution of $\Delta\tau$ = 0.28 ns, corresponding to a range resolution of 4.26 cm. When the device is set to radar mode, each CIR $h_{m,n}(\tau)$ is measured in a sequential way as follows: the *n*-th transmit antenna transmits an impulse while other transmit antennas keep silent, and only the *m*-th receive antenna records the corresponding CIR at the same time. This is because all the transmit/receive antennas share a single RF chain. The above channel sounding process would repeat $32 \times 32 = 1024$ times in total for a complete CIR recording.

RF imaging in the present teaching leverages the observation that the energy distribution of the reflected RF signals over the space would sketch the silhouette of a target. The disclosed system mmEye tries to reconstruct the contour of the target based on the estimation of the Angle of Arrival (AoA) and Time of Arrival (ToA) of each signal reflected off the surface of the target. As mentioned above, however, the spatial resolution is greatly limited due to the small effective aperture of the receive antenna array. For example, the on-chip analog conventional beamforming (CBF) only provides a 3dB beamwidth of 15 °, which is inadequate to image a target, especially when the target is far away to the device.

To boost the spatial resolution, the disclosed system mmEye performs digital beamforming on the received CIR as opposed to the on-chip analog beamforming, which achieves higher resolution in distinguishing the signals radiated by nearby parts of the target. Noticing that the CBF and the minimum variance distortionless response (MVDR) beamforming (a.k.a. Capon beamformer) both produce poor precision, one can devise a super-resolution algorithm based on MUltiple Signal Classification (MUSIC), an algorithm for AoA estimation.

The basic idea of the MUSIC algorithm is to perform an eigen-decomposition for the covariance matrix of CIR, resulting in a signal subspace orthogonal to a noise subspace corresponding to the signals reflected off the target. MUSIC is typically used for reconstructing the spatial spectrum of sparse signals. The reason why it is also applicable for imaging is that for each propagation delay $\tau_l$, the signals reflected off a target are sparsely distributed in the space. More specifically, although the number of the reflected signals is large, these reflections occur over a large span of the propagation delays (i.e., ranges) and thus the number of signals with a certain propagation delay (i.e., reflected at a certain range) is small. Typically, there are only four to six significant reflected signals for each $\tau_l$. Therefore, for each $\tau_l$, the signal structure for target imaging is in line with the assumptions of the MUSIC algorithm, making the MUSIC algorithm feasible for solving the imaging problem. This is a result of utilizing the large bandwidth of the 60GHz WiFi, which offers fine-grained range resolution.

Define a vector $\mathbf{h}_n(\tau_l) = [h_{1,n}^t(\tau_l), \cdots, h_{M,n}^t(\tau_l)]^T$, given a fixed transmit antenna n, to record the calibrated complex channel gains of all the receive antennas at a propagation delay $\tau_l$. To simplify the notations, one can omit the dependence on the propagation delay $\tau_l$ and the transmit antenna index n if not mentioned. Then, assuming that there are *D* reflected signals impinging on the receive antenna array at the propagation delay $\tau_l$, the CIR h can be formulated as

$$\mathbf{h} = [\mathbf{s}(\theta_1, \phi_1), \quad \cdots, \quad \mathbf{s}(\theta_D, \phi_D)] \begin{bmatrix} x_1 \\ \vdots \\ x_D \end{bmatrix} + \begin{bmatrix} \varepsilon_1 \\ \vdots \\ \varepsilon_D \end{bmatrix}, \tag{46}$$

where $\mathbf{s}(\theta_i, \phi_i)$ denotes the steering vector pointing to the direction $(\theta_i, \phi_i)$ corresponding to the incoming direction of the i-th reflected signal, $x_i$ denotes the complex amplitude of that signal and $\varepsilon_i$ stands for additive noise, which is assumed to be Gaussian random variable with zero mean and independent and identically distributed (I.I.D.) for different receive antennas.

More specifically, the steering vector $\mathbf{s}(\theta, \phi)$ records the phase response of the antenna array for a signal coming from the direction $(\theta, \phi)$ with its power normalized to 1, which can be expressed as

$$\mathbf{s}(\theta, \phi) = \frac{1}{\sqrt{M}} \begin{bmatrix} \Psi_\theta^0 \Omega_{\theta,\phi}^0 \\ \vdots \\ \Psi_\theta^{p-1} \Omega_{\theta,\phi}^{q-1} \\ \vdots \\ \Psi_\theta^{P-1} \Omega_{\theta,\phi}^{Q-1} \end{bmatrix}, \tag{47}$$

where $\Psi_\theta$ and $\Omega_{\theta,\phi}$ are two basis functions defined as $\Psi_\theta \triangleq \exp(jkd\sin\theta)$ and $\Omega_{\theta,\phi} \triangleq \exp(jkd\cos\theta\sin\phi)$, p and q denote the row and column index of the antenna element on the array as shown in FIG. 38, *k* is the wave number, and *d* is the distance between two adjacent antennas along *y* or *z*-axis.

The indices without an antenna element (marked as crosses in FIG. 38 and FIG. 39) are skipped in the steering vectors. A more concise matrix representation of Eqn. (46) is written accordingly as

$$\mathbf{h} = S\mathbf{x} + \varepsilon, \tag{48}$$

where S is defined as the steering matrix. Note that for a static target, the complex amplitude vector $\mathbf{x}$ is deterministic (fully coherent sources), and thus the covariance matrix of $\mathbf{h}$ would only contain the information of the noise.

Therefore, the correlation matrix is used instead, which can be expressed accordingly as

$$R = \mathbb{E}[\mathbf{h}\mathbf{h}^H] = S\mathbf{x}\mathbf{x}^H S^H + \mathbb{E}[\varepsilon\varepsilon^H] \triangleq R_s + R_\varepsilon, \tag{49}$$

where $R_s$ and $R_\varepsilon$ denote the correlation matrix for the signal components and noise, respectively. The eigenvalues $\lambda_1$, $\cdots, \lambda_M$ of $R$ are sorted in a non-descending order, associated with $M$ eigenvectors $\mathbf{e}_1, \cdots, \mathbf{e}_M$. Note that in the present teaching, $\mathbf{h}$ is treated as a random vector and each experiment is just one realization of it. Under the assumption that the ensemble mean of $\mathbf{h}$ is equal to zero, i.e., $\mathbb{E}[\mathbf{h}] = \mathbf{0}$, the correlation matrix is equivalent to the covariance matrix.

Then, the noise subspace can be constructed as $E_\varepsilon = [\mathbf{e}_{D+1}, \cdots, \mathbf{e}_M]$, where $D$ stands for the rank of $R_S$, or namely the dimension of the signal subspace. The (pseudo) spatial spectrum for any direction $(\theta, \phi)$ can be obtained as

$$P(\theta, \phi) = \frac{1}{\mathbf{s}^H(\theta,\phi)E_\varepsilon E_\varepsilon^H \mathbf{s}(\theta,\phi)}. \tag{50}$$

Large values of the spatial spectrum $P(\theta, \phi)$ in a specific part of the space would most likely indicate the presence of one or more reflected signals; low values of $P(\theta, \phi)$ would indicate the absence of such reflections.

Another critical problem to apply MUSIC is to determine the number of signals $D$ that impinge on the array. In the disclosed system mmEye, Akaike information criterion (AIC), an information-theoretic approach for model order selection, is used. AIC is composed of two terms: a data term, measuring the likelihood of the data given a certain $D$, and a penalty term, measuring the complexity of the model. Specifically, $D$ is calculated as

$$D^* = \underset{D}{\arg\max}\log\left(\frac{\prod_{i=D+1}^M \lambda_i^{1/(M-D)}}{1/(M-D)\sum_{j=D+1}^M \lambda_j}\right)^{(M-D)} - D(2M - D), \tag{51}$$

where $\lambda_i$ denotes the i-th largest eigenvalue of the correlation matrix $R$. Since the AIC criterion tends to overestimate the number of impinging signals, AIC can retain the weak reflected signals to the greatest extent possible, which is desirable in the imaging application.

The MUSIC algorithm requires the rank of $R_S$ to be the same as the number of incoming signals $D$. However, since the rank of $R_S$ is only 1 which is likely much smaller than $D$, the performance of the MUSIC algorithm would deteriorate greatly or even completely fail to produce an effective spatial spectrum. To solve the problem, spatial smoothing, a commonly used technique for the rank deficiency issue, is applied as follows.

FIG. 39 illustrates an example of spatial smoothing 3900, according to some embodiments of the present teaching. The idea of the spatial smoothing is to split the receive array into several overlapping subarrays that share the same steering vectors except for certain angular rotations due to the differences in the time of arrival of the reflected signals impinging on different subarrays. FIG. 39 shows an example of the selected subarrays from the original 6 × 6 receive antenna array. As seen, due to the issue of missing antennas at certain locations of the array, no subarray with dimension 5 × 5 can be found and only four 4 × 4 antenna subarrays can be established. A square subarray is just one example of the subarray, which has the merit that the spatial resolution for both azimuth and elevation are the same. Let $\mathbf{s}_{[k]}(\theta, \phi)$ denote the steering vector for the $k$-th subarray, then one can have $\mathbf{s}_{[2]}(\theta, \phi) = \Omega_{\theta,\phi}\mathbf{s}_{[1]}(\theta, \phi)$, $\mathbf{s}_{[3]}(\theta, \phi) = \Omega_{\theta,\phi}^2\mathbf{s}_{[1]}(\theta, \phi)$, and $\mathbf{s}_{[4]}(\theta, \phi) = \Psi_\theta\Omega_{\theta,\phi}\mathbf{s}_{[1]}(\theta, \phi)$. The correlation matrix of each subarray can be averaged to form the "spatially smoothed" correlation matrix $\tilde{R}$ with a higher rank, i.e.,

$$\tilde{R} = \frac{1}{K}\sum_{k=1}^K R_{[k]}, \tag{52}$$

where $R_{[k]}$ denotes the correlation matrix of the $k$-th subarray. The rank of $\tilde{R}$ increases by 1 with probability 1 for each additional subarray in the averaging until it reaches its maximum value.

Therefore, the rank of $\tilde{R}$ can be restored to 4 after the spatial smoothing, which, however, is still under rank deficiency. To further solve the rank deficiency issue and reduce the variance of the spatial spectrum estimation, an exponential smoothing filter, which utilizes the time diversity of consecutive measurements, is applied to the estimation of the correlation matrix:

$$\tilde{R}_t = \beta \tilde{R}_{t-1} + (1-\beta)\tilde{R}, \qquad (53)$$

where $\beta$ is the smoothing factor. The value of $\beta$ is chosen based on the tradeoff between the responsiveness and accuracy of the system. The spatial spectrum for each $\tau_l$ can be thus produced by Eqn. (50). Different from previous works, the disclosed system mmEye performs 2D spatial smoothing and targeting at imaging, which needs to identify all reflection signals.

Although spatial smoothing can improve the performance of the MUSIC algorithm under highly correlated sources, it reduces the effective aperture of the array (changed from $6 \times 6$ to $4 \times 4$), which equivalently increases the beamwidth of the array and decreases the spatial resolution. To solve the rank deficiency problem of the correlation matrix without the loss of the antenna aperture at the same time, the disclosed system mmEye exploits the Tx diversity and accordingly utilizes a novel joint transmitter smoothing technique.

FIG. 40 illustrates an example of joint transmitter smoothing 4000, according to some embodiments of the present teaching. As the AoA of each reflected signal is only relative to the receive array, each receive array corresponding to each Tx antenna should share the same set of the steering vectors except for the angular rotations, similar to the discussions in the above section for classical spatial smoothing. However, the angular rotation is not due to the shifting of the subarrays at the Rx array, but instead is caused by the tiny differences in the locations of the Tx antennas. Considering the small wavelength, these tiny differences can generate significant enough phase deviations to the signals received by the receive array coming from different TX antenna, which enables spatial smoothing across the receive arrays associated with different TX antennas. Thus, it is feasible to treat the whole receive antenna array, for each specific TX antenna, as a subarray. Thus in total, N subarrays can be formulated, where $N = 32$ as shown in FIG. 40.

Recall that $\mathbf{h}_n(\tau_l)$ denotes the received CIR at $\tau_l$ for the $n$-th transmit antenna. Define the channel matrix for each $\tau_l$ as $H(\tau_l) = [\mathbf{h}_1(\tau_l), \cdots, \mathbf{h}_N(\tau_l)]$. Then, the corresponding correlation matrix at $\tau_l$ after spatial smoothing can be obtained as

$$\tilde{R}_{Tx}(\tau_l) = \frac{1}{N}\sum_{n=1}^{N} \mathbf{h}_n(\tau_l)\mathbf{h}_n^H(\tau_l) = \frac{1}{N}H(\tau_l)H^H(\tau_l) \qquad (54)$$

$\tilde{R}_{Tx}(\tau_l)$ is now a full-rank matrix and multiple measurements are not required unlike the case for spatial smoothing based on a single transmit antenna, which increases the responsiveness of the disclosed system mmEye greatly. Nevertheless, the exponential filter can still improve the robustness of the spatial spectrum estimation, which can be produced by Eqn. (50). Interestingly, the matrix $H(\tau_l)H^H(\tau_l)$ is also known as the time-reversal matrix. If the Tx and Rx could share the same array, the proposed imaging algorithm is related to the time-reversal MUSIC (TR-MUSIC) imaging algorithm with minor modifications on the formation of the steering vectors.

Thanks to the channel reciprocity, the imaging can also be performed at the transmitter side as well. By simply transposing the channel matrix $H(\tau_l)$, one can obtain another set of channel measurements $H^T(\tau_l)$ between the Tx and Rx antennas if the receive antennas were transmitting and the transmit antennas were receiving. Similarly, the corresponding correlation matrix after the joint receiver smoothing (JRS) at $\tau_l$ is obtained as $\tilde{R}_{Rx}(\tau_l) = \frac{1}{N}H^T(\tau_l)H^*(\tau_l),$ where $(\cdot)^*$ denotes the conjugate operation. However, the quality of imaging on the Tx side is a little worse than that on the Rx side. This is because, during the channel sounding, the device first uses a fixed Tx antenna and scans through all the Rx antennas before switching to the next Tx antenna, which makes the phase measurements of different Tx antennas less coherent. In on embodiment, the disclosed system mmEye only utilizes the joint transmitter smoothing technique.

The workflow of the disclosed system mmEye includes: putting the device at a fixed location and performing a background calibration by collecting seconds of measurements, then the system is ready to image humans and objects present in the field of view. A design of a functional system is presented here based on the proposed super-resolution imaging algorithm. One can mainly incorporate two additional components of background and noise cancellation and target detection before the ultimate imaging.

Besides the target of interest, the transmitted signals may also be reflected by the background objects, e.g., furniture, ceiling, grounds, walls, etc. In addition, there are internal signal reflections on the intermediate frequency (IF) cable connectors, as shown in FIG. 41. These undesired reflections from the background together with the internal noise interfere with the signals reflected off the target and thus degrade the imaging the quality. To combat these problems, in the following, a background and noise cancellation (BANC) algorithm is proposed to filter out the background reflections and the internal noise.

Mathematically, the CIR $h_{m,n}$ can be modeled as the sum of the target-related component $h^t_{m,n}$ and the background/internal reflection-related component $h^b_{m,n}$. In one embodiment, to obtain $h^t_{m,n}$, the disclosed system mmEye first collects a bunch of CIRs for the background without the presence of the target to estimate $h^b_{m,n}$, and then obtains $h^t_{m,n}$ by subtracting $h^b_{m,n}$ from the newly measured CIR $h_{m,n}$ with the presence of the target.

Assume that there are $Q$ samples of the CIRs measured without the target. Then, $h^b_{m,n}$ can thus be estimated by the sample mean of the measured background CIRs, i.e., $h^b_{m,n}(\tau_l) \approx \frac{1}{Q}\sum_{q=1}^{Q} h_{m,n}(\tau_l, t_q)$. Due to the automatic gain control (AGC) module on the chip, the amplitude of the CIRs changes from frame to frame. Therefore, it is not feasible to subtract the background CIR directly from the CIR with the target. A scaling factor $\alpha$ is thus applied to scale the obtained background CIR before the cancellation. The clean CIR $h^t_{m,n}$ after the background and noise cancellation can be obtained accordingly as

$$h^t_{m,n}(\tau_l, t) = h_{m,n}(\tau_l, t) - \alpha h^b_{m,n}(\tau_l). \qquad (55)$$

Regarding to the choice of $\alpha$, a minimum mean square error (MMSE) estimator is applied which selects the value of $\alpha$ that minimizes the energy of $h^t_{m,n}(\tau_l, t)$ over the first $L_0$ CIR taps, i.e.,

$$\alpha^* = \arg\min_\alpha \sum_{l=0}^{L_0-1} |h_{m,n}(\tau_l, t) - \alpha h^b_{m,n}(\tau_l)|^2. \qquad (56)$$

The analytical form of optimal solution $\alpha^*$ can be derived correspondingly as

$$\alpha^* = \frac{\sum_{l=0}^{L_0-1} [h^b_{m,n}(\tau_l)]^H h_{m,n}(\tau_l, t)}{\sum_{l=0}^{L_0-1} [h^b_{m,n}(\tau_l)]^H h^b_{m,n}(\tau_l, t)}, \qquad (57)$$

where $x^H$ denotes the Hermitian of $x$. The intuition for only using the first $L_0$ taps to estimate $\alpha$ is that the target being imaged is usually at a certain distance from the device to be observed completely in the specific field of view.

Therefore, the first few taps are not affected by the presence of the target and are only affected by the AGC, leading to a more accurate estimation of the scaling factor. FIG. 42 shows an example of the CIR 4200 after the background and noise cancellation. It can be observed that the impact of the target on the CIR taps has been greatly magnified in terms of amplitude.

One purpose of object detection is to robustly detect all the CIR taps that are affected by the target(s) of interest. Because not all the RF signals reflected off human body parts can be captured by the receive antenna array, the energy of the signals reflected off some parts of the target can be very weak. To increase the "visibility" of the weak reflections, for each propagation delay, one can calculate the variation of the energy distribution of the spatial spectrum $V_t(\tau)$, defined as $V_t(\tau) = \mathrm{Var}_\theta[\mathrm{Var}_\phi[P_t(\theta, \phi, \tau)]]$, where $\mathrm{Var}_\theta[\cdot]$ denotes the variance over parameter $\theta$, $P_t(\theta, \phi, \tau)$ denotes the spatial spectrum for the direction $(\theta, \phi)$ and the propagation delay $\tau$ measured at time slot $t$. A large $V_t(\tau)$ implies that the energy distribution of the reflected signals for that range is highly non-uniform, indicating the presence of a target in that specific range, while for the range where no target presents, the energy of the reflected signals is usually small and uniformly distributed. Then, the set of the range of interest (RoI) at time slot t are formed as $\mathrm{RoI}(t) = \{\tau | V_t(\tau) > \eta, \forall \tau\}$, where $\eta(t)$ is a preset threshold. FIG. 43 illustrates an exemplary detection of RoI 4300, according to some embodiments of the present teaching. To accommodate the time-varying interference and noise, as illustrated in FIG. 43, one can use a multiple of the median value of $V_t(\tau)$ as the threshold for each time slot $t$, i.e., $\eta(t) = \kappa\mathrm{Med}_\tau[V_t(\tau)]$, where $\kappa$ denotes a constant coefficient, and $\mathrm{Med}_\tau[\cdot]$ denotes the median value over $\tau$. The reason one can use the median to determine the threshold is that the median of $V_t(\tau)$ can adaptively capture the variations of the noise level of the board especially when the total number of the taps $L$ is large.

Then, one can search for the points of interest over the spatial spectrum $P(\theta, \phi, \tau)$ within the RoI set. Due to the fact that the millimeter wave cannot penetrate the general object well, e.g., millimeter waves are mostly absorbed within the human skin, only the first significant point of $P(\theta, \phi, \tau)$ w.r.t. $\tau$ contains the information of the target. In one embodiment, the disclosed system mmEye locates the points of interest based on the following rule: given the spatial spectrum for each direction $(\theta, \phi)$, try to find the first local maximum point of $P(\theta, \phi, \tau)$ along $\tau$ within the RoI set that exceeds a preset threshold $\gamma$; if failed, then no point of interest is found for this direction. For each point of interest $(\theta_i^*, \phi_i^*, \tau_i^*)$, the associated weight is the value of the corresponding spatial spectrum, i.e., $P(\theta^*, \phi^*, \tau^*)$.

FIG. 44 shows two examples of the obtained spatial spectrum for different spatial directions. The marked dots, 4410, 4420, in both examples indicate the points of interest (PoI) with weights 5.92 dB and 4.94 dB, respectively. The set of the PoI at time slot $t$ is denoted as $\text{PoI} = \{(\theta_i^*, \phi_i^*, \tau_i^*, P_i^*), i = 1, \cdots, S\}$, where S is the total number of PoI and $P_i^*$ denotes the value of the spatial spectrum corresponding to that point, i.e., $P_i^* \triangleq P(\theta_i^*, \phi_i^*, \tau_i^*)$.

In one embodiment, one can transform the PoI into plain images with depth and weighting information. The disclosed system mmEye may first convert the PoI from the polar coordinates $(\theta_i^*, \phi_i^*, \tau_i^*)$ to Cartesian coordinates $(x_i^*, y_i^*, z_i^*)$ by applying simple geometric transformations. Then, all the PoI are projected to a 2D-plane that is parallel to the $y$-$z$ plane, as shown in FIG. 38, with a certain depth $x_d$, which is defined as the distance between these two planes.

The depth $x_d$ is determined automatically by solving a weighted least absolute deviation problem,

$$x_d^* = \operatorname*{argmin}_{x_d} \sum_{i=1}^{S} (P_i^* - \gamma)(x_d - x_i^*)^2, \tag{58}$$

which minimizes the $\ell_2$-norm of the distances between the PoI and the selected plane, weighted by their importance $(P_i^* - \gamma)$, where $\gamma$ is the same threshold used in the target detection and thus the weights are always positive. The system is designed to preserve the most of information of the PoI round the projected plane. To further remove the outliers within the set of PoI, the disclosed system mmEye only selects the points that are close enough to the projected plane, e.g., $|x_i^* - x_d^*| \leq w$, where $w$ is a preset threshold. Some obtained images of a person showed that the proposed super-resolution algorithm significantly outperforms prior approaches CBF and MVDR and achieves comparable results with Kinect.

One can evaluate the disclosed system mmEye in practical settings using a commodity 802.11ad chipset, and can study the imaging quality for both humans and objects and both LOS and NLOS. One can also compare the disclosed system mmEye with existing beamforming techniques CBF and MVDR.

In one embodiment, one can prototype the disclosed system mmEye and conduct real-world experiments using a Qualcomm 802.11ad chipset. The chipset is equipped with two antenna arrays, both having 32 antennas arranged in a 6×6 topology. During experiments, the device is operating in a radar mode, i.e., the Tx antennas constantly transmit pulses and the Rx antennas receive the reflected signals and estimate the CIR accordingly. In this embodiment, the experiments take place on one floor of a typical office building of size 28 m × 36 m, which is furnished with desks, chairs, computers, and TVs. A typical setup of the system is shown in FIG. 38. Both humans and everyday objects are tested in the experiment. For human imaging, one can recruit 4 volunteers (two males and two females) and test out at different locations and distances with different postures. The experiment can mainly focus on quasi-static scenarios but also test for moving targets. The evaluation includes both single-person case and multiple person case. For static cases, each subject performs 10 to 15 different postures as he/she will and the system can collect about 30s of data for each posture. For object imaging, the system can test with everyday objects, such as fans, heaters, monitors, suitcases, etc., that have various shapes, sizes, and materials.

To evaluate human imaging, one could not obtain ground truth from manual measurements of the target dimensions and shapes. Instead, one can extract images from a Kinect depth sensor by the library provided to serve as ground truth. To detect the target of interest from a Kinect frame, one can simply search for a certain depth and extract all points in that depth. One could perform advanced segmentation by combining the RGB sensor for this purpose. Note that the measurements and target detection on Kinect both contain noises, which do not favor our evaluation. The results by the disclosed system mmEye and Kinect are shifted and interpolated so that their coordinates are aligned with identical point density.

It is not easy to define proper metrics to evaluate the imaging quality, although it is intuitive for a human to tell from the visual results. In addition to qualitative visual comparisons, the present teaching proposes two quantitative metrics. The first metric is Silhouette difference (SD), which is the percentage of XOR difference between the mmEye images (after thresholding) and the Kinect frames, ranging from 0 (no errors) to 1 (completely different). The second metric is boundary key-point precision (BKP), which is the absolute location error for several key points on the target boundary. In one embodiment, one can mainly account for the topmost, leftmost, and rightmost points in the evaluation, which can be automatically detected.

One can first evaluate imaging performance for human targets. One can quantitatively evaluate the precision over all the testing data using the SD and BKP metrics.

FIG. 45 illustrates exemplary system performances 4510, 4520 of human imaging, according to some embodiments of the present teaching. As shown in FIG. 45, the disclosed system mmEye achieves the median of 27.2% for SD 4510 and 7.6cm for BKP 4520 when subjects are about 1m away from the device; while it degrades to the median of 32.3% for SD and 13.5cm for BKP when subjects are about 1.5m away. This is mainly because a larger distance between the target and device leads to a wider beam and a weaker reflected signal, both affecting imaging quality.

FIG. 46 shows the imaging quality of the disclosed system mmEye for different persons w.r.t. SD 4610 and BKP 4620, respectively. The results show consistently accurate imaging for different subjects. The slight variations in performance are due to that the body type and clothing are varying among the subjects, which can affect the strength of the RF signals reflected off the human body.

One can show the super-resolution performance of the disclosed system mmEye by comparing it with existing beamforming techniques, including CBF and MVDR. One can also implement and compare two variations of the disclosed system mmEye, i.e., the disclosed system mmEye with spatial smoothing (SS) and the disclosed system mmEye with joint transmitter smoothing (JTS) to show the considerable benefits of the proposed JTS algorithm. Some visual results of two subjects using different methods showed that the disclosed system mmEye using JTS achieves the best imaging results, while the disclosed system mmEye using SS stands the second-best yet is already much worse than the disclosed system mmEye using JTS. MVDR can see parts of the human body but misses many others, while CBF does not capture body parts but only detects the human body as a whole.

FIG. 47 shows the quantitative results of different approaches, SD 4710 and BKP 4720, according to some embodiments of the present teaching. As for the SD metric 4710, the disclosed system mmEye-JTS achieves the best performance and the disclosed system mmEye-SS comes in the second place. Note that MVDR performs better than other techniques w.r.t. BKP metric, however, it performs poorly when regarding to SD metric. This is because the spatial spectrum estimation of MVDR is more conservative and thus it misses some of the major parts of the human body, which does not necessarily increase errors in BKP (e.g., the topmost point does not change too much). In principle, only good results in both metrics indicate good quality of imaging. In addition, a comparison between the JTS and JRS shows that the quality of the image obtained on Rx array is better than that obtained on the Tx array.

The disclosed system mmEye can also image objects. One can test real objects of different shape, size, curvature, surface, and material. In one embodiment, the objects selected reveal different shapes (cylinder, square, and circle), materials (plastic, wood, and metal), size (from about 20 cm to 100 cm in length). The disclosed system mmEye can accurately image various objects. Specifically, an experiment shows that the disclosed system mmEye achieves a median accuracy of 8.0 cm in shape estimation of the objects. The results show that the disclosed system mmEye achieves consistent performance for both human targets and objects.

The disclosed system mmEye can perform under different scenarios. In one embodiment for multiple person imaging, two imaging examples of two subjects with Kinect overlay as ground truths. Both human figures are well captured, with the heads, feet, arms, and hands confidently recognized in the experiment. The results underpin various applications of the disclosed system mmEye like multi-user gaming and user activity analysis.

Thanks to the joint transmitter smoothing, the disclosed system mmEye can achieve imaging with one single snapshot but does not need successive measurements. Thus it can effectively image targets in motion. One can test both walking and in-place motion and show some visual imaging results where a user is moving arms. Not only does the disclosed system mmEye image the stationary body parts (e.g., the torso, and legs), it also tracks the moving parts (e.g., arms) successfully.

While 60GHz signals typically do not penetrate most obstacles, it is of great interest to examine if the disclosed system mmEye can image a target behind a thin drywall. One can set up a large wood panel supported by a wood stand to emulate a drywall and test the disclosed system mmEye's performance under this setting. To better validate the performance, one can ask the subject to expose partial of the body to the devices (the disclosed system mmEye and Kinect). The results showed that the disclosed system mmEye still captures a human figure behind the "drywall", while the Kinect depth sensor, as a vision-based sensor, is completely occluded by the big wood panel and only sees the exposed parts (i.e., hands in both images). The reason that the disclosed system mmEye can see through the wood panel is that the 60GHz signals can penetrate the panel and reflect off the human body behind it. Albeit the reflected signals are much weaker, the disclosed system mmEye is still able to capture them by the effective BANC algorithm. In one embodiment, one can observe that the performance does degenerate in NLOS case.

FIG. 48 illustrates a flow chart of an exemplary method 4800 for wireless object scanning, according to some embodiments of the present teaching. At operation 4802, a wireless signal is transmitted using multiple antennas towards an object in a venue through a wireless multipath channel of the venue. At operation 4804, the wireless signal is received through the wireless multipath channel with multiple antennas. At operation 4806, a set of channel information (CI) of the channel is obtained based on the received wireless signal. At operation 4808, a component-wise spatial spectrum is computed for each component of the set of CI. At operation 4810, a spatial spectrum comprising one or more component-wise spatial spectrums is estimated.

At operation 4812, a variational measure is computed for each component-wise spatial spectrum. At operation 4814, a set of selected components is determined based on the variational measures. At operation 4816, a range of interest (RoI) associated with the set of selected components is determined. At operation 4818, a feature point of the spatial spectrum is computed for each of a set of spatial directions. At operation 4820, an object distance is searched for in the RoI where a feature point is in a spatial direction. At operation 4822, the object is scanned in each spatial direction where the object distance is found. At operation 4824, an imaging or a visual representation of the object is generated based on the scanning. The order of the operations in FIG. 48 may be changed in various embodiments of the present teaching.

In one embodiment, the disclosed system may be used to passively track and scan multiple users simultaneously using RF signals, e.g. mmWave signals. This system can be used for people counting, people tracking, building automation, perimeter security, workplace safety, etc. A major concern for many potential customers of video-based people counting solutions is privacy. This single concern frequently keeps them from deploying video-based people counting solutions. In contrast, the disclosed system utilizing the 60 GHz frequency can provide the people counting information in a facility to the facility manager without the privacy concerns. The disclosed system can determine whether or not there are people in a room, and a quantity of people in the room, with an imaging or a visual representation showing the quantity of the people but not the identities of the people. This can be important for applications such as management of conferences rooms, smart buildings, hotels, and much more. For example, hotels can implement smart energy efficient smart lighting or temperature control based on room occupancy.

In another example, the disclosed system can determine a trajectory or moving path of a moving object, e.g. a moving person, and show the trajectory with an imaging or a visual representation. This may be applied for tracking players in a maze of an amusement park, for monitoring intruders by security systems of homes, hotels, or for tracking runners of a long-distance race like marathon.

In one embodiment, a Type 1 device with N1 Tx antennas "illuminates" an object (e.g. a person, a pet, a thing, a living thing, a non-living thing) with a wireless probe signal (e.g. 60GHz signal, 3.5GHz bandwidth). The probe signal is modulated by the object (e.g. reflection, refraction, absorption, attenuation, Doppler effect, etc.). A Type 2 device with N2 Rx antennas receives the probe signal and obtains a set (e.g. N1*N2) of CI (e.g. channel state information or CSI, compressed CSI, uncompressed CSI, channel impulse response or CIR, channel frequency response or CFR, RSSI, etc.). Each CI may be associated with a pair of Tx antenna and Rx antenna. A scan (e.g. an image, a video, a depth map, a contour, a gesture recognition, a writing, a painting, a motion, a presence, an action, a material) of the object is computed based on the set of CI.

The wireless probe signal may be a probe request, a probe response, an enquiry, an acknowledgement, a response to the enquiry, a sounding signal, a beacon, a pilot signal, etc. CI may be channel state information (CSI), compressed CSI, non-compressed CSI, RSSI, channel impulse response (CIR), channel frequency response (CFR), magnitude response, phase response, etc. The Type 2 device may comprise the Type 1 device, or vice versa. The Type 2 device may be the Type 1 device.

The Type 1 device may have a first wireless chip/integrated circuit/IC to transmit the wireless signal. The Type 2 device may have a second wireless chip/integrated circuit/IC to receive the wireless signal. The Type 1 device may be the same as the Type 2 device. The first IC may be the second IC. The N1 Tx antenna may comprise the N2 Rx antennas, or vice versa. N1 may be equal to N2. The N1 Tx antennas may be next to the N2 Rx antennas. The N1 Tx antennas may be the N2 Rx antennas. The N1 Tx antennas (or the N2 Rx antennas) may be arranged in a 1-dimensional, 2-dimensional or 3-dimensional configuration and/or lattice. The ID, 2D or 3D lattice may have a regular spacing.

For example, a 1-D/2-D/3-D configuration may have the antennas uniformly spaced, or non-uniformly (e.g. pseudo-randomly, or locally uniform) spaced. For example, a 1-D configuration may have antennas arranged in a straight line (e.g. uniformly spaced or non-uniformly spaced), in multiple straight lines (e.g. outlines of a 2D or 3D shape), and/or in one or more curve in a 2-D space (e.g. a circle, an arc, a triangle, a parallelogram, a pentagon, a hexagon, a polygon, an outline of a shape, a zigzag pattern, a shape-filling line pattern) and/or 3-D space (e.g. a spiral, a curved line on a surface of a 3D object, a space-filling line pattern). For example, a 2-D configuration may have the antennas arranged in one or more rectangular lattice, circular lattice, elliptical lattice, triangular lattice, hexagonal lattice, polygonal lattice, and/or other. A 2-D configuration may have antennas arranged in a manifold, a mesh, or a curved surface (e.g. on a surface or mesh of/around/next to/related to a box, a sphere, an object, a body, a part of a body, and/or another item). For example, the 3D lattice may have 3 orthogonal axes, with characteristic spacing in each of the axis. Some nodes of the 1D, 2D or 3D lattice may be empty (not occupied).

In one embodiment, the N1 Tx antennas may be arranged in a first 2D rectangular array (with characteristics spacing's in x-direction and y-direction). The N2 Rx antennas may be arranged in a second 2D rectangular array. The normal direction (i.e. perpendicular direction) of the first rectangular array may be parallel to the normal direction of the second rectangular array. The first and second rectangular arrays may be coplanar. The Tx antenna array and Rx antenna arrays may be next to each other (e.g. less than 20cm, or 10cm, or 5cm apart). While most locations of an array may be each occupied by, or associate with, one or more antenna, there may be one or more locations of the array not being occupied or associated with any antenna. One of the rectangular arrays may have an "axis" (e.g. a line in normal direction) in the "center" of the array. The "center" may be, or near, the center of gravity of the array. The array may be "aimed" at an object by having the axis close to the object. In other words, the object may enter the array's "monitoring area" by entering an area that the array is "aiming" at. The object may be on the axis. Or, the angle between the "axis" and an imaginary straight line connecting the "center" of the array and the object may be small (e.g. less than 10 degree, or 5 degree, or 1 degree, or another angle). First or second lattice may be a rectangular, or non-rectangular, array. It may be locally rectangular, or triangular, or hexagonal, or circular, or other lattice patterns. It may be a hybrid lattice with two rectangular lattices at an angle to each other.

In one embodiment, an overall algorithm of the mmEye includes the following: (a) preprocessing of CI; (b) spatial spectrum estimation based on CI; (c) object detection based on spatial spectrum; and (d) scanning of object.

In one embodiment, preprocessing comprises at least two steps: (a1) background cancellation and (a2) noise cancellation. The background cancellation may include: (1) collecting background CI from training probe signal(s) when object is absent (not present in venue) and (2) suppressing the effect of background CI on the set of CI. Because the object is absent, the background CI differs from the probe signal only due to the background multipath channel. The training probe signal may be the same as the probe signal.

In one embodiment, a possible way of "suppressing effect" of background CI is disclosed. The combined background CI may be computed by averaging (i.e. mean), weighted averaging (weighted mean), averaging after scaling (similar to weighted averaging), trimmed mean (e.g. by removing "extreme" or "untrustworthy" ones and then averaging), median, etc. Scaling may be used/applied to account for automatic gain control (AGC) module on the chip, or antennas with different gain.

In one embodiment, another possible way of "suppressing effect" of background CI is disclosed. The combined background CI may be computed based on weighted average (e.g. with equal or unequal weights) of the at least one set of background CI, or a subset of it. For example, a trimmed mean may be obtained by not including "extreme" or "untrustworthy" ones in the subset. The weight may be used to scale each background CI to account for AGC (during training, when object is absent) or antennas with different gain. The scaling before subtraction may be used to account for AGC (during scanning of the object).

For spatial spectrum estimation, each component may be associated with an index, a time delay or a distance. For CI being CIR with multiple taps, a tap may be a component. The magnitude (or phase) of a tap, or a function of it, may be a component. For CI being CFR with multiple subcarriers, a subcarrier (or its magnitude, or phase), and/or a function of it, may be a component. The computation may be based on MUSIC algorithm, a MUSIC-like algorithm, and/or another algorithm.

Spatial spectrum estimation may be performed for a particular component based on a combined correlation matrix associated with the particular component. The correlation matrix may be replaced by a covariance matrix. The correlation matrix or covariance may comprise (e.g. may be a function of) a steering matrix. The combined correlation matrix may be a linear combination, an average, a weighted average, and/or another combination of at least one correlation matrix associated with the particular component. For example, the at least one correlation matrix may be a number of 4x4 subarrays from a 6x6 Rx (antenna) array. Or, the at least one correlation matrix may be a number of 6x6 arrays associated with a 6x6 Rx antenna array. Each of the number of 6x6 arrays may be associated with a Tx antenna. There may be only one correlation matrix such that the combined correlation matrix is the correlation matrix.

For each radial direction (azimuth, elevation), a feature point (e.g. first local max) of the spatial spectrum may be found. The radial direction may be with respect to a point of the Rx antenna array or the Tx antenna array. The point may be a center, or a centroid, or one of the Rx/Tx antenna, or another point. The object may be scanned by declaring whether the object is found in that radial direction, and if found, declaring its distance (from a point associated with the receiving antennas, e.g. center of gravity of Rx antenna array). Scanning the object may include: identifying a set of PoI; computing object depth based on depth of all PoI. The object depth may be computed by some optimization (e.g. minimizing weighted square error, or plane fitting).

In a bi-static setup, Type 1 (Tx) and Type 2 (Rx) devices are two different devices placed at two different locations in the venue. In a monostatic setup (Radar-like), Type 1 (Tx) and Type 2 (Rx) devices are collocated (placed at the same location or similar location, e.g. in the same machine/device/housing/mounting/circuit/circuit board/module/chip) in the venue. In one embodiment, the Type 1 (Tx) device and the Type 2 (Rx) device are the same device.

Passive human localization and tracking using radio frequency (RF) signals have been studied for over a decade. Most of the existing solutions, however, can only track a single moving subject due to the coarse multipath resolvability limited by bandwidth and antenna number. In the present teaching, methods are described to breakdown the limitations by leveraging the emerging 60 GHz 802.11ad radios (or some UWB radio). A proposed system, referred to as "mmTrack," is a first system that passively localizes and tracks multiple users simultaneously using a single commodity 802.11ad radio (or some UWB radio). The design of mmTrack may include three key components. First, the system significantly improves the spatial resolution, limited by the small aperture of the compact 60 GHz array, by performing digital beamforming over all receive antennas. Second, a proposed novel multi-target detection approach tackles the near-far-effect and measurement noises. Finally, a robust clustering technique is utilized to accurately recognize multiple targets and estimate the respective locations, from which their individual trajectories are further derived by a continuous tracking algorithm. One can implement mmTrack on commodity 802.11ad devices (or UWB devices) and evaluate it in indoor environments. In one embodiment, experiments demonstrate that mmTrack detects and counts multiple users precisely with an error ≤ 1 person for 97.8% of the time and achieves a respective median location error of 9.9 cm and 19.7 cm for dynamic and static targets.

In one embodiment of the present teaching, a disclosed system breaks down the limitation by leveraging an opportunity in the emerging 60 GHz 802.11ad technology (a.k.a. WiGig). The disclosed system mmTrack is a first system that can achieve multi-person localization and tracking using commodity 60 GHz millimeter wave (mmWave) device. Different from 2.4GHz/5GHz WiFi, 60 GHz radios offer high directionality with large phased arrays in small size and precise time-of-flight measurements thanks to the large bandwidth, circumventing indoor multipaths and underlying competent space and time resolution for precise localization of multiple persons. For example, the commodity device used in the present teaching may have a 32-element array with 3.52GHz bandwidth centered at 60 GHz. By designing mmTrack, one can understand and enable this capability of 60 GHz radios for multi-person localization.

To enable multi-person passive tracking using 60 GHz (or UWB or other frequency), one need to deal with multiple challenges. First, despite of the many antennas, the spatial resolution is limited due to very small aperture of the antenna array. For example, an experimental device has an array size of 1.8 cm × 1.8 cm, and the on-chip analog conventional beamforming only provides an angular resolution of 15 °, which could be inadequate to separate nearby targets. To boost the spatial resolution, instead of using the built-in analog beamforming, mmTrack performs digital beamforming on the received Channel Impulse Response (CIR), which achieves a much higher spatial resolution in distinguishing two close angles compared with conventional beamforming. Specifically, one can employ a non-parametric beamformer, i.e., the Minimum Variance Distortionless Response (MVDR) beamformer, with a direction scan interval of 2° to both azimuth and elevation dimensions, resulting in object detection in each cell of 2° (for azimuth) × 2 ° (for elevation) × 4.26 cm (for range) in space.

Second, due to the high carrier frequency, signals attenuate rapidly over the propagation distance, making it difficult to locate distant targets. The measurement noises further exacerbate the weak reflection signals and complicate the detection in a large coverage. To address this challenge, an adaptive target detection approach is disclosed based on a novel metric independent of the absolute power to find the ranges of interests, which adapts to the diverse responses of targets at different distances.

Third, given the reflections from multiple users and different parts of their bodies, it is non-trivial to sort the occupied cells for location estimates of individuals especially when they are close to each other. Additionally, different from device-based localization that can distinguish users by their device information, it is non-trivial to sort multiple users' locations and recover their trajectories. To overcome these challenges, one can employ the $k$-means clustering and augment it with a set of robust techniques. One can formulate the problem of successive tracking of multiple users as a weighted bipartite graph matching problem, which effectively recovers the trajectories of multiple users even in presence of location errors, missing locations, and dynamic user numbers, etc.

A prototype of mmTrack may be built using COTS 60 GHz 802.11ad device. The device is configured to operate in a radar-like mode: transmitting over one antenna and receiving from all the 32 elements on the receiver that is co-located with the transmitter. Experiments are conducted in indoor space with multiple dynamic/static users. Experimental results show that mmTrack achieves a median location accuracy of 9.9 cm and 90% tile accuracy of 22.5 cm for dynamic targets, and a median location accuracy of 19.7 cm and 90% tile accuracy of 35.6 cm for static targets. In addition, mmTrack detects and counts multiple users precisely, with no error in user number and an error ≤ 1 for 79.0% and 97.8% of the time respectively. The mmTrack takes an important step towards practical multi-person localization and tracking and sheds light on mmWave sensing via 802.11ad radios.

The disclosed mmTrack is the first work that enables multi-person passive localization and tracking by leveraging a COTS 60 GHz mmWave radio with a dual-function radar communication system. The spatial resolution is promoted by digital beamforming based on MVDR and a novel object detection approach is proposed to tackle the near-far-effect and measurement noise. A robust algorithm is disclosed based on $k$-means clustering that can accurately and robustly determine the number of users and estimate their respective locations. As such, a continuous tracking of multiple trajectories can be achieved by a novel algorithm using weighted bipartite graph matching. A prototype is built to evaluate mmTrack and demonstrate that it can localize moving and static users with a median accuracy of 16.24 cm and track the continuous trajectories of multiple users simultaneously.

In one embodiment, mmTrack is a wireless system that can accurately localize and track multiple users by using purely the reflections of RF signals off the users' bodies. Different from many existing works, it can localize multiple static users with a single radio.

The mmTrack may be built upon commodity off-the-shelf 60 GHz chipsets. The 60 GHz WiFi technology, with established IEEE 802.11ad/ay standards, is becoming the mainstream in wireless devices to enable high rate networking and rich user experience. Different from the 2.4GHz and 5GHz WiFi that typically has only 2 to 3 antennas and 20MHz/40MHz/80MHz bandwidths, 60 GHz WiFi radios (or UWB radios), by design, can offer large phased antenna arrays in compact forms and large bandwidths centered at a high frequency band. Specifically, the mmTrack may use a 802.11ad chipset to operate at 60 GHz center frequency and 3.52GHz bandwidth. It can use commercial 802.11ad chipsets with a standard 6×6 antenna array (32 elements in total) for both transmitter and receiver in a small form factor of 1.8 cm×1.8 cm, allowing it to be mounted on a single, compact device. The device is a full-duplex chip, which allows radar-like operation of simultaneous transmitting and receiving. The transmitter transmits pulses of a known sequence, which, after reflection on a target, is received and correlated on the receiver side to estimate CIR. Thanks to the large bandwidth, the 60 GHz radio provides a range resolution of 4.26 cm, while the on-chip beamforming offers a 3 dB beamwidth of 15 °.

However, enabling multi-person localization using 60 GHz signals entails several challenges, including limited spatial resolution due to very small aperture of the compact antenna array, fast attenuation due to the high carrier frequency, measurement noises that not only blur target locations but also produce ghosts, and inter-person interference.

FIG. 49 illustrates an exemplary system 4900 for wireless object tracking, according to some embodiments of the present teaching. As illustrated in FIG. 49, mmTrack tackles these challenges by four main components: 1) a digital beamforming unit 4910 that achieves much narrower beamwidth than the on-chip beamforming; 2) an object detection unit 4920 that adaptively detects the presence of objects at various distances; 3) a target clustering unit 4930 that identifies the number of targets along with their respective locations; and 4) a continuous tracking unit 4940 that resolves individual's successive trajectories.

In one embodiment, for object detection based one digital beamforming and CIR 4905 on 60 GHz radio, the mmTrack may use one element of the transmit antenna array to continuously transmit the beacon signals with a constant rate $F_s$. The CIR measured by the $m$-th antenna $h_m(\tau)$ can be expressed as

$$h_m(\tau) = \sum_{l=0}^{L-1} a_{m,l}\delta(\tau - \tau_l), \qquad (59)$$

where $L$ is the number of the CIR taps, $\delta(\cdot)$ is the Delta function, and $a_{m,l}$ and $\tau_l$ denote the complex amplitude and the propagation delay of the $l$-th tap, respectively.

FIG. 50 illustrates an exemplary measured channel impulse response (CIR) 5000, according to some embodiments of the present teaching, where $\tau_0$ and $\Delta\tau$ represent the propagation delay of the first received path and the time resolution of the CIR, respectively. The time resolution of the measured CIR, e.g., $\Delta\tau$ in FIG. 50, is determined by the bandwidth $B$ of the transmitted signal, i.e., $\Delta\tau = 1/B$. At each time slot, mmTrack captures $M \times L$ complex values, i.e., $h_m(\tau_l)$ where $m = 1,\cdots,M$ and $l = 0,\cdots,L - 1$, and the location information of multiple persons can be inferred from these measurements. To facilitate the notations in the following, one can define the vector $\mathbf{h}(\tau_l) = [h_1(\tau_l),\cdots, h_M(\tau_l)]^T$ to record the complex channel gains of all the receive antennas at a propagation delay $\tau_l$.

In one embodiment, the COTS device used reports CIR with up to 256 taps. An example of a real CIR measurement with the first 64 taps has been shown in FIG. 50. Due to the unsynchronized transmitter and receiver, the CIR exploited in previous works is imprecise, and not accurate enough for computing the range. The mmTrack is the first to extract precise CIR via a radar-like operation implemented on a 60 GHz networking device.

For each propagation delay $\tau_l$, assuming that there are $N(\tau_l)$ reflected signals impinging on the receive antenna array with different azimuths $\phi$ and elevations $\theta$, as shown in FIG. 51. FIG. 51 illustrates an exemplary coordinate system 5100, according to some embodiments of the present teaching, where $\theta$ and $\phi$ denote the elevation and azimuth respectively, and $r$ denotes the distance between the reflector and the device. To simplify the notations in the following, the dependence on $\tau_l$ is omitted if not mentioned. Then, the CIR can be formulated as

$$\mathbf{h} = [\mathbf{s}_1(\theta_1, \phi_1), \quad \cdots, \quad \mathbf{s}_N(\theta_N, \phi_N)]\begin{bmatrix}x_1\\\vdots\\x_N\end{bmatrix} + \begin{bmatrix}n_1\\\vdots\\n_N\end{bmatrix}, \qquad (60)$$

where $s_i(\theta_i, \phi_i)$ denotes the steering vector pointing to $(\theta_i, \phi_i)$ corresponding to the direction of the i-th reflected signal, i.e., the normalized phase response of the antenna array for a signal coming from the direction $(\theta_i, \phi_i)$, $x_i$ denotes the complex amplitude of that signal and $n_i$ stands for additive thermal noise.

The more concise matrix representation can be written accordingly as

$$\mathbf{h} = S\mathbf{x} + \mathbf{n}. \qquad (61)$$

The reflected signals from different directions can be distinguished by combing the channel gains of receive antennas linearly with different weights **w**, which is also known as beamforming techniques.

In the present teaching, a non-parametric beamformer, Minimum Variance Distortionless Response (MVDR) beamformer (a.k.a. the Capon beamformer), may be utilized due to its high spatial resolution compared with the conventional beamformer. This is because MVDR beamformer minimizes the power of interference and noise from other angles while ensures the distortionless response towards the looking direction. In addition, the reason a non-parametric beamformer is preferred is that no prior assumptions about the structure of the reflected signals are required. The MVDR beamformer for direction $(\theta, \phi)$ can be defined as

$$\mathbf{w}(\theta, \phi) = \frac{R_{\mathbf{h}}^{-1} \mathbf{s}(\theta, \phi)}{\mathbf{s}^H(\theta, \phi) R_{\mathbf{h}}^{-1} \mathbf{s}(\theta, \phi)}, \qquad (62)$$

where $R_{\mathbf{h}}$ denotes the correlation matrix of **h**, i.e., $R_{\mathbf{h}} = \mathbb{E}[\mathbf{h}\mathbf{h}^H]$.

Then, the spatial spectrum obtained by MVDR beamformer for each direction $(\theta, \phi)$ can be written as

$$P(\theta, \phi) = \mathbb{E}[|\mathbf{w}^H(\theta, \phi)\mathbf{h}|^2] = \frac{1}{\mathbf{s}^H(\theta, \phi) R_{\mathbf{h}}^{-1} \mathbf{s}(\theta, \phi)}. \qquad (63)$$

Eqn. (63) builds a link between the measured CIR and the distribution of the energy of the reflected signals w.r.t. the receive antenna array in the space. While in principle $P(\theta, \phi)$ is independent of the transmit antenna, in practice it is observed that different transmit antenna produces similar quality of the estimation. Therefore, in one embodiment, the mmTrack only selects a single antenna from the transmit antenna array to reduce the complexity of mmTrack.

In practice, $R_{\mathbf{h}}$ at time slot $t$ is estimated by the sample correlation:

$$R_{\mathbf{h}}[t] = \frac{1}{W} \sum_{i=0}^{W-1} \mathbf{h}[t-i]\mathbf{h}^H[t-i], \qquad (64)$$

where $W$ denotes the window length. The choice of the window length $W$ depends on the desirable tradeoff between the precision and responsiveness of mmTrack.

In the following, $P_t(\theta, \phi, \tau)$ is used to denote the spatial spectrum at time slot $t$, propagation delay $\tau$, and direction $(\theta, \phi)$. In practice, $\theta$ and $\phi$ are quantized with a resolution of 2° to reduce the computational complexity of computing the spatial spectrum, while theoretically the sector can be arbitrarily narrow.

Different from traditional Radar systems, whose main purpose is to detect the locations of the point targets far away from the system, the mmTrack aims to detect multiple targets close to the device and extract the 3D information, i.e., the azimuth, elevation, and range of every reflection point of a human body that implies the location and even the body silhouette. There are two major challenges for multi-target detection.

The first challenge is about noise and interference. Due to the thermal noise and hardware internal interferences, there are spurious spikes in the obtained spatial spectrum which may cause false detection of targets.

The second challenge is about near-far-effect. It is hard to detect a distant target in the presence of a nearby target mainly due to two reasons: 1) the blockage by the nearby target, and 2) the imbalance between the energy of the EM waves reflected off the nearby target and that off the distant target.

In the following, measurements on the near-far-effect are presented, and two key elements are introduced in the target detection module of mmTrack that overcome the above challenges: range finding and 3D information extraction.

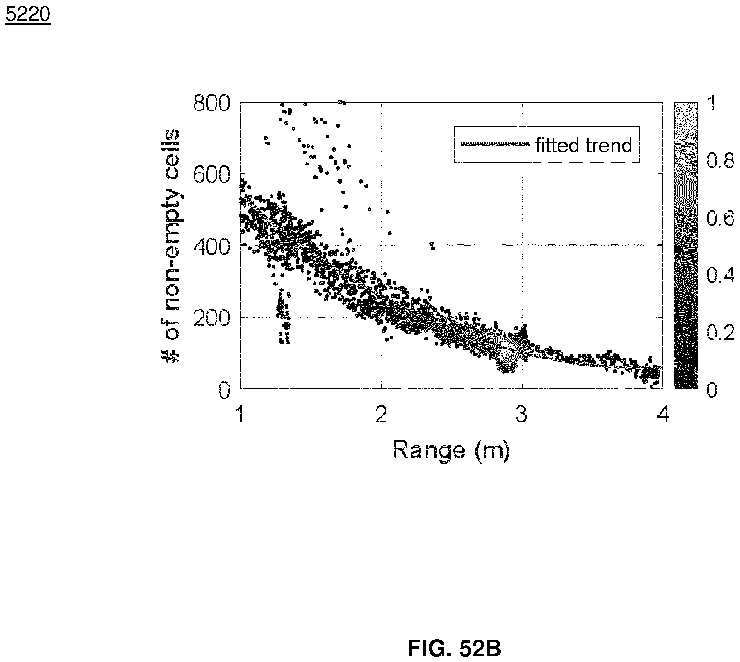

In one embodiment, one can empirically analyze the two issues by about 6,000 real measurements of targets present at different locations. FIGs. 52A-52C illustrate measurement results of the near-far effect and the effects of weighted resampling, according to some embodiments of the present teaching. FIG. 52A shows the power of the reflected signals 5210 with respect to the target ranges, which implies that 1) the received power decreases over distances, and 2) the received power varies at the same distance due to various factors such as their relative locations and orientations to the device, the surface conditions, and noise and interference, etc. Further in FIG. 52B, varying numbers of reflection points 5220 are depicted with respect to the ranges. As shown in FIG. 52B, the number of non-empty directions rapidly drops when the distance increases. This is because the target (human body) becomes relatively "smaller" from the viewpoint of the device at larger distances and thus occupies fewer sectors, while filling in more sectors at closer locations. In addition, the direction of some reflecting signals might not be in the field of view of the device or be too weak to be received for distant targets. The above analysis is environment independent since there are few multipaths for 60 GHz signals.

The purpose of range finding is to robustly detect far targets even in the presence of close-by targets. Compared with the near targets, the energy of the signals reflected off the far targets is usually very weak. To increase the "visibility" of the far targets, for each specific range (or propagation delay), one can calculate the variation of the energy distribution of the spatial spectrum $V_t(\tau)$, which is defined as $V_t(\tau) = \text{Var}_\theta[\text{Var}_\phi[P_t(\theta,\phi,\tau)]]$, where $\text{Var}_\theta[\cdot]$ denotes the variance over parameter $\theta$. A large $V_t(\tau)$ implies that the energy distribution of the reflected signals for that range is highly non-uniform, indicating the presence of a target in that specific range. For the range where no target presents, the energy of the reflected signals is usually small and uniformly distributed, as illustrated in FIG. 53. FIG. 53 illustrates an exemplary metric 5300 for detection of range of interest (RoI), where two subjects stand still in front of a device, according to some embodiments of the present teaching.

Then, the set of the range of interest (RoI) at time slot $t$ are formed as $\text{RoI}(t) = \{\tau | V_t(\tau) > \eta, \forall \tau\}$, where $\eta$ is a preset threshold. To accommodate the time-varying interference and noise, one can use a multiple of the median value of $V_t(\tau)$ as the threshold for each time slot $t$, i.e., $\eta(t) = \alpha\text{Med}_\tau[V_t(\tau)]$, where $\alpha$ denotes a constant coefficient, and $\text{Med}_\tau[\cdot]$ denotes the median value over $\tau$. The reason one can use the median as the threshold is that in practice, the targets are usually sparsely distributed in the monitoring area, which results in the sparsity of $V_t(\tau)$ in $\tau$.

Due to the fact that not all the RF signals reflected off human body parts can be captured by the receive antenna array, the RoI for a specific target could be discontinuous. FIG. 54 shows an example of the detected RoI 5400 using the same data as FIG. 53. Ideally, the RoI for this example should include two subsets of continuous ranges corresponding to the two subjects. Due to the non-uniform reflection of the RF signals, however, four subsets are detected. Some points of the targets could thus be lost due to the incomplete RoI detection, i.e., some parts of the target can be missing. To solve this issue, a completion algorithm is applied to the raw RoI, which combines any two neighboring subsets of continuous ranges as long as their minimum distance is smaller than a threshold $\gamma(\tau)$, as shown in FIG. 54, wherein missing ranges are included to complete full and continuous RoIs. The threshold $\gamma(\tau)$ is dependent on the range of the target since the target closer to the device occupies a larger span of the range. By doing so, the targets are separated in terms of their distances to the device and each subset of the RoI should correspond to at least one target.

In one embodiment, to perform a 3D information extraction, for each subset of RoI, mmTrack searches all the possible directions within its field of view to detect the presence of targets. Here a specific range along a certain direction is also termed as a cell in the space. Specifically, FIG. 55 shows the spatial spectrum 5500 w.r.t. $\tau$ for a certain direction ($\theta = 0°$, $\phi = 28°$), in which only one subject presents in the range of Subset 1. Based on the noise level of the device, an empirical threshold $\beta = -31$dB is applied to differentiate the signals from the noise. That is, if the value of the spatial spectrum at some range is larger than $\beta$, then a target is likely to occupy that cell, resulting in a detected point. To reduce the redundancy of the detected points, for each direction, mmTrack only takes the maximum value as the representative point for each subset of RoI. This is also due to the fact that the millimeter wave cannot penetrate human body and most of its energy is reflected and absorbed by the surface of human body. As illustrated in FIG. 55, mmTrack detects the presence of a target within the Subset 1 of the RoI, denoted as a dot 5510, while no targets are detected within the Subset 2 for this specific direction. To improve the accuracy of the range estimation for each detected point, a simple fractional 1-D interpolation is applied to range dimension ($\tau$) using two adjacent samples of the peak. FIG. 56 illustrates an example of the object detection results 5600 for a two-person or two-object case, where two objects are located at (x=1m, y=1m) and (x=3m, y=0m) respectively. The 3D information of the two subjects extracted from the spatial spectrum has been transformed from the form ($\theta,\phi,r$) to 3D locations ($x,y,z$) in Euclidean space with the device's location as origin. Due to the high spatial resolution, the proposed object detection almost recovers the complete human figures (when they are physically separate). One can leave this potential in imaging as a promising future direction and focus on multi-person tracking in the present teaching.

In one embodiment, the mmTrack system can mainly employ k-means clustering, an unsupervised clustering technique, to identify individual targets. The inputs are the outputs of the object detection module, i.e., a set of points $O = \{o_i, i = 1,\cdots,K\}$, where $o_i = (x_i, y_i, z_i, w_i)$ denotes a reflection point at location $(x_i, y_i, z_i)$ with reflection amplitude $w_i$, and $K$ is the total number of detect points for the current frame. The goal here is to identify the number of targets and the corresponding locations. However, directly feeding $O$ for clustering does not yield satisfactory results. Therefore, one can apply a pipeline of techniques to enhance the target clustering.

One can first resample the inputs by eliminating the insignificant points (usually on the boundary of a target or at random locations due to measurement noise) according to their weights $w_i$. The insight lies in that different parts of the human body reflect signals differently even at the same distance. For example, typically the center torso reflects more energy than the limbs, resulting in larger amplitudes in the reflection signals. The resampling, however, needs to be carefully performed since reflection power decreases considerably over distances, as shown in FIG. 52A.

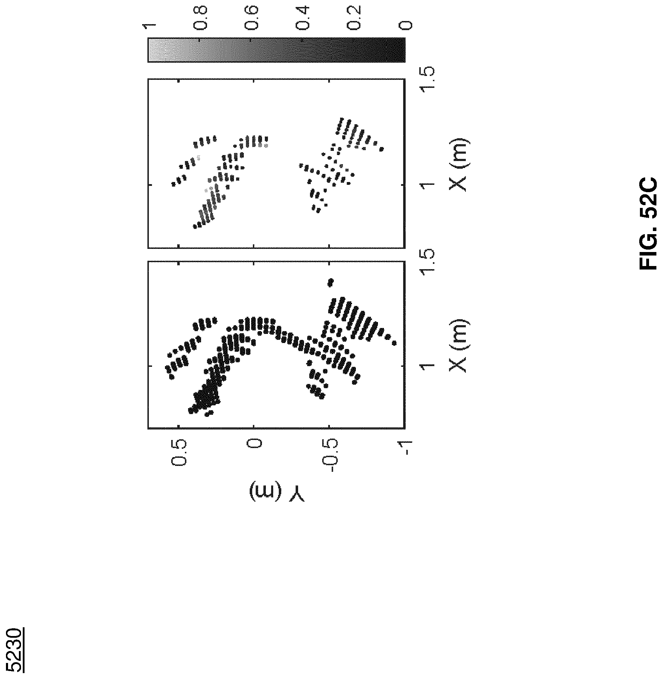

In one embodiment, a point $o_i$ is removed if its weight $w_i < w_0$, where $w_0$ is a dynamic threshold. For closer targets that reflect signals over more cells with larger powers, one can have room for higher thresholds. For distant targets, one may only afford the removal of very few points with small thresholds. Thus $w_0$ is defined as a linear function of the range $r$, following the linear trend of the power distribution in dB shown in FIG. 52A. FIG. 52C shows an example of the effects of weighted resampling 5230.

A key to k-means clustering is to determine the number of clusters $k$, i.e., the number of targets in mmTrack.

One can adopt silhouette analysis for this purpose. The silhouette value is a visual measure that characterizes how similar a point is to its own cluster compared to the separation distances to neighboring clusters. Formally, the silhouette value of the $i$th point may be defined as

$$s_i = \frac{b_i - a_i}{\max\{a_i, b_i\}}, \tag{65}$$

where $\alpha_i$ is the average distance from the $i$th point to the other points in the same cluster, and $b_i$ is the minimum average distance from the point to points in a different cluster. In the case of a cluster with size 1, $s_i$ is defined as 0. The measure ranges from -1 to +1, with higher values indicating the point is far away from the neighboring clusters. Then the average of $s_i$ over all data points is used to evaluate how appropriately the data have been clustered. One can try $k$ in a proper range and select the value that produces the highest average silhouette value $\bar{s}(k)$.

Considering that the number of targets will not fluctuate within consecutive frames, one can apply temporal constraints to further improve the robustness of $k$ selection. Specifically, one can attenuate $\bar{s}(k)$ for time moment $t$ if $k$ is not consistent with the majority of the target number within the past several estimates:

$$\bar{s}'(k) = \begin{cases} \kappa \cdot \bar{s}(k), & \text{if} k \neq k' \\ \bar{s}(k), & \text{otherwise} \end{cases} \tag{66}$$

where $\kappa$ is an penalty factor smaller than 1 and $k'$ is the majority of the number of clusters over a short window of about one second (10 frames). Then the number of clusters is selected as $k^a = arg\ max_k \bar{s}'(k)$.

Since the silhouette value is not suitable for a single cluster (i.e., $k = 1$), one can build an examiner to determine in prior if there tends to be a single cluster. The disclosed algorithm starts from the global centroid of all the points $0$, and iteratively expands to all neighboring points that satisfy a density larger than $p$, the minimum number of points within a neighboring circle of radius $\varepsilon$. When the procedure terminates, one can calculate the area enclosed by the points included in the x-y plane. If the area is sufficiently small, the algorithm will determine the data as one cluster for a single target and will thus skip k-means clustering. In a special case that no point is found, there should be multiple clusters since the data points are separate and thus there are no dense points around the global centroid. The algorithm only involves the $x$ and $y$ locations, without the $z$ dimension. The idea of examining the single target case is inspired by the density-based spatial clustering of applications with noise (DBSCAN) algorithm. However, one may not directly use DBSCAN algorithm for clustering because the data density varies too much over different targets due to the near-far-effect (as shown in FIG. 52B). FIG. 57A shows an example of single cluster detection 5710, according to some embodiments of the present teaching.

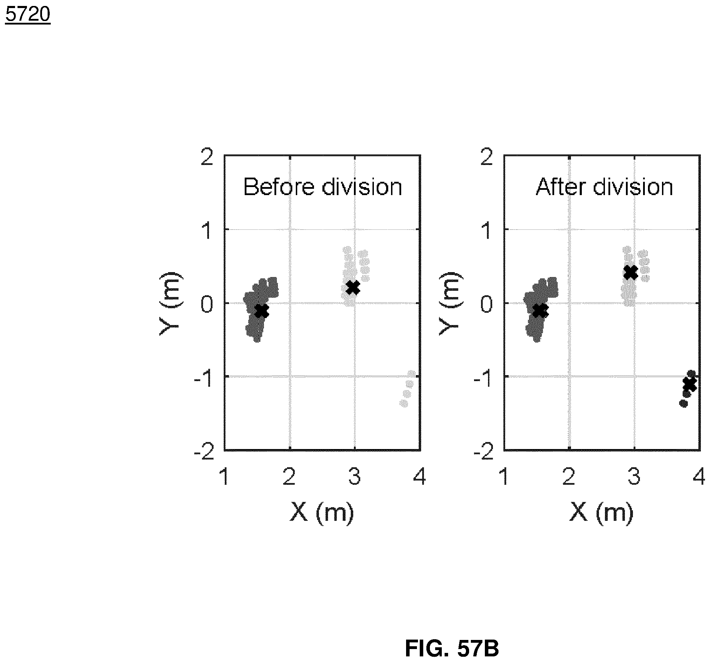

The k-means algorithm, however, might result in error clusters. There are two types of typical errors: 1) the points of two targets are falsely merged as one cluster, or 2) the points of one single target are wrongly divided into multiple clusters. To improve the robustness, one can additionally perform post validation techniques by leveraging the geometric properties of the detected target points. One can first compute the medoid of each cluster by k-means. Then one can calculate two distances in the 2D plane: the intra-cluster medoid distance, i.e., the distance of every point within the same cluster to its medoid; and inter-cluster medoid distance, i.e., the distance between the medoids of two clusters. To correct the first type of error, one can examine the number of points whose intra-cluster medoid distance exceeds a pre-defined maximum value representing the maximum of typical human size in the top view. If the selected points form a considerable portion of the cluster, they are then sorted out as a new cluster. FIG. 57B illustrates an example of the partition operation 5720. It is preferred to use medoid here, rather than the more commonly used centroid. The centroid, as the geometric center, would be largely biased by the wrongly included points and thus its distance to all points would be averagely smaller. Differently, medoid will always be constrained within one of the true clusters, rendering larger distance to the points in the other true cluster.

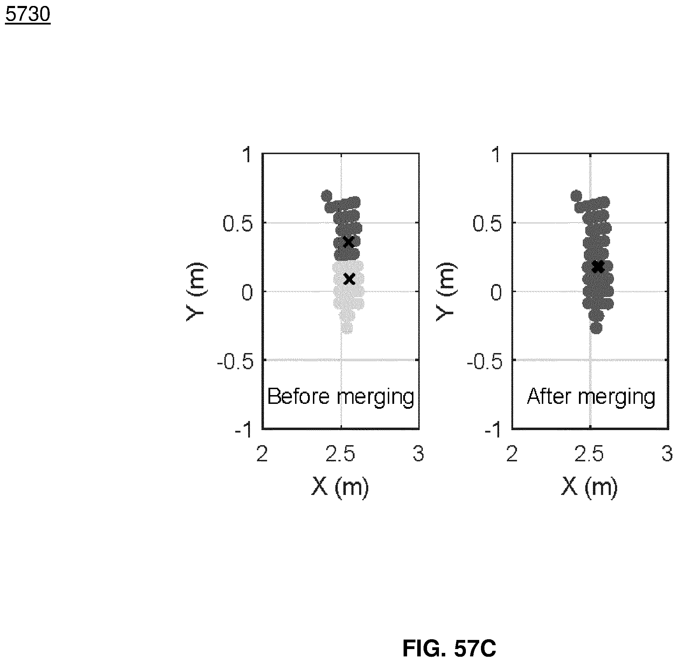

In the second case, usually, the resulted clusters are extremely close to each other since the points are from the same target. One can therefore examine the inter-cluster medoid distance and merge those close clusters as one, as the cluster merging 5730 shown in FIG. 57C.

Although a few hyper-parameters are used in the above robust clustering, these parameters are environment independent and generally applicable since they are mostly related to the physical properties of human bodies.

When one obtains the clustering results, a target's location may be intuitively estimated as the geometric medoid of all the points belonging to the corresponding cluster. Since one can have 3D coordinates for each data point, the target's height information is also available as the maximum height of all points within the cluster.

A continuous tracking and counting may be performed after achieving passive localization of multiple persons or objects. Given a snapshot at a specific time, the mmTrack can output the number of persons and their respective location estimates. However, to continuously track the trajectories of multiple targets still entails challenges. First, due to the line-of-sight (LOS) limitation of the 60 GHz signals, one person could be completely blocked by the other during free movements, making the hidden person invisible to the device. Miss detection might also happen even when there is a clear LOS view. Second, there are false alarms due to measurement noises. Third, the clustering algorithms may output a wrong number of targets and thus erroneous location estimates. As shown below, one can overcome the challenges by solving the continuous tracking problem via weighted bipartite graph matching.

Assume that there are $q$ trajectories, in each of which the last location appears at $(x_i, y_i)$ at time $t_i$ (denoted as $u_i = (t_i, x_i, y_i)$, $i = 1, 2, \cdots, q$). Denote the latest estimates of $k$ targets at time $t$ as $v_j = (t, x_j, y_j)$, $j = 1, 2, \cdots, k$. The goal of the continuous tracking problem is to associate each of the latest estimates to an existing trajectory or a newly created one. A straightforward solution is to splice each new estimate to the closest trajectory. Such a greedy solution, however, could lead to frequent mismatches. Instead, one can attempt to find the optimal association by minimizing the sum of the distances for all the $k$ targets.

One can model this task as a weighted bipartite graph matching problem. FIG. 58 illustrates exemplary weighted bipartite graph matchings 5800, according to some embodiments of the present teaching. As shown in FIG. 58(a), one can maintain the last location of every target that already present as a vertex in the left subset $U$ of the bipartite graph. Here one may only consider targets that recently appear. In other words, targets that have disappeared for a certain time are considered leaving and the corresponding trajectories are simply terminated. The other subset $V$ on the right side contains the latest $k$ location estimates as vertexes. Then one can add an undirected edge $(u, v)$ for every pair of vertexes $u \in U$ and $v \in V$. Each edge gets a weight defined as the Euclidean distance $d_{u,v}$ between the locations of $u$ and $v$. Then by finding a perfect matching of the constructed graph, in which every vertex in each subset is incident to exactly one edge of the matching, one can obtain an optimal solution that associates the newly arrived estimates to existing trajectories. Finding a perfect matching for a weighted bipartite graph is a classical problem in graph theory and can be solved by the Kuhn and Munkres (KM) algorithm.

A perfect matching is only possible for a bipartite graph with an equal number of vertexes in each partition. In practice, however, targets may come and go, making the vertex number in each subset varying over time. To overcome this issue and ensure a perfect matching exists, one can employ virtual vertexes for the smaller subset. Specifically, in case an existing target leaves or is missing as shown in FIG. 58(b), where there are fewer vertexes in the latest estimates, one can add fake vertexes to $V$ as inexistent targets. Similarly in FIG. 58(c), when a new target presents and there are fewer vertexes in $U$, one can insert a virtual vertex. For both cases, one can assign an identical weight of $d_0$ to all edges associating with the virtual vertexes. By doing so, one can form a bipartite graph that has a definite perfect matching. For the case in FIG. 58(b), the matching corresponding to the virtual vertexes is simply ignored. While for FIG. 58(c), a new trajectory is initiated for every virtual vertex and the corresponding location in the latest estimates becomes the starting location of the trajectory.

The proposed algorithm does not assume a fixed number of targets. Neither does it need prior knowledge of how many persons there are. By successively appending the upcoming estimates to existing or newly created trajectories, one can track the continuous locations of individual targets and certainly count the number of persons. Finally, one can perform spline smoothing on the trajectories for post-processing.

In one embodiment, one may prototype mmTrack and conduct real-world experiments using Qualcomm 802.11ad chipset. In one embodiment, the chipset is equipped with two antenna arrays, both of which have 32 antennas arranged in a $6 \times 6$ topology. One can configure one transmit antenna to transmit pulses of known sequence and receive signals from all of the 32 receiving elements. The experimental area is roughly a sector of 110 ° with a radius of about 5 meters, which is sufficient to cover typical rooms.

One can carry out experiments on one floor of a typical office building, which is furnished with desks, chairs, computers, and TVs, by recruiting 5 volunteers aging from 22 to 57 for testing. The evaluation includes two scenarios: a static case where users are standing or sitting still at specific locations, and a dynamic case where users are walking simultaneously. For each case, one can test different locations and traces for different numbers of users. The location error is calculated with respect to the ground truth traces marked in prior. Since one cannot obtain the true user labels of each estimate, one may project the estimate to the closest true target to compute location errors.

FIG. 59A illustrates the overall tracking accuracy 5910 of mmTrack in dynamic and static scenarios, respectively. For each scenario, different traces from one or multiple users are integrated to derive the result. As shown in FIG. 59A, in contrast to many of the existing works that can only track moving persons, mmTrack achieves high accuracy in both static and dynamic scenarios, with a respective median accuracy of 9.9 cm and 19.7 cm, and a respective 90% accuracy of 22.5 cm and 35.6 cm. The accuracy for dynamic targets is higher than static users because dynamic users enjoy time diversity, which is in favor of a better estimation of the correlation matrix $R_h$ and thus improves localization.

The location error is calculated on a 2D X-Y coordinate base. One can also evaluate the accuracy in height estimation. As shown in FIG. 59B, mmTrack estimates the target heights 5920 with a median accuracy of 11.49 cm and a 90% accuracy of 22.82 cm. In the evaluation, one can calculate the maximum height of a target from the ground.

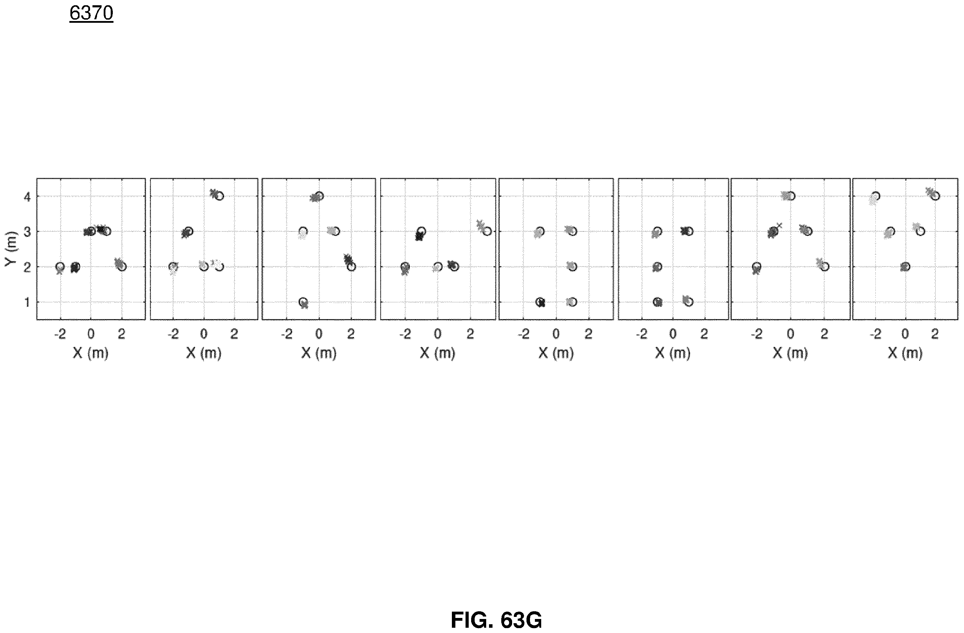

One can evaluate the accuracy of people counting to examine how accurately mmTrack can detect the number of targets. The results are obtained based on over 18K snapshots of dynamic and static targets. As shown in FIG. 60, mmTrack estimates the user number 6000 accurately when there are fewer than three users. However, when more people present simultaneously, the accuracy may decrease due to inter-person blockage and co-located targets. Overall, mmTrack detects the number of targets without error and with error ≤ 1 for 79.0% and 97.8% of the time respectively. A target can always be detected by mmTrack as long as he/she is sufficiently separate from and not blocked by other users. As shown in FIG. 63G, mmTrack counts and locates 5 users at different locations accurately. The results, however, show that mmTrack barely overestimates but frequently underestimates the number of users. The main reasons are two-fold: mutual shadowing among users and the dominant specular reflection of mmWave, both causing missing body parts or even missing targets.

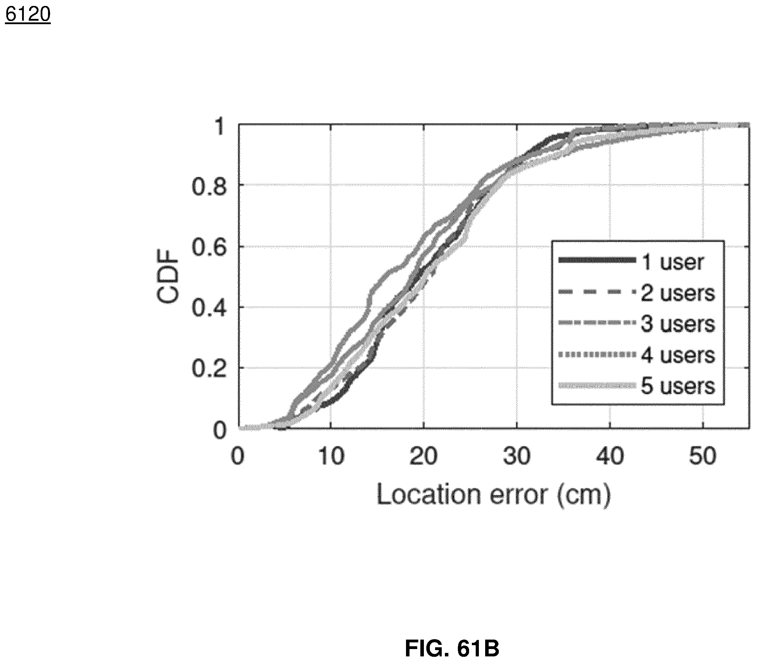

One can also evaluate the performance of multi-person localization concerning the number of users. As demonstrated in FIG. 61A and FIG. 61B, mmTrack achieves consistently high location accuracy in both dynamic and static cases 6110, 6120 for multiple targets. Referring back to FIG. 60, one can conclude that more users will lead to more miss detection, but do not affect much the location accuracy. Once a target is detected, mmTrack can estimate the location at remarkable accuracy.

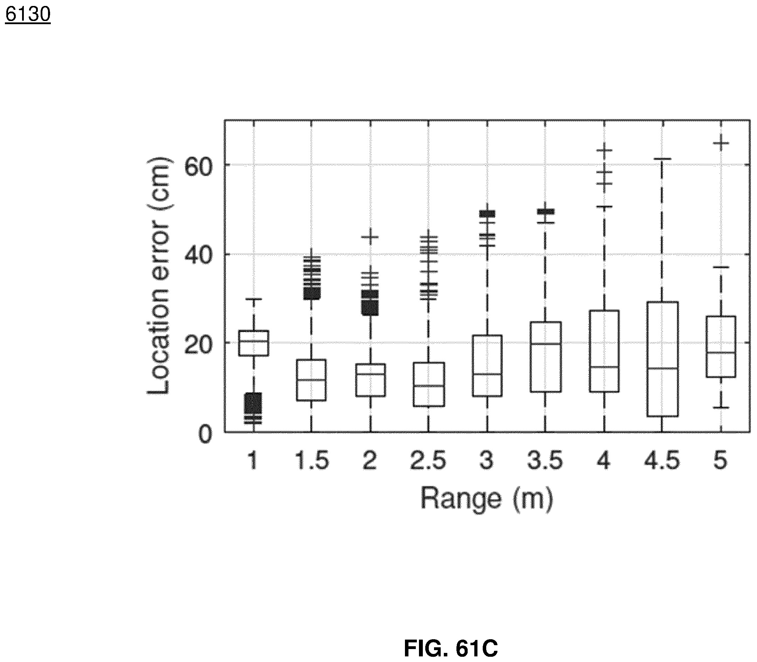

The performance of mmTrack may vary over the distance from the target to the device. As depicted in FIG. 61C where shows impact of range 6130, larger errors occur at larger distances although the median accuracy does not degrade, rendering increased variance of errors. For example, the 90% error touches about 60 cm at the range of 4 m, which is twice lower at 1 m. This is as expected since the reflection signals become weaker and reflection body parts become smaller at larger ranges.

One can examine the gains of the proposed techniques for robust clustering. As depicted in FIG. 62B, without robust clustering, the target counting performance 6220 deteriorates considerably. These counting errors, however, do not necessarily lead to location errors 6210, as shown in FIG. 62A. The reason lies in the use of medoid for target location estimation. The medoid of a mistaken cluster still belongs to one of the true targets and thus endures small location error.

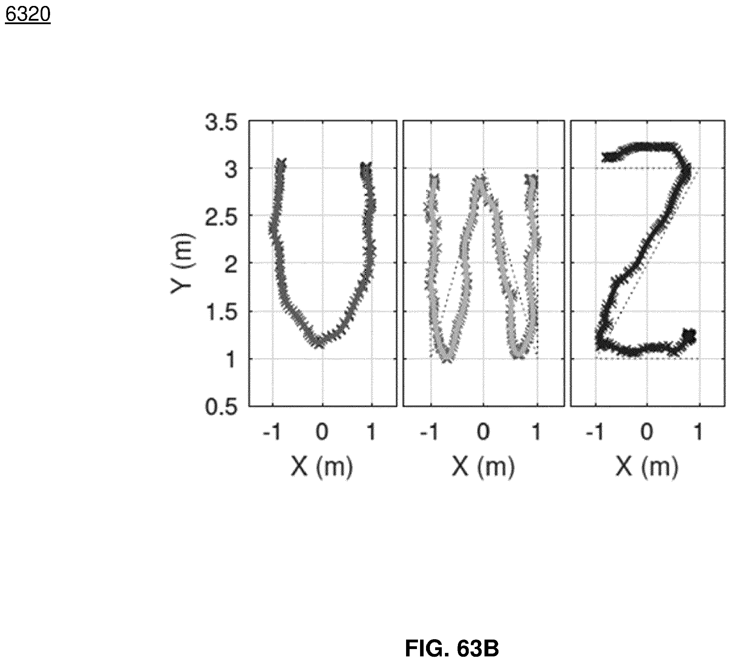

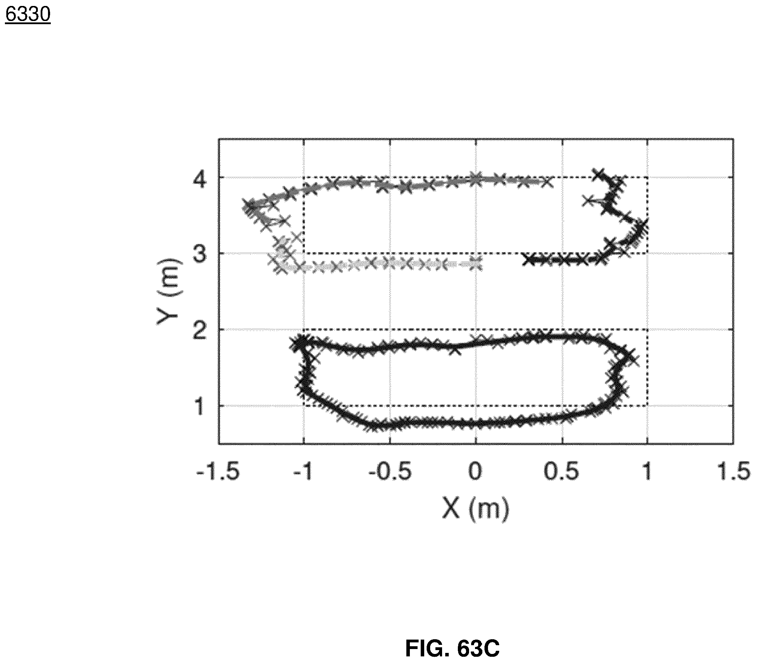

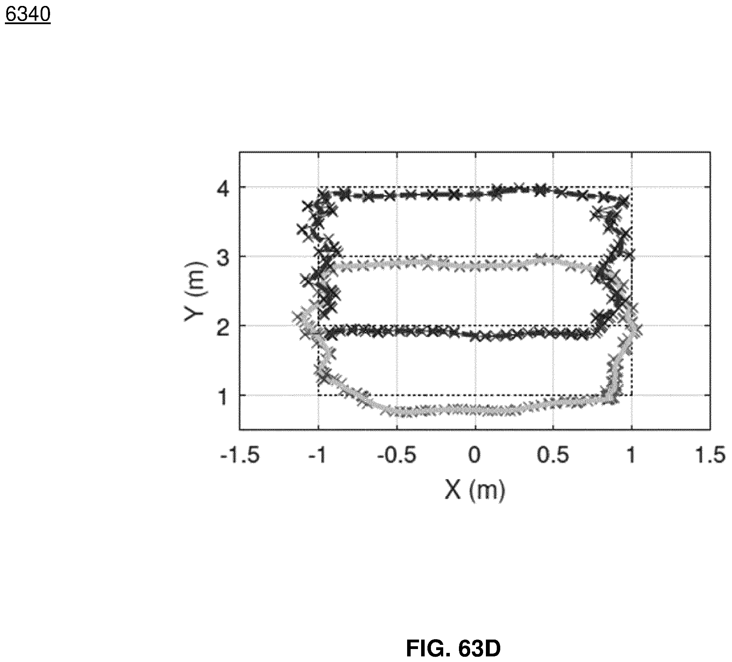

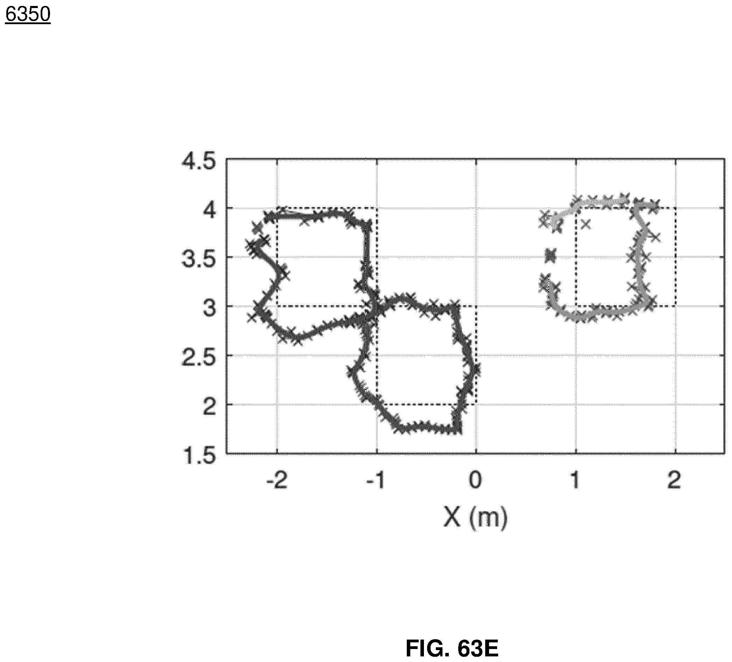

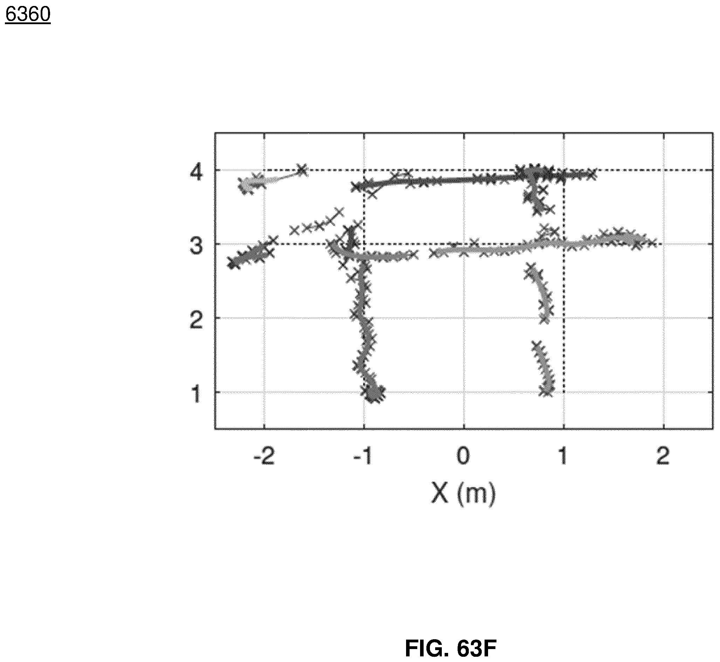

One can evaluate the accuracy of localization and tracking, with some illustrated examples of successive tracking trace in FIG. 63. FIGs. 63A-63G illustrate exemplary wireless tracking results, according to some embodiments of the present teaching, where raw estimates are marked with "x" and the smoothed traces are portrayed on top of them. Ground truths are marked in dashed lines. FIG. 63A and FIG. 63B show traces 6310, 6320 in character shape for a single user. FIG. 63C shows traces 6330 when two users walk side by side, keeping 2 meters separation, where the farther target is not detected when blocked by the other user, making his trace disconnected. FIG. 63D shows locations and traces 6340 tracked accurately and continuously in the absence of blockage for two users. FIG. 63E shows locations and traces 6350 tracked accurately and continuously in the absence of blockage for three users. FIG. 63F shows locations and traces 6360 with more frequently happened missing detections when there are four moving users. In the case of five users 6370, FIG. 63G shows that one can mainly evaluate localization in static scenarios since a user could be frequently blocked by another if all of them are moving.

As seen in FIG. 63A 6310 and FIG. 63B 6320, mmTrack recovers the moving trajectories precisely for a single user, regardless of the trace shapes or locations. When there are two or more users, body blockage may happen. As shown in FIGs. 63C-63F, except for those blocked moments, the traces of different users are well maintained and recognized. However, successive miss detection may disconnect a specific user's moving trace as segments, as shown in FIG. 63C and FIG. 63F.

FIG. 64 illustrates a flow chart of an exemplary method 6400 for wireless object tracking, according to some embodiments of the present teaching. At operation 6402, a wireless signal is transmitted using multiple antennas towards objects in a venue through a wireless multipath channel of the venue. At operation 6404, the wireless signal is received through the wireless multipath channel with multiple antennas. At operation 6406, a set of channel information (CI) of the channel is obtained based on the received wireless signal. At operation 6408, a beamforming is computed based on the set of CI. At operation 6410, a set of directional quantities is computed based on the set of CI and the beamforming. In various embodiments, the set of directional quantities may be a spatial spectrum or part of the spatial spectrum in beamforming.

At operation 6412, a range of interest (RoI) is computed based on the directional quantities and the set of CI. At operation 6414, the RoI is refined by combining and/or dividing clusters of propagation delay values. At operation 6416, a set of point of interests (PoIs) is computed based on the RoI. The set of point of interests (PoIs) can form a visual representation of a movement of the at least one object. The visual representation may be an imaging, a photo, a video, a schematic representation or other presentations. At operation 6418, the points in the set of PoIs are refined and cleaned. At operation 6420, the clusters in the set of PoIs are validated based on a medoid distance. At operation 6422, a quantity of the objects, locations of the objects, and/or heights of the objects are computed. At operation 6424, a trajectory of each object is constructed by tracking locations of the objects as they move over time. The order of the operations in FIG. 64 may be changed in various embodiments of the present teaching.

In another embodiment, a method for wireless object tracking may be similar to the method shown in FIG. 64, where the operation 6412 is replaced with an operation of computing a direction of interest (DoI) based on the directional quantities and the set of CI. The DoI comprises a set of directions that are of interest and may be further analyzed for presence of objects. Correspondingly, the operation 6414 may be replaced with an operation of refining the DoI by combining and/or dividing clusters of directions. Then the operation 6416 may be replaced with an operation to compute a set of point of interests (PoIs) based on the DoI.

In one embodiment, the disclosed system may be used to passively localize and track multiple users simultaneously using RF signals, e.g. mmWave signals. This system can be used for people counting, people tracking, building automation, perimeter security, workplace safety, etc. A major concern for many potential customers of video-based people counting solutions is privacy. This single concern frequently keeps them from deploying video-based people counting solutions. In contrast, the disclosed system utilizing the 60 GHz frequency can provide the people counting information in a facility to the facility manager without the privacy concerns. The disclosed system can determine whether or not there are people in a room, and a quantity of people in the room, with a visual representation showing the quantity of the people but not the identities of the people. This can be important for applications such as management of conferences rooms, smart buildings, hotels, and much more. For example, hotels can implement smart energy efficient smart lighting or temperature control based on room occupancy.

In another example, the disclosed system can determine a trajectory or moving path of a moving object, e.g. a moving person, and show the trajectory with a visual representation. This may be applied for tracking players in a maze of an amusement park, for monitoring intruders by security systems of homes, hotels, or for tracking runners of a long-distance race like marathon.

In one embodiment, a Type 1 device with N1 Tx antennas "illuminates" an object (e.g. a person, a pet, a thing, a living thing, a non-living thing) with a wireless probe signal (e.g. 60GHz signal, 3.5GHz bandwidth). The probe signal is modulated by the object (e.g. reflection, refraction, absorption, attenuation, Doppler effect, etc.). A Type 2 device with N2 Rx antennas receives the probe signal and obtains a set (e.g. N1*N2) of CI (e.g. channel state information or CSI, compressed CSI, uncompressed CSI, channel impulse response or CIR, channel frequency response or CFR, RSSI, etc.). Each CI may be associated with a pair of Tx antenna and Rx antenna. A tracking of at least one object comprises at least one of: localization, monitor location/ movement/ activity/ behavior/ trend, computation of a spatial-temporal quantity such as location/ horizontal position/ height/ movement/ trajectory/ path/ history/ trend/ count/ grouping/ distribution/ heat map/ formation/ presence/ proximity/ distance/ direction/ speed/ velocity/ acceleration/ activity/ behavior/ repeated behavior/ periodic motion/ breathing/ heartbeat/ motion period/, motion frequency/ motion rate, transient motion detection, activity monitoring, activity detection, activity recognition, monitoring, approaching, receding detection, gesture recognition, gait recognition, handwriting recognition, abnormal activity detection, fall-down detection, etc., based on the set of CI.

The at least one object may comprise 1, 2, 3, or more, or an unknown amount of object. The at least one object may comprise a person (e.g. adult, older adult, child, baby, etc.), or animal, or pet, or device, or another object. The wireless probe signal may be a probe request, a probe response, an enquiry, an acknowledgement, a response to the enquiry, a sounding signal, a beacon, a pilot signal, etc. CI may be channel state information (CSI), compressed CSI, non-compressed CSI, RSSI, channel impulse response (CIR), channel frequency response (CFR), magnitude response, phase response, etc. The Type 2 device may comprise the Type 1 device, or vice versa. The Type 2 device may be the Type 1 device.

The Type 1 device may have a first wireless chip/integrated circuit/IC to transmit the wireless signal. The Type 2 device may have a second wireless chip/integrated circuit/IC to receive the wireless signal. The Type 1 device may be the same as the Type 2 device. The first IC may be the second IC. The N1 Tx antenna may comprise the N2 Rx antennas, or vice versa. N1 may be equal to N2. The N1 Tx antennas may be next to the N2 Rx antennas. The N1 Tx antennas may be the N2 Rx antennas. The N1 Tx antennas (or the N2 Rx antennas) may be arranged in a 1-dimensional, 2-dimensional or 3-dimensional configuration and/or lattice. The 1D, 2D or 3D lattice may have a regular spacing.

For example, a 1-D/2-D/3-D configuration may have the antennas uniformly spaced, or non-uniformly (e.g. pseudo-randomly, or locally uniform) spaced. For example, a 1-D configuration may have antennas arranged in a straight line (e.g. uniformly spaced or non-uniformly spaced), in multiple straight lines (e.g. outlines of a 2D or 3D shape), and/or in one or more curve in a 2-D space (e.g. a circle, an arc, a triangle, a parallelogram, a pentagon, a hexagon, a polygon, an outline of a shape, a zigzag pattern, a shape-filling line pattern) and/or 3-D space (e.g. a spiral, a curved line on a surface of a 3D object, a space-filling line pattern). For example, a 2-D configuration may have the antennas arranged in one or more rectangular lattice, circular lattice, elliptical lattice, triangular lattice, hexagonal lattice, polygonal lattice, and/or other. A 2-D configuration may have antennas arranged in a manifold, a mesh, or a curved surface (e.g. on a surface or mesh of/around/next to/related to a box, a sphere, an object, a body, a part of a body, and/or another item). For example, the 3D lattice may have 3 orthogonal axes, with characteristic spacing in each of the axis. Some nodes of the 1D, 2D or 3D lattice may be empty (not occupied).

In one embodiment, an overall algorithm of the mmTrack includes the following:

a) Beamforming (e.g. digital beamforming that achieve superior spatial resolution than analog beamforming) and compute spatial spectrum. The spatial spectrum may be computed with respect to (w.r.t.) polar coordinate including direction (e.g. azimuth, elevation, etc.) and range (or depth or distance, or associated propagation delay); the origin of the polar coordinate may be a point associated with the Rx antennas and/or the Tx antennas. The spatial spectrum may also be computed w.r.t. rectangular coordinate (e.g. some triplet (x, y, z) for some x-, y-, and z-axes, with origin at the point associated with the Rx antennas and/or the Tx antennas. The spatial spectrum may be computed for a set of points (associated with a set of directions and a set of ranges/propagation delays). The spatial spectrum at a point is associated with a propagation delay (or range/distance/ depth) and direction associated with the point.

b) Target detection and range finding, which includes testing a set of ranges for a presence of some object, e.g. compute variance of spatial variance for a particular range, or propagation delay; and associating the range with a presence of object if the variance is greater than a threshold. In one embodiment, the set of range (e.g. propagation delay) is tested by computing variability measure (e.g. variance) for each range. Variability measure is tested against some criteria. If an object is present in a particular range, the variability tends to be large. If no object is present, the variability tends to be small.

c) Target detection and range finding, which includes computing a set of range-of-interest (RoI), comprising a subset of the ranges associated with a presence of object; the set may comprise a set of clusters of ranges; and refining the set of RoI by (i) combining similar clusters into one, and/or (ii) dividing one cluster into two clusters. In one embodiment, RoI is computed based on testing result. If variability measure satisfies a criterion (e.g. larger than a threshold), the range is selected and added to the RoI. For example, variability is computed for multiple values of range. A threshold for testing the variability measure for a particular range may be computed based on a function (e.g. an average) of variability measures of all the directions for that particular range. The RoI may be refined by testing for "distance" between clusters, and combining two clusters if they are close to each other. To combine two clusters, some "missing" ranges between the two clusters may be added to the RoI.

d) Target detection and 3D information extraction, which includes computing a set of point-of-interest (PoI) based on the RoI, comprising a subset of the points associated with a presence of some object based on the spatial spectrum and the testing; and refining the set of PoI by (i) combining similar/clusters into one, and/or (ii) dividing one cluster into two or eliminating isolated/lone PoI. In one embodiment, for each direction (azimuth, elevation), one or more consecutive cluster or cell of range may be identified based on the RoI. A representative value (i.e. range or propagation delay) or a characteristic value is selected for the cluster or cell. The characteristic value is added to the PoI. As there may be more than one object in the direction, there may be more than one cluster and more than one characteristic value, e.g. one characteristic value for each cluster. The PoI may be refined and/or cleaned by combining and/or connecting neighboring PoI by adding missing points, and/or by splitting a cluster of PoI into two clusters, or removing isolated "noise-like" PoI. A cluster may be analyzed to determine that the cluster comprises two densely "sub-clusters" of PoI linked by some "linking" PoI or "insignificant" PoI. The cluster may then be separated into the two sub-clusters by removing the linking PoI.

e) Target clustering which includes identifying individual targets or objects by performing clustering on the PoI, where each object may correspond to a cluster; validating the clusters based on medoid, by (i) combining similar/clusters into one, and/or (ii) dividing one cluster into two; associating one cluster with one object; computing a count of the objects by counting the clusters; computing location (or height) of an object by computing a characteristic location (e.g. centroid or weighted average or projection) of associated cluster. The PoI may be processed, e.g. similar PoI may be grouped into clusters. A representative location of an object may be a characteristic location (e.g. centroid or weighted mean) of a cluster. A quantity or count of the objects may be determined by counting the number of clusters.

f) Continuous tracking which includes computing a trajectory (or trace) of an object by tracking its location as it moves over time.

In one embodiment, at time t-1, there may be M trajectories corresponding to M objects. The count of objects may be M (or more). At time t, there may be N objects may be identified. One or more of the N objects may be added to one or more of the M existing trajectories (e.g. based on some similarity or continuity). If one object is added to two or more trajectories, it may be merging the two or more trajectories into one. One or more of the N objects may be used to create new trajectories. One or more of the M existing trajectories may be discontinued (e.g. temporally or permanently). One or more of the M existing trajectory may be split into two trajectories. For example, at time t-1, two objects may cross paths and were "merged" into one trajectory. One or more of the N objects may be connected to some discontinued trajectory disappeared before time t-1. The count of objects may be updated to N or more.

In one embodiment, the N1 Tx antennas may be arranged in a first 2D rectangular array (with characteristics spacing's in x-direction and y-direction). The N2 Rx antennas may be arranged in a second 2D rectangular array. The normal direction (i.e. perpendicular direction) of the first rectangular array may be parallel to the normal direction of the second rectangular array. The first and second rectangular arrays may be coplanar. The Tx antenna array and Rx antenna arrays may be next to each other (e.g. less than 20cm, or 10cm, or 5cm apart). While most locations of an array may be each occupied by, or associate with, one or more antenna, there may be one or more locations of the array not being occupied or associated with any antenna. One of the rectangular arrays may have an "axis" (e.g. a line in normal direction) in the "center" of the array. The "center" may be, or near, the center of gravity of the array. The array may be "aimed" at an object by having the axis close to the object. In other words, the object may enter the array's "monitoring area" by entering an area that the array is "aiming" at. The object may be on the axis. Or, the angle between the "axis" and an imaginary straight line connecting the "center" of the array and the object may be small (e.g. less than 10 degree, or 5 degree, or 1 degree, or another angle). First or second lattice may be a rectangular, or non-rectangular, array. It may be locally rectangular, or triangular, or hexagonal, or circular, or other lattice patterns. It may be a hybrid lattice with two rectangular lattices at an angle to each other.

In a bi-static setup, Type 1 (Tx) and Type 2 (Rx) devices are two different devices placed at two different locations in the venue. In a monostatic setup (Radar-like), Type 1 (Tx) and Type 2 (Rx) devices are collocated (placed at the same location or similar location, e.g. in the same machine/device/housing/mounting/circuit/circuit board/module/chip) in the venue. In one embodiment, the Type 1 (Tx) device and the Type 2 (Rx) device are the same device.

Below shows some examples of applying the disclosed methods and systems. In one example, Peter installs a wireless tracking system of the present teaching in his home to monitor activities of his family in the living room and kitchen of his house. The system works with one or more gadgets. He installs a base gadget of the system comprising a first wireless transmitter (Type 1 device) and a wireless receiver (Type 2 device) at a position in the living room and several expansion gadgets each comprising a transmitter (Type 1 device). From the Internet, Peter learned that there are many choice of base gadgets of the wireless tracking system (with both transmitter and receiver) and additional gadgets of the wireless tracking system (with only transmitter) such as routers, mesh routers, IoT devices, TV, microwave ovens, speakers, set top boxes, home appliances, clocks, smart plugs, smart switches, etc. Base gadgets (with both transmitter and receiver) tend to be expensive and each can function as a complete wireless tracking system. The expansion gadgets (with transmitter only) tend to be cheaper and need to work with a base gadget to function in the wireless tracking system. In Christmas last year, Peter bought a base gadget (with both transmitter and receiver) which is a smart speaker (similar to Amazon Echo or Google Home) with the wireless tracking system. He installed it in the living room to wirelessly monitor both the living room and kitchen.

By transmitting a wireless signal between the transmitter and receiver and extracting a set of channel information (CI) from the received wireless signals, the system computes beamforming based on the set of CI. It then computes a set of points of interests (PoIs) and tracks any objects (and their trajectories) in the living room and kitchen. The base gadget communicates with a cloud server (which needs Internet connection that Peter set up during installation). Peter installed a software app on his smart phone and used the app to monitor the living and kitchen of his house through the cloud server. Using the app, he can tell if anyone is present, and how many people there are. The system also gives him indications that the person may be his wife, or his children, or someone else. He can also visualize their movement in the area, e.g. by obtaining an image or a set of point-of-interests (PoIs).

He loved the system and decided to expand the system by buying some inexpensive expansion gadgets including additional smart speakers (similar to Amazon Echo Mini or Google Home Mini), smart clock, smart lights, and smart plugs. He stalled one expansion gadget at the family room to monitor the family room. He installed an expansion gadget at the hallway to monitor the front door and the hallway. He installed another one in front of the restroom to monitor the garage door and the rest room. He also installed one in each room he wants to monitor. Each of the expansion gadget transmits a wireless signal to the receiver of the base gadget. The base gadget and/or the cloud server monitor the various areas of the house based on the CI from wireless signals from all the transmitters. Now, Peter can monitor his home while he is at work or while he is on vacation. He wants to install some base or expansion gadgets in his work to help to monitor some offices (e.g. conference rooms) and some storage facilities.

The continuous development of 802.11ad technology provides new opportunities in wireless sensing. The present teaching discloses ViMo, a calibration-free remote Vital sign Monitoring system that can detect stationary/non-stationary users and estimate the respiration rates (RRs) as well as heart rates (HRs) built upon a commercial 60GHz WiFi. The design of ViMo includes two key components. First, one can design an adaptive object detector that can identify static objects, stationary human subjects and human in motion without any calibration. Second, one can devise a robust HR estimator, which eliminates the respiration signal from the phase of the channel impulse response (CIR) to remove the interference of the harmonics from breathing and adopts dynamic programming (DP) to resist the random measurement noise. The influence of different settings, including the distance between human and the device, user orientation and incidental angle, blockage material, body movement and conditions of multi-user separation are investigated by extensive experiments. Experimental results show that ViMo monitors user's vital signs accurately, with a median error of 0.19 breath per minute (BPM) and 0.92 BPM, respectively, for RR and HR estimation.

In this system, one can break down the limitation of 2.4GHz/5GHz WiFi by leveraging an opportunity in the emerging 60GHz WiFi (e.g., 802.11ad), which is already available in commercial routers. The disclosed ViMo is a first system that achieves multi-person stationary/non-stationary detection and vital signs monitoring using impulse-based commodity 60GHz millimeter wave (mmWave) device. Different from 2.4GHz/5GHz radios, 60GHz WiFi offers high directionality with large phased arrays in small size thanks to millimeter-wavelength and precise time-of-flight measurements brought by the large bandwidth. The advance in 60GHz radios allows higher spatial resolution and range resolution, making it possible to monitor respiration as well as heart rate for multiple persons simultaneously.

However, enabling multi-person vital signs monitoring using 60GHz WiFi is not an easy task. To achieve this goal, one may need to deal with multiple challenges. First, it is non-trivial to locate human subjects before vital sign estimation. Due to the high carrier frequency, signals attenuate rapidly over the propagation distance, making it difficult to locate distant targets. Furthermore, the automatic gain control (AGC) module on the chip changes the amplitude of the CIRs over different measurements. To address this challenge, for each measurement, one can employ two constant false alarm detectors in range and angle dimension to adaptively estimate the noise level in 3D space, and thus provide an adaptive threshold for target detection.

Second, given the reflections from multiple users and surrounding objects, it is still difficult to differentiate static reflecting objects and stationary/non-stationary users. To overcome this challenge, one can devise a novel motion detector by leveraging the sensitivity of CIR phase to the change of travelling distance of EM waves, which can identify the large random body motion (RBM) as well as periodic breathing motion from human subjects and measurement noises from static reflecting objects (e.g., wall, door and furniture).

Third, human chest motions are induced by both respiration and heartbeat, and the distance change caused by heartbeat is magnitude weaker than the respiration signal. Although heart rate is usually higher than respiration rate, it is hard to distinguish the true heart rate from harmonics of the breathing signal. To address this challenge, one can first estimate the waveform of the breathing signal and then eliminate it in time domain. To further tackle the problem that the heartbeat signal can easily submerge in random measurement noises, one can leverage the stationary property of the heart rate and apply dynamic programming (DP) algorithm in spectrogram to obtain an accurate estimation of the heart rate.

We have built a prototype of ViMo by reusing commercial off-the-shelf (COTS) 60GHz WiFi radio as a radar-like device and conducted extensive experiments to evaluate the performance under different settings, including single-person and multi-person scenarios, LOS and NLOS conditions, etc.. Experimental results show that ViMo achieves accurate estimations, with a median error of 0.19 BPM and 0.92 BPM, respectively, for RR and HR estimation. In addition, ViMo detects multiple users precisely, with a detection rate of 97.86%. The ViMo system takes an important step towards practical multi-person vital sign monitoring via 802.11ad radios.

ViMo is a wireless system that can accurately detect human subjects and estimate their vital signs by using purely the reflections of RF signals off the users' bodies. The processing flow of ViMo is shown in FIG. 65, according to one embodiment of the present teaching.

Enabling multi-person contactless vital sign monitoring using 60GHz WiFi faces several challenges. First, due to the fast attenuation of 60GHz RF signal, the strength of signal reflected at a large distance is much smaller than that at a short distance. Therefore, it is hard to detect human subjects without prior calibration, let alone detecting the stationary/non-stationary status of human subjects. Second, the minute heartbeat signals are easily corrupted by measurement noises and concealed by the large scale respiration signals. Thus, dedicated systems should be designed to resist the interference from respiration and measurement noises when estimating the heart rate.

In order to detect human subjects at various distances, one can apply a reflecting object detector that adaptively estimates the noise level at various distances and thus detects the presence of reflecting objects. To further differentiate the human subjects from static objects, one can design a motion detector that identifies static objects, stationary human subjects and human with large body motion. A target clustering module is implemented to further identify the number of human subjects and their respective locations. Moreover, to make a robust estimate of the heart rate, one can first devise a breathing signal eliminator to reduce the interference from the respiration signal after the breathing rate is estimated. The eliminator can remove the harmonics of the breathing signal, as well as deal with the spread of the breathing frequency component when the breathing period slightly changes. To tackle with the random measurement noise, one can leverage the stationary property of the heart rate and apply dynamic programming to estimate the heart rate utilizing both the frequency and time diversity.

CIR Modeling with Vital Sign Impact

Assume the travelling distance of the EM wave reflected by human chest is d(t), then the CIR between Tx antenna m and Rx antenna n can be expressed as

$$h_{m,n}(t) \quad = a_{m,n}(t)\exp(-j2\pi \frac{d_{m,n}(t)}{\lambda_c}), \qquad (67)$$

where $\alpha_{m,n}(t)$ is the complex channel gain, $\lambda_c$ denotes the wavelength of the carrier. Due to the modulation of the vital signs, i.e., respiration and heartbeat, $d_{m,n}(t)$ appears to be a combination of two periodic signals, which can be further expressed as

$$d_{m,n}(t) = d_0(m,n) + s_r(t) + s_h(t), \qquad (68)$$

where $s_r(t)$ and $s_h(t)$ denotes the distance change due to respiration and heartbeat. Besides, denote $d_0(m,n) = lT_s c + \Delta d(m,n)$, where $T_s = 1/B$ denotes the fast time resolution and $B$ stands for the system bandwidth. Here one can assume the reflected signal falls into the $l$-th tap of the measured CIR with residual $\Delta d(m,n)$, then the $l$-th tap of the CIR, $h_l(t) = [h_{1,1}(t), h_{1,2}(t),...,h_{M,N}(t)]^T$ can be expressed as

$$h_l(t) = a(t) e \exp(-j2\pi \frac{d_0 + s_r(t) + s_h(t)}{\lambda_c}) = \tilde{a} \exp(-j2\pi \frac{s_r(t) + s_h(t)}{\lambda_c}), \qquad (69)$$

where $\mathbf{d}_0 = [d_0(1,1), d_0(1,2),...,d_0(M, N)]^T$, $\mathbf{a}(t) = [\alpha_{1,1}(t), \alpha_{1,2}(t),...,\alpha_{M,N}(t)]^T$, and e denotes elementwise product. One can assume $\mathbf{a}(t)$ is time-invariant due to the tiny movement of the subject, and the common phase shift is absorbed in the term $\tilde{\mathbf{a}}$. The CIR after performing beamforming can be expressed as

$$h_{\theta,\phi,l}(t) = s^H(\theta, \phi) h_l(t) + \varepsilon(t), \qquad (70)$$

where $\mathbf{s}(\theta,\phi)$ is the steering vector pointing to the direction $(\theta,\phi)$ as shown in FIG. 66A and $\varepsilon(t)$ stands for additive white Gaussian noise which are independent and identically distributed (I.I.D) for different links. It is apparent that the phase of the CIR measurement changes periodically in slow time due to the periodic motions of respiration and heartbeat, as shown in Eqn. (69). FIG. 66B shows a typical phase signal containing vital signs collected by the disclosed system.

Target Detection

Since various indoor objects (e.g., wall, desk, etc.) reflect the EM wave, before starting monitoring vital signs, one may first need to detect human subjects in the vicinity of the Tx and the Rx. The human subjects may have body motion and thus will change his/her location in the long run, ViMo divides the duration of measurements into multiple blocks, where each block includes CIR measurements of W seconds. Two adjacent blocks overlap by W - $W_s$ seconds, where $W_s$ is the sliding window length.

Detecting Reflecting Objects

Since the RF signal at 60GHz attenuates severely with distance, the reflected energy from a same object varies with distance. To locate the human subject, one may first need to identify which spatial cell has reflecting objects.
The CIR measurement for the case when there is no reflecting object and the case when there is a static reflecting object at cell $(\theta, \phi, l)$ can be expressed as

$$h_{\theta,\phi,l}^{empty}(t) = \varepsilon(t), \qquad (71)$$

and

$$h_{\theta,\phi,l}^{static}(t) = s^H(\theta, \phi)[a e \exp(-j2\pi \frac{d_0}{\lambda_c})] + \varepsilon(t), \qquad (72)$$

respectively. It is obvious that the power response when there is a reflecting object is much larger than the empty tap. However, it is impossible to find a universal predefined threshold for target detection. According to the propagation laws of EM wave, for the same reflecting object, a shorter distance corresponds to a larger reflecting energy. Furthermore, due to the automatic gain control (AGC) module, the amplitude of the CIRs will change for different measurements.
In order to find the adaptive power threshold for each block, ViMo utilizes a constant false alarm rate (CFAR) algorithm for target detection. The power of the noise level for the cell under test (CUT) is estimated by averaging the power of neighboring cells. Furthermore, the guard cell is used to avoid corrupting estimates with power from the CUT itself.
In specific, for each block, the input of CFAR detector is the time-averaging amplitude of all the CIR measure-

ments, i.e., $h(\theta, \phi, l) = \frac{1}{WF_s} \sum_t |h_{\theta,\phi,l}(t)|,$ where $F_s$ is the sampling rate. Considering the attenuation property of EM wave, where the reflected signal strength at different distance of the same object will be different, to determine the range of the reflecting objects, 1D-CFAR is adopted, as shown in FIG. 67A. For each sector $(\theta,\phi)$, ViMo convolves CIR measurements $h_{\theta,\phi}(l)$ with the CFAR window to get the estimation of noise level $\hat{n}_{\theta,\phi}(l)$. A scaling factor $\alpha$ is applied to scale the estimated noise level. The detection threshold is thus set to be $\alpha\hat{n}_{\theta,\phi}(l)$, and the taps with reflecting objects should be those whose amplitude are above the detection threshold, as shown in FIG. 68. To determine the noise level at direction $(\theta,\phi)$, one can further employ 2D-CFAR for tap l, where the noise level $\hat{n}_l(\theta,\phi)$ is estimated by convolving CIR measurements $h_l(\theta,\phi)$ with the 2D-CFAR window as shown in FIG. 67B. Scaling factor $\beta$ is applied to scale the estimated noise level. The reflecting object should be in the cell $(l,\theta,\phi)$ whose CIR measurement $H(\theta,\phi,l)$ is above detection threshold $\alpha\hat{n}_{\theta,\phi}(l)$ and $\beta\hat{n}_l(\theta,\phi)$ simultaneously. Here, one can define the indicator of reflecting object $1_R(l,\theta,\phi)$ as

$$1_R(l, \theta, \phi) = 1\{h(\theta, \phi, l) > \max(\alpha\hat{n}_{\theta,\phi}(l), \beta\hat{n}_l(\theta, \phi))\}, \qquad (73)$$

where $1\{\cdot\}$ is the indicator function.

Although CFAR detector can identify which cell is occupied by reflecting objects, it cannot differentiate whether the reflection comes from human or not. Human subjects always accompany motion (either from breathing or RBM), which is a specific characteristic different from static objects, one can design a motion detector to identify human subjects. Furthermore, most of the wireless vital sign monitoring systems assume there is only one human subject and no RBM during the measurement, and thus the procedure of finding the human subjects is omitted, which is neither natural nor realistic for practical deployment. So in this part, one can design a motion detector, which enables ViMo to identify static reflecting objects, stationary human subjects and human with RBM.

Static reflecting objects detection

Even stationary human subjects can introduce motion due to respiration and heartbeat, and the distance change caused by respiration can be discerned by phase change according to Eqn. (69), one can calculate the variation of the phase of the CIR measurement $V_t(\theta,\phi,l)$ for each candidate cell $(\theta,\phi,l)$ selected by reflecting objects detector, which is defined as

$$V_t(l, \theta, \phi) = \text{Var}_t[\angle h_{\theta,\phi,l}(t)], \qquad (74)$$

where $\text{Var}_t[\cdot]$ denotes the variance over parameter $t$ and $\angle$ denotes the phase of a complex value. As shown in Eqn. (72), for a static reflecting objects, $V_t(\theta,\phi,l)$ would be small, but for the cell with human subjects, either respiration or RBM will contribute a large $V_t(\theta,\phi,l)$. ViMo utilizes a predefined threshold $\eta_{min}$ to identify a static reflecting objects if $V_t(\theta,\phi,l) < \eta_{min}$. The phase signal and its variance are shown in FIG. 69A and FIG. 69D respectively.

FIGs. 69A-69F illustrate exemplary phases for target detection, where the reference RR of the stationary human subject is 16BPM according to some embodiments of the present disclosure. FIGs. 69A-69C show the phase signals corresponding to static object, stationary subject, and human in motion, respectively; FIG. 69D shows the phase variance of signals in FIGs. 69A-69C; FIGs. 69E-69F show the ACF of FIG. 69B and FIG. 69C respectively.

Stationary human subjects detection

For a stationary human subject, periodic breathing signal can be observed in the phase measurement according to Eqn. (67), and FIG. 69B gives an example of phase with stationary subject. A bin with stationary subject would have $V_t(\theta,\phi,l) > \eta_{min}$ and a periodic phase signal whose frequency within $[b_{min}, b_{max}]$.

The frequency resolution is $\Delta f = \frac{60}{W}$ breath per minute (BPM), where W is the window length in seconds. Therefore, to get an acceptable estimation accuracy of respiration rate, the window length should be long enough, which will cause a large delay. In the disclosed system, one can adopt a statistical approach by examining the auto-correlation function (ACF) of the candidate CIR phase to evaluate the periodicity.

Here one can denote the time-variant part of CIR phase measurement as

$$y(t) = s_r(t) + s_h(t) + n(t), \tag{75}$$

where $n(t)$ is the random phase offset introduced by noise, and is also a random variable independent in time instances. Thus the ACF of $y(t)$ can be calculated as

$$\rho(\tau) = \frac{\mathrm{Cov}[y(t),y(t+\tau)]}{\mathrm{Cov}[y(t),y(t)]}, \tag{76}$$

where $\tau$ denotes the time lag, and Cov[·] denotes the con-variance operator. Assume that the distance change caused by heartbeat $s_h(t)$ is uncorrelated with the distance change caused by respiration $s_r(t)$, then $\rho(\tau)$ can be expressed as

$$\rho(\tau) = \frac{\mathrm{Var}[s_r(t)]}{\mathrm{Var}[y(t)]}\rho_r(\tau) + \frac{\mathrm{Var}[s_h(t)]}{\mathrm{Var}[y(t)]}\rho_h(\tau) + \frac{\mathrm{Var}[n(t)]}{\mathrm{Var}[y(t)]}\rho_n(\tau), \tag{77}$$

where $\mathrm{Var}[y(t)] = \mathrm{Var}[s_r(t)] + \mathrm{Var}[s_h(t)] + \mathrm{Var}[n(t)].\rho_r(\tau),\rho_h(\tau)$ and $\rho_n(\tau)$ denote the ACF of respiration, heartbeat and noise respectively. Since one can have $\mathrm{Var}[s_r(t)] \gg \mathrm{Var}[s_h(t)]$ and $\mathrm{Var}[s_r(t)] \gg \mathrm{Var}[n(t)]$, then one can have the approximation that $\rho(\tau) \approx \rho_r(\tau)$. The ACF will have a definite peak at a certain delay which corresponds to the breathing cycle as shown in FIG. 69E.

Motion detection

Random body motion (RBM) has been one of the most difficult technical challenges to wireless vital sign monitoring. Compared with the millimeter-scale chest movement caused by heartbeats, the scale of RBM can be tens of centimeters. The time-variant part of CIR phase measurement with RBM can be modeled as

$$y(t) = s_m(t) + s_r(t) + s_h(t) + n(t), \tag{78}$$

where $s_m(t)$ is the distance change caused by motion. FIG. 69C shows an example of phase with motion. When the scale of RBM is much larger than the respiration signal, the variation $\mathrm{Var}[s_m(t)] \gg \mathrm{Var}[s_r(t)] \gg \mathrm{Var}[s_h(t)]$, and thus $V_t(l,\theta,\phi) > \eta_{max}$, where $\eta_{max}$ is a predefined threshold. When the subjects have moderate RBM, the variance of phase may be within the threshold, however, since RBM lacks periodicity in most case, one cannot observe a peak in $\rho(\tau)$ as the stationary case as shown in FIG. 69F. Therefore, one can have the motion indicator $\mathbf{1}_M(\cdot)$ defined as

$$1_M(\theta,\phi,l) = 1(V_t(\theta,\phi,l) > \eta_{max} \cup \rho(\tau_b) < \Gamma), \tag{79}$$

where 1(·) is the indicator function, $\tau_b$ is the first peak of ACF $\rho(\tau)$, and $\Gamma$ is a predefined threshold.

Cell Merging/Clustering

Due to the fact that multiple cells have the RF signals reflected off a single human subject, a target clustering method should be employed before determining target number and vital sign monitoring. Considering the size of human body, one can merge them into a cluster if the spatial distance between these cells is within the threshold $d_{min}$. The cluster center of stationary cells is the cell with the largest ACF peak, corresponding to the cell with human chest. The center of the RBM cells for each cluster is the cell with the largest $V_t(\theta,\phi,l)$, corresponding to the cell with the largest body motion. Even for a stationary person, he/she can have body motion from the body part away from chest. So when the distance between stationary cells and RBM cells is smaller than the threshold $d_{min}$, then these cells belong to the same person, and the center of cluster should be the representative of stationary cells.
FIG. 70 shows an example for cells merging, where the ground truth is that a human subject sits at 1 m away from the device in a typical indoor office. The reflecting objects detected by CFAR detector is shown in blue circles. The motion detector further differentiates cells with stationary subjects and RBM, shown as red diamonds and green squares respectively. The representative of the target is shown in solid black diamond.

Heart Rate Estimation

The ViMo enables the heart rate estimation module once a stationary subject has been detected. Since one can check periodicity using ACF to determine whether the cell contains a stationary respiration signal, one can easily determine the breathing cycle by finding the peak location $\tau_r$ of $\rho(\tau)$, and the breathing rate should be

$$f_r = \frac{60}{\tau_r} \quad , \tag{80}$$

breath per minute (BPM).

FIGs. 71A-71C illustrate exemplary effects of breathing interference elimination, where the ground truth of heart rate is 76 BPM, according to some embodiments of the present disclosure. FIG. 71A shows the smoothing spline estimate of breathing signal; FIG. 71B shows the residual after breathing signal elimination; and FIG. 71C shows the power spectrum density (PSD) of original phase and residual signal.

Heartbeats can introduce minute movements of the chest, which can be detected as small peaks in the unwrapped phase as shown in FIG. 71A. Past works try to directly utilize frequency analysis and bandpass filter (BPF) to estimate the heart rate. However, due to the harmonics introduced by respiration, it is easy to pick up the wrong peak for estimation as shown in blue line in FIG. 71C. Thus, in order to get a higher estimation accuracy, one can first eliminate breathing signal before heart rate estimation. Thus, in order to get a higher estimation accuracy, one can first eliminate breathing signal before heart rate estimation.

Breathing Interference Elimination

Eliminating the breathing signal can improve signal-to-interference-plus-noise ratio (SINR) of the heartbeat signal, and thus improve the estimation accuracy. The polynomial fitting has been used to remove respiration motion. However, one of the main drawbacks of the polynomial fitting is the order selection. If the order is selected by empirical experience, under-fitting or over-fitting can be easily triggered when the experimental setting is changed (e.g., change of sampling rate or window length). Besides, the elimination effect is also related with the breathing rate. In other words, in order to achieve the similar elimination effect, the polynomial order should adapt to user's breathing rate, which is not practical for robust daily deployment. To avoid this effect, ViMo adopts smoothing spline to estimate the breathing signal.

Let $\{t_i, y(t_i): i = t_0, t_0 + T_s, \cdots, t_0 + W\}$ to be a set of observation in the current window, where $T_s = \frac{1}{F_s}$ is the time interval between two adjacent samples, $t_0$ is the initial time of the observation window, and W is the window length. Compared to the heartbeat signal, the respiration signals have larger distance change and lower frequency, thus, the estimate of the breathing signal $s_r(t)$ should be the solution of

$$\min_{\hat{f}} \sum_{i=t_0}^{t_0+W} \{y(t_i) - \hat{f}(t_i)\}^2 + \lambda \int \hat{f}''(t)^2 dt, \tag{81}$$

where $\lambda \geq 0$ is a smoothing parameter. The second term evaluates the smoothness of a function. The smoothing parameter controls the trade-off between fidelity to the data and smoothness of the function estimate. $\hat{f}$ is the estimate of $s_r(t)$, defined as

$$\hat{f}(t) = \sum_{t=t_0}^{t_0+W} \hat{f}(t_i) f_i(t), \tag{82}$$

where $f_i(t)$ are a set of spline basis function. In this work, one can use B-spline as the spline basis.

To get the optimum solution of Eqn. (81), one can first define the vector $\hat{m} = [\hat{f}(t_0), \cdots, \hat{f}(t_0 + W)]^T$, and the roughness penalty has the form

$$\int \hat{f}''(t)^2 dt = \hat{m}^T A \hat{m}, \tag{83}$$

where the elements of A are $\int f_i''(t) f_j''(t) dt$. Therefore, the penalized sum-of-squares can be written as

$$\min_{\hat{m}} \{y - \hat{m}\}^T \{y - \hat{m}\} + \lambda \hat{m}^T A \hat{m}, \tag{84}$$

where $\mathbf{y} = (y(t_0), \cdots y(t_0 + W))^T$. The minimizer of Eqn. (84) is thus

$$\hat{m}^* = (I + \lambda A)^{-1} y. \tag{85}$$

The heartbeat after elimination of the breathing signal is thus

$$\hat{s}_h(t) = y(t) - \hat{m}^{*T} f(t), \tag{86}$$

where **f(t)** is the vector form of spline basis functions.

The dashed line in FIG. 71A shows the estimation of the breathing signal. After breathing signal elimination, the spectrum of the residual signal after applying a band-pass filter (BPF) with passing band $[h_{min} h_{max}]$ is shown in yellow dashed line in FIG. 71C. The spectrum of the phase without eliminating respiration signal using the same BPF is shown in blue solid line. It is obvious that the signal-to-interference-plus-noise ratio (SINR) of the heartbeat signal after breathing elimination is boosted. Specifically, the SINR is boosted from 1.65 dB to 5.65 dB by eliminating the respiration signal.

Heart Rate Estimation using Spectrogram

Breathing signal elimination can enhance the SINR of heartbeat signal, and thus, increase the accuracy of heart rate estimation. However, the random measurement noises can still corrupt the estimation at some time instances. To further increase the estimation accuracy, in ViMo, one can leverage the stationary property of heart rate and utilize the diversity in both frequency and time domains for reliable estimation.

The heart rate can smoothly change over time, one can model the heart rate as a Markov process, where the variation of heart rate between two adjacent time bins follows a normal distribution $\mathcal{N}(0, \sigma^2)$, and the probability density function (PDF) is denoted as p(f). After breathing signal elimination, one can perform Fast Fourier Transform (FFT) on the residual and concatenate the PSD of each window to get a spectrogram as shown in FIG. 72, where the white line shows the ground truth measured by an ECG sensor, and the black is the estimation result.

Since the operation of FFT automatically discretizes the continuous frequency in the range of $[h_{min}, h_{max}]$ into $|\mathcal{Q}|$ frequency components, where $|\mathcal{Q}|$ means the cardinality of set $\mathcal{Q}$, the heart rate can be modeled as a Markov chain, and the transition probability matrix is denoted as $P \in \mathbb{R}^{|\mathcal{Q}|} \times \mathbb{R}^{|\mathcal{Q}|}$, which is defined as

$$\begin{aligned} P(q, q') &= P(g(n) = q' \mid g(n-1) = q) \\ &= \int_{(q'-q-\frac{1}{2})*\Delta f}^{(q'-q+\frac{1}{2})*\Delta f} p(f) df, \end{aligned} \tag{87}$$

where $\forall q, q' \in \mathcal{Q}$. Here, $g: [1, N] \to \mathcal{Q}$ is a mapping indicating the frequency component at the given time, and *N* is the total time instances of a given spectrogram.

In principle, the heart beat signal is more periodic than noise and other motion interference. Thus, it is more likely to be observed as peaks in most of the time. Moreover, considering that one's heart rate will not fluctuate a lot within a short period, estimations of heart rates should form a trace that achieves a good balance between frequency power and temporal smoothness.

The most probable heart rate trace can be found by solving

$$g^* = \underset{g}{\operatorname{argmax}} \, E(g) - \kappa C(g), \tag{88}$$

where $\kappa$ is a regularization factor. **g** is denoted as a trace, where

$$g = (n, g(n))_{n=1}^{N}. \tag{89}$$

E(g) is the power of trace g, defined as

$$E(g) = \sum_{n=1}^{N} \mathcal{E}(n, g(n)), \qquad\qquad (90)$$

where $\varepsilon(n,q)$ denotes the energy at time bin $n$ and frequency component $q$. The smoothness of the trace can be evaluated by a cost function **C(g)**, defined as

$$C(g) \triangleq -\log P(g(1)) - \sum_{n=2}^{N} \log P(g(n-1), g(n)), \qquad\qquad (91)$$

where the frequency transition probability $\mathbf{P}(g(n-1), g(n))$ can be calculated by Eqn. (87). Without loss of generality, one can assume a uniform prior distribution, i.e., $P(g(1)) = \frac{1}{|\mathcal{Q}|}$.

This problem can be solved by dynamic programming. For clarity, one can first define the score at bin (n,q) as the maximum achievable regularized energy, i.e.,

$$S(n, q) = \mathcal{E}(n, q) + \max_{\forall q' \in Q} \{S(n-1, q') + \lambda \log P(q', q)\},$$
$$n = 2, 3.., N, \forall q, q' \in \mathcal{Q}, \qquad\qquad (92)$$

where $S(1,q) = \varepsilon(1,q) + \lambda \log \mathbf{P}(g(1) = q)$. Furthermore, since $S(n,q)$ consider both the smoothness and regularized energy of the previous trace, the process of calculating the score also determines the optimal trace passing through bin $(n,q)$. The entire optimal heart rate trace can be found by backtracking the bins $(N, g^*(N))$ that contribute to the maximum score of the last timestamp. For the rest of the heart rate trace in the observation window, i.e., $\forall n = N-1, N-2,... , 1$, one can have

$$g^*(n) = \underset{\forall q \in Q}{\arg\max} \, S(i, q) + \lambda \log P(q, g^*(n+1)). \qquad\qquad (93)$$

The backtracking procedure in Eqn. (93) gives the optimal trace g* for a given spectrum, which is the optimal solution for Eqn. (88). The result of heart rate trace estimation is shown as black line in FIG. 72, where the reference measured by a gold standard electrocardiogram (ECG) sensor is marked as the white line.

Experiment Evaluation

One can evaluate ViMo in practical settings using a commodity 802.11ad chipset in a typical office. The chipset operates at 60GHz center frequency with 3.52GHz bandwidth, providing a range resolution of 4.26 cm. The Tx transmits a known pulse sequence for channel impulse response (CIR) estimation. There are 8 participants enrolled for testing. The ground truth is provided by a commercial ECG sensor with a chest strap.

To further evaluate the disclosed system, one can compare it with the mmVital, which is the state-of-art wireless vital sign monitoring system using impulse-based mmWave radio. mmVital leverages the RSS from a pair of horn antenna and finds the highest magnitude peak as well as its adjacent bins in the frequency domain to form a custom narrow BPF, and then counts peaks of the time-domain filtered signal to determine the breathing rates as well as heart rate. In order to make fair comparison, same as ViMo, phases of CIRs from the detected cells are used as the input of mmVital algorithm, rather than the coarse information of RSS. To estimate both respiration and heart rate, the adaptive narrow BPF and IFFT are implemented as illustrated in mmVital. The window length for both mmVital and ViMo are set to be 60 seconds, and systems give output every second. The mm Vital estimates vital signs according to the number of peaks in a time window (i.e., the estimation is integer), the resolution of its breathing rate as well as heart rate estimation is 1 beat/breath per minute (BPM).

Overall performance in the measurement of respiration rate (RR) and heart rate (HR): The detection rate of the system is 97.86% and the overall median error of RR and HR evaluated by ViMo is 0.19 BPM and 0.92 BPM respectively. mmVital achieves similar performance w.r.t. RR, but its median error of HR is 1.6 BPM, 73.91% worse than ViMo. Experimental results show that ViMo can provide more accurate estimation especially in the relative low SNR setting (e.g., longer distance, NLOS, etc.) due to the fact that the breathing signal elimination and DP for HR estimation can increase the SINR of heartbeat signal.

Moreover, experimental results show that ViMo can effectively detect stationary/non-stationary state of human subjects, and can make accurate estimates of both RR and HR when slight user motion incurs (e.g., shaking head). Comparing with mmVital, which does not take users' motion into consideration, ViMo makes an important improvement towards practical deployment. The details will be discussed below.

Impact of distance

One can investigate the effect of the distance between the device and human subject on the estimation accuracy. FIGs. 73A-73C illustrate an experiment setup and result for the impact of distance, according to some embodiments of the present disclosure. FIG. 73A illustrates the experiment setup; FIG. 73B illustrates the CDF of absolute estimation error for respiration rate; FIG. 73C illustrates the CDF of absolute estimation error for heart rate.

Participants sit at different distances facing the device as shown in FIG. 73A. The empirical cumulative distribution function (CDF) of the absolute error of RR and HR estimation are shown in FIG. 73B and FIG. 73C respectively, where the performance of ViMo and mmVital are shown in solid lines and dash lines respectively. To account for the mis-detection, one can set the estimation to be 0 BPM when the target is missed.

As expected, the performance degrades with distance due to the signal-to-noise ratio (SNR) degradation. The median error for RR of ViMo is within 0.15 BPM when the distance is within 1.5 m and it increases to 0.22 BPM when the distance increases to 2 m. For HR estimation, the median error of ViMo increases from 0.42 BPM to 0.9 BPM when the distance increases from 0.5 m to 2 m. Furthermore, one can see that the degradation of RR estimation is less than the HR estimation due to the higher SNR of breathing signal.

The CDF of RR estimation using mmVital algorithm is stepwise since the resolution of both ground truth and estimation is 1 BPM. It is obvious that both algorithms achieve similar performance as for RR estimation, but ViMo achieves a higher resolution. Moreover, for HR estimation, ViMo outperforms mmVital for all the 4 settings, and the performance gap becomes larger with the increment of distance. The main reason is that the breathing signal elimination helps to improve the SINR of heart rate signal. Besides, DP algorithm in ViMo also leverages the time diversity besides the frequency diversity to make estimation, which can further alleviate the impact of the measurement noises.

Impact of orientation

One can also investigate the impact of human orientation on estimation accuracy. FIGs. 74A-74C illustrate an experiment setup and result for the impact of orientation, according to some embodiments of the present disclosure. FIG. 74A illustrates the experiment setup; FIG. 74B illustrates the CDF of absolute estimation error for respiration rate; FIG. 74C illustrates the CDF of absolute estimation error for heart rate.

The orientation corresponds to the closest part of the user w.r.t. the device as shown in FIG. 74A. The distance from the user to device is set to be 1 m. FIG. 74B and FIG. 74C show the estimation performance of RR and HR respectively.

It is shown that the "front" setting achieves the best performance, whereas, the "back" setting has the worst performance, for both RR and HR estimation. This result is due to the distinct displacement of reflecting part caused by respiration in different orientation. Since smaller displacement means lower SNR of breathing signal, when the displacement is too small, mis-detection occurs. The detection rate when subject sit facing the device is 100%, and it degrades to 99.06% and 99.37% when the left and right side of chest facing the device. The detection rate drops to 83.83% when human subjects sit back to the device. It is worth noting that even similar detection rates are achieved when participants sitting at the left and right orientation, the HR estimation performance is distinct, where the "left" setting outperforms the "right" setting. This is due to the physiological structure of human beings, where the vibration caused by the heartbeat is larger on the left side of the chest. Similarly, ViMo has equivalent performance in terms of RR estimation compared with mm Vital, however, it has much better performance of HR estimation for all the 4 settings, as shown in FIG. 74C.

Impact of incident angle

One can also investigate the impact of the incident angle on the estimation performance, where human subjects are asked to sit at angles [0°,15°, 30°], and the distance between human and device is 1 m, as shown in FIG. 75A. The CDF of absolute estimation error of RR and HR with different incident angles are shown in FIG. 75B and FIG. 75C respectively.

We can see that for both RR and HR estimation, the accuracy decreases with the increment of the incident angle. The reason is that the reflection loss is dependent on the incident angle, and increment in incident angle increases the reflection loss, rendering lower SNR of reflected signal. However, since the SNR of breathing signal is much higher than the heart beat signal, the performance degradation of RR estimation is not as severe as HR estimation. Furthermore, one can see that the performance of ViMo is much better compared with mmVital in terms of HR estimation, especially in the case of large incident angle.

NLOS Case

FIGs. 76A-76C illustrate an experiment setup and result for the impact of blockage, according to some embodiments of the present disclosure. FIG. 76A illustrates the experiment setup; FIG. 76B illustrates the CDF of absolute estimation error for respiration rate; FIG. 76C illustrates the CDF of absolute estimation error for heart rate.

The RR and HR estimation accuracy is evaluated for through-the-wall case, and the experiment setup is shown in FIG. 76A. Participants are asked to sit on the other side of a dry wall, and the distance between device and human subject is 1 m. The median error of RR estimation increases from 0.15 BPM to 0.25 BPM due to the penetration loss, and the median error of HR estimation increases from 0.6 BPM to 1.4 BPM, as shown in FIG. 76B and FIG. 76C respectively.

In order to further investigate the influence of blocking material (corresponding to different penetration loss), one can conduct a set of experiments, where different commonly used materials are used to block the LOS path. Since the penetration loss is distinct for different material, the performance drop is different. The mean absolute error (MAE) of RR and HR estimation is shown in Table 1 as follows.

| Blocking material | None (LOS) | Glass | Cotton pad | Wood panel | White board | Drywall |
|---|---|---|---|---|---|---|
| Mean RR error (BPM) | 0.14 | 0.23 | 0.24 | 0.26 | 0.28 | 0.29 |
| Mean HR error (BPM) | 1.29 | 2.66 | 3.45 | 4.82 | 4.85 | 5.95 |

Impact of body movement

We evaluate the performance of ViMo when users have different motion states. Participants are asked to shake head (1 - 3 cm) and move the body (4 - 5 cm) every 20 seconds. The distance from device to user is 1 m with incident angle 0°. One can also evaluate the performance when users answer phone with headset. The MAE of RR and HR are shown in Tab. 2 as follows.

| Body state | Stationary | Shaking head (left-right) | Moving body (left-right) | Speaking |
|---|---|---|---|---|
| Mean RR error (BPM) | 0.14 | 0.28 | 0.51 | 1.22 |
| Mean 14R error (BPM) | 1.29 | 4.16 | 3.06 | 6.31 |

All the cases achieve more than 99.7% detection rate, where for the case of moving body, in 27% of the duration one can detect large body motion, and thus the vital signs estimation module will not be triggered. As for the time that body motion is within the detection threshold (as known as stationary period), the vital sign estimation module is triggered, and the mean HR error is 3.06 BPM for the case of moving body (the relative error is 4%). However, for the case when people are answering phone, the chest will involve RBM caused by speaking more frequently, resulting the worst performance for all the test cases.

Multi-user case

In this part, one can study the impact of angle separation between users, where two users sit at a distance of 1 m away from the device with different separation angles. One can define the detection index (DI) of a separation angle as the ratio between the number of samples when the number of detected targets matches the ground truth and the total number of samples. One can also define the false-alarm index (FI) of a separation angle as the ratio between the number of samples when the number of detected targets is larger than the ground truth and the total number of samples. Tab. 3 below shows the median error of RR and HR estimation for both users.

| Separation angle | DI | FI | Med. error of breathing | Med. error of heart rate |
|---|---|---|---|---|
| 30° | 0.84 | 0 | (1.14;0.15) | (2;1) |
| 45° | 0.98 | 0 | (0.22;0.14) | (1;1) |
| 60° | 1 | 0 | (0.21;0.14) | (1;1) |
| 75° | 1 | 0 | (0.21;0.12) | (1;1) |

Compared to the single-user scenario, the performance degrades at small separation angles (i.e., 30°), but the performance is similar to the single-user scenario if the separation angels are large enough (i.e., larger than 45°). This is because that when the distance of two targets is small enough, the distance of the candidate cells with each user can be smaller than the predefined threshold. Thus, the two clusters will be merged together and there will be only one representative cell left, resulting in a mis-detection. Besides, the cells with high SNR signals of one user can be merged with the other user's, therefore, the SNR of the representative cell for vital signs estimation can drop, resulting in degradation of the performance.

To further evaluate ViMo's accuracy for multi-user vital sign estimation, one can perform controlled experiments, where 3 users are asked to sit in parallel. ViMo detects the location of each targets and simultaneously estimate their vital signs. When mis-detection happens, one can define the relative error as 1 as before. FIG. 77 shows the mean relative accuracy of RR and HR as well as the detection rate at each location. One can see that for all the 3 locations, ViMo achieves the mean accuracy of both RR and HR over 92.8%. As for the detection rate, since the separations between the middle location and the other two locations are not large enough, and the middle location is more distant, the detection rate drops at middle location. However, the overall detection rate over time is still above 92.7% during the testing.

The present teaching discloses ViMo, a multi-person Vital sign Monitoring system using a single commercial 802.11ad device. One can devise a multi-object stationary/non-stationary detection algorithm to locate and count human targets without any prior calibration. In addition to the instantaneous estimating breathing rates using ACF with high accuracy, one can further design a robust heart rate estimator, which eliminates the interference of the breathing signal and then estimates the heart rate leveraging both the time and frequency diversity. One can evaluate the performance of ViMo by various settings, including NLOS and motion artifacts, the most challenging scenarios for wireless vital signs monitoring. Experiment results show that ViMo can accurately monitor vital signs, with a median error of 0.19 BPM and 0.92 BPM, respectively, for RR and HR estimation.

In various embodiments of the present teaching, an algorithm for breathing and/or heartbeat detection may be performed as below.

s1: capture CSI using multiple transmit (Tx) antenna and multiple receive (Rx) antenna.

s2: apply beamforming to get directional CSI (e.g. CIR).

s3: determine direction-of-interest (DoI) by detecting object presence object in each direction. For each direction: s3a: compute power response; s3b: determine object is present in the direction (and thus the direction is DoI) if the power response is greater than threshold. The threshold may be adaptive with respect to a distance of the object; (e.g. the directional CSI may be a CIR with many taps. Each tap may be associated with a distance. Each tap may be tested with respective threshold. A threshold for a "near" tap may be larger than a threshold for a "far" tap.). The threshold may be adaptively computed based on neighboring cells (e.g. each cell may be associated with a direction such that neighbor cells have neighboring directions) around cell under test (CUT) and a layer of guard cells (e.g. guard cells may be an immediate layer of cells around CUT; guard cells may not be used to compute threshold). Threshold may be adaptively computed based on CA-CFAR (cell-averaging constant false alarm rate).

s4: for each DoI (i.e. object presence is detected), compute characteristics (e.g. frequency, period, intensity, timing consistency, change/drift, etc.) of dominant periodic signal (e.g. breathing rate) by steps s4a to s4d.

s4a: determine a distance (e.g. associated with a tap of the directional CIR) associated with object presence. The DoI and the distance together define a point.

s4b: compute an auto-correlation function (ACF)(e.g. ACF of a phase of the tap of directional CIR) associated with the distance. Sometimes multiple taps/distances may be associated with object presence. ACF may be computed for each tap/distance. The multiple ACF may be combined, e.g. by weighted averaging. The respective weights may be determined based on some "importance measures" of the respective taps. Or an ACF may be computed jointly for multiple taps. Or, a dominant tap may be identified and the ACF is associated with the dominant tap.)

s4c: determine significant feature point(s) (e.g. local maximum/minimum, first local maximum, second local maximum, etc.) of the ACF. Sometimes multiple taps/distances may be associated with object presence. An ACF may be computed for each tap. The significant feature point may be computed for each ACF. The significant feature points of the ACFs of the multiple taps may be combined, e.g. by weighted average or median filtering, or maximum likelihood)

s4d: compute the characteristics (e.g. breathing rate) of the dominant periodic signal based on the significant feature point(s).

s5: for each DoI, compute characteristics of next dominant periodic signal (e.g. heart beat) by sub-steps s5a to s5b.

s5a: process the raw signal by removing/suppressing influence of the dominant periodic signal (e.g. filter the raw signal, or estimate the dominant periodic signal and subtract it from the raw signal). The raw signal may be the phase of the tap of the directional CIR. The raw signal may also be the ACF in step s4. The dominant periodic signal may be estimated by an operation on the raw signal (e.g. smoothing, low pass filtering, spline interpolation, cubic spline interpolation, polynomial fitting, polynomial fitting with order adaptively selected based on the distance/tap, etc.).

s5b: compute characteristics of the next dominant periodic signal based on the processed raw signal. The characteristics may be computed based on frequency transform, trigonometric transform, fast Fourier transform (FFT), wavelet transform, ACF, etc.

s6: determine a set of DoI associated with an object. For example, clustering may be applied to all the DoI. The set of DoI may correspond to a cluster of DoI. DoI in the set may have similar or correlated characteristics of dominant periodic signal and/or next dominant periodic signal. (e.g. breathing rate/heart rate of DoI associated with a person should be the same, and phase/intensity of breathing of different DoI may be different (e.g. due to phase lead/lag) but correlated). DoI in the set (and/or associated distance/tag) may be adjacent/ connected to a number of other DoI in the set. The set of DoI may reflect a shape/silhouette /projection/size/area/volume/ dimension/weight/body condition/view/action/activity/age/ identity of the object.

s7: compute characteristics of dominant periodic signal (e.g. breathing rate) of the object (e.g. a person) by combining the characteristics of the dominant periodic signals associated with the set of DoI associated with the object.

s8: compute characteristics of next dominant periodic signal (e.g. heart rate) of the object by combining the characteristics of the next dominant periodic signal associated with the set of DoI associated with the object.

Steps s5 (and s8) can be recursively applied to determine characteristics of additional (e.g. third, fourth, etc.) dominant periodic signals. By computing the characteristics (e.g. breathing rate and/or heart rate) over time, one can track the characteristics (e.g. by compute a trajectory, or detecting regular activity/ changes/deviation/anomaly/ sign of danger/sign of medical condition). Steps s3 and s4 may be swap - in that a set of distance-of-interest (each distance associated with some object presence) or a set of point-of-interest (PoI) may be computed. For each distance of interest (and its associated tag of directional CIR), all directions may be tested for object.

In various embodiments of the present teaching, another algorithm for breathing and/or heartbeat detection may be performed as below.

s1: capture CSI using multiple transmit (Tx) antenna and multiple receive (Rx) antenna.

s2: apply beamforming to get directional CSI (e.g. CIR).

s3: determine direction-of-interest (DoI) by detecting object presence in each direction. For each direction: s3a: compute magnitude of CSI (e.g. |h(theta, phi, distance)| of CIR), then time-averaged it over a time window; s3b: determine object is present in the direction (and thus the direction is DoI) if the time-averaged magnitude response is greater than a threshold T1 (e.g. maximum of a first threshold T2 and a second threshold T3). The first threshold T2 may be a 1-dimensional CFAR filtering of |h| in distance direction, and further scaled by beta in Eqn. (73). The second threshold T3 may be a 2-dimensional CFAR filtering of |h| in theta and phi direction, and further scaled by alpha in Eqn. (73).

s4: for each DoI (i.e. object presence is detected), perform motion detection by classifying object into: (a) static object (e.g. furniture), (b) stationary human (with breathing and heartbeat), (c) random body motion, by sub-steps s4a to s4e.

s4a: compute V, variance (over time in a time window) of phase of CSI (e.g. phase of h(theta, phi, distance), NOT |h| which is magnitude of h).

s4b: classify motion as "static object" if V is less than a threshold T4.

s4c: if V>T4, compute ACF and find significant feature point (e.g. first peak) P1.

s4d: classify motion as "random body motion (RBM)" if V>T6 (T6>T4) or PI is less than a threshold T5.

s4e: classify motion as "stationary human" if V>T4 and PI >T5. Compute tentative characteristics of dominant periodic signal (e.g. breathing rate) corresponding to PI using steps s4cl, s4c2 and s4c3.

s4e1: computing an auto-correlation function (ACF) (e.g. ACF over time of a phase of the tap of directional CIR) associated with the distance. Sometimes multiple taps/distances may be associated with object presence. They may be merged/clustered/fused (e.g. in step s6). ACF may be computed for each tap/distance. The multiple ACF may be combined, e.g. by weighted averaging. The respective weights may be determined based on some "importance measures" of the respective taps. Or an ACF may be computed jointly for multiple taps. Or, a dominant tap may be identified and the ACF is associated with the dominant tap.)

s4e2: determining significant feature point(s) (e.g. local maximum/minimum, first local maximum, second local maximum, etc.) of the ACF. Sometimes multiple taps/distances may be associated with object presence. An ACF may be computed for each tap. The significant feature point may be computed for each ACF. The significant feature points of the ACFs of the multiple taps may be combined, e.g. by weighted average or median filtering, or maximum likelihood).

s4e3: compute the characteristics (e.g. breathing rate) of the dominant periodic signal based on the significant feature point(s).

s5: for each DoI, compute characteristics of next dominant periodic signal (e.g. heart beat) by s5a to s5b.

s5a: process the raw signal by removing/suppressing influence of the dominant periodic signal (e.g. filter the raw signal, or estimate the dominant periodic signal and subtract it from the raw signal). The raw signal may be the phase of the tap of the directional CIR. The raw signal may also be the ACF in step s4. The dominant periodic signal may be estimated by an operation on the raw signal (e.g. smoothing, low pass filtering, spline interpolation, B-spline, cubic spline interpolation, polynomial fitting, polynomial fitting with order adaptively selected based on the distance/tap, etc.). An estimation of the dominant periodic signal (e.g. breathing signal) may be computed by a constrained optimization (e.g. B-spline interpolation, minimization of a mean square error in a time window (e.g. of duration W) under a smoothness constraint). The estimate may be a linear combination of a set of pre-defined time functions (e.g. B-spline basis functions, other spline basis functions, other complete or incomplete basis functions). Coefficient of the linear combination may be computed based on a vector/matrix operation.

s5b: compute characteristics of the next dominant periodic signal based on the processed raw signal. The characteristics may be computed based on frequency transform, trigonometric transform, fast Fourier transform (FFT), wavelet transform, ACF, etc. The characteristics may also be computed by constrained optimization (e.g. minimization of an energy function subjected to a smoothness constraint). The energy function may be energy of frequency (e.g. energy of FFT of dominant-component-removed signal, the signal may be the fused/clustered signal). The smoothness constraint may be based on a logarithm of a likelihood. The heart rate may be modelled as a Markov chain with certain state transition probability. (e.g. Typically max state transition probability corresponds to no state change.) The likelihood of the Markov chain may be a product of initial probability and state transition probabilities. The logarithm of the likelihood may be a sum of individual terms.

s6: determine a set of DoI associated with an object. E.g. clustering may be applied to all the DoI. The set of DoI may correspond to a cluster of DoI. DoI in the set may have similar or correlated characteristics of dominant periodic signal and/or next dominant periodic signal. (e.g. breathing rate/heart rate of DoI associated with a person should be the same, and phase/intensity of breathing of different DoI may be different (e.g. due to phase lead/lag) but correlated). DoI in the set (and/or associated distance/tag) may be adjacent/ connected to a number of other DoI in the set. The set of DoI may reflect a shape/silhouette /projection/size/area/volume/ dimension/weight/body condition/view/action/activity/age/identity of the object.

s7: compute characteristics of dominant periodic signal (e.g. breathing rate) of the object (e.g. a person) by combining the characteristics of the dominant periodic signals associated with the set of DoI associated with the object.

s8: compute characteristics of next dominant periodic signal (e.g. heart rate) of the object by combining the characteristics of the next dominant periodic signal associated with the set of DoI associated with the object.

Steps s5 (and s8) can be recursively applied to determine characteristics of additional (e.g. third, fourth, etc.) dominant periodic signals. By computing the characteristics (e.g. breathing rate and/or heart rate) over time, one can track the characteristics (e.g. by compute a trajectory, or detecting regular activity/ changes/deviation/anomaly/ sign of danger/sign of medical condition). Steps s3 and s4 may be swap - in that a set of distance-of-interest (each distance associated with some object presence) or a set of point-of-interest (PoI) may be computed. For each distance of interest (and its associated tag of directional CIR), all directions may be tested for object.

In various embodiments of the present teaching, breathing and/or heartbeat detection may be performed by a method as disclosed in the following clauses.

Clause C1: A method of a wireless monitoring system, comprising: transmitting a wireless probe signal from a Type 1 heterogeneous wireless device using N1 transmit (Tx) antennas of the Type 1 device through a wireless multipath channel of a venue, wherein a first object in the venue is undergoing a first repetitive motion; receiving the wireless probe signal by a Type 2 heterogeneous wireless device using N2 receive (Rx) antennas of the Type 2 device; obtaining a number of time series of channel information (CI) of the wireless multipath channel based on the received wireless probe signal using a processor, a memory communicatively coupled with the processor and a set of instructions stored in the memory, wherein each time series of CI (TSCI) is associated with a Tx antenna of the Type 1 device and a Rx antenna of the Type 2 device; computing a first information of the first repetitive motion based on the number of TSCI; monitoring the first repetitive motion of the first object based on the first information.

Clause C2: The method of the wireless monitoring system of clause C1, further comprising: wherein at least one of: the first object and a second object, is undergoing a second repetitive motion; computing a second information of the second repetitive motion based on at least one of: the number of TSCI and the first information; monitoring the second repetitive motion based on the second information.

Clause C3: The method of the wireless monitoring system of clause C2, further comprising: computing at least one analytics based on at least one of: the first information and the second information; storing at least one of: the first information, the second information, and the at least one analytics; communicating at least one of: the first information, the second information, and the at least one analytics, to at least one of: a server and a user device; generating a presentation based on at least one of: the first information, the second information, and the at least one analytics.

Clause C4: The method of the wireless monitoring system of clause C1, further comprising: wherein at least one of: the first object and a second object, is undergoing a second repetitive motion; monitoring the first repetitive motion and the second repetitive motion simultaneously based on the number of TSCI.

Clause C5: The method of the wireless monitoring system of clause C1, further comprising: wherein at least one of: the first object and a second object, is undergoing a second repetitive motion; monitoring the first repetitive motion and the second repetitive motion sequentially based on the number of TSCI.

Clause C6: The method of the wireless monitoring system of clause C1, further comprising: wherein at least one of: the first object and a second object, is undergoing a second repetitive motion; monitoring the second repetitive motion based on the monitoring of the first repetitive motion.

Clause C7: The method of the wireless monitoring system of clause C1, further comprising: wherein at least one of: the first object and a second object, is undergoing a second repetitive motion; monitoring the second repetitive motion based on a removal of an influence of the first repetitive motion.

Clause C8: The method of the wireless monitoring system of clause C7, further comprising: computing a second information of the second repetitive motion based on the number of TSCI and the removal of the influence of the first repetitive motion; monitoring the second repetitive motion based on the second information.

Clause C9: The method of the wireless monitoring system of clause C7, further comprising: removing the influence of the first repetitive motion by at least one of: estimating the influence of the first repetitive motion, eliminating the influence of the first repetitive motion, undoing the influence of the first repetitive motion, suppressing the influence of the first repetitive motion, subtracting an estimate of the first repetitive motion, dividing by the estimate of the first repetitive motion, filtering, pre-filtering, post-filtering, preprocessing, postprocessing, smoothing, lowpass filtering, bandpass filtering, highpass filtering, and another processing.

Clause C10: The method of the wireless monitoring system of clause C9, further comprising: estimating the influence of the first repetitive motion based on at least one of: merging, clustering, merging of estimates associated with more than one direction, clustering of more than one directions associated with the first repetitive motion, polynomial interpolation, piecewise polynomial interpolation, polynomial fitting, polynomial fitting with adaptive order, polynomial fitting with order adaptively selected based on at least one of: a probing rate of the wireless probing signal, a sampling rate of the received wireless probe signal, a distance of the first object, a bandwidth of the wireless multipath channel, a frequency of the first repetitive motion, and a frequency of the second repetitive motion, spline interpolation, cubic spline interpolation, B-spline, optimization, constrained optimization, minimizing a cost function subjected to smoothness constraint, minimizing an interpolation error energy term subjected to a bilinear form constraint, filtering, pre-filtering, post-filtering, lowpass filtering, highpass filtering, bandpass filtering, and smoothing.

Clause C11: The method of the wireless monitoring system of clause C1, further comprising: computing a beamforming based on the number of TSCI; and computing at least one derived TSCI each associated with a direction based on the beamforming.

Clause C12: The method of the wireless monitoring system of clause C11: wherein each CI comprises a number of components each associated with a propagation delay; wherein the beamforming is computed component-wise.

Clause C13: The method of the wireless monitoring system of clause C11: wherein beamforming is applied at a particular time in a component-wise manner; wherein a derived CI at the particular time is computed on a beamforming applied to all respective CI of the number of TSCI at the particular time; wherein all CI has the same number of components; wherein each component of the derived CI at the particular time is computed based on the corresponding component of all the respective CI of the number of TSCI.

Clause C14: The method of the wireless monitoring system of clause C11, further comprising: wherein the beamforming is computed based on at least one of: analog beamforming, digital beamforming, non-adaptive beamforming, adaptive beamforming, parametric beamforming, non-parametric beamforming, compressive sensing based beamforming, minimum variance distortionless response (MVDR) beamformer, a solution to an inverse problem, direction-of-arrival estimation, tomographic reconstruction, a maximum likelihood method, a maximum entropy method, a covariance method, peak detection of discrete Fourier transform, a super-resolution method, a parameter-free super-resolution method, constrained minimization of a distortion in a target direction, constrained minimization of a power of interference and noise from directions other than the target direction, eigen-decomposition, singular value decomposition (SVD), another decomposition, a signal subspace determination, a noise subspace determination, a projection, an autoregressive (AR) model, an autoregressive-moving-average (ARMA) model, steering vector associated with the direction, an analysis of a matrix comprising a signal matrix, a correlation matrix, a covariance matrix, an autocorrelation matrix, an auto-covariance matrix, an inverse of a matrix, and another matrix, multiple signal classification (MUSIC), MUSIC-like method, time-reversal MUSIC (TR-MUSIC), Capon beamformer, Butler matrix, Pisarenko harmonic decomposition, iterative sparse asymptotic minimum variance (SAMV), spectral estimation, an Akaike Information Criterion (AIC), Bayesian information Criterion (BIC), Generalized Information Criterion (GIC), a criterion variant, a model order selection algorithm, and another beamforming method.

Clause C15: The method of the wireless monitoring system of clause C1, further comprising: computing a spatial spectrum associated with a set of propagation delay and for a set of directions based on the number of TSCI and a beamforming; and monitoring the at least one object based on the spatial spectrum, wherein each direction is associated with at least one of: an angle, an azimuth, an elevation angle, a coordinate, a steering vector, a link between a transmit antenna of the Type 1 device and a receive antenna of the Type 2 device, a path associated with an object in the direction, and another direction descriptor, wherein each propagation delay is associated with a time lag, a time delay, a time index, a propagation time, a time-of-flight, distance, a range, and another time descriptor.

Clause C16: The method of the wireless monitoring system of clause C1, further comprising: computing a set of time series of directional information (DI) based on the number of TSCI and a beamforming, each time series of DI (TSDI) associated with a direction; computing the first information of the first repetitive motion based on the TSDI, wherein the channel information (CI) comprises at least one of: channel state information (CSI), channel impulse response (CIR), and channel frequency response (CFR), wherein a directional information (DI) of the TSDI comprise at least one of: CI, channel state information (CSI), channel impulse response (CIR), channel frequency response (CFR), directional CI (DCI) associated with a direction, directional CSI (DCSI), directional CIR (DCIR), directional CFR (DCFR), a component of at least one of: the CI, CSI, CIR, CFR, DCI, DCSI, DCIR, and DCFR, associated with a distance, a magnitude of at least one of: the CI, CSI, CIR, CFR, DCI, DCSI, DCIR, DCFR and the component, a phase of at least one of the CI, CSI, CIR, CFR, DCI, DCSI, DCIR, DCFR and the component, directional weight, spatial spectrum, distribution of an information of reflected signals in the space of the venue, distribution of energy of reflected signals in the space of the venue, a heat map, and another directional information.

Clause C17: The method of the wireless monitoring system of clause C16, further comprising: testing each respective TSDI for object presence in respective direction; computing a set of direction-of-interest (DoI) comprising directions in which object presence is detected.

Clause C18: The method of the wireless monitoring system of clause C17, further comprising: computing respective test quantity based on at least one of: the respective TSDI associated with the respective direction, and a set of TSDI each associated with a respective neighboring direction, the respective test quantity associated with a particular point at a particular distance in a particular direction, the particular point associated with a particular component of a particular DI of a particular TSDI at a particular time; detecting object presence in the respective direction if the respective test quantity is greater than respective threshold.

detecting object absence in the respective direction if the respective test quantity is less than the respective threshold.

Clause C19: The method of the wireless monitoring system of clause C17, further comprising: computing respective test quantity based on the respective TSDI for the respective direction and a distance; detecting object presence at the distance in the respective direction if the respective test quantity is greater than respective threshold.

Clause C20: The method of the wireless monitoring system of clause C19, further comprising: computing a point-of-interest (PoI) associated with object presence, wherein the PoI is a point corresponding to the respective direction and the distance at which object presence is detected.

Clause C21: The method of the wireless monitoring system of clause C19: wherein the respective threshold is a distance-adaptive threshold; wherein the respective threshold is based adaptively on the distance.

Clause C22: The method of the wireless monitoring system of clause C18 or clause C19: wherein the respective threshold is an direction-adaptive threshold; wherein the respective threshold is based on at least one of: constant false alarm rate (CFAR), weighted averaging of values of neighboring directions of the respective direction, weighted averaging of values of the neighboring directions excluding a guard region of immediately neighboring directions of the respective direction, cell-averaging constant false alarm rate (CA-CFAR), and another directional scheme.

Clause C23: The method of the wireless monitoring system of clause C1, further comprising: computing a time series of directional information (TSDI) associated with a direction based on the number of TSCI and a beamforming, ; determining a time window of the TSDI is associated with object presence; computing the first information of the first repetitive motion based on the time window of the TSDI.

Clause C24: The method of the wireless monitoring system of clause C1, further comprising: computing a time series of directional information (TSDI) based on the number of TSCI and a beamforming, wherein the TSDI is associated with a direction-of-interest (DoI) which is a direction associated with object presence, wherein each directional information (DI) of the TSDI comprises a number of components each associated with a propagation delay and a distance; determining a first component of DI is associated with object presence in a time window; compute the first information of the first repetitive motion based on the first component of each DI in the time window of the TSDI.

Clause C25: The method of the wireless monitoring system of clause C24, further comprising: computing the first information of the first repetitive motion based on a feature of the first component of each DI in the time window of the TSDI, wherein the feature comprises at least one of: magnitude, phase, real component, imaginary component, a function of another feature, a square of magnitude, an exponential function of magnitude, and another feature.

Clause C26: The method of the wireless monitoring system of clause C25, further comprising: computing a statistical function of the feature of the first component of each DI in the time window of the TSDI, wherein the statistical function comprises at least one of: an auto- function, auto-correlation function (ACF), auto-covariance function, a function of the auto-function, a square of the auto- function, a polynomial of the auto function, a transform of the auto function, a frequency transform of the auto function, a Fourier transform of the auto function, a cross correlation, a cross covariance, a square of ACF, a polynomial of ACF, a transform of ACF, a Fourier transform of ACF, a power spectral density, a moving average, a sliding mean, a sliding variance, another statistical function, and a function of another statistical function.

Clause C27: The method of the wireless monitoring system of clause C26, further comprising: computing at least one characteristic point of the statistical function, wherein at least one the characteristic point comprises at least one of: a zero crossing, a zero crossing of a slope, a zero crossing of a high order derivative, a zero crossing of a function of the statistical function, a maximum, a maximum of slope, a maximum of high order derivative, a maximum of the function of the statistical function, a minimum, a minimum of slope, a minimum of high order derivative, a minimum of the function of the statistical function, an extremum, an extremum of slope, an extremum of high order derivative, an extremum of the function of the statistical function, a global maximum, a local maximum, a constrained maximum, a significant local maximum, a global minimum, a local minimum, a constrained minimum, a significant local minimum, a global extremum, a local extremum, a constrained extremum, a significant local extremum, a number of maxima, a number of maxima in succession, a number of minima, a number of minima in succession, a number of maxima and minima, a number of maxima and minima in succession, and another characteristic point; computing the first information of the first repetitive motion based on the at least one characteristic point.

Clause C28: The method of the wireless monitoring system of clause C25, further comprising: wherein at least one of: the first object and a second object, is undergoing a second repetitive motion; computing a second information of the second repetitive motion based on the feature of a second component of each DI in the time window of the TSDI; monitoring the second repetitive motion based on the second information.

Clause C29: The method of the wireless monitoring system of clause C28, further comprising: wherein the first object is undergoing the second repetitive motion; computing the second information of the second repetitive motion of the first object based on the feature of the first component of each DI in the time window of the TSDI; monitoring the second repetitive motion of the first object based on the second information.

Clause C30: The method of the wireless monitoring system of clause C29, further comprising: computing the second information of the second repetitive motion of the first object based on the first information.

Clause C31: The method of the wireless monitoring system of clause C29, further comprising: processing the feature of the first component of each DI in the time window of the TSDI by removing a first influence of the first repetitive motion on the feature; computing the second information of the second repetitive motion of the first object based on the processed feature.

Clause C32: The method of the wireless monitoring system of clause C31, further comprising: computing an estimate of the first influence of the first repetitive motion on the feature by suppressing a second influence of other repetitive motion on the feature; removing the first influence of the first repetitive motion on the feature by subtracting the estimate of the first influence from the feature of the first component of each DI in the time window of the TSDI.

Clause C33: The method of the wireless monitoring system of clause C16, further comprising: determining a number of direction-of-interest (DoI), each DoI being a direction associated with object presence of the first object; computing a number of TSDI, one TSDI for each DoI; computing a number of tentative first information of the first repetitive motion, each respective tentative first information based on a respective TSDI associated with a respective DoI; computing the first information based on the number of tentative first information.

Clause C34: The method of the wireless monitoring system of clause C16, further comprising: computing the first information by combining the number of tentative first information, wherein combining.

Clause C35: The method of the wireless monitoring system of clause C16, further comprising: wherein at least one of: the first object and a second object, is undergoing a second repetitive motion; determining a number of direction-of-interest (DoI), each DoI being a direction associated with object presence; computing a number of TSDI, one TSDI for each DoI; computing a number of tentative second information of the second repetitive motion, each respective tentative second information based on a respective TSDI and a removal of a respective influence of the first repetitive motion; computing a second information of the second repetitive motion based on the number of tentative second information.

Clause C36: The method of the wireless monitoring system of clause C1, further comprising: computing a set of point-of-interest (PoI) based on at least one of: the number of TSCI and a TSDI computed based on the number of TSCI and a beamforming, wherein each PoI is associated with an object presence, wherein each PoI is a point in the venue associated with a propagation delay and a direction; and monitoring the first object based on the set of PoI.

Clause C37: The method of the wireless monitoring system of clause C17, further comprising: computing a propagation-delay-of-interest (PDoI) based on the number of TSCI and the TSDI, wherein the PDoI comprises a set of selected propagation delay, each propagation delay associated with a respective distance, where each selected propagation delay is associated with the first object presence; and computing the set of PoI based on the PDoI.

Clause C38: The method of the wireless monitoring system of clause C18, further comprising: computing a variability measure of a TSDI associated with a propagation delay, wherein each directional information is computed based on the number of TSCI and a beamforming, wherein the variability measure comprises at least one of: standard deviation, variance, a measure of variation, a measure of spread, a measure of dispersion, a measure of deviation, a measure of divergence, range, interquartile range, total variation, absolute deviation, and total deviation; selecting the propagation delay and associating the propagation delay with the presence of the at least one object if the variability measure is greater than a threshold; and adding the selected propagation delay to the PDoI.

Clause C39: The method of the wireless monitoring system of clause C19, further comprising: computing a set of the variability measure associated with a set of propagation delay, each variability measure associated with a respective propagation delay; and computing the threshold as a function of the set of the variability measure, wherein the function comprises at least one of: mean, median, mode, percentile, weighted average, geometric mean, harmonic mean, trimmed mean, variance, scaling, offset, linear function, nonlinear function, monotonic non-decreasing function, monotonic non-increasing function, and a hybrid function.

Clause C40: The method of the wireless monitoring system of clause C18, further comprising: wherein the PDoI comprises at least two clusters of consecutive propagation delay values; computing a distance between two clusters of the PDoI; and expanding the PDoI by adding a missing propagation delay value between the two clusters to the PDoI if the distance is less than a threshold.

Clause C41: The method of the wireless monitoring system of clause C18, further comprising: wherein the PDoI comprises at least one disjoint cluster of consecutive propagation delay values; examining the directional quantities with associated propagation delay in the PDoI in a particular direction; identifying a cell of points in the particular direction, wherein propagation delay values associated with the cell of points are a subset of a cluster of the PDoI and each point in the cell has an associated directional information greater than a threshold; selecting in the cell of points a characteristic point associated with a propagation delay with at least one of the following characteristics of the cell: minimum, maximum, mid-point, mean, centroid with respect to (w.r.t.) the directional quantities, mean w.r.t. the directional quantities, weighted mean w.r.t. the directional quantities, median w.r.t. the directional quantities, mode w.r.t. the directional quantities, a percentile w.r.t. the directional quantities, minimum w.r.t. the directional quantities, maximum w.r.t. the directional quantities, local minimum w.r.t. the directional quantities, local maximum w.r.t. the directional quantities, minimum slope w.r.t. the directional quantities, maximum slope w.r.t. the directional quantities, local minimum slope w.r.t. the directional quantities, local maximum slope w.r.t. the directional quantities, and another characteristics; and adding the selected characteristic point as a PoI to the set of PoI.

Clause C42: The method of the wireless monitoring system of clause C18, further comprising: wherein the PDoI comprises at least one disjoint cluster of consecutive propagation delay values; examining the directional quantities with associated propagation delay in the PDoI; identifying a set of points in the venue, wherein propagation delay values associated with the set of points are a subset of a particular disjoint cluster of the PDoI and each point in the cell has an associated directional information satisfying a first criterion; and for each direction associated with the set of points: selecting at least one characteristic point based on at least one of: a subset of the set of points in the direction and the associated directional quantities, and adding the at least one selected characteristic point as a PoI to the set of PoI.

Clause C43: The method of the wireless monitoring system of clause C23, further comprising: refining the points in the PoI, wherein the refining comprises at least one of: smoothing, filtering, super-resolution, interpolation, 1-dimensional (1-D) interpolation, 2-D interpolation, 3-D interpolation, transformation, transformation from polar coordinate to rectangular coordinate, and another processing.

Clause C44: The method of the wireless monitoring system of clause C17, further comprising: cleaning the set of PoI based on the associated directional quantities by at least one of: resampling the set of PoI, weighted resampling based on the associated directional quantities, removing a PoI from the set of PoI, adding a PoI to the set of PoI, eliminating an insignificant PoI from the set of PoI, eliminating a PoI with insignificant associated directional information, eliminating a PoI with associated directional information less than a threshold, eliminating a PoI with associated directional information less than a dynamic threshold, eliminating a PoI with associated directional information less than an adaptive threshold, wherein the adaptive threshold that is monotonic non-decreasing with respect to propagation delay, eliminating a PoI with associated directional information less than an adaptive threshold, wherein the adaptive threshold is a piecewise linear function of the range associated with the propagation delay, filtering, linear filtering, nonlinear filtering, and another operation on the set of PoI.

Clause C45: The method of the wireless monitoring system of clause C17, further comprising: processing of the set of PoI and the associated directional quantities, and monitoring the at least one object based on the processing, wherein the processing comprises at least one of: clustering, identification of at least one cluster, associating the at least one cluster with the at least one object, k-mean clustering, resampling, weighted resampling, morphological operation, thresholding, silhouette analysis, computing a silhouette value associated with each PoI, computing a silhouette value based on at least one of: an average distance from a PoI to the other PoI in the same cluster of PoI, a minimum distance from the PoI to PoI in a different cluster, and a maximization of the two distance, maximizing a silhouette value, computing a similarity score between a PoI and a cluster, maximizing the similarity score, computing a characterization score regarding how similar a PoI is to its own cluster of PoI compared to a separation distance to it neighboring clusters of PoI, maximizing the characterization score, associating the set of PoI with a time stamp, processing the set of PoI jointly with a set of PoI associated with another time stamp, computing a global centroid of the set of PoI, iteratively expanding to all neighboring points that satisfy a density constraint, iteratively expanding to a set of neighboring points each with a density larger than a threshold, iteratively expanding to a set of neighboring points each with a density larger than a minimum number of points within a neighboring circle of a particular radius, projecting a set of points extended from the centroid to a plane, computing an area of the projected points from the set of points, computing the area in the plane, computing a medoid of each cluster, computing an intra-cluster medoid distance, computing a distance of every point in a cluster to its medoid, computing a distance between medoids of two clusters, and another processing.

Clause C46: The method of the wireless monitoring system of clause C17, further comprising: determining a number of clusters in the set of PoI by applying a clustering algorithm that optimizes a cost function; wherein the clustering algorithm comprises at least one of: connectivity-based clustering, hierarchical clustering, centroid-based clustering, k-means algorithm, vector quantization, distribution-based clustering, multivariate normal distribution based clustering, Gaussian-mixture based clustering, statistical distribution fitting, maximum likelihood, expectation-maximization algorithm, density-based clustering, DBSCAN, OPTICS, dense connected regions identification, subspace-based clustering, biclustering, co-clustering, two-mode-clustering, group-based clustering, model-less clustering, graph-based clustering, clique-based clustering, quasi-clique based clustering, HCS clustering, signed graph based clustering, balance theory based clustering, bifurcated graph based clustering, clustererability axiom based clustering, neural network (NN)-based clustering, self-organization map based clustering, unsupervised NN based clustering, principal component analysis, independent component analysis, hard clustering, soft clustering, fuzzy clustering, strict partition clustering, strict partition clustering with outliers, overlapping clustering, alternative clustering, multi-view clustering, and another clustering; wherein optimizing the cost function comprises at least one of: maximization, constrained maximization, global maximization, local maximization, maximization restricted to medoid, minimization, constrained minimization, global minimization, local minimization, minimization restricted to medoid, and another optimization; wherein the cost function is based on: a distance, an average distance, an intra-cluster distance, an inter-cluster distance, an average distance from a PoI in a cluster to other PoI in the same cluster, a minimum average distance from PoI in a cluster to PoI in another cluster, medoid distance, inra-cluster medoid distance, inter-cluster medoid distance, Euclidean distance, absolute distance, L-1 norm, L-2 norm, L-k norm, a silhouette value, an average silhouette value, an intra-cluster silhouette value, an inter-cluster silhouette value, a silhouette value based on a distance, a silhouette value based on an intra-cluster distance and an inter-cluster distance, a silhouette value based on an average distance from a PoI in a cluster to other PoI in the same cluster and a minimum average distance from PoI in a cluster to PoI in another cluster, a similarity score, an average similarity score, an intra-cluster similarity score, an inter-cluster similarity score, a similarity score based on a distance, a similarity score based on an intra-cluster distance and an inter-cluster distance, a similarity score based on an average distance from a PoI in a cluster to other PoI in the same cluster and a minimum average distance from PoI in a cluster to PoI in another cluster, an adaptive silhouette value based on a number of temporally neighboring silhouette values, an adaptive silhouette value based on a number of past silhouette values, an adaptive silhouette value based on application of a weighting function, wherein the weighting function is a function of clusterNum which is the number of clusters, an adaptive silhouette value based on application of a weighting function, wherein the weighting function has a maximum when clusterNum is equal to a majority value of a set of past clusterNum, and another cost function.

Clause C47: The method of the wireless monitoring system of clause C27, further comprising: validing the clusters in the set of PDoI based on a medoid distance; splitting a cluster if an intra-cluster medoid distance is greater than a threshold; and combining two clusters if the inter-cluster medoid distance is less than another threshold.

Clause C48: The method of the wireless monitoring system of clause C27, further comprising: associating the number of clusters with the at least one object; and computing at least one of: a count of the at least one objects, a location of an object based on a geometric medoid of all the points belonging to an associated cluster, and a height of the first object based on a maximum of height associated with all the points belonging to the associated cluster.

Clause C49: The method of the wireless monitoring system of clause C4, further comprising: computing a directional information for a direction based on at least one of: analog beamforming, digital beamforming, non-adaptive beamforming, adaptive beamforming, parametric beamforming, non-parametric beamforming, compressive sensing based beamforming, direction-of-arrival estimation, tomographic reconstruction, a solution to an inverse problem, a maximum likelihood method, a maximum entropy method, a covariance method, an eigen-analysis of a signal matrix or an autocorrelation matrix or a covariance matrix, eigen-decomposition, singular value decomposition (SVD), another decomposition, a projection, peak detection of discrete Fourier transform, a super-resolution method, a parameter-free superresolution method, an autoregressive (AR) model, an autoregressive-moving-average (ARMA) model, a correlation matrix, an inverse of a matrix, steering vector associated with the direction, minimum variance distortionless response (MVDR) beamformer, minimum power of interference and noise from other directions, distortionless response towards the looking direction, Capon beamformer, Butler matrix, multiple signal classification (MUSIC), MUSIC-like method, time-reversal MUSIC (TR-MUSIC), Pisarenko harmonic decomposition, iterative sparse asymptotic minimum variance (SAMV), spectral estimation, an Akaike Information Criterion (AIC), Bayesian information Criterion (BIC), Generalized Information Criterion (GIC), a criterion variant, a model order selection algorithm, a signal subspace determination, a noise subspace determination, a projection, and another digital beamforming method.

Clause C50: The method of the wireless monitoring system of clause C1: wherein the N1 antennas of the Type 1 device are arranged in a first lattice with at least one first characteristic spacing; wherein the N2 antennas of the Type 2 device are arranged in a second lattice with at least one second characteristic spacing.

wherein at least one of: the Type 1 device and the Type 2 device are placed at two different locations in the venue, the Type 1 device and the Type 2 device are collocated, being placed at the similar locations in the venue, and the Type 1 device and the Type 2 device are the same device comprising an integrated circuits (IC) that transmits and receives the probe signal and obtains the number of TSCI from the received probe signal.

Clause C51: The method of the wireless monitoring system of clause C1: wherein there are more than one pairs of Type 1 device and Type 2 device in the venue, each respective Type 2 device of a pair receiving a respective wireless signal asynchronously from the respective Type 1 device of the pair and obtaining asynchronously a respective TSCI; wherein the Type 1 device and the Type 2 device of a first pair are collocated; wherein the Type 1 device and the Type 2 device of a second pair are placed at two different locations in the venue.

Clause C52: The method of the wireless monitoring system of clause C1: wherein the first repetitive motion is at least one of: non-repetitive, repeated-once, repeated-twice, repeated-for-multiple-times, regular, irregular, periodic, pseudo-periodic, and temporarily periodic.

Clause C53: The method of the wireless monitoring system of clause C1 or clause C2: wherein at least one of: the first information (info) and the second info, comprising at least one of: a periodicity info, rhythm info, timing info, intensity info, regularity info, transient info, statistical info, normal info, deviation-from-normal info, state info, state-transition info, instantaneous info, local info, moving info, sliding info, weighted info, motion info, proximity info, presence info, movement info, gesture info, gait info, gait cycle info, action info, activity info, behavior info, daily routine info, location info, navigation info, locationing info, localization info, tracking info, coordinate info, spatial info, temporal info, trend info, history info, user info, identification info, recognition info, classification info, venue info, quantity, count info, event info, safety info, emergency info, breathing info, heartbeat info, sleep info, biometric info, cardiopulmonary info, daily activity info, chronic disease info, medical info, histogram, mean, average, moving average, weighted average, weighted mean, trimmed mean, variance, standard deviation, correlation, correlation coefficient, median, mode, weighted median, distribution, statistics, conditional analytics, conditional statistics, conditional mean, conditional variance, conditional median, conditional mode, short-term correlation, long-term correlation, auto-correlation, cross-correlation, correlation indicator, short-term covariance, long-term covariance, auto-covariance, cross- covariance, covariance indicator, measure of variation, variability, spread, dispersion, deviation, divergence, range, interquartile range, total variation, absolute deviation, total deviation, arithmetic mean, geometric mean, harmonic mean, trimmed mean, percentile, quartile, indicator, indication, early indication, instantaneous indication, contemporaneous indication, delayed indication, pattern, one-time pattern, repeating pattern, evolving pattern, time pattern, mutually exclusive pattern, related pattern, correlated pattern, typical pattern, atypical pattern, start, stop, pause, resume, presence, absence, proximity, event, normal event, suspicious event, dangerous event, alarming event, warning, belief, collision, amplitude, intensity, strength, frequency, rate, period, phase, phase lag, cycle, time, timing, starting time, ending time, duration, time lag, offset, shift, deviation, variation, change, alteration, adjustment, adaptation, orientation, direction, axis, location, distance, displacement, height, speed, acceleration, angle, angular distance, angular speed, angular acceleration, radial distance, angular displacement, change, abrupt change, gradual change, change in frequency, change in period, transition, biometric, breathing rate, breathing period, breathing timing, breathing rhythm, breathing pattern, breathing intensity, breathing amplitude, breathing depth, breathing variability, breathing rate variability, heart rate, heart period, heartbeat, heartbeat timing, heart rhythm, heartbeat intensity, heartbeat amplitude, heartbeat variability, heart rate variability (HRV), state, sleep state, rapid-eye-movement (REM) state, non-REM (NREM) state, awake state, security state, motion state, motion state, motion intensity, motion type, motion classification, static motion, non-static motion, stationary motion, non-stationary motion, statistical parameters, analytics, object type, object classification, static object, non-static object, active object, inactive object, active non-static object, inactive non-static object, at least one of: indication, suggestion, sign, indicator, verifier, detection and symptom, of at least one of: a disease, condition, situation, trend, cycle, behavior, pattern, tendency, inclination, cause-and-effect, and correlation, and another information.

Clause C54: The method of the wireless monitoring system of clause C18, wherein the respective test quantity comprise at least one of: at least one of: a quantity, vector, matrix, data, data structure, data set, feature, magnitude, phase, CI, CI component, directional information (DI) and DI component, that may be at least one of: dominant, representative, characteristic, indicative, archetypal, paradigmatic, exemplary, key, prominent, common, shared, typical, prototypical, averaged, regular, persistent, usual, normal, atypical, unusual, abnormal, and unrepresentative, similarity, similarity measure, similarity score, similarity between two CI, similarity between two CI, similarity between two vectors of CI, similarity between two windows of CI, similarity between two windows of CI with unequal window length, similarity between two DI, similarity between two DI, similarity between two vectors of DI, similarity between two windows of DI, similarity between two windows of DI with unequal window length, distance score, distance measure between two CI, distance measure between two vectors of CI, distance measure between two windows of CI, distance measure between two windows of CI aligned and mapped, distance measure between two windows of CI aligned using dynamic time warping (DTW), distance measure between two DI, distance measure between two vectors of DI, distance measure between two windows of DI, distance measure between two windows of DI aligned and mapped, distance measure between two windows of DI aligned using dynamic time warping (DTW), Euclidean distance, absolute distance, L-1 distance, L-2 distance, L-k distance, weighted distance, graph distance, distance metric, norm, L-1 norm, L-2 norm, L-k norm, pseudo metric, extended metric, quasimetric, metametric, semimetric, premetric, pseudoquasimetric, metric tensor, bilinear form, correlation, correlation of two CI, correlation of two DI, correlation coefficient, correlation indicator, autocorrelation, a feature of autocorrelation function (ACF), cross correlation, inner product, dot product, outer product, covariance, auto-covariance, cross covariance, discrimination score, magnitude, phase, average, time average, spatial average, mean, weighted average, time average, spatial average, directional average, radial average, variance, standard deviation, variability measure, variability metric, total variation, absolute variation, measure of variation, spread, dispersion, deviation, total deviation, divergence, likelihood, probability distribution function, sample distribution, moment generating function, expected value, expected function, total variation, absolute variation, measure of variation, spread, dispersion, deviation, total deviation, divergence, range, interquartile range, weighted mean, trimmed mean, arithmetic mean, geometric mean, harmonic mean, conditional mean, median, mode, percentile, linear combination, transformation, location, localization, location coordinate, change in location, position, map position, height, horizontal location, vertical location, distance, displacement, speed, acceleration, rotational speed, rotational acceleration, direction, angle of motion, azimuth, direction of motion, rotation, path, deformation, transformation, shrinking, expanding, positional characteristics, gait, gait cycle, gesture, handwriting, head motion, mouth motion, hand motion, leg motion, body motion, heart motion, internal organ motion, tool motion, machine motion, complex motion, combination of multiple motions, motion trend, repeatedness, periodicity, pseudo-periodicity, impulsiveness, sudden-ness, fall-down occurrence, recurrence, transient event, behavior, transient behavior, period, time trend, temporal profile, temporal characteristics, occurrence, time, timing, starting time, initiating time, ending time, duration, history, motion classification, motion type, change, temporal change, frequency change, CI change, DI change, timing change, gait cycle change, frequency spectrum, frequency characteristics, frequency, presence, absence, proximity, approaching, receding, object identifier, object composition, mouth-related rate, eye-related rate, walking rate, breathing rate, heart rate, periodicity measure, periodicity metric, tidal volume, depth of breath, inhale time, exhale time, inhale time to exhale time ratio, airflow rate, heart heat-to-beat interval, heart rate variability, motion detection statistics, motion identification statistics, motion recognition statistics, signal statistics, signal dynamics, anomaly, parameter, motion magnitude, motion phase, motion signal transformation, motion feature, presence of object, absence of object, entrance of object, exit of object, change of object, motion cycle, motion count, gait cycle, motion rhythm, deformation motion, size, length, area, volume, capacity, shape, form, tag, starting/initiating location, ending location, starting/initiating quantity, ending quantity, event occurrence, event statistics, fall-down event, security event, accident event, home event, office event, factory event, warehouse event, manufacturing event, assembly line event, maintenance event, vehicle-related event, navigation event, tracking event, door event, door-open event, door-close event, window event, window-open event, window-close event, repeatable event, one-time event, consumed quantity, unconsumed quantity, state, physical state, health state, well-being state, emotional state, mental state, another event, analytics, output responses, and another test quantity.

Clause C55: The method of the wireless monitoring system of clause C18, further comprising: computing the respective test quantity based on at least one of: a DI of a TSDI, a time associated with the DI, a component of the DI, at least one of: a time lag, a point in the venue, a direction, a distance, a geometric coordinate and a map coordinate, associated with the component of the DI, a quantity associated with at least one of: the DI and the component of the DI comprising at least one of: time, the DI, the DI component, magnitude, vector norm, DI magnitude, DI component magnitude, phase, DI phase, DI component phase, conjugate, real part, imaginary part, sign, square, cube, root, power, magnitude square, magnitude cube, magnitude to a power, absolute value, and collection of more than one quantities, a unitary function of the quantity comprising at least one of: linear function, nonlinear function, piecewise linear function, polynomial, trigonometric function, sine, cosine, tangent, elliptical function, parabolic function, hyperbolic function, logarithmic function, exponential function, algebraic function, special function, game function, zeta function, Bessel function, Beta function, Gamma function, Gaussian function, error function, complementary error function, Poisson function, inverse function, transcendental function, absolute function, logical function, derivative with respect to at least one of: time, direction, and distance, higher order derivative, thresholding, soft threshold, hard threshold, indicator function, clipping, soft clipping, quantization, mapping, shifting, scaling, zero crossing, group, set, collection, union, intersection, composite function, and function of function, a neighborhood of the DI, a neighboring DI, a temporal neighborhood of the time of the DI, a temporally neighboring DI in the temporal neighborhood, a spatial neighborhood of the point, a spatially neighboring DI in the spatial neighborhood, a directional neighborhood of the direction, a directionally neighboring DI, a radial neighborhood of the distance, a radially neighboring DI, a geometric neighborhood associated with at least one of: the geometric coordinate and the map coordinate, a geometrically neighboring DI, a set of at least one of: neighboring DI, temporally neighboring DI, spatially neighboring DI, directionally neighboring DI, a radially neighboring DI, and a geometric neighboring DI, a multivariate function of the quantity associated with a set of neighboring DI comprising at least one of: average, time average, spatial average, mean, variance, standard deviation, total variation, absolute variation, measure of variation, spread, dispersion, deviation, total deviation, divergence, range, interquartile range, weighted mean, trimmed mean, arithmetic mean, geometric mean, harmonic mean, conditional mean, median, mode, percentile, linear combination, transformation, short-term statistics, long term statistics, autocorrection function (ACF), power spectral density (PSD), cross correlation function, covariance function, moment generating function, filtering, convolution, linear filtering, piecewise linear filtering, nonlinear filtering, low pass filtering, bandpass filtering, highpass filtering, windowed filtering, constant-false-alarm-rate (CFAR) windowed filtering, 1D-CFAR filtering, 2D-CFAR filtering, 3D-CFAR filtering, median filtering, rank filtering, matched filtering, particle filter, adaptive filtering, smoothing, first derivative, second derivative, high order derivative, frequency transform, discrete time transform, discrete transform, Fourier transform, DFT, FFT, cosine transform, DCT, sine transform, DST, Laplace transform, Hadamard transform, Hilbert transform, wavelet transform, trigonometric transform, sine transform, cosine transform, DCT, integer transform, sparse transform, graph-based transform, projection, orthogonal projection, non-orthogonal projection, overcomplete projection, eigen-decomposition, singular value decomposition (SVD), principle component analysis (PCA), independent component analysis (ICA), maximization, minimization, synchronization, time correction, phase correction, magnitude correction, normalization, vector quantization, clustering, matching pursuit, compressive sensing, neural network, machine learning, deep learning, training, discriminative training, detection, estimation, classification, identification, sliding function, moving function, stochastic function, deterministic function, periodic function, repeated function, sparse approximation, regression, smoothing, zero crossing, denoising, enhancement, coding, encryption, resampling, up-sampling, down-sampling, random sampling, importance sampling, interpolation, extrapolation, repetition, zero padding, preprocessing, postprocessing, group, set, collection, union, intersection, logical operation, composite function, and function of function, the multivariate function of the quantity of a set of neighboring DI, the multivariate function of the unitary function of the quantity of the set of neighboring DI, the multivariate function of the quantity of a set of temporally neighboring DI, the multivariate function of the unitary function of the quantity of the set of temporally neighboring DI, the multivariate function of the quantity of a set of spatially neighboring DI, the multivariate function of the unitary function of the quantity of the set of spatially neighboring DI, the multivariate function of the quantity of a set of directionally neighboring DI, the multivariate function of the unitary function of the quantity of the set of directionally neighboring DI, the multivariate function of the quantity of a set of radially neighboring DI, the multivariate function of the unitary function of the quantity of the set of radially neighboring DI, the multivariate function of the quantity of a set of geometrically neighboring DI, the multivariate function of the unitary function of the quantity of the set of geometrically neighboring DI, and another test quantity.

Clause C56: The method of the wireless monitoring system of clause C18, further comprising: computing the respective threshold based on at least one of: respective predefined threshold, respective fixed threshold, respective adaptive threshold, scaling of thresholds, maximum of thresholds, minimum of thresholds, weighted average of thresholds, a DI of a TSDI, a time associated with the DI, a component of the DI, at least one of: a time lag, a point in the venue, a direction, a distance, a geometric coordinate and a map coordinate, associated with the component of the DI, a neighborhood of the DI, a neighboring DI, a temporal neighborhood of the time of the DI, a temporally neighboring DI in the temporal neighborhood, a spatial neighborhood of the point, a spatially neighboring DI in the spatial neighborhood, a directional neighborhood of the direction, a directionally neighboring DI, a radial neighborhood of the distance, a radially neighboring DI, a geometric neighborhood associated with at least one of: the geometric coordinate and the map coordinate, a geometrically neighboring DI, a set of at least one of: neighboring DI, temporally neighboring DI, spatially neighboring DI, directionally neighboring DI, a radially neighboring DI, and a geometric neighboring DI, a quantity associated with at least one of: the DI and the component of the DI comprising at least one of: time, the DI, the DI component, magnitude, vector norm, DI magnitude, DI component magnitude, phase, DI phase, DI component phase, conjugate, real part, imaginary part, sign, square, cube, root, power, magnitude square, magnitude cube, magnitude to a power, absolute value, and collection of more than one quantities, processing of the quantity associated with the set of the neighboring DI, processing of the quantity associated with the set of temporally neighboring DI, processing of the quantity associated with the set of spatially neighboring DI, processing of the quantity associated with the set of directionally neighboring DI, processing of the quantity associated with the set of radially neighboring DI, weighted averaging of the quantity associated with neighboring DI excluding an immediate neighborhood of DI, statistics of the quantity associated with neighboring DI, function of a neighborhood of DI excluding an immediate neighborhood of DI, function of a neighboring cell of DI excluding an immediate neighborhood of DI, filtering, convolution, linear filtering, piecewise linear filtering, nonlinear filtering, low pass filtering, averaging, bandpass filtering, highpass filtering, windowed filtering, constant-false-alarm-rate (CFAR) windowed filtering, 1D-CFAR filtering, 2D-CFAR filtering, 3D-CFAR filtering, mean filtering, median filtering, rank filtering, mode filtering, trimmed mean filtering, percentile filtering, matched filtering, particle filter, adaptive filtering, smoothing, first derivative, second derivative, high order derivative, average, time average, spatial average, mean, variance, standard deviation, total variation, absolute variation, measure of variation, spread, dispersion, deviation, total deviation, divergence, range, interquartile range, weighted mean, trimmed mean, arithmetic mean, geometric mean, harmonic mean, conditional mean, median, mode, percentile, linear combination, transformation, short-term statistics, long term statistics, autocorrection function (ACF), power spectral density (PSD), cross correlation function, covariance function, moment generating function, and another threshold.

Clause C57: The method of the wireless monitoring system of clause C18, further comprising: detecting a presence of the first object at a particular time at a particular point at a particular distance in a particular direction based on a determination that a test quantity associated with a particular component of a particular DI of a particular TSDI is greater than a respective threshold, wherein the particular TSDI is associated with the particular direction, wherein the particular DI is associated the particular time, wherein the particular component is associated with the particular distance time.

Clause C58: The method of the wireless monitoring system of clause C57, further comprising: computing at least one of: a second test quantity and a third test quantity, based on at least one of: the particular TSDI associated with the particular direction, a set of directionally neighboring TSDI associated with a set of neighboring directions of the particular direction, a set of directionally neighboring DI in the set of neighboring directions of the particular point, each directionally neighboring DI from one of the directionally neighboring TSDI, a set of directionally neighboring DI in a directional neighborhood of the particular point, a set of directionally neighboring DI associated with the particular time, the particular DI of the particular TSDI associated with the particular time, a set of neighboring DI of the particular TSDI associated with a set of neighboring time stamps of the particular DI, a time window of DI of the particular TSDI associated with the particular DI, a set of temporally neighboring DI in a temporal neighborhood of the particular time of the particular CI, a set of temporally neighboring DI in the particular TSDI, a set of temporally neighboring DI in directionally neighboring TSDI, the particular component of the particular DI of the particular TSDI, a set of neighboring components of the particular DI of the particular TSDI associated with the particular component, a set of radially neighboring DI components in the particular DI of the particular TSDI associated with a set of neighboring component index of the particular component, a section of components of the particular DI of the particular TSDI associated with the particular component, a set of radially neighboring DI in a radial neighborhood of the particular point, a set of radially neighboring DI a set of spatially neighboring DI in a spatial neighborhood of the particular point, a set of spatially neighboring DI in a set of neighboring distance of the particular point, and a set of neighboring DI in a neighborhood of the particular point; classifying the first object at the particular point, based on at least one of: the second test quantity and the third test quantity, to be at least one of: a static object, non-static object, active object, inactive object, active non-static object, inactive non-static object, object with static motion (no motion), object with non-static motion (non-zero motion), object with stationary motion (e.g. breathing, heartbeat, regular motion, periodic motion, regular random motion, periodic random motion), object with at least two stationary motions: one dominant and one next dominant, object with non-stationary motion (e.g. transient motion, irregular motion, irregular random motion, non-repeating motion, one-time motion), object with periodic motion (e.g. breathing, heartbeat, regular motion, stationary motion, periodic random motion), object with at least two periodic motions: one dominant and one next dominant, object with non-periodic motion, object with random motion (e.g. irregular random motion, random body motion), object with non-random motion (e.g. random body motion), object with regular motion (e.g. breathing, heartbeat, regular motion, stationary motion, periodic random motion), object with irregular motion (e.g. transient motion, random motion, random body motion, unpredictable motion, impulsive motion, irregular random motion, non-repeating motion, one-time motion), another class of object and object with another class of motion.

Clause C59: The method of the wireless monitoring system of clause C58, further comprising at least one of: classifying the first object at the particular point as a static object if the second test quantity is less than a second threshold T2; classifying the first object at the particular point as a non-static object if the second test quantity is greater than T2; classifying the first object as an active non-static object if the second test quantity is greater than a third threshold T3 greater than T2; classifying the first object as the active non-static object if the second test quantity is between T2 and T3 and a third test quantity is less than a fourth threshold T4; or classifying the first object as an inactive non-static object if the second test quantity is between T2 and T3 and the third test quantity is greater than a fourth threshold T4.

Clause C60: The method of the wireless monitoring system of clause C58, further comprising at least one of: classifying the first object at the particular point as a static object if the second test quantity is less than a second threshold T2; classifying the first object at the particular point as a non-static object if the second test quantity is greater than T2; classifying the first object as an inactive non-static object if the second test quantity is greater than T2 but less than a third threshold T3 and a third test quantity is greater than a fourth threshold T4; and classifying the first object as an active non-static object otherwise.

Clause C61: The method of the wireless monitoring system of clause C58, further comprising at least one of: classifying a motion of the first object at the particular point as static if the second test quantity is less than a second threshold T2; classifying the motion of the first object as non-static if the second test quantity is greater than T2; classifying the motion of the first object as non-static and at least one of: non-stationary, non-periodic, irregular, and random, if the second test quantity is greater than a third threshold T3 which is greater than T2; classifying the motion of the first object as non-static and at least one of: non-stationary, non-periodic, irregular, and random, if the second test quantity is between T2 and T3 and a third test quantity is less than a fourth threshold T4; and classifying the motion of the first object as non-static and at least one of: stationary, periodic, regular, and non-random, if the second test quantity is between T2 and T3 and the third test quantity is greater than a fourth threshold T4.

Clause C62: The method of the wireless monitoring system of clause C58, further comprising at least one of: classifying a motion of the first object at the particular point as static if the second test quantity is less than a second threshold T2; classifying a motion of the first object at the particular point as non-static if the second test quantity is greater than a second threshold T2; classifying the motion of the first object as non-static and at least one of: stationary, periodic, regular, and non-random, if the second test quantity is greater than T2 but less than a third threshold T3 and a third test quantity is greater than a fourth threshold T4; and classifying the motion of the first object as non-static and at least one of: non-stationary, non-periodic, irregular, and random, otherwise.

Clause C63: The method of the wireless monitoring system of clause C58, further comprising at least one of: classifying the first object as an inactive non-static object if the third test quantity is greater than a fourth threshold T4; classifying the first object as an active non-static object if the third test quantity is less than T4 and the second test quantity is greater than a second threshold T2; classifying the first object as a static object if the third test quantity is less than T4 and the second test quantity is less than T2; classifying the first object as a non-static object if the second test quantity is greater than T2.

Clause C64: The method of the wireless monitoring system of clause C58, further comprising at least one of: classifying a motion of the first object as non-static and at least one of: stationary, periodic, regular, and non-random, if the third test quantity is greater than a fourth threshold T4; classifying a motion of the first object as non-static and at least one of: non-stationary, non-periodic, irregular, and random, if the third test quantity is less than T4 and the second test quantity is greater than a second threshold T2; classifying a motion of the first object as a static object if the third test quantity is less than T4 and the second test quantity is less than T2; and classifying a motion of the first object as a non-static object if the third test quantity is greater than T4 or the second test quantity is greater than T2.

Clause C65: The method of the wireless monitoring system of clause C58, wherein at least one of: the second test quantity and the third test quantity, comprise at least one of: at least one of: a quantity, vector, matrix, data, data structure, data set, feature, magnitude, phase, CI, CI component, directional information (DI) and DI component, that may be at least one of: dominant, representative, characteristic, indicative, archetypal, paradigmatic, exemplary, key, prominent, common, shared, typical, prototypical, averaged, regular, persistent, usual, normal, atypical, unusual, abnormal, and unrepresentative, similarity, similarity measure, similarity score, similarity between two CI, similarity between two CI, similarity between two vectors of CI, similarity between two windows of CI, similarity between two windows of CI with unequal window length, similarity between two DI, similarity between two DI, similarity between two vectors of DI, similarity between two windows of DI, similarity between two windows of DI with unequal window length, distance score, distance measure between two CI, distance measure between two vectors of CI, distance measure between two windows of CI, distance measure between two windows of CI aligned and mapped, distance measure between two windows of CI aligned using dynamic time warping (DTW), distance measure between two DI, distance measure between two vectors of DI, distance measure between two windows of DI, distance measure between two windows of DI aligned and mapped, distance measure between two windows of DI aligned using dynamic time warping (DTW), Euclidean distance, absolute distance, L-1 distance, L-2 distance, L-k distance, weighted distance, graph distance, distance metric, norm, L-1 norm, L-2 norm, L-k norm, pseudo metric, extended metric, quasimetric, metametric, semimetric, premetric, pseudoquasimetric, metric tensor, bilinear form, correlation, correlation of two CI, correlation of two DI, correlation coefficient, correlation indicator, autocorrelation function (ACF), ACF of phase, ACF of phase of quantity, ACF of phase of component of DI (or CI), ACF of phase of a particular component of a particular DI of a particular TSDI (or a particular CI of a particular TSCI), a feature of ACF, local maximum of ACF, first peak of ACF, magnitude of local maximum, magnitude of first peak, cross correlation, inner product, dot product, outer product, covariance, auto-covariance, cross covariance, discrimination score, magnitude, phase, average, time average, spatial average, mean, weighted average, time average, spatial average, directional average, radial average, variance, variance of phase, variance of magnitude, standard deviation, variability measure, variability metric, total variation, absolute variation, mean square variation, measure of variation, spread, dispersion, deviation, total deviation, mean square deviation, divergence, spatial variability measure, spatial variability metric, spatial variance, temporal variance, temporal standard deviation, temporal variability measure, temporal variability metric, temporal total variation, temporal absolute variation, temporal mean square variation, temporal measure of variation, temporal spread, temporal dispersion, temporal deviation, temporal total deviation, temporal mean square deviation, temporal divergence, likelihood, probability distribution function, sample distribution, moment generating function, expected value, expected function, total variation, absolute variation, measure of variation, spread, dispersion, deviation, total deviation, divergence, range, interquartile range, weighted mean, trimmed mean, arithmetic mean, geometric mean, harmonic mean, conditional mean, median, mode, percentile, linear combination, transformation, location, localization, location coordinate, change in location, position, map position, height, horizontal location, vertical location, distance, displacement, speed, acceleration, rotational speed, rotational acceleration, direction, angle of motion, azimuth, direction of motion, rotation, path, deformation, transformation, shrinking, expanding, positional characteristics, gait, gait cycle, gesture, handwriting, head motion, mouth motion, hand motion, leg motion, body motion, heart motion, internal organ motion, tool motion, machine motion, complex motion, combination of multiple motions, motion trend, repeatedness, periodicity, pseudo-periodicity, impulsiveness, sudden-ness, fall-down occurrence, recurrence, transient event, behavior, transient behavior, period, frequency, time trend, temporal profile, temporal characteristics, occurrence, time, timing, starting time, initiating time, ending time, duration, history, motion classification, motion type, change, temporal change, frequency change, CI change, DI change, timing change, gait cycle change, frequency spectrum, frequency characteristics, frequency, presence, absence, proximity, approaching, receding, object identifier, object composition, mouth-related rate, eye-related rate, walking rate, breathing rate, heart rate, periodicity measure, periodicity metric, tidal volume, depth of breath, inhale time, exhale time, inhale time to exhale time ratio, airflow rate, heart heat-to-beat interval, heart rate variability, motion detection statistics, motion identification statistics, motion recognition statistics, signal statistics, signal dynamics, anomaly, parameter, motion magnitude, motion phase, motion signal transformation, motion feature, presence of object, absence of object, entrance of object, exit of object, change of object, motion cycle, motion count, gait cycle, motion rhythm, deformation motion, size, length, area, volume, capacity, shape, form, tag, starting/initiating location, ending location, starting/initiating quantity, ending quantity, event occurrence, event statistics, fall-down event, security event, accident event, home event, office event, factory event, warehouse event, manufacturing event, assembly line event, maintenance event, vehicle-related event, navigation event, tracking event, door event, door-open event, door-close event, window event, window-open event, window-close event, repeatable event, one-time event, consumed quantity, unconsumed quantity, state, physical state, health state, well-being state, emotional state, mental state, another event, analytics, output responses, and another test quantity.

Clause C66: The method of the wireless monitoring system of clause C18, further comprising: computing at least one of: the second test quantity and the third test quantity, based on at least one of: a DI of a TSDI, a time stamp associated with the DI, a component of the DI, at least one of: a time lag, a point in the venue, a direction, a distance, a geometric coordinate and a map coordinate, associated with the component of the DI, a quantity associated with at least one of: the DI and the component of the DI comprising at least one of: time, the DI, the DI component, magnitude, vector norm, DI magnitude, DI component magnitude, phase, DI phase, DI component phase, conjugate, real part, imaginary part, sign, square, cube, root, power, magnitude square, magnitude cube, magnitude to a power, absolute value, and collection of more than one quantities, a unitary function of the quantity comprising at least one of: linear function, nonlinear function, piecewise linear function, polynomial, trigonometric function, sine, cosine, tangent, elliptical function, parabolic function, hyperbolic function, logarithmic function, exponential function, algebraic function, special function, game function, zeta function, Bessel function, Beta function, Gamma function, Gaussian function, error function, complementary error function, Poisson function, inverse function, transcendental function, absolute function, logical function, derivative with respect to at least one of: time, direction, and distance, higher order derivative, thresholding, soft threshold, hard threshold, indicator function, clipping, soft clipping, quantization, mapping, shifting, scaling, zero crossing, group, set, collection, union, intersection, composite function, and function of function, a neighborhood of the DI, a neighboring DI, a temporal neighborhood of the time of the DI, a temporally neighboring DI in the temporal neighborhood, a spatial neighborhood of the point, a spatially neighboring DI in the spatial neighborhood, a directional neighborhood of the direction, a directionally neighboring DI, a radial neighborhood of the distance, a radially neighboring DI, a geometric neighborhood associated with at least one of: the geometric coordinate and the map coordinate, a geometrically neighboring DI, a set of at least one of: neighboring DI, temporally neighboring DI, spatially neighboring DI, directionally neighboring DI, a radially neighboring DI, and a geometric neighboring DI, a multivariate function of the quantity associated with a set of neighboring DI comprising at least one of: average, time average, spatial average, mean, variance, temporal variance, spatial variance, standard deviation, total variation, absolute variation, measure of variation, spread, dispersion, deviation, total deviation, divergence, range, interquartile range, weighted mean, trimmed mean, arithmetic mean, geometric mean, harmonic mean, conditional mean, median, mode, percentile, linear combination, transformation, short-term statistics, long term statistics, autocorrection function (ACF), power spectral density (PSD), cross correlation function, covariance function, moment generating function, filtering, convolution, linear filtering, piecewise linear filtering, nonlinear filtering, low pass filtering, bandpass filtering, highpass filtering, windowed filtering, constant-false-alarm-rate (CFAR) windowed filtering, 1D-CFAR filtering, 2D-CFAR filtering, 3D-CFAR filtering, median filtering, rank filtering, matched filtering, particle filter, adaptive filtering, smoothing, first derivative, second derivative, high order derivative, frequency transform, discrete time transform, discrete transform, Fourier transform, DFT, FFT, cosine transform, DCT, sine transform, DST, Laplace transform, Hadamard transform, Hilbert transform, wavelet transform, trigonometric transform, sine transform, cosine transform, DCT, integer transform, sparse transform, graph-based transform, projection, orthogonal projection, non-orthogonal projection, over-complete projection, eigen-decomposition, singular value decomposition (SVD), principle component analysis (PCA), independent component analysis (ICA), maximization, minimization, synchronization, time correction, phase correction, magnitude correction, normalization, vector quantization, clustering, matching pursuit, compressive sensing, neural network, machine learning, deep learning, training, discriminative training, detection, estimation, classification, identification, sliding function, moving function, stochastic function, deterministic function, periodic function, repeated function, sparse approximation, regression, smoothing, zero crossing, denoising, enhancement, coding, encryption, resampling, up-sampling, down-sampling, random sampling, importance sampling, interpolation, extrapolation, repetition, zero padding, preprocessing, postprocessing, group, set, collection, union, intersection, logical operation, composite function, and function of function, the multivariate function of the quantity of a set of neighboring DI, the multivariate function of the unitary function of the quantity of the set of neighboring DI, the multivariate function of the quantity of a set of temporally neighboring DI, the multivariate function of the unitary function of the quantity of the set of temporally neighboring DI, the multivariate function of the quantity of a set of spatially neighboring DI, the multivariate function of the unitary function of the quantity of the set of spatially neighboring DI, the multivariate function of the quantity of a set of directionally neighboring DI, the multivariate function of the unitary function of the quantity of the set of directionally neighboring DI, the multivariate function of the quantity of a set of radially neighboring DI, the multivariate function of the unitary function of the quantity of the set of radially neighboring DI, the multivariate function of the quantity of a set of geometrically neighboring DI, the multivariate function of the unitary function of the quantity of the set of geometrically neighboring DI, and another test quantity.

Clause C67: The method of the wireless monitoring system of clause C18, further comprising: identifying a set of direction-of-interest (DoI) in which object presence is detected; identifying a set of points of interest (PoI), wherein each PoI is a point in the venue associated with a respective DoI and a respective distance in the DoI, wherein each PoI is associated with a respective component of a respective DI of a respective TSDI associated with the respective DoI, wherein object presence is detected at the PoI based on a respective test quantity associated with the respective component of the respective DI of the respective TSDI being greater than a respective threshold; computing at least one of: a cluster of PoI and a cluster of DoI, based on the set of PoI and DoI; and computing at least one of: a shape, surface, manifold, skeleton, silhouette, size, weight, health condition, well-being, center, centerline, cluster center, location, movement, motion, activity, gesture, gait, handwriting, of the first object based on at least one of: the PoI cluster, the DoI cluster, at least one of: spatial behavior, temporal behavior and spatio-temporal behavior of at least one of: the PoI cluster and the DoI cluster, a spatial behavior of at least one of: the PoI cluster and the DoI cluster, a set of DI associated with at least one of: the cluster of PoI and the cluster of DoI, a set of DI components associated with the set of DI associated with at least one of: the cluster of PoI and the cluster of DoI, a DI of a TSDI associated with at least one of: a respective PoI and a respective DoI, a DI component of the DI of the TSDI associated with at least one of: the respective PoI and the respective DoI, a CI associated with the DI, a CI component associated with the DI component, and at least one of: spatial behavior, temporal behavior and spatio-temporal behavior of at least one of: the DI, the DI component, the CI, the CI component, the set of DI and the set of DI components.

Clause C68: The method of the wireless monitoring system of clause C67, further comprising: combining two PoI into a PoI cluster if a distance between the two PoI is less than a threshold.

Clause C69: The method of the wireless monitoring system of clause C67, further comprising: combining two DoI into a DoI cluster if a distance between the two DoI is less than a threshold.

Clause C70: The method of the wireless monitoring system of clause C67, further comprising: computing at least one of: the PoI cluster and the DoI cluster, based on at least one of: connectivity-based clustering, connectivity model, hierarchical clustering, distance connectivity, single linkage clustering, complete linkage clustering, centroid-based clustering, centroid model, k-means algorithm, k-medoids, k-medians, fuzzy c-means, distribution-based clustering, distribution model, statistical distribution, normal distribution, multivariate Gaussian distribution expectation-maximization algorithm, density-based clustering, density model, DBSCAN, OPTICS, connected dense regions in data space, subspace-based clustering, subspace model, biclustering, co-clustering, two-mode-clustering, cluster members, relevant attributes, group-based clustering, group model, grouping information, graph-based clustering, graph-based model, clique, subset of nodes in a graph, nodes connected by an edge, relaxation of complete connectivity requirement, quasi-cliques, HCS clustering algorithm, signed-graph-based clustering, signed graph model, bifurcated graph, neural-network clustering, unsupervised neural network, self-organizing map, principal component analysis, independent component analysis, grid-based clustering, hard clustering, soft clustering, fuzzy clustering, overlapping clustering, alternative clustering, and another clustering algorithm.

Clause C71: The method of the wireless monitoring system of clause C67, further comprising: computing at least one of: the center, centerline, cluster center, and location as at least one of DoI and PoI associated with at least one of: largest periodicity measure, largest periodicity metric, largest dominant periodic signal, largest periodic intensity, largest autocorrelation function (ACF) peak, largest magnitude ACF peak, largest phase ACF peak, largest dominant frequency component, largest repeatedness, least impulsiveness, largest variability measure, largest variability metric, largest variability intensity, largest variation measure, largest variation metric, largest variation intensity, largest variance, largest standard deviation, largest magnitude variance, largest phase variance, largest spread, largest dispersion, largest deviation, largest divergence, largest range, largest total variation, largest absolute deviation, largest total deviation, centroid of the cluster, weighted centroid of the cluster, skeleton of the cluster, topological skeleton of the cluster, thinning of the cluster, topology-preserving thinning of the cluster, pruning of the cluster, topology-preserving pruning of the cluster, medial axis transform of the cluster, centers of all maximal disks in the cluster, centers of bi-tangent circles in the cluster, ridges of a distance function in the cluster, intersection of distances from boundary of the cluster, curve evolution of the cluster, level sets of the cluster, peeling of the cluster, symmetry set of the cluster, morphological skeletonization of the cluster, straight skeleton of the cluster, Grassfire transform of the cluster, and another characteristics.

Clause C72: The method of the wireless monitoring system of clause C67, further comprising: computing at least one of: the center, cluster center, and location, of at least one of: an inactive non-static object, an object with stationary motion, an object with periodic motion, an object with regular motion, an object with non-random motion and an object with non-chaotic motion, as at least one of DoI and PoI associated with at least one of: largest periodicity measure, largest periodicity metric, largest dominant periodic signal, largest autocorrelation function (ACF) peak, largest dominant frequency component, largest repeatedness, and least impulsiveness.

Clause C73: The method of the wireless monitoring system of clause C67, further comprising: computing at least one of: the center, cluster center, and location, of at least one of: an active non-static object, an object with non-stationary motion, an object with non-periodic motion, an object with irregular motion, an object with random motion, an object with random body motion (RBM) and an object with chaotic motion, as at least one of DoI and PoI associated with at least one of: largest variability measure, largest variability metric, largest variation measure, largest variation metric, largest variance, largest standard deviation, largest magnitude variance, largest phase variance, largest spread, largest dispersion, largest deviation, largest divergence, largest range, largest interquartile range, largest total variation, largest absolute deviation, and largest total deviation.

Clause C74: The method of the wireless monitoring system of clause C2, further comprising: computing a time series of observables based on at least one of: the number of TSCI, a set of TSDI computed based on the number of TSCI, and a subset of TSDI in which object presence is detected; removing an influence of the first repetitive motion from the time series of observables; computing a series of second instances of the second repetitive motion based on the series of observables after the influence of the first repetitive motion is removed, wherein each second instance is associated with a time stamp; computing the second information of the second repetitive motion based on the series of second instances.

Clause C75: The method of the wireless monitoring system of clause C74, further comprising: computing a series of first instances of the first repetitive motion based on the time series of observables before the influence of the first repetitive motion removed, wherein each first instance is associated with a time stamp; computing the first information of the first repetitive motion based on the series of first instances.

Clause C76: The method of the wireless monitoring system of clause C74, further comprising: at least one of: preprocessing, processing and postprocessing, the time series of observables based on at least one of: filtering, linear filtering, convolution, nonlinear filtering, folding, grouping, energy computation, lowpass filtering, bandpass filtering, highpass filtering, median filtering, rank filtering, quartile filtering, percentile filtering, mode filtering, finite impulse response (FIR) filtering, infinite impulse response (IIR) filtering, moving average (MA) filtering, autoregressive (AR) filtering, autoregressive moving averaging (ARMA) filtering, selective filtering, adaptive filtering, decision-feedback filtering, interpolation, extrapolation, decimation, subsampling, upsampling, resampling, transform, inverse transform, feature extraction, projection, decomposition, orthogonal projection, non-orthogonal projection, overcomplete projection, eigen-decomposition, singular value decomposition (SVD), principle component analysis (PCA), independent component analysis (ICA), time correction, time base correction, phase correction, magnitude correction, phase cleaning, magnitude cleaning, matched filtering, enhancement, restoration, denoising, smoothing, signal conditioning, sorting, thresholding, soft thresholding, hard thresholding, clipping, soft clipping, scaling, folding, grouping, energy computation, first derivative, second order derivative, high order derivative, multiplication, division, addition, subtraction, integration, maximization, minimization, least mean square error, recursive least square, constrained least square, batch least square, least absolute error, least mean square deviation, least absolute deviation, local maximization, local minimization, optimization of a cost function, neural network, recognition, labeling, training, clustering, machine learning, supervised learning, unsupervised learning, semi-supervised learning, comparison with another time series, similarity score computation, quantization, vector quantization, matching pursuit, compression, encryption, coding, storing, transmitting, normalization, temporal normalization, frequency domain normalization, classification, clustering, labeling, tagging, learning, detection, estimation, learning network, mapping, remapping, expansion, storing, retrieving, transmitting, receiving, representing, merging, combining, splitting, tracking, monitoring, matched filtering, Kalman filtering, particle filter, histogram estimation, importance sampling, Monte Carlo sampling, compressive sensing, representing, merging, combining, splitting, scrambling, error protection, forward error correction, doing nothing, time varying processing, conditioning averaging, weighted averaging, arithmetic mean, geometric mean, harmonic mean, averaging over selected frequency, averaging over antenna links, logical operation, permutation, combination, sorting, AND, OR, XOR, union, intersection, vector addition, vector subtraction, vector multiplication, vector division, inverse, norm, distance, and another operation.

Clause C77: The method of the wireless monitoring system of clause C1, further comprising: computing a time series of observables based on at least one of: the number of TSCI, a set of TSDI computed based on the number of TSCI, and a subset of TSDI in which object presence is detected; computing a series of first instances of the first repetitive motion based on the time series of observables, wherein each first instance is associated with a time stamp; computing the first information of the first repetitive motion based on the series of first instances.

Clause C78: The method of the wireless monitoring system of clause C74 or clause C75 or clause C77, further comprising: testing each instance of the series of instance; identifying an erroneous instance of the series of instance, wherein the erroneous instance is associated with an erroneous time stamp; correcting at least one of: the erroneous instance, and the erroneous time stamp.

Clause C79: The method of the wireless monitoring system of clause C78, further comprising: replacing the erroneous instance by a corrected instance.

Clause C80: The method of the wireless monitoring system of clause C78, further comprising: replacing the erroneous time stamp by a corrected time stamp.

Clause C81: The method of the wireless monitoring system of clause C78, further comprising: identifying a time window associated with the erroneous instance; computing an autocorrelation function of the time window; normalizing the autocorrelation function; replacing a section of the time window of the time series of observables by the autocorrelation function; recomputing the erroneous instance based on the time series of observables with the replaced section of the time window.

Clause C82: The method of the wireless monitoring system of clause C78, further comprising: testing each instance by computing at least one inter-instance period, each inter-instance period being a difference between time stamps associated with a pair of consecutive instances associated with the instance; computing a function of the at least one inter-instance period associated with the instance; identify the instance as an erroneous instance if the function is greater than a threshold.

Clause C83: The method of the wireless monitoring system of clause C78: wherein the function comprises at least one of: a sum, difference, ratio, division, multiplication, average, weighted average, transform, variability measure, variance, standard deviation, variation, spread, dispersion, deviation, of divergence, range, interquartile range, total variation, absolute deviation, total deviation, outlier measure, irregularity measure, change measure, derivative, first order derivative, second order derivative, high order derivative, lowpass filter, bandpass filter, highpass filter, and another function.

Clause C84: The method of the wireless monitoring system of clause C78, further comprising: computing a count of erroneous instance; computing at least one of: the first information and the second information, based on the count.

Clause C85: The method of the wireless monitoring system of clause C74 or clause C75 or clause C76, further comprising: computing an inter-instance period of a pair of consecutive instances, the inter-instance period being a different between the time stamps associated with the pair of consecutive instances; computing at least one of: the first information and the second information, based on the inter-instance period.

Clause C86: The method of the wireless monitoring system of clause C85, further comprising: computing a variability measure of a series of inter-instance periods each computed based on a pair of consecutive instances of the time series of instances.

In one example, the disclosed ViMo system can be used to monitor vital signs of a person, e.g. a patient who is not wearing or attached to any physical device. The ViMo is a wireless system that can accurately detect the patient's vital signs (e.g. breathing, heartbeat) by using purely the reflections of RF signals off the patient's body. The disclosed system can estimate a heart rate of the patient leveraging both the time and frequency diversity, after eliminating an interference of the breathing signal.

In another example, the disclosed system can monitor vital signs of multiple persons and/or animals at the same time (e.g. in a circus, a zoo, an apartment building, an office building, etc.), using a single commercial 802.11ad device. The disclosed system can locate and count human/animal targets without any prior calibration. The disclosed system can work well in various scenarios, including NLOS and motion artifacts.

Wireless detection of respiration rates is crucial for many applications. Most of the state-of-art solutions estimate breathing rates with the prior knowledge of crowd numbers as well as assuming the distinct breathing rates of different users, which is neither natural nor realistic. However, few of them can leverage the estimated breathing rates to recognize human subjects (a.k.a, identity matching). In this disclosure, using the channel state information (CSI) of a single pair of commercial WiFi devices, a novel system is disclosed to continuously track the breathing rates of multiple persons without such impractical assumptions. The disclosed solution includes an adaptive subcarrier combination method that boosts the signal to noise ratio (SNR) of breathing signals, and an iterative dynamic programming and a trace concatenating algorithm that continuously track the breathing rates of multiple users. By leveraging both the spectrum and time diversity of the CSI, the disclosed system can correctly extract the breathing rate traces even if some of them merge together for a short time period. Furthermore, by utilizing the breathing traces obtained, the disclosed system can do people counting and recognition simultaneously. Extensive experiments are conducted in two environments (an on-campus lab and a car). The results show that 86% of average accuracy can be achieved for people counting up to 4 people for both cases. For 97.9% out of all the testing cases, the absolute error of crowd number estimates is within 1. The system achieves an average accuracy of 85.78% for people recognition in a smart home case.

In this disclosure, the disclosed solution can continuously track human respiration rate without any prior knowledge of the crowd number or assuming that the breathing rates of different users are distinct. The disclosed system focuses on matching the breathing rates estimated in different time instances to different users, i.e., which breathing rate corresponds to which person. By utilizing the estimated breathing rate traces, the disclosed system can achieve people counting as well as recognition at the same time. Achieving identity matching based on multi-person breathing rates for both purposes, however, entails several unique challenges.

First, the subtle changes caused by human breathing could be easily undermined by measurement noises in WiFi CSI. The situation becomes even worse in multi-person scenarios. To overcome the problem, one can leverage the diversity residing in subcarriers and multiple links (antenna pairs) to reduce noises while boosting the breathing signals. One can show that, by properly combining different subcarriers and links, the breathing signals can be considerably better enhanced than what could be achieved by any individual or the average of them.

Second, a person's breathing rate varies over time, making it non-trivial to associate the successive breathing rate estimates to the corresponding persons. Considering that one's breathing rate will not fluctuate within a short time period, one can build a Markov chain model for the natural breathing signals and further employ an iterative dynamic programming algorithm to continuously track multiple breathing traces (i.e., sequences of breathing rates of different users).

Third, the number of users may not be fixed for an area of interest, since users might come and go. In order to output real-time estimates of the occupancy level, the present teaching discloses a trace concatenating algorithm to maintain the traces of existing users, which concatenates the latest estimates with the disclosed traces to determine existing users, newly arriving users, and leaving users.

Lastly, although the human respiration rate varies in a small range, breathing pattern of different individuals are distinct. Based on this observation, one can build a database of breathing traces and apply hypothesis-testing to do human recognition for the smart home scenario.

One can prototype the disclosed system using a pair of commodity off-the-shelf (COTS) WiFi devices and conduct experiments in two typical targeted environments (i.e., a lab office and a car), where 12 users are involved in the evaluation. The average accuracy of people counting up to 4 people is more than 86% for both environments. For 97.9% out of all the testing cases, the absolute error of crowd number estimates is within 1. The disclosed system achieves similar performance for both environments, demonstrating the independence on environment, which outperforms the training based method. Lastly, one can investigate the performance of people recognition using breathing traces for a 4-people family. The system can achieve 85.78% accuracy. The disclosed approach makes an important step towards smart home applications in terms of breathing rate estimation, passive people counting and human recognition.

The main contributions of this work are as follows. One can devise a pipeline of novel techniques to estimate the breathing traces of multiple users, including a subcarrier combination method to enhance multiple breathing signals, an iterative dynamic programming and trace concatenating algorithms to continuously track successive breathing rates of multiple users using the CSI of COTS WiFi devices. A non-intrusive training-free method is disclosed to estimate the crowd number using the extracted breathing traces. Furthermore, a hypothesis-testing model is disclosed to leverage the breathing traces to do human recognition. One can prototype and evaluate the disclosed system on COTS WiFi devices. The results in indoor spaces and in a car demonstrate promising performance.

The computational pipeline underlying the disclosed system is shown in FIG. 78. Different from many previous works aiming at estimating independent breathing rates at certain time instances, this work focuses on utilizing the frequency as well as time domain information to do identity matching. The core idea is to estimate the breathing rate sequences along the time (a.k.a, breathing rate traces) of different individuals. Furthermore, utilizing the estimated breathing traces, one can estimate the occupancy level as well as predict the user identity in the observation area. This idea immediately leads to three stages of the disclosed system: (1) Multi-user breathing spectrum generation, (2) breathing rate trace tracking, and (3) people counting and recognition.

In the first stage, the disclosed system first performs Short-Term Fourier Transform (STFT) on CSI measurements to extract the periodic breathing signals. As long as the breathing rates of different individuals are different, multiple frequency components would be observed in the frequency response. The extracted breathing signals are typically fairly weak on a single subcarrier, which are further boosted by a novel adaptive subcarrier combining method. Stage 1 finally outputs a spectrogram of the estimated breathing rates over time.

In Stage 2, the goal is to track the breathing rate traces (i.e., breathing sources) from the spectrogram obtained from Stage 1. However, there is a significant gap between breathing rates to breathing rate traces because of two reasons: First, different individuals may have the same breathing rates that overlap with each other. Second, one's breathing rate varies over time. To address the challenges, a Markov Chain Model is introduced to handle dynamics in natural breathing. The present teaching discloses a successive cancellation scheme that resolves each individual's breathing trace one by one by a novel algorithm of iterative dynamic programming. Thereafter, one can concatenate the identified traces of breathing rates in adjacent time windows to further identify the arriving and leaving time of human subjects.

In Stage 3, one can leverage the estimated breathing rate traces given by Stage 2 to do people counting and recognition. By further utilizing the time-domain information and removing outliers of the estimated breathing rate traces by a novel quasi-bilateral filter, the system gives an estimate of the crowd number. Then by hypothesis testing, one can do people identity recognition according to the extracted breathing rate traces.

Multi-user breathing spectrum generation

CSI Model with Breathing Impact

The channel state information (CSI) depicts how radio signals propagate from a transmitter (Tx) to a receiver (Rx). In the presence of human beings, one or more paths of signal propagation will be altered due to human motion. Given a pair of Tx and Rx with multiple omnidirectional antennas, the CSI of link m at time t and frequency $f_k$ is modeled as

$$h^{(m)}(t, f_k) = \sum_{l=1}^{L} a_l(t) \exp(-j2\pi f_k \frac{d_l(t)}{c}) + n(t, f_k), \qquad (94)$$

where $k \in V$ is the subcarrier (SC) index with center frequency $f_k$ in the set of usable SCs $V$. $L$ is the total number of multipath components (MPCs), while $\alpha_l(t)$ and $d_l(t)$ denote the complex gain and propagation length of MPC $l$. $n(t, f_k)$ is the additive white noise, and $c$ is the speed of light.

In the presence of breathing, Eqn. (94) can be rewritten as

$$\begin{aligned}
h^{(m)}(t, f_k) &= \sum_{i \in \mathcal{J}} \sum_{l \in \Omega_{d_i}(t)} a_l(t) \exp(-j2\pi f_k \frac{d_l(t)}{c}) \\
&\quad + \sum_{l \in \Omega_s} a_l \exp(-j2\pi f \frac{d_l}{c}) + n(t, f_k),
\end{aligned} \qquad (95)$$

where $\mathcal{J}$ denotes the set of human subjects. $\Omega_{d_i}$ denotes the MPCs scattered by human being $i$, resulting in time-variant complex gain and delay, $\Omega_s$ denotes the MPCs that are not affected by people's breathing, whose complex gain and delay keep time-invariant. The gain of MPCs in $\Omega_{d_i}$ could be modeled as

$$a_l(t) = a_l \times (1 + \frac{\Delta d_l}{d_l} \sin\theta \sin(\frac{2\pi t}{T_{b_i}} + \phi))^{-\Psi}, \qquad (96)$$

where $\alpha_l$ and $d_l$ are gain and path length in a static environment, $\Delta d_l$ is the difference of propagation length caused by chest movement, $\theta$ is the angle between human scatter and the EM wave, and $\phi$ is the initial phase. $\Psi$ is the path loss exponent. Since the chest movement is much smaller than the path length, i.e., $\Delta d_l \ll d_l$, the amplitude of MPC in both $\Omega_S$ and $\Omega_{d_i}$ can be assumed to be time-invariant, e.g., $a_l(t) \approx a_l$, and the set of MPCs are assumed to be the same, i.e.,

$\Omega_{d_i}(t) \approx \Omega_{d_i}.$

## Boosting SNR of Breathing Signals

For each MPC subset $\Omega_{d_i}$, the delay is periodic due to the periodic chest movement, i.e., $d_l(t + T_{b_i}) = d_l(t)$, $\forall l \in \Omega_{d_i}$. Hence one would be able to see multiple frequency components of the measured CSI in frequency domain, each corresponding to a distinct breathing signal.

The breathing signals can be extracted by applying Short-Term Fourier Transform (STFT) to the CSI measurement. In specific, one can first apply a sliding window of length $W$ to the captured CSI time series of each SC in every link, and then obtain the frequency spectrum by performing Fast Fourier Transform (FFT) over each time window. One can then employ a band-pass filter on the spectrum to consider only the normal range of human breathing frequencies $[b_{min}, b_{max}]$. The FFT is performed on every SC to obtain the individual spectrum for all the $N_{Tx} \times N_{Rx} \times N_{sc}$ SCs, where $N_{Tx}$, $N_{Rx}$, and $N_{sc}$ are the number of Tx antennas, Rx antennas, and usable SCs on each Tx-Rx link, respectively.

As shown in FIG.2, each breathing signal from one person contributes to one evident peak in the obtained power spectrum density (PSD). Different SCs experience diverse sensitivity levels to the identical breathing motion. Previous approaches attempt to select a set of best SCs based on variance, amplitude or ensemble average of CSI among all SCs to improve SNR. However, the following observations show the flaws of these approaches: 1) The response power of different SCs to the same breathing source is different (See columns in FIG. 79). 2) For the same SC, the response power to different breathing sources is different (See rows in FIG. 79). 3) The response power of different links is distinct (Different figures in FIG. 79). Therefore, there is no single SC that is universally sensitive to all breathing sources. Using the same subset of SCs for different frequency components may not produce equally good SNR for all breathing signals. Furthermore, using a universal threshold for all links may lose information from links with low response power.

Inspired by these observations, one can first use a novel adaptive SC combining criteria to boost the SNR of breathing signal of each link. For link $m$, the selected SCs for a given frequency component $q$ satisfy the condition that

$$E_k^{(m)}(q) \geq \alpha \max_{q \in Q, i \in \mathcal{V}} \{E^{(m)}(q,i)\}, \forall k \in \mathcal{V}, \qquad (97)$$

where Q is the set of frequency components in the range of $[b_{min}, b_{max}]$. $E_k^{(m)}(q)$ denotes the power of the $k$-th SC over link $m$ at frequency component $q$ and $\max_{q \in Q, i \in \mathcal{V}} \{E^{(m)}(q,i)\}$ denotes the maximum power of link $m$ over all frequency components and SCs. $\alpha$ is a hyper-parameter which determines a relative threshold $th^{(m)} = \alpha \max_{q \in Q, i \in \mathcal{V}} \{E^{(m)}(q, i)\}$ for SC selection. Note that $th^{(m)}$ is adaptive to individual link quality, as inspired by the third observation above. Thus, the enhanced power of frequency component $q$ in link $m$ is

$$E^{(m)}(q) \leftarrow \sum_{k \in \mathcal{V}} E_k^{(m)}(q) 1(E_k^{(m)}(q) \geq th^{(m)}). \qquad (98)$$

To further incorporate diverse link quality, one can normalize the power for each link and then combine them together to further improve the SNR:

$$E^{(m)}(q) \leftarrow \frac{E^{(m)}(q)}{\sum_{i \in Q} E^{(m)}(i)}, \forall q \in Q, \qquad (99)$$

$$E(q) \leftarrow \sum_{m=1}^{M} E^{(m)}(q), \forall q \in Q, \qquad (100)$$

where $E(q)$ is the power of frequency component $q$ after link combination and $M = N_{Tx} \times N_{Rx}$ is the total number of links.

FIG. 80 shows the effect of SC combination for several exemplary links. As seen, the disclosed SC selection and combination scheme (shown in blue curves) remarkably improves the SNR for the frequency components of interests, outperforming the simple average scheme (shown in red curves). FIG. 81 further depicts the PSD after the combination of all 9 links, which demonstrates that noise and interference have been effectively suppressed. The ground-truth of breathing rates are marked with the black dashed lines. As a comparison, simple average of all SCs suffer from less dominant peaks for the desired breathing signals and false peaks.

Breathing rate trace tracking

From Breathing Rates to Breathing rate Traces

Previous works estimate the number of people by the number of candidate breathing rates. However, they have several limitations. First, the breathing rate estimation may not be accurate enough for a single time instance. Second, different users may have close breathing rates that are indistinguishable from the frequency spectrum, resulting in potential underestimation. Third, the number of people could vary over time as people may come and go. And the accompanying motion will also corrupt the breathing signals.

To map the breathing rates to individuals and thus further estimate the accurate crowd number, one can utilize the diversity in the time series of breathing rate estimates for reliable estimation. One can first model the dynamic breathing rates as a Markov process. Noting that the breathing signals are periodic where breathing frequency can smoothly change over time, the variation of breathing rate between two adjacent time bins is assumed to follow a normal distribution $\mathcal{N}(0, \sigma^2)$, with the probability density function (PDF) $p(f)$. Since the operation of STFT automatically discretizes the continuous frequency in the range of $[b_{min}, b_{max}]$ into $|Q|$ frequency components, where $|Q|$ means the cardinality of set $Q$, the natural breath can be modeled as a Markov chain, and the transition probability matrix is denoted as $\mathbf{P} \in \mathbb{R}^{|Q|} \times \mathbb{R}^{|Q|}$, which is defined as

$$
\begin{aligned}
P(q, q^{'}) &= P(g(i) = q^{'} | g(i-1) = q) \\
&= \int_{(q^{'} - q - \frac{1}{2})*\Delta f}^{(q^{'} - q + \frac{1}{2})*\Delta f} p(f)df,
\end{aligned} \tag{101}
$$

where $\forall q, q' \in Q$ and $g$ is a mapping indicating the frequency component of the breathing rate at given time slots.

To estimate the breathing rate trace in a given time slot $t$, the disclosed system leverages the spectrum in $[t - W, t]$, where $W$ is the window length. An output is produced every $W_s$ seconds, and the spectrum is updated at the same time. Thus to estimate the breathing traces at time $t$, a spectrum $S \in \mathbb{R}_+^I \times \mathbb{R}_+^{|Q|}$ is leveraged, where $I = \frac{W}{W_s}$.

In principle, the breathing signal is more periodic than noise and other motion interference. Thus, it is more likely to be observed as peaks in most of the time, and thus the breathing signal will form a trace in the given spectrum along the time with the frequency changing slightly, as shown in FIG. 82. In the following, one can first extract the traces of successive breathing rates in the given window, and then concatenate them over time.

Extracting Breathing Rate Traces

Theoretical Model

For a given spectrum S, a reasonable estimate of the breathing trace can be obtained by

$$
g^* = \underset{g}{\mathrm{argmax}}\, E(g), \tag{102}
$$

where g indicates the breathing trace, denoted as

$$
g = (g(n), n)_{n=1}^I. \tag{103}
$$

Here, $g: [1, I] \to Q$ is a mapping indicating the frequency component of the trace at the given time. $E(g)$ is the power of a trace, defined as

$$
E(g) = \sum_{i=i}^I S(i, g(i)), \tag{104}
$$

where $S(i, j)$ denotes the power at time bin $i$ and frequency component $j$.

Considering that one's breathing rate will not fluctuate a lot within a short period, a regularization term is added to penalize sudden changes in frequencies of interests. A breathing trace is then a series of breathing rate estimates that achieve a good balance between frequency power and temporal smoothness. The smoothness of a trace can be evaluated by a cost function $C(g)$, defined as

$$C(g) \triangleq -\log P(g(1)) - \sum_{i=2}^{I} \log P(g(i-1), g(i)), \qquad (105)$$

where the frequency transition probability $P(g(i-1), g(i))$ can be calculated by Eqn. (101). Without loss of generality, one can assume a uniform prior distribution, i.e., $P(g(1)) = \frac{1}{|Q|}$. The cost function $C(g)$ is the negative of the log-likelihood for a given trace. The smoother a trace is, the larger its probability is, and the smaller the cost it incurs.

The most probable breathing trace can be found by solving

$$g^* = \underset{g}{\operatorname{argmax}} \, E(g) - \lambda C(g), \qquad (106)$$

where $\lambda$ is a regularization factor. Here it is denoted $E(g) - \lambda C(\mathbf{g})$ as the regularized energy of trace $\mathbf{g}$. By properly choosing the hyper-parameter $\lambda$, the system can ensure that the regularized energy of a true breathing trace is positive, while when the observation area is empty, the regularized energy for any trace candidate in the given spectrum is negative.

Iterative Dynamic Programming

The problem in Eqn. (106) can be solved by dynamic programming. However, dynamic programming typically can only find the trace with the maximum regularized energy and cannot deal with multiple breathing traces. The present teaching discloses a successive cancellation scheme to find multiple traces one by one via a novel method of iterative dynamic programming (IDP).

The principle idea of the IDP is intuitive. For a given spectrum 5, the most probable breathing trace is first found by dynamic programming. To further determine if there are any other breathing traces, the identified trace will be erased from the spectrum, and then a new round of dynamic programming is performed to find another candidate trace. This successive cancellation procedure will be run iteratively until there is no more effective traces in the spectrum.

For clarity, $(i, q)$ denotes the bin index with timestamp i and frequency component $q$. One may want to find the best trace of frequency peaks from timestamp i to j, which is denoted as $g_i \rightsquigarrow g_j$. Define the regularized energy of trace $g_i \rightsquigarrow g_j$ that ends at point $(j, n)$ as $s(g_i \rightsquigarrow (j, n))$. The disclosed approach is to search all possible traces $g_i \rightsquigarrow (j, n)$ that end at frequency point n and select the best one among them. This can be achieved by finding the optimal traces for all the bins along with the adjacent timestamps. For simplicity, one may denote the regularized energy at each bin as its score given by

$$\begin{aligned} s(i, q) &= S(i, q) + \max_{\forall q' \in Q} \{ s(i-1, q') + \lambda \log P(q', q) \}, \\ i &= 2, 3 \ldots, I, \forall q, q' \in Q, \end{aligned} \qquad (107)$$

where $s(1, q) = S(1, q) + \lambda \log P(g(1) = q)$. The score of a given bin is the maximum achievable regularized energy that it can obtain. In other words, it determines the optimal paths that pass through bin $(i, q)$.

The entire optimal breathing trace can be found by backtracking the bins that contribute to the maximum score $g^*(I)$ of the last timestamp. For the rest of the breathing trace in the observation window, i.e., $\forall i = I - 1, I - 2, \ldots, 1$, one can have

$$g^*(i) = \underset{\forall q \in Q}{\operatorname{argmax}} \, s(i, q) + \lambda \, \log P(q, g^*(i+1)). \qquad (108)$$

The backtracking procedure in Eqn. (108) gives the optimal trace g* for a given spectrum, which is the optimal solution for Eqn. (106).

To further check if there are any other candidate breathing signals in the given spectrum, the trace g* should be removed. For the ideal case, one may only need to remove the bins along g*. However, since the number of FFT points are limited, the energy of the breathing signal is diffused around the center of breathing trace, which forms an energy strip in the given spectrum as shown in FIG. 80. Thus, if one may only remove the energy along the optimal trace $\mathbf{g}^*$ and consecutively execute dynamic programming in Eqn. (107) and Eqn. (108), one will get a group of traces inside one energy strip. Therefore, IDP applies a windowing module on the optimal trace **g\*** to emulate the diffusing effect of FFT to get an energy strip. The updated spectrum after one erases the optimal energy strip is

$$S(i) \leftarrow S(i) - S(i, g^*(i)) * w, \forall i = 1, 2, \dots I, \tag{109}$$

where S(*i*) denotes the energy of spectrum at timestamp *i,* and **w** is the frequency response of the windowing module. Operator * denotes convolution operation, which can emulate the energy stripe caused by the diffusing effect of FFT.

One may recursively perform the above dynamic programming and spectrum cancellation to find multiple traces. The algorithm terminates when the score of the found trace is negative, indicating an empty spectrum without any effective traces.

The procedure of iterative dynamic programming is summarized in FIG. 93. FIGs. 83A-83C illustrate the details of this finding-then-erasing procedure, where 3 people sit in car doing natural breathing and their average breathing rate are [10 14 15] bpm. In FIG. 83A, the trace found by DP is marked by the line. The energy stripe of this trace is removed as shown in FIG. 83B. The spectrogram, when IDP terminates, is shown in FIG. 83C, and lines in the figure indicate the breathing traces. It is clear to see that although there is still some residual energy not perfectly removed, IDP terminates properly since there are no traces satisfying the constraint of non-negative regularized energy.

Detecting Empty Case

Ideally, when there is no person present in the monitoring area, no breathing trace would be picked up since the spectrum would be random due to the normal distribution of the thermal noise. In reality, however, false traces could be detected since some noise might be boosted in the empty case. To avoid this effect, one may employ motion detection to determine empty cases. If no motion (not even chest movement) is detected, the system will directly claim empty; otherwise, the above steps are performed to find a potential breathing rate trace. Here the motion detector needs to be sensitive and robust enough to detect breathing motion. In the presnt teaching, one may employ the motion statistics, which achieves almost zero false alarm.

Trace Concatenating

Iterative dynamic programming provides the breathing rate traces for each time window. In practice, a continuous monitoring system, however, would operate for much longer time than a time window, posing extra information gains to enhance the trace extraction. In this part, the present teaching discloses a novel trace concatenating algorithm (FIG. 93) to concatenate trace segments belonging to the same breathing signal in different time windows, which not only improves the trace segments, but also enables detection of the start and end time of each trace (or equivalently, the entering and leaving time of a specific user).

For clarity, one may store all disclosed traces in a database. The *j*th trace found previously is denoted as $\mathbf{g}_j^{\mathrm{pre}}(t_{\mathrm{st}}: t_{\mathrm{end}}),$ where *j* = 1, ⋯,*J* and $t_{\mathrm{st}}$ and $t_{\mathrm{end}}$ denote the start and end time of the trace. The *k*th traces found in the current time window [*t* - *W, t*] is denoted as $g_k(t - W:t)$, where *k* = 1,⋯,*K*. Furthermore, the similarity between two traces is defined as the ratio between the overlapped time in the window and the window length, which is expressed as

$$f(g_j^{\mathrm{pre}}, g_k) = \frac{|1(g_j^{\mathrm{pre}}(t_{\mathrm{st}}:t_{\mathrm{end}}) = g_k(t - W:t))|}{I - 1}, \tag{110}$$

where $f(\mathbf{g}_j^{\mathrm{pre}}, \mathbf{g}_k) \in [0,1].$ A similarity matrix $F \in \mathbb{R}^J \times \mathbb{R}^K$ can be calculated according to Eqn. (110) to show the similarity between all the traces in the current window and those in the database . In order to find the previous part for $g_k(t - W:t),$ one may only need to find the maximum item of **f(k)**, which is the *k*-th column of *F.* The row index of the maximum similarity indicates the index of the previous trace if the maximum similarity is above a predefined threshold.

If there exists a previous trace with a high enough similarity, it means that the corresponding breathing rate trace has been detected before. Then the endpoint of the corresponding trace should be updated. One may let the endpoint be the current time and update the corresponding frequency component accordingly. In case a new user arrives, there will be no existing traces that have a similarity larger than the threshold and thus a new trace is created with the corresponding timestamps and frequency components. Similarly, no trace in the current window being similar to the past traces corresponds to a user that has left, and thus the trace would be terminated.

FIGs. 84A-84D and FIG. 85 show the effect of trace concatenating algorithm. Four adjacent time windows are shown in FIGs. 84A-84D, and traces found by IDP are marked by lines. One can see that although the breathing trace in the middle of the spectrogram is not detected in the second and third window (due to body motion as well as breathing rate change of the subject), since the trace found in the fourth window still achieves high similarity with the trace found in the first window, it still can be concatenated as shown in FIG. 85.

People counting and recognition

People counting

IDP and trace concatenation provides the estimation of breathing rate traces, and the trace number would be the estimate of occupancy level. Although the IDP and trace concatenating have considered the stability of human breath in the observation area, the estimation result may still suffer from large noise and have some false alarms or underestimations for a real-time output as shown in FIG. 84B, FIG. 84C. To eliminate/mitigate these outliers for a real-time system, one may design a quasi-bilateral filter to explore the information contained in the previous estimations. Similar to the bilateral filter, the designed filter considers the distance in time and estimation domain simultaneously, but one may make some improvements according to the disclosed system. First, for a real-time system, the filter can only use the past and current estimation result. Furthermore, since IDP and trace concatenation leverage time as well as frequency information to get continuous breathing rate traces, the preliminary estimations are consistent in a short period. Thus, if one may directly use a bilateral filter, only the first incorrect output will be rectified. Given these two constraints, one may develop a segment-based filter, where each segment is a consistent preliminary estimation sequence.

Specifically, the output is determined by the current estimation and the previous segments. One may denote the weight of segment s as $W_{seg}(s)$ expressed as

$$W_{seg}(s) = w(l_s) * w(\tau_s) * w(d_s) \tag{111}$$

where $l_s$ is the length of segment s, and $\tau_s$ is the time difference between segment s and current timestamp. $d_s$ is the estimation difference between current estimation and segment s as shown in FIG. 86. Intuitively, the longer the segment is, the greater weight will be assigned. In contrary, the larger the distance is, no matter in time or the estimate of the crowd number, the smaller the influence of this segment imposing on the current result. For clarity, the set of segments with $i$ estimated people is denoted as $S_i$, and the current estimated number as $j$. The weight that the currently estimated people is $i$ after quasi-bilateral filter can be calculated by

$$p(i) \leftarrow \frac{1}{N} \left( \sum_{s \in S_i} \frac{l_s}{\tau_s} \right) e^{-d_s}, \tag{112}$$

where $N$ is the total number of segments, the estimation difference is $d_s = |i - j|$, and $W_{seg}(s)$ in Eqn. (111) is designed as

$$W_{seg}(s) \leftarrow \frac{l_s}{\tau_s} e^{-d_s}. \tag{113}$$

The eventual result after filtering is $j'$, given by

$$j' = \underset{i}{\mathrm{argmax}}\, p(i). \tag{114}$$

FIG. 86 shows the estimation results before and after quasi-bilateral filtering. Clearly, the novel quasi-bilateral filter can remove the estimation outliers effectively, and thus improve the performance of people counting system.

Human recognition in smart homes.

In this part, one may apply the disclosed respiration tracking result to an interesting smart home application, where one may want to recognize human identity in the observation area. Based on observations, although at some time instances, the breathing rate of different people can be the same, for a specific person, his or her breathing rate tends to locate in a certain range, which is a quite unique feature for human/user recognition. In other words, the breathing distribution of different people tends to be different. Motivated by this observation, one may utilize hypothesis-testing to do human recognition leveraging the breathing traces obtained.

The probability density function (PDF) of each person is assumed to follow a Gaussian distribution, i.e.,

$$p_k(\theta) \sim \mathcal{N}(\mu_k, \sigma_k),$$

where *k* indicates the label of the testing subject. To obtain the breathing rate distribution of different people, one may first get the rough PDF estimation from the histogram in the training dataset. This histogram will be fitted into a Gaussian model to get PDF for each testing subject. FIG. 87 shows exemplary breathing PDFs for 4 subjects. Based on the PDF distribution, for a certain observation of breathing trace *g,* the log-likelihood of the trace belonging to subject *k* can be calculated by

$$\mathcal{L}(k) = \sum_{n=1}^{N} \log(p_k(g(n))), \tag{115}$$

where *N* is the number of time instances of a given trace. The predicted label should be the one that achieves the maximum likelihood, i.e.,

$$K = \underset{k}{\mathrm{argmax}}\,\mathcal{L}(k). \tag{116}$$

Experiments and Evaluation: extensive experiments are conducted to evaluate the performance of the disclosed approach. Specifically, one may first introduce the experimental setup and then the results corresponding to two different scenarios. Discussion on the impact of distinct modules is disclosed at the end.

All the data in the experiments are collected in an on-campus lab and a car over two months with 12 participants. Two devices (Tx and Rx) are put on two different sides of a round deskParticipants are invited to sit in chairs as if they were attending a meeting. During the experiments, the participants randomly choose their seats and slight movements are allowed. One may also conduct experiments in a car, which is an extreme case for indoor scenario, where there is limited space as well as strong reflection. For the car scenario, the Tx and Rx are put at the front door on the driver and passenger side respectively.

Overall Performance

FIG. 88A shows the confusion matrix of the disclosed method in the LAB, and the overall accuracy is 87.14%, with the accuracy defined as

$$Acc = \frac{\text{\# of predicted label equals true label}}{\text{total \# of samples}}. \tag{117}$$

The counting error is within 1 person for 98.6% of the testing cases. Additionally, the disclosed system can perfectly detect whether the monitoring area is occupied or not. The accuracy however, decreases with more people present. This is as expected since the more people there are, the more likely their breathing traces may merge together and the more likely occasional motion may happen, both leading to counting errors. FIG. 89A shows that the disclosed testing result in the car can achieve a comparable performance with that in the LAB, which demonstrates the independence of the disclosed system on the environment.

To further evaluate the disclosed system, one may compare it with the most relevant TR-BREATH which also estimates multi-person breathing rates using commercial WiFi. TR-BREATH employs root-MUSIC for breathing rate estimation and uses the affinity propagation algorithm to estimate crowd number. In order to make fair comparison, quasi-bilateral filter is used to filter out the outliers of original TR-BREATH estimations. The estimation accuracy of TR-BREATH in LAB and car are shown in FIG. 88B and FIG. 89B respectively. As seen, TR-BREATH shows a comparable performance in the car testing scenarios. The performance in the LAB environments is much worse, with an overall accuracy of 70.68%. The disclosed approach improves the overall performance by 16.46% and 3.32% for LAB and car testing scenario respectively, attributed to its three core techniques: adaptive SC combination, iterative dynamic programming, and trace concatenation.

FIG. 90 shows the confusion matrix of people recognition, where the PDFs of each individual are shown in FIG. 87. One can see that when the subject has a distinct breathing rate, it corresponds to a high recognition rate (i.e., subject 1 and subject 2). But for the case that the two subjects have very similar breathing rate ranges, it is hard to distinguish from each other (i.e., subject 3 and subject 4), and this is also the reason for underestimations in the people counting system.

Performance Gain of Individual Modules: how each independent module improves the performance of the disclosed system is discussed below. Apart from the confusion matrix and accuracy, here one may additionally adopt true positive (TP) rate, which is calculated as:

$$\mathrm{TP}_i = \frac{\#\text{ of samples that predicted label is i}}{\text{total }\#\text{ of samples that true label is i}}. \tag{118}$$

Impact of SNR boosting algorithm

Here, one may compare the SNR boosting algorithm with the commonly used one, i.e., selecting the SCs whose maximum energy are above a certain threshold (hereafter, it is called fixed threshold algorithm). For fair comparison, one may choose the 30% of the maximum link energy as the threshold for both of the methods. Furthermore, the energy of each link is normalized before link combination, thus the parameters used in later process for both methods are also the same. It turns out that the disclosed algorithm shows better performance.

Impact of IDP estimation algorithm

In this experiment, one may show the benefits of the IDP. One may compare the performance with a local estimation algorithm that estimates the number of people based on the spectrum at current timestamp only. For fair comparison, the quasi-bilateral filter is also applied to the local estimation algorithm. The results shows that IDP considerably improves the performance for both datasets, which demonstrates the gains contributed by leveraging time diversity in counting.

Impact of Quasi-bilateral filter

In this experiment, one may show the effect of the designed quasi-bilateral filter on the performance of the people counting system. FIG. 88C and FIG. 89C shows the confusion matrix of people counting system without filtering on datasets collected in LAB and car respectively. By comparing the result with FIG. 88A and FIG. 89A, one can see that the quasi-bilateral filter can improve the performance in most cases, especially when the number of people is larger than 3 in the observation area. The reason is that when the number of subjects increases, more motion interference will be introduced. Furthermore, it is more likely that different breathing traces will merge. Even though one may utilize the time domain as well as frequency diversity by IDP, estimation error still can occure. Quasi-bilater filter is a post-processing method that will further utilize the divisity in time domain and thus correct the estimate outliers.

To further investigate the impact of spatial separation as well as respiration rate difference of human subjects, one may perform experiments with 3 participants sitting with different spatial separations, as shown in FIG. 91. Considering the volume of a human subject, the minimum distance is set as 70 cm. The distance between Tx and Rx is 3.2 m. To ensure a constant breathing rate separation during the experiments, each of the subjects performs controlled breathing according to a metronome. The breathing rate separations of [0.5, 1, 1.5, 2] BPM are evaluated, respectively. FIG. 92 shows the performance of the disclosed system, where the 4-tuple (* ; * ; * ; *) denotes the detection accuracy and the relative breathing rate accuracy with the 3 users at location a, b, and c respectively. One can see that the breathing rate separation has a significant impact on the performance, while the impact of the spatial separation is negligible. The detection rate raises more than 30% when the breathing rates separation increases from 0.5 BPM to 1 BPM. The system achieves 100% detection rate once the breathing rate separation is above 1.5 BPM. Besides, as long as the breathing rate trace has been detected, the disclosed system can accurately estimate the breathing rate, and the breathing estimation accuracy is above 94.7% for all of the test case.

Random body motion is one of the most challenging problems for wireless vital sign monitoring. To combat the impact of slight motion, the present teaching discloses an adaptive subcarrier selection algorithm as well as iterative dynamic programming to extract the breathing rate trace. However, it is hard to accurately extract the breathing signal when continuous large motion such as walking is present due to the inherent limitation of wireless sensing. As long as there is no continuous large motion, which is usually the case for most wireless monitoring applications, the disclosed system can correctly pick up the breathing rate traces.

There are indeed dedicated systems designed to detect the dip events of RSS of WiFi systems when humans are walking and estimate the crowd number. Gait information can also be extracted from WiFi systems to do human recognition. However, those systems are specifically designed for the case when the subjects need to keep walking. The disclosed system can perform crowd counting and recognition when the subjects are static.

Recall the experiments performed in a car to verify that the disclosed system is independent of the environment, during which the car engine is on but the car is not moving.

The disclosed respiration tracking method performs well with the slightly vibration introduced by the engine, however, it may not work well in a moving car since the vibration from a running car is large enough to overwhelm the minute vital signals. However, once the car is static, e.g., waiting before the traffic light, the disclosed system can track the respiration rate traces for crowd counting and human recognition. Handling car vibration during driving is a great common challenge faced by various sensing techniques, not only RF-based but also vision-based approaches.

The present teaching also proposes a new breathing detection and people counting engine (Breathing3). This Breathing3 engine assumes that there are multiple antenna links, say, N1 links. For each link, it obtains a time series of channel information (TSCI) (e.g. CI may be channel state information, CSI), with N2 components for each CI. There are N1 TSCI. Each TSCI can be decomposed into N2 components TSCI. Thus, there are N1xN2 component TSCI. The CI may comprise N2 components: frequency information (e.g. CFR) or time information (e.g. CIR). Each CI is associated with a time stamp. A transformation may be applied to a CI with N2 components to convert it to a CI with N2 transformed components. For example, frequency transform may be applied to a CI with N2 time component to transform it into a CI with N2 frequency component. Similarly, inverse frequency transform may be applied to a CI with N2 frequency component to transform it into a CI with N2 time component. A component TSCI may be formed by a particular component (e.g. the first component, or the second component, etc.) of all the CI in a TSCI. Thus, there are N1*N2 component TSCI, each associated with one of the N2 components and one of the N1 links.

Breathing3 divides the time axis into overlapping time windows. For each sliding time window and for each CIC index, it performs a time-frequency transform (TFT, e.g. short-time Fourier Transform (STFT) or wavelet, etc.). A total of N1xN2 TFS is performed in the sliding time window, one for each component TSCI in the corresponding sliding time window. The sliding time window length may be adjusted over time - large when high breathing precision is need, medium size when normal precision is ok and small when low precision is sufficient. Sometimes, the sounding signal may be delayed momentarily due to network traffic/congestion causing the CI sampling/extraction (e.g. done by a wireless IC) to have irregular time intervals (i.e. time stamps of CI are irregular). The sounding signal may be a wireless signal from Type 1 device to Type 2 device, and may be a training of impulses/sounding pulses sent at regular time interval over a period of time. Thus, sampling time correction may be applied to ensure that the CI are sampled at regular intervals. Correction may be achieved by performing temporal interpolation at the desired sampling time instances. Sometimes each TSCI may be sampled at different sampling frequency (e.g. one sampled at 300 Hz, another one at 150Hz and still another one at 105Hz). Sampling time correction may be applied. All TSCI may be corrected such that all are sampled at the same sampling frequency and sampling instances.

For the sliding time window, Breathing3 forms a number of characteristics intermediate time-frequency transform (CITFT), and then combines them into a combined time-frequency transform (CTFT). The CITFT may be computed for each link such that, for each time-frequency index (of the TFT) and for each link (one of the N1 links, between a pair of TX and RX antennas), the CITFT may be computed as a first characteristics value among the N2 TFT values of that link with the time-frequency index and any component index. There are N1 such CITFT. For the time-frequency index (of the TFT), the CTFT is a second characteristic value of the N1 CITFT. The CITFT may be computed for each component such that, for each time-frequency index (of the TFT) and for each component (one of the N2 components of each CI), the CITFT may be computed as a first characteristics value among the N2 TFT values of that link with the time-frequency index and any component index. There are N2 such CITFT. For the time-frequency index (of the TFT), the CTFT is a second characteristic value of the N2 CITFT. The sliding time window length may be adjusted over time. For example, the sliding time window length is large when high breathing precision is needed, has a medium size when normal precision is ok, and is small when low precision is sufficient.

The characteristics may be the TFT value with maximum magnitude, minimum magnitude, average magnitude, a percentile magnitude, maximum phase, minimum phase, average phase, a percentile phase, mean, medium, mode, trimmed mean, weighted average, or another characteristics value. The characteristics may also be the maximum magnitude, the minimum magnitude, the average magnitude, the percentile magnitude, the maximum phase, the minimum phase, the average phase, the percentile phase, the mean, the medium, the mode, the trimmed mean, the weighted average, or the another characteristics. The characteristics may be the TFT value with maximum magnitude, minimum magnitude, average magnitude, a percentile magnitude, maximum phase, minimum phase, average phase, a percentile phase, mean, medium, mode, trimmed mean, weighted average, or another characteristics value after a nonlinear function is applied to the TFT value. The nonlinear function may be logarithm, an exponential function, a polynomial function or another nonlinear function. The characteristics may also be the maximum magnitude, the minimum magnitude, the average magnitude, the percentile magnitude, the maximum phase, the minimum phase, the average phase, the percentile phase, the mean, the medium, the mode, the trimmed mean, the weighted average, or the another characteristics after the nonlinear function is applied to the TFT value.

For example, each CI may be a 128-point CFR. TFT may be 512-point STFT (with frequency index, i, being from 0 to 127). The characteristics may be the value with maximum magnitude. Suppose there are N1=2x3=6 links. Then for each STFT frequency index (e.g. i=1), there are 6 STFT values (one for each of N1 link). The CTFT at the frequency index i=1 is simply the STFT at i=1 with maximum magnitude. If a sliding time window is short enough (e.g. 1 second), the human breathing can be approximated as a periodic function which corresponds to a dominant peak in the CTFT and the frequency or period associated with the dominant peak is the corresponding breathing frequency or breathing period. Thus, in Breathing3, for each sliding time window, dominant peaks of the CTFT are determined. A number of breathing rates (which should be equal to the number of people present) are computed based on the time-frequency index (e.g. frequency of STFT) associated with dominant peaks of CTFT. In addition, the number of people present is deduced from the number of breathing rate.

Sometimes, false peaks may occur due to noise or other conditions. To suppress false peaks, one may note that a true peak (i.e. a true breathing rate of a person) should NOT happen only at one time instance but should last over time forming a "breathing trace" of the peak over time. One can associate each sliding time window with a time t (e.g. its starting time). When time difference between adjacent sliding time window is small, the breathing of any human should not change abruptly. Thus, the breathing trace should be slowly varying (or consistent). Thus, in Breathing3, any breathing trace candidate that changes abruptly (or very fast) are suppressed, if not eliminated. For example, the breathing trace may be obtained by dynamic programming with a cost function that penalizes fast breath rate changes.

In Breathing3, dominant peaks of multiple sliding time window in a testing period from T1 to T2 (i.e. T1 <=t<=T2, or sliding time windows with starting time between T1 and T2) are considered together in search of long-term "consistent" breathing. A number of breathing traces are obtained each by connecting adjacent dominant peaks (one peak from each sliding time window) in the candidate time period (e.g. using dynamic programming). A dominant peak may appear in more than one breathing traces.

A constraint may be applied that a breathing trace must begin at TI and end at T2. As such, different testing period may be considered so that one can detect new breathing trace (e.g. when a person just enters a room) and disappearing breathing traces (e.g. when a person leaves the room). The constraint may be relaxed so that a breathing trace can begin or end at any time within the testing period.

Cost function may be constructed such that abrupt-changing or fast changing breathing rates have high cost while smooth, continuous or slow-changing breathing rates have low cost. In Breathing3, a number of people may be associated with the number of breathing traces. At any time, the instantaneous number of people may be associated with the instantaneous number of breathing trace at that time.

In various embodiments of the present teaching, a driver authentication or recognition may be performed based on a frequency hopping method for monitoring and recognition, e. g. as disclosed in the following clauses.

Clause D1: A method of a channel-hopping target recognition system, comprising: for each of at least one known target in a venue in a respective training time period: transmitting, by an antenna of a first Type 1 heterogeneous channel-hopping wireless device (wireless transmitter), a respective training channel-hopping wireless signal to at least one first Type 2 heterogeneous channel-hopping wireless device (wireless receiver) through a wireless multipath channel impacted by the known target at the location in the venue in the training time period, wherein the wireless multipath channel comprises N1 channels, with N1 greater than or equal to one, wherein the respective training channel-hopping wireless signal hops among the N1 channels, obtaining, asynchronously by each of the at least one first Type 2 device based on the training channel-hopping wireless signal, N1 time series of training channel information (training CI), each time series of training CI (training TSCI) associated with one of the N1 channels of the wireless multipath channel between the first Type 2 device and the first Type 1 device in the training time period, wherein the N1 training TSCI are asynchronous due to channel-hopping and can be merged to form a combined time series of training CI (combined training TSCI), and pre-processing the N1 training TSCI; training at least one classifier for the at least one known target based on the respective N1 training TSCI of each of the at least one known target, wherein the at least one classifier to comprise at least one of: linear classifier, logistic regression, probit regression, Naive Bayes classifier, nonlinear classifier, quadratic classifier, K-nearest-neighbor, decision tree, boosted tree, rand om forest, learning vector quantization, linear discriminant analysis, support vector machine, neural network, perceptron, deep neural network, supervised learning, unsupervised learning, discriminative method, generative method, reinforced learning, Markov decision process, clustering, dimension reduction, K-mean, bagging, boosting, AdaBoost, stochastic gradient descent, and another classifier; and for a current target in the venue in a current time period, transmitting, by an antenna of a second Type 1 heterogeneous channel-hopping wireless device, a current channel-hopping wireless signal to at least one second Type 2 heterogeneous channel-hopping wireless device through the wireless multipath channel impacted by the current target in the venue in the current time period, wherein the current channel-hopping wireless signal hops among the N1 channels, obtaining, asynchronously by each of the at least one second Type 2 device based on the current channel-hopping wireless signal, N1 time series of current channel information (current TSCI), each current TSCI associated with one of the N1 channels of the wireless multipath channel between the second Type 2 device and the second Type 1 device in the current time period, wherein the N1 current TSCI are asynchronous due to channel-hopping and can be merged to form a combined time series of current CI (combined current TSCI), pre-processing the N1 current TSCI, and applying the at least one classifier to: classify at least one of: the N1 current TSCI, some of the N1 current TSCI, a particular current TSCI, a portion of the particular current TSCI, a combination of the portion of the particular current TSCI and another portion of an additional TSCI, a portion (in time) of the N1 current TSCI, and a combination of the portion of the N1 current TSCI and another portion of an additional N1 TSCI, and associate the current target with at least one of: one of the at least one known target, a variant of the known target, an unknown target, and another target, wherein each target comprises at least one of: a subject, a human, a baby, an elderly person, a patient, a pet, a dog, a cat, an object, an object comprising a particular material, a machine, a device, an apparatus, a tool, a part, a component, a liquid, a fluid, a mechanism, a change, a presence, an absence, a motion, a periodic motion, a transient motion, a movement, a location, a change of the subject, a gesture of a human, a gait of a human, a movement of a human, a change of the object, a movement of the object, a layout, an arrangement of objects, and an event, wherein a training TSCI associated with a first Type 2 device and a current TSCI associated with a second Type 2 device have at least one of: different starting times, different time durations, different stopping times, different counts of items in their respective time series, different sampling frequencies, different sampling periods between two consecutive items in their respective time series, different sounding rate, different sounding period, different order of channel-hopping, different duration of remaining in a particular channel, different timing, different channels for hopping, and channel information (CI) with different features.

Clause D2: The method of the channel-hopping target recognition system of Clause D1, further comprising: aligning a first section (of a first time duration) of a first set of TSCI and a second section (of a second time duration) of a second set of TSCI, and determining a mapping between items of the first section and items of the second section, wherein the first set of TSCI is associated with a subset of the N1 channels and the second set of TSCI is associated with the same subset of the N1 channels.

Clause D3: The method of the channel-hopping target recognition system of Clause D2, wherein: the first set of TSCI is pre-processed by a first operation; the second set of TSCI is pre-processed by a second operation; and at least one of: the first operation, and the second operation, comprises at least one of: combining, grouping, subsampling, re-sampling, interpolation, filtering, transformation, feature extraction, and pre-processing.

Clause D4: The method of Clause D2, further comprising: mapping a first item of the first section to a second item of the second section, wherein at least one constraint is applied on at least one function of at least one of: the first item of the first section of the first set of TSCI; another item of the first set of TSCI; a time stamp of the first item; a time difference of the first item; a time differential of the first item; a neighboring time stamp of the first item; another time stamp associated with the first item; the second item of the second section of the second set of TSCI; another item of the second set of TSCI; a time stamp of the second item; a time difference of the second item; a time differential of the second item; a neighboring time stamp of the second item; and another time stamp associated with the second item.

Clause D5: The method of Clause D4: wherein the at least one constraint to comprise at least one of: a difference between the time stamp of the first item and the time stamp of the second item is bounded by at least one of: an adaptive upper threshold and an adaptive lower threshold, a difference between a time differential of the first item and a time differential of the second item is bounded by at least one of: an adaptive upper threshold and an adaptive lower threshold, and a difference between a time difference between the first item and another item of the first section and a time difference between the second item and another item of the second section is bounded by at least one of: an adaptive upper threshold and an adaptive lower threshold.

Clause D6: The method of Clause D1, further comprising: determining an active section (of a time duration) of a set of TSCI adaptively; and determining a starting time and an ending time of the active section, wherein determining the active section comprises: computing a tentative section of the set of TSCI, and determining the active section by removing a beginning non-active portion and an ending non-active portion of the tentative section.

Clause D7: The method of Clause D6, wherein determining the section further comprises: determining the beginning portion of the tentative section by: considering items of the tentative section with increasing time stamp as a current item iteratively, one item at a time, computing recursively an activity measure associated with at least one of: the current item associated with a current time stamp, past items of the tentative section with time stamps not larger than the current time stamp, and future items of the tentative section with time stamps not smaller than the current time stamp, and adding the current item to the beginning portion of the tentative section when a first criterion associated with the activity measure is satisfied; and determining the ending portion of the tentative section by: considering items of the tentative section with decreasing time stamp as a current item iteratively, one item at a time, iteratively computing and determining at least one activity measure associated with at least one of: the current item associated with a current time stamp, past items of the tentative section with time stamps not larger than the current time stamp, and future items of the tentative section with time stamps not smaller than the current time stamp, and adding the current item to the ending portion of the tentative section when a second criterion associated with the at least one activity measure is satisfied.

Clause D8: The method of Clause D7: wherein at least one of the first criterion and the second criterion comprises at least one of: the activity measure is smaller than an adaptive upper threshold, the activity measure is larger than an adaptive lower threshold, the activity measure is smaller than an adaptive upper threshold consecutively for at least a predetermined amount of consecutive time stamps, the activity measure is larger than an adaptive lower threshold consecutively for at least an additional predetermined amount of consecutive time stamps, the activity measure is smaller than an adaptive upper threshold consecutively for at least a predetermined percentage of the predetermined amount of consecutive time stamps, the activity measure is larger than an adaptive lower threshold consecutively for at least another predetermined percentage of the additional predetermined amount of consecutive time stamps, another activity measure associated with another time stamp associated with the current time stamp is smaller than another adaptive upper threshold and is larger than another adaptive lower threshold, at least one activity measure associated with at least one respective time stamp associated with the current time stamp is smaller than respective upper threshold and larger than respective lower threshold, and a percentage of time stamps with associated activity measure smaller than respective upper threshold and larger than respective lower threshold in a set of time stamps associated with the current time stamp exceeds a threshold; and wherein the activity measure associated with an item at time T1 comprises at least one of: a first function of the item at time T1 and an item at time T1-D1, wherein D1 is a pre-determined positive quantity, a second function of the item at time T1 and an item at time T1+D1, a third function of the item at time T1 and an item at time T2, wherein T2 is a pre- determined quantity, and a fourth function of the item at time T1 and another item.

Clause D9: The method of Clause D8: wherein at least one of: the first function, the second function, the third function, and the fourth function, is at least one of: a function $F1(x, y, ...)$ with at least two scalar arguments: x and y, a function $F2(X, Y, ...)$ with at least two vector arguments: X and Y, and a function $F3(X1, Y1, ...)$ with at least two arguments: X1 and Y1; wherein the function F1 is a function of at least one of the following: $x$, $y$, $(x-y)$, $(y-x)$, $abs(x-y)$, $x^{a1}$, $y^{b1}$, $abs(x^{a1} - y^{b1})$, $(x-y)^{a1}$, $(x/y)$, $(x+a1)/(y+b1)$, $(x^{a1}/y^{b1})$, and $((x/y)^{a1-b1})$, wherein a1 and b1 are predetermined quantities; wherein both X and Y are n-tuples such that $X=(x\_1, x\_2, ..., x\_n)$ and $Y=(y\_1, y\_2, ..., y\_n)$; the function F2 is a function of at least one of the following: $x\_i$, $y\_i$, $(x\_i - y\_i)$, $(y\_i - x\_i)$, $abs(x\_i - y\_i)$, $x\_i^{a2}$, $y\_i^{b2}$, $abs(x\_i^{a2} - y\_i^{b2})$, $(x\_i - y\_i)^{a2}$, $(x\_i/y\_i)$, $(x\_i+a2)/(y\_i+b2)$, $(x\_i^{a2}/y\_i^{b2})$, and $((x\_i / y\_i)^{a2-b2})$; wherein i, ranging from 1 to n, is a component index of the n-tuples X and Y; wherein both X1 and Y1 are n-tuples comprising N components such that $X1=(x1\_1, x1\_2, ..., x1\_N)$ and $Y1=(y1\_1, y1\_2, ..., y1\_N)$; wherein the function F3 comprises a component-by-component summation of another function of at least one of the following: $x1\_j$, $y1\_j$, $(x1\_j - y1\_j)$, $(y1\_j - x1\_j)$, $abs(x1\_j - y1\_j)$, $x1\_j^{a3}$, $y1\_j^{b3}$, $abs(x1\_j^{a3} - y1\_j^{b3})$, $(x1^j - y1\_j)^{a3}$, $(x1\_j/y1\_j)$, $(x1\_j+a3)/(y1\_j+b3)$, $(x1\_j^{a3}/y1\_j^{b3})$, and $((x1\_j / y1\_j)^{a3-b3})$; and wherein j, ranging from 1 to N, is a component index of the n-tuples X1 and Y1.

Clause D10: The method of Clause D2, further comprising: computing the mapping using dynamic time warping (DTW), wherein the DTW comprises a constraint on at least one of: the mapping, the items of the first set of TSCI, the items of the second set of TSCI, the first time duration, the second time duration, the first section, and the second section.

Clause D11: The method of Clause D1, further comprising: aligning a first section (of a first time duration) of a first set of TSCI and a second section (of a second time duration) of a second set of TSCI; computing a map comprising a plurality of links between first items of the first section and second items of the second section, wherein each of the plurality of links associates a first item with a first time stamp with a second item with a second time stamp; computing a mismatch cost between the aligned first section and the aligned second section; applying the at least one classifier based on the mismatch cost, wherein the mismatch cost comprises at least one of: an inner product, an inner-product- like quantity, a quantity based on correlation, a quantity based on covariance, a discriminating score, a distance, a Euclidean distance, an absolute distance, an $L\_1$ distance, an $L\_2$ distance, an $L\_k$ distance, a weighted distance, a distance-like quantity and another similarity value, between the first vector and the second vector, and a function of: an item-wise cost between a first item of the first section of the first CI time series and a second item of the second section of the second CI time series associated with the first item by a link of the map, and a link-wise cost associated with the link of the map, wherein the aligned first section and the aligned second section are represented respectively as a first vector and a second vector that have same vector length, and wherein the mismatch cost is normalized by the vector length.

Clause D12: The method of Clause D11, further comprising: applying the at least one classifier to a plurality of first sections of the first set of TSCI and a plurality of respective second sections of the second set of TSCI; obtaining at least one tentative classification result, each tentative classification result being associated with a respective first section and a respective second section; and associating the current target with at least one of: the known target, the unknown target and the another target, based on a largest number of the at least one tentative classification result associated with at least one of: the known target, the unknown target and the another target.

Clause D13: The method of Clause D1, further comprising: training a projection for each CI using a dimension reduction method based on the N1 training TSCI associated with each known target, wherein the dimension reduction method comprises at least one of: principal component analysis (PCA), PCA with different kernel, independent component analysis (ICA), Fisher linear discriminant, vector quantization, supervised learning, unsupervised learning, self-organizing maps, auto-encoder, neural network, and deep neural network; applying the projection to each respective CI; training the at least one classifier based on the projection and the N1 training TSCI associated with each known target; classifying, by the at least one classifier, the N1 current TSCI based on the projection; and associating the N1 current TSCI with at least one of: the known target, the variant of the known target, the unknown target, and the another target.

Clause D14: The method of Clause D13, further comprising: a re-training comprising at least one of: re-training the projection using at least one of: the dimension reduction method, and an additional dimension reduction method, based on at least one of: the at least one classifier before the re-training, the projection before the re-training, the N1 training TSCI associated with each known target, the N1 current TSCI, and additional training TSCI, wherein the additional dimension reduction method comprises at least one of: a simplified dimension reduction method, principal component analysis (PCA), PCA with different kernels, independent component analysis (ICA), Fisher linear discriminant, vector quantization, supervised learning, unsupervised learning, self-organizing maps, auto-encoder, neural network, and deep neural network, and re-training the at least one classifier based on at least one of: the re-trained projection, the N1 training TSCI associated with each known target, the result of the application of the at least one classifier, and the N1 current TSCI; and classifying N1 next TSCI associated with the N1 channels based on at least one of: the re-trained projection, and the at least one re-trained classifier.

Clause D15: The method of Clause D1, further comprising: training a projection for each of a set of combined training CI using a dimension reduction method based on the N1 training TSCI associated with each known target, wherein each combined CI of a known target is associated with a particular time stamp, and is a combination of N1 CI with a CI associated with each of the N1 channels, each CI being computed from a time window of the corresponding training TSCI of the known target around to the particular time stamp, wherein the dimension reduction method comprises at least one of: principal component analysis (PCA), PCA with different kernel, independent component analysis (ICA), Fisher linear discriminant, vector quantization, supervised learning, unsupervised learning, self-organizing maps, auto-encoder, neural network, and deep neural network; applying the projection to each combined CI; training the at least one classifier based on the projection, the set of combined training CI of each known target, and the N1 training TSCI associated with each known target; and classifying, by the at least one classifier, the N1 current TSCI based on the projection.

Clause D16: The method of Clause D15, further comprising: a retraining comprising at least one of: re-training the projection using at least one of: the dimension reduction method, and an additional dimension reduction method, based on at least one of: the projection before the re-training, the set of combined training CI of each known target, the N1 training TSCI associated with each known target, the combined current TSCI, the N1 current TSCI, and additional training TSCI, wherein the additional dimension reduction method comprises at least one of: a simplified dimension reduction method, principal component analysis (PCA), PCA with different kernels, independent component analysis (ICA), Fisher linear discriminant, vector quantization, supervised learning, unsupervised learning, self-organizing maps, auto-encoder, neural network, and deep neural network, and re-training the at least one classifier based on at least one of: the re-trained projection, the set of combined training CI of each known target, the N1 training TSCI associated with each known target, the combined current TSCI, the N1 current TSCI, and the additional training TSCI; and classifying N1 next TSCI associated with the N1 channels based on at least one of: the re-trained projection, and the at least one re-trained classifier.

Clause D17: The method of Clause D1, further comprising: for each of at least one first section (of a first time duration) of the combined current TSCI: for each of the at least one known target: determining a respective second section (of a respective second time duration) of a respective representative combined training TSCI of the respective target, aligning the first section and the respective second section, and computing a mismatch cost between the aligned first section and the aligned respective second section, applying the at least one classifier, and obtaining a tentative classification of the first section based on the mismatch costs; obtaining a classification of the at least one first section result based on at least one of: the at least one tentative classification of each first section, the mismatch cost of each known target for each first section, the combined current TSCI, the combined training TSCI, and associating the at least one first section with at least one of: a known target, an unknown target and another target.

Clause D18: The method of Clause D17, further comprising: computing how many times each known target achieves a smallest mismatch cost; and associating the at least one first section with at least one of: a known target that achieves the smallest mismatch cost for most times, a known target that achieves a smallest overall mismatch cost, wherein an overall mismatch cost is a weighted average of at least one mismatch cost associated with the at least one first section, a known target that achieves a smallest cost based on another overall cost, and an unknown target, wherein the at least one first section is associated with the unknown target in at least one of the following situations: no target achieves a mismatch cost lower than a first threshold T1 in a sufficient percentage of the at least one first section, and no target achieves an overall mismatch cost lower than a second threshold T2.

Clause D19: The method of Clause D17; wherein the representative combined training CI time series associated with the known target is obtained based on the combined training TSCI associated with the known target and additional combined training TSCI associated with the known target.

Clause D20: The method of Clause D17: wherein the representative combined training TSCI associated with the known target is a particular combined training TSCI among the set of all possible combined training TSCI that minimizes an aggregate mismatch with respect to a training set of TSCI; wherein the training set of TSCI comprises the combined training TSCI associated with the known target and additional combined training TSCI associated with the known target; wherein the aggregate mismatch of a particular TSCI with respect to the training set is a function of at least one mismatch cost between the particular TSCI and each TSCI of the training set of TSCI, wherein both are aligned before the mismatch cost is computed; wherein the function comprises at least one of: average, weighed average, mean, trimmed mean, median, mode, arithmetic mean, geometric mean, harmonic mean, truncated mean, generalized mean, power mean, f-mean, interquartile mean, and another mean.

Clause D21: The method of Clause D20: wherein the particular combined training TSCI is in the training set of TSCI.

Clause D22: The method of Clause D20: wherein each TSCI is associated with a time duration; wherein a set of candidate time durations of the respective combined training TSCI are determined; wherein, for each candidate time duration, a respective optimal combined training TSCI with the candidate time duration minimizing the aggregate mismatch with respect to the training set of TSCI is computed; wherein the representative combined training TSCI is the particular optimal combined training TSCI with the particular time duration among the set of candidate time duration that minimizes the aggregate mismatch.

Clause D23: The method of Clause D22: wherein fast computation is applied in the search of the particular time duration, and the particular optimal combined training TSCI with the particular time duration.

Clause D24: The method of Clause D1, further comprising: determining a respective time window of a respective training TSCI for the training of a classifier for the at least one known target.

Clause D25: The method of Clause D1, further comprising: re-training a classifier for the at least one known target adaptively based on at least one of: a current TSCI, the combined current TSCI, a previous current TSCI and a pervious combined current TSCI.

Clause D26: The method of clause D25, further comprising: determining a time window associated with at least one of: the current TSCI, the combined current TSCI, the previous current TSCI and the previous combined current TSCI, for the re-training of the classifier for the at least one known target.

Clause D27: The method of Clause D1: wherein the venue is a vehicle and the current target is a passenger in the vehicle; wherein the at least one known target comprises a number of known passengers of the vehicle; wherein the at least one classifier to associate the current target with a known passenger.

Clause D28: The method of Clause D27: wherein at least two known targets comprise a particular known passenger with different postures in the vehicle; wherein the different postures comprise a body part of the particular known passenger at least one of: different positions, different orientation and different shape; wherein the at least one classifier to associate the current target with a passenger posture.

Clause D29: The method of Clause D27: wherein at least two known targets comprise a particular known passenger doing different movement in the vehicle; wherein the different movement comprise at least one of: a driver movement, driving straight, turning left, turning right, stepping on accelerator, stepping on brake, changing gear, adjusting turning signal, adjusting windshield wiper setting, adjusting visor, adjusting dashboard switches, adjusting mirror, adjusting window, reaching to the back, reaching to the side, reaching to center console, putting on a cap, adjusting seat, driving attentively, driving in a sleepy manner, a passenger movement, sitting quietly looking forward, looking sideway, sleeping, talking, checking phone, working on a laptop, stretching, adjusting window, and another movement; wherein the at least one classifier to associate the current target with a particular passenger movement.

Clause D30: The method of Clause D27: wherein at least two known targets comprise a particular known passenger in different states; wherein the states comprise at least one of: an emotional state, normal, depressed, excited, a physiological state, sleepy, alert, relax, tense; wherein the at least one classifier to associate the current target with a particular passenger state.

Clause D31: The method of Clause D27: wherein at least two known targets comprise a particular known passenger sitting at different locations in the vehicle; wherein the at least one classifier to associate the current target with a particular location in the vehicle.

Clause D32: The method of Clause D1: wherein the venue is a vehicle and the current target comprises two passengers in the vehicle; wherein at least two known targets are "single" targets each comprising a single known passenger of the vehicles; wherein the at least one classifier to associate the current target with two of the at least two single targets.

Clause D33: The method of Clause D32: wherein at least two known targets are single targets each comprising a particular known passenger with at least one of: different postures, different movement, different state, and another difference; wherein the at least one classifier to associate the current target with at least one of: a passenger posture, a passenger movement, a passenger state and another characteristics.

Clause D34: The method of Clause D1: wherein the venue is a vehicle and the current target comprises two passengers in the vehicle; wherein at least two known targets are "double" targets each comprising two known passengers of the vehicles; wherein the at least one classifier to associate the current target with one of the double targets.

Clause D35: The method of Clause D34: wherein at least two known double targets comprise a particular known passenger with at least one of: different postures, different movement, different state, and another difference.

Clause D36: The method of Clause D1: wherein the venue is a vehicle and the current target comprises a first number of passengers in the vehicle; wherein at least two known targets are "multi-targets" each comprising a respective second number of known passengers of the vehicle; wherein the second number is a non-negative integer not less than 0 and not greater than the first number; wherein the at least one classifier to associate the current target with at least one multi-target.

Clause D37: The method of Clause D36: wherein at least two of the known multi-targets comprise a particular known passenger with at least one of: different postures, different movement, different state, and another difference.

Clause D38: The method of Clause D1: wherein the venue is a vehicle and the current target comprises an unknown number of passengers in the vehicle; wherein at least two known targets are "multi-targets" each comprising a number of known passengers of the vehicles; wherein the at least one classifier to associate the current target with at least one multi-target, and an estimate of the unknown number based on the number of known passengers associated with each of the at least one multi-target.

Clause D39: The method of Clause D1: wherein the venue is a vehicle and the current target comprises an unknown number of passengers in the vehicle; wherein at least two known targets are "multi-targets" each comprising a number of known passengers of the vehicles; wherein the at least one classifier to associate the current target with an estimate of the unknown number.

Clause D40: The method of Clause D1: wherein the venue is a vehicle and the current target is a passenger at a particular position in the vehicle; wherein the at least one known target comprises a number of known passengers of the vehicle at a number of known positions in the vehicle; wherein the at least one classifier to associate the current target with the particular position of the vehicle.

Clause D41: The method of Clause D27: wherein the passenger sits at the driver seat of the vehicle.

Clause D42: The method of Clause D27: wherein the current motion happens before the vehicle is started comprising the passenger opening the driver-side front door, entering the vehicle and sitting at the driver seat of the vehicle.

Clause D43: The method of Clause D27: wherein, after the vehicle is turned off, the passenger sitting at the driver seat of the vehicle opens the driver-side front door, and exits the vehicle.

Clause D44: The method of Clause D27: wherein the current motion happens before the vehicle is started comprising the passenger opening the passenger-side front door, entering the vehicle and sitting at the seat next to the driver's seat of the vehicle.

Clause D45: The method of Clause D27: wherein the passenger sitting at the seat of the vehicle next to the driver seat opens the passenger-side front door and exits the vehicle.

Clause D46: The method of Clause D27: wherein the current motion happens before the vehicle is started comprising the passenger opening a back door, entering the vehicle and sitting at a seat in the second row of the vehicle.

Clause D47: The method of Clause D27: wherein the current motion happens before the vehicle is started comprising the passenger opening a back door, entering the vehicle and sitting at a position behind the second row of the vehicle.

Clause D48: The method of Clause D27: wherein the current motion happens before the vehicle is started comprising the opening of a front door, the passenger entering the vehicle and sitting at a position behind the first row of the vehicle.

Clause D49: The method of Clause D1: wherein the venue is a vehicle; wherein at least one classifier is trained or re-trained for: a number of known targets each being the vehicle being one of a number of known candidate vehicles, a number of known targets each being the vehicle in a known state, a target being the vehicle with all doors and windows closed, a number of known targets each being the vehicle with all doors closed and one window opened to a known degree, a number of known targets each being the vehicle with all doors closed and a number of windows opened to respective known degrees, a number of known targets each being the vehicle with driver door opened to a known degree and the other doors closed, a number of known targets each being the vehicle with front passenger door opened to a known degree and the other doors closed, a number of known targets each being the vehicle with a back door opened to a known degree and the other doors closed, a number of known targets each being the vehicle with a number of doors opened to respective known degrees and the other doors closed, a number of known targets each being the vehicle with tail gate opened and the other doors closed, a number of known targets each being the vehicle with seats at respective known positions, known angles and known settings, a number of known targets each being the vehicle with accessories at respectively known settings, a number of known targets each being the vehicle with a number of seats occupied by passengers, a number of known targets each being the vehicle with a number of car-seats installed, and a number of known targets each being the vehicle with a number of child booster seats installed.

Clause D50: The method of Clause D1: wherein the venue is a vehicle; wherein at least one classifier is trained or re-trained based on at least one of: TSCI of the vehicle obtained recently when the vehicle is not in a trip, TSCI of the vehicle obtained in a current trip, TSCI of the vehicle obtained in a recent trip, TSCI of the vehicle obtained in an immediate past trip, TSCI of the vehicle obtained in a recent trip when the vehicle is a particular known vehicle, TSCI of the vehicle obtained in a recent trip when the vehicle is in a particular state, TSCI of the vehicle obtained in a recent trip when a particular known driver is driving, TSCI of the vehicle obtained in a recent trip when a particular known passenger is riding in the vehicle, TSCI of the vehicle obtained in a recent trip when a particular known passenger is in at least one of: a particular position, a particular posture, a particular movement, and a particular state, in the vehicle. TSCI of the vehicle obtained in a recent trip when a particular group of known passengers are riding in the vehicle, and TSCI of the vehicle obtained in a recent trip when a particular group of seats are occupied in the vehicle.

Clause D51: The method of Clause D27: wherein the at least one classifier is applied within a time window around a moment when the driver door is opened and closed.

Clause D52: The method of Clause D27: wherein the at least one classifier is applied within a time window around a moment when the vehicle engine is started.

Clause D53: The method of Clause D27: wherein the at least one classifier is applied within a time window around a moment when the vehicle engine is stopped.

Clause D54: The method of Clause D27: wherein the at least one classifier is applied while the vehicle is in motion.

Clause D55: The method of Clause D27: wherein the at least one classifier is applied when a button of the vehicle is pressed.

Clause D56: The method of Clause D27: wherein the at least one classifier is applied upon receiving a control signal.

Clause D57: The method of Clause D27, further comprising: adjusting at least one component of the vehicle based on the known passenger.

Clause D58: The method of Clause D27, further comprising: adjusting at least one component of the vehicle based on a preference or a previous setting or a condition or a characteristics of the known passenger.

Clause D59: The method of Clause D27, further comprising: adjusting a driver seat setting of the vehicle based on a preference or a previous setting or a condition or a characteristics associated with the known passenger.

Clause D60: The method of Clause D27, further comprising: adjusting a seat setting of the vehicle based on a preference or a previous setting or a condition or a characteristics of the known passenger.

Clause D61: The method of Clause D27, further comprising: adjusting a driver seat setting of the vehicle based on a preference or a previous setting or a condition or a characteristics of a known driver, wherein the recognized passenger is the known driver.

Clause D62: The method of Clause D27, further comprising: adjusting an entertainment system setting of the vehicle based on a preference or a previous setting or a condition or a characteristics of the known passenger.

Clause D63: The method of Clause D27, further comprising: adjusting an air conditioning system setting of the vehicle based on a preference or a previous setting or a condition or a characteristics of the known passenger.

Clause D64: The method of Clause D27, further comprising: adjusting a vehicle subsystem setting of the vehicle based on a preference or a previous setting or a condition or a characteristics of the known passenger.

Clause D65: The method of Clause D32 or Clause D33 or Clause D34 or Clause D35, further comprising: adjusting a vehicle subsystem setting of the vehicle based on a preference or a previous setting or a condition or a characteristics of two passenger.

Clause D66: The method of Clause D36 or Clause D37, further comprising: adjusting a vehicle subsystem setting of the vehicle based on a preference or a previous setting or a condition or a characteristics of the first number of passengers.

Clause D67: The method of Clause D1: wherein N1 is equal to 1 such that there is no channel-hopping over time.

Clause D68: The method of Clause D1: wherein N1 is equal to 1 at least for a period of time such that there is no channel-hopping during the period of time.

In various embodiments of the present teaching, monitoring a rhythmic motion like breathing may be performed according to the following clauses.

Clause F1: A method/software/apparatus/ system of a rhythmic motion monitoring system, comprising: obtaining a number, N1, of time series of channel information (CI) of a wireless multipath channel of a venue using a processor, a memory communicatively coupled with the processor and a set of instructions stored in the memory, wherein the N1 time series of CI (TSCI) are extracted from a wireless signal transmitted between a Type 1 heterogeneous wireless device (wireless transmitter) with at least one antenna and a Type 2 heterogeneous wireless device (wireless receiver) with at least one antenna in the venue through the wireless multipath channel, wherein each of the N1 TSCI is associated with an antenna of the Type 1 device and an antenna of the Type 2 device, wherein each CI has N2 components such that each TSCI can is decomposed into N2 time series of CIC (TSCIC), each TSCIC comprising a particular component of all the CI of the TSCI, wherein the wireless multipath channel is impacted by a rhythmic motion of an object in the venue; and monitoring the rhythmic motion of the object based on the N1*N2 TSCIC, and triggering a response action based on the monitoring of the rhythmic motion of the object.

Clause F2: The method/apparatus/system of the rhythmic motion monitoring system of clause F1: wherein each CI to comprise at least one of: N2 frequency-domain components, and N2 time-domain components, wherein each CI is associated with a time stamp.

Clause F3: The method/apparatus/system of the rhythmic motion monitoring system of clause F2: wherein a frequency transform is applied to each CI with N2 time-domain components to transform it to another CI with N2 frequency-domain components.

Clause F4: The method/apparatus/system of the rhythmic motion monitoring system of clause F2: wherein an inverse frequency transform is applied to each CI with N2 frequency-domain components to transform it to another CI with N2 time-domain components.

Clause F5: The method/apparatus/system of the rhythmic motion monitoring system of clause F2, further comprising: re-sampling the CI to ensure that the CI are uniformly sampled (time stamp evenly spaced in time).

Clause F6: The method/apparatus/system of the rhythmic motion monitoring system of clause F1, further comprising: segmenting each TSCI into overlapping segments of CI, each overlapping segment comprising CI with time stamp in a sliding time window, wherein each overlapping segment is associated with a time stamp; monitoring the rhythmic motion of the object in each overlapping segment.

Clause F7: The method/apparatus/system of the rhythmic motion monitoring system of clause F1, further comprising: segmenting each TSCIC into overlapping segments of CIC, each segment comprising CIC with time stamp in a sliding time window; monitoring the rhythmic motion of the object based on the N1*N2 TSCIC in each overlapping segment.

Clause F8: The method/apparatus/system of the rhythmic motion monitoring system of clause F7, further comprising: computing a short-time transformation (STT) of each of the N1*N2 TSCIC in each overlapping segment, wherein the STT to comprise at least one of: autocorrelation function, cross-correlation function, auto-covariance function, cross-covariance function, linear transform applied to a limited time period, orthogonal transform, inverse transform, power-of-2 transform, sparse transform, graph-based transform, graph signal processing, fast transform, a transform combined with zero padding, Fourier transform, discrete Fourier transform, discrete time Fourier transform, discrete Fourier transform, wavelet transform, Laplace transform, Hilbert transform, Hadamard transform, slant transform, trigonometric transform, sine transform, cosine transform, another transform, spectrum, spectrum magnitude, spectrum phase, spectrum warping, polynomial warping, square warping, square-root warping, harmonic product spectrum (HPS), sub-harmonic summation (SHS), subharmonic-to-harmonic ratio (SHR), harmonic sieve (HS), average magnitude difference function (AMDF), average squared difference function (ASDF), cepstrum (CEP), average peak-to-valley distance (APVD), sawtooth-waveform inspired pitch estimator (SWIPE), harmonics weighting, harmonics limitation, harmonic discarding, frequency scale warping, frequency emphasis, time scale warping, temporal emphasis, windowing, preprocessing, postprocessing, an operation, a function of operands, filtering, linear filtering, nonlinear filtering, lowpass filtering, bandpass filtering, highpass filtering, median filtering, rank filtering, quartile filtering, percentile filtering, mode filtering, finite impulse response (FIR) filtering, infinite impulse response (IIR) filtering, moving average (MA) filtering, autoregressive (AR) filtering, autoregressive moving averaging (ARMA) filtering, selective filtering, adaptive filtering, folding, grouping, energy computation, interpolation, decimation, subsampling, upsampling, resampling, cyclic padding, padding, zero padding, sorting, thresholding, soft thresholding, hard thresholding, clipping, soft clipping, time correction, time base correction, phase correction, magnitude correction, phase cleaning, magnitude cleaning, matched filtering, Kalman filtering, particle filter, enhancement, restoration, denoising, smoothing, signal conditioning, intrapolation, extrapolation, importance sampling, Monte Carlo sampling, compressive sensing, representing, merging, combining, splitting, scrambling, error protection, forward error correction, spectral analysis, linear transform, nonlinear transform, frequency transform, inverse frequency transform, Fourier transform, wavelet transform, Laplace transform, Hilbert transform, Hadamard transform, trigonometric transform, sine transform, cosine transform, power-of-2 transform, sparse transform, graph-based transform, graph signal processing, fast transform, a transform combined with zero padding, feature extraction, decomposition, projection, orthogonal projection, non-orthogonal projection, over-complete projection, eigen-decomposition, singular value decomposition (SVD), principle component analysis (PCA), independent component analysis (ICA), first derivative, second order derivative, high order derivative, convolution, multiplication, division, addition, subtraction, integration, maximization, minimization, local maximization, local minimization, optimization of a cost function, vector addition, vector subtraction, vector multiplication, vector division, inverse, norm, distance, similarity score computation, neural network, recognition, labeling, training, clustering, machine learning, supervised learning, unsupervised learning, semi-supervised learning, comparison with another TSCI, quantization, vector quantization, matching pursuit, compression, encryption, coding, storing, transmitting, normalization, temporal normalization, frequency domain normalization, classification, clustering, labeling, tagging, learning, detection, estimation, learning network, mapping, remapping, expansion, storing, retrieving, transmitting, receiving, representing, merging, combining, splitting, tracking, monitoring, time varying processing, conditioning averaging, weighted averaging, arithmetic mean, geometric mean, harmonic mean, weighted mean, trimmed mean, median, mode, averaging over selected frequency, averaging over antenna links, logical operation, permutation, combination, sorting, AND, OR, XOR, union, intersection, another operation, and another transformation; monitoring the rhythmic motion of the object based on STT of the N1*N2 TSCIC in each overlapping segment.

Clause F9: The method/apparatus/system of the rhythmic motion monitoring system of clause F7, further comprising: adjusting the length of the overlapping segments over time based on a precision requirement of the frequency of the rhythmic motion.

Clause F10: The method/apparatus/system of the rhythmic motion monitoring system of clause F7, further comprising: adjusting the sampling time of the CI before the short-time frequency transform such that the CI and CIC are uniformly sampled such that the time stamps of the CI in each TSCI and the CIC in each TSCIC are uniformly spaced in time.

Clause F11: The method/apparatus/system of the rhythmic motion monitoring system of clause F10: wherein the sampling time of a CI is adjusted by interpolating a respective re-sampled CI at a desirable time stamp based on the CI and neighboring CI.

Clause F12: The method/apparatus/system of the rhythmic motion monitoring system of clause F10: wherein the sampling time of a CIC is adjusted by interpolating a respective re-sampled CIC at a desirable time stamp based on the CIC and neighboring CIC.

Clause F13: The method/apparatus/system of the rhythmic motion monitoring system of clause F1, further comprising: monitoring the rhythmic motion of the object by computing at least one analytics associated with the rhythmic motion of the object based on at least one of: the N1 TSCI and the N1*N2 TSCIC, wherein the at least one analytics to comprise at least one of: a frequency, a period, a periodicity parameter, a rhythm, an intensity, a phase, a musical note, a pitch, an expression with a rhythm, a musical rhythm, a punctuated rhythm, a beat, a pace, a walking rhythm, an exercise rhythm, a sports rhythm, a vibration parameter, an oscillation parameter, a pulsation parameter, a relaxing parameter, a motor parameter, an impulsive rhythm, an explosive rhythm, a dominant rhythm, a foreground rhythm, a background rhythm, a random rhythm, a chaotic rhythm, a stochastic rhythm, a breathing rate, a breathing period, a heart rate, a vital sign, a change of the breathing rate, a change of the heart rate, a change of the vital sign, a count, a count associated the rhythmic motion of the object, a count of sources of rhythmic motion, a count of the object and other objects, a count of people, a change in the count, a tag, a tag associated with the rhythmic motion, a tag associated with the object, an activity associated with the rhythmic motion, a change in the tag, a location, a location associated with the rhythmic motion, a location associated with the object, a change in the location, a time, a timing, a starting time/timing, a stopping time/timing, a pausing time/timing, an interruption time/timing, a repeating/hourly/daily/weekly/monthly/yearly activity pattern, a repeating timing, movement pattern, a repeating trend, a daily activity associated with the rhythmic motion, a daily activity, a spontaneous activity, a variation, a variation of the frequency, a variation of pitch, prosody, a variation of the period, a variation of rhythm, a variation of intensity, a variation of phase, a variation of parameter, a relationship between two rhythms, a cause-and-effect between two rhythms, and another rhythm parameter.

Clause F14: The method/apparatus/system of the rhythmic motion monitoring system of clause F1, further comprising: monitoring the rhythmic motion of the object by computing at least one analytics associated with the rhythmic motion of the object based on a processing of at least one of: the N1 TSCI and the N1*N2 TSCIC, wherein the processing to comprise at least one of: preprocessing, postprocessing, an operation, a function of operands, filtering, linear filtering, nonlinear filtering, lowpass filtering, bandpass filtering, highpass filtering, median filtering, rank filtering, quartile filtering, percentile filtering, mode filtering, finite impulse response (FIR) filtering, infinite impulse response (IIR) filtering, moving average (MA) filtering, autoregressive (AR) filtering, autoregressive moving averaging (ARMA) filtering, selective filtering, adaptive filtering, folding, grouping, energy computation, interpolation, decimation, subsampling, upsampling, resampling, cyclic padding, padding, zero padding, sorting, thresholding, soft thresholding, hard thresholding, clipping, soft clipping, time correction, time base correction, phase correction, magnitude correction, phase cleaning, magnitude cleaning, matched filtering, Kalman filtering, particle filter, enhancement, restoration, denoising, smoothing, signal conditioning, intrapolation, extrapolation, importance sampling, Monte Carlo sampling, compressive sensing, representing, merging, combining, splitting, scrambling, error protection, forward error correction, spectral analysis, linear transform, nonlinear transform, frequency transform, inverse frequency transform, Fourier transform, wavelet transform, Laplace transform, Hilbert transform, Hadamard transform, trigonometric transform, sine transform, cosine transform, power-of-2 transform, sparse transform, graph-based transform, graph signal processing, fast transform, a transform combined with zero padding, feature extraction, decomposition, projection, orthogonal projection, non-orthogonal projection, over-complete projection, eigen-decomposition, singular value decomposition (SVD), principle component analysis (PCA), independent component analysis (ICA), first derivative, second order derivative, high order derivative, convolution, multiplication, division, addition, subtraction, integration, maximization, minimization, local maximization, local minimization, optimization of a cost function, vector addition, vector subtraction, vector multiplication, vector division, inverse, norm, distance, similarity score computation, neural network, recognition, labeling, training, clustering, machine learning, supervised learning, unsupervised learning, semi-supervised learning, comparison with another TSCI, quantization, vector quantization, matching pursuit, compression, encryption, coding, storing, transmitting, normalization, temporal normalization, frequency domain normalization, classification, clustering, labeling, tagging, learning, detection, estimation, learning network, mapping, remapping, expansion, storing, retrieving, transmitting, receiving, representing, merging, combining, splitting, tracking, monitoring, time varying processing, conditioning averaging, weighted averaging, arithmetic mean, geometric mean, harmonic mean, weighted mean, trimmed mean, median, mode, averaging over selected frequency, averaging over antenna links, logical operation, permutation, combination, sorting, AND, OR, XOR, union, intersection, doing nothing, and another operation.

Clause F15: The method/apparatus/system of the rhythmic motion monitoring system of clause F8, further comprising: monitoring the rhythmic motion of the object by computing at least one analytics associated with the rhythmic motion of the object based on STT of the N1*N2 TSCIC, wherein the at least one analytics to comprise at least one of: a frequency, a period, a periodicity parameter, a rhythm, an intensity, a phase, a musical note, a pitch, an expression with a rhythm, a musical rhythm, a punctuated rhythm, a beat, a pace, a walking rhythm, an exercise rhythm, a sports rhythm, a vibration parameter, an oscillation parameter, a pulsation parameter, a relaxing parameter, a motor parameter, an impulsive rhythm, an explosive rhythm, a dominant rhythm, a foreground rhythm, a background rhythm, a random rhythm, a chaotic rhythm, a stochastic rhythm, a breathing rate, a breathing period, a heart rate, a vital sign, a change of the breathing rate, a change of the heart rate, a change of the vital sign, a count, a count associated the rhythmic motion of the object, a count of sources of rhythmic motion, a count of the object and other objects, a count of people, a charge in the count, a tag, a tag associated with the rhythmic motion, a tag associated with the object, an activity associated with the rhythmic motion, a change in the tag, a location, a location associated with the rhythmic motion, a location associated with the object, a change in the location, a time, a timing, a starting time/timing, a stopping time/timing, a pausing time/timing, an interruption time/timing, a repeating/hourly/daily/weekly/monthly/yearly activity pattern, a repeating timing, movement pattern, a repeating trend, a daily activity associated with the rhythmic motion, a daily activity, a spontaneous activity, a variation, a variation of the frequency, a variation of pitch, prosody, a variation of the period, a variation of rhythm, a variation of intensity, a variation of phase, a variation of parameter, a relationship between two rhythms, a cause-and-effect between two rhythms, and another rhythm parameter.

Clause F16: The method/apparatus/system of the rhythmic motion monitoring system of clause F15, further comprising: computing a combined analytics as a function of N1*N2 analytics, each analytics associated with a respective TSCIC, wherein the function to comprise at least one of: scalar function, vector function, discrete function, continuous function, polynomial function, characteristics, feature, magnitude, phase, exponential function, logarithmic function, trigonometric function, transcendental function, logical function, linear function, algebraic function, nonlinear function, piecewise linear function, real function, complex function, vector-valued function, inverse function, derivative of function, integration of function, circular function, function of another function, one-to-one function, one-to-many function, many-to-one function, many-to-many function, zero crossing, absolute function, indicator function, mean, mode, median, range, statistics, variance, arithmetic mean, geometric mean, harmonic mean, weighted mean, trimmed mean, conditional mean, percentile, maximum, minimum, square, cube, root, power, sine, cosine, tangent, cotangent, secant, cosecant, elliptical function, parabolic function, hyperbolic function, game function, zeta function, absolute value, thresholding, limiting function, floor function, rounding function, sign function, quantization, piecewise constant function, composite function, function of function, time function processed with an operation (e.g. filtering), probabilistic function, stochastic function, random function, ergodic function, stationary function, deterministic function, periodic function, transformation, frequency transform, inverse frequency transform, discrete time transform, Laplace transform, Hilbert transform, sine transform, cosine transform, triangular transform, wavelet transform, integer transform, power-of-2 transform, sparse transform, projection, decomposition, principle component analysis (PCA), independent component analysis (ICA), neural network, feature extraction, moving function, function of moving window of neighboring items of time series, filtering function, convolution, mean function, variance function, statistical function, short-time transform, discrete transform, discrete Fourier transform, discrete cosine transform, discrete sine transform, Hadamard transform, eigen-decomposition, eigenvalue, singular value decomposition (SVD), singular value, orthogonal decomposition, matching pursuit, sparse transform, sparse approximation, any decomposition, graph-based processing, graph-based transform, graph signal processing, classification, labeling, learning, machine learning, detection, estimation, feature extraction, learning network, feature extraction, denoising, signal enhancement, coding, encryption, mapping, remapping, vector quantization, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, first order derivative, high order derivative, integration, smoothing, median filtering, mode filtering, sampling, random sampling, resampling function, downsampling, upsampling, interpolation, extrapolation, importance sampling, Monte Carlo sampling, compressive sensing, statistics, short term statistics, long term statistics, mean, variance, autocorrelation function, cross correlation, moment generating function, time averaging, weighted averaging, special function, transcendental function, Bessel function, error function, complementary error function, Beta function, Gamma function, integral function, Gaussian function, Poisson function, and another function.

Clause F17: The method/apparatus/system of the rhythmic motion monitoring system of clause F8, further comprising: computing a number of intermediate STT (ISTT) based on the STT of the N1*N2 TSCIC; monitoring the rhythmic motion of the object based on the number of ISTT.

Clause F18: The method/apparatus/system of the rhythmic motion monitoring system of clause F17, further comprising: computing N1 ISTT, each ISTT based on N2 TSCIC; for each of the N1 TSCI, the ISTT associated with the respective TSCI is a function of the STT of the respective N2 TSCIC in the overlapping segment, each of the respective N2 TSCIC being associated with one of the N2 CIC, wherein the function to comprise at least one of: a pointwise function, a sliding function, a localized function, a sliding localized function, a section-by-section function, a pitch estimation function, a hybrid function, scalar function, vector function, discrete function, continuous function, polynomial function, characteristics, feature, magnitude, phase, exponential function, logarithmic function, trigonometric function, transcendental function, logical function, linear function, algebraic function, nonlinear function, piecewise linear function, real function, complex function, vector-valued function, inverse function, derivative of function, integration of function, circular function, function of another function, one-to-one function, one-to-many function, many-to-one function, many-to-many function, zero crossing, absolute function, indicator function, mean, mode, median, range, statistics, variance, arithmetic mean, geometric mean, harmonic mean, weighted mean, trimmed mean, conditional mean, percentile, maximum, minimum, square, cube, root, power, sine, cosine, tangent, cotangent, secant, cosecant, elliptical function, parabolic function, hyperbolic function, game function, zeta function, absolute value, thresholding, limiting function, floor function, rounding function, sign function, quantization, piecewise constant function, composite function, function of function, time function processed with an operation (e.g. filtering), probabilistic function, stochastic function, random function, ergodic function, stationary function, deterministic function, periodic function, transformation, frequency transform, inverse frequency transform, discrete time transform, Laplace transform, Hilbert transform, sine transform, cosine transform, triangular transform, wavelet transform, integer transform, power-of-2 transform, sparse transform, projection, decomposition, principle component analysis (PCA), independent component analysis (ICA), neural network, feature extraction, moving function, function of moving window of neighboring items of time series, filtering function, convolution, mean function, variance function, statistical function, short-time transform, discrete transform, discrete Fourier transform, discrete cosine transform, discrete sine transform, Hadamard transform, eigen-decomposition, eigenvalue, singular value decomposition (SVD), singular value, orthogonal decomposition, matching pursuit, sparse transform, sparse approximation, any decomposition, graph-based processing, graph-based transform, graph signal processing, classification, labeling, learning, machine learning, detection, estimation, feature extraction, learning network, feature extraction, denoising, signal enhancement, coding, encryption, mapping, remapping, vector quantization, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, first order derivative, high order derivative, integration, smoothing, median filtering, mode filtering, sampling, random sampling, resampling function, downsampling, upsampling, interpolation, extrapolation, importance sampling, Monte Carlo sampling, compressive sensing, statistics, short term statistics, long term statistics, mean, variance, autocorrelation function, cross correlation, moment generating function, time averaging, weighted averaging, special function, transcendental function, Bessel function, error function, complementary error function, Beta function, Gamma function, integral function, Gaussian function, Poisson function, and another function.

Clause F19: The method/apparatus/system of the rhythmic motion monitoring system of clause F17, further comprising: computing N2 ISTT, each ISTT based on N1 TSCIC; for each of the N2 CIC, the ISTT associated with the respective CIC is a function of the STT of the respective N1 TSCIC in the overlapping segment, each of the respective N1 TSCIC being associated with one of the N1 TSCI, wherein the function to comprise at least one of: a pointwise function, a sliding function, a localized function, a sliding localized function, a section-by-section function, a pitch estimation function, a hybrid function, scalar function, vector function, discrete function, continuous function, polynomial function, characteristics, feature, magnitude, phase, exponential function, logarithmic function, trigonometric function, transcendental function, logical function, linear function, algebraic function, nonlinear function, piecewise linear function, real function, complex function, vector-valued function, inverse function, derivative of function, integration of function, circular function, function of another function, one-to-one function, one-to-many function, many-to-one function, many-to-many function, zero crossing, absolute function, indicator function, mean, mode, median, range, statistics, variance, arithmetic mean, geometric mean, harmonic mean, weighted mean, trimmed mean, conditional mean, percentile, maximum, minimum, square, cube, root, power, sine, cosine, tangent, cotangent, secant, cosecant, elliptical function, parabolic function, hyperbolic function, game function, zeta function, absolute value, thresholding, limiting function, floor function, rounding function, sign function, quantization, piecewise constant function, composite function, function of function, time function processed with an operation (e.g. filtering), probabilistic function, stochastic function, random function, ergodic function, stationary function, deterministic function, periodic function, transformation, frequency transform, inverse frequency transform, discrete time transform, Laplace transform, Hilbert transform, sine transform, cosine transform, triangular transform, wavelet transform, integer transform, power-of-2 transform, sparse transform, projection, decomposition, principle component analysis (PCA), independent component analysis (ICA), neural network, feature extraction, moving function, function of moving window of neighboring items of time series, filtering function, convolution, mean function, variance function, statistical function, short-time transform, discrete transform, discrete Fourier transform, discrete cosine transform, discrete sine transform, Hadamard transform, eigen-decomposition, eigenvalue, singular value decomposition (SVD), singular value, orthogonal decomposition, matching pursuit, sparse transform, sparse approximation, any decomposition, graph-based processing, graph-based transform, graph signal processing, classification, labeling, learning, machine learning, detection, estimation, feature extraction, learning network, feature extraction, denoising, signal enhancement, coding, encryption, mapping, remapping, vector quantization, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, first order derivative, high order derivative, integration, smoothing, median filtering, mode filtering, sampling, random sampling, resampling function, downsampling, upsampling, interpolation, extrapolation, importance sampling, Monte Carlo sampling, compressive sensing, statistics, short term statistics, long term statistics, mean, variance, autocorrelation function, cross correlation, moment generating function, time averaging, weighted averaging, special function, transcendental function, Bessel function, error function, complementary error function, Beta function, Gamma function, integral function, Gaussian function, Poisson function, and another function.

Clause F20: The method/apparatus/system of the rhythmic motion monitoring system of clause F17, further comprising: computing a combined STT (CSTT) based on the number of ISTT; monitoring the rhythmic motion of the object based on the CSTT.

Clause F21: The method/apparatus/system of the rhythmic motion monitoring system of clause F17, further comprising: computing a combined STT (CSTT) as a function of the number of ISTT; monitoring the rhythmic motion of the object based on the CSTT, wherein the function to comprise at least one of: scalar function, vector function, discrete function, continuous function, polynomial function, characteristics, feature, magnitude, phase, exponential function, logarithmic function, trigonometric function, transcendental function, logical function, linear function, algebraic function, nonlinear function, piecewise linear function, real function, complex function, vector-valued function, inverse function, derivative of function, integration of function, circular function, function of another function, one-to-one function, one-to-many function, many-to-one function, many-to-many function, zero crossing, absolute function, indicator function, mean, mode, median, range, statistics, variance, arithmetic mean, geometric mean, harmonic mean, weighted mean, trimmed mean, conditional mean, percentile, maximum, minimum, square, cube, root, power, sine, cosine, tangent, cotangent, secant, cosecant, elliptical function, parabolic function, hyperbolic function, game function, zeta function, absolute value, thresholding, limiting function, floor function, rounding function, sign function, quantization, piecewise constant function, composite function, function of function, time function processed with an operation (e.g. filtering), probabilistic function, stochastic function, random function, ergodic function, stationary function, deterministic function, periodic function, transformation, frequency transform, inverse frequency transform, discrete time transform, Laplace transform, Hilbert transform, sine transform, cosine transform, triangular transform, wavelet transform, integer transform, power-of-2 transform, sparse transform, projection, decomposition, principle component analysis (PCA), independent component analysis (ICA), neural network, feature extraction, moving function, function of moving window of neighboring items of time series, filtering function, convolution, mean function, variance function, statistical function, short-time transform, discrete transform, discrete Fourier transform, discrete cosine transform, discrete sine transform, Hadamard transform, eigen-decomposition, eigenvalue, singular value decomposition (SVD), singular value, orthogonal decomposition, matching pursuit, sparse transform, sparse approximation, any decomposition, graph-based processing, graph-based transform, graph signal processing, classification, labeling, learning, machine learning, detection, estimation, feature extraction, learning network, feature extraction, denoising, signal enhancement, coding, encryption, mapping, remapping, vector quantization, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, first order derivative, high order derivative, integration, smoothing, median filtering, mode filtering, sampling, random sampling, resampling function, downsampling, upsampling, interpolation, extrapolation, importance sampling, Monte Carlo sampling, compressive sensing, statistics, short term statistics, long term statistics, mean, variance, autocorrelation function, cross correlation, moment generating function, time averaging, weighted averaging, special function, transcendental function, Bessel function, error function, complementary error function, Beta function, Gamma function, integral function, Gaussian function, Poisson function, and another function.

Clause F22: The method/apparatus/system of the rhythmic motion monitoring system of clause F17, further comprising: monitoring the rhythmic motion of the object by computing at least one analytics based on the number of ISTT.

Clause F23: The method/apparatus/system of the rhythmic motion monitoring system of clause F20, further comprising: monitoring the rhythmic motion of the object by computing at least one analytics based on at least one of: the CSTT and the number of ISTT.

Clause F24: The method/apparatus/system of the rhythmic motion monitoring system of one of clause F13 to clause F24 (i.e. one of the 10 claims) further comprising: wherein each analytics is associated with a time stamp, a time window associated with the time stamp, the N1 TSCI restricted to the time window and the N1*N2 TSCIC restricted to the time window; grouping a first analytics with a first time stamp and a second analytics with a second time stamp, wherein the second time stamp is adjacent to the first time stamp.

Clause F25: The method/apparatus/system of the rhythmic motion monitoring system of clause F24 further comprising: grouping the first analytics and the second analytics based on a cost associated with the first analytics and the second analytics.

Clause F26: The method/apparatus/system of the rhythmic motion monitoring system of clause F24 further comprising: grouping the first analytics and the second analytics based on a similarity score between the first analytics and the second analytics.

Clause F27: The method/apparatus/system of the rhythmic motion monitoring system of clause F24 further comprising: grouping the first analytics and the second analytics based on at least one of: a similarity score between the first analytics and the second analytics, and a state transition cost between a first state associated with the first analytics and a second state associated with the second analytics.

Clause F28: The method/apparatus/system of the rhythmic motion monitoring system of clause F24 further comprising: grouping a number of analytics with different time stamps into a time trace of analytics.

Clause F29: The method/apparatus/system of the rhythmic motion monitoring system of clause F28 further comprising: adding a number of analytics with different time stamps into a time trace of analytics by iteratively adding a later analytics to an existing time trace of analytics.

Clause F30: The method/apparatus/system of the rhythmic motion monitoring system of clause F28 further comprising: grouping the number of analytics into the time trace of analytics based on a cost function.

Clause F31: The method/apparatus/system of the rhythmic motion monitoring system of clause F30 further comprising: grouping the number of analytics into the time trace of analytics based on a cost function and an initial condition.

Clause F32: The method/apparatus/system of the rhythmic motion monitoring system of clause F30 further comprising: grouping the number of analytics into the time trace of analytics based on a cost function and an ending condition.

Clause F33: The method/apparatus/system of the rhythmic motion monitoring system of clause F30 further comprising: grouping the number of analytics into the time trace of analytics based on a cost function and a boundary condition of the analytics.

Clause F34: The method/apparatus/system of the rhythmic motion monitoring system of clause F28: wherein the cost function is based on at least one of: a similarity score between two analytics, a state transition cost between a first state associated with a first analytics and a second state associated with a second analytics, and a state transition cost based on the first state associated with the first analytics and a state history associated with the first analytics.

Clause F35: The method/apparatus/system of the rhythmic motion monitoring system of clause F28: wherein the cost function favors consecutive analytics with large similarity and penalizes consecutive analytics with small similarity.

Clause F36: The method/apparatus/system of the rhythmic motion monitoring system of clause F28: wherein the cost function favors consecutive analytics with no state change and penalizes consecutive analytics with state change.

Clause F37: The method/apparatus/system of the rhythmic motion monitoring system of clause F28 further comprising: computing at least one time trace of analytics.

Clause F38: The method/apparatus/system of the rhythmic motion monitoring system of clause F37 further comprising: computing a count of the object and other objects based on the at least one time trace of analytics.

Clause F39: The method/apparatus/system of the rhythmic motion monitoring system of clause F38 further comprising: computing a count of the object and other objects based on a count of the at least one time trace of analytics.

Clause F40: The method/apparatus/system of the rhythmic motion monitoring system of clause F38 further comprising: computing a count of the object and other objects based on a count of the at least one time trace of analytics that satisfies a condition.

Clause F41: The method/apparatus/system of the rhythmic motion monitoring system of clause F38 further comprising: computing a count based on a count of the at least one time trace of analytics.

Clause F42: The method/apparatus/system of the rhythmic motion monitoring system of clause F1: wherein the response action to comprise at least one of: presenting at least one analytics associated with the rhythmic motion of the object computed based on at least one of: the TSIC, and the TSCIC; presenting an analytics of the object; creating a presentation based on the rhythmic motion of the object; transmitting an analytics of the rhythmic motion of the object to a user device; transmitting a message to the user device.

In various embodiments of the present teaching, monitoring and tracking a dynamic analytics trace may be performed according to the following clauses.

Clause G1: A method/software/apparatus/ system of an analytics trace finding system, comprising: obtaining at least one time series of channel information (CI) of a wireless multipath channel of a venue using a processor, a memory communicatively coupled with the processor and a set of instructions stored in the memory, wherein the at least one time series of CI (TSCI) is extracted from a wireless signal transmitted between a Type 1 heterogeneous wireless device (wireless transmitter) and a Type 2 heterogeneous wireless device (wireless receiver) in the venue through the wireless multipath channel; computing a first number of analytics associated with a first time stamp based on the at least one TSCI; computing a second number of analytics associated with a second time stamp based on the at least one TSCI; grouping a first analytics with the first time stamp and a second analytics with the second time stamp; and triggering a response action based on the grouping.

Clause G2: The method/software/apparatus/ system of the analytics trace finding system of clause G1, further comprising: grouping the first analytics and the second analytics based on a cost associated with the first analytics and the second analytics.

Clause G3: The method/software/apparatus/ system of the analytics trace finding system of clause G1, further comprising: grouping the first analytics and the second analytics based on a similarity score associated with the first analytics and the second analytics.

Clause G4: The method/software/apparatus/ system of the analytics trace finding system of clause G1, further comprising: grouping the first analytics and the second analytics based on at least one of: a similarity score between the first analytics and the second analytics, and a state transition cost between a first state associated with the first analytics and a second state associated with the second analytics.

Clause G5: A method/software/apparatus/ system of an analytics trace finding system, further comprising: obtaining at least one time series of channel information (CI) of a wireless multipath channel of a venue using a processor, a memory communicatively coupled with the processor and a set of instructions stored in the memory, wherein the at least one time series of CI (TSCI) is extracted from a wireless signal transmitted between a Type 1 heterogeneous wireless device (wireless transmitter) and a Type 2 heterogeneous wireless device (wireless receiver) in the venue through the wireless multipath channel; for each of a series of time stamps, computing a respective number of analytics for the time stamp based on the at least one TSCI; computing at least one analytics trace based on the analytics, each analytics trace being a time series of analytics (TSA) within a respective time segment, wherein the TSA has one analytics for each time stamp in the time segment.

Clause G6: The method/software/apparatus/ system of the analytics trace finding system of clause G5, further comprising: computing each analytics trace based on a cost associated with the TSA.

Clause G7: The method/software/apparatus/ system of the analytics trace finding system of clause G6: wherein the cost to comprise at least one of: a similarity score, and a state transition cost.

Clause G8: The method/software/apparatus/ system of the analytics trace finding system of clause G6: wherein the cost to comprise at least one of: a similarity score between two analytics, a state transition cost between a first state associated with a first analytics and a second state associated with a second analytics, a state transition cost based on the first state associated with the first analytics and a state history associated with the first analytics, and a cumulative cost over the respective time segment.

Clause G9: The method/software/apparatus/ system of the analytics trace finding system of clause G6: wherein the cost favors consecutive analytics with large similarity and penalizes consecutive analytics with small similarity.

Clause G10: The method/software/apparatus/ system of the analytics trace finding system of clause G6: wherein the cost favors consecutive analytics with no state change and penalizes consecutive analytics with state change.

Clause G11: The method/software/apparatus/ system of the analytics trace finding system of clause G5, further comprising: computing each analytics trace based on at least one of: an initial condition, an ending condition, a boundary condition, and another condition.

Clause G12: The method/software/apparatus/ system of the analytics trace finding system of clause G5: computing each analytics trace based on at least one of: an initial condition associated with an initial portion of the respective time segment, an ending condition associated with an ending portion of the respective time segment, a condition associated a boundary of the respective time segment, a condition associated with a time of the respective time segment, and another condition.

Clause G13: The method/software/apparatus/ system of the analytics trace finding system of clause G5, further comprising: adding a new analytics to a current TSA, wherein time stamp associated with the new analytics is later than all time stamps of the current TSA.

Clause G14: The method/software/apparatus/ system of the analytics trace finding system of clause G5, further comprising: updating a current TSA based on a new analytics, wherein time stamp associated with the new analytics is later than all time stamps of the current TSA.

Clause G15: The method/software/apparatus/ system of the analytics trace finding system of clause G5, further comprising: determining that an analytics at a time stamp belongs to more than one analytics traces, being in more than one respective TSA.

Clause G16: The method/software/apparatus/ system of the analytics trace finding system of clause G5, further comprising: computing the at least one analytics trace based on at least one of: brute force searching, fast searching, genetic searching, divide-and-conquer searching, dynamic programming and another algorithm.

Clause G17: The method/software/apparatus/ system of the analytics trace finding system of clause G5, further comprising: computing at least one cost for at least one candidate analytics trace for at least one candidate time segment, computing the at least one analytics trace based on all the candidate analytics trace and the associated cost.

Clause G18: The method/software/apparatus/ system of the analytics trace finding system of clause G17, further comprising: identifying a candidate analytics trace as one of the at least one analytics trace when the associated at least one cost satisfies at least one condition.

Clause G19: The method/software/apparatus/ system of the analytics trace finding system of clause G17: wherein the at least one condition to comprise at least one of: an associated cost is smaller than an upper threshold and larger than a lower threshold, each of the associated at least one cost is smaller than a respective upper threshold and larger than a respective lower threshold, an associated cost is local minimum, a combined cost is minimum, and another condition.

Clause G20: The method/software/apparatus/ system of the analytics trace finding system of clause G5, further comprising: computing at least one count based on the at least one analytics trace.

Clause G21: The method/software/apparatus/ system of the analytics trace finding system of clause G5, further comprising: computing at least one count based on a count of the at least one analytics trace.

Clause G22: The method/software/apparatus/ system of the analytics trace finding system of clause G5, further comprising: computing at least one count based on a count of the at least one analytics trace that satisfied a condition.

Clause G23: The method/software/apparatus/ system of the analytics trace finding system of clause G5, further comprising: computing at least one count of people in the venue based on the at least one analytics trace.

Clause G24: The method/software/apparatus/ system of the analytics trace finding system of clause G5, further comprising: computing at least one count of people in the venue based on a count of the at least one analytics trace.

Clause G25: The method/software/apparatus/ system of the analytics trace finding system of clause G5, further comprising: computing at least one count of people in the venue based on a count of the at least one analytics trace that satisfied a condition.

Clause G26: The method/software/apparatus/ system of the analytics trace finding system of clause G5, further comprising: computing at least one count of objects in the venue based on the at least one analytics trace.

Clause G27: The method/software/apparatus/ system of the analytics trace finding system of clause G5, further comprising: computing at least one count of objects in the venue based on a count of the at least one analytics trace.

Clause G28: The method/software/apparatus/ system of the analytics trace finding system of clause G5, further comprising: computing at least one count of objects in the venue based on a count of the at least one analytics trace that satisfied a condition.

Clause G29: The method/software/apparatus/ system of the analytics trace finding system of clause G5: wherein the analytics to comprise at least one of: a frequency, a period, a periodicity parameter, a rhythm, an intensity, a phase, a musical note, a pitch, an expression with a rhythm, a musical rhythm, a punctuated rhythm, a beat, a pace, a walking rhythm, an exercise rhythm, a sports rhythm, a vibration parameter, an oscillation parameter, a pulsation parameter, a relaxing parameter, a motor parameter, an impulsive rhythm, an explosive rhythm, a dominant rhythm, a foreground rhythm, a background rhythm, a random rhythm, a chaotic rhythm, a stochastic rhythm, a motion, a rhythmic motion, a breathing rate, a breathing period, a heart rate, a vital sign, a change of the breathing rate, a change of the heart rate, a change of the vital sign, a transient motion, a movement, an activity, a gait, a gesture, a handwriting, a pattern, a trace, a history, a sign of danger, a fall-down, a person, an information of the person, an object, an information of the object, a device, an identity, a count, a count associated a rhythmic motion, a count of sources of rhythmic motion, a count of objects, a count of vehicles, a count of people, a count of pets, a count of babies, a count of juveniles, a count of objects in a certain state, a count of stations in a certain state, a count of booth without occupancy, a change in the count, a scalar, a vector, a change, a rate of change, a derivative, an aggregate, an integration, a sum, a weighted mean, a trimmed mean, a moving average, a filtering, a statistics, a variance, a correlation, a covariance, a cross correlation, a cross covariance, an autocorrelation, a tag, a tag associated with a motion, a tag associated with an object, an activity associated with the rhythmic motion, a change in the tag, a state, an event, an indicator of a state, an indicator of an event, SLEEP, NON-SLEEP, REM, NREM, AWAKE, MOTION, NO-MOTION, BATHROOM-VISIT, a presence/an absence, an emotional state, a movement parameter, a location, a location associated with a map, a location associated with a motion, a location associated with an object, a change in the location, a distance, a displacement, a speed, a velocity, an acceleration, an angle, an angular speed, an angular acceleration, a trajectory, a time, a timing, a starting time/timing, a stopping time/timing, a pausing time/timing, an interruption time/timing, a repeating/hourly/daily/weekly/monthly/yearly activity pattern, a repeating timing, movement pattern, a repeating trend, a daily activity associated with the rhythmic motion, a daily activity, a spontaneous activity, a variation, a variation of the frequency, a variation of pitch, prosody, a variation of the period, a variation of rhythm, a variation of intensity, a variation of phase, a variation of parameter, a relationship between two rhythms, a cause-and-effect between two rhythms, and another rhythm parameter.

Clause G30: The method/software/apparatus/ system of the analytics trace finding system of clause G5, further comprising: identifying at least one of: an event, a movement, an action, an object based on the at least one analytics trace.

Clause G31: The method/software/apparatus/ system of the analytics trace finding system of clause G5, further comprising: triggering a response action based on the at least one analytics trace.

Clause G32: The method/software/apparatus/ system of the analytics trace finding system of clause G5, further comprising: computing at least one count based on the at least one analytics trace; triggering a response action based on at least one of: the at least one analytics trace and the at least one count.

In one example, the disclosed system may be used to obtain a quantity of people in a venue with a rich-scattering environment, e.g. an amusement park, a hospital, a room, a building, a bus, an airplane, a cruise ship, a train, etc. The disclosed system may find a trace of motion analytics of people in the venue, based on channel information of a wireless multipath channel impacted by the people's motion. The trace may be a time trace/time trend, or a location trace/trajectory. For example, the disclosed system may find a trace of breathing rate or heartbeat rate of people in the venue, and determine the quantity of people in the venue based on the trace.

In another example, the disclosed system may be used to recognize an identity of a person at a location with a rich-scattering environment, e.g. a door, a gate, a monitored area in a building, etc. For each of a plurality of candidate persons in front of a door, the disclosed system may obtain a rate distribution of rhythmic motion (e.g. breathing, hearbeat) of the candidate person based on a training dataset. When a visitor is at the door, the disclosed system may compute a trace of motion analytics of the visitor, based on channel information of a wireless multipath channel impacted by the visitor's rhythmic motion. For example, the disclosed system may find a trace of breathing rate or heartbeat rate of the visitor at the door, and determine a likelihood function for the trace to be associated with each respective candidate person in database, based on the rate distribution of rhythmic motion of the respective candidate persons. The disclosed system may recognize the visitor to be a candidate person that maximizes the likelihood function. In one embodiment, if the maximized likelihood is still below a threshold, the disclosed system determines that the visitor is not recognized.

In yet another example, the disclosed system may be used to recognize an identity of a person in a car, e.g. whether the person is a particular driver in the database. For example, after a driver enters the car, the entering action of the driver may be related to the driver's habit and may be used for training a classifier and for driver recognition. For example, some drivers may enter the car and wait. Some drivers may rest hands on steering wheel. Some drivers may wiggle body for a nice comfortable position. Some drivers may put down a coffee. Some drivers may put down a bag. Some drivers may put a smart phone (with map app running) on dash board. Some drivers may press a button on dash board. Some drivers may check and adjust mirror. Some drivers may insert car key. Some drivers may check and work on the phone, such as enter destination on map. Similarly, the car-exiting action of the driver may also be related to the driver's habit and may be used for training a classifier and for driver recognition. When a person enters or exits a car, the disclosed system can detect a motion and/or posture of the person based on channel information of a wireless multipath channel impacted by the people's motion and/or posture, and determine whether the person is a driver of the car based on whether the detected motion and/or posture matches a stored motion and/or posture of the driver in the database.

The features described above may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language (e.g., C, Java), including compiled or interpreted languages, and it may be deployed in any form, including as a stand-alone program or as a module, component, subroutine, a browser-based web application, or other unit suitable for use in a computing environment.

Suitable processors for the execution of a program of instructions include, e.g., both general and special purpose microprocessors, digital signal processors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

While the present teaching contains many specific implementation details, these should not be construed as limitations on the scope of the present teaching or of what may be claimed, but rather as descriptions of features specific to particular embodiments of the present teaching. Certain features that are described in this specification in the context of separate embodiments may also be implemented in combination in a single embodiment. Conversely, various features that are described in the context of a single embodiment may also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Particular embodiments of the subject matter have been described. Any combination of the features and architectures described above is intended to be within the scope of the following claims. Other embodiments are also within the scope of the following claims. In some cases, the actions recited in the claims may be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A wireless monitoring system, comprising:

   a transmitter configured for transmitting a series of probe signals in a venue through a wireless multipath channel;
   a receiver configured for:

   receiving, through the wireless multipath channel between the transmitter and the receiver, the series of probe signals modulated by the wireless multipath channel and an object moving in the venue, and
   obtaining a time series of channel information (TSCI) of the wireless multipath channel from the series of probe signals modulated by the wireless multipath channel and the object; and

   a processor configured for:

   monitoring a motion of the object relative to a map based on the TSCI,
   determining an incremental distance travelled by the object in an incremental time period based on the TSCI, and
   computing a next location of the object at a next time in the map based on at least one of: a current location of the object at a current time, the incremental distance, and a direction of the motion during the incremental time period.

2. The wireless monitoring system of claim 1, wherein:

   the incremental time period is equal to at least one of: a time difference between two respective probe signals of the series of probe signals, a time for the object to travel a distance associated with a carrier frequency of the series of probe signals, and a time for the object to travel a distance comparable to a distance between at least one of: two antennas of the transmitter and two antennas of the receiver;
   the direction of the motion during the incremental time period is a function of at least one of: a direction of the motion at the current time, a direction of the motion at the next time, at least one of: a direction change, a turn, and a direction change angle computed based on at least one of: the TSCI, a characteristic function associated with the TSCI, a characteristic point of the characteristic function, an autocorrelation function (ACF) of the TSCI, local extrema of the ACF, and a local maximum of the ACF, and a direction of the motion at another time.

3. The wireless monitoring system of the above claims, wherein computing the next location of the object at the next time comprises:
   computing the next location using a particle filter.

4. The wireless monitoring system of the above claims, wherein computing the next location of the object at the next time comprises:

   initializing an initial number of initial candidate locations of the object at an initial time;
   computing iteratively a first dynamic number of first candidate locations of the object at the next time based on a second dynamic number of second candidate locations of the object at the current time; and
   computing the next location of the object at the next time based on at least one of: the first dynamic number of first candidate locations at the next time, and the second dynamic number of second candidate locations at the current time.

5. The wireless monitoring system of the above claims, wherein computing the next location of the object at the next time comprises:

   initializing an initial number of initial candidate locations of the object at an initial time;
   computing iteratively a first dynamic number of first candidate locations of the object at the next time based on a second dynamic number of second candidate locations of the object at the current time; and
   computing the next location of the object at the next time based on at least one of: the first dynamic number of first candidate locations at the next time, and the second dynamic number of second candidate locations at the current time.

6. The wireless monitoring system of the above claims, wherein:

   the object moves during the incremental time period in a region represented by the map;
   the map is a multi-dimensional map represented as a multi-dimensional array A, such that reachability of each location of the region is represented by a corresponding array element $a$ which is a logical value between 0 and 1;
   a location of the region is unreachable and forbidden when the corresponding array element satisfies $a=0$;
   a location of the region is fully reachable when the corresponding array element satisfies $a=1$;
   a location of the region is partially reachable when the corresponding array element satisfies: $0<a<1$;
   each of the next location, the current location, the first dynamic number of first candidate locations, and the second dynamic number of second candidate locations, is a point in the region and is represented as a corresponding array element a, with $a>0$; and
   the direction of the motion of the object at any location is locally represented as one of a number of allowable directions.

7. The wireless monitoring system of the above claims, wherein computing the next location of the object at the next time comprises:

   computing the first dynamic number of weights each associated with a first candidate location, each weight being a function of at least one of: the current location, the first candidate location, a corresponding second candidate location associated with the first candidate location, the direction of the motion, and a distance between the first candidate location and a first unreachable array element a in the direction; and
   computing the next location of the object based on the first dynamic number of first candidate locations, and the associated first dynamic number of weights.

8. The wireless monitoring system of the above claims, wherein:

   each weight is a monotonic non-decreasing function of the distance between the first candidate location and the first unreachable array element $a$ in the direction;
   each weight is a bounded function of the distance between the first candidate location and the first unreachable array element $a$ in the direction; and

computing the next location of the object at the next time further comprises: normalizing the weights to generate normalized weights.

9. The wireless monitoring system of the above claims, wherein computing the next location of the object at the next time further comprises:

computing a weighted cost of each first candidate location with respect to the rest of the first dynamic number of first candidate locations based on the normalized weights, wherein the weighted cost is a weighted sum of pairwise distance between the first candidate location and each of the rest of the first candidate locations; and choosing the first candidate location with a minimum weighted cost as the next location of the object.

10. The wireless monitoring system of the above claims, wherein computing the next location of the object at the next time comprises:

computing a predicted value for each of the second candidate locations of the object based on at least one of: the second candidate location, the incremental distance, and the incremental time period; when the predicted value of the second candidate location is fully reachable with associated array element $a=1$, creating a first candidate location of the object based on the predicted value of the second candidate location; when the predicted value of the second candidate location is forbidden with associated array element a=0, labeling the second candidate location as "rejected" without creating any first candidate location; and when the predicted value of the second candidate location is partially reachable with associated array element satisfying $0<a<1$, generating a random number between 0 and 1, and creating a first candidate location of the object based on the predicted value of the second candidate location when the random number is less than $a$.

11. The wireless monitoring system of the above claims, wherein computing the next location of the object at the next time further comprises, when a quantity of the first candidate locations is smaller than a threshold, at least one of:

generating a new first candidate location of the object by probabilistically taking on the predicted values of second candidate locations that are not rejected, with a probability distribution based on at least one of: weights associated with the predicted values, weights associated with the second candidate locations, array elements of the multi-dimensional array A associated with the predicted values, and array elements of the multi-dimensional array A associated with the second candidate locations; generating a new first candidate location of the object by probabilistically taking on the second candidate locations that are not rejected, with a probability based on weights associated with the predicted values of the second candidate locations that are not rejected; computing a tentative next location based on the first candidate locations and generating a new first candidate location of the object probabilistically in a neighborhood of the tentative next location based on a probability distribution; generating a new first candidate location of the object probabilistically based on a predictor of a location sampled in a neighborhood of the current location based on a probability distribution.

12. The wireless monitoring system of the above claims, wherein:

the neighborhood comprises at least one of the second candidate locations that are not rejected; the probability distribution is a weighted sum of a set of probability density functions, each centered at one of the second candidate locations that are not rejected; and a weight of each pdf associated with a second candidate location in the weighted sum is a function of the array element associated with the second candidate location.

13. The wireless monitoring system of the above claims, further comprising:

maintaining a dynamic number of candidate locations at any time; changing the dynamic number of candidate locations by at least one of:

initializing at least one candidate location, updating at least one candidate location, adding at least one candidate location, pausing at least one candidate location,

stopping at least one candidate location,
resuming at least one paused candidate location,
reinitializing at least one stopped candidate location, and
removing at least one candidate location;

computing the next location of the object at the next time based on at least one of: the dynamic number of candidate locations at the next time, and the dynamic number of candidate locations at another time, wherein the dynamic number of candidate locations is bounded by at least one of: an upper limit and a lower limit; and adding at least one candidate location when the dynamic number of candidate locations is lower than a threshold.

14. A method, implemented by a processor, a memory communicatively coupled with the processor, and a set of instructions stored in the memory to be executed by the processor, comprising:

obtaining a time series of channel information (TSCI) of a wireless multipath channel in a venue, wherein:

the TSCI is extracted from a series of probe signals transmitted from a transmitter to a receiver through the wireless multipath channel,
the series of probe signals are modulated by the wireless multipath channel and an object moving in the venue;

monitoring a motion of the object relative to a map based on the TSCI;
determining an incremental distance travelled by the object in an incremental time period based on the TSCI; and
computing a next location of the object at a next time in the map based on at least one of: a current location of the object at a current time, the incremental distance, and a direction of the motion during the incremental time period.

15. A wireless monitoring system, comprising:

a transmitter configured for transmitting a series of probe signals in a venue through a wireless multipath channel;
a plurality of heterogeneous receivers each of which is configured for:

receiving, through the wireless multipath channel, the series of probe signals modulated by the wireless multipath channel and a plurality of objects moving in the venue, and
obtaining a time series of channel information (TSCI) of the wireless multipath channel from the series of probe signals modulated by the wireless multipath channel and the plurality of objects; and

a processor configured for:

monitoring motions of the plurality of objects relative to a map based on the TSCIs obtained by the plurality of heterogeneous receivers,
determining a respective incremental distance travelled by each object in a respective incremental time period based on a respective TSCI, and

computing a respective next location of the object at a respective next time in the map based on at least one of: a respective current location of the object at a respective current time, the respective incremental distance, and a respective direction of the respective motion of the object during the respective incremental time period.

FIG. 1

**FIG. 2**

EP 3 739 356 A1

**FIG. 3A**

**FIG. 3B**

FIG. 3C

FIG. 4A

FIG. 4B

**FIG. 5**

FIG. 6

**FIG. 7**

FIG. 8

FIG. 9

**1000**

Channel State Information (CSI) — 1001

Inertial Measurement Unit (IMU) — 1002

Indoor maps — 1003

CSI collection — 1010

IMU sensor readings — 1020

Map preprocessing

Moving Distance Estimation — 1012
- Virtual antenna alignment
- Time-reversal focusing ball

Orientation estimation — 1022

1030 — 1032

Graph-based particle filter — 1040

Map discretization

Accumulative orientation error correction — 1042

Reachability construction — 1034

Location estimates — 1050

Target location estimation — 1044

*Map-augmented tracking*

**FIG. 10**

EP 3 739 356 A1

169

FIG. 11

STATES:
S_ZC: Zero Crossing
S_PK: Peak State
S_P2V: ZC from Peak to Valley
S_VL: Valley State
S_DT: Step Detected

EVENTS:
E_PK: Peak detected
E_VL: Valley detected
E_ZC: Zero crossing
E_FPK/E_FVL: Far peak/valley
E_TIMEOUT: State timeout

FIG. 12

**FIG. 13A**

**FIG. 13B**

**FIG. 13C**

FIG. 14

EP 3 739 356 A1

FIG. 15

FIG. 16C

FIG. 16B

FIG. 16A

FIG. 17A

FIG. 17B

**FIG. 18**

EP 3 739 356 A1

FIG. 19A

**FIG. 19B**

**FIG. 20**

EP 3 739 356 A1

**FIG. 21A**

FIG. 21B

FIG. 22

FIG. 23

FIG. 24

**FIG. 25**

20cm

FIG. 26A

**FIG. 26B**

EP 3 739 356 A1

2700

Channel State Information (CSI) — 2701

**CSI collection** — 2710

**Packet synchronization and interpolation** — 2720

**Movement detection** — 2750

**Moving distance Heading direction Rotating angle** — 2702

**Time-Reversal Resonating Strength (TRRS) Calculation** — 2730

**Alignment delay tracking** — 2760

**TRRS matrix construction** — 2740

**Aligned antenna pair detection** — 2770

**Motion parameters estimation** — 2780

*Virtual Antenna Alignment*

**FIG. 27**

EP 3 739 356 A1

FIG. 28

FIG. 29

**FIG. 30**

**FIG. 31**

**FIG. 32**

**FIG. 33**

**FIG. 34**

EP 3 739 356 A1

**FIG. 35**

FIG. 36

**FIG. 37**

EP 3 739 356 A1

**FIG. 38**

EP 3 739 356 A1

**FIG. 39**

EP 3 739 356 A1

FIG. 40

FIG. 41

**FIG. 42**

FIG. 43

FIG. 44

**FIG. 45**

EP 3 739 356 A1

**FIG. 46**

EP 3 739 356 A1

FIG. 47

EP 3 739 356 A1

**FIG. 48**

**FIG. 49**

5000

$$\tau_0 \quad \cdots \quad \tau_l = \tau_0 + (l-1)\Delta\tau \quad \cdots \quad \cdots \quad \tau_{L-1}$$

**FIG. 50**

5100

FIG. 51

5210

**FIG. 52A**

EP 3 739 356 A1

**FIG. 52B**

EP 3 739 356 A1

5230

FIG. 52C

5300

RoI

Empty

V

1

0.8

0.6

0.4

0.2

1          2          3          4

Range (m)

**FIG. 53**

5400

FIG. 54

FIG. 55

EP 3 739 356 A1

5600

**FIG. 56**

5710

**FIG. 57A**

5720

**FIG. 57B**

EP 3 739 356 A1

5730

Before merging

After merging

FIG. 57C

FIG. 58

EP 3 739 356 A1

**FIG. 59A**

EP 3 739 356 A1

5920

FIG. 59B

FIG. 60

6110

FIG. 61A

EP 3 739 356 A1

**FIG. 61B**

EP 3 739 356 A1

**FIG. 61C**

**FIG. 62A**

FIG. 62B

6220

6310

**FIG. 63A**

EP 3 739 356 A1

6320

**FIG. 63B**

**FIG. 63C**

EP 3 739 356 A1

FIG. 63D

6340

6350

EP 3 739 356 A1

FIG. 63E

FIG. 63F

6360

6370

FIG. 63G

6400

Transmit a wireless signal using multiple antennas towards objects in a venue ⟋6402

↓

Receive the wireless signal through a wireless multipath channel with multiple antennas ⟋6404

↓

Obtain a set of channel information (CI) of the channel based on the received signal ⟋6406

↓

Compute a beamforming based on the set of CI ⟋6408

↓

Compute a set of directional quantities based on the set of CI and the beamforming ⟋6410

↓

Compute a range of interest (RoI) based on the directional quantities and the set of CI ⟋6412

→

Refine the RoI by combining and/or dividing clusters of propagation delay values ⟋6414

↓

Compute a set of point of interests (PoIs) based on the RoI ⟋6416

↓

Refine and clean the points in the set of PoIs ⟋6418

↓

Validate the clusters in the set of PoIs based on a medoid distance ⟋6420

↓

Compute a quantity of, locations of, and/or heights of the objects ⟋6422

↓

Construct a trajectory of each object by tracking locations of the objects over time ⟋6424

**FIG. 64**

EP 3 739 356 A1

CIR collection → Reflecting Object Detector → Motion Detector → Target Clustering

# of persons and vital signs ← Heart Rate Estimator ← Breathing Signal Elimination

FIG. 65

FIG. 66B

FIG. 66A

| | Training cells | Guard cells | CUT | Guard cells | Training cells | |
|---|---|---|---|---|---|---|

**FIG. 67A**

**FIG. 67B**

**FIG. 68**

EP 3 739 356 A1

EP 3 739 356 A1

FIG. 69C

FIG. 69B

FIG. 69A

FIG. 69F

FIG. 69E

FIG. 69D

| State | Phase Variance |
|---|---|
| Static object | 0.099 |
| Stationary subject | 12.306 |
| Subject with RBM | 199.975 |

Period = 3.750 s (i.e. 16.0 BPM)

246

FIG. 70

FIG. 71A

FIG. 71B

FIG. 71C

**FIG. 72**

FIG. 73C

FIG. 73B

FIG. 73A

**FIG. 74A**

**FIG. 74B**

**FIG. 74C**

EP 3 739 356 A1

**FIG. 75A**

**FIG. 75B**

**FIG. 75C**

EP 3 739 356 A1

off the wall

100 cm

device

**FIG. 76A**

**FIG. 76B**

**FIG. 76C**

EP 3 739 356 A1

FIG. 77

**FIG. 78**

**FIG. 79**

EP 3 739 356 A1

FIG. 80

FIG. 81

FIG. 82

FIG. 83A

(a) Time(Seconds)

Breathing rate(BPM)

FIG. 83B

(b) Time(Seconds)

Breathing rate(BPM)

FIG. 83C

(c) Time(Seconds)

FIG. 84A

FIG. 84B

FIG. 84C

FIG. 84D

**FIG. 85**

**FIG. 86**

EP 3 739 356 A1

FIG. 87

**FIG. 88A**

| Predicted Number \ True Number | 0 | 1 | 2 | 3 | 4 |
|---|---|---|---|---|---|
| 0 | 100.0% | 0.0% | 0.0% | 0.0% | 0.0% |
| 1 | 0.0% | 100.0% | 0.0% | 0.0% | 0.0% |
| 2 | 0.0% | 0.0% | 94.7% | 24.2% | 1.4% |
| 3 | 0.0% | 0.0% | 5.3% | 75.8% | 17.4% |
| 4 | 0.0% | 0.0% | 0.0% | 0.0% | 65.2% |
| 5 | 0.0% | 0.0% | 0.0% | 0.0% | 15.9% |

**FIG. 88B**

| Predicted number \ True number | 0 | 1 | 2 | 3 | 4 |
|---|---|---|---|---|---|
| 0 | 95.8% | 0.0% | 14.8% | 0.0% | 0.0% |
| 1 | 0.0% | 89.7% | 14.8% | 11.4% | 0.0% |
| 2 | 4.2% | 10.3% | 66.7% | 12.7% | 3.9% |
| 3 | 0.0% | 0.0% | 3.7% | 55.7% | 15.6% |
| 4 | 0.0% | 0.0% | 0.0% | 12.7% | 45.5% |
| 5 | 0.0% | 0.0% | 0.0% | 7.6% | 22.1% |
| 6 | 0.0% | 0.0% | 0.0% | 0.0% | 9.1% |
| 7 | 0.0% | 0.0% | 0.0% | 0.0% | 2.6% |
| 8 | 0.0% | 0.0% | 0.0% | 0.0% | 1.3% |

**FIG. 88C**

| Predicted Number \ True Number | 0 | 1 | 2 | 3 | 4 |
|---|---|---|---|---|---|
| 0 | 100.0% | 0.0% | 0.0% | 0.0% | 0.0% |
| 1 | 0.0% | 100.0% | 0.0% | 0.0% | 0.0% |
| 2 | 0.0% | 0.0% | 95.7% | 24.2% | 2.2% |
| 3 | 0.0% | 0.0% | 4.3% | 73.2% | 21.7% |
| 4 | 0.0% | 0.0% | 0.0% | 2.6% | 58.7% |
| 5 | 0.0% | 0.0% | 0.0% | 0.0% | 17.4% |

265

FIG. 89A

FIG. 89B

FIG. 89C

FIG. 90

**FIG. 91**

EP 3 739 356 A1

| Spatial separation \ Frequency separation | 0.5 BPM | 1 BPM | 1.5 BPM | 2 BPM |
|---|---|---|---|---|
| 70 cm | (65.5; 98.7; 98.0; 98.7)[1] | (96.5; 98.9; 96.5; 97.3) | (100; 97.3; 98.8; 97.7) | (100; 98.1; 98.9; 94.7) |
| 100 cm | (62.1; 98.6; 99.4; 99.2) | (96.6; 98.6; 98.4; 98.9) | (100; 97.8; 99.0; 98.9) | (100; 98.2; 98.5; 99.0) |
| 130 cm | (65.0; 98.1; 98.5; 99.7) | (96.6; 98.9; 98.5; 97.7) | (100; 98.4; 99.1; 97.1) | (100; 98.1; 99.3; 99.4) |

[1] The 4-tuple $(*; *; *; *)$ denotes the detection accuracy and the relative breathing rate accuracy with 3 participants at location $a$, $b$, and $c$ respectively. For example, $(65.5; 98.7; 98.0; 98.7)$ denotes the detection accuracy is 65.5%, and the breathing rate accuracy at location $a$, $b$, and $c$ are 98.7%, 98.0%, and 98.7% respectively.

**FIG. 92**

**Algorithm 1** Iterative Dynamic Programming

1: Calculate regularized energy map $s(i, j)$ by (14)
2: Initialize trace number $t \leftarrow 0$, frequency response of rectangular window $\mathbf{w}$
3: **while** $\max\limits_{q} s(I, q) > 0$ **do**
4:    $t \leftarrow t + 1$
5:    $g_t(I) \leftarrow \arg\max\limits_{q} g(I, q)$
6:    $i \leftarrow I - 1$
7:    **while** $i \neq 0$ **do**
8:       $g_t^*(i) \leftarrow \arg\max\limits_{q} \; s(i, q) + \lambda\, \mathbf{P}(q, g_t^*(i+1))$
9:       $i \leftarrow i - 1$
10:    **end while**
11:    update spectrum $\mathbf{S}(i) = \mathbf{S}(i) - S(i, g^*(i)) * \mathbf{w}, \forall i = 1, 2, \ldots I$
12:    Calculate regularized energy map $s(i, j)$ by (14)
13: **end while**

<div align="center">

**FIG. 93**

</div>

EP 3 739 356 A1

**Algorithm 2** Trace Concatenating

1: Input: Trace num. $J$ and trace matrix $\mathbf{TR}$ in the database, trace num. $K$ and trace matrix $\mathbf{tr}$ in the current window, start and end timestamp of current window $t_{st}$, $t_{end}$
2: Initialization: Indicate vector flag $\leftarrow ones(1, K)$
3: **if** $J == 0$ **then**
4:    $\mathbf{TR} \leftarrow \mathbf{tr}$
5:    $J \leftarrow K$
6:    flag $\leftarrow zeros(1, K)$
7: **else**
8:    **for** $j = 1 : J$ **do**
9:       $\mathbf{f} = \frac{|\mathbb{1}(\mathbf{TR}(j) = \mathbf{tr})|}{I - 1}$
10:       $f \leftarrow max\,\mathbf{f}$, $k \leftarrow \arg\max \mathbf{f}$
11:       **if** $f < th$ **or** sum(flag) $== 0$ **then**
12:          Continue
13:       **else**
14:          Update the end point and the location of trace:
15:          $\mathbf{TR}(j).end \leftarrow t_{end}$, $\mathbf{TR}(j).Loc(\mathbf{tr}(k,:), t_{end})$
16:          flag$(k) \leftarrow 0$
17:       **end if**
18:    **end for**
19: **end if**
20: **if** sum(flag) $> 0$ **then**
21:    index $=$ find(flag $== 1$)
22:    $\mathbf{TR} \leftarrow [\mathbf{TR}, \mathbf{tr}(index)]$
23:    $J \leftarrow J + $ sum(flag)
24: **end if**

## FIG. 94

EP 3 739 356 A1

Europäisches
Patentamt

European
Patent Office

Office européen
des brevets

# EUROPEAN SEARCH REPORT

Application Number

EP 20 17 4194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/183650 A1 (ZHANG FENG [US] ET AL) 28 June 2018 (2018-06-28) * paragraphs [0105] - [0112], [0121], [0122], [0129] - [0132], [0150] - [0163], [0173], [0182], [0245] - [0247] * * paragraphs [0257], [0400] - [0432] * * figures 1-3,10 * | 1-15 | INV. G01S7/41 G01S13/62 G01S13/66 ADD. G08B13/24 G08B21/04 G01S13/46 |
| A | US 2019/034794 A1 (OGALE ABHIJIT [US] ET AL) 31 January 2019 (2019-01-31) * the whole document * | 4-13 | |
| A | US 2017/219707 A1 (CAVALLARO RICHARD H [US] ET AL) 3 August 2017 (2017-08-03) * paragraphs [0079] - [0098]; figures 15-18 * | 4-13 | |
| A | IBRAHIM SABEK ET AL: "ACE: An Accurate and Efficient Multi-Entity Device-Free WLAN Localization System", IEEE TRANSACTIONS ON MOBILE COMPUTING., vol. 14, no. 2, 1 February 2015 (2015-02-01), pages 261-273, XP055614496, US ISSN: 1536-1233, DOI: 10.1109/TMC.2014.2320265 * the whole document * | 4-13 | TECHNICAL FIELDS SEARCHED (IPC) G01S G08B |

The present search report has been drawn up for all claims

| Place of search | Date of completion of the search | Examiner |
|---|---|---|
| Munich | 14 September 2020 | Reeck, Guido |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

272

## ANNEX TO THE EUROPEAN SEARCH REPORT
## ON EUROPEAN PATENT APPLICATION NO.

EP 20 17 4194

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2020

| Patent document cited in search report | | Publication date | Patent family member(s) | | Publication date |
|---|---|---|---|---|---|
| US 2018183650 | A1 | 28-06-2018 | NONE | | |
| US 2019034794 | A1 | 31-01-2019 | NONE | | |
| US 2017219707 | A1 | 03-08-2017 | EP | 2539029 A1 | 02-01-2013 |
| | | | EP | 2539030 A1 | 02-01-2013 |
| | | | US | 2011205022 A1 | 25-08-2011 |
| | | | US | 2011205077 A1 | 25-08-2011 |
| | | | US | 2015021481 A1 | 22-01-2015 |
| | | | US | 2017219707 A1 | 03-08-2017 |
| | | | US | 2019219694 A1 | 18-07-2019 |
| | | | US | 2020233084 A1 | 23-07-2020 |
| | | | WO | 2011106330 A1 | 01-09-2011 |
| | | | WO | 2011106331 A1 | 01-09-2011 |

EPO FORM P0459

For more details about this annex : see Official Journal of the European Patent Office, No. 12/82

**EP 3 739 356 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62846686
- US 62980206
- US 62849853
- US 62846688
- US 62868782
- US 79833720
- US 79834320
- US 87099620
- US 87100020
- US 87100420
- US 87100620